# EUROPEAN PATENT APPLICATION

(11) **EP 4 207 924 A1**
(43) Date of publication of application: **05.07.2023**
(21) Application number: 20951210.2
(22) Date of filing: 01.12.2020
(51) Int. Cl.: H04W 76/10, G05B 15/02, H04L 12/28

(54) **PROCESSING METHOD, DEVICE, AND STORAGE MEDIUM**

(30) Priority: 28.08.2020 CN 202010886785; 28.08.2020 CN 202010881755; 10.09.2020 CN 202010948944; 18.09.2020 CN 202010989325; 29.09.2020 CN 202011051971; 30.09.2020 CN 202011062786; 21.10.2020 CN 202011133668
(71) Applicant: Shenzhen Transsion Holdings Co., Ltd., Shenzhen, Guangdong 518057 (CN)
(72) Inventor: SHEN, Jianfeng, Shenzhen, Guangdong 518057 (CN); WANG, Zhiyong, Shenzhen, Guangdong 518057 (CN); ZHENG, Pei, Shenzhen, Guangdong 518057 (CN); LI, Chenxiong, Shenzhen, Guangdong 518057 (CN); YAN, Yating, Shenzhen, Guangdong 518057 (CN)
(74) Representative: Osterhoff, Utz
(86) International application number: PCT/CN2020/133164
(87) International publication number: WO 2022/041542

(57) **Abstract**

Disclosed are a processing method, a device, and a storage medium. The method includes the following operations: obtaining preset information (S10); detecting whether the preset information meets a preset rule (S11); when the preset information meets the preset rule, performing a corresponding device control operation according to a preset strategy (S12), so as to transfer or migrate or duplicate or backup relevant data and/or control functions of the first control center, which can make the use of the first control center and other devices controlled by the first control center more intelligent, convenient and fast.

## Description

### CROSS-REFERENCE TO RELATED APPLICATIONS

This application claims priority to Chinese Patent Application No. 202010886785.2, filed on August 28, 2020, and entitled "DEVICE CONTROL METHOD, DEVICE AND READABLE STORAGE MEDIUM", the entire contents of which are incorporated herein by reference.

This application claims priority to Chinese Patent Application No. 202010881755.2, filed on August 28, 2020, and entitled "DEVICE CONNECTION METHOD, DEVICE, SYSTEM AND READABLE STORAGE MEDIUM", the entire contents of which are incorporated herein by reference.

This application claims priority to Chinese Patent Application No. 202010948944.7, filed on September 10, 2020, and entitled "DEVICE CONNECTION METHOD, DEVICE AND READABLE STORAGE MEDIUM", the entire contents of which are incorporated herein by reference.

This application claims priority to Chinese Patent Application No. 202010989325.2, filed on September 18, 2020, and entitled "CONTROL METHOD, DEVICE AND STORAGE MEDIUM", the entire contents of which are incorporated herein by reference.

This application claims priority to Chinese Patent Application No. 202011051971.0, filed on September 29, 2020, and entitled "CONTROL METHOD, DEVICE AND STORAGE MEDIUM", the entire contents of which are incorporated herein by reference.

This application claims priority to Chinese Patent Application No. 202011062786.1, filed on September 30, 2020, and entitled "INFORMATION PROCESSING METHOD, DEVICE AND STORAGE MEDIUM", the entire contents of which are incorporated herein by reference.

This application claims priority to Chinese Patent Application No. 202011133668.5, filed on October 21, 2020, and entitled "INFORMATION PROCESSING METHOD, DEVICE AND STORAGE MEDIUM", the entire contents of which are incorporated herein by reference.

### TECHNICAL FIELD

The present application relates to the technical field of electronics, and in particular to a processing method, a device and a storage medium.

### BACKGROUND

With the popularity of wearable smart devices (such as smart watches, smart earphones, smart bracelets, etc.), smart home devices (such as smart TVs, smart speakers, etc.) and Internet of Vehicles devices (such as smart cars, vehicle terminals, etc.), it has brought great convenience to people's lives.

However, for the processing between devices, such as device connection, device control, device switching, device operation and device prompts, there are still some problems, such as not smart, inconvenient and not fast, resulting in poor user experience.

Exemplarily, in a network composed of terminal devices such as mobile phones and devices such as wearables, smart homes, and Internet of Vehicles, generally, there is only one fixed control center (such as a mobile phone) to control other devices in the network, and it is impossible to adjust the control devices according to the specific conditions of each device in the network.

Exemplarily, the way of establishing connections between devices is relatively simple, which is not flexible and intelligent enough.

Exemplarily, after the devices are connected to each other, the control interaction between the devices is relatively simple or fixed, which is not flexible, intelligent, convenient and fast enough.

Exemplarily, after the devices are connected to each other, the information (such as events) received by each device is processed by each device itself, or each device responds to the information collected by its own device, received instructions, etc. The processing method is relatively simple or fixed, not smart enough, convenient and flexible.

Exemplarily, after a device is disconnected from its connection network, the user cannot obtain the corresponding information immediately or conveniently. Often only when the user cannot use the function of the device in the connection network, the user can know that the device has been disconnected from the connection network where it is located, which is not smart, convenient and fast enough.

Exemplarily, after the devices are connected to each other, the connection relationship cannot be adjusted more intelligently and conveniently by combining the binding relationship between the devices. The control center cannot combine directly and/or indirectly connected device information with relevant information on the network server to make intelligent recommendations, and the group switching function formed by connected devices cannot be supported.

The above contents are only used to assist in understanding the technical solution of the present application, and the above contents are not admitted as prior art.

### SUMMARY

The main purpose of the present application is to provide a processing method, a device and a storage medium, aiming at solving the technical problems that the processing among the devices is not intelligent, inconvenient and not fast.

In order to achieve the above objective, the present application provides a processing method applied to a first control center, including following operations:
S10, obtaining preset information, the preset information is provided by the first control center and/or other devices controlled by the first control center;
S11, detecting whether the preset information meets a preset rule; and
S12, in response that the preset information meets the preset rule, performing a corresponding device control operation according to a preset strategy.

In an embodiment, the purpose of performing the corresponding device control operation according to the preset strategy may be to transfer or migrate or duplicate or backup the relevant data and/or the control function of the first control center, or to output prompt and the like.

In an embodiment, the preset information includes at least one of the following:
connection information including at least one of the following: connection state information, and network rate information;
state information including at least one of the following: device state information, power information, and storage space information;
environment information including at least one of the following: external environment information, and use environment information;
use information including at least one of the following: traffic information, use habit information, and currently used application information;
distance information; and
user physiological information.

In an embodiment, the operation S11 includes at least one of the following:
detecting whether the connection state information meets a first preset rule;
detecting whether the network rate information meets a second preset rule;
detecting whether the device state information meets a third preset rule;
detecting whether the power information meets a fourth preset rule;
detecting whether the storage space information meets a fifth preset rule;
detecting whether the external environment information meets a sixth preset rule;
detecting whether the use environment information meets a seventh preset rule;
detecting whether the traffic information meets an eighth preset rule;
detecting whether the use habit information meets a ninth preset rule;
detecting whether the currently used application information meets a tenth preset rule;
detecting whether the distance information meets an eleventh preset rule; and
detecting whether the user physiological information meets a twelfth preset rule.

In an embodiment, the operation S12 includes at least one of the following:
in response that the connection state information meets the first preset rule, performing the corresponding device control operation according to a first preset strategy;
in response that the network rate information meets the second preset rule, performing the corresponding device control operation according to a second preset strategy;
in response that the device state information meets the third preset rule, performing the corresponding device control operation according to a third preset strategy;
in response that the power information meets the fourth preset rule, performing the corresponding device control operation according to a fourth preset strategy;
in response that the storage space information meets the fifth preset rule, performing the corresponding device control operation according to a fifth preset strategy;
in response that the external environment information meets the sixth preset rule, performing the corresponding device control operation according to a sixth preset strategy;
in response that the use environment information meets the seventh preset rule, performing the corresponding device control operation according to a seventh preset strategy;
in response that the traffic information meets the eighth preset rule, performing the corresponding device control operation according to an eighth preset strategy;
in response that the use habit information meets the ninth preset rule, performing the corresponding device control operation according to a ninth preset strategy;
in response that the currently used application information meets the tenth preset rule, performing the corresponding device control operation according to a tenth preset strategy;
in response that the distance information meets the eleventh preset rule, performing the corresponding device control operation according to an eleventh preset strategy; and
in response that the user physiological information meets the twelfth preset rule, performing the corresponding device control operation according to a twelfth preset strategy.

In an embodiment, the processing method further includes:
the performing the corresponding device control operation includes:
in response that the preset information does not meet the first preset rule, the second preset rule, the third preset rule, the fourth preset rule, the fifth preset rule, the sixth preset rule, the seventh preset rule, the eighth preset rule, the ninth preset rule, the tenth preset rule, the eleventh preset rule, or the twelfth preset rule, setting the corresponding device as a second control center. The corresponding device is one of the devices controlled by the first control center.

In an embodiment, the processing method further includes:
the operation of performing the corresponding device control operation includes:
migrating the relevant data in the first control center to the second control center; and/or
transferring the control function of the first control center to the second control center.

In an embodiment, the relevant data includes at least one of the following:
connection information data, setting item parameter data and relevant download data.

In an embodiment, the relevant data further includes at least one first relevant data and/or at least one second relevant data, the operation of migrating or transferring or duplicating or backing up relevant data in the first control center to the second control center includes at least one of the following:
only backing up or transferring the first relevant data in the first control center to the second control center;
only backing up or transferring second relevant data corresponding to the first relevant data in the first control center to the second control center;
in addition to backing up or transferring the first relevant data in the first control center to the second control center, also backing up or transferring the second relevant data corresponding to the first relevant data to the second control center;
backing up or transferring the first relevant data and corresponding update data in the first control center to the second control center;
backing up or transferring the second relevant data corresponding to the first relevant data and the corresponding update data in the first control center to the second control center; and
backing up or transferring the first relevant data and the corresponding update data in the first control center, and the update data of the second relevant data corresponding to the first relevant data to the second control center.

In an embodiment, a method for migrating the relevant data includes at least one of the following:
synchronous, asynchronous, real-time, appointment time, according to user settings, according to user habits, same selection or setting as last time.

In an embodiment, the processing method further includes:
before migrating or transferring or duplicating or backing up the control function of the first control center to the second control center, obtaining first corresponding information related to the second control center; and
processing the first corresponding information.

In an embodiment, the processing the first corresponding information includes at least one of the following:
in response that the first corresponding information meets a first preset condition, performing the operation of transferring the control function of the first control center to the second control center; and
in response that the first corresponding information does not meet the first preset condition, not performing the operation of transferring the control function of the first control center to the second control center, and/or outputting prompt information at the first control center and/or the second control center.

In an embodiment, the first corresponding information includes a first instruction information input on the second control center, and at least one of the connection state information, the network rate information, the device state information, the power information, the storage space information, the external environment information, the use environment information, the traffic information, the use habit information, the currently used application information, the distance information and the user physiological information of the second control center, the meeting the first preset condition includes at least one of the following:
in response that the first instruction information is biometric information, and the biometric information meets preset biometric information, meeting the first preset condition;
in response that the first instruction information is password information, and the password information meets preset password information, meeting the first preset condition; and
in response that at least one of the connection state information, the network rate information, the device state information, the power information, the storage space information, the external environment information, the use environment information, the traffic information, the use habit information, the currently used application information, the distance information and the user physiological information of the second control center meets a second preset condition, meeting the first preset condition.

In an embodiment, the processing method further includes:
after migrating or transferring or duplicating or backing up the control function of the first control center to the second control center, receiving second instruction information sent by other devices controlled by the second control center; and
responding to the second instruction information.

In an embodiment, the processing method further includes:
after migrating or transferring or duplicating or backing up the control function of the first control center to the second control center, outputting relevant prompt information at the first control center and/or the second control center.

In an embodiment, before the operation S10, the method includes:
determining whether it is a preset mode;
performing the operation S10 in response that it is the preset mode.

The present application further provides a processing method applied to a first control center, comprising following operations:
Z10, obtaining first preset information and/or second preset information;
Z11, detecting whether the first preset information and/or the second preset information meets a preset rule; and
Z12, in response that the first preset information and/or the second preset information meets the preset rule, performing the corresponding device control operation according to the preset strategy.

In an embodiment, the first preset information is provided by the first control center and/or other devices controlled by the first control center.

In an embodiment, the second preset information is provided by the second control center and/or other devices controlled by the second control center.

In an embodiment, both the first control center and the second control center are directly or indirectly connected to at least one third device.

In an embodiment, both the first control center and the second control center are bound to at least one fourth device.

In an embodiment, if the first control center detects that once a connection is established between the second control center and the fourth device, the control functions and/or relevant data on the first control center are transferred or copied according to the binding switching strategy to the second control center.

In an embodiment, after the first control center transfers or replicates control functions and/or relevant data to the second control center, the first control center is disconnected from the fourth device or maintains a normal connection state in a non-control mode (e.g., similar to two devices with equal state).

In an embodiment, the binding switching strategy includes at least one of the following:
only transferring or duplicating the control function on the first control center to the second control center immediately or with a delay or timing;
only transferring or duplicating the relevant data on the first control center to the second control center immediately or with a delay or timing;
transferring or duplicating the control function and/or the relevant data on the first control center to the second control center immediately or with a delay or timing;
outputting prompt information at the first control center and/or the second control center (such as switching the confirmation interface, or whether to accept the interface, etc.), determining whether to transfer or copy the control function and/or the relevant data on the first control center to the second control center immediately or with a delay or timing according to user operations.

In an embodiment, the first control center and the second control center may be the same device or different devices.

In an embodiment, if the first control center and the second control center are different devices, and if only one effective control center is allowed in the connection network at the same time, the currently effective control center can be determined according to the control center determination strategy.

In an embodiment, the control center determination strategy includes at least one of the following:
same as the user's last selection;
selecting the first control center or the second control center by default;
setting the target control center as the one with the most successes or the least failures within a certain period of time (such as the past week, or the past month, or within a complete historical period);
selecting one at random;
the one that is most convenient (such as being used) according to the user use habits or operation;
at least one of network rate information, state information, environment information, use information, distance information, and user physiological information meets the requirements (if multiple devices meet the requirements at the same time, they can also be sorted according to the corresponding parameter values, and the largest one is preferred).

In an embodiment, the purpose of performing the corresponding device control operation according to the preset strategy may be to transfer or migrate or copy or backup the relevant data and/or the control function of the first control center, or to output prompts and the like.

In an embodiment, the first preset information and/or the second preset information includes at least one of the following:
connection information including at least one of the following: connection state information, and network rate information;
state information including at least one of the following: device state information, power information, and storage space information;
environment information including at least one of the following: external environment information, and use environment information;
use information including at least one of the following: traffic information, use habit information, and currently used application information;
distance information; and
user physiological information.

In an embodiment, the operation Z11 includes at least one of the following:
detecting whether the connection state information meets a first preset rule;
detecting whether the network rate information meets a second preset rule;
detecting whether the device state information meets a third preset rule;
detecting whether the power information meets a fourth preset rule;
detecting whether the storage space information meets a fifth preset rule;
detecting whether the external environment information meets a sixth preset rule;
detecting whether the use environment information meets a seventh preset rule;
detecting whether the traffic information meets an eighth preset rule;
detecting whether the use habit information meets a ninth preset rule;
detecting whether the currently used application information meets a tenth preset rule;
detecting whether the distance information meets an eleventh preset rule; and
detecting whether the user physiological information meets a twelfth preset rule.

In an embodiment, the operation Z12 includes at least one of the following:
in response that the connection state information meets the first preset rule, performing the corresponding device control operation according to a first preset strategy;
in response that the network rate information meets the second preset rule, performing the corresponding device control operation according to a second preset strategy;
in response that the device state information meets the third preset rule, performing the corresponding device control operation according to a third preset strategy;
in response that the power information meets the fourth preset rule, performing the corresponding device control operation according to a fourth preset strategy;
in response that the storage space information meets the fifth preset rule, performing the corresponding device control operation according to a fifth preset strategy;
in response that the external environment information meets the sixth preset rule, performing the corresponding device control operation according to a sixth preset strategy;
in response that the use environment information meets the seventh preset rule, performing the corresponding device control operation according to a seventh preset strategy;
in response that the traffic information meets the eighth preset rule, performing the corresponding device control operation according to an eighth preset strategy;
in response that the use habit information meets the ninth preset rule, performing the corresponding device control operation according to a ninth preset strategy;
in response that the currently used application information meets the tenth preset rule, performing the corresponding device control operation according to a tenth preset strategy;
in response that the distance information meets the eleventh preset rule, performing the corresponding device control operation according to an eleventh preset strategy; and
in response that the user physiological information meets the twelfth preset rule, performing the corresponding device control operation according to a twelfth preset strategy.

In an embodiment, the processing method further includes:
the performing the corresponding device control operation includes:
in response that the preset information does not meet the first preset rule, the second preset rule, the third preset rule, the fourth preset rule, the fifth preset rule, the sixth preset rule, the seventh preset rule, the eighth preset rule, the ninth preset rule, the tenth preset rule, the eleventh preset rule, or the twelfth preset rule, setting the corresponding device as a second control center. The corresponding device is one of the devices controlled by the first control center.

In an embodiment, the processing method further includes:
the operation of performing the corresponding device control operation includes:
migrating the relevant data in the first control center to the second control center; and/or
transferring the control function of the first control center to the second control center.

In an embodiment, the relevant data includes at least one of the following:
connection information data, setting item parameter data and relevant download data.

In an embodiment, the relevant data further includes at least one first relevant data and/or at least one second relevant data, the operation of migrating or transferring or duplicating or backing up relevant data in the first control center to the second control center includes at least one of the following:
only backing up or transferring the first relevant data in the first control center to the second control center;
only backing up or transferring second relevant data corresponding to the first relevant data in the first control center to the second control center;
in addition to backing up or transferring the first relevant data in the first control center to the second control center, also backing up or transferring the second relevant data corresponding to the first relevant data to the second control center;
backing up or transferring the first relevant data and corresponding update data in the first control center to the second control center;
backing up or transferring the second relevant data corresponding to the first relevant data and the corresponding update data in the first control center to the second control center; and
backing up or transferring the first relevant data and the corresponding update data in the first control center, and the update data of the second relevant data corresponding to the first relevant data to the second control center.

In an embodiment, a method for migrating the relevant data includes at least one of the following:
synchronous, asynchronous, real-time, appointment time, according to user settings, according to user habits, same selection or setting as last time.

In an embodiment, the processing method further includes:
before migrating or transferring or duplicating or backing up the control function of the first control center to the second control center, obtaining first corresponding information related to the second control center; and
processing the first corresponding information.

In an embodiment, the processing the first corresponding information includes at least one of the following:
in response that the first corresponding information meets a first preset condition, performing the operation of transferring the control function of the first control center to the second control center; and
in response that the first corresponding information does not meet the first preset condition, not performing the operation of transferring the control function of the first control center to the second control center, and/or outputting prompt information at the first control center and/or the second control center.

In an embodiment, the first corresponding information includes a first instruction information input on the second control center, and at least one of the connection state information, the network rate information, the device state information, the power information, the storage space information, the external environment information, the use environment information, the traffic information, the use habit information, the currently used application information, the distance information and the user physiological information of the second control center, the meeting the first preset condition includes at least one of the following:
in response that the first instruction information is biometric information, and the biometric information meets preset biometric information, meeting the first preset condition;
in response that the first instruction information is password information, and the password information meets preset password information, meeting the first preset condition; and
in response that at least one of the connection state information, the network rate information, the device state information, the power information, the storage space information, the external environment information, the use environment information, the traffic information, the use habit information, the currently used application information, the distance information and the user physiological information of the second control center meets a second preset condition, meeting the first preset condition.

In an embodiment, the processing method further includes:
after migrating or transferring or duplicating or backing up the control function of the first control center to the second control center, receiving second instruction information sent by other devices controlled by the second control center; and
responding to the second instruction information.

In an embodiment, the processing method further includes:
after migrating or transferring or duplicating or backing up the control function of the first control center to the second control center, outputting relevant prompt information at the first control center and/or the second control center.

In an embodiment, before the operation Z10, the method includes:
determining whether it is a preset mode;
performing the operation Z10 in response that it is the preset mode.

The present application further provides a processing method, including the following operations:
S20, outputting device list information at a first control center, the device includes at least one other device controlled by the first control center;
S21, determining a target control center according to the selection operation or determine the target control center according to a preset rule;
S22, detecting whether relevant information of the target control center meets a preset requirement;
S23, when the relevant information of the target control center meets a preset requirement, performing a corresponding device control operation according to a preset strategy, and/or, if no, outputting prompt information.

In an embodiment, the purpose of performing the corresponding device control operation according to the preset strategy may be to transfer or migrate or duplicate or backup the relevant data and/or the control function of the first control center, or to output prompts and the like.

In an embodiment, the relevant data includes at least one of the following:
network rate information;
state information including at least one of the following: device state information, power information, and storage space information;
environment information including at least one of the following: external environment information, and use environment information;
use information including at least one of the following: traffic information, use habit information, and currently used application information;
distance information; and
user physiological information.

In an embodiment, the operation S22 includes at least one of the following:
detecting whether the network rate information meets the network rate requirement;
detecting whether the device state information meets the device state requirement;
detecting whether the power information meets the power requirement;
detecting whether the storage space information meets the storage space requirement;
detecting whether the external environment information meets the external environment requirement;
detecting whether the use environment information meets the use environment requirement;
detecting whether the traffic information meets the traffic requirement;
detecting whether the use habit information meets the use habit requirement;
detecting whether the currently used application information meets the currently used application requirement;
detecting whether the distance information meets the distance requirement; and
detecting whether the user physiological information meets the user physiological requirement.

In an embodiment, the preset rule can be the same as the user's last selection, or can be the first, middle or last one in the default selection device list, can also be set as the one with the most successes or the least failures of the target control center within a certain period of time (such as the past week, or the past month, or the complete historical period), can also be selected randomly, or the one that is most convenient (such as being used) according to the user's use habits or operations, can also be one of at least one of network rate information, state information, environment information, use information, distance information, and user physiological information that meets the requirements (if multiple devices meet the requirements at the same time, they can also be sorted according to the corresponding parameter values, and the largest one is preferred).

In an embodiment, the operation S23 includes:
in response that the relevant information of the target control center meets the preset requirement, and the target control center is different from the first control center, transferring the control function of the first control center to the target control center.

In an embodiment, the processing method further includes:
migrating relevant data in the first control center to the target control center.

In an embodiment, the relevant data includes at least one of the following:
connection information data, setting item parameter data and relevant download data.

In an embodiment, the relevant data further includes at least one first relevant data and/or at least one second relevant data, the operation of migrating or transferring or duplicating or backing up relevant data in the first control center to the second control center includes at least one of the following:
only backing up or transferring the first relevant data in the first control center to the second control center;
only backing up or transferring second relevant data corresponding to the first relevant data in the first control center to the second control center;
in addition to backing up or transferring the first relevant data in the first control center to the second control center, also backing up or transferring the second relevant data corresponding to the first relevant data to the second control center;
backing up or transferring the first relevant data and corresponding update data in the first control center to the second control center;
backing up or transferring the second relevant data corresponding to the first relevant data and the corresponding update data in the first control center to the second control center; and
backing up or transferring the first relevant data and the corresponding update data in the first control center, and the update data of the second relevant data corresponding to the first relevant data to the second control center.

In an embodiment, a method for migrating the relevant data includes at least one of the following:
synchronous, asynchronous, real-time, appointment time, according to user settings, according to user habits, same selection or setting as last time.

In an embodiment, the processing method further includes:
before migrating or transferring or duplicating or backing up the control function of the first control center to the target control center, obtaining first corresponding information related to the target control center and responding to the first corresponding information.

In an embodiment, the responding to the first corresponding information includes at least one of the following:
in response that the first corresponding information meets the third preset condition, performing the operation of transferring the control function of the first control center to the target control center; and
in response that the first corresponding information does not meet the third preset condition, not performing the operation of transferring the control function of the first control center to the target control center, and/or outputting prompt information at the first control center and/or the target control center.

In an embodiment, the first corresponding information includes a sixth instruction information input on the target control center, and at least one of the connection state information, the network rate information, the device state information, the power information, the storage space information, the external environment information, the use environment information, the traffic information, the use habit information, the currently used application information, the distance information and the user physiological information of the target control center, the meeting the third preset condition includes at least one of the following:
in response that the sixth instruction information is biometric information, and the biometric information meets preset biometric information, meeting the third preset condition;
in response that the sixth instruction information is password information, and the password information meets preset password information, meeting the third preset condition; and
in response that at least one of the connection state information, the network rate information, the device state information, the power information, the storage space information, the external environment information, the use environment information, the traffic information, the use habit information, the currently used application information, the distance information and the user physiological information of the target control center meets a preset requirement, meeting the third preset condition.

In an embodiment, the processing method further includes:
after migrating or transferring or duplicating or backing up the control function of the first control center to the target control center, receiving seventh instruction information sent by other devices controlled by the target control center; and responding to the seventh instruction information.

In an embodiment, after migrating or transferring or duplicating or backing up the control function of the first control center to the target control center, the method further includes at least one of the following:
outputting relevant prompt information at the first control center and/or the target control center; and
updating the device list information.

In an embodiment, before the operation S20, the method includes:
determining whether it is a preset mode;
performing the operation S20 in response that it is the preset mode.

The present application further includes a processing method applied to a first control center, including the following operations:
Z20, obtaining the first information and/or the second information and/or the third information, the first information is provided by at least one first device directly connected to the first control center, the second information is provided by at least one second device indirectly connected to the first control center, the third information is provided by a web server connected to at least one of the first control center, the first device, and the second device;
Z21, processing the first information and/or the second information and/or the third information according to a processing rule to obtain at least one recommendation information, the recommendation information includes at least one first recommendation information, and/or at least one second recommendation information, and/or at least one third recommendation information;
Z22, detecting whether the first control center, and/or the first device, and/or the second device meet recommendation requirements; and
Z23, if yes, performing a corresponding device control operation according to a preset recommendation strategy, and/or, if no, outputting prompt information.

In an embodiment, the first information and/or the second information includes at least one of the following:
connection information including at least one of the following: connection state information, and network rate information;
state information including at least one of the following: device state information, power information, and storage space information;
environment information including at least one of the following: external environment information, and use environment information;
use information including at least one of the following: traffic information, use habit information, and currently used application information;
distance information; and
user physiological information.

In an embodiment, the operation Z21 includes at least one of the following:
processing the first information according to a first processing rule to obtain at least one first recommendation information;
processing the second information according to a second processing rule to obtain at least one second recommendation information;
processing the third information according to a third processing rule to obtain at least one third recommendation information; and
processing at least two of the first information, the second information and the third information according to a fourth processing rule to obtain at least one third recommendation information.

In an embodiment, the first processing rule and/or the second processing rule and/or the third processing rule and/or the fourth processing rule include at least one of the following:
obtaining corresponding recommendation information according to local and/or network data analysis or artificial intelligence algorithms;
extracting an information keyword and/or a corresponding parameter value, and obtaining corresponding recommendation information according to a preset keyword and/or a parameter value recommendation strategy; and
determining corresponding recommendation information according to user habit or setting (such as fixed recommendation content) or selection.

In an embodiment, the operation Z22 includes at least one of the following:
detecting whether the connection state information meets a first preset rule;
detecting whether the network rate information meets a second preset rule;
detecting whether the device state information meets a third preset rule;
detecting whether the power information meets a fourth preset rule;
detecting whether the storage space information meets a fifth preset rule;
detecting whether the external environment information meets a sixth preset rule;
detecting whether the use environment information meets a seventh preset rule;
detecting whether the traffic information meets an eighth preset rule;
detecting whether the use habit information meets a ninth preset rule;
detecting whether the currently used application information meets a tenth preset rule;
detecting whether the distance information meets an eleventh preset rule; and
detecting whether the user physiological information meets a twelfth preset rule.

In an embodiment, the operation Z23 includes at least one of the following:
in response that the connection state information meets the first preset rule, performing the corresponding device control operation according to a first preset strategy;
in response that the network rate information meets the second preset rule, performing the corresponding device control operation according to a second preset strategy;
in response that the device state information meets the third preset rule, performing the corresponding device control operation according to a third preset strategy;
in response that the power information meets the fourth preset rule, performing the corresponding device control operation according to a fourth preset strategy;
in response that the storage space information meets the fifth preset rule, performing the corresponding device control operation according to a fifth preset strategy;
in response that the external environment information meets the sixth preset rule, performing the corresponding device control operation according to a sixth preset strategy;
in response that the use environment information meets the seventh preset rule, performing the corresponding device control operation according to a seventh preset strategy;
in response that the traffic information meets the eighth preset rule, performing the corresponding device control operation according to an eighth preset strategy;
in response that the use habit information meets the ninth preset rule, performing the corresponding device control operation according to a ninth preset strategy;
in response that the currently used application information meets the tenth preset rule, performing the corresponding device control operation according to a tenth preset strategy;
in response that the distance information meets the eleventh preset rule, performing the corresponding device control operation according to an eleventh preset strategy; and
in response that the user physiological information meets the twelfth preset rule, performing the corresponding device control operation according to a twelfth preset strategy.

In an embodiment, the processing method further includes:
the performing the corresponding device control operation includes:
setting at least one of the first control center, the first device, and/or the second device in compliance with the first preset rule, the second preset rule, the third preset rule, the fourth preset rule, the fifth preset rule, the sixth preset rule, the seventh preset rule, the eighth preset rule, the ninth preset rule, the tenth preset rule, the eleventh preset rule or the twelfth preset rule as a recommendation information output device, or outputting corresponding recommendation information to at least one of the first control center, the first device and/or the second device.

In an embodiment, the outputting the corresponding recommendation information to at least one of the first control center, the first device and/or the second device includes at least one of the following:
outputting first recommendation information to the first device;
outputting second recommendation information to the second device; and
outputting at least one of the first recommendation information, the second recommendation information and third recommendation information to the first control center.

In an embodiment, the output timing of outputting the corresponding recommendation information to at least one of the first control center, the first device and/or the second device may be at the same time, at regular intervals, or with a delay.

In an embodiment, the manners of the first control center and/or the first device and/or the second device outputting corresponding recommendation information may be the same or different.

In an embodiment, the output method of the recommendation information may be an interface output, a voice broadcast, or a light prompt.

In an embodiment, the processing method further includes:
the operation of performing the corresponding device control operation includes:
migrating the relevant data in the first control center to the second control center; and/or
transferring the control function of the first control center to the second control center.

In an embodiment, the relevant data includes at least one of the following:
connection information data, setting item parameter data and relevant download data.

In an embodiment, the relevant data further includes at least one first relevant data and/or at least one second relevant data, the operation of migrating or transferring or duplicating or backing up relevant data in the first control center to the second control center includes at least one of the following:
only backing up or transferring the first relevant data in the first control center to the second control center;
only backing up or transferring second relevant data corresponding to the first relevant data in the first control center to the second control center;
in addition to backing up or transferring the first relevant data in the first control center to the second control center, also backing up or transferring the second relevant data corresponding to the first relevant data to the second control center;
backing up or transferring the first relevant data and corresponding update data in the first control center to the second control center;
backing up or transferring the second relevant data corresponding to the first relevant data and the corresponding update data in the first control center to the second control center; and
backing up or transferring the first relevant data and the corresponding update data in the first control center, and the update data of the second relevant data corresponding to the first relevant data to the second control center.

In an embodiment, a method for migrating the relevant data includes at least one of the following:
synchronous, asynchronous, real-time, appointment time, according to user settings, according to user habits, same selection or setting as last time.

In an embodiment, the processing method further includes:
before migrating or transferring or duplicating or backing up the control function of the first control center to the second control center, obtaining first corresponding information related to the second control center; and
processing the first corresponding information.

In an embodiment, the processing the first corresponding information includes at least one of the following:
in response that the first corresponding information meets a first preset condition, performing the operation of transferring the control function of the first control center to the second control center; and
in response that the first corresponding information does not meet the first preset condition, not performing the operation of transferring the control function of the first control center to the second control center, and/or outputting prompt information at the first control center and/or the second control center.

In an embodiment, the first corresponding information includes a first instruction information input on the second control center, and at least one of the connection state information, the network rate information, the device state information, the power information, the storage space information, the external environment information, the use environment information, the traffic information, the use habit information, the currently used application information, the distance information and the user physiological information of the second control center, the meeting the first preset condition includes at least one of the following:
in response that the first instruction information is biometric information, and the biometric information meets preset biometric information, meeting the first preset condition;
in response that the first instruction information is password information, and the password information meets preset password information, meeting the first preset condition; and
in response that at least one of the connection state information, the network rate information, the device state information, the power information, the storage space information, the external environment information, the use environment information, the traffic information, the use habit information, the currently used application information, the distance information and the user physiological information of the second control center meets a second preset condition, meeting the first preset condition.

In an embodiment, the processing method further includes
after migrating or transferring or duplicating or backing up the control function of the first control center to the second control center, receiving second instruction information sent by other devices controlled by the second control center, the second instruction information is input by the user on other devices controlled by the second control center; and
responding to the second instruction information.

In an embodiment, the processing method further includes:
after migrating or transferring or duplicating or backing up the control function of the first control center to the second control center, outputting relevant prompt information at the first control center and/or the second control center.

In an embodiment, before the operation Z20, the method includes:
determining whether it is a preset mode (such as smart recommendation mode);
performing the operation Z20 in response that it is the preset mode.

The present application provides a processing method applied to a first control center, including the following operations:
Z30, obtaining preset information, the preset information is provided by the group where the first control center and/or the second control center are located;;
Z31, detecting whether the preset information meets a preset rule; and
Z32, in response that the preset information meets the preset rule, performing a corresponding device control operation according to a preset strategy, and/or in response that the preset information does not meet the preset rule, outputting prompt information.

In an embodiment, the purpose of performing the corresponding device control operation according to the preset strategy may be to transfer the relevant data and/or control functions of the first control center and/or the group where the first control center belongs, or to output prompts, etc.

In an embodiment, the preset information includes at least one of the following:
connection information comprising at least one of the following: connection state information, and network rate information;
state information comprising at least one of the following: device state information, power information, and storage space information;
environment information comprising at least one of the following: external environment information, and use environment information;
use information comprising at least one of the following: traffic information, use habit information, and currently used application information;
distance information; and
user physiological information.

In an embodiment, the operation Z31 includes at least one of the following:
detecting whether the connection state information meets a first preset rule;
detecting whether the network rate information meets a second preset rule;
detecting whether the device state information meets a third preset rule;
detecting whether the power information meets a fourth preset rule;
detecting whether the storage space information meets a fifth preset rule;
detecting whether the external environment information meets a sixth preset rule;
detecting whether the use environment information meets a seventh preset rule;
detecting whether the traffic information meets an eighth preset rule;
detecting whether the use habit information meets a ninth preset rule;
detecting whether the currently used application information meets a tenth preset rule;
detecting whether the distance information meets an eleventh preset rule; and
detecting whether the user physiological information meets a twelfth preset rule.

In an embodiment, the operation Z32 includes at least one of the following:
in response that the connection state information meets the first preset rule, performing the corresponding device control operation according to a first preset strategy;
in response that the network rate information meets the second preset rule, performing the corresponding device control operation according to a second preset strategy;
in response that the device state information meets the third preset rule, performing the corresponding device control operation according to a third preset strategy;
in response that the power information meets the fourth preset rule, performing the corresponding device control operation according to a fourth preset strategy;
in response that the storage space information meets the fifth preset rule, performing the corresponding device control operation according to a fifth preset strategy;
in response that the external environment information meets the sixth preset rule, performing the corresponding device control operation according to a sixth preset strategy;
in response that the use environment information meets the seventh preset rule, performing the corresponding device control operation according to a seventh preset strategy;
in response that the traffic information meets the eighth preset rule, performing the corresponding device control operation according to an eighth preset strategy;
in response that the use habit information meets the ninth preset rule, performing the corresponding device control operation according to a ninth preset strategy;
in response that the currently used application information meets the tenth preset rule, performing the corresponding device control operation according to a tenth preset strategy;
in response that the distance information meets the eleventh preset rule, performing the corresponding device control operation according to an eleventh preset strategy; and
in response that the user physiological information meets the twelfth preset rule, performing the corresponding device control operation according to a twelfth preset strategy.

In an embodiment, the processing method further includes:
the performing the corresponding device control operation includes:
setting the corresponding device whose preset information does not meet the first preset rule, the second preset rule, the third preset rule, the fourth preset rule, the fifth preset rule, the sixth preset rule, the seventh preset rule, the eighth preset rule, the ninth preset rule, the tenth preset rule, the eleventh preset rule or the twelfth preset rule as a third control center, and/or the corresponding device being one of the devices controlled by the first control center.

In an embodiment, the corresponding device is one of the devices controlled by the first control center.

In an embodiment, the performing the corresponding device control operation further includes at least one of the following:
in response that the third control center belongs to a group where the first control center belongs, only migrating or transferring a control function of the first control center to the third control center;
in response that the third control center belongs to a group where the first control center belongs, only migrating or transferring relevant data of the first control center to the third control center;
in response that the third control center belongs to a group where the second control center belongs, migrating or transferring the control function and/or the relevant data of the first control center to the third control center, and/or migrating or transferring a relevant function and/or relevant data of at least one first device in a group where the first control center is located to at least one second device in a group where the second control center is located; and
in response that the third control center does not belong to the group where the first control center is located, nor does it belong to the group where the second control center is located, migrating or transferring the control function and/or the relevant data of the first control center to the third control center, and/or migrating or transferring the relevant function and/or the relevant data of at least one first device in the group where the first control center is located to at least one third device in the group where the third control center is located.

In an embodiment, the first device is not the same device as the first control center, and is directly or indirectly connected to the first control center.

In an embodiment, the second device is any device in the group where the second control center is located.

In an embodiment, the third device is any device in the group where the third control center is located.

In an embodiment, the first control center and/or the first device-relevant data include at least one of the following:
connection information data, setting item parameter data and relevant download data.

In an embodiment, the relevant data further includes at least one first relevant data and/or at least one second relevant data, and the operation of migrating or transferring the relevant data in the first device to the second device includes at least one of the following:
only backing up or transferring the first relevant data in the first device to the second device;
only backing up or transferring second relevant data corresponding to the first relevant data in the first device to the second device;
in addition to backing up or transferring the first relevant data in the first device to the second device, backing up or transferring the second relevant data corresponding to the first relevant data to the second device;
backing up or transferring the first relevant data and corresponding update data in the first device to the second device;
backing up or transferring the second relevant data corresponding to the first relevant data and the corresponding update data in the first device to the second device; and
backing up or transferring the first relevant data and the corresponding update data in the first device, and the update data of the second relevant data corresponding to the first relevant data to the second device.

In an embodiment, the method for migrating the relevant data includes at least one of the following:
synchronous, asynchronous, real-time, appointment time, according to user settings, according to user habits, same as last selection or setting.

In an embodiment, the processing method further includes
before migrating or transferring or duplicating or backing up the control function of the first device to the second device, obtaining first corresponding information related to the second device; and
processing the first corresponding information.

In an embodiment, the processing the first corresponding information includes at least one of the following:
in response that the first corresponding information meets a first preset condition, performing the operation of transferring the control function of the first control center to the third control center;
in response that the first corresponding information does not meet the first preset condition, not performing the operation of transferring the control function of the first control center to the third control center, and/or outputting prompt information at the first control center and/or the third control center.

In an embodiment, the first corresponding information includes a first instruction information input on the third control center, and at least one of the connection state information, the network rate information, the device state information, the power information, the storage space information, the external environment information, the use environment information, the traffic information, the use habit information, the currently used application information, the distance information and the user physiological information of the third control center, the meeting the first preset condition includes at least one of the following:
in response that the first instruction information is biometric information, and the biometric information meets preset biometric information, meeting the first preset condition;
in response that the first instruction information is password information, and the password information meets preset password information, meeting the first preset condition; and
in response that at least one of the connection state information, the network rate information, the device state information, the power information, the storage space information, the external environment information, the use environment information, the traffic information, the use habit information, the currently used application information, the distance information and the user physiological information of the third control center meets a second preset condition, meeting the first preset condition.

In an embodiment, the processing method further includes:
after migrating or transferring or duplicating or backing up the control function of the first control center to the third control center, receiving second instruction information sent by other devices controlled by the third control center, the second instruction information is input by the user on other devices controlled by the third control center; and
responding to the second instruction information.

In an embodiment, the processing method further includes:
after migrating or transferring or duplicating or backing up the control function of the first control center to the third control center, outputting relevant prompt information at the first control center and/or the second control center and/or the third control center.

In an embodiment, the relevant data further includes at least one first relevant data and/or at least one second relevant data, the operation of migrating or transferring or duplicating or backing up relevant data in the first control center to the second control center includes at least one of the following:
only backing up or transferring the first relevant data in the first control center to the second control center;
only backing up or transferring second relevant data corresponding to the first relevant data in the first control center to the second control center;
in addition to backing up or transferring the first relevant data in the first control center to the second control center, also backing up or transferring the second relevant data corresponding to the first relevant data to the second control center;
backing up or transferring the first relevant data and corresponding update data in the first control center to the second control center;
backing up or transferring the second relevant data corresponding to the first relevant data and the corresponding update data in the first control center to the second control center; and
backing up or transferring the first relevant data and the corresponding update data in the first control center, and the update data of the second relevant data corresponding to the first relevant data to the second control center.

In an embodiment, a method for migrating the relevant data includes at least one of the following:
synchronous, asynchronous, real-time, appointment time, according to user settings, according to user habits, same selection or setting as last time.

In an embodiment, the processing method further includes:
before migrating or transferring or duplicating or backing up the control function of the first control center to the second control center, obtaining first corresponding information related to the second control center; and
processing the first corresponding information.

In an embodiment, the processing the first corresponding information includes at least one of the following:
in response that the first corresponding information meets a second preset condition, performing the operation of transferring the control function of the first device to the second device; and
in response that the first corresponding information does not meet the second preset condition, not performing the operation of transferring the control function of the first device to the second device, and/or outputting prompt information at the first device and/or the second device.

In an embodiment, the first corresponding information includes a first instruction information input on the second device, and at least one of the connection state information, the network rate information, the device state information, the power information, the storage space information, the external environment information, the use environment information, the traffic information, the use habit information, the currently used application information, the distance information and the user physiological information of the second device, the meeting the second preset condition includes at least one of the following:
in response that the first instruction information is biometric information, and the biometric information meets preset biometric information, meeting the second preset condition;
in response that the first instruction information is password information, and the password information meets preset password information, meeting the second preset condition; and
in response that at least one of the connection state information, the network rate information, the device state information, the power information, the storage space information, the external environment information, the use environment information, the traffic information, the use habit information, the currently used application information, the distance information and the user physiological information of the second device meets a second preset condition, meeting the second preset condition.

In an embodiment, the processing method further includes:
after migrating or transferring or duplicating or backing up the control function of the first device to the second device, receiving second instruction information sent by other devices controlled by the second device, the second instruction information is input by the user on other devices controlled by the second device; and
responding to the second instruction information.

In an embodiment, the processing method further includes:
after migrating or transferring or duplicating or backing up the control function of the first device to the second device, outputting relevant prompt information at the first device and/or the second device and/or the first control center and/or the second control center and/or the third control center.

In an embodiment, before the operation Z30, the method further includes:
determining whether it is a preset mode (such as group switching mode); and
in response that it is the preset mode, performing the operation Z30.

In order to achieve the above objective, the present application provides a processing method applied to an initiator device, including the following operations:
A1, obtaining connection information;
In an embodiment, the connection information includes at least one first connection information and/or at least one second connection information. The first connection information is provided by the terminal, and the second connection information is provided by the target device.

In an embodiment, the first connection information or the second connection information can include at least one of the target device identification, the target device name, the target device address, the target device type, the target device quantity, the target device power, and the target device state, and can also include at least one of connection user name, connection password and connection parameters.

In an embodiment, the connection information is provided by a terminal connected to the initiator device.

A2, connecting to the target device according to the first preset connection rule and/or the second preset connection rule, and the connection information.

In an embodiment, the operation A2 includes: if the connection to the target device fails according to the first preset connection rule and the connection information, or if the number of failures to connect to the target device according to the first preset connection rule and the connection information reaches a preset value (such as 3 or 5 times), connecting the target device according to the second preset connection rule and the connection information.

In an embodiment, the connection information includes at least one of device identification, device name, device address, device type, device quantity, device power, and device state; and/or the connection information includes at least one of connection user name, connection password and connection parameters.

In an embodiment, sorting one or more items of the connection information according to a preset priority; generating and/or determining the first preset connection rule according to the sorted connection information.

In an embodiment, sorting one or more items of the connection information according to a preset strategy (such as priority, shortest connection time consumption, least connection power consumption, best connection security, etc.); generating and/or determining the first preset connection rule according to the sorted connection information; or
obtaining a first preset connection rule by matching one or more items of the connection information with the third preset connection rule.

In an embodiment, the sorting one or more items of the connection information according to the preset priority includes:
sorting each connection information according to a first preset priority; and/or
sorting the connection information providing devices corresponding to the same connection information in the connection information according to the second preset priority.

In an embodiment, the method further includes at least one of the following:
the device state includes at least one of normal, abnormal, smooth, stuck, idle, overloaded, allowed to connect, not allowed to connect, restricted to connect, safe, not safe, worn, not worn, used, and not used.

The connection parameters include at least one of connection duration, connection rate, connection start time, connection end time, and connection location.

In an embodiment, the first preset connection rule includes at least one of the following:
if the device identification meets the first preset condition, connecting to the target device according to the device identification and the connection information, and/or if the device identification does not meet the first preset condition, not connecting to the target device and/or outputting prompt information;
if the device name meets the second preset condition, connecting to the target device according to the device name and the connection information, and/or if the device name does not meet the second preset condition, not connecting to the target device and/or outputting prompt information;
if the device address meets the third preset condition, connecting to the target device according to the device address and the connection information, and/or if the device address does not meet the third preset condition, not connecting to the target device and/or outputting prompt information;
if the device type meets the fourth preset condition, connecting to the target device according to the device type and the connection information, and/or if the device type does not meet the fourth preset condition, not connecting to the target device and/or outputting prompt information;
if the device quantity meets the fifth preset condition, connecting to the target device according to the device quantity and the connection information, and/or if the device quantity does not meet the fifth preset condition, not connecting to the target device and/or outputting prompt information;
if the power of the device meets the sixth preset condition, connecting to the target device according to the power of the device and the connection information, and/or if the power of the device does not meet the sixth preset condition, not connecting to the target device and/or outputting prompt information;
if the device state meets the seventh preset condition, connecting to the target device according to the device state and the connection information, and/or if the device state does not meet the seventh preset condition, not connecting to the target device and/or outputting prompt information; and
if the connection parameters meet the eighth preset condition, connecting to the target device according to the connection parameters and the connection information, and/or if the connection parameters do not meet the eighth preset condition, not connecting to the target device and/or outputting prompt information.

In an embodiment, the meeting the eighth preset condition includes at least one of the following:
the connection parameters include a connection duration, and the historical connection duration is less than or equal to the connection duration;
the connection parameters include a connection rate, and the current connection rate is greater than or equal to the connection rate;
the connection parameters include the connection start time, and the current time meets the start time requirements;
the connection parameters include the connection end time, and the current time meets the end time requirements; and
the connection parameters include the connection location, and the current location meets the requirements of the connection location.

In an embodiment, the operation A2 may also be connecting the target device according to the connection information. If the connection information meets at least one of the first preset condition, the second preset condition, the third preset condition, the fourth preset condition, the fifth preset condition, the sixth preset condition, the seventh preset condition and the eighth preset condition, the target device is connected according to the connection information.

In an embodiment, before the operation A1, the method further includes:
A0, detecting whether a preset operation is received or whether it is in a preset mode, and if so, performing the operation A1.

In an embodiment, before the operation A2, the method further includes:
receiving feedback information from the target device, and/or performing operation A2 only after receiving the confirmation connection instruction.

In an embodiment, after the operation A2, the method further includes:
A3, after the connection succeeds or fails, outputting prompt information to at least one of the initiator device, the terminal, and the target device.

In an embodiment, the device state includes the state of the terminal and/or the state of the target device.

In an embodiment, generating and/or determining the first preset connection rule according to the first connection information and/or the second connection information;
or,
obtaining a first preset connection rule by matching one or more items of the first connection information and/or the second connection information with a third preset connection rule.

In an embodiment, the second preset connection rule includes at least one of the following:
if the connection is successful, the initiator device and the target device will no longer be disconnected or disconnected periodically or over time; if the connection fails, the initiator device and the target device will no longer be connected or be connected regularly or periodically.

In an embodiment, the method further includes: after the initiator device is successfully connected to the target device, maintaining or disconnecting the connection between the terminal and the target device.

In an embodiment, the method further includes: if the connection information changes, updating the corresponding preset connection rules.

The present application further provides a processing method applied to a terminal, including the following operations:
A10, obtaining connection information of a target device according to a request of the initiator device;
In an embodiment, the connection information includes at least one first connection information and/or at least one second connection information. In an embodiment, the first connection information is provided by the terminal, and the second connection information is provided by the target device.

In an embodiment, the first connection information or the second connection information may include at least one of the target device identification, the target device name, the target device address, the target device type, the number of target devices, the power of the target device, and the state of the target device, and may also include at least one of connection user name, connection password and connection parameters.

In an embodiment, the connection information is provided by the terminal.

A20, sending the connection information, so that the initiator device connects to the target device according to the first preset connection rule and/or the second preset connection rule and the connection information.

In an embodiment, the operation A20 includes: if the initiator device fails to connect to the target device according to the first preset connection rule and the connection information, or if the number of times the initiator device fails to connect to the target device according to the first preset connection rule and the connection information reaches a preset value (such as 3 or 5 times), connecting the target device according to the second preset connection rule and the connection information.

In an embodiment, the connection information includes at least one of device identification, device name, device address, device type, device quantity, device power, and device state; and/or the connection information includes at least one of connection user name, connection password and connection parameters.

In an embodiment, sorting one or more items of the connection information according to a preset priority; generating and/or determining the first preset connection rule according to the sorted connection information.

In an embodiment, sorting one or more items of the connection information according to a preset strategy (such as priority, shortest connection time consumption, least connection power consumption, best connection security, etc.); generating and/or determining the first preset connection rule according to the sorted connection information; or
obtaining a first preset connection rule by matching one or more items of the connection information with the third preset connection rule.

In an embodiment, the sorting one or more items of the connection information according to the preset priority includes:
sorting each connection information according to a first preset priority; and/or
sorting the connection information providing devices corresponding to the same connection information in the connection information according to the second preset priority.

In an embodiment, the method further includes at least one of the following:
the device state includes at least one of normal, abnormal, smooth, stuck, idle, overloaded, allowed to connect, not allowed to connect, restricted to connect, safe, not safe, worn, not worn, used, and not used.

The connection parameters include at least one of connection duration, connection rate, connection start time, connection end time, and connection location.

In an embodiment, the first preset connection rule includes at least one of the following:
if the device identification meets the first preset condition, connecting to the target device according to the device identification and the connection information, and/or if the device identification does not meet the first preset condition, not connecting to the target device and/or outputting prompt information;
if the device name meets the second preset condition, connecting to the target device according to the device name and the connection information, and/or if the device name does not meet the second preset condition, not connecting to the target device and/or outputting prompt information;
if the device address meets the third preset condition, connecting to the target device according to the device address and the connection information, and/or if the device address does not meet the third preset condition, not connecting to the target device and/or outputting prompt information;
if the device type meets the fourth preset condition, connecting to the target device according to the device type and the connection information, and/or if the device type does not meet the fourth preset condition, not connecting to the target device and/or outputting prompt information;
if the device quantity meets the fifth preset condition, connecting to the target device according to the device quantity and the connection information, and/or if the device quantity does not meet the fifth preset condition, not connecting to the target device and/or outputting prompt information;
if the power of the device meets the sixth preset condition, connecting to the target device according to the power of the device and the connection information, and/or if the power of the device does not meet the sixth preset condition, not connecting to the target device and/or outputting prompt information;
if the device state meets the seventh preset condition, connecting to the target device according to the device state and the connection information, and/or if the device state does not meet the seventh preset condition, not connecting to the target device and/or outputting prompt information; and
if the connection parameters meet the eighth preset condition, connecting to the target device according to the connection parameters and the connection information, and/or if the connection parameters do not meet the eighth preset condition, not connecting to the target device and/or outputting prompt information.

In an embodiment, the meeting the eighth preset condition includes at least one of the following:
the connection parameters include a connection duration, and the historical connection duration is less than or equal to the connection duration;
the connection parameters include a connection rate, and the current connection rate is greater than or equal to the connection rate;
the connection parameters include the connection start time, and the current time meets the start time requirements;
the connection parameters include the connection end time, and the current time meets the end time requirements; and
the connection parameters include the connection location, and the current location meets the requirements of the connection location.

In an embodiment, the operation A20 may also be sending the connection information, so that the initiator device connects to the target device according to the connection information. In an embodiment, if the connection information meets at least one of the first preset condition, the second preset condition, the third preset condition, the fourth preset condition, the fifth preset condition, the sixth preset condition, the seventh preset condition, and the eighth preset condition, the initiator device is connected to the target device according to the connection information.

In an embodiment, before the operation A10, the method further includes:
A00, detecting whether a preset operation is received or whether it is in a preset mode, and if so, performing the operation A10.

In an embodiment, before the initiator device connects to the target device according to the first preset connection rule and/or the second preset connection rule and the connection information, the method further includes:
performing the operation A20 after receiving the feedback information from the target device, and/or receiving the connection confirmation instruction.

In an embodiment, after the initiator device connects to the target device according to the first preset connection rule and/or the second preset connection rule and the connection information, the method further includes:
A30, after the connection succeeds or fails, outputting prompt information to at least one of the initiator device, the terminal, and the target device.

In an embodiment, the method further includes: the terminal is also connected to the target device at the same time, and/or there are multiple target devices.

In an embodiment, the second preset connection rules include at least one of the following:
if the connection is successful, the initiator device and the target device will no longer be disconnected or disconnected periodically or over time; if the connection fails, the initiator device and the target device will no longer be connected or be connected regularly or periodically.

In an embodiment, the target device includes at least one first target device and at least one second target device, and further includes:
if the initiator device fails to connect to the first target device according to the first preset connection rule and/or the second preset connection rule and the connection information, the terminal obtains and sends the connection information of the second target device, so that the initiator device connects to the second target device according to a fourth preset connection rule and the connection information of the second target device.

In an embodiment, the fourth preset connection rule includes at least one of the following:
after the initiator device fails to connect to the first target device, or after receiving a switching instruction, immediately or after a preset time delay, controlling the initiator device to connect to the second target device;
triggering the initiator device to connect to the second target device after the initiator device fails to connect to the first target device for a preset number of times; and
outputting prompt information.

In an embodiment, if the initiator device fails to connect to the second target device, it also includes at least one of the following:
controlling the initiator device to connect to the first target device;
controlling the initiator device to connect to the second target device again;
after the number of connection failures reaches a preset number of times, controlling the initiator device to no longer connect to the first target device or the second target device; and
outputting prompt information.

In an embodiment, the method also includes at least one of the following:
after the initiator device is successfully connected to the target device, maintaining or disconnecting the connection between the terminal and the target device; and
if the connection information changes, updating the corresponding preset connection rules.

The present application further provides a processing method applied to a target device, including the following operations:
A100, obtaining connection information according to the request of the terminal;
In an embodiment, the connection information includes at least one first connection information and/or at least one second connection information. In an embodiment, the first connection information is provided by the terminal, and the second connection information is provided by the target device.

In an embodiment, the first connection information or the second connection information may include at least one of the target device identification, the target device name, the target device address, the target device type, the number of target devices, the power of the target device, and the state of the target device, and may also include at least one of connection user name, connection password and connection parameters.

In an embodiment, the connection information is provided by the terminal.

A200, sending the connection information, so that the initiator device connected to the terminal is connected to the target device according to the first preset connection rule and/or the second preset connection rule and the connection information.

In an embodiment, the operation A200 includes: if the connection to the target device fails according to the first preset connection rule and the connection information, or if the number of failed connections to the target device according to the first preset connection rule and the connection information reaches a preset value (such as 3 or 5 times), connecting the target device according to the second preset connection rule and the connection information.

In an embodiment, the connection information includes at least one of device identification, device name, device address, device type, device quantity, device power, and device state; and/or the connection information includes at least one of connection user name, connection password and connection parameters.

In an embodiment, the method further includes at least one of the following:
the device state includes at least one of normal, abnormal, smooth, stuck, idle, overloaded, allowed to connect, not allowed to connect, restricted to connect, safe, not safe, worn, not worn, used, and not used.

The connection parameters include at least one of connection duration, connection rate, connection start time, connection end time, and connection location.

In an embodiment, the first preset connection rule includes at least one of the following:
if the device identification meets the first preset condition, connecting to the target device according to the device identification and the connection information, and/or if the device identification does not meet the first preset condition, not connecting to the target device and/or outputting prompt information;
if the device name meets the second preset condition, connecting to the target device according to the device name and the connection information, and/or if the device name does not meet the second preset condition, not connecting to the target device and/or outputting prompt information;
if the device address meets the third preset condition, connecting to the target device according to the device address and the connection information, and/or if the device address does not meet the third preset condition, not connecting to the target device and/or outputting prompt information;
if the device type meets the fourth preset condition, connecting to the target device according to the device type and the connection information, and/or if the device type does not meet the fourth preset condition, not connecting to the target device and/or outputting prompt information;
if the device quantity meets the fifth preset condition, connecting to the target device according to the device quantity and the connection information, and/or if the device quantity does not meet the fifth preset condition, not connecting to the target device and/or outputting prompt information;
if the power of the device meets the sixth preset condition, connecting to the target device according to the power of the device and the connection information, and/or if the power of the device does not meet the sixth preset condition, not connecting to the target device and/or outputting prompt information;
if the device state meets the seventh preset condition, connecting to the target device according to the device state and the connection information, and/or if the device state does not meet the seventh preset condition, not connecting to the target device and/or outputting prompt information; and
if the connection parameters meet the eighth preset condition, connecting to the target device according to the connection parameters and the connection information, and/or if the connection parameters do not meet the eighth preset condition, not connecting to the target device and/or outputting prompt information.

In an embodiment, the meeting the eighth preset condition includes at least one of the following:
the connection parameters include a connection duration, and the historical connection duration is less than or equal to the connection duration;
the connection parameters include a connection rate, and the current connection rate is greater than or equal to the connection rate;
the connection parameters include the connection start time, and the current time meets the start time requirements;
the connection parameters include the connection end time, and the current time meets the end time requirements; and
the connection parameters include the connection location, and the current location meets the requirements of the connection location.

In an embodiment, the operation A200 may also be sending the connection information, so that the initiator device connected to the terminal is connected to the target device according to the connection information. In an embodiment, if the connection information meets at least one of the first preset condition, the second preset condition, the third preset condition, the fourth preset condition, the fifth preset condition, the sixth preset condition, the seventh preset condition, and the eighth preset condition, the initiator device is connected to the target device according to the connection information.

In an embodiment, before the operation A100, the method further includes:
A000, detecting whether a preset operation is received or whether it is in a preset mode, and if so, performing the operation A100.

In an embodiment, before the initiator device connects to the target device according to the first preset connection rule and/or the second preset connection rule and the connection information, the method further includes:
performing the operation A200 after receiving the feedback information from the target device, and/or receiving the connection confirmation instruction.

In an embodiment, after the initiator device connects to the target device according to the first preset connection rule and/or the second preset connection rule and the connection information, the method further includes:
A300, after the connection succeeds or fails, outputting prompt information to at least one of the initiator device, the terminal, and the target device.

In an embodiment, the method further includes: the terminal is also connected to the target device at the same time, and/or there are multiple target devices.

In an embodiment, the second preset connection rules include at least one of the following:
if the connection is successful, the initiator device and the target device will no longer be disconnected or disconnected periodically or over time; if the connection fails, the initiator device and the target device will no longer be connected or be connected regularly or periodically.

In an embodiment, the method for obtaining the connection information includes at least one of the following:
obtaining by local;
obtaining through a server; and
obtaining through other devices connected to the target device.

In an embodiment, the method further includes: if the first preset instruction is received or it is detected that the target device is in or switched to a preset mode, it includes at least one of the following:
immediately or with a delay or timing disconnect the device connection or all connections of the target device;
if the second preset instruction is received, restoring to the previous state; and
outputting prompt information.

In an embodiment, the method includes at least one of the following:
after the initiator device is successfully connected to the target device, maintaining or disconnecting the connection between the terminal and the target device; and
if the connection information changes, updating the corresponding preset connection rules.

The present application provides a processing method applied to an initiator device, including the following operations:
obtaining the first connection reference information;
when the first connection reference information meets a preset connection condition, obtaining connection information, the connection information may or may not be provided by the target device (such as a third-party device), and may also be provided by at least one of the initiator device, the target device, and/or the third-party device; and
establishing a connection with the target device according to the connection information and/or a first preset strategy.

In an embodiment, the first preset strategy may also be updated according to the connection result.

In another implementation, the processing method may also include the following operations:
obtaining connection information, the connection information is provided by at least one of the initiator device, the target device and/or the third-party device;
obtaining first connection reference information, when the first connection reference information meets a preset connection condition;
establishing a connection with the target device according to the connection information and/or a first preset strategy.

In an embodiment, the first preset strategy includes at least one of set the connection duration, set the connection speed, set the connection time, set the connection location, set the connection mode, set the connection priority, set the function restriction, set automatic triggering of applications and/or functions and/or services, set execution of preset control instructions, set direct connections, set indirect connections.

In an embodiment, the first connection reference information includes at least one of the following:
positioning information, time information, device use state information, instruction information.

In an embodiment, the first connection reference information meets preset connection conditions, including at least one of the following:
the positioning information meets a first preset connection condition;
the time information meets the second preset connection condition;
the device use state information meets a third preset connection condition;
the instruction information meets the fourth preset connection condition.

In an embodiment, the state information includes at least one of normal, abnormal, smooth, stalled, idle, overloaded, allowed to connect, not allowed to connect, restricted to connect, safe, not safe, worn, not worn, used, and not used.

In an embodiment, the connection information includes at least one of device identification, device name, device address, device type, device quantity, device power, and device state; and/or the connection information includes at least one of connection user name, connection password and connection parameters.

In an embodiment, the updating the first preset strategy according to the connection result includes at least one of the following:
if the connection is successful or the number of successful connections reaches a preset value (such as 3 times or 5 times), update the first preset strategy as follows: the initiator device is no longer disconnected from the target device or is disconnected at regular intervals or overtime;
if the connection fails or the number of connection failures reaches a preset value (such as 3 times or 5 times), update the first preset strategy as follows: the initiator device is no longer connected to the target device or is regularly connected or periodically connected;
if the connection is successful or the number of successful connections reaches a preset value (such as 3 or 5 times), obtain the second connection reference information, if the second connection reference information meets a preset condition, changing the first preset strategy to a second preset strategy.

In an embodiment, the second connection reference information meets preset conditions, including at least one of the following:
the second connection reference information is different from the first connection reference information;
the value of the second connection parameter meets a preset condition.

In an embodiment, the processing method also includes at least one of the following:
the functional limitations described include: restricting the preset system functions and/or preset application functions and/or preset services (which may be foreground services or background services) of the initiator device and/or the target device from normal use;
the automatic trigger application or function includes: automatically trigger and run at least one of the following of the initiator device and/or the target device: preset system applications, preset system functions, preset applications, preset application functions, preset services (which can be a foreground service, a background service, a system service, an application service, or a third-party service, etc.);
the performing the preset control instruction includes: performing the preset control instruction of the initiator device and/or the preset control instruction of the target device;
the indirect connection includes: the initiator is connected to a third-party device, and the third-party device is connected to the target device.

In an embodiment, after establishing a connection with the target device according to the connection information and/or the first preset strategy, the method further includes:
the initiator device and/or the target device outputs prompt information.

The present application also provides a processing method applied to a target device, including the following operations:
obtaining connection information in response to a connection request from the initiator device;
sending the connection information to the initiator device, so that the initiator device establishes a connection with the target device according to the connection information and/or a first preset strategy.

In an embodiment, before the connection information is obtained, first connection reference information may also be obtained, and the connection information is obtained only when the first connection reference information meets a preset connection condition.

In an embodiment, after the connection information is obtained, first connection reference information may also be obtained, and the connection information is sent to the initiator device only when the first connection reference information meets a preset connection condition.

In an embodiment, the first preset strategy may also be updated according to the connection result.

In an embodiment, the first preset strategy includes at least one of set the connection duration, set the connection speed, set the connection time, set the connection location, set the connection mode, set the connection priority, set the function restriction, set automatic triggering of applications and/or functions and/or services, set execution of preset control instructions, set direct connections, set indirect connections.

In an embodiment, the first connection reference information includes at least one of the following:
positioning information, time information, device use state information, instruction information.

In an embodiment, the first connection reference information meets preset connection conditions, including at least one of the following:
the positioning information meets a first preset connection condition;
the time information meets the second preset connection condition;
the device use state information meets a third preset connection condition;
the instruction information meets the fourth preset connection condition.

In an embodiment, the state information includes at least one of normal, abnormal, smooth, stalled, idle, overloaded, allowed to connect, not allowed to connect, restricted to connect, safe, not safe, worn, not worn, used, and not used.

In an embodiment, the connection information includes at least one of device identification, device name, device address, device type, device quantity, device power, and device state; and/or the connection information includes at least one of connection user name, connection password and connection parameters.

In an embodiment, the updating the first preset strategy according to the connection result includes at least one of the following:
if the connection is successful or the number of successful connections reaches a preset value (such as 3 times or 5 times), update the first preset strategy as follows: the initiator device is no longer disconnected from the target device or is disconnected at regular intervals or overtime;
if the connection fails or the number of connection failures reaches a preset value (such as 3 times or 5 times), update the first preset strategy as follows: the initiator device is no longer connected to the target device or is regularly connected or periodically connected;
if the connection is successful or the number of successful connections reaches a preset value (such as 3 or 5 times), obtain the second connection reference information, if the second connection reference information meets a preset condition, changing the first preset strategy to a second preset strategy.

In an embodiment, the second connection reference information meets preset conditions, including at least one of the following:
the second connection reference information is different from the first connection reference information;
the value of the second connection parameter meets a preset condition.

In an embodiment, the functional limitations described include: restricting the preset system function and/or preset application function and/or preset service (which may be a foreground service or a background service) of the initiator device and/or the target device cannot be used normally.

The automatic trigger application or function includes: automatically trigger and run at least one of the following of the initiator device and/or the target device: preset system applications, preset system functions, preset applications, preset application functions, preset services (which can be a foreground service, a background service, a system service, an application service, or a third-party service, etc.).

The performing the preset control instruction includes: performing the preset control instruction of the initiator device and/or the preset control instruction of the target device;

The indirect connection includes: the initiator device is connected to a third-party device, and the third-party device is connected to the target device.

The present application provides a processing method, including the following operations:
outputting at least one first control information and/or at least one second control information;
receiving operation information, performing corresponding control according to the operation information and/or a first preset strategy, and/or updating the first control information and/or the second control information.

In an embodiment, the first control information corresponds to a first device directly or indirectly connected to the management device, and the second control information corresponds to a second device directly or indirectly connected to the management device.

In an embodiment, before outputting at least one first control information and/or at least one second control information, the method further includes: detecting whether a preset event has occurred, and if so, performing the operation of outputting at least one first control information and/or at least one second control information; and/or if not, not performing the operation of outputting at least one first control information and/or at least one second control information.

In an embodiment, the preset event includes at least one of switching of the control center, or establishing or disconnecting the connection between the first device and the management device, or establishing or disconnecting the connection between the second device and the management device, or changing the function and/or interface of the system and/or application on the first device and/or the second device (such as alarm clock ringing, application opening or exiting, etc.), or changing the state information of the first device and/or the second device (the remaining power is lower than a certain preset value, such as 10%; another example is the change of the environment, such as changing from day to night, or from the company to home, etc.).

In an embodiment, the state information of the device includes at least one of device identification, device name, device address, device type, device quantity, device power, and device use state.

In an embodiment, the device use state includes at least one of the environment of the device (such as time, location, etc.), storage space information, use information (such as traffic information, use habit information, and currently used application information, etc.), the running state being normal, the running state being abnormal, the running state being smooth, the running state being stuck, the device being idle, the device being overloaded, the device being in the state of allowing connection, the device being in the state of not allowing connection, the device being in the state of restricting connection, the device being in a safe state or mode, the device being in unsafe state or mode, the device being in wear state, the device being in non-wear state, the device being in use state, and the device being in not used state.

In an embodiment, the contents of the first control information and/or the second control information include at least one of the following:
device information of the first device and/or the second device;
application information and/or function information and/or service information of the first device;
application information and/or function information and/or service information of the second device;
the operation interface information of the first device and/or the operation interface information of the second device.

In an embodiment, the output form of the first control information and/or the second control information includes at least one of the following:
one device corresponds to one window or page or control or card;
all devices are correspondingly displayed in the same window or page or control or card;
the first control information is displayed in a first display area or a first display screen;
the second control information is displayed in a second display area or a second display screen;
the first control information and/or the second control information are simultaneously displayed in a display area or a display screen.

In an embodiment, before the operation of performing corresponding control according to the operation information and/or the first preset strategy, and/or updating the first control information and/or the second control information, detecting whether the management device currently outputting the control information meets the first preset rule. When the management device currently outputting the control information meets the first preset rule, performing corresponding control according to the operation information and/or the first preset strategy, and/or updating the first control information and/or the second control information.

In an embodiment, the meeting the first preset rule includes at least one of the following:
the management device being a control center;
the management device being in a preset mode;
the interface of the management device being in an operable state;
outputting the authentication information and passing the authentication;
receiving the preset operation instruction.

In an embodiment, performing corresponding control according to the operation information and/or the first preset strategy, and/or updating the first control information and/or the second control information includes at least one of the following:
if the operation information is a switching connection operation, changing the connection type of the first device, and/or changing the connection type of the second device; the change may be from a direct connection to an indirect connection, or from an indirect connection to a direct connection;
if the operation information is an operation of establishing a connection, establishing a connection between the first device and the second device;
if the operation information is a disconnection operation, outputting disconnection setting information, and setting at least one of disconnection time, disconnection duration, and reconnection strategy according to the setting instruction;
if the operation information is a setting operation, outputting the setting information, and performing corresponding setting according to the setting instruction;
if the operation information is an information transfer operation, transferring at least one information on the first device to the second device; and/or transferring at least one information on the second device to the first device; and/or transferring at least one information on the management device to the first device and/or the second device.

In an embodiment, the direct connection is changed to indirect connection. The first device is taken as an example. The third device obtains the connection information through the management device and/or the first device. The third device may also obtain connection information through broadcast information. The third device connects to the management device according to the connection information, the management device disconnects from the first device, and/or the first device establishes a connection with a third device.

In an embodiment, the indirect connection is changed to direct connection. The second device is taken as an example. The second device obtains connection information through a third device connected to the management device or broadcast information, the second device connects to the management device according to the connection information, and/or the management device disconnects from the third device.

In an embodiment, the corresponding setting according to the setting instruction includes at least one of the following:
turning on or off at least one of system functions, application functions, services (which may be foreground and/or background services, system and/or applications and/or third-party services), and display interfaces of the first device;
turning on or off at least one of system functions, application functions, services (which may be foreground and/or background services, system and/or applications and/or third-party services), and display interfaces of the second device;
setting connection parameters between the management device and the first device and/or the second device;
setting working parameters of the first device and/or the second device.

In an embodiment, the connection parameters include at least one of the following:
connection rate, connection delay, connection duration, connection time, connection location, connection mode.

In an embodiment, the method also includes:
in response to the occurrence of a first preset event, switching a first preset strategy to a second preset strategy for control.

In an embodiment, the method further includes at least one of the following:
the first device being directly or indirectly connected to the management device;
the second device being directly or indirectly connected to the management device.

In an embodiment, if the first control information and/or the second control information includes corresponding device information, updating the first control information and/or the second control information includes at least one of the following :
differentially displaying the corresponding device information;
hiding the corresponding device information; and
outputting prompt information corresponding to the control result.

In an embodiment, if the first control information and/or the second control information includes corresponding application information and/or function information and/or service information, updating the first control information and/or the second control information includes at least one of the following:
turning on or off the corresponding application and/or function and/or service;
increasing or decreasing the parameter value of the corresponding application and/or function and/or service.

In an embodiment, if the first control information and/or the second control information includes corresponding operation interface information, updating the first control information and/or the second control information includes at least one of the following:
adjusting the display parameters of the corresponding operation interface;
transferring the operation interface corresponding to the first control information to the device corresponding to the second control information;
transferring the operation interface corresponding to the second control information to the device corresponding to the first control information; and
closing or hiding or suspending or fixing or reducing or enlarging the corresponding operation interface.

In an embodiment, the method further includes: after closing or hiding or suspending or fixing or reducing or enlarging the corresponding operation interface, if a preset operation is received, the corresponding operation interface is displayed again.

The present application further provides a processing method, including the following operations:
obtaining first operation information of the first operation and/or second operation information of the second operation;
detecting whether the first operation information and/or the second operation and/or management device information meets a preset condition;
when the first operation information and/or the second operation and/or management device information meets the preset condition, performing corresponding control according to the first preset strategy, and/or updating the first control information corresponding to the first device and/or the second control information corresponding to the second device.

In an embodiment, the first operation information corresponds to a first device directly or indirectly connected to the management device, and the second operation information corresponds to a second device directly or indirectly connected to the management device.

In an embodiment, the first operation corresponding to the first device information and the second operation corresponding to the second device information are two independent operations, or belong to two parts of the same operation.

In an embodiment, the method further includes: in response to the occurrence of a preset event, switching the first preset strategy to the second preset strategy for control.

In an embodiment, if the first operation and the second operation are two independent operations, the first operation or the second operation is any one of click, double click, heavy press, light press, long press, and short press.

In an embodiment, if the first operation and the second operation belong to two parts of the same operation, the same operation is any one of sliding, dragging, air gesture, voice control, and visual control.

In an embodiment, the first operation belongs to the start operation of the same operation, and the second operation belongs to the end operation of the same operation.

In an embodiment, the meeting preset condition includes at least one of the following:
the management device being a control center;
the management device being in a preset mode;
the current interface of the management device being in an operable state;
outputting the authentication information and passing the authentication;
receiving the preset operation instruction;
the triggering area of the first operation and/or the second operation being a preset area;
the triggering mode of the first operation and/or the second operation being a preset mode;
at least one of the number of times, duration, or pressure value of the first operation meeting a first preset requirement;
at least one of the number of times, duration, or pressure value of the second operation meeting a second preset requirement; and
at least one of the number of times of the first operation and/or the second operation, or time interval or location information meeting a third preset requirement.

In an embodiment, the operation of performing corresponding control according to the first preset strategy, and/or updating the first control information corresponding to the first device and/or the second control information corresponding to the second device includes at least one of the following:
changing the first device to an indirect connection, and/or changing the second device to a direct connection;
establishing a connection between the first device and the second device;
outputting disconnection setting information, and setting at least one of disconnection time, disconnection duration, and reconnection strategy according to the setting instruction;
outputting setting information, and making corresponding settings according to setting instructions; and
transferring at least one information on the first device to the second device, and/or transferring at least one information on the second device to the first device, and/or transferring at least one information on the management device to the first device and/or the second device.

In an embodiment, the first device is changed to an indirect connection. The third device obtains the connection information through the management device and/or the first device. The third device may also obtain connection information through broadcast information. The third device connects to the management device according to the connection information, the management device disconnects from the first device, and/or the first device establishes a connection with a third device.

In an embodiment, the second device is changed to a direct connection. The second device obtains connection information through a third device connected to the management device or broadcast information, the second device connects to the management device according to the connection information, and/or the management device disconnects from the third device.

In an embodiment, the corresponding setting according to the setting instruction includes at least one of the following:
turning on or off at least one of system functions, application functions, services (which may be foreground and/or background services, system and/or applications and/or third-party services), and display interfaces of the first device;
turning on or off at least one of system functions, application functions, services (which may be foreground and/or background services, system and/or applications and/or third-party services), and display interfaces of the second device;
setting connection parameters between the management device and the first device and/or the second device;
setting working parameters of the first device and/or the second device.

In an embodiment, the connection parameters include at least one of the following:
connection rate, connection delay, connection duration, connection time, connection location, connection mode.

In an embodiment, the method further includes:
if the preset condition is not met, not responding to the first operation information and/or the second operation information, and/or outputting prompt information.

In an embodiment, the method further includes at least one of the following:
the first device being directly or indirectly connected to the management device; and
the second device being directly or indirectly connected to the management device.

In an embodiment, the contents of the first control information and/or the second control information include at least one of the following:
device information of the first device and/or the second device;
application information and/or function information and/or service information of the first device;
application information and/or function information and/or service information of the second device;
the operation interface information of the first device and/or the operation interface information of the second device.

In an embodiment, the output form of the first control information and/or the second control information includes at least one of the following:
one device corresponds to one window or page or control or card;
all devices are correspondingly displayed in the same window or page or control or card;
the first control information is displayed in a first display area or a first display screen;
the second control information is displayed in a second display area or a second display screen;
the first control information and/or the second control information are simultaneously displayed in a display area or a display screen.

In an embodiment, if the first control information and/or the second control information includes corresponding device information, updating the first control information corresponding to the first device and/or the second control information corresponding to the second device includes at least one of the following:
differentially displaying the corresponding device information;
hiding the corresponding device information;
outputting prompt information corresponding to the control result.

In an embodiment, if the first control information and/or the second control information includes corresponding application information and/or function information and/or service information, updating the first control information corresponding to the first device and/or the second control information corresponding to the second device includes at least one of the following:
turning on or off the corresponding application and/or function and/or service; and
increasing or decreasing the parameter value of the corresponding application and/or function and/or service.

In an embodiment, if the first control information and/or the second control information includes corresponding operation interface information, updating the first control information corresponding to the first device and/or the second control information corresponding to the second device includes at least one of the following:
adjusting the display parameters of the corresponding operation interface;
transferring the operation interface corresponding to the first control information to the device corresponding to the second control information;
transferring the operation interface corresponding to the second control information to the device corresponding to the first control information;
closing or hiding or suspending or fixing or reducing or enlarging the corresponding operation interface.

In an embodiment, the method further includes: after closing or hiding or suspending or fixing or reducing or enlarging the corresponding operation interface, if a preset operation is received, the corresponding operation interface is displayed again.

The present application further provides a processing method, including the following operations:
outputting at least one first control information and/or at least one second control information;
receiving operation information, switching at least one information on the management device and/or at least one information on the first device to the second device according to the operation information, and/or switching at least one information on the management device and/or at least one information on the second device to the first device, and/or switching at least two information among at least one information on the management device, at least one information on the first device, and at least one information on the second device to the third device.

In an embodiment, the information may be control instructions or data (such as files, application information, application interface, system information, system interface, service information, service interface, etc.).

In an embodiment, the first control information corresponds to the first device directly or indirectly connected to the management device, and/or the second control information corresponds to a second device directly or indirectly connected to the management device, and/or the third device is directly or indirectly connected to the first device, and/or the third device is directly or indirectly connected to the second device.

In an embodiment, the management device (such as a mobile phone) displays the control information of the management device itself. The first device is a TV, the second device is a speaker, and the third device is a smart screen. By operating the control information, the screen display content of the management device is switched to the first device and the third device for display, and/or the sound of the management device is switched to the second device for playback. Which device the corresponding information should be switched to can be set by the user or automatically determined according to user habits or choices, or determined by the current state (such as remaining power, whether switching or connection is allowed, whether the maximum number of connections has been reached, whether the device is running smoothly, etc.) of different devices. The interface can be output for the user to choose, and the configuration can also be selected according to the user's setting strategy. For example, it is possible to select at least one device with the most remaining power and/or the best display resolution and/or the fastest display speed among multiple devices that support the display function as the target display device. Through this control method, not only can it be more convenient, intelligent and fast, but it can also flexibly call and rationally allocate and use resources among different devices. In addition, because it can support the control interaction between directly connected devices and indirectly connected devices, the function is more powerful, and the experience is more intelligent, convenient and fast.

In an embodiment, the management device (such as earphone) can be connected with the first device (such as mobile phone) and/or the second device (such as tablet) and/or the third device (such as PC) at the same time. At this time, if a preset event (such as an incoming call, an alarm clock, etc.) occurs, the switch can be automatically triggered according to the state information of the management device and/or the first device and/or the second device. If the user is using an earphone, the incoming call will be automatically switched to the earphone. If the earphone is not worn and the user is using a tablet, the incoming call will be automatically switched to the tablet. When the battery of the tablet is low, it can automatically switch to other devices such as PC or even smart speaker or smart TV. The automatic switching strategy can be set by the user in advance or automatically determined according to the user's use habits or big data analysis. In this embodiment, when a call comes in, it can also support to simultaneously remind or output prompt information (either voice or interface) on the earphone and/or mobile phone and/or tablet and/or PC and other devices at the same time, then determine which target device to switch to or directly answer or hang up or mute according to the user's choice, which can provide users with more choices and intelligent experience.

In another embodiment, the management device (such as a mobile phone) can be connected with the first device (such as a car) and/or the second device (such as a watch) at the same time. When the user is navigating or listening to music on the mobile phone, if it is detected that the user enters the car with the mobile phone (it can be detected by short-distance communication or camera or infrared or ultrasonic or location service), navigation or listening to music on the mobile phone can be automatically switched to the car (if there is a screen, it can support display, if there is no screen, it can support voice output). When the user gets off the car, navigation or listening to music can also be automatically switched from the car to the watch. In addition to the automatic method, it can also support the output of prompt information on the mobile phone, car or watch, and trigger switching through user selection, which can provide users with a more flexible and smarter experience.

The present application provides a processing method applied to an initiator device, including the following operations:
when a preset event occurs in the connection network, generating and/or determining a response instruction of the target device corresponding to the preset event; and
obtaining control judgment information, when the control judgment information meets a control condition, the control center sends the response instruction to the target device, and/or, the control center performs a preset control operation.

In an embodiment, the sequence of operations for generating and/or determining the response instruction of the target device corresponding to the preset event is optional. As another implementation, the processing method includes the following operations:
when a preset event occurs in the connection network, obtaining control judgment information;
when the control judgment information meets the control condition, generating and/or determining a response instruction of the preset event corresponding to the target device;
the control center sends the response instruction to the target device, and/or, the control center performs a preset control operation.

In an embodiment, the sequence of operations for determining whether the control determines whether the information meets the control condition is optional. As another implementation, the processing method includes the following operations:
obtaining control judgment information, when the control judgment information meets the control condition, if a preset event occurs in the connection network where it is located, generating and/or determining a response instruction corresponding to the target device of the preset event;
the control center sends the response instruction to the target device, and/or, the control center performs a preset control operation.

In an embodiment, the control center maintains the topology of the connection network, and/or the target device is directly or indirectly connected to the control center.

In an embodiment, when the preset event determination information meets the preset event determination condition, it is determined that a preset event occurs in the connection network where the location is located. The preset event determination information may include at least one of the following:
information content, environment information, time information, and location information of the preset event determination information.

In an embodiment, the information content may include at least one of the following: sender information, receiver information, information text content, and information display mode.

The environment information may include at least one of the following: external environment information and use environment information.

In an embodiment, the control judgment information may include at least one of the following:
user physiological information, connection information, use information, distance information, state information.

In an embodiment, the connection information may include at least one of the following: connection state information, network rate information.

The use information may include at least one of the following: traffic information, use habit information, currently used application information.

The state information may include at least one of the following: terminal state information, power information, and storage space information.

In an embodiment, the control judgment information meeting the control conditions may include at least one of the following:
the user physiological information meets the first preset condition;
the connection information meets the second preset condition;
the use information meets the third preset condition;
the distance information meets the fourth preset condition;
the application information meets the fifth preset condition;
the state information meets the sixth preset condition.

In an embodiment, the control center performing the preset control operation may include at least one of the following:
the control center immediately or delays or regularly or periodically sends the response instruction to the target device;
switching some or all of the control functions to the target device;
duplicating some or all of the control functions to the target device;
activating some or all of the control functions on the target device;
migrating or transferring or backing up the relevant data of the control center to the target device;
the control center outputs first prompt information, and/or controls a device directly or indirectly connected to the control center to output second prompt information.

In an embodiment, the relevant data further includes at least one first relevant data and/or at least one second relevant data, the operation of migrating or transferring or duplicating or backing up relevant data in the control center to the target device includes at least one of the following:
only backing up or transferring the first relevant data in the control center to the target device;
only backing up or transferring the second relevant data corresponding to the first relevant data in the control center to the target device;
in addition to backing up or transferring the first relevant data in the control center to the target device, also backing up or transferring the second relevant data corresponding to the first relevant data to the target device;
backing up or transferring the first relevant data and corresponding update data in the control center to the target device;
backing up or transferring the second relevant data and corresponding update data in the control center to the target device;
backing up or transferring the first relevant data and the corresponding update data in the control center, and the update data of the second relevant data to the target device.

In an embodiment, the operation of generating and/or determining a response instruction of the target device corresponding to the preset event when a preset event occurs in the connection network may include at least one of the following:
when a preset event occurs in the connection network, outputting prompt information for selecting a preset mode, and generating and/or determining the response instruction based on the selected preset mode;
when a preset event occurs in the connection network, according to the correspondence between the preset event and the response instruction, automatically triggering to generate and/or determine the response instruction;
when a preset event occurs in the connection network, generating and/or determining the response instruction based on the input control instruction.

The present application provides a processing method applied to a control center, including the following operations:
D00, when a preset event occurs in the connection network, obtaining control judgment information, and when the control judgment information meets the control condition, performing the operation D10;
D10, obtaining preset information and/or preset strategy;
D20, determining and/or performing a corresponding control strategy according to the preset information and/or the preset strategy.

In an embodiment, the control judgment information includes at least one of the following:
user physiological information;
connection information including at least one of the following: connection state information, network rate information;
use information including at least one of the following: traffic information, use habit information, and currently used application information;
distance information;
application information;
state information including at least one of the following: terminal state information, power information, and storage space information.

In an embodiment, the control judgment information meeting the control condition may include at least one of the following:
the control center is in a preset mode;
the user physiological information meets the physiological parameter preset rule;
the connection information meets the connection preset rule;
the use information described meets the use preset rule;
the distance information meets the distance preset rule;
the application information meets the application preset rule;
the state information meets the state preset rule.

In an embodiment, the preset information may include at least one of the following:
connection information including at least one of the following: connection state information, and network rate information;
state information including at least one of the following: terminal state information, power information, and storage space information;
environment information including at least one of the following: external environment information, and use environment information;
use information including at least one of the following: traffic information, use habit information, and currently used application information;
distance information; and
user physiological information.

In an embodiment, the operation D20 includes at least one of the following:
in response that the connection state information meets the first preset rule, performing the corresponding device control operation according to a first preset strategy;
in response that the network rate information meets the second preset rule, performing the corresponding device control operation according to a second preset strategy;
in response that the terminal state information meets the third preset rule, performing the corresponding device control operation according to a third preset strategy;
in response that the power information meets the fourth preset rule, performing the corresponding device control operation according to a fourth preset strategy;
in response that the storage space information meets the fifth preset rule, performing the corresponding device control operation according to a fifth preset strategy;
in response that the external environment information meets the sixth preset rule, performing the corresponding device control operation according to a sixth preset strategy;
in response that the use environment information meets the seventh preset rule, performing the corresponding device control operation according to a seventh preset strategy;
in response that the traffic information meets the eighth preset rule, performing the corresponding device control operation according to an eighth preset strategy;
in response that the use habit information meets the ninth preset rule, performing the corresponding device control operation according to a ninth preset strategy;
in response that the distance information meets the tenth preset rule, performing the corresponding device control operation according to a tenth preset strategy; and
in response that the user physiological information meets the eleventh preset rule, performing the corresponding device control operation according to an eleventh preset strategy.

In an embodiment, the device control operation may include at least one of the following:
establishing a direct or indirect connection between the control center and the target device;
switching some or all of the control functions to the target device;
duplicating some or all of the control functions to the target device;
activating some or all of the control functions on the target device;
migrating or transferring or backing up the relevant data of the control center to the target device;
the control center outputs first prompt information, and/or controls a device directly or indirectly connected to the control center to output second prompt information.

In an embodiment, the target device corresponds to the preset information, or the target device is determined by any of the following methods:
the first or last or any of the devices that initiated the connection;
the device with the strongest processing capability or the smoothest state, or any processing capability meets the requirements (such as CPU main frequency exceeds a certain preset value, such as 800M), or any state meets the conditions (such as the system resource usage does not exceed a certain threshold, such as 50%);
the device with the largest battery capacity or the most remaining power, or the current power value meets the conditions (such as the remaining power exceeds 20%);
the system default;
the device with the highest priority or any priority that meets the conditions (such as higher than or equal to the preset priority);
the device with the shortest or longest distance or any distance that meets the conditions (such as greater than or equal to the preset distance value);
the device with the highest security level or any security level that meets the conditions (such as higher than or equal to the preset security level); and
user choice or user habit.

In an embodiment, the relevant data further includes at least one first relevant data and/or at least one second relevant data, the operation of migrating or transferring or backing up relevant data in the control center to the target device includes at least one of the following:
only backing up or transferring the first relevant data in the control center to the target device;
only backing up or transferring the second relevant data corresponding to the first relevant data in the control center to the target device;
in addition to backing up or transferring the first relevant data in the control center to the target device, also backing up or transferring the second relevant data corresponding to the first relevant data to the target device;
backing up or transferring the first relevant data and corresponding update data in the control center to the target device;
backing up or transferring the second relevant data and corresponding update data in the control center to the target device;
backing up or transferring the first relevant data and the corresponding update data in the control center, and the update data of the second relevant data to the target device.

The present application provides a processing method applied to at least one control center, including the following operations:
D210, when a preset event occurs in the connection network, generating and/or determining a response instruction of the target device corresponding to the preset event, and/or obtaining preset information and/or a preset strategy;
D220, determining and/or performing a corresponding control strategy according to the response instruction and/or the preset information and/or the preset strategy.

In an embodiment, the sequence of generating and/or determining the response instruction of the target device corresponding to the preset event is optional. As another implementation, the processing method includes the following operations:
D210, when a preset event occurs in the connection network, obtaining preset information and/or a preset strategy; generating and/or determining a response instruction of the target device corresponding to the preset event;
D220, determining and/or performing a corresponding control strategy according to the response instruction, the preset information and/or the preset strategy.

In an embodiment, the operation D220 may include at least one of the following:
determining and/or performing a corresponding control strategy according to the response instruction and the preset information;
determining and/or performing a corresponding control strategy according to the response instruction and the preset strategy;
determining and/or performing a corresponding control strategy according to the preset information and the preset strategy; and
determining and/or performing a corresponding control strategy according to the response instruction, the preset information and the preset strategy.

In an embodiment, the operation of when a preset event occurs in the connection network, generating and/or determining a response instruction of the target device corresponding to the preset event includes at least one of the following:
when a preset event occurs in the connection network, outputting prompt information for selecting a preset mode, and generating and/or determining the response instruction based on the selected preset mode;
when a preset event occurs in the connection network, according to the correspondence between the preset event and the response instruction, automatically triggering to generate and/or determine the response instruction; and
when a preset event occurs in the connection network, generating and/or determining the response instruction based on the input control instruction.

In an embodiment, the present information may include at least one of the following:
connection information including at least one of the following: connection state information, and network rate information;
state information including at least one of the following: terminal state information, power information, and storage space information;
environment information including at least one of the following: external environment information, and use environment information;
use information including at least one of the following: traffic information, use habit information, and currently used application information;
distance information; and
user physiological information.

In an embodiment, the operation D220 includes at least one of the following:
obtaining control judgment information, and when the control judgment information meets a control condition, the control center sends the response instruction to the target device;
the control center performs a preset control operation;
in response that the connection state information meets the first preset rule, performing the corresponding device control operation according to a first preset strategy;
in response that the network rate information meets the second preset rule, performing the corresponding device control operation according to a second preset strategy;
in response that the terminal state information meets the third preset rule, performing the corresponding device control operation according to a third preset strategy;
in response that the power information meets the fourth preset rule, performing the corresponding device control operation according to a fourth preset strategy;
in response that the storage space information meets the fifth preset rule, performing the corresponding device control operation according to a fifth preset strategy;
in response that the external environment information meets the sixth preset rule, performing the corresponding device control operation according to a sixth preset strategy;
in response that the use environment information meets the seventh preset rule, performing the corresponding device control operation according to a seventh preset strategy;
in response that the traffic information meets the eighth preset rule, performing the corresponding device control operation according to an eighth preset strategy;
in response that the use habit information meets the ninth preset rule, performing the corresponding device control operation according to a ninth preset strategy;
in response that the distance information meets the tenth preset rule, performing the corresponding device control operation according to a tenth preset strategy; and
in response that the user physiological information meets the eleventh preset rule, performing the corresponding device control operation according to an eleventh preset strategy.

In an embodiment, the control judgment information may include at least one of the following:
user physiological information, connection information, use information, distance information, application information, and state information.

In an embodiment, the connection information may include at least one of the following: connection state information, and network rate information.

In an embodiment, the use information may include at least one of the following: traffic information, use habit information, and currently used application information.

In an embodiment, the state information may include at least one of the following: terminal state information, power information, and storage space information.

In an embodiment, the control judgment information meeting a control condition includes at least one of the following:
the user physiological information meets the first preset condition;
the connection information meets the second preset condition;
the use information meets the third preset condition;
the distance information meets the fourth preset condition;
the application information meets the fifth preset condition; and
the state information meets the sixth preset condition.

In an embodiment, the control center performs a preset control operation, or performs a corresponding device control operation, which may include at least one of the following:
the control center immediately or delays or regularly or periodically sends the response instruction to the target device;
switching some or all of the control functions to the target device;
duplicating some or all of the control functions to the target device;
activating some or all of the control functions on the target device;
migrating or transferring or backing up the relevant data of the control center to the target device;
the control center outputs first prompt information, and/or controls a device directly or indirectly connected to the control center to output second prompt information.

In an embodiment, the relevant data further includes at least one first relevant data and/or at least one second relevant data, the operation of migrating or transferring or backing up relevant data in the control center to the target device includes at least one of the following:
only backing up or transferring the first relevant data in the control center to the target device;
only backing up or transferring the second relevant data in the control center to the target device;
in addition to backing up or transferring the first relevant data in the control center to the target device, also backing up or transferring the second relevant data corresponding to the first relevant data to the target device;
backing up or transferring the first relevant data and corresponding update data in the control center to the target device;
backing up or transferring the second relevant data and corresponding update data in the control center to the target device; and
backing up or transferring the first relevant data and the corresponding update data in the control center, and the update data of the second relevant data to the target device.

In an embodiment, the target device corresponds to the preset information, or the target device is determined by any of the following methods:
the first or last or any of the devices that initiated the connection;
the device with the strongest processing capability or the smoothest state, or any processing capability meets the requirements (such as CPU main frequency exceeds a certain preset value, such as 800M), or any state meets the conditions (such as the system resource usage does not exceed a certain threshold, such as 50%);
the device with the largest battery capacity or the most remaining power, or the current power value meets the conditions (such as the remaining power exceeds 20%);
the system default;
the device with the highest priority or any priority that meets the conditions (such as higher than or equal to the preset priority);
the device with the shortest or longest distance or any distance that meets the conditions (such as greater than or equal to the preset distance value);
the device with the highest security level or any security level that meets the conditions (such as higher than or equal to the preset security level); and
user choice or user habit.

The present application provides a processing method applied to at least one control center, including the following operations:
when a preset event occurs in the connection network, generating and/or determining a response instruction corresponding to the preset event;
obtaining control judgment information, and determining a target device according to the control judgment information and/or preset rules; and
sending the response instruction to the target device immediately or with a delay or at regular intervals or periodically, and/or, the control center performs a preset control operation.

In an embodiment, the sequence of generating and/or determining the response instruction of the preset event corresponding to the target device is optional. As another implementation, the processing method includes the following operations:
when a preset event occurs in the connection network, obtaining control judgment information, and determining the target device according to the control judgment information and/or preset rules;
generating and/or determining a response instruction corresponding to the preset event;
sending the response instruction to the target device immediately or with a delay or at regular intervals or periodically, and/or, the control center performs a preset control operation.

In an embodiment, the operation of generating and/or determining a response instruction corresponding to the preset event when a preset event occurs in the connection network includes at least one of the following:
when a preset event occurs in the connection network, outputting prompt information for selecting a preset mode, and generating and/or determining the response instruction based on the selected preset mode;
when a preset event occurs in the connection network, according to the correspondence between the preset event and the response instruction, automatically triggering to generate and/or determine the response instruction; and
when a preset event occurs in the connection network, generating and/or determining the response instruction based on the input control instruction.

In an embodiment, the control judgment information includes at least one first control judgment information and/or at least one second control judgment information, and the first control judgment information and/or the second control judgment information includes at least one of the following:
user physiological parameter information, connection information, use information, distance information, application information, state information.

In an embodiment, the method includes at least one of the following:
the connection information including at least one of the following: connection state information, and network rate information;
the use information including at least one of the following: traffic information, use habit information, and currently used application information;
the state information including at least one of the following: terminal state information, power information, and storage space information.

In an embodiment, the determining the target device according to the control judgment information and the preset rule includes at least one of the following:
determining a target device according to the priority of the first control judgment information and/or the second control judgment information;
determining the first or last device or any device in the middle that initiates the connection as the target device;
determining the device with the strongest processing capability or the smoothest state, or any processing capability that meets the requirements (such as CPU main frequency exceeds a certain set value, such as 800M) or any state that meets the conditions (for example, the system resource occupancy rate does not exceed a certain threshold, such as 50%) as the target device;
determining the device with the largest battery capacity or the most remaining power or the current power value meets the conditions (such as the remaining power exceeds 20%) as the target device;
determining the device preset by the system as the target device;
determining the device with the highest priority or any priority that meets the conditions (such as higher than or equal to the preset priority) as the target device;
determining the device with the shortest or longest distance or any distance that meets the conditions (such as greater than or equal to the preset distance value) as the target device;
determining the device with the highest security level or any security level that meets the conditions (for example, higher than or equal to the preset security level) as the target device;
determining the target device based on user selection or user habits;
determining that the device whose physiological parameter information of the user meets the first preset condition is the target device;
determining that the device whose connection information meets the second preset condition is the target device;
determining that the device whose use information meets the third preset condition is the target device;
determining that the device whose distance information meets the fourth preset condition is the target device;
determining that the device whose application information meets the fifth preset condition is the target device;
determining that the device whose state information meets the sixth preset condition is the target device.

In an embodiment, the control center performs a preset control operation, including at least one of the following:
switching some or all of the control functions to the target device;
duplicating some or all of the control functions to the target device;
activating some or all of the control functions on the target device;
migrating or transferring or backing up the relevant data of the control center to the target device;
the control center outputs first prompt information, and/or controls a device directly or indirectly connected to the control center to output second prompt information.

In an embodiment, the relevant data further includes at least one first relevant data and/or at least one second relevant data, the operation of migrating or transferring or backing up relevant data in the control center to the target device includes at least one of the following:
only backing up or transferring the first relevant data in the control center to the target device;
only backing up or transferring the second relevant data in the control center to the target device;
in addition to backing up or transferring the first relevant data in the control center to the target device, also backing up or transferring the second relevant data corresponding to the first relevant data to the target device;
backing up or transferring the first relevant data and corresponding update data in the control center to the target device;
backing up or transferring the second relevant data and corresponding update data in the control center to the target device; and
backing up or transferring the first relevant data and the corresponding update data in the control center, and the update data of the second relevant data to the target device.

The present application provides a processing method applied to a processing device, including the following operations:
detecting whether receiving a preset event; and
when receiving the preset event, performing corresponding processing according to a preset strategy, and/or performing first processing on at least one first device directly connected to the processing device according to a first rule, and/or performing the second processing on at least one second device indirectly connected to the processing device according to the second rule.

In an embodiment, performing corresponding processing according to the preset strategy may be processing the processing device itself (such as connecting, disconnecting, sleeping, turning off the screen, shutting down, etc.), or processing information on the processing device (such as event conversion, event transmission, etc.).

In an embodiment, performing first processing on the first device may be processing the first device itself (such as connecting, disconnecting, sleeping, turning off the screen, shutting down, etc.), or processing information on the first device (such as event conversion, event transmission, etc.).

In an embodiment, performing second processing on the second device may be processing the second device itself (such as connecting, disconnecting, sleeping, turning off the screen, shutting down, etc.), or processing information on the second device (such as event conversion, event transmission, etc.).

In an embodiment, the preset event includes at least one of the following:
a first preset event occurs on the processing device;
a second preset event occurs on the first device, the first device being directly connected to the processing device;
a third preset event occurs on the second device, the second device being indirectly connected to the processing device.

In an embodiment, the processing device is in a connection network, the connection network includes the processing device, the first device and the second device, the first preset event or the second preset event or the third preset event includes at least one of the following:
at least one of the processing device, the first device and the second device is in or switched to a preset mode; the preset mode can be set by the system or set by the user or selected by the user, and the preset mode can be an intelligent mode or an interconnected mode or a linkage mode or a transfer mode, or the like;
at least one of the processing device, the first device and the second device is in or switched to a preset environment. The preset environment can be a preset time (such as day, night, working day, holiday, 7:00 am, 10:00 am, 11:00 pm, etc.), can also be a preset location (such as home, office, subway, bus, car, etc.), can be an environment where the brightness value meets the brightness threshold condition (such as dark, bright), or an environment where the noise value meets the noise threshold condition (such as noisy, quiet), or the like.
at least one of the processing device, the first device, and the second device detects that the user physiological information meets a first preset condition. The physiological information can be heart rate, blood oxygen, blood pressure, blood sugar, or the like. The heart rate is taken as an example, in an embodiment, if the heart rate is lower than 50 beats/minute or exceeds 120 beats/minute (i.e.: does not meet the normal heart rate range), it can be considered as meeting the first preset condition. The blood oxygen concentration is taken as an example again, in an embodiment, if it is lower than 90% (below the normal range), it can also be considered as meeting the first preset condition;
at least one of the processing device, the first device, and the second device detects that the user state meets a second preset condition. The user state can be sleep state, sitting state, exercise state (such as walking, running, swimming, climbing, cycling, etc.). The sleep state is taken as an example, in an embodiment, if the user's sleep state duration of the day or the average sleep state duration of the week, month, year, or user preset time period (such as the past 3 months, etc.) is lower than a preset threshold (such as 8 hours), it can be considered as meeting the second preset condition. The sitting state is taken as an example, in an embodiment, if the user continuously maintains the sitting state for more than a certain preset value (such as 1 hour), it can be considered as meeting the second preset condition;
at least one preset parameter (such as speed) detected by at least one of the processing device, the first device, and the second device meets a parameter condition (such as greater than or less than or equal to a preset parameter range);
at least one device is newly added in the connection network or the maximum number of connected devices has been reached;
at least one device in the connection network is disconnected or the minimum number of connected devices has been reached;
at least one of the processing device, the first device and the second device receives at least one message;
the power value of at least one of the processing device, the first device and the second device is lower than or equal to a preset power threshold;
the connection signal value of at least one of the processing device, the first device and the second device is less than or equal to a preset signal threshold;
the resource occupancy value of at least one of the processing device, the first device, and the second device is greater than or equal to a preset resource threshold;
the running state of at least one of the processing device, the first device and the second device is stuck or not smooth;
the preset application and/or preset function of at least one of the processing device, the first device, and the second device is turned on;
the security level of at least one of the processing device, the first device, and the second device is less than or equal to a preset security level threshold;
the working duration of at least one of the processing device, the first device and the second device is greater than or equal to a preset working duration threshold;
at least one of the processing device, the first device and the second device is at a preset position.

In an embodiment, the processing device stores a device information table corresponding to the connection network, and the device information table is used to indicate all device information of the connection network.

In an embodiment, at least one of the following is also included:
the device information table is also stored on the first device and/or the second device;
the device information includes at least one of device identification information, device state information, and device control information.

In an embodiment, at least one of the following is included:
the device identification information includes at least one of device manufacturer, device type, device name, and device address;
the device state information includes at least one of running state, power information, fault information, environment information, device safety level, device working duration, device operating parameters, and device location;
the device control information includes at least one of connection information and control strategy.

In an embodiment, the connection information includes at least one of the following: connection user name information, connection password information, connection time and/or location information, connection duration and/or rate information, and connection fee information.

In an embodiment, the corresponding processing according to the preset strategy includes at least one of the following:
if the processing device has a control information table, updating the control information corresponding to the preset event into the control information table;
if the processing device does not have the control information table, generating and/or determining the control information table, and updating the control information corresponding to the preset event into the control information table;
converting the preset event to obtain at least one new event;
the processing device is disconnected from the connection network;
the processing device is connected to other networks.

In an embodiment, the method further includes at least one of the following:
if there is at least one first device directly connected to the processing device, sending the control information table, so that the first device updates a local control information table according to the control information table;
if there is at least one first device directly connected to the processing device, and the preset event does not occur at the first device, the processing device sends the preset event, so that the first device generates or updates the local control information table according to the preset event;
if there is at least one first device directly connected to the processing device, there is at least one second device directly connected to the first device but indirectly connected to the processing device, and the predetermined event does not occur at the second device, the processing device sends the preset event, so that the second device generates or updates the local control information table according to the preset event forwarded by the first device;
if there is at least one first device directly connected to the processing device, converting the preset event into at least one new first event; and
if there is at least one second device indirectly connected to the processing device, converting the preset event into at least one new second event.

In an embodiment, the first processing and/or the second processing includes at least one of the following:
transmitting or updating the preset event, transmitting the preset event after conversion, disconnecting the processing device from a connection network, connecting the processing device to another network, the processing device and at least one of the first device and the second device open preset applications and/or services, the processing device and at least one of the first device and the second device close preset applications and/or services.

In an embodiment, the preset application can be a system application (such as address book, SMS, dial pad, camera, system settings, etc.), or a general application (such as WeChat, QQ, sports App, etc.), and the preset service may be a system service (such as network connection, Bluetooth, WIFI, etc.), or a general service (such as search, privacy security, antivirus, listening to music, etc.).

In an embodiment, the method further includes at least one of the following:
the first rule is: transmitted to all the first devices, or the preset first devices, or the authenticated first devices;
the second rule is: transmitted to all the second devices, or the preset second devices, or the authenticated second devices.

In an embodiment, the method further includes at least one of the following:
outputting operation options and/or prompt information corresponding to the preset event on the processing device;
outputting operation options and/or prompt information corresponding to the preset event on at least one first device directly connected to the processing device; and
outputting operation options and/or prompt information corresponding to the preset event on at least one second device indirectly connected to the processing device.

In an embodiment, the method further includes: receiving operation information for the operation option, and updating the control information and/or transmitting the preset event according to the operation information.

In an embodiment, if there are at least two preset events, the method also includes at least one of the following:
sorting the preset events according to a preset sorting strategy, and then processing them sequentially;
if the preset events are triggered by different devices, processing the preset events in parallel by different trigger devices; and
if the preset event is triggered by the same device, transferring at least one preset event to at least one first device directly connected to the processing device or at least one second device indirectly connected to the processing device for processing according to the transfer strategy.

In an embodiment, the preset sorting strategy includes at least one of the following: according to the chronological order of occurrence of the preset events, according to the priority of the preset events, and according to the priority of devices triggering the preset events.

In an embodiment, the method includes:
if the control information table of the processing device is updated, at least one first device directly connected to the processing device and/or at least one second device indirectly connected to the processing device synchronously or asynchronously updates the update information corresponding to the preset event. The specific update implementation may be by sending all the contents of the control information table of the processing device to the first device and/or the second device for updating, and may also be that only part (such as the change part, and the difference part with the control information table of the first device and/or the second device) of the content of the control information table of the processing device is sent to the first device and/or the second device for updating.

In an embodiment, the control information table and/or the update of the control information table are downloaded from a server; and/or the control information table and/or the update of the control information table are uploaded to the server synchronously.

In an embodiment, the operation of synchronously or asynchronously updating the update information corresponding to the preset event includes:
broadcasting the update information, so that the first device and/or the second device synchronize the update information;
receiving completed information update feedback sent by the first device and/or the second device; and
stopping broadcasting if all the first devices and/or the second devices have completed updating information.

In an embodiment, the operation of synchronously or asynchronously updating update information corresponding to the preset event includes:
sending the update information to at least one the first device and/or at least one the second device;
receiving completed information update feedback sent by the first device and/or the second device; and
if the first device and/or the second device have completed updating information, sending the update information to another first device or another second device, until all the first devices and/or the second devices complete information update.

In an embodiment, the present application further provides a processing method applied to a processing device, including the following operations:
detecting whether a preset event meets a first preset rule, the preset event includes at least one first event and/or at least one second event;
if so, performing corresponding processing according to a preset strategy, and/or performing preset processing on at least one other device connected and/or associated with the processing device according to a second preset rule.

In an embodiment, associated with the processing device, including at least one of the following:
sharing an account (such as an iCloud account similar to an Apple device) with the processing device;
there is a binding or authorization relationship with the processing device; and
belonging to the same group as the processing device.

In an embodiment, the at least one other device may include at least one first device directly connected to the processing device, and/or at least one second device indirectly connected to the processing device.

In an embodiment, performing corresponding processing according to the preset strategy may be processing the processing device itself (such as connecting, disconnecting, hibernating, turning off the screen, shutting down, etc.), and may also be processing the information on the processing device (such as event conversion, event transmission, etc.).

In an embodiment, performing preset processing on other devices may be processing on other devices themselves (such as connecting, disconnecting, hibernating, turning off the screen, shutting down, etc.), and may also be processing the information on other devices (such as event conversion, event transmission, etc.).

In an embodiment, whether the first preset rule is met includes at least one of the following:
the first event and/or the second event is triggered by the processing device;
the at least one other device includes at least one first device directly connected to the processing device, and/or includes at least one second device indirectly connected to the processing device, the first event and/or the second event are triggered by the first device and/or the second device;
the time and/or location triggered by the first event and/or the second event meet a first preset condition;
the order in which the first event and/or the second event are triggered meets a second preset condition;
the priority of the first event and/or the second event meets a third preset condition;
the content information of the first event and/or the second event meets a fourth preset condition.

In an embodiment, performing the corresponding processing according to the preset strategy includes at least one of the following:
if the processing device has a control information table, updating the control information corresponding to the preset event into the control information table;
if the processing device does not have a control information table, generating and/or determining the control information table, and then updating the control information corresponding to the preset event into the control information table;
converting the preset event to obtain at least one new event;
the processing device is disconnected from the connection network; and
the processing device is connected to other networks.

In an embodiment, the method further includes at least one of the following:
if there is at least one first device directly connected to the processing device, sending the control information table, so that the first device updates a local control information table according to the control information table;
if there is at least one first device directly connected to the processing device, and the preset event does not occur at the first device, the processing device sends the preset event, so that the first device generates or updates the local control information table according to the preset event;
if there is at least one first device directly connected to the processing device, there is at least one second device directly connected to the first device but indirectly connected to the processing device, and the predetermined event does not occur at the second device, the processing device sends the preset event, so that the second device generates or updates the local control information table according to the preset event forwarded by the first device;
if there is at least one first device directly connected to the processing device, converting the preset event into at least one new third event; and
if there is at least one second device indirectly connected to the processing device, converting the preset event into at least one new fourth event.

In an embodiment, the performing preset processing on at least one other device connected to the processing device according to the second preset rule includes at least one of the following:
performing a first process on at least one first device directly connected to the processing device according to a first rule;
performing a second processing on at least one second device indirectly connected to the processing device according to a second rule.

In an embodiment, the first processing and/or the second processing includes at least one of the following:
transmitting or updating the preset event, transmitting the preset event after conversion, disconnecting the processing device from a connection network, connecting the processing device to another network, the processing device and at least one of the first device and the second device open preset applications and/or services, the processing device and at least one of the first device and the second device close preset applications and/or services.

In an embodiment, the preset application can be a system application (such as address book, SMS, dial pad, camera, system settings, etc.), or a general application (such as WeChat, QQ, sports App, etc.), and the preset service may be a system service (such as network connection, Bluetooth, WIFI, etc.), or a general service (such as search, privacy security, antivirus, listening to music, etc.).

In an embodiment, if any device (which may be the processing device, the first device or the second device) connected to the network is within a preset time period (such as 12:00 am to 3:00 am), it can be regarded that a preset event occurs. The processing device (such as a mobile phone) can disconnect from the network or enter power saving mode or enter sleep mode or enter silent mode. The first device (such as a watch) can enter the off-screen state or start the sleep monitoring service (such as monitoring the user's heart rate, blood oxygen, etc.). The second device (such as a TV) can be hibernated or even powered off. The processing device and/or the first device and/or the second device perform different processing by querying the processing strategy corresponding to the preset event in the control information table from the local or the server. Through this implementation manner, the intelligent linkage between devices can be strengthened, and power consumption can be reduced, thereby improving user experience.

In an embodiment, if the user of any device connected to the network (which may be a processing device, the first device or the second device, etc.) switches to a preset state (such as an exercise state), it can be regarded as a preset event occurs. The processing device (such as a mobile phone) can turn off the screen or enter the power saving mode or enter the sports mode or enter the outdoor mode or open the sports App (such as Keep software). The first device (such as a watch) can open the sports app or enter the off-screen state or open the sports monitoring service (such as monitoring the user's heart rate, blood oxygen, step frequency, speed, location information, or the like. If the corresponding indicator is too high and abnormal, an early warning prompt can be output locally and/or on the processing device and/or the second device). The second device (such as earphones) can automatically connect to the processing device or automatically open the music app or automatically play the safety guidance content related to the exercise state or automatically play a certain song (which can be set by the system or automatically determined according to user habits or selected by the user). In an embodiment, the processing device and/or the first device and/or the second device perform different processing by querying the processing strategy corresponding to the preset event in the control information table from the local or the server. Through this implementation manner, the intelligent linkage between devices can be enhanced, security can be enhanced, power consumption can be reduced, and user experience can be improved.

In an embodiment, the method further includes at least one of the following:
the first rule is: transmitted to all the first devices, or the preset first devices, or the authenticated first devices;
the second rule is: transmitted to all the second devices, or the preset second devices, or the authenticated second devices.

In an embodiment, the method further includes at least one of the following:
outputting operation options and/or prompt information corresponding to the preset event on the processing device;
outputting operation options and/or prompt information corresponding to the preset event on at least one first device directly connected to the processing device; and
outputting operation options and/or prompt information corresponding to the preset event on at least one second device indirectly connected to the processing device.

In an embodiment, the method further includes: receiving operation information for the operation option, and updating the control information and/or transmitting the preset event according to the operation information.

In an embodiment, performing the corresponding processing according to the preset strategy includes at least one of the following:
sorting the first event and the second event according to a preset sorting strategy, and then processing them sequentially;
if the first event and the second event are triggered by different devices, processing the preset events in parallel by different trigger devices; and
if the first event and the second event are triggered by the same device, transferring at least one preset event to at least one first device directly connected to the processing device or at least one second device indirectly connected to the processing device for processing according to the transfer strategy.

In an embodiment, the preset sorting strategy includes at least one of the following: according to the chronological order of occurrence of the preset events, according to the priority of the preset events, and according to the priority of devices triggering the preset events.

In an embodiment, the method includes:
if the control information table of the processing device is updated, at least one first device directly connected to the processing device and/or at least one second device indirectly connected to the processing device synchronously or asynchronously updates update information corresponding to the first event and/or second event. The specific update implementation may be by sending all the contents of the control information table of the processing device to the first device and/or the second device for updating, and may also be sending only part (such as the change part, and the difference part with the control information table of the first device and/or the second device) of the content of the control information table of the processing device to the first device and/or the second device for updating.

In an embodiment, the control information table and/or the update of the control information table are downloaded from a server; and/or the control information table and/or the update of the control information table are uploaded to the server synchronously.

In an embodiment, the operation of synchronously or asynchronously updating the update information corresponding to the first event and/or the second event includes:
broadcasting the update information, so that the first device and/or the second device synchronize the update information;
receiving completed information update feedback sent by the first device and/or the second device; and
stopping broadcasting if all the first devices and/or the second devices have completed updating information.

In an embodiment, the operation of synchronously or asynchronously updating update information corresponding to the first event and/or the second event includes:
sending the update information to at least one the first device and/or at least one the second device;
receiving completed information update feedback sent by the first device and/or the second device; and
if the first device and/or the second device have completed updating information, sending the update information to another first device or another second device, until all the first devices and/or the second devices complete information update.

In an embodiment, the present application further provides a processing method applied to a processing device, including the following operations:
F10, obtaining first preset information and/or second preset information, the first preset information is provided by at least one first device directly connected to the processing device, and the second preset information is provided by at least one second device indirectly connected to the processing device;
F20, processing the first preset information and/or the second preset information according to a preset rule to obtain target information;
F30, sending the target information, so that at least one of the first device, the second device, and at least one controlled device performs corresponding processing.

In an embodiment, the preset rule is determined by the content and/or type of the first preset information and/or the second preset information.

In an embodiment, the first device and the second device are directly or indirectly connected.

In an embodiment, the method includes at least one of the following:
the first preset information includes at least one of the following: first user physiological parameters, first device application information, first device system information, first device information, first environment information, first device operation information; and
the second preset information includes at least one of the following: second user physiological parameters, second device application information, second device system information, second device information, second environment information, and second device operation information.

In an embodiment, the method includes at least one of the following:
a third device is directly or indirectly connected to the first device, the first preset information also includes at least one of the following: the third user physiological parameters, the third device application information, the third device system information, the third device information, the third environment information, and the third device operation information provided by the third device;
a fourth device is directly or indirectly connected to the second device, the second preset information also includes at least one of the following: the fourth user physiological parameters, fourth device application information, fourth device system information, fourth device information, fourth environment information, and fourth device operation information provided by the fourth device.

In an embodiment, the method includes:
the first user physiological parameter, the second user physiological parameter, the third user physiological parameter or the fourth user physiological parameter includes at least one of physiological parameters and exercise parameters;
the first device application and/or service information, the second device application and/or service information, the third device application and/or service information, or the fourth device application and/or service information include at least one of application and/or service type, application and/or service name, application and/or service state, application and/or service data;
the first device system information, the second device system information, the third device system information or the fourth device system information includes at least one of system type, system name, system state, and system data;
the first device information, the second device information, the third device information or the fourth device information includes at least one of device type, device name, device state, and device data;
the first environment information, the second environment information, the third environment information or the fourth environment information includes at least one of time, location, brightness, noise, altitude, road slope, weather, temperature, humidity, air pressure, wind level, and wind direction; and
the first device operation information, the second device operation information, the third device operation information or the fourth device operation information includes at least one of gesture information, voice information, sensing information, and touch operation information.

In an embodiment, the operation F20 includes:
if the first preset information and/or the second preset information is at least one of physiological parameters and exercise parameters, analyzing the first preset information and/or the second preset information according to preset health rules to obtain health control information;
if the first preset information and/or the second preset information is at least one of application and/or service type, application and/or service name, application and/or service state, application and/or service data, analyzing the first preset information and/or the second preset information according to preset application rules to obtain application control information;
if the first preset information and/or the second preset information is at least one of system type, system name, system state, and system data, analyzing the first preset information and/or the second preset information according to preset system rules to obtain system control information;
if the first preset information and/or the second preset information is at least one of device type, device name, device state, and device data, analyzing the first preset information and/or the second preset information according to preset device rules to obtain device control information;
if the first preset information and/or the second preset information is at least one of time, location, brightness, noise, altitude, road slope, weather, temperature, humidity, air pressure, wind level, and wind direction, analyzing the first preset information and/or the second preset information according to preset environmental rules to obtain environment control information;
if the first device operation information, the second device operation information, the third device operation information or the fourth device operation information includes at least one of gesture information, voice information, sensing information, and touch operation information, analyzing the first preset information and/or the second preset information according to preset operation rules to obtain operation control information; and
if the first device operation information, the second device operation information, the third device operation information or the fourth device operation information includes at least one of gesture information, voice information, sensing information, and touch operation information, analyzing the first preset information and/or the second preset information according to preset operation rules to obtain operation control information.

In an embodiment, before the operation F10, the method includes at least one of the following:
outputting prompt information on the first device to prompt the processing device to obtain first preset information;
outputting prompt information on the second device to prompt the processing device to obtain second preset information.

In an embodiment, after the outputting the prompt information, the method further includes: receiving a confirmation operation, and determining whether to acquire the first preset information and/or the second preset information according to the confirmation operation.

In an embodiment, before the operation F20, the method further includes:
determining whether to process the first preset information and/or the second preset information according to a preset rule.

In an embodiment, the determining whether to process the first preset information and/or the second preset information according to the preset rule includes at least one of the following:
if at least one parameter value in the first preset information and/or the second preset information meets a preset rule, processing the first preset information and/or the second preset information;
if the resources consumed by processing the first preset information and/or the second preset information are less than or equal to a preset resource threshold or remaining resources of the processing device, processing the first preset information and/or the second preset information.

In an embodiment, at least one parameter value in the first preset information and/or the second preset information meets the preset rule, including at least one of the following:
the user physiological parameter value meets the first preset condition;
the application information on the device corresponding to the preset information and/or at least one other device directly or indirectly connected to the corresponding device meets the second preset condition;
the system information of the device corresponding to the preset information and/or at least one other device directly or indirectly connected to the corresponding device meets the third preset condition;
the device information of the device corresponding to the preset information and/or at least one other device directly or indirectly connected to the corresponding device meets the fourth preset condition;
the environment information of the device corresponding to the user or the preset information and/or at least one other device directly or indirectly connected to the corresponding device meets the fifth preset condition;
the device operation information of the device corresponding to the preset information and/or at least one other device directly or indirectly connected to the corresponding device meets the sixth preset condition.

In an embodiment, the user physiological parameter value meets the first preset condition, including at least one of the following:
the user physiological parameter value is less than or equal to the first preset physiological parameter threshold;
the user physiological parameter value is greater than the second preset physiological parameter threshold.

In an embodiment, the first preset physiological parameter threshold and the second preset physiological parameter threshold may be the same or different.

In an embodiment, the user physiological parameters include at least one of the following: heart rate, blood pressure, pulse, blood oxygen, blood sugar, and sweating amount.

In an embodiment, the application information on the device corresponding to the preset information and/or at least one other device directly or indirectly connected to the corresponding device meets a second preset condition, including at least one of the following:
if the application and/or service information includes the application and/or service type, and the application and/or service type belongs to the preset application and/or service type
   (such as whitelists, blacklists, VIP applications, confidential or hidden or secure applications, etc.);
if the application and/or service information includes the application and/or service name, and the application and/or service name meets the preset name rules (such as the default keywords, etc.);
if the application and/or service information includes the application and/or service state, and the application and/or service state belongs to the preset state (such as foreground, background, freezing, etc.);
if the application and/or service information includes application and/or service data, and the content and/or type of the application and/or service data meet the preset application and/or service data requirements (for example, the data content includes specific keywords, or the data type belongs to application configuration parameters or multimedia data, etc.).

In an embodiment, the system information of the device corresponding to the preset information and/or at least one other device directly or indirectly connected to the corresponding device meets a third preset condition, including at least one of the following:
if the system information includes the system type, and the system type belongs to the default system type (such as iOS, Android, Linux, Windows, Hongmeng, padOS, MacOS or watchOS, etc.);
if the system information includes a system name, and the system name meets the default name rules (such as including preset keywords, etc.);
if the system information includes the system state, and the system state belongs to the default system state (such as stuck, smooth, sleep, screen off, screen on, screen lock, power saving, do not disturb, meeting, sports, navigation, games, entertainment, etc.);
if the system information includes system data, and the content and/or type of the system data meet the preset system data requirements (for example, the data content includes specific keywords, and the data type belongs to system configuration data, application data or multimedia data, etc.).

In an embodiment, the device information of the device corresponding to the preset information and/or at least one other device directly or indirectly connected to the corresponding device meets a fourth preset condition, including at least one of the following:
if the device information includes the device type, and the device type belongs to the default device type (such as mobile phones, watches, bracelets, earphones, speakers, TVs, cars, fixed low-power devices, etc.);
if the device information includes a device name, and the device name meets the default name rules (such as default keywords, etc.);
if the device information includes the device state, and the device state belongs to the preset state (such as stuck, smooth, sleep, screen off, screen on, screen lock, power saving, do not disturb, meeting, exercise, driving, running, navigation, games, entertainment, etc.);
if the device information includes device data, and the content and/or type of the device data meet the preset device data requirements (if the data content includes specific keywords, and if the data type belongs to device system configuration data or device application configuration data or device system data or device application data or multimedia data, etc.).

In an embodiment, the environment information of the device corresponding to the user or preset information and/or at least one other device directly or indirectly connected to the corresponding device meets the fifth preset condition, including at least one of the following:
if the environment information includes time, and the time meets the preset time requirements (for example, the time value belongs to the preset time value, or the time value is within the preset time range, etc.);
if the environment information includes a location, and the location meets the preset location requirements (for example, the geographic location corresponding to the location belongs to the preset geographic location, or the geographic location is within the range of the preset geographic location, etc.);
if the environment information includes brightness, and the brightness meets the preset brightness requirements (for example, the brightness value belongs to the preset brightness value, or the brightness value is within the preset brightness range, etc.);
if the environment information includes noise, and the noise meets the preset noise requirements (for example, the noise value belongs to the preset noise value, or the noise value is within the preset noise range, etc.);
if the environment information includes altitude, and the altitude meets the preset altitude requirements (for example, the altitude is at the preset altitude, or the altitude is within the preset altitude range, etc.);
if the environment information includes the road slope, and the road slope meets the preset road slope requirements (for example, the road slope is at the preset road slope value, or the road slope is within the preset road slope range, etc.);
if the environment information includes weather, and the weather meets the preset weather requirements (for example, the weather is the same as or different from the preset weather, and specific examples of weather include sunny, cloudy, rainy, etc.);
if the environment information includes temperature, and the temperature meets the preset temperature requirements (such as the temperature is at the preset temperature value, or the temperature is within the preset temperature range, etc.);
if the environment information includes humidity, and the humidity meets the preset humidity requirements (for example, the humidity is at the preset humidity value, or the humidity is within the preset humidity range, etc.);
if the environment information includes air pressure, and the air pressure meets the preset air pressure requirements (for example, the air pressure is at the preset air pressure value, or the air pressure is within the preset air pressure range, etc.);
if the environment information includes a wind level, and the wind level meets the preset wind level requirements (for example, the wind level is at the preset wind level value, or the wind level is within the preset wind level range, etc.);
if the environment information includes the wind direction, and the wind direction meets the preset wind direction requirements (for example, the wind direction is the same as or different from the preset wind direction value, and specific examples of the wind direction are east wind, north wind, northeast wind, etc.).

In an embodiment, the device operation information of the device corresponding to the preset information and/or at least one other device directly or indirectly connected to the corresponding device meets the sixth preset condition, including at least one of the following:
if the device operation information includes gesture information, and the gesture information meets the preset gesture operation requirements;
if the device operation information includes voice information, and the voice information meets the preset voice control requirements;
if the device operation information includes sensing information, and the sensing information meets the preset sensing information requirements;
if the device operation information includes touch operation information, and the touch operation information meets the preset touch operation information requirements.

In an embodiment, the operation F20 includes:
determining a processing rule according to the type of preset information, and processing the preset information according to the processing rule to obtain target information.

In an embodiment, the preset information type includes at least one of the following: health data type, application and/or service data type, system data type, device data type, environment data type, and operation data type.

In an embodiment, processing the preset information according to the processing rule to obtain target information includes at least one of the following:
if the type of the preset information is a health data type, analyzing the preset information according to preset health rules to obtain health control information;
if the type of the preset information is an application and/or service data type, analyzing the preset information according to preset application rules to obtain application control information;
if the type of the preset information is a system data type, analyzing the preset information according to preset system rules to obtain system control information;
if the type of the preset information is a device data type, analyzing the preset information according to a preset device rule to obtain device control information;
if the type of the preset information is an environment data type, analyzing the preset information according to preset environmental rules to obtain environment control information;

If the type of the preset information is an operation data type, analyzing the preset information according to a preset operation rule to obtain device operation control information.

In an embodiment, the method further includes at least one of the following:
the health data type includes at least one of physiological parameters and exercise parameters;
the application and/or service data type includes at least one of application and/or service type, application and/or service name, application and/or service state, and application and/or service data;
the system data type includes at least one of system type, system name, system state, and system data;
the device data type includes at least one of device type, device name, device state, and device data;
the type of environment data includes at least one of time, location, brightness, noise, altitude, road slope, weather, temperature, humidity, air pressure, wind level, and wind direction;
the type of operation data includes at least one of gesture information, voice information, sensing information, and touch operation information.

In an embodiment, when analyzing the preset information, the analysis data further includes information of the processing device.

In an embodiment, when analyzing the first preset information and/or the second preset information, the analysis data further includes information of the processing device.

In an embodiment, the operation F30 further includes:
the processing device performs corresponding processing according to a preset strategy.

The present application further provides a processing method applied to a processing device, including the following operations:
F100, obtaining target information, the target information is obtained by the processing device processing first preset information provided by at least one first device and/or second preset information provided by at least one second device based on a first preset rule;
F200, detecting whether the reference information of the first device and/or the second device meets a second preset rule; and
F300, when the reference information of the first device and/or the second device meets a second preset rule, sending the target information, so that at least one of the first device, the second device, and at least one controlled device performs corresponding processing.

In an embodiment, the first preset rule is determined by the content and/or type of the first preset information and/or the second preset information.

In an embodiment, the second preset rule is determined by content and/or type of reference information of the first device and/or the second device.

In an embodiment, the reference information includes at least one of the following: device state information, device function information, device parameter information, and device application information.

In an embodiment, the method further includes at least one of the following:
the first preset information includes at least one of the following: first user physiological parameters, first device application information, first device system information, first device information, first environment information, first device operation information;
the second preset information includes at least one of the following: second user physiological parameters, second device application information, second device system information, second device information, second environment information, and second device operation information.

In an embodiment, the method includes at least one of the following:
the third device is directly or indirectly connected to the first device, and the first preset information further includes at least one of the following: the third user physiological parameters, the third device application information, the third device system information, the third device information, the third environment information, and the third device operation information provided by the third device;
the fourth device is directly or indirectly connected to the second device, and the second preset information further includes at least one of the following: the fourth user physiological parameters, the fourth device application information, the fourth device system information, the fourth device information, the fourth environment information, and the fourth device operation information provided by the fourth device.

In an embodiment, the method includes:
the first user physiological parameter, the second user physiological parameter, the third user physiological parameter or the fourth user physiological parameter includes at least one of physiological parameters and exercise parameters;
the first device application and/or service information, the second device application and/or service information, the third device application and/or service information, or the fourth device application and/or service information include at least one of application and/or service type, application and/or service name, application and/or service state, application and/or service data;
the first device system information, the second device system information, the third device system information or the fourth device system information includes at least one of system type, system name, system state, and system data;
the first device information, the second device information, the third device information or the fourth device information includes at least one of device type, device name, device state, and device data;
the first environment information, the second environment information, the third environment information or the fourth environment information includes at least one of time, location, brightness, noise, altitude, road slope, weather, temperature, humidity, air pressure, wind level, and wind direction; and
the first device operation information, the second device operation information, the third device operation information or the fourth device operation information includes at least one of gesture information, voice information, sensing information, and touch operation information.

In an embodiment, the target information is obtained by the processing device processing first preset information provided by at least one first device and/or second preset information provided by at least one second device based on a first preset rule, including:
if the first preset information and/or the second preset information is at least one of physiological parameters and exercise parameters, analyzing the first preset information and/or the second preset information according to preset health rules to obtain health control information;
if the first preset information and/or the second preset information is at least one of application and/or service type, application and/or service name, application and/or service state, application and/or service data, analyzing the first preset information and/or the second preset information according to preset application rules to obtain application control information;
if the first preset information and/or the second preset information is at least one of system type, system name, system state, and system data, analyzing the first preset information and/or the second preset information according to preset system rules to obtain system control information;
if the first preset information and/or the second preset information is at least one of device type, device name, device state, and device data, analyzing the first preset information and/or the second preset information according to preset device rules to obtain device control information;
if the first preset information and/or the second preset information is at least one of time, location, brightness, noise, altitude, road slope, weather, temperature, humidity, air pressure, wind level, and wind direction, analyzing the first preset information and/or the second preset information according to preset environmental rules to obtain environment control information;
if the first preset information and/or the second preset information is at least one of gesture information, voice information, sensing information, and touch operation information, analyzing the first preset information and/or the second preset information according to preset operation rules to obtain operation control information.

In an embodiment, the first device and the second device are directly or indirectly connected.

In an embodiment, the operation F300 further includes: sending the target information to a preset fifth device, so that the fifth device performs preset processing.

In an embodiment, the preset processing includes:
outputting prompt information corresponding to the target information through the fifth device.

The present application further provides a processing method applied to a first device directly connected to a processing device, including the following operations:
F1, providing first preset information in response to the preset information acquisition request of the processing device;
F2, receiving target information corresponding to the first preset information, the target information is obtained by processing the first preset information and/or the second preset information according to preset rules by the processing device, the second preset information is provided by at least one second device indirectly connected to the processing device;
F3, performing corresponding processing according to the target information.

In an embodiment, the preset rule is determined by the content and/or type of the first preset information and/or the second preset information.

In an embodiment, the method includes at least one of the following:
the first preset information includes at least one of the following: first user physiological parameters, first device application information, first device system information, first device information, first environment information, first device operation information;
the second preset information includes at least one of the following: second user physiological parameters, second device application information, second device system information, second device information, second environment information, and second device operation information.

In an embodiment, the method includes at least one of the following:
the third device is directly or indirectly connected to the first device, and the first preset information further includes at least one of the following: the third user physiological parameters, the third device application information, the third device system information, the third device information, the third environment information, and the third device operation information provided by the third device;
the fourth device is directly or indirectly connected to the second device, and the second preset information further includes at least one of the following: the fourth user physiological parameters, the fourth device application information, the fourth device system information, the fourth device information, the fourth environment information, and the fourth device operation information provided by the fourth device.

In an embodiment, the method includes:
the first user physiological parameter, the second user physiological parameter, the third user physiological parameter or the fourth user physiological parameter includes at least one of physiological parameters and exercise parameters;
the first device application and/or service information, the second device application and/or service information, the third device application and/or service information, or the fourth device application and/or service information include at least one of application and/or service type, application and/or service name, application and/or service state, application and/or service data;
the first device system information, the second device system information, the third device system information or the fourth device system information includes at least one of system type, system name, system state, and system data;
the first device information, the second device information, the third device information or the fourth device information includes at least one of device type, device name, device state, and device data;
the first environment information, the second environment information, the third environment information or the fourth environment information includes at least one of time, location, brightness, noise, altitude, road slope, weather, temperature, humidity, air pressure, wind level, and wind direction; and
the first device operation information, the second device operation information, the third device operation information or the fourth device operation information includes at least one of gesture information, voice information, sensing information, and touch operation information.

In an embodiment, the target information is obtained by the processing device processing first preset information provided by at least one first device and/or second preset information provided by at least one second device based on a first preset rule, including:
if the first preset information and/or the second preset information is at least one of physiological parameters and exercise parameters, analyzing the first preset information and/or the second preset information according to preset health rules to obtain health control information;
if the first preset information and/or the second preset information is at least one of application and/or service type, application and/or service name, application and/or service state, application and/or service data, analyzing the first preset information and/or the second preset information according to preset application rules to obtain application control information;
if the first preset information and/or the second preset information is at least one of system type, system name, system state, and system data, analyzing the first preset information and/or the second preset information according to preset system rules to obtain system control information;
if the first preset information and/or the second preset information is at least one of device type, device name, device state, and device data, analyzing the first preset information and/or the second preset information according to preset device rules to obtain device control information;
if the first preset information and/or the second preset information is at least one of time, location, brightness, noise, altitude, road slope, weather, temperature, humidity, air pressure, wind level, and wind direction, analyzing the first preset information and/or the second preset information according to preset environmental rules to obtain environment control information;
if the first preset information and/or the second preset information is at least one of gesture information, voice information, sensing information, and touch operation information, analyzing the first preset information and/or the second preset information according to preset operation rules to obtain operation control information.

In an embodiment, before the operation F3, the method further includes:
outputting prompt information corresponding to the target information;
if the cancel execution instruction corresponding to the prompt information is not received (it may not be received within a preset time), performing the operation F3; if the cancel execution instruction is received, not performing the operation F3 and/or outputting the corresponding prompt information (the prompt information output mode can be interface display or voice broadcast or light prompt, etc.).

In an embodiment, the method further includes:
determining whether the historical number of consecutive receptions of the cancel execution instruction is less than or equal to the preset number of times;
if so, when receiving the target information, outputting the prompt information corresponding to the target information.

In an embodiment, the method also includes:
when the target information meets the preset safety condition, determining whether the historical number of consecutive reception times of the cancel execution instruction is less than or equal to the preset number.

In an embodiment, the method includes:
obtaining update data corresponding to the first preset information and/or second preset information, processing the update data according to preset rules, and obtaining updated target information;
performing the corresponding processing only if the updated target information is the same as or different from the target information.

In an embodiment, before the operation F3, the method further includes:
when the target information meets a preset requirement, performing the corresponding processing.

The present application further provides a processing method applied to a second device indirectly connected to a processing device, including the following operations:
F1000, providing second preset information in response to the preset information acquisition request of the processing device;
F2000, receiving target information corresponding to the second preset information, the target information is obtained by processing the first preset information and/or the second preset information according to preset rules by the processing device, the first preset information is provided by at least one first device directly connected to the processing device;
F3000, performing corresponding processing according to the target information.

In an embodiment, the preset rule is determined by the content and/or type of the first preset information and/or the second preset information.

In an embodiment, the method includes at least one of the following:
the first preset information includes at least one of the following: first user physiological parameters, first device application information, first device system information, first device information, first environment information, first device operation information;
the second preset information includes at least one of the following: second user physiological parameters, second device application information, second device system information, second device information, second environment information, and second device operation information.

In an embodiment, the method includes at least one of the following:
the third device is directly or indirectly connected to the first device, and the first preset information further includes at least one of the following: the third user physiological parameters, the third device application information, the third device system information, the third device information, the third environment information, and the third device operation information provided by the third device;
the fourth device is directly or indirectly connected to the second device, and the second preset information further includes at least one of the following: the fourth user physiological parameters, the fourth device application information, the fourth device system information, the fourth device information, the fourth environment information, and the fourth device operation information provided by the fourth device.

In an embodiment, the method includes:
the first user physiological parameter, the second user physiological parameter, the third user physiological parameter or the fourth user physiological parameter includes at least one of physiological parameters and exercise parameters;
the first device application and/or service information, the second device application and/or service information, the third device application and/or service information, or the fourth device application and/or service information include at least one of application and/or service type, application and/or service name, application and/or service state, application and/or service data;
the first device system information, the second device system information, the third device system information or the fourth device system information includes at least one of system type, system name, system state, and system data;
the first device information, the second device information, the third device information or the fourth device information includes at least one of device type, device name, device state, and device data;
the first environment information, the second environment information, the third environment information or the fourth environment information includes at least one of time, location, brightness, noise, altitude, road slope, weather, temperature, humidity, air pressure, wind level, and wind direction; and
the first device operation information, the second device operation information, the third device operation information or the fourth device operation information includes at least one of gesture information, voice information, sensing information, and touch operation information.

In an embodiment, the target information is obtained by the processing device processing first preset information provided by at least one first device and/or second preset information provided by at least one second device based on a first preset rule, including:
if the first preset information and/or the second preset information is at least one of physiological parameters and exercise parameters, analyzing the first preset information and/or the second preset information according to preset health rules to obtain health control information;
if the first preset information and/or the second preset information is at least one of application and/or service type, application and/or service name, application and/or service state, application and/or service data, analyzing the first preset information and/or the second preset information according to preset application rules to obtain application control information;
if the first preset information and/or the second preset information is at least one of system type, system name, system state, and system data, analyzing the first preset information and/or the second preset information according to preset system rules to obtain system control information;
if the first preset information and/or the second preset information is at least one of device type, device name, device state, and device data, analyzing the first preset information and/or the second preset information according to preset device rules to obtain device control information;
if the first preset information and/or the second preset information is at least one of time, location, brightness, noise, altitude, road slope, weather, temperature, humidity, air pressure, wind level, and wind direction, analyzing the first preset information and/or the second preset information according to preset environmental rules to obtain environment control information;
if the first preset information and/or the second preset information is at least one of gesture information, voice information, sensing information, and touch operation information, analyzing the first preset information and/or the second preset information according to preset operation rules to obtain operation control information.

In an embodiment, before the operation F3000, the method further includes:
outputting prompt information corresponding to the target information;
if the cancel execution instruction corresponding to the prompt information is not received (it may not be received within a preset time), performing the operation F3000; if the cancel execution instruction is received, not performing the operation F3000 and/or outputting the corresponding prompt information (the prompt information output mode can be interface display or voice broadcast or light prompt, etc.).

In an embodiment, the method further includes:
determining whether the historical number of consecutive receptions of the cancel execution instruction is less than or equal to the preset number of times;
if so, when receiving the target information, outputting the prompt information corresponding to the target information.

In an embodiment, the method also includes:
when the target information meets the preset safety condition, determining whether the historical number of consecutive reception times of the cancel execution instruction is less than or equal to the preset number.

In an embodiment, before performing the corresponding processing, the method further includes:
obtaining the update data corresponding to the first preset information and/or the second preset information, and processing the update data according to preset rules to obtain updated target information.

In an embodiment, the corresponding processing is only performed if the updated target information is the same as the target information; or the corresponding process is only performed if the updated target information is different from the target information.

In an embodiment, before the operation F3000, the method includes:
when the target information meets a preset requirement, performing the corresponding processing.

The present application provides a processing method applied to a second device connected to a first device, including the following operations:
G10, obtaining at least one third device information connected to the second device through the first device;
G20, detecting whether at least one of the first device information, the second device information, and the third device information meets a preset condition; and
G30, when at least one of the first device information, the second device information, and the third device information meets a preset condition, performing corresponding processing according to the preset strategy.

In an embodiment, the second device and the first device are directly or indirectly connected.

In an embodiment, the third device and the second device are directly connected or indirectly connected.

In an embodiment, the general connection method or type includes direct connection and indirect connection. For example, the first device is directly connected to the second device, and the second device is directly connected to the third device, so the connection method or type between the first device and the third device can be understood as an indirect connection.

In an embodiment, the operation G20 includes at least one of the following:
a first preset event occurs on the first device;
a second preset event occurs on the second device; and
a third preset event occurs on the third device.

In an embodiment, the first preset event or the second preset event or the third preset event includes at least one of the following:
the user physiological parameter information meets the first preset condition;
the corresponding device system information meets the second preset condition;
the corresponding device communication information meets the third preset condition;
the corresponding device application information meets the fourth preset condition;
the corresponding device reminder information meets the fifth preset condition;
the corresponding device detection information meets the sixth preset condition;
the corresponding device state information meets the seventh preset condition;
the corresponding device environment information meets the eighth preset condition.

In an embodiment, the operation G30 includes at least one of the following:
the first device performs processing according to a first preset strategy;
the second device performs processing according to a second preset strategy;
the third device performs processing according to a third preset strategy.

In an embodiment, the first preset strategy or the second preset strategy or the third preset strategy includes at least one of the following:
transferring or updating the corresponding preset event;
transferring the corresponding preset event after conversion;
disconnecting at least one of the first device, the second device and the third device from a connection network;
connecting at least one of the first device, the second device and the third device to other networks;
at least one of the first device, the second device, and the third device opening preset applications and/or services;
at least one of the first device, the second device, and the third device closing preset applications and/or services;
changing the parameters of the current running application and/or service of at least one of the first device, the second device, and the third device;
switching the current mode of at least one of the first device, the second device, and the third device; and
changing a strategy for processing current data of at least one of the first device, the second device, and the third device.

In an embodiment, the operation G30 includes at least one of the following:
outputting operation options and/or prompt information corresponding to the preset event on the first device;
outputting operation options and/or prompt information corresponding to the preset event on the second device; and
outputting operation options and/or prompt information corresponding to the preset event on the third device.

In an embodiment, the method further includes:
receiving the operation information for the operation option, and updating and/or transmitting the preset event according to the operation information.

The present application further provides a processing method applied to a second device applied to a first device, including the following operations:
G100, obtaining at least one third device information through the first device and/or a server;
G200, detecting whether the first device and/or the third device information meets a preset rule; and
G300, when the first device and/or the third device information meets a preset rule, performing corresponding processing according to the preset strategy.

In an embodiment, the second device and the first device are directly or indirectly connected.

In an embodiment, the third device and the first device are directly connected or indirectly connected.

In an embodiment, the general connection method or type includes direct connection and indirect connection. For example, the first device is directly connected to the second device, and the second device is directly connected to the third device, so the connection method or type between the first device and the third device can be understood as an indirect connection.

In an embodiment, the operation G200 includes at least one of the following:
a first preset event occurs on the first device;
a second preset event occurs on the second device; and
a third preset event occurs on the third device.

In an embodiment, the first preset event or the second preset event or the third preset event includes at least one of the following:
the user physiological parameter information meets the first preset condition;
the corresponding device system information meets the second preset condition;
the corresponding device communication information meets the third preset condition;
the corresponding device application information meets the fourth preset condition;
the corresponding device reminder information meets the fifth preset condition;
the corresponding device detection information meets the sixth preset condition;
the corresponding device state information meets the seventh preset condition;
the corresponding device environment information meets the eighth preset condition.

In an embodiment, the operation G300 includes at least one of the following:
the first device performs processing according to a first preset strategy;
the second device performs processing according to a second preset strategy;
the third device performs processing according to a third preset strategy.

In an embodiment, the first preset strategy or the second preset strategy or the third preset strategy includes at least one of the following:
transferring or updating the corresponding preset event;
transferring the corresponding preset event after conversion;
disconnecting at least one of the first device, the second device and the third device from a connection network;
connecting at least one of the first device, the second device and the third device to other networks;
at least one of the first device, the second device, and the third device opening preset applications and/or services;
at least one of the first device, the second device, and the third device closing preset applications and/or services;
changing the parameters of the current running application and/or service of at least one of the first device, the second device, and the third device;
switching the current mode of at least one of the first device, the second device, and the third device; and
changing a strategy for processing current data of at least one of the first device, the second device, and the third device.

In an embodiment, the operation G300 includes at least one of the following:
outputting operation options and/or prompt information corresponding to the preset event on the first device;
outputting operation options and/or prompt information corresponding to the preset event on the second device; and
outputting operation options and/or prompt information corresponding to the preset event on the third device.

In an embodiment, the method further includes:
receiving the operation information for the operation option, and updating and/or transmitting the preset event according to the operation information.

The present application provides a processing method applied to a processing device, including the following operations:
H10, detecting whether a preset event occurs;
H20, when the preset event occurs, detecting whether the device corresponding to the preset event meets the preset condition;
H30, when the preset event occurs, outputting prompt information corresponding to the preset event according to the prompt strategy.

In an embodiment, the processing device is in a connection network, the connection network includes the processing device, the first device, and the second device, and the occurrence of a preset event includes at least one of the following:
a first preset event occurs on the processing device;
a second preset event occurs on the first device;
a third preset event occurs on the second device.

In an embodiment, the first preset event or the second preset event or the third preset event includes at least one of the following:
at least one of the processing device, the first device and the second device is in or switched to a preset mode;
at least one of the processing device, the first device and the second device is in or switched to a preset environment;
at least one of the processing device, the first device, and the second device detects that the user physiological information meets a first preset condition;
at least one of the processing device, the first device, and the second device detects that the user state meets a second preset condition;
at least one preset parameter detected by at least one of the processing device, the first device, and the second device meets a parameter condition;
at least one device is newly added in the connection network or the maximum number of connected devices has been reached;
at least one device in the connection network is disconnected or the minimum number of connected devices has been reached;
at least one of the processing device, the first device and the second device receives at least one message;
the power value of at least one of the processing device, the first device and the second device is lower than or equal to a preset power threshold;
the connection signal value of at least one of the processing device, the first device and the second device is less than or equal to a preset signal threshold;
the resource occupancy value of at least one of the processing device, the first device, and the second device is greater than or equal to a preset resource threshold;
the running state of at least one of the processing device, the first device and the second device is stuck or not smooth;
the preset application and/or preset function of at least one of the processing device, the first device, and the second device is turned on;
the security level of at least one of the processing device, the first device, and the second device is less than or equal to a preset security level threshold;
the working duration of at least one of the processing device, the first device and the second device is greater than or equal to a preset working duration threshold;
at least one of the processing device, the first device and the second device is at a preset position.

In an embodiment, there is only one preset event, and the meeting the preset condition includes at least one of the following:
the preset event is triggered by at least one of the processing device, the first device, and the second device;
the time and/or place triggered by the preset event meets the first preset condition;
the content information of the preset event meets the second preset condition.

In an embodiment, there are at least two preset events, and the meeting the preset condition includes at least one of the following:
the preset event is triggered by the processing device, the first device and/or the second device;
the time and/or place triggered by the preset event meets the third preset condition;
the trigger sequence of the preset events meets the fourth preset condition;
the priority of the preset event meets the fifth preset condition;
the content information of the preset event meets the sixth preset condition.

In an embodiment, the outputting the prompt information corresponding to the preset event according to the prompt strategy includes at least one of the following:
outputting operation options and/or prompt information corresponding to the preset event on the processing device;
outputting operation options and/or prompt information corresponding to the preset event on the first device;
outputting operation options and/or prompt information corresponding to the preset event on the second device.

In an embodiment, the method further includes: receiving operation information for the operation option, and updating and/or transmitting and/or outputting the preset event according to the operation information.

In an embodiment, the present application further provides a processing method applied to a processing device, including the following operations:
H100, detecting whether a preset event occurs;
H200, when the preset event occurs, obtaining prompt strategy;
H300, outputting prompt information corresponding to the preset event according to the prompt strategy.

In an embodiment, the processing device is in a connection network, the connection network includes the processing device, the first device, and the second device, and the occurrence of a preset event includes at least one of the following:
a first preset event occurs on the processing device;
a second preset event occurs on the first device;
a third preset event occurs on the second device.

In an embodiment, the first preset event or the second preset event or the third preset event includes at least one of the following:
at least one of the processing device, the first device and the second device is in or switched to a preset mode;
at least one of the processing device, the first device and the second device is in or switched to a preset environment;
at least one of the processing device, the first device, and the second device detects that the user physiological information meets a first preset condition;
at least one of the processing device, the first device, and the second device detects that the user state meets a second preset condition;
at least one preset parameter detected by at least one of the processing device, the first device, and the second device meets a parameter condition;
at least one device is newly added in the connection network or the maximum number of connected devices has been reached;
at least one device in the connection network is disconnected or the minimum number of connected devices has been reached;
at least one of the processing device, the first device and the second device receives at least one message;
the power value of at least one of the processing device, the first device and the second device is lower than or equal to a preset power threshold;
the connection signal value of at least one of the processing device, the first device and the second device is less than or equal to a preset signal threshold;
the resource occupancy value of at least one of the processing device, the first device, and the second device is greater than or equal to a preset resource threshold;
the running state of at least one of the processing device, the first device and the second device is stuck or not smooth;
the preset application and/or preset function of at least one of the processing device, the first device, and the second device is turned on;
the security level of at least one of the processing device, the first device, and the second device is less than or equal to a preset security level threshold;
the working duration of at least one of the processing device, the first device and the second device is greater than or equal to a preset working duration threshold;
at least one of the processing device, the first device and the second device is at a preset position.

In an embodiment, the outputting prompt information corresponding to the preset event according to the prompt strategy includes at least one of the following:
outputting operation options and/or prompt information corresponding to the preset event on the processing device;
outputting operation options and/or prompt information corresponding to the preset event on the first device;
outputting operation options and/or prompt information corresponding to the preset event on the second device.

In an embodiment, the method further includes: receiving operation information for the operation option, and updating and/or transmitting and/or outputting the preset event according to the operation information.

In an embodiment, the present application further provides a processing method, including the following operations:
when the first preset connection information of the connection network meets the preset connection rule and/or when the second preset connection information of the connection network meets the preset connection condition, obtaining preset prompt information;
outputting the preset prompt information according to a preset prompt strategy.

In an embodiment, the first preset connection information includes at least one of the following:
power information, timing shutdown information, location information, time information, user identity information and use habit information, connection state information, use state information and environment information.

In an embodiment, the method includes:
in response that the first preset connection information includes the power information and the power information meets a first preset connection rule, obtaining first preset prompt information;
in response that the first preset connection information includes the timing shutdown information and the timing shutdown information meets a second preset connection rule, obtaining second preset prompt information;
in response that the first preset connection information includes the location information and the location information meets a third preset connection rule, obtaining third preset prompt information;
in response that the first preset connection information includes the time information and the time information meets a fourth preset connection rule, obtaining fourth preset prompt information;
in response that the first preset connection information includes the user identity information and the user identity information meets a fifth preset connection rule, obtaining fifth preset prompt information;
in response that the first preset connection information includes the use habit information and the use habit information meets a sixth preset connection rule, obtaining sixth preset prompt information;
in response that the second preset connection information includes the device type information and the device type information meets a seventh preset connection rule, obtaining seventh preset prompt information;
in response that the second preset connection information includes the connection state information and the connection state information meets an eighth preset connection rule, obtaining eighth preset prompt information;
in response that the second preset connection information includes the use state information and the use state information meets a ninth preset connection rule, obtaining ninth preset prompt information; and
in response that the second preset connection information includes the environment information and the environment information meets a tenth preset connection rule, obtaining tenth preset prompt information.

In an embodiment, the method includes:
outputting first preset prompt information according to a first preset prompt strategy;
outputting second preset prompt information according to a second preset prompt strategy;
outputting third preset prompt information according to a third preset prompt strategy;
outputting fourth preset prompt information according to a fourth preset prompt strategy;
outputting fifth preset prompt information according to a fifth preset prompt strategy;
outputting sixth preset prompt information according to a sixth preset prompt strategy;
outputting seventh preset prompt information according to a seventh preset prompt strategy;
outputting eighth preset prompt information according to an eighth preset prompt strategy;
outputting ninth preset prompt information according to a ninth preset prompt strategy;
outputting tenth preset prompt information according to a tenth preset prompt strategy.

In an embodiment, the method includes:
in response that the device in the connection network is not used, obtaining third preset connection information and determining the preset prompt strategy according to the third preset connection information.

In an embodiment, the third preset connection information includes at least one of the following:
use frequency information, use habit information, and use information.

In an embodiment, the preset prompt strategy includes one of the following:
outputting the preset prompt information on the device whose use frequency information meets a preset use frequency requirement;
outputting the preset prompt information on the device whose use habit information meets a preset use habit requirement; and
outputting the preset prompt information on the device whose use information meets a preset use requirement.

In an embodiment, the preset prompt strategy further includes one of the following:
in response to detecting the use of a device in the connection network, outputting the preset prompt information on the device, and notifying other devices in the connection network except the device to cancel the output of the preset prompt information;
broadcasting the preset prompt information to devices in the connection network; and
outputting the preset prompt information to the device currently in use.

In an embodiment, ways to determine which device is currently in use include at least one of the following:
the device is on or awake, has apps and services running on the device, and is not powered off or asleep.

In an embodiment, the preset prompt information includes at least one of the following:
text information, voice information, light information and vibration information.

In order to achieve the above objective, the present application further provides a processing device, including a memory, a processor and a processing program stored on the memory and executable on the processor, when the processing program is executed by the processor, the operations of the above-mentioned processing method are implemented.

In order to achieve the above objective, the present application further provides a computer-readable storage medium. The computer-readable storage medium stores a program for realizing the processing method, and the program for realizing the processing method is executed by a processor to realize the operations of the above-mentioned processing method.

In order to achieve the above objective, the present application also provides a computer program product, the computer program product includes computer program code, and when the computer program code is run on the computer, the computer is made to execute the above-mentioned method.

In order to achieve the above objective, the present application also provides a chip, including a memory and a processor. The memory is used to store a computer program, and the processor is used to call and run the computer program from the memory, so that the device installed with the chip performs the above-mentioned method.

The present application provides a processing method, including: S10, obtaining preset information, the preset information is provided by the first control center and/or other devices controlled by the first control center; S11, detecting whether the preset information meets a preset rule; S12, when the preset information meets a preset rule, performing a corresponding device control operation according to a preset strategy. A network is formed between the first control center and other devices controlled by the first control center. The first control center acquires preset information provided by the first control center and/or other devices controlled by the first control center. When the preset information meets the preset rule, the first control center can automatically perform corresponding device control operations on other devices controlled by it in the network according to the preset strategy, such that the use of the first control center and other devices controlled by the first control center is more intelligent, convenient and faster.

The present application provides a processing method, including: A1, obtaining connection information, the connection information is provided by a terminal connected to the initiator device; A2, connecting to the target device according to the first preset connection rule and/or the second preset connection rule, and the connection information. After obtaining the connection information provided by the terminal, the target device is connected through the first preset connection rule and/or the second preset connection rule and the connection information, providing more optional connection schemes for the connection between the initiator device and the target device, which makes the initiator device more flexible and intelligent when establishing a connection with the target device.

The present application provides a processing method, including: obtaining first connection reference information; when the first connection reference information meets a preset connection condition, obtaining connection information, the connection information being provided by the target device; establishing a connection with the target device according to the connection information and/or a first preset strategy, and/or updating the first preset strategy according to a connection result, which realizes establishing a connection with the target device through the first preset strategy, and provides more optional connection schemes when connecting with the target device, so that the initiator device is more flexible and intelligent when establishing a connection with the target device.

The present application provides a processing method, including: C10, if a preset event occurs, outputting at least one first control information and at least one second control information, the first control information corresponds to a first device directly connected to the management device, and the second control information corresponds to a second device indirectly connected to the management device; C20, receiving operation information, performing corresponding control according to the operation information and/or a first preset strategy, and/or updating the first control information and/or the second control information. After the management device is connected with the first device and/or the second device, by outputting corresponding first control information and/or second control information and receiving operation information corresponding to the first control information and/or second control information, so as to execute corresponding control through the operation information and the first preset strategy, it avoids that after the management device is connected with the first device and/or the second device, only simple control interaction can be performed, so that the control interaction between the devices after establishing connection with each other is more intelligent, convenient and fast. In addition, because it can support the control interaction between directly connected devices and indirectly connected devices, the function is more powerful, and the experience is more intelligent, convenient and fast.

The present application provides a processing method, including: when a preset event occurs in the connection network, generating and/or determining a response instruction of the target device corresponding to the preset event; obtaining control judgment information, when the control judgment information meets a control condition, the control center sends the response instruction to the target device, and/or, the control center performs a preset control operation. When a preset event occurs in the connection network, the control center can generate a corresponding response instruction, and control itself or the target device to make a corresponding response through the response instruction, which makes the control interaction between the devices more flexible and intelligent after the devices are connected to each other.

The present application provides a processing method, including: detecting whether a preset event is received; when the preset event is received, performing corresponding processing according to a preset strategy, and/or performing the first processing on at least one first device directly connected to the processing device according to a first rule, and/or performing the second processing on at least one second device indirectly connected to the processing device according to the second rule. After receiving the preset event, perform corresponding processing through the preset strategy, and perform the first processing on the first device, and/or perform the second processing on the second device, which avoids that after the connection is established through the network, only simple information processing can be performed between each device, so that the information processing after each device establishes a connection with each other is more intelligent, convenient and flexible. In addition, because it can support information processing between directly connected devices and indirectly connected devices, the function is more powerful, and the experience is more intelligent, convenient and flexible.

The present application provides a processing method, including: F10, obtaining the first preset information and/or the second preset information, the first preset information is provided by at least one first device directly connected to the processing device, and the second preset information is provided by at least one second device indirectly connected to the processing device; F20, processing the first preset information and/or the second preset information according to the preset rule to obtain target information; F30, sending the target information, so that at least one of the first device, the second device, and at least one controlled device performs corresponding processing. By obtaining the first preset information and/or the second preset information except the own information, and sending the target information obtained after processing the first preset information and/or the second preset information back to the first device and/or the second device corresponding to the first preset information and/or the second preset information, the processing device can respond to the first preset information and/or the second preset information of the first device and/or the second device other than its own information. In this way, the device response process after each device establishes a connection with each other is more intelligent, convenient and fast.

The present application provides a processing method, including: G10, obtaining at least one third device information indirectly connected to the second device through the first device; G20, detecting whether at least one of the first device information, the second device information, and the third device information meets a preset condition; G30, when at least one of the first device information, the second device information, and the third device information meets a preset condition, performing corresponding processing according to a preset strategy. When at least one of the first device information, the second device information, and the third device information indirectly connected to the second device meets a preset condition, the corresponding processing is performed according to the preset strategy, so that the device response process after each device establishes a connection with each other is more intelligent, convenient and fast.

The present application provides a processing method, including: H10, detecting whether a preset event occurs; H20, when the preset event occurs, detecting whether the device corresponding to the preset event meets the preset condition; H30, when the preset event occurs, outputting prompt information corresponding to the preset event according to the prompt strategy.

The present application provides a processing method, including: Z10, obtaining first preset information and/or second preset information; Z11, detecting whether the first preset information and/or the second preset information meets a preset rule; Z12, when the first preset information and/or the second preset information meets a preset rule, performing a corresponding device control operation according to a preset strategy, which can make the user more intelligent, convenient and quick to control and operate each device in the connection network (such as a bound device, etc.), and improves the user experience.

The present application provides a processing method, including: Z20, obtaining the first information and/or the second information and/or the third information, the first information is provided by at least one first device directly connected to the first control center, the second information is provided by at least one second device indirectly connected to the first control center, the third information is provided by a web server connected to at least one of the first control center, the first device, and the second device; Z21, processing the first information and/or the second information and/or the third information according to a processing rule to obtain at least one recommendation information, the recommendation information includes at least one first recommendation information, and/or at least one second recommendation information, and/or at least one third recommendation information; Z22, detecting whether the first control center, and/or the first device, and/or the second device meet recommendation requirements; Z23, if yes, performing a corresponding device control operation according to a preset recommendation strategy, and/or if no, outputting prompt information. Thus, the control center more intelligently generates and/or determines recommendation information to each device in the connection network, thereby improving user experience.

The present application provides a processing method, including: Z30, obtaining preset information, the preset information is provided by the group where the first control center and/or the second control center are located; Z31, detecting whether the preset information meets a preset rule; Z32, if yes, performing a corresponding device control operation according to a preset strategy, and/or, if not, outputting prompt information. Thus, the user can control and operate more intelligently, conveniently and quickly to connect devices in each group in the network, thereby improving user experience.

### BRIEF DESCRIPTION OF THE DRAWINGS

The accompanying drawings, which are incorporated in and constitute a part of this specification, illustrate embodiments consistent with the application and together with the description serve to explain the principles of the application. In order to more clearly illustrate the technical solutions of the embodiments of the present application, the following will briefly introduce the drawings that need to be used in the description of the embodiments. Apparently, those skilled in the art can also obtain other drawings based on these drawings without any creative effort.
FIG. 1 is a schematic structural diagram of a hardware of a mobile terminal according to embodiments of the present application.
FIG. 2 is a system architecture diagram of a communication network according to an embodiment of the present application.
FIG. 3 is a schematic flowchart of a processing method according to an embodiment of the present application.
FIG. 4 is a schematic diagram of outputting text prompt information of the processing method of the present application.
FIG. 5 is a schematic diagram of another output text prompt information of the processing method of the present application.
FIG. 6 is a schematic diagram of yet another output text prompt information of the processing method of the present application.
FIG. 7 is a schematic flowchart of the processing method according to another embodiment of the present application.
FIG. 8 is a schematic flowchart of the processing method according to an embodiment of the present application.
FIG. 9 is a schematic diagram of outputting text prompt information of the processing method of the present application.
FIG. 10 is a schematic diagram of another output text prompt information of the processing method of the present application.
FIG. 11 is a schematic flowchart of the processing method according to another embodiment of the present application.
FIG. 12 is a schematic flowchart of the processing method according to still another embodiment of the present application.
FIG. 13 is a schematic flowchart of the processing method according to an embodiment of the present application.
FIG. 14 is a schematic diagram of a result of the automatic connection between the initiator device and the target device in the processing method of this application.
FIG. 15 is a schematic diagram of a result of re-establishing a connection after the connection between the initiator device and the target device fails to be established in the processing method of this application.
FIG. 16 is a schematic flowchart of the processing method according to another embodiment of the present application.
FIG. 17 is a schematic diagram of a functional module of the processing device according to a preferred embodiment of the present application;
FIG. 18 is a schematic flow chart of the processing method according to an embodiment of the present application.
FIG. 19 is a schematic diagram of a pop-up screen of the processing method of the present application.
FIG. 20 is a schematic diagram of display position adjustment of the operation interface of the processing method of the present application.
FIG. 21 is a schematic flowchart of the processing method according to another embodiment of the present application.
FIG. 22 is a schematic diagram of the UI composition of the processing method of the present application.
FIG. 23 is a schematic diagram of user operation of the processing method of the present application.
FIG. 24 is a schematic diagram of a functional module of the processing device according to an embodiment of a preferred embodiment the present application.
FIG. 25 is a schematic diagram of another functional module of the processing device according to a preferred embodiment of the present application.
FIG. 26 is a schematic flowchart of the processing method according to an embodiment of the present application.
FIG. 27 is a schematic diagram of a control function switching effect of the processing method of the present application.
FIG. 28 is a schematic diagram of a prompt information effect of the processing method of the present application.
FIG. 29 is a schematic diagram of the effect of the output optional processing items of the processing method of the present application.
FIG. 30 is a schematic flowchart of the processing method according to another embodiment of the present application.
FIG. 31 is a schematic diagram of another control function switching effect of the processing method of the present application.
FIG. 32 is a schematic flowchart of the processing method according to another embodiment of the present application.
FIG. 33 is a schematic flowchart of the processing method according to an embodiment of the present application.
FIG. 34 is a schematic diagram of a functional module of the processing device according to a preferred embodiment of the present application.
FIG. 35 is a schematic flowchart of the processing method according to an embodiment of the present application.
FIG. 36 is a schematic diagram of the screen pop-up effect of the processing method of the present application.
FIG. 37 is a schematic diagram of another screen pop-up effect of the processing method of the present application.
FIG. 38 is a schematic diagram of another screen pop-up effect of the processing method of the present application.
FIG. 39 is a schematic flowchart of the processing method according to another embodiment of the present application.
FIG. 40 is a schematic diagram of a functional module of the processing device according to a preferred embodiment of the present application.
FIG. 41 is a schematic flowchart of the processing method according to an embodiment of the present application.
FIG. 42 is a schematic diagram of the effect of a pop-up box of the processing method of the present application.
FIG. 43 is a schematic diagram of another pop-up box effect of the processing method of the present application.
FIG. 44 is a schematic flowchart of the processing method according to another embodiment of the present application;
FIG. 45 is a schematic diagram of another pop-up effect of the processing method of the present application.
FIG. 46 is a schematic flowchart of the processing method according to another embodiment of the present application.
FIG. 47 is a schematic flowchart of the processing method according to an embodiment of the present application.
FIG. 48 is a schematic diagram of a functional module of the processing device according to a preferred embodiment the present application.
FIG. 49 is a schematic flowchart of the processing method according to an embodiment of the present application;
FIG. 50 is a schematic diagram of the effect of a pop-up box in the processing method of the present application.
FIG. 51 is a schematic flowchart of the processing method according to another embodiment of the present application.
FIG. 52 is a schematic diagram of another pop-up box effect of the processing method of the present application.
FIG. 53 is a schematic diagram of a functional module of the processing device according to a preferred embodiment of the present application.
FIG. 54 is a schematic flowchart of the processing method according to an embodiment of the present application.
FIG. 55 is a schematic diagram of the pop-up effect of the processing method of the present application.
FIG. 56 is a schematic diagram of another pop-up effect of the processing method of the present application.
FIG. 57 is a schematic diagram of another pop-up effect of the processing method of the present application.
FIG. 58 is a schematic flowchart of the processing method according to another embodiment of the present application;
FIG. 59 is a schematic flowchart of the processing method according to another embodiment of the present application.
FIG. 60 is a schematic diagram of another pop-up effect of the processing method of the present application.
FIG. 61 is a schematic diagram of a functional module of the processing device according to a preferred embodiment of the present application.
FIG. 62 is a schematic flowchart of the processing method according to an embodiment of the present application.
FIG. 63 is a schematic diagram of the pop-up effect of the processing method of the present application.
FIG. 64 is a schematic flowchart of the processing method according to another embodiment of the present application;
FIG. 65 is a schematic diagram of another pop-up effect of the processing method of the present application.
FIG. 66 is a schematic flowchart of the processing method according to another embodiment of the present application.
FIG. 67 is a schematic diagram of another pop-up effect of the processing method of the present application.
FIG. 68 is a schematic structural diagram of the hardware operating environment involved in the solution of the embodiment of the present application.

The realization, functional features and advantages of the present application will be further described in conjunction with the embodiments and with reference to the accompanying drawings. By means of the above drawings, specific embodiments of the present application have been shown, which will be described in more detail hereinafter. These drawings and text descriptions are not intended to limit the scope of the concept of the application in any way, but to illustrate the concept of the application for those skilled in the art by referring to specific embodiments.

### DETAILED DESCRIPTION OF THE EMBODIMENTS

It should be understood that the specific embodiments described here are only used to explain the present application, and are not intended to limit the present application.

In the following description, the use of suffixes such as "module", "part" or "unit" for denoting elements is only for facilitating the description of the present application and has no specific meaning by itself. Therefore, "module", "part" or "unit" may be used in combination.

The mobile terminal can be implemented in various forms. For example, the mobile terminal described herein can include a mobile phone, a tablet computer, a notepad computer, a hand-held computer, a personal digital assistants (PDA), a portable media player (PMP), a navigation device, a wearable device, a smart bracelet, a pedometer and other mobile terminals, as well as a fixed terminal such as a digital TV and a desktop computer.

The present application takes a mobile terminal as an example to illustrate. Those skilled in the art will understand that, in addition to elements specifically used for mobile purposes, the configuration according to the embodiments of the present application can also be applied to the fixed terminal.

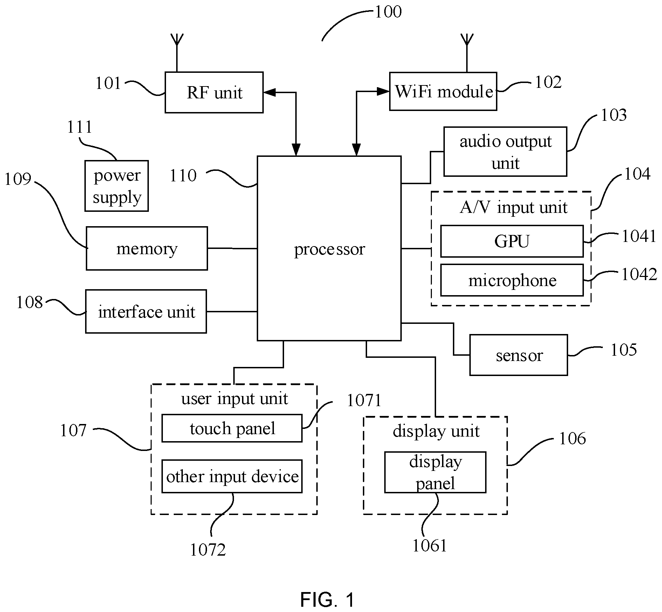

As shown in FIG. 1, FIG. 1 is a schematic structural diagram of a hardware of a mobile terminal according to embodiments of the present application. The mobile terminal 100 includes a Radio Frequency (RF) unit 101, a Wi-Fi module 102, an audio output unit 103, an audio/video (A/V) input unit 104, a sensor 105, a display unit 106, a user input unit 107, an interface unit 108, a memory 109, a processor 110, a power supply 111 and other components. Those skilled in the art can understand that the structure of the mobile terminal shown in FIG. 1 does not constitute a limitation on the mobile terminal. The mobile terminal can include more or fewer components, or a combination of some components, or differently arranged components than shown in the figure.

Hereinafter, each component of the mobile terminal will be specifically introduced with reference to FIG. 1.

The radio frequency unit 101 can be used for transmitting and receiving signals during the process of transceiving information or talking. Specifically, after receiving the downlink information of the base station, the downlink information is processed by the processor 110; in addition, the uplink data is sent to the base station. Generally, the radio frequency unit 101 includes, but is not limited to, an antenna, at least one amplifier, a transceiver, a coupler, a low noise amplifier, a duplexer, and the like. In addition, the radio frequency unit 101 can also communicate with the network and other devices through wireless communication. The above-mentioned wireless communication can use any communication standard or protocol, including but not limited to Global System of Mobile communication (GSM), General Packet Radio Service (GPRS), Code Division Multiple Access 2000 (CDMA2000), Wideband Code Division Multiple Access (WCDMA), Time Division-Synchronous Code Division Multiple Access (TD-SCDMA), Frequency Division Duplexing-Long Term Evolution (FDD-LTE), Time Division Duplexing-Long Term Evolution (TDD-LTE), or the like.

Wi-Fi is a short-range wireless transmission technology. The mobile terminal can help users transmit and receive email, browse webpage, and access streaming media through the Wi-Fi module 102, and Wi-Fi provides users with wireless broadband Internet access. Although FIG. 1 shows the Wi-Fi module 102, it is understandable that it is not a necessary component of the mobile terminal and can be omitted as needed without changing the essence of the present application.

When the mobile terminal 100 is in a call signal receiving mode, a call mode, a recording mode, a voice recognition mode, a broadcast receiving mode, or the like, the audio output unit 103 can convert the audio data received by the radio frequency unit 101 or the Wi-Fi module 102 or stored in the memory 109 into an audio signal and output the audio signal as sound. Moreover, the audio output unit 103 can also provide audio output related to a specific function performed by the mobile terminal 100 (for example, call signal reception sound, message reception sound, or the like). The audio output unit 103 can include a speaker, a buzzer, or the like.

The A/V input unit 104 is configured to receive audio or video signals. The A/V input unit 104 can include a graphics processing unit (GPU) 1041 and a microphone 1042. The graphics processing unit 1041 processes image data of still pictures or videos obtained by an image capture device (such as a camera) in a video capture mode or an image capture mode. The processed image frame can be displayed on the display unit 106. The image frame processed by the graphics processing unit 1041 can be stored in the memory 109 (or other storage medium) or sent via the radio frequency unit 101 or the Wi-Fi module 102. The microphone 1042 can receive sound (audio data) in operation modes such as a call mode, a recording mode, a voice recognition mode, and the like, and can process such sound into audio data. The processed audio (voice) data can be converted into a format that can be sent to a mobile communication base station via the radio frequency unit 101 in the case of a call mode for output. The microphone 1042 can implement various types of noise cancellation (or suppression) algorithms to eliminate (or suppress) noise or interference generated during the process of transceiving audio signals.

The mobile terminal 100 also includes at least one sensor 105, such as a light sensor, a motion sensor, and other sensors. Specifically, the light sensor includes an ambient light sensor and a proximity sensor. The ambient light sensor can adjust the brightness of the display panel 1061 according to the brightness of the ambient light. The proximity sensor can turn off the display panel 1061 and/or the backlight when the mobile terminal 100 is moved to the ear. A gravity acceleration sensor, as a kind of motion sensor, can detect the magnitude of acceleration in various directions (usually three axes). The gravity acceleration sensor can detect the magnitude and direction of gravity when it is stationary, and can identify the gesture of the mobile terminal (such as horizontal and vertical screen switching, related games, magnetometer attitude calibration), vibration recognition related functions (such as pedometer, tap), or the like. The mobile terminal can also be equipped with other sensors such as a fingerprint sensor, a pressure sensor, an iris sensor, a molecular sensor, a gyroscope, a barometer, a hygrometer, a thermometer, an infrared sensor and other sensors, which will not be repeated here.

The display unit 106 is configured to display information input by the user or information provided to the user. The display unit 106 can include a display panel 1061, and the display panel 1061 can be configured in the form of a liquid crystal display (LCD), an organic light emitting diode (OLED), or the like.

The user input unit 107 can be configured to receive inputted numeric or character information, and generate key signal input related to user settings and function control of the mobile terminal. Specifically, the user input unit 107 can include a touch panel 1071 and other input devices 1072. The touch panel 1071, also called a touch screen, can collect user touch operations on or near it (for example, the user uses fingers, stylus and other suitable objects or accessories to operate on the touch panel 1071 or near the touch panel 1071), and drive the corresponding connection device according to a preset program. The touch panel 1071 can include two parts: a touch detection device and a touch controller. The touch detection device detects the user's touch position, detects the signal brought by the touch operation, and transmits the signal to the touch controller. The touch controller receives the touch information from the touch detection device, converts the touch information into contact coordinates, and sends it to the processor 110, and can receive and execute the instructions sent by the processor 110. In addition, the touch panel 1071 can be implemented in multiple types such as resistive, capacitive, infrared, and surface acoustic wave. In addition to the touch panel 1071, the user input unit 107 can also include other input devices 1072. Specifically, the other input devices 1072 can include, but are not limited to, one or more of physical keyboard, function keys (such as volume control buttons, switch buttons, etc.), trackball, mouse, joystick, etc., which are not specifically limited here.

Further, the touch panel 1071 can cover the display panel 1061. After the touch panel 1071 detects a touch operation on or near it, the touch operation is transmitted to the processor 110 to determine the type of the touch event, and then the processor 110 provides a corresponding visual output on the display panel 1061 according to the type of the touch event. Although in FIG. 1, the touch panel 1071 and the display panel 1061 are used as two independent components to realize the input and output functions of the mobile terminal, in some embodiments, the touch panel 1071 and the display panel 1061 can be integrated to implement the input and output functions of the mobile terminal, which is not specifically limited here.

The interface unit 108 serves as an interface through which at least one external device can be connected to the mobile terminal 100. For example, the external device can include a wired or wireless earphone port, an external power source (or battery charger) port, a wired or wireless data port, a memory card port, a port for connecting devices with identification modules, an audio input/output (I/O) port, a video I/O port, an earphone port, or the like. The interface unit 108 can be configured to receive input (such as data information, electricity, or the like) from an external device and transmit the received input to one or more elements in the mobile terminal 100 or can be configured to transfer data between the mobile terminal 100 and the external device.

The memory 109 can be configured to store software programs and various data. The memory 109 can mainly include a program storage area and a data storage area. The program storage area can store the operating system, at least one application required by the function (such as sound play function, image play function, etc.), or the like. The data storage area can store data (such as audio data, phone book, etc.) created based on the use of the mobile phone. In addition, the memory 109 can include a high-speed random access memory, and can also include a non-volatile memory, such as at least one magnetic disk storage device, a flash memory device, or other volatile solid-state storage devices.

The processor 110 is a control center of the mobile terminal, and uses various interfaces and lines to connect the various parts of the entire mobile terminal. By running or performing the software programs and/or modules stored in the memory 109, and calling the data stored in the memory 109, various functions and processing data of the mobile terminal are executed, thereby overall monitoring of the mobile terminal is performed. The processor 110 can include one or more processing units; and the processor 110 may integrate an application processor and a modem processor. The application processor mainly processes an operating system, a user interface, an application, or the like, and the modem processor mainly processes wireless communication. It can be understood that the foregoing modem processor may not be integrated into the processor 110.

The mobile terminal 100 can also include a power source 111 (such as a battery) for supplying power to various components. The power supply 111 can be logically connected to the processor 110 through a power management system, so that functions such as charging, discharging, and power consumption management can be managed through the power management system.

Although not shown in FIG. 1, the mobile terminal 100 can also include a Bluetooth module, or the like, which will not be repeated here.

In order to facilitate the understanding of the embodiments of the present application, the following describes the communication network system on which the mobile terminal of the present application is based.

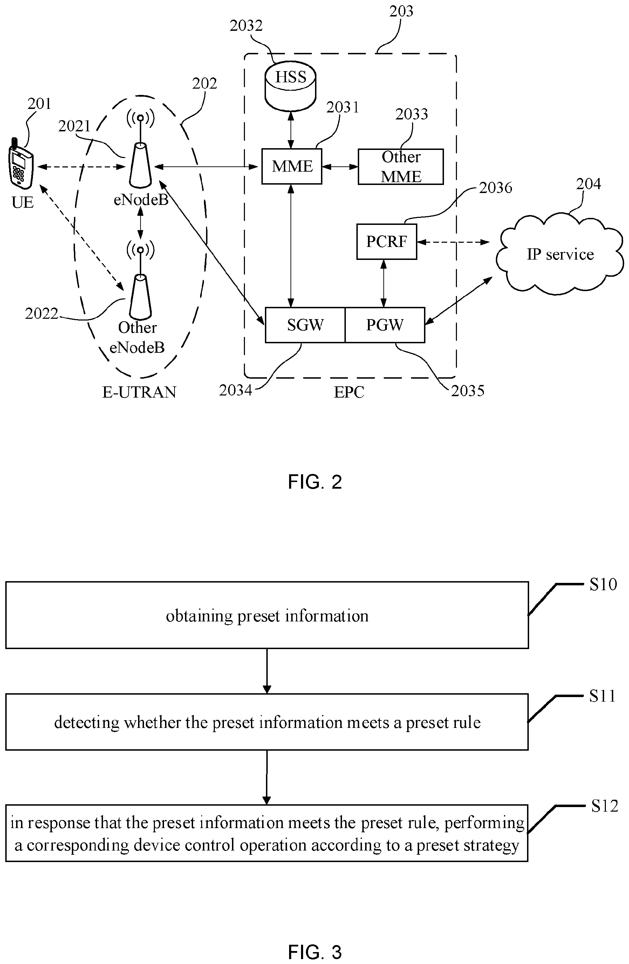

As shown in FIG. 2, FIG. 2 is an architecture diagram of a communication network system according to an embodiment of the present application. The communication network system is an LTE system of general mobile communication network technology. The LTE system includes a User Equipment (UE) 201, an Evolved UMTS Terrestrial Radio Access Network (E-UTRAN) 202, an Evolved Packet Core (EPC) 203, and an operator's IP service 204 that are sequentially connected in communication.

Specifically, the UE 201 can be the aforementioned terminal 100, which will not be repeated here.

E-UTRAN 202 includes eNodeB 2021 and other eNodeBs 2022. The eNodeB 2021 can be connected to other eNodeBs 2022 through a backhaul (for example, an X2 interface), the eNodeB 2021 is connected to the EPC 203, and the eNodeB 2021 can provide access from the UE 201 to the EPC 203.

The EPC 203 can include Mobility Management Entity (MME) 2031, Home Subscriber Server (HSS) 2032, other MMEs 2033, Serving Gate Way (SGW) 2034, PDN Gate Way (PGW) 2035, Policy and Charging Rules Function (PCRF) 2036, and so on. MME 2031 is a control node that processes signaling between UE 201 and EPC 203, and provides bearer and connection management. HSS 2032 is configured to provide some registers to manage functions such as the home location register (not shown), and save some user-specific information about service feature, data rates, and so on. All user data can be sent through SGW 2034, PGW 2035 can provide UE 201 IP address allocation and other functions. PCRF 2036 is a policy and charging control policy decision point for service data flows and IP bearer resources, which selects and provides available policy and charging control decisions for policy and charging execution functional units (not shown).

The IP service 204 can include the Internet, an intranet, IP Multimedia Subsystem (IMS), or other IP services.

Although the LTE system is described above as an example, those skilled in the art should know that, the present application is not only applicable to the LTE system, but also applicable to other wireless communication systems, such as GSM, CDMA2000, WCDMA, TD-SCDMA, and new network systems in the future, or the like, which is not limited herein.

Based on the above mobile terminal hardware structure and communication network system, various embodiments of the present application are proposed.

The present application provides a processing method. As shown in FIG. 3, FIG. 3 is a schematic flowchart of a processing method according to an embodiment of the present application.

The embodiment of the present application provides a processing method. Although a logical order is shown in the flowcharts, in some cases the operations shown or described may be performed in an order different from that shown or described herein. The processing method is applied in the first control center. The processing method includes:
Operation S10, obtaining preset information. The preset information is provided by the first control center and/or other devices controlled by the first control center, and the other devices include wearable smart devices.

In an embodiment, during the use of the wearable smart devices, terminal devices (such as mobile phone, Portable Android Device (PAD), tablet computer), etc.) will generally establish a connection relationship with wearable smart devices (such as smart watches, smart bracelets, smart earphones, etc.), smart home devices (such as smart TVs, smart speakers, etc.), and car networking devices (such as smart cars, vehicle terminals, etc.) to form a network. A control center is set up. The control center can be any device in the networked devices, so as to facilitate the management and use of the networked devices by users. In this embodiment, the control function is provided by the first control center, and the managed devices are the first control center itself and other devices controlled by the first control center. In addition, the first control center may be a terminal device, or may be a wearable smart device, a smart home device, or an Internet of Vehicles device. The control center is not static, which can switch between networked devices (such as wearable smart devices and terminal devices), the switching of the control center is based on preset information. The preset information is provided by the first control center and other devices controlled by the first control center, that is, whether the control center needs to switch can be independently determined by the devices in the network according to their own preset information. It can be understood that the specific situation of the preset information determines whether the corresponding device is qualified to be the control center.

In an embodiment, the above connection relationship includes direct connection, indirect connection. For example, a smart watch is directly connected to a smart speaker, a smart watch is directly connected to a smart phone, and a smart phone is indirectly connected to a smart speaker. Then, the smart phone can be connected to the smart speaker through the smart watch, and the connection relationship is an indirect connection, and the above-mentioned devices are used as nodes, and each connection relationship is used as a connection between nodes to form a network.

In an embodiment, after the switching of the control center, the original control center continues to be connected to the network as other devices controlled by the new control center, that is, each device in the network can be used as the control center or controlled by the control center. For example, the first control center is a smart phone, which controls smart watches and smart TVs. After the control center is switched to the smart TV, the smart TV acts as the control center to control the previous first control center, namely the smart phone, and the smart watch.

In an embodiment, the first control center acquires preset information. The preset information is provided by the first control center and/or other devices controlled by the first control center, and the other devices include wearable smart devices, smart home devices or Internet of Vehicles devices.

In an embodiment, before the operation S10, the method includes:
Operation S14, determining whether it is a preset mode;
Operation S15, when it is the preset mode, performing the operation S10.

In an embodiment, the first control center determines whether it is currently in the preset mode, and if it is currently in the preset mode, the operation of obtaining the preset information is performed; if it is not currently in the preset mode, the operation of obtaining the preset information is not performed. The preset modes include smart mode, automatic switching mode and other modes that support switching of the control center.

In an embodiment, the preset information includes at least one of the following: connection information, state information, environment information, use information, distance information, and user physiological information.

The connection information includes at least one of the following: connection state information, and network rate information.

In an embodiment, regarding the connection information, the connection information includes at least one of connection state information and network rate information.

In the above network, there are terminal devices or other devices that newly join the network (such as wearable devices, smart home devices, or Internet of Vehicles devices), and there are also terminal devices or other devices that exit the network. In order to grasp the connection state information of each device joining or exiting in the network in real time, the first control center can maintain a connection information table. The connection information table records device information of all networked devices, and the device information may be at least one of device physical address, device name, and device code, or other information that can represent the device. The device code can be set by the first control center, for example, the device code of the first device connected with the first control center is 001, and the device code of the second device connected with the first control center is 002. Devices in the network generally have the function of connecting to the Internet, such as smart watches, mobile phones, smart TVs, smart cars, etc. The corresponding network rate information will be affected by the device itself (for example, the device is downloading data or there are many current Internet applications, etc., resulting in a slow network) or by external factors (such as poor signal at the location of the device), resulting in a low network rate.

The state information includes at least one of the following: device state information, power information, and storage space information.

In an embodiment, for the state information, the state information includes at least one of device state information, power information, and storage space information.

In the above network, the device state information can be judged by the data processing capability of the device. The data processing capability of the device is strong or weak. Moreover, it does not necessarily mean that the current data processing capability of the corresponding device is good if the hardware condition is good. It can be understood that the current data processing capability of a device with good hardware conditions in a dead state will be very weak. In an embodiment, the device state information can also be whether the device is in a charging state. It is well understood that the device needs power during use. The electrical energy is generally provided by the battery, and the battery needs to be charged when the battery power is exhausted or is about to be exhausted. For power information, different devices in the network will have batteries with different capacities, and the batteries will have different remaining power or different battery life. For example, the battery capacity of the mobile phone is generally greater than the battery capacity of the smart watch. In addition, there are also cases where the remaining power of the mobile phone is less than the current power of the smart watch because the mobile phone is not charged. Devices in the network will exchange data during use and need to store the received data. The storage space information of the device affects the working performance of the device and determines the work that can be supported, such as the size of the storage space of the device is not enough to support the size of the data that must be downloaded for its work.

The environment information includes at least one of the following: external environment information, and use environment information.

In an embodiment, regarding the environment information, the environment information includes at least one of the external environment information and the use environment information.

In the above network, the device has the ability to obtain external environment information, such as obtaining the brightness of external ambient light and obtaining the loudness of external environment noise. During the use of the device, the use environment information changes with the user's environment. The use's environment can be sensed by sensors (such as gravity sensors, acceleration sensors, gyroscopes, etc.). If the user is exercising, the device can detect that the user is in an exercising environment, and adjust the device parameters accordingly to facilitate the user's use in an exercising environment. Or, if the user is driving, the device detects that the user is in the driving environment, and adjusts the device parameters accordingly to facilitate the user's use in the driving environment. Or, if the user is working or meeting, the device adjusts the device parameters correspondingly after detecting that the user is in the working or meeting environment.

The use information includes at least one of the following: traffic information, use habit information, and currently used application information.

In an embodiment, regarding the use information, the use information includes at least one of the traffic information, the use habit information, and the currently used application information.

In the above network, the device may have the ability to provide data network services, such as mobile phones and PADs, which are capable of providing data network services, and are used to obtain data from the Internet, such as updating applications in the device, and the current data network costs are not low. Therefore, when using data network services, special attention should be paid to traffic information. For use habit information, users may be accustomed to using a certain device on the Internet, that is, they use a certain device frequently, or are used to using a certain device on the Internet during a specific period of time, at a specific location, or for a specific purpose of use. For example, users are used to watching videos with PAD, but not with mobile phones. For the currently used application information, during the use of the device, the user will install some corresponding applications according to the use requirements, such as video applications and game applications.

In an embodiment, regarding the distance information, in the above network, during the use of the device by the user, the distance between the device and the user may change, the user puts the mobile phone in the bedroom and goes to the living room to watch TV. When the user moves from the bedroom to the living room, the user and the mobile phone become farther and farther away.

In an embodiment, for the user physiological information, in the above network, the device has the ability to obtain the user physiological information to provide corresponding services, such as providing health services by obtaining physiological information such as the user's heart rate, blood pressure, pulse, blood oxygen, and blood sugar.

Operation S12, detecting whether the preset information meets a preset rule.

In an embodiment, the operation S12 includes at least one of the following:
detecting whether the connection state information meets a first preset rule.

In an embodiment, it is detected whether the connection state information meets the first preset rule. The first preset rule is to determine whether the first control center in the network exits the network by detecting connection state information. If the first control center withdraws from the network, the connection state information meets the first preset rule, and/or, if the first control center does not withdraw from the network, the connection state information does not meet the first preset rule.

In an embodiment, it may be that the number of connections of the first control center exceeds a preset threshold or maximum value, then the connection state information meets the first preset rule.

In another embodiment, it may be that the connection state of the first control center is not smooth or the number of disconnections exceeds a preset number of times, then the connection state information meets the first preset rule.

Detecting whether the network rate information meets a second preset rule.

In an embodiment, detecting whether the network rate information meets the second preset rule. The second preset rule is a rule determined by detecting network rate information that the first control center in the network is not suitable to continue to serve as a control center to provide control functions. In order not to affect the linkage of each device in the network, it is necessary to select a device with a high network rate as the control center.

For example, it may be that the network rate of other devices controlled by the first control center in the network is greater than the network rate of the first control center, it is determined that the network rate information meets the second preset rule. For example, the network rate of the first control center is 500KB/s, if other devices controlled by the first control center in the network have a network rate greater than 500KB/s, it can be determined that the network rate information meets the second preset rule.

In this embodiment, a first network rate threshold may also be set for the comparison between the network rates of other devices controlled by the first control center in the network and the network rate of the first control center. For example, when the network rate of other devices controlled by the first control center in the network is greater than or equal to the sum of the network rate of the first control center and the first network rate threshold, it is determined that the network rate information meets the second preset rule. When there is no other device controlled by the first control center in the network whose network rate is greater than or equal to the sum of the network rate of the first control center and the first network rate threshold, that is, the network rates of other devices controlled by the first control center in the network are all lower than the sum of the network rate of the first control center and the first network rate threshold, and it is determined that the network rate information does not meet the second preset rule.

For example, the network rate of the first control center is 500KB/s, the first network rate threshold is 100KB/s, and other devices controlled by the first control center in the network have devices with a network rate of 600KB/s. At this time, when the network rate of other devices controlled by the first control center in the network is equal to the sum of the network rate of the first control center and the first network rate threshold, it is determined that the network rate information meets the second preset rule.

In other embodiments, a second network rate threshold can also be set, and the second network rate threshold is the minimum network rate that does not affect the ability of the first control center to provide management services. In an embodiment, if the network rate of the first control center is greater than or equal to the second network rate threshold, it is determined that the network rate information does not meet the second preset rule. If the network rate of the first control center is less than the second network rate threshold, it is determined that the network rate information meets the second preset rule.

For example, the network rate of the first control center is 400KB/s, the second network rate threshold is 500KB/s. Since the network rate of the first control center is less than the second network rate threshold, it may be determined that the network rate information meets the second preset rule.

Detecting whether the device state information meets a third preset rule.

In an embodiment, detecting whether the device state information meets the third preset rule. The third preset rule is a rule determined by detecting device state information that the first control center in the network is not suitable to continue to serve as a control center to provide control functions. In order not to affect the linkage of each device in the network, it is necessary to select a device with a short response time corresponding to the device state as the control center.

In an embodiment, the device state information can be the data processing capability of the device, such as the number or frequency of Central Processing Unit (CPU), the number or frequency of Graphic Processing Unit (GPU), the number or frequency of Neural Networks Process Unit (NPU), memory capacity, memory processing speed, etc. If the data processing capability of the first control center is not the strongest or does not belong to a strong category, it is determined that the device state information meets the third preset rule.

In another embodiment, for the current data processing capability of the device, it may be that the response time corresponding to the device state of other devices controlled by the first control center in the network is shorter than the response time corresponding to the device state of the first control center, it is determined that the device state information meets the third preset rule. For example, the response time corresponding to the device state of the first control center is 50ms, if other devices controlled by the first control center in the network have a device whose state corresponds to a response time of 40ms, it may be determined that the device state information meets the third preset rule.

A first response time threshold may also be set for the comparison between the response time corresponding to the device state of other devices controlled by the first control center in the network and the response time corresponding to the device state of the first control center. For example, when the sum of the response time corresponding to the device state and the first response time threshold is less than or equal to the response time corresponding to the device state of the first control center in other devices controlled by the first control center in the network, it is determined that the device state information meets the third preset rule. And/or, when the sum of the response time corresponding to the device state and the first response time threshold is less than or equal to the response time corresponding to the device state of the first control center does not exist in other devices controlled by the first control center in the network, that is, the sum of the response time corresponding to the device state of other devices controlled by the first control center in the network and the first response time threshold is greater than the response time corresponding to the device state of the first control center, it is determined that the device state information does not meet the third preset rule.

For example, the response time corresponding to the device state of the first control center is 50ms, and the first response time threshold is 10ms. Other devices controlled by the first control center in the network have device whose response time corresponding to the device state is 40ms. When other devices controlled by the first control center in the network have the response time corresponding to the device state and the first response time threshold equal to the response time corresponding to the state of the first control center, it is determined that the device state information meets the third preset rule.

In other embodiments, a second response time threshold may also be set, and the second response time threshold is the maximum response time that does not affect the ability of the first control center to provide management services. If the response time corresponding to the device state of the first control center is shorter than or equal to the second response time threshold, it is determined that the device state information does not meet the third preset rule; and/or, if the response time corresponding to the device state of the first control center is longer than the second response time threshold, it is determined that the device state information meets the third preset rule.

For example, the response time corresponding to the device state of the first control center is 60ms, and the second response time threshold is 50ms. Since the response time corresponding to the device state of the first control center is longer than the second response time threshold, it may be determined that the device state information meets the third preset rule.

In other embodiments, for a device in a charging state, the power consumption of the device at this time should be reduced as much as possible to prevent the battery from being depleted. Therefore, if the device is in the charging state, it is determined that the device state information meets the third preset rule; and/or, if the device is in the non-charging state, it is determined that the device state information does not meet the third preset rule.

In other embodiments, for a device in a moving state, because it is inconvenient for the user to operate or control, it may be determined that the device state information meets the third preset rule.

In other embodiments, for a device in a stuck state, since the first control center may not be able to well control other devices because it cannot respond well to the user's operation, it may be determined that the device state information meets the third preset rule.

Detecting whether the power information meets a fourth preset rule.

In an embodiment, detecting whether the power information meets the fourth preset rule. The fourth preset rule is a rule determined by detecting power information that the first control center in the network is not suitable to continue to serve as a control center to provide control functions. In order not to affect the linkage of each device in the network, it is necessary to select a device with a long available time corresponding to the power as the control center. It may be that the available time corresponding to the power of other devices controlled by the first control center in the network is longer than the available time corresponding to the power of the first control center, it is determined that the power information meets the fourth preset rule. It may also be that the remaining power value of other devices controlled by the first control center in the network is greater than the power of the first control center, it is determined that the power information meets the fourth preset rule.

In this embodiment, a first available time threshold may also be set for the comparison between the available time corresponding to the power of other devices controlled by the first control center in the network and the available time corresponding to the power of the first control center. For example, when other devices controlled by the first control center in the network have an available time corresponding to the power of the device that is longer than or equal to the sum of the available time corresponding to the power of the first control center and the first available time threshold, it is determined that the power information meets the fourth preset rule. When there is no other device controlled by the first control center in the network, the available time corresponding to the power of the device is longer than or equal to the sum of the available time corresponding to the power of the first control center and the first available time threshold, that is, when the available time corresponding to the power of other devices controlled by the first control center in the network is less than the sum of the available time corresponding to the power of the first control center and the first available time threshold, it is determined that the power information does not meet the fourth preset rule.

For example, the available time corresponding to the power of the first control center is 200 minutes, the first available time threshold is 30 minutes, and other devices controlled by the first control center in the network have a corresponding available time of 170 minutes. At this time, when the available time corresponding to the power in other devices controlled by the first control center in the network is equal to the sum of the available time corresponding to the power of the first control center and the first available time threshold, it is determined that the power information meets the fourth preset rule.

In other embodiments, a second available time threshold may also be set, and the second available time threshold is the minimum available time that does not affect the ability of the first control center to provide management services. If the available time corresponding to the power of the first control center is longer than or equal to the second available time threshold, it is determined that the power information does not meet the fourth preset rule; and/or, if the available time corresponding to the power of the first control center is shorter than the second available time threshold, it is determined that the power information meets the fourth preset rule.

For example, the available time corresponding to the power of the first control center is 180 minutes, and the second available time threshold is 200 minutes. Since the available time corresponding to the power of the first control center is shorter than the second available time threshold, it may be determined that the power information meets the fourth preset rule.

Detecting whether the storage space information meets a fifth preset rule.

In an embodiment, detecting whether the storage space information meets the fifth preset rule. The fifth preset rule is a rule determined by detecting storage space information that the first control center in the network is not suitable to continue to serve as a control center to provide control functions. In order not to affect the linkage of each device in the network, it is necessary to select a device with a large remaining storage space as the control center. It may be that the remaining storage space of other devices controlled by the first control center in the network is greater than the remaining storage space of the first control center, it is determined that the storage space information meets the fifth preset rule. It may also be that the access speed of the storage space of other devices (such as a higher version of universal flash storage (UFS)) controlled by the first control center in the network or Embedded MultiMedia Card (eMMC) or Secure Digital Card (SD) is greater than the access speed of the storage space of the first control center (such as low version UFS or eMMC or SD), it is determined that the storage space information meets the fifth preset rule.

In this embodiment, a first remaining storage space threshold may also be set for the comparison between the remaining storage space of other devices controlled by the first control center in the network and the remaining storage space of the first control center. For example, when the remaining storage space of other devices controlled by the first control center in the network is greater than or equal to the sum of the remaining storage space of the first control center and the first remaining storage space threshold, it is determined that the storage space information meets the fifth preset rule; and/or, when the remaining storage space of other devices controlled by the first control center in the network is not greater than or equal to the sum of the remaining storage space of the first control center and the first remaining storage space threshold, that is, the remaining storage space of other devices controlled by the first control center in the network is less than the sum of the remaining storage space of the first control center and the first remaining storage space threshold, it is determined that the storage space information does not meet the fifth preset rule.

For example, the remaining storage space of the first control center is 2000MB, the threshold of the first remaining storage space is 300MB, other devices controlled by the first control center in the network have a remaining storage space of 2300MB. At this time, when the remaining storage space of other devices controlled by the first control center in the network is equal to the sum of the remaining storage space of the first control center and the first remaining storage space threshold, it is determined that the storage space information meets the fifth preset rule.

In other embodiments, a second remaining storage space threshold may also be set, and the second remaining storage space threshold is the minimum remaining storage space that does not affect the ability of the first control center to provide management services. If the remaining storage space of the first control center is greater than or equal to the second remaining storage space threshold, it is determined that the storage space information does not meet the fifth preset rule; and/or, if the remaining storage space of the first control center is smaller than the second remaining storage space threshold, it is determined that the storage space information meets the fifth preset rule.

For example, the remaining storage space of the first control center is 1800MB, and the second remaining storage space threshold is 2000MB. Since the remaining storage space of the first control center is smaller than the second remaining storage space threshold, it may be determined that the storage space information meets the fifth preset rule.

Detecting whether the external environment information meets a sixth preset rule.

In an embodiment, detecting whether the external environment information meets the sixth preset rule. The sixth preset rule is a rule that determines by detecting external environment information that the first control center in the network is not suitable for continuing to serve as a control center to provide control functions.

In an embodiment, when it is detected that the brightness of the external ambient light reaches the brightness threshold and/or the loudness of the external environmental noise reaches the loudness threshold, it is determined that the external environment information meets the sixth preset rule; and/or, when it is detected that the brightness of external ambient light does not reach the brightness threshold and/or the loudness of external environmental noise does not reach the loudness threshold, it is determined that the external environment information does not meet the sixth preset rule.

For example, when the brightness of the external ambient light reaches the brightness threshold and the loudness of the external environmental noise reaches the loudness threshold, if the brightness is lower than the brightness threshold and the loudness is lower than the loudness threshold, it can be determined that the user is ready to enter or is already in a quiet state (such as sleep). At this time, it is inconvenient for the user to obtain devices such as mobile phones and PADs, but it is convenient for users to obtain devices such as smart bracelets and smart watches. Therefore, before the brightness of the external ambient light is lower than the brightness threshold and the loudness of the external ambient noise is lower than the loudness threshold, if the first control center is one of the devices that are currently inconvenient for users to obtain, such as mobile phones and PADs, it is determined that the external environment information meets the sixth preset rule; and/or before the brightness of the external ambient light is lower than the brightness threshold and the loudness of the external ambient noise is lower than the loudness threshold, if the first control center is a smart bracelet, a smart watch, and other devices that are currently readily available, it is determined that the external environment information does not meet the sixth preset rule.

In another embodiment, the external environment information may be time information and/or geographic information. If it is inconvenient to use the first control center (for example, it is inconvenient to use mobile phones during working duration, or in the early hours of the morning), or the place where the first control center is not allowed to be carried (such as the place where the mobile phone is not allowed to enter), it is determined that the external environment information meets the sixth preset rule.

Detecting whether the use environment information meets a seventh preset rule.

In an embodiment, detecting whether the use environment information meets the seventh preset rule. The seventh preset rule is a rule determined by detecting the use environment information that the first control center in the network is not suitable to continue to serve as the control center to provide control functions.

In an embodiment, if the user is in a sports environment, it is obvious that the user is inconvenient to use devices such as mobile phones and PADs, but it is convenient to use wearable devices such as smart bracelets and smart watches. Therefore, before the user is in the exercise environment, when the first control center is one of the devices that are inconvenient for the user to use when exercising, such as mobile phones and PADs, it is determined that the use environment information meets the seventh preset rule; and/or, before the user is in the exercise environment, when the first control center is one of the devices that are convenient for the user to use during exercise, such as smart bracelets and smart watches, it is determined that the use environment information does not meet the seventh preset rule.

Detecting whether the user is in a sports environment can be determined according to the scene mode (such as sports mode, outdoor mode, etc.) of the first control center, or according to the motion sensor of the first control center and/or other devices, or according to the camera data of the first control center and/or other devices.

In another embodiment, if the user is in a driving environment, it is obvious that the user is inconvenient to use devices such as mobile phones and PADs, but it is convenient to use devices such as smart watches, smart earphones, and vehicle terminals. Therefore, before the user is in the driving environment, when the first control center is one of the mobile phones, PADs and other devices that are inconvenient for the user to use, it is determined that the use environment information meets the seventh preset rule; and/or, before the user is in the driving environment, when the first control center is one of the devices that are convenient for the user to use in the driving environment, such as smart watches, smart earphones, and vehicle terminals, it is determined that the use environment information does not meet the seventh preset rule.

Detecting whether the user is in the driving environment can be determined according to the scene mode (such as driving mode, navigation mode, etc.) of the first control center, or according to motion sensors or geographical information of the first control center and/or other devices, or according to the camera data of the first control center and/or other devices, or according to the first control center and/or other device wireless connection information (such as accessed WIFI hotspots, paired and connected Bluetooth devices, etc.).

In another embodiment, if the user is in a home environment, it is obvious that the user is more convenient to use devices such as smart TVs and smart speakers. Therefore, before the user is in the home environment, when the first control center is one of the mobile phones, PADs and other devices that are inconvenient for the user to use, it is determined that the use environment information meets the seventh preset rule; and/or before the user is in the home environment, when the first control center is one of the devices that are convenient for the user to use in the home environment, such as smart TVs and smart speakers, it is determined that the use environment information does not meet the seventh preset rule.

Detecting whether the user is in the home environment can be determined according to the scene mode of the first control center (such as work mode, home mode, etc.), or according to the geographic information of the first control center and/or other devices, or according to the camera data of the first control center and/or other devices, or according to the wireless connection information of the first control center and/or other devices (such as accessed WIFI hotspots, paired and connected Bluetooth devices, etc.).

In an embodiment, if the user leaves the home or driving environment and switches to a new environment, such as a working environment, it is inconvenient for the user to use devices such as vehicle terminals and smart TVs, but it is convenient to use devices such as mobile phones and smart watches. Therefore, before the user is in a new environment, when the first control center is one of the inconvenient vehicle-mounted terminal, smart TV and other equipment for the user, it is determined that the use environment information meets the seventh preset rule; and/or, before the user is in a new environment, when the first control center is one of the mobile phones, smart watches and other devices that are convenient for the user to use at work, it is determined that the use environment information does not meet the seventh preset rule.

Detecting whether the user is in a non-home or non-driving environment can be determined according to the scene mode (such as work mode, sports mode, etc.) of the first control center, or according to the geographic information of the first control center and/or other devices, or according to the camera data of the first control center and/or other devices, or according to the wireless connection information of the first control center and/or other devices (such as accessed WIFI hotspots, paired and connected Bluetooth devices, etc.).

In another embodiment, if the user is in a meeting environment, it is inconvenient for the user to use devices such as smart earphones that need to be controlled by voice instructions, but it is convenient to use devices such as mobile phones and smart watches that can be controlled by touch instructions. Therefore, before the user is in the meeting environment, when the first control center is one of the devices such as smart earphones that are inconvenient for the user to use during the meeting, it is determined that the use environment information meets the seventh preset rule; and/or, before the user is in the meeting environment, when the first control center is one of the mobile phones, smart watches and other devices that are convenient for the user to use during the meeting, it is determined that the use environment information does not meet the seventh preset rule.

Detecting whether the traffic information meets an eighth preset rule.

In an embodiment, detecting whether the traffic information meets the eighth preset rule. The eighth preset rule is a rule determined by detecting traffic information that the first control center in the network is not suitable to continue to serve as a control center to provide control functions. In order not to affect the linkage of each device in the network, it is necessary to select a device with a large amount of remaining traffic as the control center. It may be that the remaining traffic of other devices controlled by the first control center in the network is greater than the remaining traffic of the first control center, it is determined that the traffic information meets the eighth preset rule.

In this embodiment, a first remaining traffic threshold may also be set for the comparison between the remaining traffic of other devices controlled by the first control center in the network and the remaining traffic of the first control center. For example, when the remaining traffic of other devices controlled by the first control center in the network is greater than or equal to the sum of the remaining traffic of the first control center and the first remaining traffic threshold, it is determined that the traffic information meets the eighth preset rule; and/or, when there is no other devices controlled by the first control center in the network, the remaining traffic of the device is greater than or equal to the sum of the remaining traffic of the first control center and the first remaining traffic threshold, that is, the remaining traffic of other devices controlled by the first control center in the network is less than the sum of the remaining traffic of the first control center and the first remaining traffic threshold, and it is determined that the traffic information does not meet the eighth preset rule.

For example, the remaining traffic of the first control center is 2000MB, the first remaining traffic threshold is 300MB, other devices controlled by the first control center in the network have a remaining traffic of 2300MB. At this time, when the remaining traffic of other devices controlled by the first control center in the network is equal to the sum of the remaining traffic of the first control center and the first remaining traffic threshold, it is determined that the traffic information meets the eighth preset rule.

In other embodiments, a second remaining traffic threshold may also be set, and the second remaining traffic threshold is the minimum remaining traffic that does not affect the ability of the first control center to provide management services. If the remaining traffic of the first control center is greater than or equal to the second remaining traffic threshold, it is determined that the traffic information does not meet the eighth preset rule; and/or, if the remaining traffic of the first control center is less than the second remaining traffic threshold, it is determined that the traffic information meets the eighth preset rule.

For example, the remaining traffic of the first control center is 1800MB, and the second remaining traffic threshold is 2000MB. Since the remaining traffic of the first control center is less than the second remaining traffic threshold, it can be determined that the traffic information meets the eighth preset rule.

Detecting whether the use habit information meets a ninth preset rule.

In an embodiment, detecting whether the use habit information meets the ninth preset rule. The ninth preset rule is a rule for determining that the first control center in the network is not suitable for continuing to serve as a control center to provide control functions by detecting use habit information.

In an embodiment, if users are used to running with smart earphones or smart watches at a certain time in the morning, watching videos on a PAD at a certain time in the evening, and using mobile phones to read at a certain time in the morning on weekends, the first control center at the corresponding time point is not a device conforming to the user habits, it may be determined that the ninth preset rule is met.

In another embodiment, if users are used to using different devices in different environments, such as watching smart TV at home, watching vehicle terminals in the car, and using smartphones in the company, etc., and the first control center in the corresponding environment is not a device conforming to user habits, it may be determined that the ninth preset rule is met.
detecting whether the currently used application information meets a tenth preset rule.

In an embodiment, detecting whether the currently used application information meets the tenth preset rule. The tenth preset rule is a rule for determining that the first control center in the network is not suitable to continue to serve as a control center to provide control functions by detecting the currently used application information.

In an embodiment, if the user is using the first control center to watch videos or play games, etc., in general, when watching videos and playing games, the corresponding device interfaces are displayed in full screen, which is inconvenient for users to switch to the corresponding application interface of the first control center to use the control functions of the first control center. Therefore, if the first control center is running video applications, game applications and other applications that are inconvenient to switch to other interfaces, it is determined that the currently used application information meets the tenth preset rule; and/or, if the first control center is running an application that facilitates switching to other interfaces, it is determined that the currently used application information does not meet the tenth preset rule.

In another embodiment, if the user is making a phone call, video chatting, or conference call, and it is inconvenient for the user to switch interfaces or controls at this time, it is determined that the currently used application information meets the tenth preset rule.

Detecting whether the distance information meets an eleventh preset rule.

In an embodiment, detecting whether the distance information meets the eleventh preset rule. The eleventh preset rule is a rule for determining that the first control center in the network is not suitable for continuing to serve as a control center to provide control functions by detecting distance information.

In an embodiment, when the distance between the user and the first control center exceeds a preset range, it is determined that the distance information meets the eleventh preset rule.

In an embodiment, each device in the network will have a certain relative distance when used by the user. When the distance between the first control center and other devices controlled by it is greater than or equal to a preset distance threshold, it is determined that the distance information meets the eleventh preset rule; and/or, when the distance between the first control center and other devices controlled by it is less than a preset distance threshold, it is determined that the distance information does not meet the eleventh preset rule.

In another embodiment, it can also be calculated that if each networked device acts as a control center. The total distance value between the device and other networked devices, the device with the shortest total distance value is taken as the candidate control center. If the first control center is different from the candidate control center, it is determined that the distance information meets the eleventh preset rule.
detecting whether the user physiological information meets a twelfth preset rule.

In an embodiment, detecting whether the user physiological information meets the twelfth preset rule. The twelfth preset rule is a rule for determining that the first control center in the network is not suitable to continue to serve as a control center to provide control functions by detecting user physiological information.

In an embodiment, when it is detected that the user physiological information reaches a preset physiological information threshold, it is determined that the user physiological information meets the twelfth preset rule. The user physiological information may be detected by the first control center and/or other devices. Physiological information may be at least one of heart rate, blood pressure, pulse, blood oxygen, and blood sugar.

If a user's heart rate is generally 70 to 80 beats/minute when he is in a non-sleep state, and the heart rate is generally 40 to 50 beats/minute when the user is in a sleep state, then the preset heart rate threshold can be set to 50 beats /minute. When it is detected that the user's heart rate reaches 50 beats/minute, it can be determined that the user is in a sleep state. If the first control center is not a wearable device such as a smart watch or a smart bracelet that is convenient for the user to acquire and operate, it is determined that the physiological information meets the twelfth preset rule.

For example, when the user is in a state of exercise, the heart rate is generally 100 to 130 times per minute. When the user's heart rate is detected to reach 110 times per minute, it can be determined that the user is in a state of exercise. If the first control center is a device that is inconvenient for the user to obtain and operate, such as a smart phone, it may also be determined that the physiological information meets the twelfth preset rule.

Operation S30, in response that the preset information meets the preset rule, performing a corresponding device control operation according to a preset strategy.

The purpose of performing the corresponding device control operation according to the preset strategy may be to transfer or migrate or duplicate or backup the relevant data and/or control functions of the first control center, or to output prompts and the like.

If the preset information meets the preset rule, the first control center performs corresponding control-related operations according to the preset strategy.

The operation S13 includes at least one of the following:
if the connection state information meets the first preset rule, performing a corresponding device control operation according to the first preset strategy.

In an embodiment, if the connection state information meets the first preset rule, the first control center performs a corresponding device control operation according to the first preset strategy.

The first preset strategy includes: switching to a new control center and/or outputting prompt information. The device for outputting prompt information may be the first control center or the new control center or other devices controlled by the first control center in the network.

In an embodiment, the new control center includes at least one of the following:
at least one of the other devices controlled by the first control center in the network; or
at least one of other devices controlled by the first control center in the network that do not meet the first preset rule; or
a device with the least number of connections among other devices controlled by the first control center in the network; or
among other devices controlled by the first control center in the network, the device has the smoothest connection state or the least number of disconnections.

If the network rate information meets the second preset rule, a corresponding device control operation is executed according to the second preset strategy.

If the network rate information meets the second preset rule, the first control center performs a corresponding device control operation according to the second preset strategy.

The second preset strategy includes: switching to a new control center and/or outputting prompt information. The device for outputting prompt information may be the first control center or the new control center or other devices controlled by the first control center in the network.

The new control center includes at least one of the following:
at least one of the other devices controlled by the first control center in the network; or
at least one of other devices controlled by the first control center in the network that do not meet the second preset rule; or
the device with the best network rate among other devices controlled by the first control center in the network.

If the device state information meets the third preset rule, a corresponding device control operation is performed according to the third preset strategy.

If the device state information meets the third preset rule, the first control center performs the corresponding device control operation according to the third preset strategy.

The third preset strategy includes: switching to a new control center and/or outputting prompt information. The device for outputting prompt information may be the first control center or the new control center or other devices controlled by the first control center in the network.

The new control center includes at least one of the following:
at least one of the other devices controlled by the first control center in the network; or
at least one of other devices controlled by the first control center in the network that do not meet the third preset rule; or
the device with the largest number of CPUs or the highest frequency among other devices controlled by the first control center in the network; or
the device with the largest number of GPUs or the highest frequency among other devices controlled by the first control center in the network; or
the device with the largest number of NPUs or the highest frequency among other devices controlled by the first control center in the network; or
the device with the largest memory capacity or the fastest processing speed among other devices controlled by the first control center in the network; or
the device with the shortest response time among other devices controlled by the first control center in the network; or
a device in a charging or non-charging state among other devices controlled by the first control center in the network; or
a device in a state of motion or non-motion among other devices controlled by the first control center in the network; or
a device in a non-stuck state among other devices controlled by the first control center in the network.

If the power information meets the fourth preset rule, a corresponding device control operation is executed according to the fourth preset strategy.

If the power information meets the fourth preset rule, the first control center performs a corresponding device control operation according to the fourth preset strategy.

The fourth preset strategy includes: switching to a new control center and/or outputting prompt information. The device for outputting prompt information may be the first control center or the new control center or other devices controlled by the first control center in the network.

The new control center includes at least one of the following:
at least one of the other devices controlled by the first control center in the network; or
at least one of other devices controlled by the first control center in the network that do not meet the fourth preset rule; or
the device with the most remaining power among other devices controlled by the first control center in the network; or
the device with the largest battery capacity among other devices controlled by the first control center in the network; or
the device with the longest available time corresponding to the power among other devices controlled by the first control center in the network.

If the storage space information meets the fifth preset rule, a corresponding device control operation is executed according to the fifth preset strategy.

If the storage space information meets the fifth preset rule, the first control center performs a corresponding device control operation according to the fifth preset strategy.

The fifth preset strategy includes: switching to a new control center and/or outputting prompt information. The device for outputting prompt information may be the first control center or the new control center or other devices controlled by the first control center in the network.

The new control center includes at least one of the following:
at least one of the other devices controlled by the first control center in the network; or
at least one of other devices controlled by the first control center in the network that do not meet the fifth preset rule; or
the device with the largest remaining storage space among other devices controlled by the first control center in the network; or
the device with the fastest storage space access speed among other devices controlled by the first control center in the network.

If the external environment information meets the sixth preset rule, a corresponding device control operation is executed according to the sixth preset strategy.

If the external environment information meets the sixth preset rule, the first control center performs corresponding device control operations according to the sixth preset strategy.

The sixth preset strategy includes: switching to a new control center and/or outputting prompt information. The device for outputting prompt information may be the first control center or the new control center or other devices controlled by the first control center in the network.

The new control center includes at least one of the following:
at least one of the other devices controlled by the first control center in the network; or,
at least one of other devices controlled by the first control center in the network that do not meet the sixth preset rule; or
a device that meets the time limit condition among other devices controlled by the first control center in the network; or
a device that meets the geographic restriction condition among other devices controlled by the first control center in the network.

If the use environment information meets the seventh preset rule, the corresponding device control operation is executed according to the seventh preset strategy.

If the use environment information meets the seventh preset rule, the first control center performs a corresponding device control operation according to the seventh preset strategy.

The seventh preset strategy includes: switching to a new control center and/or outputting prompt information. The device for outputting prompt information may be the first control center or the new control center or other devices controlled by the first control center in the network.

The new control center includes at least one of the following:
at least one of the other devices controlled by the first control center in the network; or
at least one of other devices controlled by the first control center in the network that do not satisfy the seventh preset rule; or
one of the devices that are convenient to use in the user's environment among the other devices controlled by the first control center in the network.

If the traffic information meets the eighth preset rule, a corresponding device control operation is executed according to the eighth preset strategy.

If the traffic information meets the eighth preset rule, the first control center performs a corresponding device control operation according to the eighth preset strategy.

The eighth preset strategy includes: switching to a new control center and/or outputting prompt information. The device for outputting prompt information may be the first control center or the new control center or other devices controlled by the first control center in the network.

The new control center includes at least one of the following:
at least one of the other devices controlled by the first control center in the network; or
at least one of other devices controlled by the first control center in the network that do not meet the eighth preset rule; or
the device with the most remaining traffic among other devices controlled by the first control center in the network.

If the use habit information meets the ninth preset rule, a corresponding device control operation is performed according to the ninth preset strategy.

If the use habit information meets the ninth preset rule, the first control center performs the corresponding device control operation according to the ninth preset strategy.

The ninth preset strategy includes: switching to a new control center and/or outputting prompt information. The device for outputting prompt information may be the first control center or the new control center or other devices controlled by the first control center in the network.

The new control center includes at least one of the following:
at least one of the other devices controlled by the first control center in the network; or
at least one of other devices controlled by the first control center in the network that do not meet the ninth preset rule; or
one of the other devices controlled by the first control center in the network that meets the user use habits; or
one of the other devices controlled by the first control center in the network that meets the use habits in the environment.

If the currently used application information meets the tenth preset rule, a corresponding device control operation is executed according to the tenth preset strategy.

If the currently used application information meets the tenth preset rule, the first control center performs a corresponding device control operation according to the tenth preset strategy.

The tenth preset strategy includes: switching to a new control center and/or outputting prompt information. The device for outputting prompt information may be the first control center or the new control center or other devices controlled by the first control center in the network.

The new control center includes at least one of the following:
at least one of the other devices controlled by the first control center in the network; or
at least one of other devices controlled by the first control center in the network that do not meet the tenth preset rule; or
one of the other devices controlled by the first control center in the network that is not currently running video applications or game applications or other preset applications; or
one of the other devices controlled by the first control center in the network that is not currently in a call or video chat or conference call or other preset use state.

If the distance information meets the eleventh preset rule, a corresponding device control operation is executed according to the eleventh preset strategy.

If the distance information meets the eleventh preset rule, the first control center performs the corresponding device control operation according to the eleventh preset strategy.

The eleventh preset strategy includes: switching to a new control center and/or outputting prompt information. The device for outputting prompt information may be the first control center or the new control center or other devices controlled by the first control center in the network.

The new control center includes at least one of the following:
at least one of the other devices controlled by the first control center in the network; or
at least one of other devices controlled by the first control center in the network that do not meet the eleventh preset rule; or
one of the devices currently closest to the user among other devices controlled by the first control center in the network; or,
one of the devices with the shortest total distance to other devices among the other devices controlled by the first control center in the network.

If the user physiological information meets the twelfth preset rule, a corresponding device control operation is executed according to the twelfth preset strategy.

If the user physiological information meets the twelfth preset rule, the first control center performs the corresponding device control operation according to the twelfth preset strategy.

The twelfth preset strategy includes: switching to a new control center and/or outputting prompt information. The device for outputting prompt information may be the first control center or the new control center or other devices controlled by the first control center in the network.

The new control center includes at least one of the following:
at least one of the other devices controlled by the first control center in the network; or
at least one of other devices controlled by the first control center in the network that do not meet the twelfth preset rule; or
one of the devices that is conveniently obtained by the current user among other devices controlled by the first control center in the network.

In this embodiment, S10, obtaining preset information, the preset information is provided by the first control center and/or other devices controlled by the first control center; S11, detecting whether the preset information meets a preset rule; S12, when the preset information meets the preset rule, performing a corresponding device control operation according to a preset strategy. A network is formed between the first control center and other devices controlled by it, and the first control center obtains preset information provided by the first control center and/or other devices controlled by the first control center. When the preset information meets the preset rules, the first control center can automatically perform corresponding device control operations on other devices controlled by the first control center in the network according to the preset strategy, such that the use of the first control center and other devices controlled by it is more intelligent, convenient and faster.

Based on the above-mentioned embodiment, another embodiment of the processing method of the present application is proposed, and the processing method further includes:
performing the corresponding device control operation.

Operation A10, in response that the preset information does not meet the first preset rule, the second preset rule, the third preset rule, the fourth preset rule, the fifth preset rule, the sixth preset rule, the seventh preset rule, the eighth preset rule, the ninth preset rule, the tenth preset rule, the eleventh preset rule, or the twelfth preset rule, setting the corresponding device as a second control center. The corresponding device is one of the devices controlled by the first control center.

In an embodiment, the first preset strategy sets the corresponding device as the second control center when the above-mentioned connection state information in the network does not meet the first preset rule. The second preset strategy sets the corresponding device as the second control center when the network rate information in the above-mentioned network does not meet the second preset rule. The third preset strategy sets the corresponding device as the second control center when the state information of the above-mentioned devices in the network does not meet the third preset rule. The fourth preset strategy sets the corresponding device as the second control center when the above-mentioned power information in the network does not meet the fourth preset rule. The fifth preset strategy sets the corresponding device as the second control center when the above-mentioned storage space information in the network does not meet the fifth preset rule. The sixth preset strategy sets the corresponding device as the second control center when the above-mentioned internal and external environment information in the network does not meet the sixth preset rule. The seventh preset strategy sets the corresponding device as the second control center when the above-mentioned use environment information in the network does not meet the seventh preset rule. The eighth preset strategy sets the corresponding device as the second control center when the above-mentioned traffic information in the network does not meet the eighth preset rule. The ninth preset strategy sets the corresponding device as the second control center when the use habit information in the above-mentioned network does not meet the ninth preset rule. The tenth preset strategy sets the corresponding device as the second control center when the application information currently used in the network does not meet the tenth preset rule. The eleventh preset strategy sets the corresponding device as the second control center when the above-mentioned distance information in the network does not meet the eleventh preset rule. The twelfth preset strategy sets the corresponding device as the second control center when the physiological information of the above-mentioned users in the network does not meet the twelfth preset rule. The corresponding device is one of the devices in the network other than the first control center, that is, one of the devices controlled by the first control center.

In an embodiment, for the case where the above-mentioned connection state information in the network does not meet the first preset rule, the corresponding device is set as the second control center through the first preset strategy. Since the first control center withdraws from the network, other devices controlled by the first control center can select the second control center through negotiation. The specific negotiation is to select the second control center according to the second preset rule, the third preset rule, the fourth preset rule, the fifth preset rule, the eighth preset rule or the ninth preset rule. The device with the longest available time corresponding to the electricity among other devices controlled by the first control center in the network that does not meet the fourth preset rule is taken as the second control center. The device with the largest remaining storage space among other devices controlled by the first control center in the network that does not meet the fifth preset rule is taken as the second control center.

For the case where the above-mentioned network rate information in the network does not meet the second preset rule, the corresponding device is set as the second control center through the second preset strategy, the device with the best network rate among other devices controlled by the first control center in the network can be taken as the second control center.

For the case where the corresponding device is set as the second control center when the state information of the above-mentioned devices in the network does not meet the third preset rule through the third preset strategy, among the other devices controlled by the first control center in the network, the device with the shortest response time corresponding to the device state or one of the devices in the non-charging state among the other devices controlled by the first control center in the network can be taken as the second control center. If there is only one device in the non-charging state among other devices controlled by the first control center in the network, then the device is taken as the second control center. If there are multiple devices in the non-charging state among other devices controlled by the first control center in the network, the second control center can be selected according to the second preset rule, the third preset rule, the fourth preset rule, the fifth preset rule, the eighth preset rule or the ninth preset rule. The device with the longest available time corresponding to the electricity among other devices controlled by the first control center in the network that does not meet the fourth preset rule is taken as the second control center. The device with the largest remaining storage space among other devices controlled by the first control center in the network that does not meet the fifth preset rule is taken as the second control center.

For the case of setting the corresponding device as the second control center when the power information in the network does not meet the fourth preset rule through the fourth preset strategy, among the other devices controlled by the first control center in the network, the device with the longest available time corresponding to the electricity can be taken as the second control center.

For the case where the above-mentioned storage space information in the network does not meet the fifth preset rule, the corresponding device is set as the second control center through the fifth preset strategy, among the other devices controlled by the first control center in the network, the device with the largest remaining storage space can be taken as the second control center.

For the case where the above-mentioned networked internal and external environment information does not meet the sixth preset rule, the corresponding device is set as the second control center through the sixth preset strategy. If there is only one device that is conveniently obtained when the user wakes up from a sleep state in the network, the device is taken as the second control center. If there are multiple devices that are conveniently obtained when the user wakes up from a sleep state in the network, the second control center can be selected according to the second preset rule, the third preset rule, the fourth preset rule, the fifth preset rule, the eighth preset rule or the ninth preset rule. The device with the longest available time corresponding to the electricity among other devices controlled by the first control center in the network that does not meet the fourth preset rule is taken as the second control center. The device with the largest remaining storage space among other devices controlled by the first control center in the network that does not meet the fifth preset rule is taken as the second control center.

For the case where the above-mentioned use environment information in the network does not meet the seventh preset rule and the corresponding device is set as the second control center through the seventh preset strategy, if there is only one device that is convenient for the user to use in the driving environment in the network, this device will be taken as the second control center. If there are multiple devices that are convenient for the user to use in the driving environment in the network, the second control center can be selected according to the second preset rule, the third preset rule, the fourth preset rule, the fifth preset rule, the eighth preset rule or the ninth preset rule. The device with the longest available time corresponding to the electricity among other devices controlled by the first control center in the network that does not meet the fourth preset rule is taken as the second control center. The device with the largest remaining storage space among other devices controlled by the first control center in the network that does not meet the fifth preset rule is taken as the second control center.

For the case where the above-mentioned traffic information in the network does not meet the eighth preset rule and the corresponding device is set as the second control center through the eighth preset strategy, among the other devices controlled by the first control center in the network, the device with the most remaining traffic can be taken as the second control center.

For the case where the above-mentioned use habit information in the network does not meet the ninth preset rule and the corresponding device is set as the second control center through the ninth preset strategy, the device that triggers the use habit condition in the network can be taken as the second control center.

For the case where the corresponding device when the application information currently used in the above-mentioned network does not meet the tenth preset rule is set as the second control center through the tenth preset strategy. Other devices controlled by the first control center can select the second control center through negotiation. The specific negotiation is to select the second control center according to the second preset rule, the third preset rule corresponding to the device state part, the fourth preset rule, the fifth preset rule, the eighth preset rule or the ninth preset rule. The device with the longest available time corresponding to the electricity among other devices controlled by the first control center in the network that does not meet the fourth preset rule is taken as the second control center. The device with the largest remaining storage space among other devices controlled by the first control center in the network that does not meet the fifth preset rule is taken as the second control center.

For the case where the above-mentioned distance information in the network does not meet the eleventh preset rule and the corresponding device is set as the second control center through the eleventh preset strategy. Other devices controlled by the first control center can select the second control center through negotiation. The specific negotiation is to select the second control center according to the second preset rule, the third preset rule corresponding to the device state part, the fourth preset rule, the fifth preset rule, the eighth preset rule or the ninth preset rule. The device with the longest available time corresponding to the electricity among other devices controlled by the first control center in the network that does not meet the fourth preset rule is taken as the second control center. The device with the largest remaining storage space among other devices controlled by the first control center in the network that does not meet the fifth preset rule is taken as the second control center.

For the case where the corresponding device when the physiological information of the above-mentioned users in the network does not meet the twelfth preset rule is set as the second control center through the twelfth preset strategy, if there is only one device that is conveniently obtained when the user wakes up from a sleep state in the network, the device is used as the second control center. If there are multiple devices that are conveniently obtained when the user wakes up from a sleep state in the network, the second control center can be selected according to the second preset rule, the third preset rule, the fourth preset rule, the fifth preset rule, the eighth preset rule or the ninth preset rule. The device with the longest available time corresponding to the electricity among other devices controlled by the first control center in the network that does not meet the fourth preset rule is taken as the second control center. The device with the largest remaining storage space among other devices controlled by the first control center in the network that does not meet the fifth preset rule is used as the second control center.

In an embodiment, the processing method further includes:
Operation A12, migrating relevant data in the first control center to the second control center; and/or
transferring the control functions of the first control center to the second control center.

The first control center migrates relevant data in the first control center to the second control center; and/or the first control center transfers the control function of the first control center to the second control center.

When the first control center transfers the control function of the first control center to the second control center, the relevant data in the first control center can be migrated to the second control center, so that the second control center can perform the control function according to the relevant data. In addition, all devices in the network have the ability to act as a control center. Therefore, when the first control center does not migrate the relevant data in the first control center to the second control center, but only transfers the control function of the first control center to the second control center, the second control center can also perform the control function.

When the first control center is performing the control function, it can synchronize relevant data to the cloud, and if the first control center meets the first preset rule, since the first control center has not yet had time to migrate relevant data to the second control center, it has withdrawn from the Internet, other devices controlled by the first control center in the network can continue to use the relevant data before the first control center exits the network, such as maintaining the setting item parameters. The second control center obtains relevant data from the cloud before the first control center exits the network. For the case where the first control center meets the eleventh preset rule, the first control center starts to migrate relevant data when the distance from other devices it controls is greater than or equal to a preset distance threshold, so as to ensure that the relevant data migration is completed before the first control center is disconnected from the network.

In an embodiment, the relevant data includes at least one of the following: connection information data, setting item parameter data and relevant download data.

In an embodiment, the relevant data includes at least one of connection information data, setting item parameter data and relevant download data.

In an embodiment, the relevant data further includes at least one first relevant data and/or at least one second relevant data, and the operation A12 includes at least one of the following:
only backing up or transferring the first relevant data in the first control center to the second control center;
only backing up or transferring second relevant data corresponding to the first relevant data in the first control center to the second control center;
in addition to backing up or transferring the first relevant data in the first control center to the second control center, backing up or transferring the second relevant data corresponding to the first relevant data to the second control center ;
backing up or transferring the first relevant data and corresponding update data in the first control center to the second control center;
backing up or transferring the second relevant data corresponding to the first relevant data and the corresponding update data in the first control center to the second control center; and
backing up or transferring the first relevant data and the corresponding update data in the first control center, and the update data of the second relevant data corresponding to the first relevant data to the second control center.

The relevant data also includes at least one first relevant data and/or at least one second relevant data. After the second control center is determined, the relevant data in the first control center can be selectively backed up or transferred to the second control center, so that the second control center can perform control functions according to the relevant data. The way of backing up or transferring the first relevant data and the second relevant data may include at least one of the following: only backing up or transferring the first relevant data in the first control center to the second control center; only backing up or transferring the second relevant data in the first control center to the second control center; in addition to backing up or transferring the first relevant data in the first control center to the second control center, backing up or transferring the second relevant data corresponding to the first relevant data to the second control center; backing up or transferring the first relevant data and corresponding update data in the first control center to the second control center; backing up or transferring the second relevant data and corresponding update data in the first control center to the second control center; backing up or transferring the first relevant data and the corresponding update data in the first control center, and the update data of the second relevant data to the second control center.

For the connection information data, the first relevant data may be connection information between the first control center and other devices controlled by the first control center in the network; the second relevant data may be connection information between other devices controlled by the first control center in the network; the update data may be the data corresponding to the relevant data updated by the first control center during the process of backing up or transferring the relevant data, during the process of backing up or transferring relevant data, if there are devices outside the network joining the network and connecting with the first control center, then, the update data at this time is the connection information between the device joining the network and the first control center corresponding to the first relevant data.

For the setting item parameter data, the first relevant data may be the setting data corresponding to the shortcut function, such as the setting data for quickly opening the music playing function. The second relevant data may be an application (such as a music player) or a local file (such as music, video, sound effect) associated with the shortcut function. The update data may be the data corresponding to the relevant data updated by the first control center during the process of backing up or transferring the relevant data. During the process of backing up or transferring relevant data, if the setting data corresponding to the shortcut function changes, the opening gesture instruction of the shortcut function has changed, from "double-click" the button corresponding to the shortcut function to "click" the button corresponding to the shortcut function, then the update data at this time is the setting data corresponding to the "click" gesture instruction to open the shortcut function.

For the relevant download data, the first relevant data may be data such as the version number, release time, and installation package of the control center application. The second relevant data may be data generated during the operation of the control center application. The update data may be data corresponding to the relevant data updated by the first control center. During the process of backing up or transferring the relevant data, the first control center generates data during the operation of the control center application.

In an embodiment, when the first control center transfers the control functions of the first control center to the second control center, at least one of connection information data, setting item parameter data and relevant download data in the first control center can be migrated to the second control center. For example, the connection information data is migrated to the second control center, so that the second control center can establish a connection relationship with other devices controlled by the first control center according to the connection information data. For example, according to the physical address of the device in the connection information data, the second control center directly initiates a connection request to the device corresponding to the physical address of the device, which is not necessary to first search for devices within the connectable range of the second control center to obtain the physical addresses of the devices, so as to initiate a connection request.

In an embodiment, the migration manner of the relevant data includes at least one of the following: synchronous, asynchronous, real-time, appointment time, according to user settings, according to user habits, same as last selection or setting.

In an embodiment, the migration methods of relevant data may be different, and may include at least one of synchronous, asynchronous, real-time, appointment time, according to user settings, according to user habits, same as last selection or setting.

In an embodiment, the relevant data can be migrated synchronously while setting up the second control center, and synchronous migration includes at least real-time migration. The relevant data can be migrated asynchronously when setting up the second control center. The migration mode of the asynchronous migration includes at least an appointment time. The migration method of the appointment time is for the user to set a specific migration time. According to the migration method set by the user, the user decides whether to migrate the relevant data, including when to migrate the relevant data and whether to migrate the relevant data, when to migrate relevant data includes one of synchronous, asynchronous, real-time, and appointment time. According to user habits, it is the most frequent migration method among the migration methods used by users. Similarly, it includes when to migrate relevant data and whether to migrate relevant data, and when to migrate relevant data includes one of synchronous, asynchronous, real-time, and appointment time. Same as the last selection or set to continue the migration method when switching the control center last time. Similarly, it includes when to migrate relevant data and whether to migrate relevant data, and when to migrate relevant data includes one of synchronous, asynchronous, real-time, and appointment time.

In an embodiment, the processing method further includes:
operation A13, before migrating or transferring or duplicating or backing up the control function of the first control center to the second control center, obtaining first corresponding information related to the second control center.

In an embodiment, before the control function of the first control center is migrated or transferred or copied or backed up to the second control center, the first corresponding information related to the second control center is obtained.

Operation A14, processing the first corresponding information.

In an embodiment, the first corresponding information is processed.

In an embodiment, the processing the first corresponding information includes at least one of the following:
If the first corresponding information meets the first preset condition, then performing the operation of transferring the control function of the first control center to the second control center;
If the first corresponding information does not meet the first preset condition, not performing the operation of transferring the control function of the first control center to the second control center, and/or outputting prompt information at the first control center and/or the second control center.

In an embodiment, if the first corresponding information meets the first preset condition, the operation of transferring the control function of the first control center to the second control center is performed; and if the first corresponding information does not meet the first preset condition, the operation of transferring the control function of the first control center to the second control center is not performed, and/or the prompt information is output at the first control center and/or the second control center.

In an embodiment, the first corresponding information includes the first instruction information input on the second control center and/or at least one of connection state information, network rate information, device state information, power information, storage space information, external environment information, use environment information, traffic information, use habit information, currently used application information, distance information, and user physiological information of the second control center. The meeting the first preset condition includes at least one of the following:
If the first instruction information is biometric information, and the biometric information meets preset biometric information, meeting the first preset condition;
If the first instruction information is password information, and the password information meets preset password information, meeting the first preset condition;
If at least one of the connection state information, the network rate information, the device state information, the power information, the storage space information, the external environment information, the use environment information, the traffic information, the use habit information, the currently used application information, the distance information, and the user physiological information of the second control center meets the second preset condition, meeting the first preset condition.

In an embodiment, the first corresponding information includes the first instruction information input on the second control center and/or at least one of the connection state information, the network rate information, the device state information, the power information, the storage space information, the external environment information, the use environment information, the traffic information, the use habit information, the currently used application information, the distance information, and the user physiological information of the second control center.

For the case where the first corresponding information is the first instruction information input on the second control center, before the first control center transfers the control function, whether the control function can be transferred to the second control center needs to be determined according to whether the first instruction information input by the user on the second control center meets the first preset condition. If the first instruction information meets the first preset condition, it means that the first control center can transfer the control function to the second control center, and perform the operation of transferring the control function of the first control center to the second control center. If the first instruction information does not meet the first preset condition, the operation of transferring the control function of the first control center to the second control center is not executed, and/or output prompt information at the first control center and/or the second control center. The form of outputting prompt information includes, but is not limited to, voice prompts and screen pop-up prompts. The main purpose of determining whether the first instruction information meets the first preset condition is to identify whether the current user of the second control center is a registered user, that is, to determine whether the current user of the second control center is the owner. If the current user is the owner, it means that the control function of the first control center can be transferred. If the current user is not the owner, in order to prevent the current user from issuing misoperation instructions to the devices in the network, the control function of the first control center should not be transferred to the second control center.

In an embodiment, if the first instruction information is biometric information, and the biometric information meets the preset biometric information, then the first preset condition is met. The preset biometric information is the biometric information of the owner saved in the first control center, such as fingerprint information, iris information, and face information. The biometric information can also be obtained by the first control center from the second control center. If the acquired biometric information matches the preset biometric, and the acquired fingerprint information matches the preset fingerprint information, then the first instruction information meets the first preset condition.

In an embodiment, if the first instruction information is password information, and the password information meets the preset password information, the first preset condition is met. The preset password information is the password information preset by the owner saved in the first control center, such as digital password information, pattern password information. The password information can also be obtained by the first control center from the second control center. If the acquired password information matches the preset password information, and the acquired digital password information matches the preset digital password information, the first instruction information meets the first preset condition.

When the first corresponding information is at least one of the connection state information, the network rate information, the device state information, the power information, the storage space information, the external environment information, the use environment information, the traffic information, the use habit information, the currently used application information, the distance information, and the user physiological information of the second control center, before the first control center transfers the control function, whether the control function can be transferred to the second control center needs to be determined according to at least one of the connection state information, the network rate information, the device state information, the power information, the storage space information, the external environment information, the use environment information, the traffic information, the use habit information, the currently used application information, the distance information, and the user physiological information of the second control center meeting the second preset condition. When at least one of the connection state information, the network rate information, the device state information, the power information, the storage space information, the external environment information, the use environment information, the traffic information, the use habit information, the currently used application information, the distance information, and the user physiological information of the second control center meets the second preset condition, indicating that the first preset condition is met, the first control center can transfer the control function to the second control center, and perform the operation of transferring the control function of the first control center to the second control center. If the connection state information, the network rate information, the device state information, the power information, the storage space information, the external environment information, the use environment information, the traffic information, the use habit information, the currently used application information, the distance information, and the user physiological information of the second control center do not meet the second preset condition, indicating that the first preset condition is not met, then the operation of transferring the control function of the first control center to the second control center is not performed, and/or prompt information is output at the first control center and/or the second control center. In an embodiment, the form of output prompt information includes but not limited to voice prompts and screen pop-up prompts to prompt the user that the transfer of the control function of the first control center failed and the reasons for the transfer failure, such as the traffic information of the second control center does not meet the second preset condition.

In an embodiment, at least one of the connection state information, the network rate information, the device state information, the power information, the storage space information, the external environment information, the use environment information, the traffic information, the use habit information, the currently used application information, the distance information, and the user physiological information of the second control center meets the second preset condition, the first preset condition is met. The second preset condition is to satisfy the condition that the control function is switched from the first control center to the second control center.

In an embodiment, meeting the second preset condition includes that at least one of: the connection state information of the second control center is that the first control center has not rejoined the network, the network rate corresponding to the network rate information of the second control center is the fastest network rate among the network rates corresponding to the network rate information of other devices controlled by the first control center in the network, the response time corresponding to the device state information of the second control center is the shortest response time among the response times corresponding to the device state information of other devices controlled by the first control center in the network, the device state information of the second control center is that the second control center is in a non-charging state, the available time corresponding to the power information of the second control center is the longest available time among the available times corresponding to the power information of other devices controlled by the first control center in the network, the remaining storage space corresponding to the storage space information of the second control center is the largest remaining storage space among the remaining storage spaces corresponding to the storage space information of other devices controlled by the first control center in the network, the ambient light brightness corresponding to the external environment information of the second control center is lower than the threshold value and the loudness of the external environment noise is lower than the threshold value, the use environment information of the second control center is that the user is in a sports environment or the user is in a driving environment, the remaining traffic corresponding to the traffic information of the second control center is the largest remaining traffic among the remaining traffic corresponding to the traffic information of other devices controlled by the first control center in the network, the use habit information of the second control center is to keep triggering use habit conditions, the currently used application information of the second control center is convenient for the running application to switch to other interfaces, the distance between the second control center corresponding to the distance information of the second control center and other devices controlled by the first control center is less than the preset distance threshold, and the user's heart rate corresponding to the user physiological information of the second control center is less than or equal to the preset heart rate threshold.

In an embodiment, the processing method further includes:
Operation A15, after migrating or transferring or duplicating or backing up the control function of the first control center to the second control center, receiving second instruction information sent by other devices controlled by the second control center. In an embodiment, the second instruction information is input by a user on other devices controlled by the second control center.

In an embodiment, after migrating or transferring or duplicating or backing up the control function of the first control center to the second control center, the second control center receives the second instruction information sent by other devices controlled by the second control center. The second instruction information is input by the user on other devices controlled by the second control center. Other devices controlled by the second control center in the network can be used as user instruction input devices. The user instruction input device obtains the second instruction information through the corresponding control center application, and then sends the obtained second instruction information to the second control center. Which other device controlled by the second control center in the network will obtain the second instruction information can be determined according to the actual usage of the user. If the user is currently using a smart watch, the smart watch obtains the second instruction information. Whether the user is using the device can be determined by whether the device is unlocked (such as smartphone fingerprint unlocking), or whether the device is used as an output unit to provide services for the user, such as the user listening to music through smart earphones.

In an embodiment, other devices controlled by the second control center include at least the first device, the second instruction information includes at least third instruction information, and the third instruction information includes at least one of the following:
The first voice instruction information, the first interface operation instruction information, the first preset screen touch gesture instruction information, the first preset space gesture instruction information, and the first gesture instruction information.

Other devices controlled by the second control center include at least the first device. The second instruction information includes at least third instruction information. The third instruction information includes at least one of first voice instruction information, first interface operation instruction information, first preset screen touch gesture instruction information, first preset air gesture instruction information, and first gesture instruction information. In an embodiment, the first device is a device with a display function among other devices controlled by the second control center in the network, such as a PAD.

In an embodiment, the first voice instruction information is the instruction information input by the user through voice, including "play music on the mobile phone", "turn down the volume of the earphone by 10%" and so on. The first interface operation instruction information is the interface operation instruction information issued by the user by operating the corresponding control center application interface displayed on the display screen of the first device. The first preset screen touch gesture instruction information is the screen touch gesture instruction information sent by the user through the corresponding control center application operation interface displayed on the display screen of the first device to make a touch gesture. For example, draw a "circle" on the application operation interface of the control center to open the application or function of the corresponding device in the network, such as opening the camera function of the mobile phone. The first preset air gesture instruction information is similar to the first preset screen touch gesture instruction information, but the user does not need to touch the display screen of the first device. In the identifiable area above the application operation interface of the control center, you can issue an air gesture instruction to draw a "circle" to open the application or function of the corresponding device in the network, such as turning on the camera function of the mobile phone. The first gesture instruction information is the instruction information obtained by recognizing the user's gesture, for example, the user quickly swipes the first device to the left to start the application or function of the corresponding device in the network, such as turning on the camera function of the mobile phone.

In an embodiment, other devices controlled by the second control center also include a second device, and the second instruction information also includes fourth instruction information, and the fourth instruction information includes at least one of the following:
the second voice instruction information and the second gesture instruction information.

Other devices controlled by the second control center also include a second device, the second instruction information further includes fourth instruction information, and the fourth instruction information includes at least one of second voice instruction information and second gesture instruction information. The second device is a device without a display function among other devices controlled by the second control center in the network, such as a smart earphone.

In an embodiment, the second voice instruction information is instruction information input by the user through voice, including "play music using the mobile phone", "turn down the volume of the earphone by 10%" and so on. The second gesture instruction information is instruction information acquired by recognizing the user's gesture. For example, the user takes off the smart earphone to control the smart earphone to stop playing audio, or control the device that inputs audio to the smart earphone to stop outputting audio to the smart earphone.

Operation A16, responding to the second instruction information.

After receiving the second instruction information, the second control center responds to the second instruction information.

The second control center analyzes the second instruction information, and sends a corresponding control instruction to the networked device corresponding to the instruction according to the analyzed specific instruction, to respond to the second instruction information sent by the user. If the user enters the instruction information of "play music on the mobile phone" by voice, the second control center parses out that the specific instruction of the "play music with mobile phone" instruction information is to control the mobile phone to play music, and then sends an instruction to play music to mobile phones in the network, to respond to the "play music with mobile phone" instruction information sent by the user.

In other embodiments, in addition to other devices controlled by the second control center in the network as user instruction input devices, the second control center can also be directly used as user instruction input devices. The second control center acquires fifth instruction information input by the user on the second control center.

In an embodiment, the fifth instruction information includes at least one of the following: the third voice instruction information, the third interface operation instruction information, the third preset screen touch gesture instruction information, the third preset air gesture instruction information and the third gesture instruction information.

In an embodiment, the fifth instruction information includes at least one of the third voice instruction information, the third interface operation instruction information, the third preset screen touch gesture instruction information, the third preset air gesture instruction information and the third gesture instruction information. The third voice instruction information is the instruction information input by the user through voice, including "play music on the mobile phone", "turn down the volume of the earphone by 10%" and so on. The third interface operation instruction information is the interface operation instruction information issued by the user through operating the corresponding control center application interface displayed on the display screen of the second control center. The third preset screen touch gesture instruction information is the screen touch gesture instruction information sent by the user through a touch gesture on the corresponding control center application operation interface displayed on the display screen of the second control center. For example, draw a "circle" on the application operation interface of the control center to open the application or function of the corresponding device in the network, such as opening the camera function of the mobile phone. The third preset air gesture instruction information is similar to the first preset screen touch gesture instruction information, but the user does not need to touch the display screen of the second control center. In the identifiable area above the application operation interface of the control center, you can issue an air gesture instruction to draw a "circle" to open the application or function of the corresponding device in the network, such as turning on the camera function of the mobile phone. The third gesture instruction information is the instruction information obtained by recognizing the user's gesture, for example, the user quickly swipes the second control center to the left to start the application or function of the corresponding device in the network, such as turning on the camera function of the mobile phone.

In an embodiment, the processing method further includes:
Operation A17, after migrating or transferring or duplicating or backing up the control function of the first control center to the second control center, outputting relevant prompt information at the first control center and/or the second control center.

In an embodiment, after migrating or transferring or duplicating or backing up the control function of the first control center to the second control center, relevant prompt information at the first control center and/or the second control center is output. The relevant prompt information is used to prompt the user that the control center has been switched from the first control center to the second control center, the device that outputs relevant prompt information may be the second control center, or other devices controlled by the second control center in the network, including the first control center. The relevant prompt information can also be used to ask the user whether to transfer the control function from the second control center back to the first control center to meet the user's needs. If the first control center is a mobile phone, and the mobile phone does not satisfy the fourth preset rule, the control function is automatically transferred to the PAD so that the PAD acts as the second control center. But the user must use the mobile phone at this time and is not convenient to use the PAD, then the user can transfer the control function from the PAD to the mobile phone through the relevant prompt information. The relevant prompt information can also be used to ask the user whether to use the second control center regularly to manage other devices in the network. In other embodiments, after the control function is transferred from the first control center to the second control center, relevant prompt information may not be output. However, when the second control center receives user instruction information for the first time, the second control center prompts the user to transfer the control function from the first control center to the second control center.

The relevant prompt information includes at least one of the following: text information, voice information, lighting information, and vibration information.

The relevant prompt information includes at least one of text information, voice information, light information, and vibration information. In an embodiment, the text information can be output through a pop-up window on the display screen of the device in the network. If the second control center is a mobile phone, output text prompt information "The control center has been switched to this device", "Whether to switch the control center back to XX device" or "Whether to fix the control center to this device". Specifically, you can also set the display duration of the pop-up window, such as automatically closing after 0.5 seconds. The voice information can be output through the speaker of the equipment in the network, such as the voice prompt information output by the second control center, the contents of which can be "the control center has been switched to this device", "whether to switch the control center back to XX device" or "whether to fix the control center to this device". The light information can be output through the flashlight of the networked device, such as the preset flash mode to remind the user that the control center has switched to the device. The preset flash mode can flash once every fixed time, and flash continuously for a period of time. If the user unlocks the light information output device at this time, it is also possible to output prompt information to the user "the control center has been switched to this device", "whether to switch the control center back to XX device" or "whether to fix the control center to this device" to the user by outputting text information or outputting voice information. Vibration information can be output through the vibration function of the networked device, such as the preset vibration method to remind the user that the control center has switched to the device. The preset vibration method can be to vibrate once at a fixed interval, and vibrate continuously for a period of time. If the user unlocks the light information output device at this time, it is also possible to output prompt information to the user "the control center has been switched to this device", "whether to switch the control center back to XX device" or "whether to fix the control center to this device" to the user by outputting text information or outputting voice information.

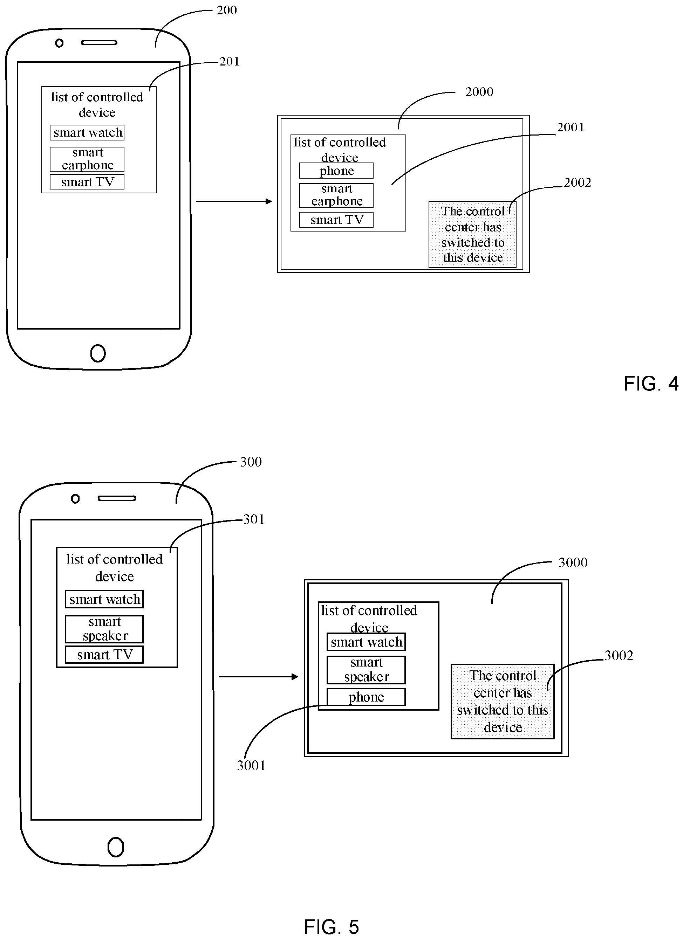

For example, as shown in FIG. 4, 200 is the first control center, which is a mobile phone, and 201 is a list of devices controlled by the mobile phone, including smart watches, smart earphones and smart TVs. 2000 is the second control center, which is a smart watch controlled by a mobile phone. 2001 is the list of devices controlled by the smart watch after the control center is switched to the smart watch, including the first control center mobile phone, smart earphones and smart TV. 2002 is the pop-up box prompt information output by the second control center after the control center is switched from the first control center to the second control center. Of course, the pop-up box can also be output by the first control center.

For another example, as shown in FIG. 5, 300 is the first control center, which is a mobile phone. 301 is a list of devices controlled by the mobile phone, including smart watches, smart speakers and smart TVs. 3000 is the second control center, which is a smart TV controlled by a mobile phone. 3001 is the list of devices controlled by the smart TV after the control center is switched to the smart TV, including the first control center mobile phone, smart speakers and smart watches. 3002 is the pop-up box prompt information output by the second control center after the control center is switched from the first control center to the second control center. Of course, the pop-up box can also be output by the first control center.

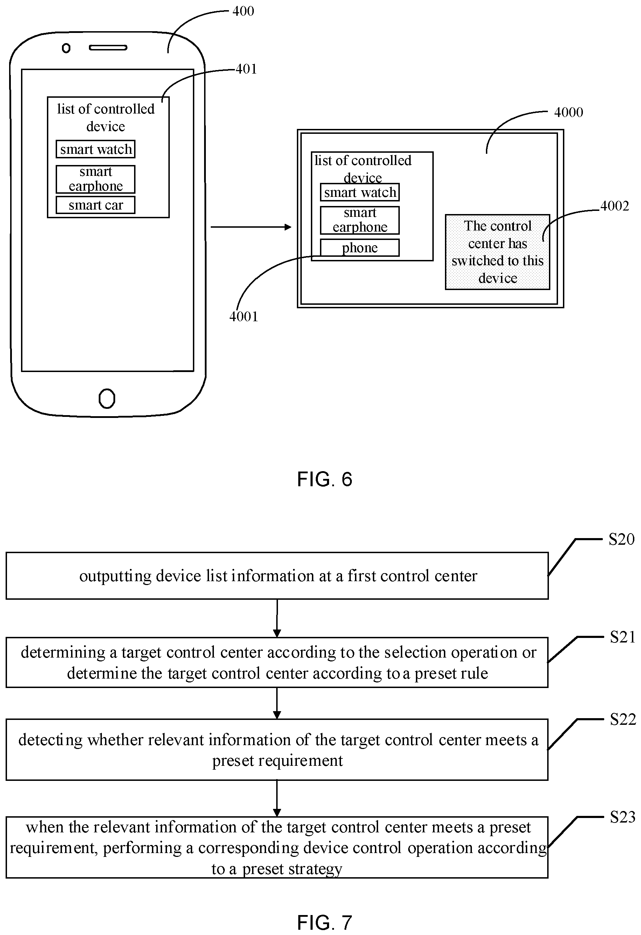

For another example, as shown in FIG. 6, 400 is the first control center, which is a mobile phone. 401 is a list of devices controlled by the mobile phone, including smart watches, smart earphones and smart cars. 4000 is the second control center, which is the central control display corresponding to the smart car controlled by the mobile phone. 4001 is the list of devices controlled by the smart car after the control center is switched to the smart car, including the first control center mobile phone, smart earphones and smart watches. 4002 is the pop-up box prompt information output by the central control display corresponding to the smart car in the second control center after the control center is switched from the first control center to the second control center. The pop-up box can also be output by the first control center.

In this embodiment, by migrating relevant data from the first control center to the second control center, identifying whether the user of the second control center is a registered user and obtaining at least one of one of the connection state information, the network rate information, the device state information, the power information, the storage space information, the external environment information, the use environment information, the traffic information, the use habit information, the currently used application information, the distance information, and the user physiological information through the second control center to determine whether the second control center is suitable as a control center again, to ensure that the second control center can better perform the control function and is suitable as the control center. In addition, after the control center is switched, relevant prompt information is output to remind the user, which improves the user experience.

In an embodiment, the present application provides another embodiment of the processing method. As shown in FIG. 7, the processing method includes:
S20, outputting device list information at the first control center, the device includes at least one other device controlled by the first control center.

The device list information is output at the first control center. The device includes at least one other device controlled by the first control center, and the device list information may be list information consisting of icons and names representing devices.

Before the operation S20, the method includes:
Operation S24, determining whether it is a preset mode;
Operation S25, if yes, performing the operation S20.

The first control center determines whether it is currently in the preset mode, and if it is currently in the preset mode, the operation of outputting the device list information at the first control center is performed. If it is not currently in the preset mode, the operation of outputting the device list information at the first control center is not performed. The preset modes include smart mode, automatic switching mode and other modes that support switching control centers.

S21, determining the target control center according to the selection operation, or determining the target control center according to preset rules.

The first control center determines the target control center according to the user's selection operation. The first control center selects a certain device as the target control center through the user's selection operation in the output device list information.

The preset rule can be the same as the user's last selection, or can be the first, middle or last one in the default selection device list, can also be set as the one with the most successes or the least failures of the target control center within a certain period of time (such as the past week, or the past month, or the complete historical period), can also choose one at random, can also be the one that is most convenient (such as being used) according to the user's use habits or operations, can also be one of at least one of network rate information, state information, environment information, use information, distance information, and user physiological information that meets the requirements (if multiple devices meet the requirements at the same time, they can also be sorted according to the corresponding parameter values, and the largest one is preferred).

S22, detecting whether the relevant information of the target control center meets the preset requirement.

During the use of wearable smart devices, terminal devices (such as mobile phone, Portable Android Device (PAD), tablet computer) will establish a connection relationship with wearable smart devices (such as smart watches, smart bracelets, smart earphones, etc.), smart home devices (such as smart TV, smart speakers, etc.), and Internet of Vehicles devices (such as smart cars, vehicle terminals, etc.) to form a network and set up a control center. The control center can be any device in the networked devices, so as to facilitate the management and use of the networked devices by the user. In this embodiment, the control function is provided by the first control center, and the managed devices are the first control center itself and other devices controlled by the first control center. In addition, the first control center may be a terminal device, or may be a wearable smart device, a smart home device, or an Internet of Vehicles device. When the control center is not static, it can be switched between connected devices such as wearable smart devices and terminal devices. The switch of the control center is based on the user's selection operation and the relevant information of the target control center, which is provided by the first control center and other devices controlled by the first control center.

After the first control center determines the target control center according to the user's selection operation, it detects whether the relevant information of the target control center meets the preset requirement.

The relevant information includes at least one of the following: network rate information, state information, environment information, use information, distance information, and user physiological information.

For the network rate information, in the above-mentioned network, the devices in the network generally have the function of connecting to the Internet, such as smart watches, mobile phones, smart TVs and smart cars, etc. The corresponding network rate information will be affected by the device itself (For example, the device is downloading data or there are many current Internet applications, etc., resulting in a slow network) or by external factors (such as poor signal at the location of the device), resulting in a low network rate.

The state information includes at least one of the following: device state information, power information, and storage space information.

The relevant information further includes state information, and the state information includes at least one of device state information, power information, and storage space information.

In the above networking, the device state information can be determined by the data processing capability of the device. The data processing capability of the device is strong or weak. It is not that the hardware condition is good and the current data processing capability of the corresponding equipment is necessarily good. It can be understood that the current data processing capability of a device with good hardware conditions in a dead state will be very weak. The device state information can also be whether the device is in a charging state. It is well understood that the device needs electric energy during use, and the electric energy is generally provided by the battery, and the battery needs to be charged when the battery is exhausted or is about to be exhausted. For power information, different devices in the network will have batteries with different capacities, and the batteries will have different remaining power or different battery life. For example, the battery capacity of a mobile phone is generally greater than that of a smart watch. In addition, there is also a situation where the battery power of the mobile phone is not charged less than that of the smart watch; the devices in the network will exchange data during use and need to store the received data. The storage space information of the device affects the working performance of the device and determines the work that can be supported, such as the size of the storage space of the device is not enough to support the size of the data that must be downloaded for its work.

The environment information includes at least one of the following: external environment information and use environment information.

The relevant information further includes environment information, and the environment information includes at least one of external environment information and use environment information.

In the above-mentioned networking, the device has the ability to obtain external environment information, such as obtaining the brightness of external ambient light and obtaining the loudness of external environmental noise. During the use of the device, the use environment information changes with the user's environment. The user's environment can be perceived through sensors (such as gravity sensors, acceleration sensors, gyroscopes, etc.). When the user is exercising, the device can detect that the user is in an exercising environment, and adjust the device parameters accordingly to facilitate the user's use in an exercising environment. When the user is driving, the device detects that the user is in the driving environment, and adjusts the device parameters accordingly to facilitate the user's use in the driving environment. When the user is working or meeting, the device adjusts the device parameters accordingly when detecting that the user is in the working or meeting environment.

The use information includes at least one of the following: traffic information, use habit information, and currently used application information.

The relevant information also includes use information, and the use information includes at least one of traffic information, use habit information, and currently used application information.

In the above-mentioned networking, devices may have the ability to provide data network services, such as mobile phones, PADs, etc., are capable of providing data network services to obtain data from the Internet, such as updating applications in the device, etc. However, the current data network fee is not low, so when using data network services, you need to pay special attention to traffic information. For use habit information, users may be accustomed to using a certain device on the Internet, that is, they use a certain device frequently, or are used to using a certain device on the Internet during a specific period of time, at a specific location, or for a specific purpose of use. For example, users are used to watching videos with PAD, but not with mobile phones. For the currently used application information, during the use of the device, the user will install some corresponding applications according to the use requirements, such as video applications and game applications.

For distance information, in the above-mentioned networking, the distance between the device and the user may change during the use of the device by the user. The user puts the mobile phone in the bedroom and goes to the living room to watch TV. When the user moves from the bedroom to the living room, the user and the mobile phone become farther and farther away.

For user physiological information, in the above-mentioned networking, the device has the ability to obtain user physiological information to provide corresponding services, such as providing health services by obtaining user physiological information such as heart rate, blood pressure, pulse, blood oxygen, and blood sugar.

The operation S22 includes at least one of the following:
Detecting whether the network rate information meets the network rate requirement.

In an embodiment, it is detected whether the network rate information meets the network rate requirement. The network rate requirement is determined by detecting the network rate information to determine that the first control center in the network is not suitable to continue to serve as the control center, so as to provide rules for controlling functions. In order not to affect the linkage of various devices in the network, it is necessary to select a device with a high network rate as the control center. It is not that the network rate of other devices controlled by the first control center in the network is greater than the network rate of the first control center, it is determined that the network rate information meets the network rate requirement.

In this embodiment, a first network rate threshold may be set for the comparison between the network rate of other devices controlled by the first control center in the network and the network rate of the first control center. For example, when the network rate of other devices controlled by the first control center in the network is greater than or equal to the sum of the network rate of the first control center and the first network rate threshold, it is determined that the network rate information meets the network rate requirements. When there is no other device controlled by the first control center in the network whose network rate is greater than or equal to the sum of the network rate of the first control center and the first network rate threshold, that is, the network rates of other devices controlled by the first control center in the network are all lower than the sum of the network rate of the first control center and the first network rate threshold, it is determined that the network rate information does not meet the network rate requirements.

For example, the network rate of the first control center is 500KB/s, the first network rate threshold is 100KB/s, and other devices controlled by the first control center in the network have devices with a network rate of 600KB/s. When the network rate of other devices controlled by the first control center in the network is equal to the sum of the network rate of the first control center and the first network rate threshold, it is determined that the network rate information meets the network rate requirement.

In other embodiments, a second network rate threshold may also be set, and the second network rate threshold is the minimum network rate that does not affect the ability of the first control center to provide management services. If the network rate of the first control center is greater than or equal to the second network rate threshold, it is determined that the network rate information does not meet the network rate requirement. If the network rate of the first control center is less than the second network rate threshold, it is determined that the network rate information meets the network rate requirement.

For example, the network rate of the first control center is 400KB/s, the second network rate threshold is 500KB/s. Since the network rate of the first control center is greater than the second network rate threshold, it may be determined that the network rate information meets the network rate requirement.

Detecting whether the device state information meets the device state requirements.

Detect whether the device state information meets the device state requirements. The device state requirement is to determine that the first control center in the network is not suitable to continue to be the control center by detecting the device state information, so as to provide rules for the control function. In order not to affect the linkage of each device in the network, it is necessary to select a device with a short response time corresponding to the device state as the control center.

In this embodiment, for the current data processing capability of the device, it is not that the response time corresponding to the device state of other devices controlled by the first control center in the network is shorter than the response time corresponding to the device state of the first control center, it is determined that the device state information meets the device state requirements. A first response time threshold may be set for the comparison between the response time corresponding to the device state of other devices controlled by the first control center in the network and the response time corresponding to the device state of the first control center. For example, when the sum of the response time corresponding to the device state of the device and the first response time threshold is less than or equal to the response time corresponding to the device state of the first control center in other devices controlled by the first control center in the network, it is determined that the device state information meets the device state requirements. When the sum of the response time corresponding to the device state of the device and the first response time threshold is less than or equal to the response time corresponding to the device state of the first control center does not exist in other devices controlled by the first control center in the network, that is, the sum of the response time corresponding to the device state of other devices controlled by the first control center in the network and the first response time threshold is greater than the response time corresponding to the device state of the first control center, it is determined that the device state information does not meet the device state requirements.

For example, the response time corresponding to the device state of the first control center is 50ms, the first response time threshold is 10ms, and there are other devices controlled by the first control center in the network with a response time corresponding to the device state of 40ms. When other devices controlled by the first control center in the network have the response time corresponding to the device state and the first response time threshold equal to the response time corresponding to the state of the first control center, it is determined that the device state information meets the device state requirements.

In other embodiments, a second response time threshold may also be set, and the second response time threshold is the maximum response time that does not affect the ability of the first control center to provide management services. If the response time corresponding to the device state of the first control center is shorter than or equal to the second response time threshold, it is determined that the device state information does not meet the device state requirements. If the response time corresponding to the device state of the first control center is longer than the second response time threshold, it is determined that the device state information meets the device state requirements.

For example, the response time corresponding to the device state of the first control center is 60ms, and the second response time threshold is 50ms. Since the response time corresponding to the device state of the first control center is longer than the second response time threshold, it can be determined that the device state information meets the device state requirement.

In other embodiments, for a device in a charging state, the power consumption of the device at this time should be reduced as much as possible to prevent the battery from being depleted. Therefore, if the device is in a charging state, it is determined that the device state information meets the device state requirements; if the device is in a non-charging state, it is determined that the device state information does not meet the device state requirements.

Detecting whether the power information meets the power requirement.

Whether the power information meets the power requirements is detected. The power requirement is a rule for providing control functions by determining that the first control center in the network is not suitable to continue to be a control center by detecting power information. In order not to affect the linkage of each device in the network, it is necessary to select a device with a long available time corresponding to the power as the control center. It is not that the available time corresponding to the power of other devices controlled by the first control center in the network is longer than the available time corresponding to the power of the first control center, it is determined that the power information meets the power requirement.

In this embodiment, a first available time threshold may be set for the comparison between the available time corresponding to the power of other devices controlled by the first control center in the network and the available time corresponding to the power of the first control center. For example, when other devices controlled by the first control center in the network have an available time corresponding to the power of the device that is longer than or equal to the sum of the available time corresponding to the power of the first control center and the first available time threshold, it is determined that the power information meets the power requirements. When there is no other device controlled by the first control center in the network, the available time corresponding to the power of the device is longer than or equal to the sum of the available time corresponding to the power of the first control center and the first available time threshold, that is, when the available time corresponding to the power of other devices controlled by the first control center in the network is less than the sum of the available time corresponding to the power of the first control center and the first available time threshold, it is determined that the power information does not meet the power requirement.

For example, the available time corresponding to the power of the first control center is 200 minutes, the threshold of the first available time is 30 minutes, and other devices controlled by the first control center in the network have a corresponding available time of 170 minutes. When other devices controlled by the first control center in the network have an available time corresponding to the power of the device equal to the sum of the available time corresponding to the power of the first control center and the first available time threshold, it is determined that the power information meets the power requirement.

In other embodiments, a second available time threshold may also be set, and the second available time threshold is the minimum available time that does not affect the ability of the first control center to provide management services. If the available time corresponding to the power of the first control center is longer than or equal to the second available time threshold, it is determined that the power information does not meet the power requirement. If the available time corresponding to the power of the first control center is shorter than the second available time threshold, it is determined that the power information meets the power requirement.

For example, the available time corresponding to the power of the first control center is 180 minutes, and the second available time threshold is 200 minutes. Since the available time corresponding to the power of the first control center is shorter than the second available time threshold, it can be determined that the power information meets the power requirement.

Detect whether the storage space information meets the storage space requirements.

Detect whether the storage space information meets the storage space requirements. The storage space requirement is determined by detecting the storage space information to determine that the first control center in the network is not suitable to continue to serve as the control center, so as to provide rules for control functions. In order not to affect the linkage of each device in the network, it is necessary to select a device with a large remaining storage space as the control center. It is not that the remaining storage space of other devices controlled by the first control center in the network is larger than the remaining storage space of the first control center, it is determined that the storage space information meets the storage space requirement. In this embodiment, a first remaining storage space threshold may be set for the comparison between the remaining storage space of other devices controlled by the first control center in the network and the remaining storage space of the first control center. For example, when the remaining storage space of other devices controlled by the first control center in the network is greater than or equal to the sum of the remaining storage space of the first control center and the first remaining storage space threshold, it is determined that the storage space information meets the storage space requirements. When there is no other device controlled by the first control center in the network whose remaining storage space is greater than or equal to the sum of the remaining storage space of the first control center and the first remaining storage space threshold, that is, the remaining storage space of other devices controlled by the first control center in the network is less than the sum of the remaining storage space of the first control center and the first remaining storage space threshold, it is determined that the storage space information does not meet the storage space requirement.

For example, the remaining storage space of the first control center is 2000MB, the threshold value of the first remaining storage space is 300MB, and other devices controlled by the first control center in the network have a remaining storage space of 2300MB. When the remaining storage space of other devices controlled by the first control center in the network is equal to the sum of the remaining storage space of the first control center and the first remaining storage space threshold, it is determined that the storage space information meets the storage space requirements.

In other embodiments, a second remaining storage space threshold may also be set, and the second remaining storage space threshold is the minimum remaining storage space that does not affect the ability of the first control center to provide management services. If the remaining storage space of the first control center is greater than or equal to the second remaining storage space threshold, it is determined that the storage space information does not meet the storage space requirements. If the remaining storage space of the first control center is smaller than the second remaining storage space threshold, it is determined that the storage space information meets the storage space requirement.

For example, the remaining storage space of the first control center is 1800MB, and the second remaining storage space threshold is 2000MB. Since the remaining storage space of the first control center is smaller than the second remaining storage space threshold, it may be determined that the storage space information meets the storage space requirement.

Detecting whether the external environment information meets external environment requirements.

Detect whether the external environment information meets the external environment requirements. The external environment requirements are rules for providing control functions by determining that the first control center in the network is not suitable to continue to be a control center by detecting external environment information. When it is detected that the brightness of the external ambient light reaches the brightness threshold and the loudness of the external environmental noise reaches the loudness threshold, it is determined that the external environment information meets the external environment requirements. When it is detected that the brightness of the external environment light does not reach the brightness threshold and/or the loudness of the external environment noise does not reach the loudness threshold, it is determined that the external environment information does not meet the external environment requirements.

For example, when the brightness of the external ambient light reaches the brightness threshold and the loudness of the external environmental noise reaches the loudness threshold, if the brightness is lower than the brightness threshold and the loudness is lower than the loudness threshold, it is determined that the user is going to sleep or is in a sleep state. Due to light problems, it is inconvenient for users to obtain devices such as mobile phones and PADs, but it is convenient to obtain devices such as smart bracelets and smart watches. Therefore, if the brightness of the ambient light is lower than the brightness threshold and before the loudness of the ambient noise is lower than the loudness threshold, the first control center is one of the devices that are inconvenient to be obtained by users such as mobile phones and PADs when they wake up from a sleep state, and then determine that the external environment information meets the external environment requirements. If the brightness of the ambient light is lower than the brightness threshold and before the loudness of the ambient noise is lower than the loudness threshold, the first control center is a smart bracelet, a smart watch and other devices that are conveniently obtained by the user when waking up from a sleep state, so it is determined that the external environment information does not meet the external environment requirements.

Detecting whether the use environment information meets the use environment requirements.

Whether the use environment information meets the use environment requirements is detected. The use environment requirement is to determine that the first control center in the network is not suitable to continue to be the control center by detecting the use environment information, so as to provide rules for control functions. When the first control center detects that the user is in a sports environment, it is obvious that the user is inconvenient to use devices such as mobile phones and PADs, but it is convenient to use devices such as smart bracelets and smart watches. Therefore, if before the user is in the exercise environment, the first control center is one of the devices that are inconvenient for the user to use when exercising, such as mobile phones and PADs, then it is determined that the use environment information meets the use environment requirements. If the user is in the exercise environment and the first control center is one of the devices that are convenient for the user to use during exercise, such as smart bracelets and smart watches, it is determined that the use environment information does not meet the use environment requirements.

When the first control center detects that the user is in the driving environment, it is obvious that the user is inconvenient to use devices such as mobile phones, PADs, and smart watches, but it is convenient to use devices such as smart earphones and vehicle-mounted terminals. Therefore, if before the user is in the driving environment, the first control center is one of the mobile phones, PADs, smart watches and other devices that are inconvenient for the user to use, it is determined that the use environment information meets the use environment requirements. If the user is in the driving environment and the first control center is one of the devices that are convenient for the user to use in the driving environment, such as smart earphones and vehicle terminals, then it is determined that the use environment information does not meet the use environment requirements.

When the first control center detects that the user is in a working environment, it is inconvenient for the user to use devices such as vehicle-mounted terminals and smart TVs, but to use devices such as mobile phones and smart watches. Therefore, if before the user is in the working environment, the first control center is one of the vehicle-mounted terminals, smart TVs and other devices that are inconvenient for the user to use when working, it is determined that the use environment information meets the use environment requirements. If before the user is in the working environment, the first control center is one of the mobile phones, smart watches and other devices that are convenient for the user to use when working, then it is determined that the use environment information does not meet the use environment requirements.

When the first control center detects that the user is in a meeting environment, it is inconvenient for the user to use devices that need to be controlled by voice instructions, such as smart speakers and smart earphones, but it is convenient for users to use devices that can be controlled by touch instructions, such as mobile phones and smart watches. Therefore, if the user is in the meeting environment and the first control center is one of the devices such as smart speakers and smart earphones that are inconvenient for the user to use during the meeting, it is determined that the use environment information meets the use environment requirements. If the user is in the meeting environment, and the first control center is one of the mobile phones, smart watches and other devices that are convenient for the user to use during the meeting, it is determined that the use environment information does not meet the use environment requirements.

Detecting whether the traffic information meets the traffic requirement.

It is detected whether the traffic information meets the traffic requirement. The traffic requirement is a rule for providing control functions by determining that the first control center in the network is not suitable to continue to be a control center by detecting traffic information. In order not to affect the linkage of each device in the network, it is necessary to select a device with a large amount of remaining traffic as the control center. It is not that the remaining traffic of other devices controlled by the first control center in the network is greater than the remaining traffic of the first control center, it is determined that the traffic information meets the traffic requirement. In this embodiment, a first remaining traffic threshold may be set for the comparison between the remaining traffic of other devices controlled by the first control center in the network and the remaining traffic of the first control center. For example, when the remaining traffic of other devices controlled by the first control center in the network is greater than or equal to the sum of the remaining traffic of the first control center and the first remaining traffic threshold, it is determined that the traffic information meets the traffic requirements. When there are no other devices controlled by the first control center in the network, the remaining traffic of the device is more than or equal to the sum of the remaining traffic of the first control center and the first remaining traffic threshold, that is, the remaining traffic of other devices controlled by the first control center in the network is less than the sum of the remaining traffic of the first control center and the first remaining traffic threshold, and it is determined that the traffic information does not meet the traffic requirements.

For example, the remaining traffic of the first control center is 2000MB, the threshold of the first remaining traffic is 300MB, and other devices controlled by the first control center in the network have a remaining traffic of 2300MB. When the remaining traffic of other devices controlled by the first control center in the network is equal to the sum of the remaining traffic of the first control center and the first remaining traffic threshold, it is determined that the traffic information meets the traffic requirements.

In other embodiments, a second remaining traffic threshold may also be set, and the second remaining traffic threshold is the minimum remaining traffic that does not affect the ability of the first control center to provide management services. If the remaining traffic of the first control center is greater than or equal to the second remaining traffic threshold, it is determined that the traffic information does not meet the traffic requirement; if the remaining traffic of the first control center is less than the second remaining traffic threshold, it is determined that the traffic information meets the traffic requirement.

For example, the remaining traffic of the first control center is 1800MB, and the second remaining traffic threshold is 2000MB. Since the remaining traffic of the first control center is less than the second remaining traffic threshold, it may be determined that the traffic information meets the traffic requirement.

Detecting whether the use habit information meets the use habit requirements.

Detect whether the use habit information meets the use habit requirements. The use habit requirement is to determine that the first control center in the network is not suitable to continue to be the control center by detecting the use habit information, so as to provide rules for control functions. When the first control center detects that the user is using a networked device, the use habit condition is triggered. For example, users are used to running at a certain time in the morning, watching videos on a PAD at a certain time in the evening, and using mobile phones to read at a certain time in the morning on weekends, it is determined that during a certain time period in the morning, a certain time period in the evening, or a certain time period in the morning on weekends, the use habit information meets the use habit requirements. When the use habit determination condition is not triggered when the user uses the device in the network, the use habit information does not meet the use habit requirements.

Detecting whether the currently used application information meets the requirements of the currently used application.

It is detected whether the currently used application information meets the requirements of the currently used application. The currently used application requirement is to determine that the first control center in the network is not suitable to continue to serve as the control center by detecting the currently used application information, so as to provide rules for the control function. The user uses the first control center to watch videos or play games, etc., In general, when watching videos and playing games, the corresponding device interfaces are displayed in full screen, which is inconvenient for users to switch to the corresponding application interface of the first control center to use the control functions of the first control center. Therefore, if the first control center is running video applications, game applications and other applications that are inconvenient to switch to other interfaces, it is determined that the currently used application information meets the requirements of the currently used application. If the first control center is running an application that facilitates switching to other interfaces, it is determined that the information of the currently used application does not meet the requirements of the currently used application.

Detecting whether the distance information meets the distance requirement.

Detect whether the distance information meets the distance requirement. The distance requirement is a rule for providing control functions by determining that the first control center in the network is not suitable to continue to be a control center by detecting distance information. Each device in the network will have a certain relative distance when the user uses it. When the distance between the first control center and other devices controlled by the first control center is greater than or equal to a preset distance threshold, it is determined that the distance information meets the distance requirement. When the distance between the first control center and other devices controlled by the first control center is less than a preset distance threshold, it is determined that the distance information does not meet the distance requirement.

Detecting whether the user physiological information meets the user physiological requirements.

Detect whether the user physiological information meets the user physiological requirements. The user physiological requirement is to determine by detecting the user physiological information that the first control center in the network is not suitable to continue to serve as the control center, so as to provide rules for controlling functions. When the first control center detects that the user physiological information sent by each device in the network reaches the preset physiological information threshold. When it is detected that the user's heart rate is less than or equal to the preset heart rate threshold, it means that the user is in a sleep state, and it is determined that the user physiological information meets the user physiological requirements. When it is detected that the user's heart rate is not less than or equal to the preset heart rate threshold, it means that the user is in a non-sleeping state, and it is determined that the user physiological information does not meet the user physiological requirements.

For example, when the user's heart rate is less than or equal to the preset heart rate threshold, the user's heart rate is 70 to 80 beats/minute when the user is in a non-sleep state, the information is 40 to 50 beats/minute when the user is in a sleep state, the preset heart rate threshold can be set to 50 beats/minute, and when the user's heart rate reaches 50 beats/minute, it is determined that the user is in a sleep state. At this time, due to light problems, it is inconvenient for the user to obtain mobile phones, PADs and other devices when waking up from a sleep state. Therefore, if the user is in the sleep state, the first control center is one of the devices that are inconvenient to obtain when the user wakes up from the sleep state, such as mobile phones and PADs, then determine that the external environment information meets the user physiological requirements. If the user is in a sleep state, and the first control center is one of the devices that are conveniently obtained when the user wakes up from a sleep state, such as a smart bracelet, it is determined that the external environment information does not meet the user physiological requirements.

Operation S23, if yes, performing a corresponding device control operation according to a preset strategy.

The purpose of performing the corresponding device control operation according to the preset strategy strategy be to transfer or migrate or copy or backup the relevant data and/or control functions of the first control center, or to output prompts and the like.

Understandably, the target control center selected by the user or automatically determined is not necessarily the best control center device. In order to achieve smarter and more flexible device control effects, before performing corresponding device control operations (such as transferring or migrating or copying or backing up relevant data and/or control functions of the first control center to the target control center), according to the technical solution of this embodiment, it is also necessary to determine whether the relevant information of the target control center meets the preset requirements.

If the relevant information of the target control center meets the preset requirements, the corresponding equipment control operation is performed according to the preset strategy; and/or, if the relevant information of the target control center does not meet the preset requirements, the corresponding device control operation is not performed.

The operation S23 includes:
Operation S231, if the relevant information of the target control center meets the preset requirements, and the target control center is different from the first control center, the control function of the first control center is transferred to the target control center.

If the relevant information of the target control center meets the preset requirements, and the target control center and the first control center are different devices, the control function of the first control center is transferred to the target control center, the control function of the first control center is transferred to the target control center to perform corresponding device control operations. If the relevant information of the target control center does not meet the preset requirements, or the target control center and the first control center are the same equipment, the control function of the first control center is not transferred to the target control center. If the relevant information of the target control center meets at least one of the following preset requirements: network rate requirements, device state requirements, power requirements, storage space requirements, external environment requirements, use environment requirements, traffic requirements, use habits requirements, currently used application requirements, distance requirements, user physiological requirements, and the target control center and the first control center are different devices, the first control center performs the operation of transferring the control function of the first control center to the target control center. If the relevant information of the target control center does not meet the following preset requirements: network rate requirements, device state requirements, power requirements, storage space requirements, external environment requirements, use environment requirements, traffic requirements, use habits requirements, currently used application requirements, distance requirements, user physiological requirements, or the target control center is the same device as the first control center, the first control center does not perform the operation of transferring the control function of the first control center to the target control center.

In order to avoid confusion with whether the relevant information of the above-mentioned first control center meets the preset requirements, the relevant information of the target control center may be the same as or different from the relevant information of the above-mentioned first control center. However, whether the relevant information of the target control center meets the preset requirements is to overcome the defects existing when the relevant information of the first control center meets the preset requirements. Taking the distance requirement as an example, the first control center meets the distance requirement means that the first control center is far away from other devices it controls (for example, exceeding the first preset distance threshold, such as 10 meters), the distance requirement of the target control center means that the distance between the target control center and other devices to be controlled is relatively close. (For example, it is lower than the second preset distance threshold, such as 5 meters. In an embodiment, the second preset distance threshold and the first preset distance threshold may or may not be the same). For other relevant information and requirements, it can be understood in the same way as the distance example above, and will not be repeated here.

The processing method further includes:
Operation S26, migrating relevant data in the first control center to the target control center.

The first control center migrates relevant data in the first control center to the target control center.

When the first control center transfers the control functions of the first control center to the target control center, relevant data in the first control center can also be migrated to the target control center, to facilitate the second control center to exercise control functions based on the relevant data. In addition, all devices in the network have the ability to act as a control center. Therefore, when the first control center does not migrate the relevant data in the first control center to the target control center, but only transfers the control function of the first control center to the target control center, the target control center can also perform the control function.

In particular, for the case where the first control center meets the distance requirement, the first control center starts to migrate relevant data when the distance from other devices it controls is greater than or equal to a preset distance threshold, so as to ensure that the relevant data migration is completed before the first control center is disconnected from the network.

The relevant data includes at least one of the following: connection information data, setting item parameter data and relevant download data.

The relevant data includes at least one of connection information data, setting item parameter data and relevant download data.

The relevant data also includes at least one first relevant data and/or at least one second relevant data, and the operation S26 includes at least one of the following:
only backing up or transferring the first relevant data in the first control center to the target control center;
only backing up or transferring the second relevant data corresponding to the first relevant data in the first control center to the target control center;
in addition to backing up or transferring the first relevant data in the first control center to the target control center, backing up or transferring second relevant data corresponding to the first relevant data to the target control center;
backing up or transferring the first relevant data and corresponding update data in the first control center to the target control center;
backing up or transferring the second relevant data corresponding to the first relevant data and the corresponding update data in the first control center to the target control center; and
backing up or transferring the first relevant data and the corresponding update data in the first control center, and the update data of the second relevant data corresponding to the first relevant data to the target control center.

The relevant data also includes at least one first relevant data and/or at least one second relevant data. After the target control center is determined, relevant data in the first control center can be selectively backed up or transferred to the target control center, so that the target control center can perform a control function according to the relevant data. The way of backing up or transferring the first relevant data and the second relevant data may include at least one of the following: only backing up or transferring the first relevant data in the first control center to the target control center; only backing up or transferring the second relevant data in the first control center to the target control center; in addition to backing up or transferring the first relevant data in the first control center to the target control center, backing up or transferring the second relevant data corresponding to the first relevant data to the target control center; backing up or transferring the first relevant data and corresponding update data in the first control center to the target control center; backing up or transferring the second relevant data and corresponding update data in the first control center to the target control center; backing up or transferring the first relevant data and the corresponding update data in the first control center, and the update data of the second relevant data to the target control center.

For connection information data, the first relevant data may be connection information between the first control center and other devices controlled by the first control center in the network. The second relevant data may be connection information between other devices controlled by the first control center in the network. The update data may be the data corresponding to the relevant data updated by the first control center during the process of backing up or transferring the relevant data. During the process of backing up or transferring relevant data, if there is a device outside the network joining the network and connecting with the first control center, then the update data at this time is the connection information between the device joining the network and the first control center corresponding to the first relevant data.

For the setting item parameter data, the first relevant data may be the setting data corresponding to the shortcut function, such as the setting data for quickly opening the music playback function. The second relevant data may be an application (such as a music player) or a local file (such as music, video, sound effect) associated with the shortcut function. The update data may be the data corresponding to the relevant data updated by the first control center during the process of backing up or transferring the relevant data. During the process of backing up or transferring relevant data, if the setting data corresponding to the shortcut function changes, the opening gesture instruction of the shortcut function has changed, from "double-click" the button corresponding to the shortcut function to "click" the button corresponding to the shortcut function, the update data at this time is the setting data corresponding to the "click" gesture instruction to open the shortcut function.

For relevant download data, the first relevant data may be the version number, release time, installation package and other data of the control center application. The second relevant data may be data generated during the operation of the control center application. The update data may be the data corresponding to the relevant data updated by the first control center during the process of backing up or transferring the relevant data. During the process of backing up or transferring relevant data, the first control center runs the data generated during the application process of the control center.

In an embodiment, the migration manner of the relevant data includes at least one of the following: synchronous, asynchronous, real-time, scheduled time, according to user settings, according to user habits, same as last selection or setting.

The migration methods of relevant data may be different, and may include at least one of synchronous, asynchronous, real-time, scheduled time, according to user settings, according to user habits, same as last selection or setting.

Relevant data can be migrated synchronously while setting up the target control center. Synchronous migration in turn includes at least live migration. Relevant data can be migrated asynchronously when setting up the target control center. The migration method of asynchronous migration includes at least an appointment time. The migration method of appointment time sets the specific migration time for the user. According to the migration method set by the user, the user decides whether to migrate the relevant data, including when to migrate the relevant data and whether to migrate the relevant data, and when to migrate the relevant data includes one of synchronous, asynchronous, real-time, and scheduled time. According to user habits, the most frequent migration method among the migration methods used by users, including when to migrate relevant data and whether to migrate relevant data. When to migrate relevant data includes one of synchronous, asynchronous, real-time, and appointment time. The same as the last selection or set to continue the migration method when switching the control center last time, including when to migrate relevant data and whether to migrate relevant data. When to migrate relevant data includes one of synchronous, asynchronous, real-time, and appointment time.

The processing method further includes:
Operation S27, before migrating or transferring or duplicating or backing up the control function of the first control center to the target control center, obtaining first corresponding information related to the target control center and responding to the first corresponding information.

Before the control function of the first control center is migrated or transferred or copied or backed up to the target control center, first corresponding information related to the target control center is obtained and the first corresponding information is responded to.

The responding to the first corresponding information includes at least one of the following:
if the first corresponding information meets the third preset condition, then performing the operation of transferring the control function of the first control center to the target control center;
if the first corresponding information does not meet the third preset condition, not performing the operation of transferring the control function of the first control center to the target control center, and/or outputting prompt information at the first control center and/or the target control center.

If the first corresponding information meets the third preset condition, the operation of transferring the control function of the first control center to the target control center is performed. If the first corresponding information does not meet the third preset condition, the operation of transferring the control function of the first control center to the target control center is not performed, and/or the prompt information is output at the first control center and/or the target control center.

The first corresponding information includes sixth instruction information input on the target control center and/or at least one of the network rate information, device state information, power information, storage space information, external environment information, use environment information, traffic information, use habit information, currently used application information, distance information, and user physiological information of the target control center. The meeting the third preset condition includes at least one of the following:
if the sixth instruction information is biometric information, and the biometric information meets preset biometric information, meeting the third preset condition;
if the sixth instruction information is password information, and the password information meets preset password information, meeting the third preset condition;
if at least one of the network rate information, device state information, power information, storage space information, external environment information, use environment information, traffic information, use habit information, currently used application information, distance information and user physiological information of the target control center meets the preset requirements, meeting the third preset condition.

The first corresponding information includes sixth instruction information input on the target control center and/or at least one of the network rate information, device state information, power information, storage space information, external environment information, use environment information, traffic information, use habit information, currently used application information, distance information, and user physiological information of the target control center.

For the case where the first corresponding information is the sixth instruction information input on the target control center, before transferring the control function, the first control center needs to determine whether the control function can be transferred to the target control center according to whether the sixth instruction information input by the user on the target control center meets the third preset condition. If the sixth instruction information meets the third preset condition, it means that the first control center can transfer the control function to the target control center, and perform the operation of transferring the control function of the first control center to the target control center. If the sixth instruction information does not meet the third preset condition, the operation of transferring the control function of the first control center to the target control center is not performed, and/or prompt information is output at the first control center and/or the target control center. The forms of output prompt information include but are not limited to voice prompts and screen pop-up prompts. Determining whether the sixth instruction information meets the third preset condition is mainly to identify whether the current user of the target control center is a registered user, that is, to determine whether the current user of the target control center is the owner. If the current user is the owner, it means that the control function of the first control center can be transferred. If the current user is not the owner, in order to prevent the current user from issuing misoperation instructions to the devices in the network, the control function of the first control center should not be transferred to the target control center.

If the sixth instruction information is biometric information, and the biometric information meets the preset biometric information, then the third preset condition is met. The preset biometric information is the biometric information of the owner saved in the first control center, such as fingerprint information, iris information, face information. The biometric information can also be obtained by the first control center from the target control center. If the acquired biometric information matches the preset biological feature, for example, the acquired fingerprint information matches the preset fingerprint information, then the sixth instruction information meets the third preset condition.

If the sixth instruction information is password information, and the password information meets the preset password information, then the third preset condition is met. The preset password information is the password information preset by the owner saved in the first control center, such as digital password information, pattern password information. The password information can also be obtained by the first control center from the target control center. If the obtained password information matches the preset password information, for example, the obtained digital password information matches the preset digital password information, then the sixth instruction information meets the third preset condition.

For the case where the first corresponding information is at least one of the network rate information, the device state information, the power information, the storage space information, the external environment information, the use environment information, the traffic information, the use habit information, the currently used application information, the distance information, and the user physiological information of the target control center, before transferring the control function, the first control center needs to determine whether the control function can be transferred to the target control center according to at least one of the network rate information, the device state information, the power information, the storage space information, the external environment information, the use environment information, the traffic information, the use habit information, the currently used application information, the distance information, and the user physiological information of the target control center meeting the preset requirements. If at least one of the network rate information, the device state information, the power information, the storage space information, the external environment information, the use environment information, the traffic information, the use habit information, the currently used application information, the distance information, and the user physiological information of the target control center meets the preset requirements, the third preset condition is met, and the first control center can transfer the control function to the target control center, and perform the operation of transferring the control function of the first control center to the target control center. If at least one of the network rate information, the device state information, the power information, the storage space information, the external environment information, the use environment information, the traffic information, the use habit information, the currently used application information, the distance information, and the user physiological information of the target control center does not meet the preset requirements, the third preset condition is not met, the operation of transferring the control function of the first control center to the target control center is not performed, and/or prompt information is output at the first control center and/or the target control center. The forms of output prompt information include but are not limited to voice prompts and screen pop-up prompts to remind users that the transfer of the control function of the first control center failed and the reason for the transfer failure, such as the traffic information of the target control center does not meet the preset requirements.

If at least one of the network rate information, the device state information, the power information, the storage space information, the external environment information, the use environment information, the traffic information, the use habit information, the currently used application information, the distance information, and the user physiological information of the target control center meets the preset requirement, the third preset condition is met. The preset requirement is to satisfy the condition that the control function is switched from the first control center to the target control center.

Meeting the preset requirement includes at least one of the following: the network rate corresponding to the network rate information of the target control center is the fastest network rate among the network rates corresponding to the network rate information of other devices controlled by the first control center in the network, the response time corresponding to the device state information of the target control center is the shortest response time among the response times corresponding to the device state information of other devices controlled by the first control center in the network, the device state information of the target control center is that the target control center is in a non-charging state, the available time corresponding to the power information of the target control center is the longest available time among the available times corresponding to the power information of other devices controlled by the first control center in the network, the remaining storage space corresponding to the storage space information of the target control center is the largest remaining storage space among the remaining storage spaces corresponding to the storage space information of other devices controlled by the first control center in the network, the brightness of the external environment corresponding to the external environment information of the target control center is lower than the threshold value and the loudness of the external environment noise is lower than the threshold value, the use environment information of the target control center is that the user is in a sports environment or the user is in a driving environment, the remaining traffic corresponding to the traffic information of the target control center is the largest remaining traffic among the remaining traffic corresponding to the traffic information of other devices controlled by the first control center in the network, the use habit information of the target control center is to keep triggering use habit conditions, the currently used application information of the target control center is convenient for the running application to switch to other interfaces, the distance between the target control center corresponding to the distance information of the target control center and other devices controlled by the first control center is less than a preset distance threshold, the user's heart rate corresponding to the user physiological information in the target control center is less than or equal to the preset heart rate threshold.

The processing method further includes:
Operation S28, after migrating or transferring or duplicating or backing up the control function of the first control center to the target control center, receiving seventh instruction information sent by other devices controlled by the target control center, and responding to the seventh instruction information.

After migrating or transferring or duplicating or backing up the control function of the first control center to the target control center, the target control center receives the seventh instruction information sent by other devices it controls, and responds to the seventh instruction information. The seventh instruction information is input by the user on other devices controlled by the target control center.

Other devices controlled by the target control center in the network can be used as user instruction input devices. The user instruction input device obtains the seventh instruction information through the corresponding control center application, and then sends the obtained seventh instruction information to the target control center. Specifically, which other device controlled by the target control center in the network obtains the seventh instruction information can be determined according to the actual usage of the user. If the user is currently using the smart watch, the smart watch obtains the seventh instruction information. Whether the user is using the device can be determined by whether the device is unlocked (such as smartphone fingerprint unlocking), or whether the device is used as an output unit to provide services for the user, such as the user listening to music through smart earphones.

Other devices controlled by the target control center include at least a third device. The seventh instruction information includes at least eighth instruction information. The eighth instruction information includes at least one of the following: the fourth voice instruction information, the fourth interface operation instruction information, the fourth preset screen touch gesture instruction information, the fourth preset air gesture instruction information, and the fourth gesture instruction information.

Other devices controlled by the target control center include at least a third device. The seventh instruction information includes at least the eighth instruction information. The eighth instruction information includes at least one of the fourth voice instruction information, the fourth interface operation instruction information, the fourth preset screen touch gesture instruction information, the fourth preset air gesture instruction information, and the fourth gesture instruction information. The third device is a device with a display function among other devices controlled by the target control center in the network, such as a PAD.

The fourth voice instruction information is the instruction information input by the user through voice, including "play music on the mobile phone", "let the smart earphone turn down the volume by 10%" and so on. The fourth interface operation instruction information is the interface operation instruction information issued by the user by operating the corresponding control center application interface displayed on the display screen of the third device. The fourth preset screen touch gesture instruction information is the screen touch gesture instruction information sent by the user through the corresponding control center application operation interface displayed on the display screen of the third device to make a touch gesture. For example, draw a "circle" on the application operation interface of the control center to open the application or function of the corresponding device in the network, such as opening the camera function of the mobile phone. The fourth preset air gesture instruction information is similar to the fourth preset screen touch gesture instruction information, but the user does not need to touch the display screen of the third device. In the identifiable area above the application operation interface of the control center, you can issue an air gesture instruction to draw a "circle" to open the application or function of the corresponding device in the network, such as turning on the camera function of the mobile phone. The fourth gesture instruction information is the instruction information obtained by recognizing the user's gesture, for example, the user quickly swipes the third device to the left to start the application or function of the corresponding device in the network, such as turning on the camera function of the mobile phone.

Other devices controlled by the target control center also include a fourth device, and the seventh instruction information also includes ninth instruction information, and the ninth instruction information includes at least one of the following:
Fifth voice instruction information, fifth gesture instruction information.

The other devices controlled by the target control center further include a fourth device, the seventh instruction information further includes ninth instruction information, and the ninth instruction information includes at least one of fifth voice instruction information and fifth gesture instruction information. The fourth device is a device without a display function among other devices controlled by the target control center in the network, such as a smart earphone.

The fifth voice instruction information is the instruction information input by the user through voice, including "play music on the mobile phone", "let the smart earphone turn down the volume by 10%" and so on. The fifth gesture instruction information is the instruction information obtained by recognizing the user's gesture, such as the user takes off the smart earphone to control the smart earphone to stop playing audio, or control the device that inputs audio to the smart earphone to stop outputting audio to the smart earphone.

The target control center responds to the seventh instruction information after receiving the seventh instruction information.

The target control center analyzes the seventh instruction information, and sends a corresponding control instruction to the networked device corresponding to the instruction according to the analyzed specific instruction, to respond to the seventh instruction information sent by the user. If the user enters the instruction information of "play music on the mobile phone" by voice, the target control center parses out that the specific instruction of the "play music on the mobile phone" instruction information is to control the mobile phone to play music, and then sends an instruction to play music to the mobile phone in the network in response to the user's "play music on the mobile phone" instruction information.

In other embodiments, in addition to other devices controlled by the target control center in the network as user instruction input devices, the target control center can also be directly used as user instruction input devices. The target control center obtains the tenth instruction information input by the user on the target control center.

The tenth instruction information includes at least one of the following: sixth voice instruction information, sixth interface operation instruction information, sixth preset screen touch gesture instruction information, sixth preset air gesture instruction information, and sixth gesture instruction information.

The tenth instruction information includes at least one of the sixth voice instruction information, the sixth interface operation instruction information, the sixth preset screen touch gesture instruction information, the sixth preset air gesture instruction information, and the sixth gesture instruction information. The sixth voice instruction information is the instruction information input by the user through voice, including "play music on the mobile phone", "let the smart earphone turn down the volume by 10%" and so on. The sixth interface operation instruction information is the interface operation instruction information issued by the user by operating the corresponding control center application interface displayed on the display screen of the target control center. The sixth preset screen touch gesture instruction information is the screen touch gesture instruction information sent by the user through the corresponding control center application operation interface displayed on the display screen of the target control center to make a touch gesture. For example, draw a "circle" on the application operation interface of the control center to open the application or function of the corresponding device in the network, such as opening the camera function of the mobile phone. The sixth preset air gesture instruction information is similar to the sixth preset screen touch gesture instruction information, but the user does not need to touch the display screen of the target control center. In the identifiable area above the application operation interface of the control center, you can issue an air gesture instruction to draw a "circle" to open the application or function of the corresponding device in the network, such as turning on the camera function of the mobile phone. The sixth gesture instruction information is the instruction information obtained by recognizing the user's gesture, for example, the user quickly swipes the target control center to the left to start the application or function of the corresponding device in the network, such as turning on the camera function of the mobile phone.

After migrating or transferring or duplicating or backing up the control function of the first control center to the target control center, it further includes at least one of the following:
outputting relevant prompt information at the first control center and/or the target control center.

After the control function of the first control center is migrated or transferred or copied or backed up to the target control center, relevant prompt information is output at the first control center and/or the target control center.

The relevant prompt information is used to prompt the user that the control center has been switched from the first control center to the second control center, the device that outputs relevant prompt information may be the second control center, or other devices controlled by the second control center in the network, including the first control center. The relevant prompt information can also be used to ask the user whether to transfer the control function from the second control center back to the first control center to meet the user's needs. If the first control center is a mobile phone, and the mobile phone does not satisfy the fourth preset rule, the control function is automatically transferred to the PAD so that the PAD acts as the second control center. But the user must use the mobile phone at this time and is not convenient to use the PAD, then the user can transfer the control function from the PAD to the mobile phone through the relevant prompt information. The relevant prompt information can also be used to ask the user whether to use the second control center regularly to manage other devices in the network. In other embodiments, after the control function is transferred from the first control center to the second control center, relevant prompt information may not be output. However, when the second control center receives user instruction information for the first time, the second control center prompts the user to transfer the control function from the first control center to the second control center.

The relevant prompt information includes at least one of the following: text information, voice information, lighting information, and vibration information.

The relevant prompt information includes at least one of text information, voice information, light information, and vibration information. The text information can be output through a pop-up window on the display screen of the device in the network. If the target control center is a mobile phone, output text prompt information "The control center has been switched to this device", "Whether to switch the control center back to XX device" or "Whether to fix the control center to this device". Specifically, you can also set the display duration of the pop-up window, such as automatically closing after 0.5 seconds. The voice information can be output through the speaker of the equipment in the network, such as the voice prompt information output by the target control center, the contents of which can be "the control center has been switched to this device", "whether to switch the control center back to XX device" or "whether to fix the control center to this device". The light information can be output through the flashlight of the target control center, such as the preset flash mode to remind the user that the control center has switched to the device. The preset flash mode can flash once every fixed time, and flash continuously for a period of time. If the user unlocks the light information output device at this time, it is also possible to output prompt information to the user "the control center has been switched to this device", "whether to switch the control center back to XX device" or "whether to fix the control center to this device" to the user by outputting text information or outputting voice information. Vibration information can be output through the vibration function of the target control center, such as the preset vibration method to remind the user that the control center has switched to the device. The preset vibration method can be to vibrate once at a fixed interval, and vibrate continuously for a period of time. If the user unlocks the light information output device at this time, it is also possible to output prompt information to the user "the control center has been switched to this device", "whether to switch the control center back to XX device" or "whether to fix the control center to this device" to the user by outputting text information or outputting voice information.

For example, as shown in FIG. 4, 200 is the first control center, which is a mobile phone. 201 is a list of devices controlled by the mobile phone, including smart watches, smart earphones and smart TVs. 2000 is the target control center, which is a smart watch controlled by a mobile phone. 2001 is the list of devices controlled by the smart watch after the control center is switched to the smart watch, including the first control center mobile phone, smart earphones and smart TV. 2002 is the pop-up box prompt information output by the target control center after the control center is switched from the first control center to the target control center. The pop-up box can also be output by the first control center.

For another example, as shown in FIG. 5, 300 is the first control center, which is a mobile phone. 301 is a list of devices controlled by the mobile phone, including smart watches, smart speakers and smart TVs. 3000 is the target control center, which is a smart TV controlled by a mobile phone. 3001 is the list of devices controlled by the smart TV after the control center is switched to the smart TV, including the first control center mobile phone, smart speakers and smart watches. 3002 is the pop-up box prompt information output by the target control center after the control center is switched from the first control center to the target control center. The pop-up box can also be output by the first control center.

For another example, as shown in FIG. 6, 400 is the first control center, which is a mobile phone. 401 is a list of devices controlled by the mobile phone, including smart watches, smart earphones and smart cars. 4000 is the target control center, which is the central control display corresponding to the smart car controlled by the mobile phone. 4001 is the list of devices controlled by the smart car after the control center is switched to the smart car, including the first control center mobile phone, smart earphones and smart watches. 4002 is the pop-up box prompt information output by the central control display corresponding to the smart car in the target control center after the control center is switched from the first control center to the target control center. The pop-up box can also be output by the first control center.

Updating the device list information.

The device list information is updated. After the control function of the first control center is transferred to the target control center, the first control center can withdraw from the network or be controlled by the target control center. If the first control center exits the network, the information of the target control center in the device list is deleted. If the first control center is controlled by the target control center, add the information of the first control center in the device list is added, and the information of the target control center in the device list information is deleted.

In this embodiment, the processing method includes: S20, outputting device list information at the first control center, the device includes at least one other device controlled by the first control center; S21, determining the target control center according to the selection operation; S22, detecting whether the relevant information of the target control center meets the preset requirements; S23, if yes, performing the corresponding device control operation according to the preset strategy. Thus, the user can determine the target control center by selecting the output device list information of the first control center. The first control center determines again whether the target control center is suitable as a control center based on the relevant information of the target control center, so as to ensure that the switched control center is suitable as a control center to control other devices except the target control center.

The present application further provides a processing device. As shown in FIG. 6, the processing device includes:
a first obtaining module for obtaining preset information;
a detection module for detecting whether the preset information meets a preset rule;
a determination module for determining that the preset information meets the preset rule;
an execution module for performing a corresponding device control operation according to a preset strategy.

In an embodiment, the detection module includes at least one of the following:
a first detection unit for detecting whether the connection state information meets a first preset rule;
a second detection unit for detecting whether the network rate information meets a second preset rule;
a third detection unit for detecting whether the device state information meets a third preset rule;
a fourth detection unit for detecting whether the power information meets a fourth preset rule;
a fifth detection unit for detecting whether the storage space information meets a fifth preset rule;
a sixth detection unit for detecting whether the external environment information meets a sixth preset rule;
a seventh detection unit for detecting whether the use environment information meets a seventh preset rule;
an eighth detection unit for detecting whether the traffic information meets an eighth preset rule;
a ninth detection unit for detecting whether the use habit information meets a ninth preset rule;
a tenth detection unit for detecting whether the currently used application information meets a tenth preset rule;
an eleventh detection unit for detecting whether the distance information meets an eleventh preset rule; and
a twelfth detection unit for detecting whether the user physiological information meets a twelfth preset rule.

In an embodiment, the execution module includes at least one of the following:
a first execution module for performing the corresponding device control operation according to a first preset strategy in response that the connection state information meets the first preset rule;
a second execution module for performing the corresponding device control operation according to a second preset strategy in response that the network rate information meets the second preset rule;
a third execution module for performing the corresponding device control operation according to a third preset strategy in response that the device state information meets the third preset rule;
a fourth execution module for performing the corresponding device control operation according to a fourth preset strategy in response that the power information meets the fourth preset rule;
a fifth execution module for performing the corresponding device control operation according to a fifth preset strategy in response that the storage space information meets the fifth preset rule;
a sixth execution module for performing the corresponding device control operation according to a sixth preset strategy in response that the external environment information meets the sixth preset rule;
a seventh execution module for performing the corresponding device control operation according to a seventh preset strategy in response that the use environment information meets the seventh preset rule;
an eighth execution module for performing the corresponding device control operation according to an eighth preset strategy in response that the traffic information meets the eighth preset rule;
a ninth execution module for performing the corresponding device control operation according to a ninth preset strategy in response that the use habit information meets the ninth preset rule;
a tenth execution module for performing the corresponding device control operation according to a tenth preset strategy in response that the currently used application information meets the tenth preset rule;
an eleventh execution module for performing the corresponding device control operation according to an eleventh preset strategy in response that the distance information meets the eleventh preset rule; and
a twelfth execution module for performing the corresponding device control operation according to a twelfth preset strategy in response that the user physiological information meets the twelfth preset rule.

In an embodiment, the execution module further includes:
a migration unit for migrating or transferring or duplicating or backing up relevant data in the first control center to the second control center;
a migration unit for migrating or transferring or duplicating or backing up the control function of the first control center to the second control center.

In an embodiment, the migration unit includes at least one of the following:
a first migration unit for only backing up or transferring the first relevant data in the first control center to the second control center;
a second migration unit for only backing up or transferring the second relevant data corresponding to the first relevant data in the first control center to the second control center;
a third migration unit for in addition to backing up or transferring the first relevant data in the first control center to the second control center, also backing up or transferring the second relevant data corresponding to the first relevant data to the second control center;
a fourth migration unit for backing up or transferring the first relevant data and corresponding update data in the first control center to the second control center;
a fifth migration unit for backing up or transferring the second relevant data corresponding to the first relevant data in the first control center and the corresponding update data to the second control center;
a sixth migration unit for backing up or transferring the first relevant data and the corresponding update data in the first control center, and the update data of the second relevant data corresponding to the first relevant data to the second control center.

In an embodiment, the processing device further includes:
a second obtaining module for obtaining the first corresponding information related to the second control center before migrating or transferring or duplicating or backing up the control function of the first control center to the second control center;
a processing module for processing the first corresponding information.

In an embodiment, the processing module includes at least one of the following:
a first determination unit for determining that the first corresponding information meets a first preset condition;
a first calling unit for calling the second obtaining module;
a second determination unit for determining that the first corresponding information does not meet the first preset condition;
an output unit for outputting prompt information at the first control center and/or the second control center.

In an embodiment, the processing device further includes:
a receiving module for receiving second instruction information sent by other devices controlled by the second control center;
a response module for responding to the second instruction information.

In an embodiment, the processing device further includes:
an output module for outputting relevant prompt information at the first control center and/or the second control center.

In an embodiment, the processing device further includes:
a judging module for determining whether it is a preset mode;
the judging module includes a second calling unit for calling the obtaining module.

In an embodiment, the present application further provides a processing device, including:
a first output module for outputting device list information at the first control center;
a first determination module for determining the target control center according to the selection operation;
a detection module for detecting whether the relevant information of the target control center meets the preset requirements;
a second determination module for determining that the relevant information of the target control center meets the preset requirements;
an execution module for performing a corresponding device control operation according to a preset strategy.

In an embodiment, the detection module includes at least one of the following:
a first detection unit for detecting whether the network rate information meets the network rate requirement;
a second detection unit for detecting whether the device state information meets the device state requirement;
a third detection unit for detecting whether the power information meets the power requirement;
a fourth detection unit for detecting whether the storage space information meets the storage space requirement;
a fifth detection unit for detecting whether the external environment information meets the external environment requirement;
a sixth detection unit for detecting whether the use environment information meets the use environment requirement;
a seventh detection unit for detecting whether the traffic information meets the traffic requirement;
an eighth detection unit for detecting whether the use habit information meets the use habit requirement;
a ninth detection unit for detecting whether the currently used application information meets the currently used application requirement;
a tenth detection unit for detecting whether the distance information meets the distance requirement; and
an eleventh detection unit for detecting whether the user physiological information meets the user physiological requirements.

In an embodiment, the execution module includes:
a determination unit for determining that the relevant information of the target control center meets the preset requirement;
the determination unit is further for determining that the target control center is different from the first control center;
a migration unit for transferring the control function of the first control center to the target control center.

In an embodiment, the processing device also includes:
a migration module for migrating relevant data in the first control center to the target control center.

In an embodiment, the migration module includes at least one of the following:
a first migration unit for only backing up or transferring the first relevant data in the first control center to the target control center;
a second migration unit for only backing up or transferring the second relevant data in the first control center to the target control center;
a third migration unit for in addition to backing up or transferring the first relevant data in the first control center to the target control center, backing up or transferring second relevant data corresponding to the first relevant data to the target control center;
a fourth migration unit for backing up or transferring the first relevant data and corresponding update data in the first control center to the target control center;
a fifth migration unit for backing up or transferring the second relevant data and corresponding update data in the first control center to the target control center;
a sixth migration unit for backing up or transferring the first relevant data and the corresponding update data in the first control center, and the update data of the second relevant data corresponding to the first relevant data to the target control center.

In an embodiment, the processing device further includes:
an obtaining module for obtaining first corresponding information related to the target control center before migrating or transferring or duplicating or backing up the control function of the first control center to the target control center;
a first response module for responding to the first corresponding information.

In an embodiment, the first response module includes at least one of the following:
a first determination unit for determining that the first corresponding information meets a third preset condition;
a first calling unit for calling the transfer unit;
a second determination unit for determining that the first corresponding information does not meet a third preset condition; and
an output unit for outputting prompt information at the first control center and/or the target control center.

In an embodiment, the processing device further includes:
a receiving module for receiving seventh instruction information sent by other devices controlled by the target control center;
a second response module for responding to the seventh instruction information.

In an embodiment, the processing device further includes:
a second output module for outputting relevant prompt information at the first control center and/or the target control center;
an update module for updating the device list information.

In an embodiment, the processing device further includes:
a judging module for judging whether it is a preset mode;
the judging module includes a second calling unit for calling the first output module.

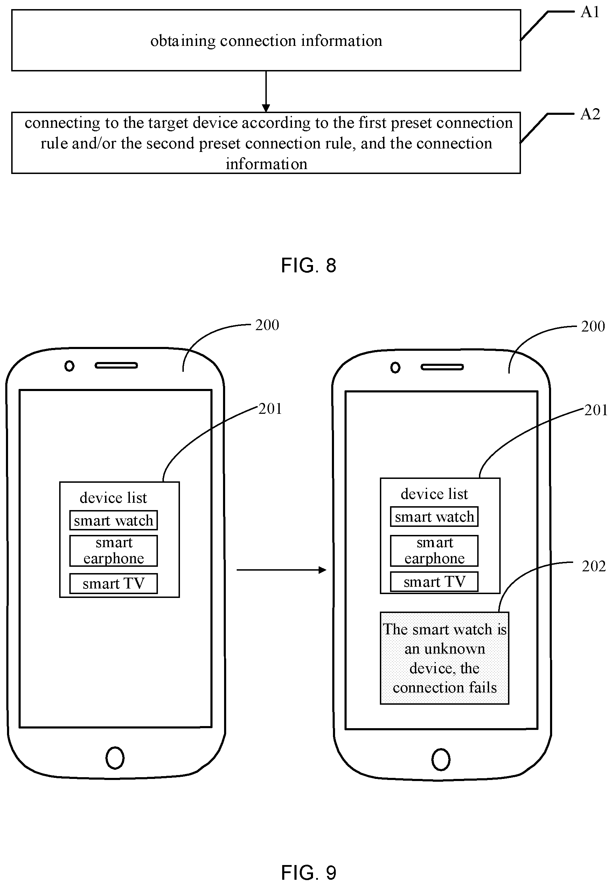

The present application provides a processing method. As shown in FIG. 8, FIG. 8 is a schematic flowchart of the processing method according to an embodiment of the present application.

The embodiment of the present application provides a processing method. Although a logical order is shown in the flowcharts, in some cases the steps shown or described may be performed in an order different from that shown or described herein. The processing method is applied to the initiator device. The processing method includes:
Operation A1, obtaining connection information, the connection information includes at least one first connection information and/or at least one second connection information, the first connection information is provided by the terminal, and the second connection information is provided by the target device.

In an embodiment, the first connection information or the second connection information may include at least one of the target device identification, the target device name, the target device address, the target device type, the target device quantity, the target device power, the target device state, and may also include at least one of connection user name, connection password and connection parameters.

In an embodiment, the connection information may also be provided by a terminal connected to the initiator device.

In an embodiment, terminal devices (such as smart phones, Portable Android Device (PAD), Tablet PC, etc.), wearable smart devices (such as smart watches, smart bracelets, smart earphones, etc.), smart home devices (such as smart TVs, smart speakers, etc.), and Internet of Vehicles devices (such as smart cars, vehicle terminals, etc.) will establish connections with each other during use to facilitate data exchange and provide users with corresponding functions. For example, the mobile phone establishes a connection with the smart speaker, so that the mobile phone is used as a sound source to output an audio signal, and the smart speaker is used as an output terminal to output a sound corresponding to the audio signal. The connection relationship is established through connection information, and the terminal is a device that has established a connection with the initiator device.

The initiator device acquires connection information. The connection information is provided by a terminal connected to the initiator device, or the first connection information is provided by the terminal and/or the second connection information is provided by the target device. It can be understood that the first connection information and the second connection information may be provided by different terminals, for example, the first connection information is provided by the smart watch, and the second connection information is provided by the smart phone.

In an embodiment, the initiator device is a computer (such as a PC or tablet), the terminal is a mobile phone, and the target device is a WIFI access point (it may be a WIFI hotspot from another mobile phone). The mobile phone has established a connection with the WIFI access point, and the computer has also established a connection with the mobile phone (such as Bluetooth, NFC, etc.), then the computer can obtain the ID of the WIFI access point and/or the connection user name and/or the connection password through the mobile phone, so that the computer can connect to the WIFI access point through the obtained connection information. Furthermore, connection parameter information such as the maximum device quantity that the WIFI access point can allow access to or the fastest connection speed can be obtained by a mobile phone and provided to the computer, or can be sent by a WIFI access point through broadcasting, etc., and can be obtained by the computer through broadcasting. Through this implementation manner, the connection between devices can be made more convenient and intelligent, and more secure technical effects can be achieved (such as avoiding the input of multiple connection passwords, etc.).

In an embodiment, the initiator device is a tablet, the terminal is a mobile phone, and the target device is a smart TV. The tablet is connected to the mobile phone, and the mobile phone is connected to the smart TV. The current user wants to connect and cast the information on the tablet (such as the music or video being played) to the smart TV, then corresponding processing can be performed on the tablet according to the connection information provided by the mobile phone (such as the maximum screen resolution supported by the smart TV, supported audio formats, supported video formats, supported multi-channel numbers, supported audio and video playback applications, etc.), to make the ready-to-deliver data meet the requirements of smart TVs. The connection information in this example may be obtained by the mobile phone from the smart TV in advance or in real time and sent to the tablet, or sent by the smart TV to the tablet through broadcasting or other means.

In an embodiment, the initiator device is a mobile phone, the terminal is a smart home control center (such as a smart router or a smart speaker or a smart voice assistant device, etc.), and the target device is a smart home device (such as a smart TV, a smart air conditioner, etc.). When the user is not at home, the smart home control center connects with all smart home devices and controls the smart home devices to work or sleep according to the preset method. When the user arrives at home, the control right of the smart home control center needs to be transferred to the user's mobile phone, and the user's mobile phone can perform control on all smart home devices. In order to realize a flexible and intelligent connection method, when the user arrives at home, the smart home control center first establishes a connection with the user's mobile phone. Therefore, the user's mobile phone can obtain the connection information of all smart home devices through the smart home control center. The connection information in this example includes at least one of the device name, device address, device type, device working state, and device power information of all smart home devices. Specifically, the device name, device address and device type of the smart home device can be obtained from the smart home control center by the user's mobile phone. The device working state and device power information of the smart home device can be provided by the smart home device to the user's mobile phone through broadcasting, or sent to the user's mobile phone by the smart home device through the smart home control center. After the user's mobile phone obtains the first connection information and the second connection information, the connection between the user's mobile phone and all smart home devices can be established, to realize the transfer of control rights from the smart home control center to the user's mobile phone. When the user is at home, the mobile phone can control the smart home devices, and when the user leaves home, the smart home control center continues to control all the smart home devices. Through this implementation manner, more convenient, flexible and intelligent technical effects can be achieved, thereby improving user experience.

In an embodiment, the initiator device is the vehicle device, the terminal is the user's mobile phone, and the target device is the centralized monitoring platform of the Internet of Vehicles. The user's mobile phone is connected to the centralized monitoring platform of the Internet of Vehicles and the vehicle device respectively. At present, users want to connect vehicle device intelligently and flexibly to the centralized monitoring platform of the Internet of Vehicles to accurately obtain road condition information, so as to provide auxiliary information for automatic driving. At this time, the first connection information of the centralized monitoring platform of the Internet of Vehicles can be provided to the vehicle device by the user's mobile phone, and the first connection information includes the encryption key shared by the server of the centralized monitoring platform of the Internet of Vehicles and the user's mobile phone, etc. In addition, the server of the centralized monitoring platform for the Internet of Vehicles can also provide the second connection information, the second connection information includes information such as a dynamically updated access point node and/or access address of the current server, the second connection information may be provided by broadcasting from a server of the centralized monitoring platform of the Internet of Vehicles, or indirectly through the user's mobile phone. Therefore, according to the first connection information and the second connection information, the vehicle device can be connected to the server of the centralized monitoring platform of the Internet of Vehicles in an encrypted state, to ensure the security of vehicle communication, and ensure the flexibility of vehicle device access to the centralized monitoring platform of the Internet of Vehicles.

Operation A2, connecting to the target device according to the first preset connection rule and/or the second preset connection rule, and the connection information.

In an embodiment, the initiator device can connect to the target device through the first preset connection rule and the connection information, or connect to the target device through the second preset connection rule and the connection information, or connect to the target device through the first preset connection rule, the second preset connection rule and the connection information. The initiator device is for determining whether to establish a connection with the target device and/or for determining attributes of the connection established between the initiator device and the target device. Different attributes can be regarded as different connections.

In an embodiment, the operation of connecting to the target device according to the first preset connection rule and/or the second preset connection rule, and the connection information includes:
Operation a, if the connection to the target device fails according to the first preset connection rule and the connection information, or if the connection to the target device fails according to the first preset connection rule and the connection information, or if the number of failed connections to the target device according to the first preset connection rule and the connection information reaches a preset value (preferably, such as 3 or 5 times), then connect the target device according to the second preset connection rule and the connection information.

In an embodiment, if the initiator device connects to the target device through the first preset connection rule and connection information, it is inconvenient for the target device to establish a connection with the initiator device. For example, the target device is establishing a connection with another device. Therefore, after the initiator device fails to connect to the target device, it can then connect to the target device according to the second preset connection rule and connection information.

In an embodiment, the connection information includes at least one of device identification, device name, device address, device type, device quantity, device power, and device state; and/or the connection information includes at least one of connection user name, connection password, and connection parameter.

In an embodiment, the above connection information includes at least one of device identification, device name, device address, device type, device quantity, device power, device state, connection user name, connection password, and connection parameter, or the above connection information includes at least one of device identification, device name, device address, device type, device quantity, device power, and device state, or the above connection information includes at least one of connection user name, connection password and connection parameter.

For the device identification, the initiator device can identify the identity of the target device through the device ID, which is equivalent to the identity feature identification information of the device. In addition, the initiator device may also use the device identification to identify whether the target device is a historically connected device. When the initiator device judges whether there is a device ID matching the preset device ID in the target device, the device ID is used to functionally distinguish other devices, which is equivalent to making a special mark for the device. For example, by setting the device identification, the user can only connect the smart phone to the smart earphone, but not the smart speaker. When the target device is a smart speaker, the initiator device cannot establish a connection with the target device.

For the device name, the initiator device can identify the identity of the target device through the device name. The initiator device can also output prompt information to the user through the device name, for example, if the device name is "smartphone", the initiator device can output the prompt information "connection has been established with the smartphone". In an embodiment, the initiator device may also use the device name to identify whether the target device is a historically connected device.

For the device address, the initiator device can identify the identity of the target device through the device address. The device address is the Media Access Control (MAC) address of the device, and the initiator device establishes a connection with the target device through the device address. Generally, when the initiator device establishes a connection with the target device through Bluetooth, the device address is the MAC address of Bluetooth. When the initiator device and the target device establish a connection through Wireless Fidelity (WiFi), the device address is the MAC address of WiFi. The initiator device may also use the device address to identify whether the target device is a historically connected device.

For the device type, when the initiator device connects to the target device, the target device may not be unique. In other words, there are multiple target devices. When there are multiple target devices, the initiator device classifies the target devices according to device types. For example, there are multiple smart air conditioners that can be connected in a smart home, and the multiple smart air conditioners can be classified as smart air conditioners. Among the connectable smart earphones, there are multiple smart earphones that meet the different audio playback needs of users, such as smart earphones for listening to music, smart earphones for playing games, smart earphones for watching movies, etc., and these multiple smart earphones may be classified as smart earphones.

For the device quantity, in order to ensure the stability of the connection between devices, the target device limits the maximum device quantity that can be connected. When the initiator device initiates a connection establishment request to the target device, the initiator device receives the device quantity and the maximum number of connectable devices fed back by the target device.

For the device power, in order to ensure the stability of the connection between devices, the initiator device needs to obtain the device power of the target device. It is understandable that the lower the battery power of the device, the shorter the usable time of the device for the same usage environment (such as playing music). Therefore, when the battery power of the target device is lower than a certain value, it is not necessary for the initiator device to connect to the target device.

For the device state, when the initiator device connects to the target device, the device state of the target device may be a device use state, a device running state, and the like.

For the connection user name and connection password, when the devices are connected, in order to ensure the accuracy and security of the connection, the initiator device needs to use the connection username and the connection password to ensure that the connected device is the target device and not other connectable devices.

For the connection parameter, when the initiator device connects to the target device, the target device sets certain conditions for the connection through the connection parameters, so as to achieve the purpose of restricting the connection.

In an embodiment, one or more of the connection information is sorted according to a preset priority. The first preset connection rule is generated and/or determined according to the sorted connection information. One or more of the connection information is sorted according to the preset strategy (such as priority, shortest connection time consumption, least connection power consumption, best connection security, etc.). The first preset connection rule is generated and/or determined according to the sorted connection information. Or, the first preset connection rule is obtained by matching one or more of the connection information with the third preset connection rule.

In an embodiment, one or more of the above connection information is sorted according to the preset priority, and a first preset connection rule is generated according to the sorted connection information. By matching one or more of the above connection information with the third preset connection rule, the first preset connection rule is obtained. The third preset connection rule is a system preset connection rule, and the connection rule includes the first preset connection rule. The connection rule is a sorting manner for performing preset sorting on one or more items of the above connection information.

The preset priority may be set by the user of the initiator device, or may be preset by the system, which is not specifically limited in this embodiment.

The sorting one or more of the connection information according to the preset priority includes:
sorting the connection information according to the first preset priority; and/or sorting the connection information providing devices corresponding to the same connection information in the connection information according to the second preset priority.

In an embodiment, the connection information is sorted according to the first preset priority; and/or the connection information providing devices corresponding to the same connection information in the connection information is sorted according to the second preset priority.

In an embodiment, the above sorting includes sorting among connection information, for example, sorting device names, device types, and device power, as well as sorting the connection information itself, such as sorting the first connection information providing device, the second connection information providing device, and the third connection information providing device of the device power. For the sorting of the connection information, it is sorted according to the first preset priority, and the connection information with high priority is judged first in the process of connecting the initiator device to the target device. For example, the priority of the device name is higher than the priority of the device power, so the connection information of the device name is given priority in the process of connecting the initiator device to the target device. For the sorting of the connection information itself, according to the second preset priority sorting, the initiator device preferentially connects to the connection information providing device with a higher priority when connecting to the target device. For example, the second connection information providing device has the highest priority for device power, so when the initiator device connects to the target device, the second connection information providing device is preferentially connected.

The device state includes at least one of normal, abnormal, smooth, stuck, idle, overloaded, allowed to connect, not allowed to connect, restricted to connect, safe, not safe, worn, not worn, used, and not used.

During the operation of the device, there are various device states, including at least one of normal, abnormal, smooth, stuck, idle, overload, allowed to connect, not allowed to connect, restricted connection, safe, unsafe, worn, not worn, used, not used.

When the device state of the target device connected to the initiator device is at least one of abnormal, stuck, overloaded, not allowed to connect, unsafe, not worn, and not used, it is inconvenient for subsequent data exchange. For example, if the device state of the target device is stuck, during the subsequent data exchange process, the data processing process of the target device will be extremely long, affecting user experience.

In an embodiment, the device state is normal, which means that the target device is in a normal working state. The device state is abnormal, which means that the target device is in an abnormal working state. The device state is smooth, which means that the target device can work smoothly. The device state is stuck, which means that the target device cannot work smoothly. For example, the target device responds abnormally, and the response time is longer than smooth. The device state is idle, which means that the target device currently needs to process fewer tasks, for example, the Central Processing Unit (CPU) occupies a small proportion. The device state is overloaded, which means that the target device currently needs to process more tasks, such as a large CPU usage. The device state is allowed to connect, which means that the target device is allowed to establish a connection with other devices. The device state is not allowed to connect, which means that the target device is not allowed to establish a connection with other devices. The device state is restricted connection, which means that the target device is only allowed to establish a connection with other devices under certain conditions. The device state being safe means that the target device is in a safe state, for example, the network used by the target device is a secure network. The device state is unsafe, which means that the target device is in an unsafe state. For example, the network used by the target device is an unsafe network (a network with security risks (such as public WiFi)). The device state is worn, which means that the target device is worn by the user. The device state is not worn, which means that the target device is not worn by the user. The device state is in use, which means that the target device is in use by the user. The device state is not in use, which means that the target device is not in use by the user.

The connection parameters include at least one of connection duration, connection rate, connection start time, connection end time, and connection location.

The connection parameters include at least one of connection duration, connection rate, connection start time, connection end time, and connection location. The connection parameters may be set by a user of the target device or automatically recognized by the target device. The connection time is the available time after the connection between the initiator device and the target device is established, and the connection will be disconnected after the available time is exceeded. The connection rate is the available data exchange rate after the initiator device and the target device establish a connection. During the data exchange process, the data exchange rate is not allowed to exceed the available data exchange rate. The connection start time is the start time of establishing a connection between the initiator device and the target device, and the time may be set by the user of the initiator device or by the user of the target device, and may also be the current time. The connection end time is the time when the connection between the initiator device and the target device is disconnected, and the time may be set by a user of the initiator device or by a user of the target device. The connection location is the current location information of the target device. For example, if the location of the target device is a conference room, and the target device is an earphone, especially a wireless earphone, it is not advisable to use two earphones at the same time to avoid missing the meeting content. Therefore, after the initiator device is connected to the wireless earphone, it only transmits the data to be played to one of the earphones (such as the main earphone). For another example, when the target device is located in a car, the user of the initiator device is the driver, and the target device is an earphone, especially a wireless earphone, in order to prevent the driver from being immersed in the content output by the earphone and causing driving safety hazards. Therefore, after the initiator device is connected to the wireless earphone, it only transmits the data to be played to one of the earphones (such as the main earphone), which makes the connection between the initiator device and the target device more flexible, intelligent and safe, and improves user experience.

In an embodiment, the first preset connection rule includes at least one of the following:
if the device identification meets the first preset condition, connecting to the target device according to the device identification and the connection information, and/or, if the device identification does not meet the first preset condition, not connecting to the target device and/or outputting prompt information.

In an embodiment, if the device identification meets the first preset condition, the initiator device establishes a connection with the target device through at least one of the connection user name, the connection password, and the device identification, and/or, if the device identification does not meet the first preset condition, the initiator device does not connect to the target device and/or outputs a prompt information,

In an embodiment, meeting the first preset condition means that the device identification includes a device identification of a historically connected device or is a special mark.

In an embodiment, during the process of establishing a connection, the initiator device identifies the target device through the device identification, and uses at least one of the connection user name and the connection password to complete the authentication between the initiator device and the target device, so as to establish the connection.

In an embodiment, the prompt information may include text information, voice information, etc.. For example, as shown in FIG. 9, 200 is an initiator device. The device thatestablishes a connection with the initiator device is displayed through the device list 201. When the user tries to connect to the smart watch or the initiator device attempts to automatically connect to the smart watch, when the smart watch does not meet the first preset condition, the initiator device outputs a prompt information "This smart watch is an unknown device and connection establishment fails" through the pop-up box 202.

If the device name meets the second preset condition, connecting to the target device according to the device name and the connection information, and/or, if the device name does not meet the second preset condition, not connecting to the target device and/or outputting prompt information.

If the device name meets the second preset condition, the initiator device establishes a connection with the target device through at least one of the connection user name, the connection password, and the device name, and/or, if the device name does not meet the second preset condition, the initiator device does not connect to the target device and/or outputs a prompt information. In an embodiment, the meeting the second preset condition is that the device name includes a device name of a historically connected device.

In an embodiment, the process of establishing a connection is that the initiator device identifies the target device by the device name. The authentication between the initiator device and the target device is completed by at least one of the connection user name and the connection password, so as to complete the establishment of the connection.

In an embodiment, the prompt information may include text information, voice information, etc., such as outputting a prompt information "XXX is an unknown device, connection establishment failed".

If the device address meets the third preset condition, connecting to the target device according to the device address and the connection information, and/or, if the device address does not meet the third preset condition, not connecting to the target device and/or outputting prompt information.

In an embodiment, if the device address meets the third preset condition, the initiator device establishes a connection with the target device through at least one of the connection user name, the connection password, and the device address, and/or if the device address does not meet the third preset condition, the initiator device does not connect to the target device and/or outputs a prompt information. The meeting the third preset condition is that the device address includes a device address of a historically connected device.

In an embodiment, during the process of establishing a connection, the initiator device identifies the target device through the device address. The authentication between the initiator device and the target device is completed by at least one of the connection user name and the connection password, so as to establish the connection.

In an embodiment, the prompt information may include text information, voice information, etc., such as outputting a prompt information "XXX is an unknown device, connection establishment failed".

If the device type meets the fourth preset condition, connecting to the target device according to the device type and the connection information, and/or if the device type does not meet the fourth preset condition, not connecting to the target device and/or outputting prompt information.

In an embodiment, if the device type meets the fourth preset condition, the initiator device establishes a connection with the target device through at least one of the connection user name and connection password and the device type, and/or, if the device type does not meet the fourth preset condition, the initiator device does not connect to the target device and/or outputs a prompt information. In an embodiment, meeting the fourth preset condition means that the device type meets the current use condition of the initiator device.

In an embodiment, the current use conditions can be automatically judged by the initiator device, or can be set by the user of the initiator device. For example, if the user of the initiator device is playing a game, then the device type is a smart earphone for playing games, which meets the current use conditions of the initiator device. For another example, the user of the initiator device needs to turn on a smart air conditioner. If there are multiple smart air conditioners in the device type information providing device, one of the multiple smart air conditioners is turned on through the preset opening rules to meet the current use conditions of the initiator device. The preset turning-on rule may be turning on the smart air conditioner closest to the initiator device, turning on the smart air conditioner with the most usage times, and so on.

In an embodiment, the process of establishing a connection is that the initiator device identifies the target device through the device type. The authentication between the initiator device and the target device is completed by at least one of the connection user name and the connection password, so as to complete the establishment of the connection.

In an embodiment, the prompt information may include text information, voice information, etc., such as outputting a prompt information "currently there is no usable device suitable for the use environment, and connection establishment fails".

If the device quantity meets the fifth preset condition, connecting to the target device according to the device quantity and the connection information, and/or, if the device quantity does not meet the fifth preset condition, not connecting to the target device and/or outputting prompt information.

If the device quantity meets the fifth preset condition, the initiator device establishes a connection with the target device through at least one of the connection user name, the connection password, and the device quantity, and/or if the device quantity does not meet the fifth preset condition, the initiator device does not connect to the target device and/or outputs a prompt information. In an embodiment, meeting the fifth preset condition is that the device quantity does not exceed the maximum number of connectable devices of the target device.

In an embodiment, during the process of establishing a connection, the initiator device determines the target device with the second highest priority among the device quantity. The authentication between the initiator device and the target device is completed by at least one of the connection user name and the connection password, so as to complete the establishment of the connection.

In an embodiment, the prompt information may include text information, voice information, etc., such as outputting the prompt information "There is currently no device available for connection, and connection establishment failed".

If the device power meets the sixth preset condition, connecting to the target device according to the device power and the connection information, and/or, if the device power does not meet the sixth preset condition, not connecting to the target device and/or outputting prompt information.

In an embodiment, if the device power meets the sixth preset condition, the initiator device establishes a connection with the target device through at least one of the connection user name, the connection password, and the device power, and/or, if the device power does not meet the sixth preset condition, the initiator device does not connect to the target device and/or outputs a prompt information. In an embodiment, meeting the sixth preset condition means that the device power is greater than or equal to a preset power threshold.

In an embodiment, during the process of establishing a connection, the initiator device determines the target device with the second highest priority in the device power. The authentication between the initiator device and the target device is completed by at least one of the connection user name and the connection password, so as to complete the establishment of the connection.

The prompt information may include text information, voice information, etc., such as outputting a prompt information that "the power of the current device does not meet the usage requirements, and the establishment of a connection fails".

If the device state meets the seventh preset condition, connecting to the target device according to the device state and the connection information, and/or, if the device state does not meet the seventh preset condition, not connecting to the target device and/or outputting prompt information.

If the device state meets the seventh preset condition, the initiator device establishes a connection with the target device through at least one of the connection user name, the connection password, and the device state, and/or, if the device state does not meet the seventh preset condition, the initiator device does not connect to the target device and/or outputs a prompt information. The meeting the seventh preset condition means that the device state includes at least one of normal, smooth, idle, connection allowed, connection restricted, safe, worn, and used.

In an embodiment, during the process of establishing a connection, the initiator device determines the target device with the second highest priority in the device state. The authentication between the initiator device and the target device is completed by at least one of the connection user name and the connection password, so as to complete the establishment of the connection. In an embodiment, the method for determining the second preset priority in the device state is: the more items in the device state including normal, smooth, idle, allowed to connect, restricted connection, safe, worn, and used, the higher the second preset priority.

In an embodiment, the prompt information may include text information, voice information, etc., such as outputting a prompt information that "the device state of the current device does not meet the use requirements, and connection establishment fails".

If the connection parameters meet the eighth preset condition, connecting to the target device according to the connection parameters and the connection information, and/or, if the connection parameters do not meet the eighth preset condition, not connecting to the target device and/or outputting prompt information.

If the connection parameter meets the eighth preset condition, the initiator device establishes a connection with the target device through at least one of the connection user name, the connection password, and the connection parameters, and/or, if the device state does not meet the eighth preset condition, the initiator device does not connect to the target device and/or outputs prompt information.

In an embodiment, during the process of establishing a connection, the initiator device determines the target device corresponding to the connection parameter that meets the eighth preset condition among the connection parameters. The authentication between the initiator device and the target device is completed by at least one of the connection user name and the connection password, so as to complete the establishment of the connection.

In an embodiment, the prompt information may include text information, voice information, etc., such as outputting a prompt information that "currently there is no device that meets the connection requirements, and connection establishment fails".

In an embodiment, the meeting the eighth preset condition includes at least one of the following:
the connection parameters include a connection duration, and the historical connection duration is less than or equal to the connection duration;
the connection parameters include a connection rate, and the current connection rate is greater than or equal to the connection rate;
the connection parameters include the connection start time, and the current time meets the start time requirements;
the connection parameters include the connection end time, and the current time meets the end time requirements;
the connection parameters include the connection location, and the current location meets the connection location requirements.

In an embodiment, when the connection parameter includes a connection duration, and the historical connection duration is shorter than the connection duration, the eighth preset condition is met. The historical connection duration is the cumulative total duration of historical connections between the initiator device and the target device, and the historical connection can be limited to a certain period of time from the current time. For example, within 10 hours from the current time, it is guaranteed that the total duration of the connection between the initiator device and the target device within the certain period of time is less than the connection duration. The connection parameter includes the connection rate, and when the current connection rate is greater than or equal to the connection rate, the eighth preset condition is met. The connection rate is the minimum connection rate that meets data transmission during the connection process. When the connection start time is included in the connection parameters, and the current time meets the start time requirement, the eighth preset condition is met. The connection start time should be after the current time, for example, if the current time is 15:30, the connection start time should be after 15:30 (such as 15:35). When the connection end time is included in the connection parameters, and the current time meets the end time requirement, the eighth preset condition is met. The connection end time should be after the current time, and at the same time, after the connection start time, for example, if the current time is 15:30 and the connection start time is 15:35, then the connection end time should be after 15:35 (such as 15:40). When the connection location is included in the connection parameters, and the current location meets the requirements of the connection location, the eighth preset condition is met. When the current location is the default location, the connection location requirements are met, and the default location includes a meeting room, a car, and the like.

In an embodiment, before the operation A1, the processing method further includes:
Operation A0, detecting whether a preset operation is received or whether it is in a preset mode, and if so, performing operation A1.

The initiator device detects whether a preset operation is received or whether it is in a preset mode, and if a preset operation is received or is currently in a preset mode, the operation of obtaining connection information is executed. If the preset operation is not received or the preset mode is not currently in, the operation of obtaining the connection information is not executed. The preset mode includes a smart mode, an automatic switching mode, and other modes that support the connection between devices through the first preset connection rule and/or the second preset connection rule.

In an embodiment, before the operation A2, the processing method further includes:
Operation b, performing operation A2 after receiving the feedback information from the target device, and/or receiving the connection confirmation instruction.

The initiator device receives the feedback information from the target device, and/or, after receiving the connection confirmation instruction, the operation of connecting the target device according to the first preset connection rule and/or the second preset connection rule and the connection information is executed.

The feedback information is whether the target device agrees to establish a connection with the initiator device. The confirmation connection instruction is an instruction entered by the user on the initiator device to confirm the establishment of a connection with the target device. Therefore, the initiator device user decides whether to establish a connection, making the process of establishing a connection more flexible and intelligent, and improving user experience.

In an embodiment, after the operation A2, the processing method further includes:
Operation A3, after the connection succeeds or fails, outputting prompt information to at least one of the initiator device, the terminal, and the target device.

In an embodiment, after the initiator device successfully or fails to connect to the target device, it outputs prompt information to at least one of the initiator device, the terminal, and the target device, so as to prompt the user whether the connection succeeds or fails, thereby improving user experience.

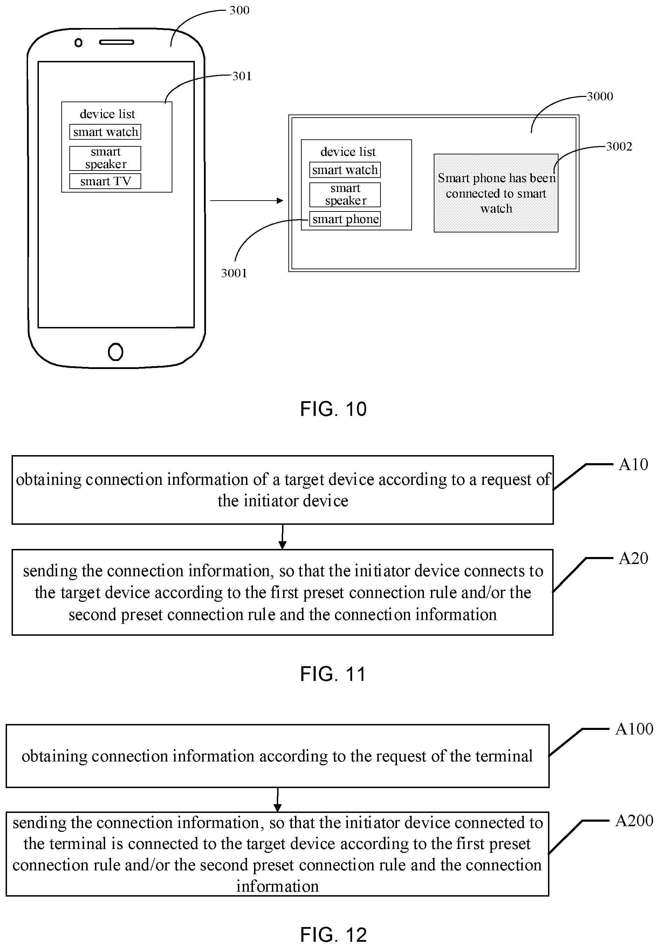

In an embodiment, the prompt information includes at least one of voice information, text information, vibration information, and light information. The text information can be output through the pop-up box of the display screen of at least one device in the initiator device, the terminal, and the target device. For example, as shown in FIG. 10, if the initiator device 300 is a smart phone, through the "smart TV" terminal 3000, the text message "smart phone is connected to the smart watch" can be output. Specifically, the display duration of the pop-up window can also be set, such as automatically closing after 0.5 seconds. The voice information can be output through a loudspeaker of at least one of the initiator device, the terminal, and the target device. If the voice information is output by the initiator device, its content can be "connected XXX". The light information can be output through the flashlight of at least one device among the initiator device, the terminal, and the target device. For example, the preset flash mode prompts the user that the initiator device has successfully established a connection with the target device. The preset flash mode can flash once every fixed time, and flash continuously for a period of time. If the user unlocks the light information output device at this time, the prompt information "XXX is connected" can also be output to the user by outputting text information or outputting voice information. The vibration information can be output through the vibration function of at least one device among the initiator device, the terminal, and the target device. For example, the user is prompted that the initiator device has successfully established a connection with the target device through a preset vibration method. The preset vibration method can be to vibrate once at a fixed interval, and vibrate continuously for a period of time. If the user unlocks the light information output device at this time, the prompt information "XXX is connected" can also be output to the user by outputting text information or outputting voice information.

In an embodiment, the device state includes the state of the terminal and/or the state of the target device.

In an embodiment, the device state includes the state of the terminal and/or the state of the target device.

The device state can not only be used as a basis for determining whether a connection between devices is established, but also as a basis for determining whether an established connection between devices is disconnected. The state of the terminal in the device state can be used to determine whether the terminal needs to disconnect from the initiator device. The state of the target device in the device state can be used to determine whether the target device is suitable for establishing a connection with the initiator device.

In an embodiment, the connection information includes at least one first connection information and/or at least one second connection information. The first connection information is provided by the terminal, and the second connection information is provided by the target device.

In an embodiment, the connection information includes at least one first connection information and/or at least one second connection information. The first connection information is provided by the terminal, and the second connection information is provided by the target device.

In an embodiment, the terminal has established a connection with the target device, and the terminal may provide the acquired first connection information of the target device to the initiator device. The unacquired second connection information of the target device may also be obtained after receiving the connection request of the initiator device, so as to provide the second connection information to the initiator device.

In an embodiment, the first preset connection rule is generated and/or determined according to the first connection information and/or the second connection information. Or, the first preset connection rule is obtained by matching one or more of the first connection information and/or the second connection information with a third preset connection rule.

In an embodiment, a first preset connection rule is generated according to the first connection information acquired by the terminal and/or the second connection information not acquired by the terminal. Or, the first preset connection rule is obtained by matching one or more of the first connection information acquired by the terminal and/or the second connection information not acquired by the terminal to the third preset connection rule.

In an embodiment, the second preset connection rule includes at least one of the following:
if the connection is successful, the initiator device and the target device will no longer be disconnected or disconnected at a fixed time or timeout; if the connection fails, the initiator device and the target device will no longer be connected or be connected regularly or periodically.

In an embodiment, if the initiator device is successfully connected to the target device, the initiator device and the target device are no longer disconnected or disconnected at a fixed time or timed out. If the connection between the initiator device and the target device fails, the initiator device and the target device will no longer be connected or connected regularly or periodically.

In an embodiment, the initiator device successfully connects to the target device, and the conditions for disconnection between the initiator device and the target device can be determined through a certain disconnection strategy. The disconnection strategy includes no longer disconnection or timing disconnection or timeout disconnection. No longer disconnection means that the initiator device (or target device) continues to maintain the above connection until it receives the user's connection disconnection instruction. Timing disconnection means that after the connection is established, a certain time is reached, then the initiator device will automatically disconnect from the target device. For example, if the connection is established within 5 minutes, the initiator device will automatically disconnect from the target device. Timeout disconnect means that after the connection is established, if there is no data exchange between the initiator device and the target device within a certain period of time, the initiator device and the target device will automatically disconnect. For example, after the transmission of a certain data between the initiator device and the target device is completed, if there is no data exchange between the initiator device and the target device within 6 minutes, the initiator device and the target device will be automatically disconnected.

In an embodiment, after the connection between the initiator device and the target device fails, the initiator device can continue to try to connect to the target device through the continuous connection strategy. No longer connection means that the initiator device does not try to connect to the target device before receiving the user's request connection instruction. Timing connection means that after a certain time after the connection fails, the initiator device will automatically try to connect to the target device again. For example, if it reaches 5 minutes after the connection is established, the initiator device will automatically try to connect to the target device again. Periodic connection means that after the connection fails, the initiator device periodically tries to connect to the target device again. For example, after the connection fails, the initiator device tries to connect to the target device every 6 minutes.

In an embodiment, the processing method further includes:
Operation c, after the initiator device is successfully connected to the target device, maintaining or disconnecting the connection between the terminal and the target device.

In an embodiment, after the initiator device is successfully connected to the target device, the connection between the terminal and the target device is maintained or disconnected.

In an embodiment, the target device and the terminal may be devices with similar functions. After the initiator device successfully connects with the target device, it disconnects the connection between the terminal and the target device. For example, the initiator device is a smart earphone, the terminal is a smart phone, and the target device is a PAD with similar functions to the smart phone. The target device and the terminal may also be devices with dissimilar functions. After the initiator device successfully connects with the target device, it maintains the connection between the terminal and the target device. For example, the initiator device is a smart earphone, the terminal is a smart phone, and the target device is a vehicle terminal.

In an embodiment, the processing method further includes:
Operation d, if the connection information changes, updating the corresponding preset connection rule.

If the connection information changes, the corresponding preset connection rule is updated.

In an embodiment, the first preset connection rule and the second preset connection rule are directly affected by the connection information. For example, the first preset priority of device identification in connection information is the highest, and the first preset priority of device number in connection information is second. The first preset connection rule is to give priority to the device identification for connection, and after the connection information changes, the device identification in the connection information is no longer considered. The device quantity ranked second originally in the first preset priority is changed to the first priority, and the first preset connection rule at this time is updated to give priority to the device quantity for connection.

In this embodiment, the processing method includes: A1, obtaining connection information, the connection information is provided by a terminal connected to the initiator device; A2, connecting to the target device according to the first preset connection rule and/or the second preset connection rule, and the connection information. After obtaining the connection information provided by the terminal, connecting the target device through the first preset connection rule and/or the second preset connection rule and connection information provides more optional connection solutions for the connection between the initiator device and the target device. The application makes the initiator device more flexible and intelligent when establishing a connection with the target device.

In an embodiment, as shown in FIG. 11, based on an embodiment of the processing method of the present application, another embodiment is proposed. Although a logical order is shown in the flowcharts, in some cases the steps shown or described may be performed in an order different from that shown or described herein. The processing method is applied to the terminal, and includes the following operations.

Operation A10, obtaining the connection information of the target device according to the request of the initiator device, the connection information includes at least one first connection information and/or at least one second connection information. The first connection information is provided by the terminal, and the second connection information is provided by the target device.

In an embodiment, the first connection information or the second connection information may include at least one of the target device identification, the target device name, the target device address, the target device type, the target device quantity, the target device power, and the target device state, and may also include at least one of connection user name, connection password and connection parameters.

In an embodiment, the connection information may also be provided by the terminal.

In an embodiment, the terminal obtains the obtained connection information of the target device according to the request of the initiator device, and/or obtains the connection information of the target device that has not been obtained.

In an embodiment, the initiator device is a computer (such as a PC or tablet), the terminal is a mobile phone, and the target device is a WIFI access point (which may be a WIFI hotspot from another mobile phone). The mobile phone has established a connection with the WIFI access point, and the computer has also established a connection with the mobile phone (such as Bluetooth, NFC, etc.), the computer can obtain the ID of the WIFI access point and/or the connection user name and/or the connection password through the mobile phone, so that the computer can connect to the WIFI access point through the obtained connection information. Furthermore, connection parameter information such as the maximum device quantity that the WIFI access point can allow access to or the fastest connection speed can be obtained by a mobile phone and provided to the computer, or can be sent by a WIFI access point through broadcasting, etc., and can be obtained by the computer through broadcasting. Through this implementation manner, the connection between devices can be made more convenient and intelligent, and more secure technical effects can be achieved (such as avoiding the input of multiple connection passwords, etc.).

In an embodiment, the initiator device is a tablet, the terminal is a mobile phone, and the target device is a smart TV. The tablet and the mobile phone are connected, and the mobile phone is connected to the smart TV. The current user wants to connect and cast the information on the tablet (such as the music or video being played) to the smart TV, then corresponding processing can be performed on the tablet according to the connection information provided by the mobile phone (such as the maximum screen resolution supported by the smart TV, supported audio formats, supported video formats, supported multi-channel numbers, supported audio and video playback applications, etc.), so that the data to be released can meet the requirements of the smart TV. The connection information in this example may be obtained by the mobile phone from the smart TV in advance or in real time and sent to the tablet, or sent by the smart TV to the tablet through broadcasting or other means.

In an embodiment, the initiator device is a mobile phone, the terminal is a smart home control center (such as a smart router or a smart speaker or a smart voice assistant device, etc.), and the target device is a smart home device (such as a smart TV, a smart air conditioner, etc.). When the user is not at home, the smart home control center is connected with all smart home devices, and controls the smart home devices to work or sleep according to the preset method. When the user arrives at home, the control right of the smart home control center needs to be transferred to the user's mobile phone, and the user's mobile phone can perform control on all smart home devices. In order to realize a flexible and intelligent connection method, when the user arrives at home, the smart home control center first establishes a connection with the user's mobile phone, so the user's mobile phone can obtain the connection information of all smart home devices through the smart home control center. The connection information in this example includes at least one of the device name, device address, device type, device working state, and device power information of all smart home devices. Specifically, the device name, device address and device type of the smart home device can be obtained from the smart home control center by the user's mobile phone. The device working state and device power information of smart home devices can be provided to the user's mobile phone by the smart home device through broadcasting, or sent to the user's mobile phone by the smart home device through the smart home control center. After the user's mobile phone obtains the first connection information and the second connection information, the connection between the user's mobile phone and all smart home devices can be established, thereby realizing the transfer of control rights from the smart home control center to the user's mobile phone. When users are at home, they can use their mobile phones to control smart home devices. When users are at home, they can use their mobile phones to control smart home devices. When the user leaves home, the smart home control center continues to control all smart home devices. Through this implementation manner, more convenient, flexible and intelligent technical effects can be achieved, thereby improving user experience.

In an embodiment, the initiator device is the vehicle device, and the terminal is the user's mobile phone, the target device is the centralized monitoring platform of the Internet of Vehicles, and the user's mobile phone is connected to the centralized monitoring platform of the Internet of Vehicles and the vehicle equipment respectively. The current users want to connect vehicle device intelligently and flexibly to the centralized monitoring platform of the Internet of Vehicles to accurately obtain road condition information, so as to provide auxiliary information for automatic driving. At this time, the user's mobile phone can provide the first connection information of the centralized monitoring platform of the Internet of Vehicles to the vehicle device. The first connection information includes the encryption key shared by the server of the centralized monitoring platform of the Internet of Vehicles and the user's mobile phone, etc.. In addition, the server of the centralized monitoring platform of the Internet of Vehicles can also provide the second connection information. The second connection information includes information such as a dynamically updated access point node and/or access address of the current server. The second connection information may be provided by broadcasting from a server of the centralized monitoring platform of the Internet of Vehicles, or indirectly through the user's mobile phone. Therefore, according to the first connection information and the second connection information, the vehicle device can be connected to the server of the centralized monitoring platform of the Internet of Vehicles in an encrypted state, to ensure the security of vehicle communication, and ensure the flexibility of vehicle device access to the centralized monitoring platform of the Internet of Vehicles.

Operation A20, sending the connection information, so that the initiator device connects to the target device according to the first preset connection rule and/or the second preset connection rule and the connection information.

In an embodiment, the terminal sends the connection information to the initiator device, so that the initiator device connects to the target device according to the first preset connection rule and/or the second preset connection rule and the connection information.

In an embodiment, the operation of sending the connection information includes:
Operation e, if the initiator device fails to connect to the target device according to the first preset connection rule and the connection information, or if the number of times the initiator device fails to connect to the target device according to the first preset connection rule and the connection information reaches a preset value (preferably, such as 3 times or 5 times), then connecting the target device according to the second preset connection rule and the connection information.

In an embodiment, if it is inconvenient for the target device to establish a connection with the initiator device when the initiator device connects to the target device through the first preset connection rule and connection information, for example, the target device is establishing a connection with other devices, after the initiator device fails to connect to the target device, it can then connect to the target device according to the second preset connection rule and connection information.

In an embodiment, the connection information includes at least one of device identification, device name, device address, device type, device quantity, device power, and device state; and/or, the connection information includes at least one of a connection user name, a connection password, and a connection parameter.

In an embodiment, the above connection information includes at least one of device identification, device name, device address, device type, device quantity, device power, device state, connection user name, connection password, and connection parameters, or the above connection information includes at least one of device identification, device name, device address, device type, device quantity, device power, and device state, or the above connection information includes at least one of connection user name, connection password and connection parameters.

For the device identification, the initiator device can identify the identity of the target device through the device identification, which is equivalent to the identity feature identification information of the device. In addition, the initiator device may also use the device identification to identify whether the target device is a historically connected device. In an embodiment, when the initiator device judges whether there is a device ID matching the preset device ID in the target device, the device ID is used to functionally distinguish other devices, which is equivalent to making a special mark for the device. For example, by setting the device identification, the user can only connect the smart phone to the smart earphone, but not the smart speaker. When the target device is a smart speaker, the initiator device cannot establish a connection with the target device.

For the device name, the initiator device can identify the identity of the target device through the device name. The initiator device can also output prompt information to the user through the device name, for example, if the device name is "smartphone", the initiator device can output the prompt information "connection has been established with the smartphone". The initiator device can also identify whether the target device is a historically connected device through the device name.

For the device address, the initiator device can identify the identity of the target device through the device address. The device address is the Media Access Control (MAC) address of the device. The initiator device establishes a connection with the target device through the device address. Generally, when the initiator device establishes a connection with the target device through Bluetooth, the device address is the MAC address of Bluetooth. When the initiator device establishes a connection with the target device through WiFi, the device address is the MAC address of WiFi; in an embodiment, the initiator device can also use the device address to identify whether the target device is a historically connected device.

For the device type, when the initiator device connects to the target device, the target device may not be unique. In other words, there are multiple target devices, and when there are multiple target devices, the initiator device classifies the target devices according to device types. For example, there are multiple smart air conditioners that can be connected in a smart home, and the multiple smart air conditioners can be classified as smart air conditioners. Among the connectable smart earphones, there are multiple smart earphones that meet the different audio playback needs of users, such as smart earphones for listening to music, smart earphones for playing games, smart earphones for watching movies, etc., these multiple smart earphones may be classified as smart earphones.

For the device quantity, in order to ensure the stability of the connection between devices, the target device limits the maximum device quantity that can be connected. When the initiator device initiates a connection establishment request to the target device, the initiator device receives the device quantity and the maximum number of connectable devices fed back by the target device.

For the device power, in order to ensure the stability of the connection between devices, the initiator device needs to obtain the device power of the target device. It is understandable that the lower the battery power of the device, the shorter the usable time of the device for the same use environment (such as playing music). Therefore, when the battery power of the target device is lower than a certain value, it is not necessary for the initiator device to connect to the target device.

For the device state, when the initiator device connects to the target device, the device state of the target device may be a device use state, a device running state, and the like.

For the connection user name and connection password, when connecting between devices, in order to ensure the accuracy and security of the connection, the initiator device needs to use the connection username and the connection password to ensure that the connected device is the target device and not other connectable devices.

For the connection parameters, when the initiator device connects to the target device, the target device sets certain conditions for the connection through the connection parameters, so as to achieve the purpose of restricting the connection.

In an embodiment, the processing method further includes:
Sorting one or more of the connection information according to a preset priority; generating and/or determining the first preset connection rule according to the sorted connection information. One or more of the connection information is sorted according to the preset strategy (such as priority, shortest connection time consumption, least connection power consumption, best connection security, etc.). The first preset connection rule is generated and/or determined according to the sorted connection information. Or, the first preset connection rule is obtained by matching one or more of the connection information with the third preset connection rule.

In an embodiment, one or more of the above connection information is sorted according to the preset priority, and a first preset connection rule is generated according to the sorted connection information. By matching one or more of the above connection information with the third preset connection rule, the first preset connection rule is obtained. The third preset connection rule is a system preset connection rule, and the connection rule includes the first preset connection rule. The connection rule is a sorting manner for performing preset sorting on one or more items of the above connection information.

The preset priority may be set by the user of the initiator device, or may be preset by the system, which is not specifically limited in this embodiment.

The sorting one or more of the connection information according to the preset priority includes:
sorting the connection information according to the first preset priority; and/or sorting the connection information providing devices corresponding to the same connection information in the connection information according to the second preset priority.

In an embodiment, the connection information is sorted according to the first preset priority; and/or the connection information providing devices corresponding to the same connection information in the connection information is sorted according to the second preset priority.

In an embodiment, the above sorting includes sorting among connection information, for example, sorting device names, device types, and device power, as well as sorting the connection information itself, such as sorting the first connection information providing device, the second connection information providing device, and the third connection information providing device of the device power. For the sorting of the connection information, it is sorted according to the first preset priority, and the connection information with high priority is judged first in the process of connecting the initiator device to the target device. For example, the priority of the device name is higher than the priority of the device power, so the connection information of the device name is given priority in the process of connecting the initiator device to the target device. For the sorting of the connection information itself, according to the second preset priority sorting, the initiator device preferentially connects to the connection information providing device with a higher priority when connecting to the target device. For example, the second connection information providing device has the highest priority for device power, so when the initiator device connects to the target device, the second connection information providing device is preferentially connected.

The device state includes at least one of normal, abnormal, smooth, stuck, idle, overloaded, allowed to connect, not allowed to connect, restricted to connect, safe, not safe, worn, not worn, used, and not used.

During the operation of the device, there are various device states, including at least one of normal, abnormal, smooth, stuck, idle, overload, allowed to connect, not allowed to connect, restricted connection, safe, unsafe, worn, not worn, used, not used.

When the device state of the target device connected to the initiator device is at least one of abnormal, stuck, overloaded, not allowed to connect, unsafe, not worn, and not used, it is inconvenient for subsequent data exchange. For example, if the device state of the target device is stuck, during the subsequent data exchange process, the data processing process of the target device will be extremely long, affecting user experience.

In an embodiment, the device state is normal, which means that the target device is in a normal working state. The device state is abnormal, which means that the target device is in an abnormal working state. The device state is smooth, which means that the target device can work smoothly. The device state is stuck, which means that the target device cannot work smoothly. For example, the target device responds abnormally, and the response time is longer than smooth. The device state is idle, which means that the target device currently needs to process fewer tasks, for example, the Central Processing Unit (CPU) occupies a small proportion. The device state is overloaded, which means that the target device currently needs to process more tasks, such as a large CPU usage. The device state is allowed to connect, which means that the target device is allowed to establish a connection with other devices. The device state is not allowed to connect, which means that the target device is not allowed to establish a connection with other devices. The device state is restricted connection, which means that the target device is only allowed to establish a connection with other devices under certain conditions. The device state being safe means that the target device is in a safe state, for example, the network used by the target device is a secure network. The device state is unsafe, which means that the target device is in an unsafe state. For example, the network used by the target device is an unsafe network (a network with security risks (such as public WiFi)). The device state is worn, which means that the target device is worn by the user. The device state is not worn, which means that the target device is not worn by the user. The device state is in use, which means that the target device is in use by the user. The device state is not in use, which means that the target device is not in use by the user.

The connection parameters include at least one of connection duration, connection rate, connection start time, connection end time, and connection location.

The connection parameters include at least one of connection duration, connection rate, connection start time, connection end time, and connection location. The connection parameters may be set by a user of the target device or automatically recognized by the target device. The connection time is the available time after the connection between the initiator device and the target device is established, and the connection will be disconnected after the available time is exceeded. The connection rate is the available data exchange rate after the initiator device and the target device establish a connection. During the data exchange process, the data exchange rate is not allowed to exceed the available data exchange rate. The connection start time is the start time of establishing a connection between the initiator device and the target device, and the time may be set by the user of the initiator device or by the user of the target device, and may also be the current time. The connection end time is the time when the connection between the initiator device and the target device is disconnected, and the time may be set by a user of the initiator device or by a user of the target device. The connection location is the current location information of the target device. For example, if the location of the target device is a conference room, and the target device is an earphone, especially a wireless earphone, it is not advisable to use two earphones at the same time to avoid missing the meeting content. Therefore, after the initiator device is connected to the wireless earphone, it only transmits the data to be played to one of the earphones (such as the main earphone). For another example, when the target device is located in a car, the user of the initiator device is the driver, and the target device is an earphone, especially a wireless earphone, in order to prevent the driver from being immersed in the content output by the earphone and causing driving safety hazards. Therefore, after the initiator device is connected to the wireless earphone, it only transmits the data to be played to one of the earphones (such as the main earphone), which makes the connection between the initiator device and the target device more flexible, intelligent and safe, and improves user experience.

In an embodiment, the first preset connection rule includes at least one of the following:
if the device identification meets the first preset condition, connecting to the target device according to the device identification and the connection information, and/or, if the device identification does not meet the first preset condition, not connecting to the target device and/or outputting prompt information.

In an embodiment, if the device identification meets the first preset condition, the initiator device establishes a connection with the target device through at least one of the connection user name, the connection password, and the device identification, and/or, if the device identification does not meet the first preset condition, the initiator device does not connect to the target device and/or outputs a prompt information. In an embodiment, meeting the first preset condition means that the device identification includes a device identification of a historically connected device or is a special mark.

In an embodiment, during the process of establishing a connection, the initiator device identifies the target device through the device identification, and uses at least one of the connection user name and the connection password to complete the authentication between the initiator device and the target device, so as to establish the connection.

In an embodiment, the prompt information may include text information, voice information, etc.. For example, as shown in FIG. 9, when the user tries to connect to the smart watch or the initiator device attempts to automatically connect to the smart watch, and the smart watch does not meet the first preset condition, the initiator device outputs a prompt information "This smart watch is an unknown device and connection establishment fails".

If the device name meets the second preset condition, connecting to the target device according to the device name and the connection information, and/or, if the device name does not meet the second preset condition, not connecting to the target device and/or outputting prompt information.

If the device name meets the second preset condition, the initiator device establishes a connection with the target device through at least one of the connection user name, the connection password, and the device name, and/or, if the device name does not meet the second preset condition, the initiator device does not connect to the target device and/or outputs a prompt information. In an embodiment, the meeting the second preset condition is that the device name includes a device name of a historically connected device.

In an embodiment, the process of establishing a connection is that the initiator device identifies the target device by the device name. The authentication between the initiator device and the target device is completed by at least one of the connection user name and the connection password, so as to complete the establishment of the connection.

In an embodiment, the prompt information may include text information, voice information, etc., such as outputting a prompt information "XXX is an unknown device, connection establishment failed".

If the device address meets the third preset condition, connecting to the target device according to the device address and the connection information, and/or, if the device address does not meet the third preset condition, not connecting to the target device and/or outputting prompt information.

In an embodiment, if the device address meets the third preset condition, the initiator device establishes a connection with the target device through at least one of the connection user name, the connection password, and the device address, and/or if the device address does not meet the third preset condition, the initiator device does not connect to the target device and/or outputs a prompt information. The meeting the third preset condition is that the device address includes a device address of a historically connected device.

In an embodiment, during the process of establishing a connection, the initiator device identifies the target device through the device address. The authentication between the initiator device and the target device is completed by at least one of the connection user name and the connection password, so as to establish the connection.

In an embodiment, the prompt information may include text information, voice information, etc., such as outputting a prompt information "XXX is an unknown device, connection establishment failed".

If the device type meets the fourth preset condition, connecting to the target device according to the device type and the connection information, and/or if the device type does not meet the fourth preset condition, not connecting to the target device and/or outputting prompt information.

In an embodiment, if the device type meets the fourth preset condition, the initiator device establishes a connection with the target device through at least one of the connection user name and connection password and the device type, and/or, if the device type does not meet the fourth preset condition, the initiator device does not connect to the target device and/or outputs a prompt information. In an embodiment, meeting the fourth preset condition means that the device type meets the current use condition of the initiator device.

In an embodiment, the current use conditions can be automatically judged by the initiator device, or can be set by the user of the initiator device. For example, if the user of the initiator device is playing a game, then the device type is a smart earphone for playing games, which meets the current use conditions of the initiator device. For another example, the user of the initiator device needs to turn on a smart air conditioner. If there are multiple smart air conditioners in the device type information providing device, one of the multiple smart air conditioners is turned on through the preset opening rules to meet the current use conditions of the initiator device. The preset turning-on rule may be turning on the smart air conditioner closest to the initiator device, turning on the smart air conditioner with the most usage times, and so on.

In an embodiment, the process of establishing a connection is that the initiator device identifies the target device through the device type. The authentication between the initiator device and the target device is completed by at least one of the connection user name and the connection password, so as to complete the establishment of the connection.

In an embodiment, the prompt information may include text information, voice information, etc., such as outputting a prompt information "currently there is no usable device suitable for the use environment, and connection establishment fails".

If the device quantity meets the fifth preset condition, connecting to the target device according to the device quantity and the connection information, and/or, if the device quantity does not meet the fifth preset condition, not connecting to the target device and/or outputting prompt information.

If the device quantity meets the fifth preset condition, the initiator device establishes a connection with the target device through at least one of the connection user name, the connection password, and the device quantity, and/or if the device quantity does not meet the fifth preset condition, the initiator device does not connect to the target device and/or outputs a prompt information. In an embodiment, meeting the fifth preset condition is that the device quantity does not exceed the maximum number of connectable devices of the target device.

In an embodiment, during the process of establishing a connection, the initiator device determines the target device with the second highest priority among the device quantity. The authentication between the initiator device and the target device is completed by at least one of the connection user name and the connection password, so as to complete the establishment of the connection.

In an embodiment, the prompt information may include text information, voice information, etc., such as outputting the prompt information "There is currently no device available for connection, and connection establishment failed".

If the device power meets the sixth preset condition, connecting to the target device according to the device power and the connection information, and/or, if the device power does not meet the sixth preset condition, not connecting to the target device and/or outputting prompt information.

In an embodiment, if the device power meets the sixth preset condition, the initiator device establishes a connection with the target device through at least one of the connection user name, the connection password, and the device power, and/or, if the device power does not meet the sixth preset condition, the initiator device does not connect to the target device and/or outputs a prompt information. In an embodiment, meeting the sixth preset condition means that the device power is greater than or equal to a preset power threshold.

In an embodiment, during the process of establishing a connection, the initiator device determines the target device with the second highest priority in the device power. The authentication between the initiator device and the target device is completed by at least one of the connection user name and the connection password, so as to complete the establishment of the connection.

The prompt information may include text information, voice information, etc., such as outputting a prompt information that "the power of the current device does not meet the usage requirements, and the establishment of a connection fails".

If the device state meets the seventh preset condition, connecting to the target device according to the device state and the connection information, and/or, if the device state does not meet the seventh preset condition, not connecting to the target device and/or outputting prompt information.

If the device state meets the seventh preset condition, the initiator device establishes a connection with the target device through at least one of the connection user name, the connection password, and the device state, and/or, if the device state does not meet the seventh preset condition, the initiator device does not connect to the target device and/or outputs a prompt information. The meeting the seventh preset condition means that the device state includes at least one of normal, smooth, idle, connection allowed, connection restricted, safe, worn, and used.

In an embodiment, during the process of establishing a connection, the initiator device determines the target device with the second highest priority in the device state. The authentication between the initiator device and the target device is completed by at least one of the connection user name and the connection password, so as to complete the establishment of the connection. In an embodiment, the method for determining the second preset priority in the device state is: the more items in the device state including normal, smooth, idle, allowed to connect, restricted connection, safe, worn, and used, the higher the second preset priority.

In an embodiment, the prompt information may include text information, voice information, etc., such as outputting a prompt information that "the device state of the current device does not meet the use requirements, and connection establishment fails".

If the connection parameters meet the eighth preset condition, connecting to the target device according to the connection parameters and the connection information, and/or, if the connection parameters do not meet the eighth preset condition, not connecting to the target device and/or outputting prompt information.

If the connection parameter meets the eighth preset condition, the initiator device establishes a connection with the target device through at least one of the connection user name, the connection password, and the connection parameters, and/or, if the device state does not meet the eighth preset condition, the initiator device does not connect to the target device and/or outputs prompt information.

In an embodiment, during the process of establishing a connection, the initiator device determines the target device corresponding to the connection parameter that meets the eighth preset condition among the connection parameters. The authentication between the initiator device and the target device is completed by at least one of the connection user name and the connection password, so as to complete the establishment of the connection.

In an embodiment, the prompt information may include text information, voice information, etc., such as outputting a prompt information that "currently there is no device that meets the connection requirements, and connection establishment fails".

In an embodiment, the meeting the eighth preset condition includes at least one of the following:
the connection parameters include a connection duration, and the historical connection duration is less than or equal to the connection duration;
the connection parameters include a connection rate, and the current connection rate is greater than or equal to the connection rate;
the connection parameters include the connection start time, and the current time meets the start time requirements;
the connection parameters include the connection end time, and the current time meets the end time requirements;
the connection parameters include the connection location, and the current location meets the connection location requirements.

In an embodiment, when the connection parameter includes a connection duration, and the historical connection duration is shorter than the connection duration, the eighth preset condition is met. The historical connection duration is the cumulative total duration of historical connections between the initiator device and the target device, and the historical connection can be limited to a certain period of time from the current time. For example, within 10 hours from the current time, it is guaranteed that the total duration of the connection between the initiator device and the target device within the certain period of time is less than the connection duration. The connection parameter includes the connection rate, and when the current connection rate is greater than or equal to the connection rate, the eighth preset condition is met. The connection rate is the minimum connection rate that meets data transmission during the connection process. When the connection start time is included in the connection parameters, and the current time meets the start time requirement, the eighth preset condition is met. The connection start time should be after the current time, for example, if the current time is 15:30, the connection start time should be after 15:30 (such as 15:35). When the connection end time is included in the connection parameters, and the current time meets the end time requirement, the eighth preset condition is met. The connection end time should be after the current time, and at the same time, after the connection start time, for example, if the current time is 15:30 and the connection start time is 15:35, then the connection end time should be after 15:35 (such as 15:40). When the connection location is included in the connection parameters, and the current location meets the requirements of the connection location, the eighth preset condition is met. When the current location is the default location, the connection location requirements are met, and the default location includes a meeting room, a car, and the like.

In an embodiment, before the operation A10, the processing method further includes:
Operation A00, detecting whether receiving a preset operation or whether it is in a preset mode, and if so, performing operation A10.

The terminal detects whether the preset operation is received or whether it is in a preset mode. If the preset operation is received or currently in the preset mode, the operation of obtaining the connection information of the target device according to the request of the initiator device is performed. If the preset operation is not received or the preset mode is not currently in place, the operation of obtaining the connection information of the target device according to the request of the initiator device is not performed. The preset mode includes a smart mode, an automatic switching mode, and other modes that support the connection between devices through the first preset connection rule and/or the second preset connection rule. The preset operation is the response operation made by the end user to the request of the initiator device, including refusing to obtain the connection information of the target device and agreeing to obtain the connection information of the target device.

In an embodiment, before the operation of connecting the initiator device to the target device according to the first preset connection rule and/or the second preset connection rule and the connection information, the method further includes:
Operation f, performing operation A20 after receiving the feedback information from the target device, and/or receiving the connection confirmation instruction.

The initiator device receives the feedback information from the target device, and/or, after receiving the connection confirmation instruction, the operation of sending the connection information, such that the initiator device connects to the target device according to the first preset connection rule and/or the second preset connection rule and the connection information is executed.

In an embodiment, the feedback information is whether the target device agrees to establish a connection with the initiator device. The confirmation connection instruction is an instruction entered by the user on the initiator device to confirm the establishment of a connection with the target device.

Therefore, the initiator device user decides whether to establish a connection, making the process of establishing a connection more flexible and intelligent, and improving user experience.

In an embodiment, after the operation of connecting the initiator device to the target device according to the first preset connection rule and/or the second preset connection rule and the connection information, the method further includes:
Operation A30, after the connection succeeds or fails, outputting prompt information to at least one of the initiator device, the terminal, and the target device.

In an embodiment, after the initiator device successfully or fails to connect to the target device, it outputs prompt information to at least one of the initiator device, the terminal, and the target device, so as to prompt the user whether the connection succeeds or fails, thereby improving user experience.

In an embodiment, the prompt information includes at least one of voice information, text information, vibration information, and light information. The text information can be output through the pop-up box of the display screen of at least one device in the initiator device, the terminal, and the target device. For example, as shown in FIG. 10, if the initiator device 300 is a smart phone, through the "smart TV" terminal 3000, the text message "smart phone is connected to the smart watch" can be output. Specifically, the display duration of the pop-up window can also be set, such as automatically closing after 0.5 seconds. The voice information can be output through a loudspeaker of at least one of the initiator device, the terminal, and the target device. If the voice information is output by the initiator device, its content can be "connected XXX". The light information can be output through the flashlight of at least one device among the initiator device, the terminal, and the target device. For example, the preset flash mode prompts the user that the initiator device has successfully established a connection with the target device. The preset flash mode can flash once every fixed time, and flash continuously for a period of time. If the user unlocks the light information output device at this time, the prompt information "XXX is connected" can also be output to the user by outputting text information or outputting voice information. The vibration information can be output through the vibration function of at least one device among the initiator device, the terminal, and the target device. For example, the user is prompted that the initiator device has successfully established a connection with the target device through a preset vibration method. The preset vibration method can be to vibrate once at a fixed interval, and vibrate continuously for a period of time. If the user unlocks the light information output device at this time, the prompt information "XXX is connected" can also be output to the user by outputting text information or outputting voice information.

In an embodiment, the processing method further includes:
the terminal is also connected to the target device, and/or there are multiple target devices.

When the initiator device establishes a connection with the target device through the terminal, the terminal and the target device are in a connected state, and there are multiple target devices.

The second preset connection rules include at least one of the following:
if the connection is successful, the initiator device and the target device will no longer be disconnected or disconnected at a fixed time or timeout; if the connection fails, the initiator device and the target device will no longer be connected or be connected regularly or periodically.

If the connection between the initiator device and the target device is successful, the initiator device and the target device will no longer be disconnected or disconnected at a fixed time or timeout. If the connection between the initiator device and the target device fails, the initiator device and the target device will no longer be connected or connected regularly or periodically.

In an embodiment, the initiator device successfully connects to the target device, and the conditions for disconnection between the initiator device and the target device can be determined through a certain disconnection strategy. The disconnection strategy includes no longer disconnection or timing disconnection or timeout disconnection. No longer disconnection means that the initiator device (or target device) continues to maintain the above connection until it receives the user's connection disconnection instruction. Timing disconnection means that after the connection is established, a certain time is reached, then the initiator device will automatically disconnect from the target device. For example, if the connection is established within 5 minutes, the initiator device will automatically disconnect from the target device. Timeout disconnect means that after the connection is established, if there is no data exchange between the initiator device and the target device within a certain period of time, the initiator device and the target device will automatically disconnect. For example, after the transmission of a certain data between the initiator device and the target device is completed, if there is no data exchange between the initiator device and the target device within 6 minutes, the initiator device and the target device will be automatically disconnected.

In an embodiment, after the connection between the initiator device and the target device fails, the initiator device can continue to try to connect to the target device through the continuous connection strategy. The continuation connection strategy includes no longer connection or timing connection or periodic connection. No longer connecting means that the initiator device does not try to connect to the target device before receiving the user's request connection instruction. Timing connection means that after a certain time after the connection fails, the initiator device will automatically try to connect to the target device again. For example, if it reaches 5 minutes after the connection is established, the initiator device will automatically try to connect to the target device again. Periodic connection means that after the connection fails, the initiator device periodically tries to connect to the target device again. For example, after the connection fails, the initiator device tries to connect to the target device every 6 minutes.

In an embodiment, the target device includes at least one first target device and at least one second target device, and the processing method further includes:
operation g, if the initiator device fails to connect to the first target device according to the first preset connection rule and/or the second preset connection rule and the connection information, the terminal obtains and sends the connection information of the second target device, so that the initiator device connects to the second target device according to a fourth preset connection rule and the connection information of the second target device.

If the initiator device fails to connect to the first target device according to the first preset connection rule and/or the second preset connection rule and the connection information (for example, the user of the initiator device refuses to connect to the first target device), the terminal obtains and sends the connection information of the second target device to the initiator device, so that the initiator device connects to the second target device according to the fourth preset connection rule and the connection information of the second target device.

In an embodiment, the fourth preset rule includes at least one of the following:
After the initiator device fails to connect to the first target device, or after receiving the switching instruction, immediately or after a preset time delay, the initiator device is controlled to connect to the second target device.

In an embodiment, after the initiator device fails to connect to the first target device, or after receiving the switching instruction, the initiator device may be controlled by the terminal to connect to the second target device immediately or after a delay of a preset time, the switching instruction is an instruction that the user of the initiator device is not satisfied with the connected first target device and needs to switch the connection to another device.

After the initiator device fails to connect to the first target device for a preset number of times, the initiator device is triggered to connect to the second target device.

In an embodiment, after the initiator device tries to connect to the first target device for several times and fails, if the number of failures reaches the preset number of times, no longer attempts will be made to connect to the first target device, and the condition for the initiator device to connect to the second target device will be triggered. The preset times can be set by the user or preset by the system, and there is no specific limitation in this embodiment.

Outputting prompt information.

In an embodiment, after the initiator device fails to connect to the first target device, at least one of the terminal and the initiator device outputs prompt information to the user. The prompt information includes a reason for failing to connect to the first target device.

In an embodiment if the initiator device fails to connect to the second target device, it also includes at least one of the following:
controlling the initiator device to connect to the first target device.

The terminal may control the initiator device to connect to the first target device again.
controlling the initiator device to connect to the second target device again.

In an embodiment, the terminal may control the initiator device to try to connect to the second target device again.

After the number of connection failures reaches a preset number of times, the initiator device is controlled not to connect to the first target device or the second target device.

In an embodiment, after the initiator device fails to connect to the second target device for a preset number of times, the terminal controls the initiator device not to connect to the first target device or the second target device. The preset times can be set by the user or preset by the system, and there is no specific limitation in this embodiment.

Outputting prompt information.

In an embodiment, after the initiator device fails to connect to the second target device, at least one of the terminal and the initiator device outputs connection failure-related prompt information to the user, so as to prompt the user that the initiator device fails to connect to the second target device and the cause of the connection failure.

In an embodiment, the processing method further includes at least one of the following:
after the initiator device is successfully connected to the target device, maintaining or disconnecting the connection between the terminal and the target device.

In an embodiment, after the initiator device is successfully connected to the target device, the connection between the terminal and the target device is maintained or disconnected.

In an embodiment, the target device and the terminal may be devices with similar functions. After the initiator device successfully connects with the target device, it disconnects the connection between the terminal and the target device. For example, the initiator device is a smart earphone, the terminal is a smart phone, and the target device is a PAD with similar functions to the smart phone. The target device and the terminal may also be devices with dissimilar functions. After the initiator device successfully connects with the target device, it maintains the connection between the terminal and the target device. For example, the initiator device is a smart earphone, the terminal is a smart phone, and the target device is a vehicle terminal.

If the connection information changes, updating the corresponding preset connection rule.

If the connection information changes, the corresponding preset connection rule is updated.

In an embodiment, the first preset connection rule and the second preset connection rule are directly affected by the connection information. For example, the first preset priority of device identification in connection information is the highest, and the first preset priority of device number in connection information is second. The first preset connection rule is to give priority to the device identification for connection, and after the connection information changes, the device identification in the connection information is no longer considered. The device quantity ranked second originally in the first preset priority is changed to the first priority, and the first preset connection rule at this time is updated to give priority to the device quantity for connection.

In this embodiment, the processing method includes: A10, obtaining the connection information of the target device according to the request of the initiator device; A20, sending the connection information, to make the initiator device connect to the target device according to the first preset connection rule and/or the second preset connection rule and the connection information. After obtaining the connection information of the target device according to the request of the initiator device, the connection information is sent to the initiator device, thereby making the initiator device connect to the target device through the first preset connection rule and/or the second preset connection rule and connection information, and providing more optional connection solutions for the connection between the initiator device and the target device, making the initiator device more flexible and intelligent when establishing a connection with the target device.

In an embodiment, as shown in FIG. 12, based on an embodiment of the processing method of the present application, another embodiment is proposed. Although a logical order is shown in the flowcharts, in some cases the steps shown or described may be performed in an order different from that shown or described herein. The processing method is applied to the terminal, and includes the following operations.

Operation A100, obtaining the connection information of the target device according to the request of the terminal, the connection information includes at least one first connection information and/or at least one second connection information. The first connection information is provided by the terminal, and the second connection information is provided by the target device.

In an embodiment, the first connection information or the second connection information may include at least one of the target device identification, the target device name, the target device address, the target device type, the target device quantity, the target device power, and the target device state, and may also include at least one of connection user name, connection password and connection parameters.

In an embodiment, the connection information may also be provided by the terminal.

In an embodiment, the target device receives the connection information acquisition request sent by the terminal, and acquires the connection information.

In an embodiment, the initiator device is a computer (such as a PC or tablet), the terminal is a mobile phone, and the target device is a WIFI access point (which may be a WIFI hotspot from another mobile phone). The mobile phone has established a connection with the WIFI access point, and the computer has also established a connection with the mobile phone (such as Bluetooth, NFC, etc.), the computer can obtain the ID of the WIFI access point and/or the connection user name and/or the connection password through the mobile phone, so that the computer can connect to the WIFI access point through the obtained connection information. Furthermore, connection parameter information such as the maximum device quantity that the WIFI access point can allow access to or the fastest connection speed can be obtained by a mobile phone and provided to the computer, or can be sent by a WIFI access point through broadcasting, etc., and can be obtained by the computer through broadcasting. Through this implementation manner, the connection between devices can be made more convenient and intelligent, and more secure technical effects can be achieved (such as avoiding the input of multiple connection passwords, etc.).

In an embodiment, the initiator device is a tablet, the terminal is a mobile phone, and the target device is a smart TV. The tablet and the mobile phone are connected, and the mobile phone is connected to the smart TV. The current user wants to connect and cast the information on the tablet (such as the music or video being played) to the smart TV, then corresponding processing can be performed on the tablet according to the connection information provided by the mobile phone (such as the maximum screen resolution supported by the smart TV, supported audio formats, supported video formats, supported multi-channel numbers, supported audio and video playback applications, etc.), so that the data to be released can meet the requirements of the smart TV. The connection information in this example may be obtained by the mobile phone from the smart TV in advance or in real time and sent to the tablet, or sent by the smart TV to the tablet through broadcasting or other means.

In an embodiment, the initiator device is a mobile phone, the terminal is a smart home control center (such as a smart router or a smart speaker or a smart voice assistant device, etc.), and the target device is a smart home device (such as a smart TV, a smart air conditioner, etc.). When the user is not at home, the smart home control center is connected with all smart home devices, and controls the smart home devices to work or sleep according to the preset method. When the user arrives at home, the control right of the smart home control center needs to be transferred to the user's mobile phone, and the user's mobile phone can perform control on all smart home devices. In order to realize a flexible and intelligent connection method, when the user arrives at home, the smart home control center first establishes a connection with the user's mobile phone, so the user's mobile phone can obtain the connection information of all smart home devices through the smart home control center. The connection information in this example includes at least one of the device name, device address, device type, device working state, and device power information of all smart home devices. Specifically, the device name, device address and device type of the smart home device can be obtained from the smart home control center by the user's mobile phone. The device working state and device power information of smart home devices can be provided to the user's mobile phone by the smart home device through broadcasting, or sent to the user's mobile phone by the smart home device through the smart home control center. After the user's mobile phone obtains the first connection information and the second connection information, the connection between the user's mobile phone and all smart home devices can be established, thereby realizing the transfer of control rights from the smart home control center to the user's mobile phone. When users are at home, they can use their mobile phones to control smart home devices. When users are at home, they can use their mobile phones to control smart home devices. When the user leaves home, the smart home control center continues to control all smart home devices. Through this implementation manner, more convenient, flexible and intelligent technical effects can be achieved, thereby improving user experience.

In an embodiment, the initiator device is the vehicle device, and the terminal is the user's mobile phone, the target device is the centralized monitoring platform of the Internet of Vehicles, and the user's mobile phone is connected to the centralized monitoring platform of the Internet of Vehicles and the vehicle equipment respectively. The current users want to connect vehicle device intelligently and flexibly to the centralized monitoring platform of the Internet of Vehicles to accurately obtain road condition information, so as to provide auxiliary information for automatic driving. At this time, the user's mobile phone can provide the first connection information of the centralized monitoring platform of the Internet of Vehicles to the vehicle device. The first connection information includes the encryption key shared by the server of the centralized monitoring platform of the Internet of Vehicles and the user's mobile phone, etc.. In addition, the server of the centralized monitoring platform of the Internet of Vehicles can also provide the second connection information. The second connection information includes information such as a dynamically updated access point node and/or access address of the current server. The second connection information may be provided by broadcasting from a server of the centralized monitoring platform of the Internet of Vehicles, or indirectly through the user's mobile phone. Therefore, according to the first connection information and the second connection information, the vehicle device can be connected to the server of the centralized monitoring platform of the Internet of Vehicles in an encrypted state, to ensure the security of vehicle communication, and ensure the flexibility of vehicle device access to the centralized monitoring platform of the Internet of Vehicles.

Operation A200, sending the connection information, so that the initiator device connected to the terminal connects to the target device according to the first preset connection rule and/or the second preset connection rule and the connection information.

In an embodiment, the target device sends the connection information to the terminal, so that the initiator device connected to the terminal connects to the target device according to the first preset connection rule and/or the second preset connection rule and the connection information.

In an embodiment, the operation A200 includes:
Operation h, if failing to connect to the target device according to the first preset connection rule and the connection information, or failing to connect to the target device according to the first preset connection rule and the connection information, or if the number of times failing to connect to the target device according to the first preset connection rule and the connection information reaches a preset value (preferably, such as 3 times or 5 times), then connecting the target device according to the second preset connection rule and the connection information.

In an embodiment, if it is inconvenient for the target device to establish a connection with the initiator device when the initiator device connects to the target device according to the first preset connection rule and the connection information, for example, the target device is establishing a connection with other devices, after the initiator device fails to connect to the target device, it can then connect to the target device according to the second preset connection rule and connection information.

In an embodiment, the connection information includes at least one of device identification, device name, device address, device type, device quantity, device power, and device state; and/or the connection information includes at least one of a connection user name, a connection password, and a connection parameter.

In an embodiment, the above connection information includes at least one of device identification, device name, device address, device type, device quantity, device power, device state, connection user name, connection password, and connection parameters, or the above connection information includes at least one of device identification, device name, device address, device type, device quantity, device power, and device state, or the above connection information includes at least one of connection user name, connection password and connection parameters.

For the device identification, the initiator device can identify the identity of the target device through the device identification, which is equivalent to the identity feature identification information of the device. In addition, the initiator device may also use the device identification to identify whether the target device is a historically connected device. In an embodiment, when the initiator device judges whether there is a device ID matching the preset device ID in the target device, the device ID is used to functionally distinguish other devices, which is equivalent to making a special mark for the device. For example, by setting the device identification, the user can only connect the smart phone to the smart earphone, but not the smart speaker. When the target device is a smart speaker, the initiator device cannot establish a connection with the target device.

For the device name, the initiator device can identify the identity of the target device through the device name. The initiator device can also output prompt information to the user through the device name, for example, if the device name is "smartphone", the initiator device can output the prompt information "connection has been established with the smartphone". The initiator device can also identify whether the target device is a historically connected device through the device name.

For the device address, the initiator device can identify the identity of the target device through the device address. The device address is the Media Access Control (MAC) address of the device. The initiator device establishes a connection with the target device through the device address. Generally, when the initiator device establishes a connection with the target device through Bluetooth, the device address is the MAC address of Bluetooth. When the initiator device establishes a connection with the target device through WiFi, the device address is the MAC address of WiFi; in an embodiment, the initiator device can also use the device address to identify whether the target device is a historically connected device.

For the device type, when the initiator device connects to the target device, the target device may not be unique. In other words, there are multiple target devices, and when there are multiple target devices, the initiator device classifies the target devices according to device types. For example, there are multiple smart air conditioners that can be connected in a smart home, and the multiple smart air conditioners can be classified as smart air conditioners. Among the connectable smart earphones, there are multiple smart earphones that meet the different audio playback needs of users, such as smart earphones for listening to music, smart earphones for playing games, smart earphones for watching movies, etc., these multiple smart earphones may be classified as smart earphones.

For the device quantity, in order to ensure the stability of the connection between devices, the target device limits the maximum device quantity that can be connected. When the initiator device initiates a connection establishment request to the target device, the initiator device receives the device quantity and the maximum number of connectable devices fed back by the target device.

For the device power, in order to ensure the stability of the connection between devices, the initiator device needs to obtain the device power of the target device. It is understandable that the lower the battery power of the device, the shorter the usable time of the device for the same use environment (such as playing music). Therefore, when the battery power of the target device is lower than a certain value, it is not necessary for the initiator device to connect to the target device.

For the device state, when the initiator device connects to the target device, the device state of the target device may be a device use state, a device running state, and the like.

For the connection user name and connection password, when connecting between devices, in order to ensure the accuracy and security of the connection, the initiator device needs to use the connection username and the connection password to ensure that the connected device is the target device and not other connectable devices.

For the connection parameters, when the initiator device connects to the target device, the target device sets certain conditions for the connection through the connection parameters, so as to achieve the purpose of restricting the connection.

The device state includes at least one of normal, abnormal, smooth, stuck, idle, overloaded, allowed to connect, not allowed to connect, restricted to connect, safe, not safe, worn, not worn, used, and not used.

During the operation of the device, there are various device states, including at least one of normal, abnormal, smooth, stuck, idle, overload, allowed to connect, not allowed to connect, restricted connection, safe, unsafe, worn, not worn, used, not used.

When the device state of the target device connected to the initiator device is at least one of abnormal, stuck, overloaded, not allowed to connect, unsafe, not worn, and not used, it is inconvenient for subsequent data exchange. For example, if the device state of the target device is stuck, during the subsequent data exchange process, the data processing process of the target device will be extremely long, affecting user experience.

In an embodiment, the device state is normal, which means that the target device is in a normal working state. The device state is abnormal, which means that the target device is in an abnormal working state. The device state is smooth, which means that the target device can work smoothly. The device state is stuck, which means that the target device cannot work smoothly. For example, the target device responds abnormally, and the response time is longer than smooth. The device state is idle, which means that the target device currently needs to process fewer tasks, for example, the Central Processing Unit (CPU) occupies a small proportion. The device state is overloaded, which means that the target device currently needs to process more tasks, such as a large CPU usage. The device state is allowed to connect, which means that the target device is allowed to establish a connection with other devices. The device state is not allowed to connect, which means that the target device is not allowed to establish a connection with other devices. The device state is restricted connection, which means that the target device is only allowed to establish a connection with other devices under certain conditions. The device state being safe means that the target device is in a safe state, for example, the network used by the target device is a secure network. The device state is unsafe, which means that the target device is in an unsafe state. For example, the network used by the target device is an unsafe network (a network with security risks (such as public WiFi)). The device state is worn, which means that the target device is worn by the user. The device state is not worn, which means that the target device is not worn by the user. The device state is in use, which means that the target device is in use by the user. The device state is not in use, which means that the target device is not in use by the user.

The connection parameters include at least one of connection duration, connection rate, connection start time, connection end time, and connection location.

The connection parameters include at least one of connection duration, connection rate, connection start time, connection end time, and connection location. The connection parameters may be set by a user of the target device or automatically recognized by the target device. The connection time is the available time after the connection between the initiator device and the target device is established, and the connection will be disconnected after the available time is exceeded. The connection rate is the available data exchange rate after the initiator device and the target device establish a connection. During the data exchange process, the data exchange rate is not allowed to exceed the available data exchange rate. The connection start time is the start time of establishing a connection between the initiator device and the target device, and the time may be set by the user of the initiator device or by the user of the target device, and may also be the current time. The connection end time is the time when the connection between the initiator device and the target device is disconnected, and the time may be set by a user of the initiator device or by a user of the target device. The connection location is the current location information of the target device. For example, if the location of the target device is a conference room, and the target device is an earphone, especially a wireless earphone, it is not advisable to use two earphones at the same time to avoid missing the meeting content. Therefore, after the initiator device is connected to the wireless earphone, it only transmits the data to be played to one of the earphones (such as the main earphone). For another example, when the target device is located in a car, the user of the initiator device is the driver, and the target device is an earphone, especially a wireless earphone, in order to prevent the driver from being immersed in the content output by the earphone and causing driving safety hazards. Therefore, after the initiator device is connected to the wireless earphone, it only transmits the data to be played to one of the earphones (such as the main earphone), which makes the connection between the initiator device and the target device more flexible, intelligent and safe, and improves user experience.

In an embodiment, the first preset connection rule includes at least one of the following:
if the device identification meets the first preset condition, connecting to the target device according to the device identification and the connection information, and/or, if the device identification does not meet the first preset condition, not connecting to the target device and/or outputting prompt information.

In an embodiment, if the device identification meets the first preset condition, the initiator device establishes a connection with the target device through at least one of the connection user name, the connection password, and the device identification, and/or, if the device identification does not meet the first preset condition, the initiator device does not connect to the target device and/or outputs a prompt information. In an embodiment, meeting the first preset condition means that the device identification includes a device identification of a historically connected device or is a special mark.

In an embodiment, during the process of establishing a connection, the initiator device identifies the target device through the device identification, and uses at least one of the connection user name and the connection password to complete the authentication between the initiator device and the target device, so as to establish the connection.

In an embodiment, the prompt information may include text information, voice information, etc.. For example, as shown in FIG. 9, when the user tries to connect to the smart watch or the initiator device attempts to automatically connect to the smart watch, and the smart watch does not meet the first preset condition, the initiator device outputs a prompt information "This smart watch is an unknown device and connection establishment fails".

If the device name meets the second preset condition, connecting to the target device according to the device name and the connection information, and/or, if the device name does not meet the second preset condition, not connecting to the target device and/or outputting prompt information.

If the device name meets the second preset condition, the initiator device establishes a connection with the target device through at least one of the connection user name, the connection password, and the device name, and/or, if the device name does not meet the second preset condition, the initiator device does not connect to the target device and/or outputs a prompt information. In an embodiment, the meeting the second preset condition is that the device name includes a device name of a historically connected device.

In an embodiment, the process of establishing a connection is that the initiator device identifies the target device by the device name. The authentication between the initiator device and the target device is completed by at least one of the connection user name and the connection password, so as to complete the establishment of the connection.

In an embodiment, the prompt information may include text information, voice information, etc., such as outputting a prompt information "XXX is an unknown device, connection establishment failed".

If the device address meets the third preset condition, connecting to the target device according to the device address and the connection information, and/or, if the device address does not meet the third preset condition, not connecting to the target device and/or outputting prompt information.

In an embodiment, if the device address meets the third preset condition, the initiator device establishes a connection with the target device through at least one of the connection user name, the connection password, and the device address, and/or if the device address does not meet the third preset condition, the initiator device does not connect to the target device and/or outputs a prompt information. The meeting the third preset condition is that the device address includes a device address of a historically connected device.

In an embodiment, during the process of establishing a connection, the initiator device identifies the target device through the device address. The authentication between the initiator device and the target device is completed by at least one of the connection user name and the connection password, so as to establish the connection.

In an embodiment, the prompt information may include text information, voice information, etc., such as outputting a prompt information "XXX is an unknown device, connection establishment failed".

If the device type meets the fourth preset condition, connecting to the target device according to the device type and the connection information, and/or if the device type does not meet the fourth preset condition, not connecting to the target device and/or outputting prompt information.

In an embodiment, if the device type meets the fourth preset condition, the initiator device establishes a connection with the target device through at least one of the connection user name and connection password and the device type, and/or, if the device type does not meet the fourth preset condition, the initiator device does not connect to the target device and/or outputs a prompt information. In an embodiment, meeting the fourth preset condition means that the device type meets the current use condition of the initiator device.

In an embodiment, the current use conditions can be automatically judged by the initiator device, or can be set by the user of the initiator device. For example, if the user of the initiator device is playing a game, then the device type is a smart earphone for playing games, which meets the current use conditions of the initiator device. For another example, the user of the initiator device needs to turn on a smart air conditioner. If there are multiple smart air conditioners in the device type information providing device, one of the multiple smart air conditioners is turned on through the preset opening rules to meet the current use conditions of the initiator device. The preset turning-on rule may be turning on the smart air conditioner closest to the initiator device, turning on the smart air conditioner with the most usage times, and so on.

In an embodiment, the process of establishing a connection is that the initiator device identifies the target device through the device type. The authentication between the initiator device and the target device is completed by at least one of the connection user name and the connection password, so as to complete the establishment of the connection.

In an embodiment, the prompt information may include text information, voice information, etc., such as outputting a prompt information "currently there is no usable device suitable for the use environment, and connection establishment fails".

If the device quantity meets the fifth preset condition, connecting to the target device according to the device quantity and the connection information, and/or, if the device quantity does not meet the fifth preset condition, not connecting to the target device and/or outputting prompt information.

If the device quantity meets the fifth preset condition, the initiator device establishes a connection with the target device through at least one of the connection user name, the connection password, and the device quantity, and/or if the device quantity does not meet the fifth preset condition, the initiator device does not connect to the target device and/or outputs a prompt information. In an embodiment, meeting the fifth preset condition is that the device quantity does not exceed the maximum number of connectable devices of the target device.

In an embodiment, during the process of establishing a connection, the initiator device determines the target device with the second highest priority among the device quantity. The authentication between the initiator device and the target device is completed by at least one of the connection user name and the connection password, so as to complete the establishment of the connection.

In an embodiment, the prompt information may include text information, voice information, etc., such as outputting the prompt information "There is currently no device available for connection, and connection establishment failed".

If the device power meets the sixth preset condition, connecting to the target device according to the device power and the connection information, and/or, if the device power does not meet the sixth preset condition, not connecting to the target device and/or outputting prompt information.

In an embodiment, if the device power meets the sixth preset condition, the initiator device establishes a connection with the target device through at least one of the connection user name, the connection password, and the device power, and/or, if the device power does not meet the sixth preset condition, the initiator device does not connect to the target device and/or outputs a prompt information. In an embodiment, meeting the sixth preset condition means that the device power is greater than or equal to a preset power threshold.

In an embodiment, during the process of establishing a connection, the initiator device determines the target device with the second highest priority in the device power. The authentication between the initiator device and the target device is completed by at least one of the connection user name and the connection password, so as to complete the establishment of the connection.

The prompt information may include text information, voice information, etc., such as outputting a prompt information that "the power of the current device does not meet the usage requirements, and the establishment of a connection fails".

If the device state meets the seventh preset condition, connecting to the target device according to the device state and the connection information, and/or, if the device state does not meet the seventh preset condition, not connecting to the target device and/or outputting prompt information.

If the device state meets the seventh preset condition, the initiator device establishes a connection with the target device through at least one of the connection user name, the connection password, and the device state, and/or, if the device state does not meet the seventh preset condition, the initiator device does not connect to the target device and/or outputs a prompt information. The meeting the seventh preset condition means that the device state includes at least one of normal, smooth, idle, connection allowed, connection restricted, safe, worn, and used.

In an embodiment, during the process of establishing a connection, the initiator device determines the target device with the second highest priority in the device state. The authentication between the initiator device and the target device is completed by at least one of the connection user name and the connection password, so as to complete the establishment of the connection. In an embodiment, the method for determining the second preset priority in the device state is: the more items in the device state including normal, smooth, idle, allowed to connect, restricted connection, safe, worn, and used, the higher the second preset priority.

In an embodiment, the prompt information may include text information, voice information, etc., such as outputting a prompt information that "the device state of the current device does not meet the use requirements, and connection establishment fails".

If the connection parameters meet the eighth preset condition, connecting to the target device according to the connection parameters and the connection information, and/or, if the connection parameters do not meet the eighth preset condition, not connecting to the target device and/or outputting prompt information.

If the connection parameter meets the eighth preset condition, the initiator device establishes a connection with the target device through at least one of the connection user name, the connection password, and the connection parameters, and/or, if the device state does not meet the eighth preset condition, the initiator device does not connect to the target device and/or outputs prompt information.

In an embodiment, during the process of establishing a connection, the initiator device determines the target device corresponding to the connection parameter that meets the eighth preset condition among the connection parameters. The authentication between the initiator device and the target device is completed by at least one of the connection user name and the connection password, so as to complete the establishment of the connection.

In an embodiment, the prompt information may include text information, voice information, etc., such as outputting a prompt information that "currently there is no device that meets the connection requirements, and connection establishment fails".

In an embodiment, the meeting the eighth preset condition includes at least one of the following:
the connection parameters include a connection duration, and the historical connection duration is less than or equal to the connection duration;
the connection parameters include a connection rate, and the current connection rate is greater than or equal to the connection rate;
the connection parameters include the connection start time, and the current time meets the start time requirements;
the connection parameters include the connection end time, and the current time meets the end time requirements;
the connection parameters include the connection location, and the current location meets the connection location requirements.

In an embodiment, when the connection parameter includes a connection duration, and the historical connection duration is shorter than the connection duration, the eighth preset condition is met. The historical connection duration is the cumulative total duration of historical connections between the initiator device and the target device, and the historical connection can be limited to a certain period of time from the current time. For example, within 10 hours from the current time, it is guaranteed that the total duration of the connection between the initiator device and the target device within the certain period of time is less than the connection duration. The connection parameter includes the connection rate, and when the current connection rate is greater than or equal to the connection rate, the eighth preset condition is met. The connection rate is the minimum connection rate that meets data transmission during the connection process. When the connection start time is included in the connection parameters, and the current time meets the start time requirement, the eighth preset condition is met. The connection start time should be after the current time, for example, if the current time is 15:30, the connection start time should be after 15:30 (such as 15:35). When the connection end time is included in the connection parameters, and the current time meets the end time requirement, the eighth preset condition is met. The connection end time should be after the current time, and at the same time, after the connection start time, for example, if the current time is 15:30 and the connection start time is 15:35, then the connection end time should be after 15:35 (such as 15:40). When the connection location is included in the connection parameters, and the current location meets the requirements of the connection location, the eighth preset condition is met. When the current location is the default location, the connection location requirements are met, and the default location includes a meeting room, a car, and the like.

In an embodiment, before the operation A100, the processing method further includes:
Operation A000, detecting whether receiving a preset operation or whether it is in a preset mode, and if so, performing operation A100.

The target device detects whether the preset operation is received or whether it is in a preset mode. If the preset operation is received or currently in the preset mode, the operation of obtaining the connection information according to the request of the terminal is performed. If the preset operation is not received or the preset mode is not currently in place, the operation of obtaining the connection information according to the request of the terminal is not performed. The preset mode includes a smart mode, an automatic switching mode, and other modes that support the connection between devices through the first preset connection rule and/or the second preset connection rule. The preset operation is the response operation performed by the user of the target device to the request of the terminal, including obtaining the connection information of the target device and not obtaining the connection information of the target device.

In an embodiment, before the operation of connecting the initiator device to the target device according to the first preset connection rule and/or the second preset connection rule and the connection information, the processing method further includes:
Operation i, after receiving feedback information from the target device, and/or after receiving the connection confirmation instruction, performing the operation of sending the connection information so that the sender device connected to the terminal is connected to the target device according to the first preset connection rule and/or the second preset connection rule and the connection information.

In an embodiment, the initiator device performs the operation of sending the connection information only after receiving feedback information from the target device, and/or receiving the connection confirmation instruction.

In an embodiment, the feedback information is whether the target device agrees to establish a connection with the initiator device. The confirmation connection instruction is an instruction entered by the user on the initiator device to confirm the establishment of a connection with the target device. Therefore, the initiator device user decides whether to establish a connection, making the process of establishing a connection more flexible and intelligent, and improving user experience.

In an embodiment, after the operation of connecting the initiator device to the target device according to the first preset connection rule and/or the second preset connection rule and the connection information, the processing method further includes:
Operation A300, after the connection succeeds or fails, outputting prompt information to at least one of the initiator device, the terminal, and the target device.

In an embodiment, after the initiator device successfully or fails to connect to the target device, it outputs prompt information to at least one of the initiator device, the terminal, and the target device, so as to prompt the user whether the connection succeeds or fails, thereby improving user experience.

In an embodiment, the prompt information includes at least one of voice information, text information, vibration information, and light information. The text information can be output through the pop-up box of the display screen of at least one device in the initiator device, the terminal, and the target device. For example, as shown in FIG. 10, if the initiator device 300 is a smart phone, through the "smart TV" terminal 3000, the text message "smart phone is connected to the smart watch" can be output. Specifically, the display duration of the pop-up window can also be set, such as automatically closing after 0.5 seconds. The voice information can be output through a loudspeaker of at least one of the initiator device, the terminal, and the target device. If the voice information is output by the initiator device, its content can be "connected XXX". The light information can be output through the flashlight of at least one device among the initiator device, the terminal, and the target device. For example, the preset flash mode prompts the user that the initiator device has successfully established a connection with the target device. The preset flash mode can flash once every fixed time, and flash continuously for a period of time. If the user unlocks the light information output device at this time, the prompt information "XXX is connected" can also be output to the user by outputting text information or outputting voice information. The vibration information can be output through the vibration function of at least one device among the initiator device, the terminal, and the target device. For example, the user is prompted that the initiator device has successfully established a connection with the target device through a preset vibration method. The preset vibration method can be to vibrate once at a fixed interval, and vibrate continuously for a period of time. If the user unlocks the light information output device at this time, the prompt information "XXX is connected" can also be output to the user by outputting text information or outputting voice information.

In an embodiment, the processing method further includes:
the terminal is also connected to the target device, and/or there are multiple target devices.

When the initiator device establishes a connection with the target device through the terminal, the terminal and the target device are in a connected state, and there are multiple target devices.

The second preset connection rules include at least one of the following:
if the connection is successful, the initiator device and the target device will no longer be disconnected or disconnected at a fixed time or timeout; if the connection fails, the initiator device and the target device will no longer be connected or be connected regularly or periodically.

If the connection between the initiator device and the target device is successful, the initiator device and the target device will no longer be disconnected or disconnected at a fixed time or timeout. If the connection between the initiator device and the target device fails, the initiator device and the target device will no longer be connected or connected regularly or periodically.

In an embodiment, the initiator device successfully connects to the target device, and the conditions for disconnection between the initiator device and the target device can be determined through a certain disconnection strategy. The disconnection strategy includes no longer disconnection or timing disconnection or timeout disconnection. No longer disconnect means that the initiator device (or target device) continues to maintain the above connection until it receives the user's connection disconnection instruction. Timing disconnection means that after the connection is established, a certain time is reached, then the initiator device will automatically disconnect from the target device. For example, if the connection is established within 5 minutes, the initiator device will automatically disconnect from the target device. Timeout disconnect means that after the connection is established, if there is no data exchange between the initiator device and the target device within a certain period of time, the initiator device and the target device will automatically disconnect. For example, after the transmission of a certain data between the initiator device and the target device is completed, if there is no data exchange between the initiator device and the target device within 6 minutes, the initiator device and the target device will be automatically disconnected.

In an embodiment, after the connection between the initiator device and the target device fails, the initiator device can continue to try to connect to the target device through the continuous connection strategy. The continuation connection strategy includes no longer connection or timing connection or periodic connection. No longer connecting means that the initiator device does not try to connect to the target device before receiving the user's request connection instruction. Timing connection means that after a certain time after the connection fails, the initiator device will automatically try to connect to the target device again. For example, if it reaches 5 minutes after the connection is established, the initiator device will automatically try to connect to the target device again. Periodic connection means that after the connection fails, the initiator device periodically tries to connect to the target device again. For example, after the connection fails, the initiator device tries to connect to the target device every 6 minutes.

In an embodiment, the manner of obtaining the connection information includes at least one of the following:
obtaining the connection information locally;
obtaining the connection information through the server;
obtaining the connection information by other devices connected to the target device.

In an embodiment, in addition to obtaining its own connection information locally, the target device can also obtain connection information of all other devices that can establish a connection with the initiator device through the server; can also obtain the connection information through other devices connected to the target device. Other devices are all devices capable of establishing a connection with the initiator device.

In an embodiment, the processing method further includes:
If the first preset instruction is received or it is detected that the target device is in or switched to a preset mode, the processing method includes at least one of the following:
immediately or with a delay or timing disconnect the device connection or all connections of the target device;
if the second preset instruction is received, restoring to the previous state;
outputting prompt information.

In an embodiment, if the first preset instruction is received or it is detected that the target device is in or switched to the preset mode, the processing method includes at least one of the following: immediately or with a delay or timing disconnect the device connection or all connections of the target device; if the second preset instruction is received, restoring to the previous state; outputting prompt information. Delayed disconnection is to disconnect the device connection or all connections of the target device after a period of time when receiving the first preset instruction or detecting that the target device is in or switched to the preset mode. The period of time can be set by the user or preset by the system, and is not specifically limited in this embodiment. The first preset instruction is an instruction to disconnect the target device from part or all of the devices connected to it. The second preset instruction is an instruction to cancel the operation performed by the target device by performing the first preset instruction.

In an embodiment, the processing method further includes at least one of the following:
after the initiator device is successfully connected to the target device, maintaining or disconnecting the connection between the terminal and the target device.

In an embodiment, after the initiator device is successfully connected to the target device, the connection between the terminal and the target device is maintained or disconnected.

In an embodiment, the target device and the terminal may be devices with similar functions. After the initiator device successfully connects with the target device, it disconnects the connection between the terminal and the target device. For example, the initiator device is a smart earphone, the terminal is a smart phone, and the target device is a PAD with similar functions to the smart phone. The target device and the terminal may also be devices with dissimilar functions. After the initiator device successfully connects with the target device, it maintains the connection between the terminal and the target device. For example, the initiator device is a smart earphone, the terminal is a smart phone, and the target device is a vehicle terminal.

If the connection information changes, updating the corresponding preset connection rule.

If the connection information changes, the corresponding preset connection rule is updated.

In an embodiment, the first preset connection rule and the second preset connection rule are directly affected by the connection information. For example, the first preset priority of device identification in connection information is the highest, and the first preset priority of device number in connection information is second. The first preset connection rule is to give priority to the device identification for connection, and after the connection information changes, the device identification in the connection information is no longer considered. The device quantity ranked second originally in the first preset priority is changed to the first priority, and the first preset connection rule at this time is updated to give priority to the device quantity for connection.

In this embodiment, the processing method includes: A100, obtaining the connection information according to the request of the terminal; A200, sending the connection information, so that the initiator device connected to the terminal connects to the target device according to the first preset connection rule and/or the second preset connection rule and the connection information. After obtaining the connection information of the target device according to the request of the terminal, the connection information is sent to the terminal, thereby making the initiator device connected to the terminal connect to the target device according to the first preset connection rule and/or the second preset connection rule and connection information, and providing more optional connection solutions for the connection between the initiator device and the target device, making the initiator device more flexible and intelligent when establishing a connection with the target device.

In an embodiment, the present application further provides a processing device, including:
a first obtaining module for obtaining connection information; the connection information includes at least one first connection information and/or at least one second connection information, the first connection information is provided by the terminal, and the second connection information is provided by the target device;
a connection module for connecting to the target device according to the first preset connection rule and/or the second preset connection rule and the connection information.

In an embodiment, the connection module includes:
a detection unit for if the connection to the target device fails according to the first preset connection rule and the connection information, or if the connection to the target device fails according to the first preset connection rule and the connection information, or if the number of failed connections to the target device according to the first preset connection rule and the connection information reaches a preset value (preferably, such as 3 or 5 times), connecting the target device according to the second preset connection rule and the connection information.

In an embodiment, the processing device further includes:
a sorting module for sorting one or more of the connection information according to preset strategies (such as priority, shortest connection time consumption, least connection power consumption, best connection security, etc.);
a first generating module for generating and/or determining the first preset connection rule according to the sorted connection information;
a first matching module for matching the third preset connection rule with one or more items in the connection information to obtain the first preset connection rule.

In an embodiment, the sorting module includes:
a first sorting unit for sorting each connection information according to a first preset priority;
a second sorting unit for sorting the connection information providing devices corresponding to the same connection information in the connection information according to the second preset priority.

In an embodiment, the processing device further includes:
a detection module for detecting whether a preset operation is received, and if so, performing the first obtaining module;

The detection module is further for detecting whether it is in a preset mode, and if so, performing the first obtaining module.

In an embodiment, the processing device further includes:
a first receiving module for receiving feedback information from the target device before performing the connection module;
a second receiving module for performing the connection module after receiving the confirmation connection instruction.

In an embodiment, the processing device further includes:
an output module, configured to output prompt information to at least one of the initiator device, the terminal, and the target device after the connection succeeds or fails.

In an embodiment, the processing device further includes:
a second generating module, configured to generate and/or determine the first preset connection rule according to the first connection information and/or the second connection information;
a second matching module, configured to match a third preset connection rule with one or more items of the first connection information and/or the second connection information to obtain a first preset connection rule.

In an embodiment, the processing device further includes:
a maintaining module, configured to maintain the connection between the terminal and the target device after the initiator device is successfully connected to the target device;
a disconnection module, configured to disconnect the connection between the terminal and the target device after the initiator device is successfully connected to the target device.

In an embodiment, the processing device further includes:
an update module, configured to update the corresponding preset connection rules if the connection information changes.

In an embodiment, the present application further provides a processing device, including:
a first obtaining module, configured to obtain the connection information of the target device according to the request of the initiator device; the connection information includes at least one first connection information and/or at least one second connection information, the first connection information is provided by the terminal, and the second connection information is provided by the target device;
a sending module, configured to send the connection information.

In an embodiment, the connection module includes:
a detection unit, configured to, if the connection to the target device fails according to the first preset connection rule and the connection information, or if the connection to the target device fails according to the first preset connection rule and the connection information, or if the number of failed connections to the target device according to the first preset connection rule and the connection information reaches a preset value (preferably, such as 3 or 5 times), connect the target device according to the second preset connection rule and the connection information.

In an embodiment, the processing device further includes:
a sorting module, configured to sort one or more items of the connection information according to preset strategies (such as priority, shortest connection time consumption, least connection power consumption, best connection security, etc.);
a first generating module, configured to generate and/or determine the first preset connection rule according to the sorted connection information;
a first matching module, configured to match the third preset connection rule with one or more items in the connection information to obtain the first preset connection rule.

In an embodiment, the sorting module includes:
a first sorting unit, configured to sort each connection information according to a first preset priority;
a second sorting unit, configured to sort the connection information providing devices corresponding to the same connection information in the connection information according to the second preset priority.

In an embodiment, the processing device further includes:
a detection module, configured to detect whether a preset operation is received, and if so, execute the first obtaining module;

The detection module is also configured to detect whether it is in a preset mode, and if so, execute the first obtaining module.

In an embodiment, the processing device further includes:
a first receiving module, configured to receive feedback information from the target device before performing the connection module;
a second receiving module, configured to execute the connection module after receiving the confirmation connection instruction.

In an embodiment, the processing device further includes:
an output module, configured to output prompt information to at least one of the initiator device, the terminal, and the target device after the connection succeeds or fails.

In an embodiment, the processing device further includes:
a sending module, configured to, if the initiator device fails to connect to the first target device according to the first preset connection rule and/or the second preset connection rule and the connection information, the terminal acquires and sends the connection information of the second target device.

In an embodiment, the processing device further includes:
a maintaining module, configured to maintain the connection between the terminal and the target device after the initiator device is successfully connected to the target device;
a disconnection module, configured to disconnect the connection between the terminal and the target device after the initiator device is successfully connected to the target device;
an update module, configured to update the corresponding preset connection rules if the connection information changes.

In an embodiment, the present application further provides a processing device, including:
a first obtaining module, configured to obtain the connection information according to the request of the terminal; the connection information includes at least one first connection information and/or at least one second connection information, the first connection information is provided by the terminal, and the second connection information is provided by the target device;
a sending module, configured to send the connection information.

In an embodiment, the connection module includes:
a detection unit, configured to, if the connection to the target device fails according to the first preset connection rule and the connection information, or if the connection to the target device fails according to the first preset connection rule and the connection information, or if the number of failed connections to the target device according to the first preset connection rule and the connection information reaches a preset value (preferably, such as 3 or 5 times), connect the target device according to the second preset connection rule and the connection information.

In an embodiment, the processing device further includes:
a detection module, configured to detect whether a preset operation is received, and if so, execute the first obtaining module;

The detection module is also configured to detect whether it is in a preset mode, and if so, execute the first obtaining module.

In an embodiment, the processing device further includes:
a first receiving module configured to receive feedback information from the target device before performing the connection module;
a second receiving module configured to execute the connection module after receiving the confirmation connection instruction.

In an embodiment, the processing device further includes:
an output module, configured to output prompt information to at least one of the initiator device, the terminal, and the target device after the connection succeeds or fails.

In an embodiment, the processing device also includes:
a disconnection module, configured to disconnect the device connection or all connections of the target device immediately or with a delay or timing;
a restore module, configured to restore to the previous state if a second preset instruction is received.

The output module is also configured to output prompt information.

In an embodiment, the processing device further includes:
a maintaining module, configured to maintain the connection between the terminal and the target device after the initiator device is successfully connected to the target device;
a disconnection module, configured to disconnect the connection between the terminal and the target device after the initiator device is successfully connected to the target device;
an update module, configured to update the corresponding preset connection rules if the connection information changes.

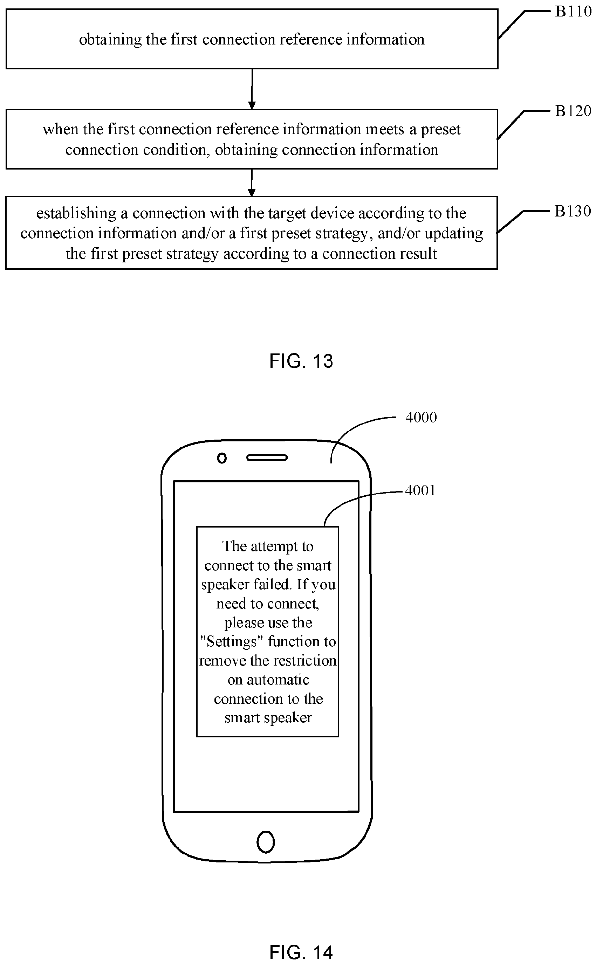

The present application provides a processing method. Referring to FIG. 13, FIG. 13 is a schematic flowchart of the processing method according to an embodiment of the present application.

The embodiment of the present application provides the processing method. Although a logical order is shown in the flowcharts, in some cases the steps shown or described may be performed in an order different from that shown or described herein. The processing method is applied to the initiator device, including:
Operation B110, obtaining the first connection reference information.

In an embodiment, the initiator device acquires the first connection reference information, and the initiator device determines whether a connection needs to be established with other devices according to the first connection reference information.

In an embodiment, the first connection reference information may be at least one of the following:
positioning information, time information, device use state information and instruction information.

In an embodiment, the positioning information includes the positioning information of the initiator device and the positioning information of the target device, and the initiator device determines the distance from the target device through the positioning information of the initiator device and the positioning information of the target device. The time information is the current time, which can be the local time of the initiator device or the network time obtained by the initiator device, for example, the current time is 18:00 Beijing time. The device use state information is provided by devices (including the target device) that can be searched around the initiator device, for example, the device is an earphone, and the device use state information of the earphone is that the user is not wearing it. The instruction information is an instruction input by the user received by the initiator device, for example, the user intends to enable the initiator device to remotely control the smart home through the Internet.

In an embodiment, the first connection reference information meets the preset connection condition, and may include at least one of the following:
the positioning information meets a first preset connection condition.

When the first connection reference information includes positioning information, the initiator device determines whether the positioning information meets the first preset connection condition. The first preset connection condition is a distance threshold, and when the distance between the initiator device and the target device is smaller than the distance threshold, the positioning information meets the first preset connection condition. For example, when the user holds a smart phone and approaches the smart car, when the distance between the smart phone and the smart car is less than a distance threshold, the location information meets the first preset connection condition. When the distance between the smart phone and the smart car is greater than or equal to the distance threshold, the positioning information does not meet the first preset connection condition. The distance threshold can be set by those skilled in the art according to needs, or set by users themselves.

The time information meets the second preset connection condition.

When the first connection reference information includes time information, the initiator device determines whether the time information meets the second preset connection condition. The second preset connection condition may be set by the user, or obtained by the initiator device after deep learning of the user's daily device use habits. For example, the current time is 23:00, and the user sets it through the initiator device. At 23:00, the initiator device needs to establish a connection with the air conditioner, or the user's daily device use habit is 23:00 and the temperature setting of the air conditioner needs to be adjusted. Then, when the current time is 23:00, the time information meets the second preset connection condition; when the current time is not 23:00, the time information does not meet the second preset connection condition.

The device use state information meets a third preset connection condition.

When the first connection reference information includes device use state information, the initiator device determines whether the device use state information meets the third preset connection condition. For example, if the user needs to listen to music (the initiator device detects that the user has turned on the music player software), the device use state information provided by the smart speaker is enabled, while the device use state information provided by the smart earphone is that the user is not wearing. At this time, the device use state information of the smart speaker meets the third preset connection condition, and the device use state information of the smart earphone does not meet the third preset connection condition.

The instruction information meets the fourth preset connection condition.

When the first connection reference information includes instruction information, the initiator device determines whether the instruction information meets a fourth preset connection condition. The fourth preset connection condition is a preset instruction, and/or triggered by a preset location (such as preset controls, preset interface, lock screen interface, screen off interface, hiboard, floating button, screen edge, physical button, setting interface, etc.), and/or triggered by a preset method (such as voice, air gesture, operation gesture, etc.). When the initiator device receives that the instruction information input by the user is a preset instruction, the instruction information meets the fourth preset connection condition. The instruction information can be establishing a connection with the sweeping robot, establishing a connection with a smart TV, etc. The sweeping robot and smart TV can be connected to the Internet through a wireless router.

The device state includes at least one of normal, abnormal, smooth, stuck, idle, overloaded, allowed to connect, not allowed to connect, restricted to connect, safe, not safe, worn, not worn, used, and not used.

During the operation of the device, there are various device states, including at least one of normal, abnormal, smooth, stuck, idle, overload, allowed to connect, not allowed to connect, restricted connection, safe, unsafe, worn, not worn, used, not used.

When the device state of the target device connected to the initiator device is at least one of abnormal, stuck, overloaded, not allowed to connect, unsafe, not worn, and not used, it is inconvenient for subsequent data exchange. For example, if the device state of the target device is stuck, during the subsequent data exchange process, the data processing process of the target device will be extremely long, affecting user experience.

In an embodiment, the device state is normal, which means that the target device is in a normal working state. The device state is abnormal, which means that the target device is in an abnormal working state. The device state is smooth, which means that the target device can work smoothly. The device state is stuck, which means that the target device cannot work smoothly. For example, the target device responds abnormally, and the response time is longer than smooth. The device state is idle, which means that the target device currently needs to process fewer tasks, for example, the Central Processing Unit (CPU) occupies a small proportion. The device state is overloaded, which means that the target device currently needs to process more tasks, such as a large CPU usage. The device state is allowed to connect, which means that the target device is allowed to establish a connection with other devices. The device state is not allowed to connect, which means that the target device is not allowed to establish a connection with other devices. The device state is restricted connection, which means that the target device is only allowed to establish a connection with other devices under certain conditions. The device state being safe means that the target device is in a safe state, for example, the network used by the target device is a secure network. The device state is unsafe, which means that the target device is in an unsafe state. For example, the network used by the target device is an unsafe network (a network with security risks (such as public WiFi)). The device state is worn, which means that the target device is worn by the user. The device state is not worn, which means that the target device is not worn by the user. The device state is in use, which means that the target device is in use by the user. The device state is not in use, which means that the target device is not in use by the user.

By determining whether the first connection reference information meets the preset connection condition, and acquiring the connection information only when it is met, the accuracy of judging whether to establish a connection with the target device by the initiator device is improved, so that the process of device connection is more flexible and intelligent, and unnecessary connections can be reduced, thereby reducing power consumption.

Operation B120, when the first connection reference information meets a preset connection condition, obtaining connection information, the connection information is provided by the target device.

In an embodiment, when the first connection reference information meets a preset connection condition, the connection information is acquired. The connection information is provided by the target device, and the initiator device can obtain the connection information sent by the target device by actively searching for surrounding devices. The initiator device and the target device include any of terminal devices (such as smart phones, Portable Android Device (PAD), tablet computer etc.), wearable smart devices (such as smart watches, smart bracelets, smart earphones, etc.), smart home devices (such as smart TVs, smart speakers, etc.) and Internet of Vehicles devices (such as smart cars, vehicle terminals, etc.).

In an embodiment, the connection information is saved in the initiator device. For the situation where a connection has been established with the target device, the initiator device can save the connection information of the target device, so that when a connection needs to be established with the target device next time, the connection information saved in the initiator device can be directly used to establish a connection with the target device. Therefore, the target device does not need to provide connection information through broadcasting, which can save energy consumption.

In an embodiment, the connection information is provided by a third-party device, and the third-party device respectively establishes a connection with the initiator device and the target device, so as to send the connection information obtained from the target device to the initiator device. The third-party device includes any one of terminal devices (such as smart phones, PADs, etc.), server devices, and smart home control centers. The initiator device and the target device include any of terminal devices (such as smart phones, PAD etc.), wearable smart devices (such as smart watches, smart bracelets, smart earphones, etc.), smart home devices (such as smart TVs, smart speakers, etc.) and Internet of Vehicles devices (such as smart cars, vehicle terminals, etc.).

In an embodiment, the above connection information includes at least one of device identification, device name, device address, device type, device quantity, device power, and device state; and/or, the connection information includes at least one of a connection user name, a connection password, and a connection parameter.

In an embodiment, the above connection information includes at least one of device identification, device name, device address, device type, device quantity, device power, device state, connection user name, connection password, and connection parameter, or the above connection information includes at least one of device identification, device name, device address, device type, device quantity, device power, and device state, or the above connection information includes at least one of connection user name, connection password and connection parameter.

For the device identification, the initiator device can identify the identity of the target device through the device identification, which is equivalent to the identity feature identification information of the device. In addition, the initiator device may also use the device identification to identify whether the target device is a historically connected device. In an embodiment, when the initiator device judges whether there is a device identification matching the preset device identification in the target device, the device identification is used to functionally distinguish other devices, which is equivalent to making a special mark for the device. For example, by setting the device identification, the user can only connect the smart phone to the smart earphone, but not the smart speaker. When the target device is a smart speaker, the initiator device cannot establish a connection with the target device. For example, as shown in FIG. 14, when the target device is a smart speaker, the smart phone 4000 outputs a prompt information through the message prompt box 4001 "attempt to connect to the smart speaker failed, if you need to connect, please use the "settings" function to remove the restriction on automatic connection to the smart speaker".

For the device name, the initiator device can identify the identity of the target device through the device name. The initiator device can also output prompt information to the user through the device name, for example, if the device name is "smartphone", the initiator device can output the prompt information "connection has been established with the smartphone". The initiator device can also identify whether the target device is a historically connected device through the device name.

For the device address, the initiator device can identify the identity of the target device through the device address. The device address is the Media Access Control (MAC) address of the device. The initiator device establishes a connection with the target device through the device address. Generally, when the initiator device establishes a connection with the target device through Bluetooth, the device address is the MAC address of Bluetooth. When the initiator device establishes a connection with the target device through WiFi, the device address is the MAC address of WiFi; in an embodiment, the initiator device can also use the device address to identify whether the target device is a historically connected device.

For the device type, when the initiator device connects to the target device, the target device may not be unique. In other words, there are multiple target devices, and when there are multiple target devices, the initiator device classifies the target devices according to device types. For example, there are multiple smart air conditioners that can be connected in a smart home, and the multiple smart air conditioners can be classified as smart air conditioners. Among the connectable smart earphones, there are multiple smart earphones that meet the different audio playback needs of users, such as smart earphones for listening to music, smart earphones for playing games, smart earphones for watching movies, etc., these multiple smart earphones may be classified as smart earphones.

For the device quantity, in order to ensure the stability and/or rate of the connection between devices, the target device limits the maximum device quantity that can be connected. When the initiator device initiates a connection establishment request to the target device, the initiator device receives the device quantity and the maximum number of connectable devices fed back by the target device.

For the device power, in order to ensure the stability of the connection between devices, the initiator device needs to obtain the device power of the target device. It is understandable that the lower the battery power of the device, the shorter the usable time of the device for the same use environment (such as playing music). Therefore, when the battery power of the target device is lower than a certain value (such as 10% or 20%), it is not necessary for the initiator device to connect to the target device.

For the device state, when the initiator device connects to the target device, the device state of the target device may be a device use state and /or a device running state, and the like.

For the connection user name and connection password, when connecting between devices, in order to ensure the accuracy and security of the connection, the initiator device needs to use the connection username and the connection password to ensure that the connected device is the target device and not other connectable devices.

For the connection parameters, when the initiator device connects to the target device, the target device sets certain conditions for the connection through the connection parameters, so as to achieve the purpose of restricting the connection.

Operation B130, establishing a connection with the target device according to the connection information and/or a first preset strategy, and/or updating the first preset strategy according to a connection result.

In an embodiment, the initiator device establishes a connection with the target device according to the connection information and the first preset strategy, and updates the first preset strategy according to the connection result. The first preset strategy includes at least one of setting the connection duration, setting the connection speed, setting the connection time, setting the connection location, setting the connection mode, setting the connection priority, setting the function restriction, setting the automatic trigger application and/or function and/or service, setting execution of preset control instruction, setting the direct connection, and setting the indirect connection.

In an embodiment, for setting the connection duration, the timing starts when the initiator device establishes a connection with the target device. After the timing starts, when the connection time of the two devices reaches the connection duration, the initiator device disconnects the connection with the target device. For example, when a user shares a song with others, the user's smart phone establishes a connection with the shared party's smart earphone, and the user wishes to disconnect the smart phone from the smart earphone after the song is shared. At this time, the duration of the song can be obtained, and the duration can be used as the connection duration, and the connection duration can be set when the smart phone and the smart earphone are connected.

In an embodiment, for setting the connection speed, the initiator device can limit the data transmission capability between the initiator device and the target device by setting the connection speed between the initiator device and the target device. For example, when the target device accesses the Internet through the data access function of the initiator device, and the remaining data traffic of the initiator device is insufficient, in order to avoid excessive usage of the data traffic of the initiator device, when the initiator device and the target device are connected, the data transmission rate between them, that is, the connection speed, can be set. In an embodiment, a method for determining whether the remaining data traffic of the initiator device is insufficient may be estimate the daily use traffic of the initiator device user, and calculate it based on the remaining traffic of the initiator device, the daily use traffic and the number of days that the remaining traffic needs to be used. When the remaining traffic is less than the product of the size of the daily use traffic and the number of days the remaining traffic needs to be used, it is determined that the remaining data traffic of the initiator device is insufficient.

In an embodiment, for setting the connection time, the initiator device can limit the time for establishing a connection between the initiator device and the target device by setting the connection time between the initiator device and the target device. For example, if the target device is a smart speaker, and the user of the initiator device is currently inconvenient to use the smart speaker, a convenient time for the user may be automatically set as the time for establishing the connection.

In an embodiment, for setting the connection location, the initiator device may limit the location where the connection is established between the initiator device and the target device by setting the connection location between the initiator device and the target device. For example, when the user is exercising, the location is a gym. Since the user is convenient to use the smart watch but not the smart phone, the smart earphone is connected to the smart watch instead of the smart phone.

In an embodiment, for setting the connection priority, when the target device is multiple devices, the initiator device determines the target device that finally establishes the connection by setting the connection priority. The connection priority can be set according to the device power and/or device state of the target device. For example, if the device power of the target device 1 is 50%, and the device power of the target device 2 is 40%, then the priority of the target device 1 is higher than that of the target device 2. For another example, if the device state of the target device 1 is stuck and the device state of the target device 2 is smooth, the priority of the target device 2 is higher than that of the target device 1.

In an embodiment, for setting the direct connection, when the initiator device establishes a connection with the target device, the initiator device directly establishes a connection with the target device without establishing a connection with the target device through a third-party device.

The above connection modes include at least one of the following:
if the connection is successful, the initiator device and the target device are no longer disconnected or disconnected at regular intervals or over time; and/or,
if the connection fails, the initiating device and the target device are no longer connected or regularly connected or periodically connected.

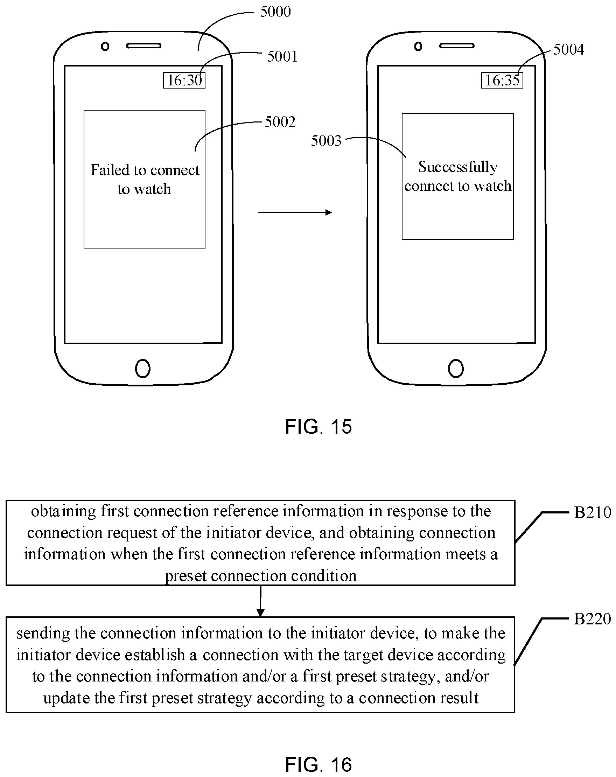

In an embodiment, the initiator device successfully connects to the target device, and the conditions for disconnection between the initiator device and the target device can be determined through a certain disconnection strategy. The disconnection strategy includes no longer disconnection or timing disconnection or timeout disconnection. No longer disconnection means that the initiator device (or target device) continues to maintain the above connection until it receives the user's connection disconnection instruction. Timing disconnection means that after a certain period of time after the connection is established, the initiator device and the target device will automatically disconnect. For example, if the connection is established within 5 minutes, the initiator device will automatically disconnect from the target device. Timeout disconnection means that after the connection is established, if there is no data exchange between the initiator device and the target device within a certain period of time, the initiator device and the target device will automatically disconnect. For example, after the transmission of a certain data between the initiator device and the target device is completed, if there is no data exchange between the initiator device and the target device within 6 minutes, the initiator device and the target device will be automatically disconnected. For example, referring to FIG. 15, when the smart phone 5000 tries to connect to the watch when the time is 5001, the smart phone 5000 outputs the prompt information "failed to connect to the watch" through the message prompt box 5002, and when the time is 5004, after trying to connect to the watch again, the smart phone 5000 outputs a prompt information "Connect to the watch successfully" through the message prompt box 5002.
And/or
After the connection between the initiator device and the target device fails, the initiator device can continue to try to connect to the target device through the continuous connection strategy. The continuous connection strategy includes no longer connection or timing connection or periodic connection. No longer connection means that the initiator device does not try to connect to the target device until it receives the user's request connection instruction. Timing connection means that after a certain time after the connection fails, the initiator device will automatically try to connect to the target device again. For example, if it reaches 5 minutes after the connection is established, the initiator device will automatically try to connect to the target device again. Periodic connection means that after the connection fails, the initiator device periodically tries to connect to the target device again. For example, after the connection fails, the initiator device tries to connect to the target device every 6 minutes.

The method further includes:
if the connection is successful or the number of successful connections reaches a preset value (such as 3 or 5 times), obtaining the second connection reference information, and if the second connection reference information is different from the first connection reference information, changing the first preset strategy to the second preset strategy.

In an embodiment, if the connection is successful or the number of successful connections reaches a preset value (such as 3 times or 5 times), the second connection reference information is obtained.

If the second connection reference information is different from the first connection reference information, the first default strategy is changed to the second default strategy. After the connection is successful, continuously update the connection reference information, that is, obtain the second connection reference information, to ensure that the connection reference information meets the preset connection condition, when the second connection reference information does not meet the preset connection condition, the first preset strategy is changed to the second preset strategy. For example, when the time information does not meet the preset connection conditions, the connection is disconnected. For another example, when the device use state information does not meet the preset connection conditions, the device use state information is obtained again within a certain period of time to make a second judgment on whether the device use state information meets the preset connection conditions. If still not satisfied, the connection is disconnected, and if satisfied, the first preset strategy is not changed to the second preset strategy.

In an embodiment, after the connection is established, the first preset strategy can also be updated according to the connection result: if the connection is successful or the number of successful connections reaches the preset value (such as 3 or 5 times), updating the first preset strategy is: the initiator device and the target device are no longer disconnected or disconnected at a fixed time or timed out;
if the connection fails or the number of connection failures reaches a preset value (such as 3 times or 5 times), updating the first preset strategy is: the initiator device and the target device are no longer connected or connected regularly or periodically;
if the connection is successful or the number of successful connections reaches a preset value (such as 3 or 5 times), obtaining the second connection reference information, if the second connection reference information meets a preset condition, changing the first preset strategy to a second preset strategy.

In an embodiment, the second connection reference information meets preset conditions, including at least one of the following:
the second connection reference information is different from the first connection reference information;
the value of the second connection parameter meets a preset condition.

In an embodiment, the second connection reference information may be the same as or different from the first connection reference information, and specifically may include at least one of the following: positioning information, time information, device use state information, and instruction information. Exemplarily, when the first connection reference information is the positioning information, the second connection reference information may be positioning information or time information.

In an embodiment, if the second connection reference information (such as device use state information) is different from the first connection reference information (such as positioning information), it may be determined that the second connection reference information meets the preset condition.

In another embodiment, if the value of the second connection reference information (such as the current location, or the current time point or time period, or device use state, etc.) meets the preset condition (for example, the current location is the preset location, or within the range of the preset location, and if the current time point is the preset time point or within the range of the preset time period), it can be determined that the second connection reference information meets the preset condition.

In an embodiment, the second preset strategy may be the same as or different from the first preset strategy, and specifically may include at least one of the following: at least one of setting the connection duration, setting the connection speed, setting the connection time, setting the connection location, setting the connection mode, setting the connection priority, setting the function restriction, setting the automatic trigger application and/or function and/or service, setting execution of preset control instruction, setting the direct connection, and setting the indirect connection.

In an embodiment, the initiator device is a mobile phone, and the target device is an earphone. When the user wants to use the mobile phone to establish a connection with the earphone, according to the technical solution of this application, it can first determine whether the current geographic location of the mobile phone meets the conditions (such as at home, not in a conference room or in a car, etc.), if so, connect the earphone according to the connection information provided by the earphone, and connect to the earphone according to the first preset strategy (such as the connection mode being always connected and/or automatically playing preset songs, etc.): If the mobile phone detects that the battery of the earphone is insufficient (for example, only 20% left, etc.), the first preset strategy can be updated to only connect for a preset duration, and then automatically disconnect; or if the mobile phone detects that the location information has changed (such as starting from home to the car), the first preset strategy can be updated to disconnect or stop playing. Updating the original connection strategy through the connection results can achieve more flexible and intelligent technical effects, and in some application scenarios (such as driving, sleeping, etc.), it can also achieve safer and healthier technical effects.

Table 1 below shows some typical implementations of the first preset strategy and the second preset strategy (taking the initiator as a mobile phone and the receiver as an earphone or watch as an example). It can be seen that after the connection succeeds or fails, the connection strategy can be updated again according to the connection reference information, thereby making the connection between devices more flexible and intelligent. In some scenarios, technical effects such as reduced power consumption and greater security can also be achieved, thereby improving user experience.

In an embodiment, the update connection strategy is jointly determined by connection results and information changes, so that more combinations of technical solutions can be generated, and some typical examples are also given in Table 1 below.

**Table 1**

| First preset strategy | Connection result | Information change (optional) | Second preset strategy | Technical effect | Note |
|---|---|---|---|---|---|
| Time | Succeed | Initiator and/or receiver low on battery | Automatically disconnect after a preset period of time, or reduce the connection speed, or reduce the amount of transmitted data and/or transmission time, etc. | Smarter, lower power consumption | Output prompt information, or connect to another earphone with sufficient power (one mobile phone can be connected to multiple earphones at the same time) |
| Time | Fail | None | Reconnect at another time point or time period | Smarter | Support periodic automatic reconnection |
| Location | Succeed | Location change (such as changing from home to car, or changing from office area to conference room, etc.) | Automatically disconnect or automatically stop playing | Smarter, safer, lower power consumption | When the location changes again, it can automatically reconnect |
| Device use state | Succeed | State change (initiator and/or receiver running state changes from normal to stuck) | Pause playback, or automatically disconnect | Smarter, lower power consumption | When the state returns to normal, it can automatically reconnect |
| Device use state | Fail | State change (e.g. switching from airplane mode back to normal mode, or changing from non-use to use) | Re-initiate connection | Smarter and safer | Support only connect once or multiple times |
| Instruction information | Fail | None | Automatically establish a connection with the target device that meets the preset connection conditions | Smarter | When there are multiple target devices that meet the preset connection conditions, prompt information can also be output for the user to choose |
| Instruction information | Succeed | State change (earphones change from wearing state to non-wearing state, smart terminal changes from safe state to non-safe state) | Automatically disconnect | Smarter and safer | Output prompt information |

In an embodiment, the initiator device is a smart home control center (such as a smart terminal, mobile phone, etc.), and the target device is a speaker. When the user wants to be woken up by the sound of music in the morning, according to the technical solution of this application, the smart home control center first determines whether the current time meets the preset conditions (such as the alarm clock time set by the user, the user's habitual wake-up time, etc.). If so, the connection information provided by the speaker is obtained. A connection with the speaker is established according to the connection information and the first preset strategy. Since usually the time from waking up to going out to work for the user is fixed, the connection can be established according to the first preset strategy, such as setting the duration of the connection (controlling the playing time of the speaker, controlling the closing time of the speaker, etc.), setting the automatic playback of music (automatically playing the music in the music list played last time, playing the music of the user's favorite type of music, etc.), etc. If the connection is successful, continue to determine whether the current time meets the second preset condition (such as whether the preset playback time of the speaker is reached, whether the preset turn-off time of the speaker is reached), whether the user has gone out. If so, the first preset strategy is changed to the second preset strategy. The second preset strategy can be to turn off the currently playing speaker, turn off the lights in the room, and start the sweeping robot to perform cleaning mode lights. If the connection fails, the first default strategy is changed to a second default strategy. The second preset strategy may be to connect the user's wearable device to perform the music playback function. For example, when the connection to the speaker fails, the smart home control center establishes a connection with the user's smart watch or earphone to play music, thereby waking up the user. The above method can realize more flexible and intelligent technical effects.

The method further includes at least one of the following:
the functional limitations described include: the preset system functions and/or preset application functions and/or preset services (which may be foreground services or background services) of the initiator device and/or the target device are restricted from normal use.

In an embodiment, the function restriction includes: restricting that the preset system function and/or the preset application function of the initiator device and/or the target device cannot be used normally.

In an embodiment, the default system functions may include camera functions, recording functions, etc., and the preset application functions may include payment functions, chat functions, etc. In order to avoid leakage of user privacy of the initiator device or the target device, or out of consideration for the device security of the initiator device or the target device, it can restrict the initiator device and the target device from being able to access data related to user privacy or security after the connection is established. The specific content that needs to be restricted can be set by the user according to the demand, or set after the automatic judgment of the device system.

The automatic triggering of application or function includes: automatically triggering and running at least one of the following of the initiator device and/or the target device: a preset system application, a preset system function, a preset application, and a preset application function.

In an embodiment, at least one of the following items of the initiator device and/or the target device is automatically triggered to run: a preset system application, a preset system function, a preset application, and a preset application function.

In an embodiment, the preset system application may include camera, recording, etc., and the preset application may include Alipay, WeChat, or the like. When the initiator device establishes a connection with the target device, the initiator device and/or the target device automatically runs the corresponding application or function, and the corresponding application includes the most recent application in history, the most frequently used application, or the user's preset application, or the like. After the initiator device successfully establishes a connection with the target device, such as a smart earphone connected to a smartphone, when it is detected that the application currently running on the smartphone is a non-media application (an application that does not require the use of a smart earphone), the user's preset application (such as music player software) is opened, and the most frequently played music after opening the music player software is opened, or the music that the user often listens to at the current time is opened according to the current time. The corresponding functions include system functions or application functions, for example, when the smart phone and the smart camera are connected, the smart phone and/or the smart camera will automatically pop up related setting functions, and the smart phone can also be used to remotely control related functions of the smart camera.

The performing the preset control instruction includes: performing the preset control instruction of the initiator device and/or the preset control instruction of the target device.

In an embodiment, the preset control instruction of the initiator device and/or the preset control instruction of the target device are performed.

In an embodiment, when the initiator device establishes a connection with the target device, the initiator device outputs a preset control instruction to the target device. Alternatively, when the initiator device establishes a connection with the target device, the target device outputs a preset control instruction to the initiator device. In an embodiment, the initiator device outputting preset control instructions to the target device is taken as an example, the preset control instruction is an instruction for the initiator device to control the target device to perform a corresponding device control operation, for example, the initiator device adjusts the volume of the target device. In an embodiment, it can also combine the external environment information to output the preset control instruction. For example, when the user is in a noisy environment and the smart earphone is connected to the smartphone, the smartphone can set the volume of the smart earphone to a higher volume and automatically turn on the noise reduction function of the smart earphone. When the user is in a quiet environment, the smart phone can set the volume of the smart earphone to a lower volume to adapt to the corresponding external environment information. In an embodiment, the preset control instruction can also be output in combination with the mode information of the device. For example, when a smart watch is connected to a smart speaker, the smart watch is in the sports mode, and the smart watch outputs the preset control instruction to the smart speaker to make the smart speaker perform corresponding device control operations. For example, the smart speaker prompts the user whether to turn on the music he or she likes to listen to while exercising according to the user's preference.

The indirect connection includes: the initiator is connected to a third-party device, and the third-party device is connected to the target device.

In an embodiment, the initiator device is connected to the third-party device, and the third-party device is connected to the target device.

In an embodiment, when the initiator device establishes a connection with the target device, the initiator device first establishes a connection with a third-party device (in a connected state with the target device), and then establishes a connection with the target device through the third-party device.

In this embodiment, the processing method includes: obtaining first connection reference information; when the first connection reference information meets a preset connection condition, obtaining connection information, the connection information being provided by the target device; establishing a connection with the target device according to the connection information and/or a first preset strategy, and/or updating the first preset strategy according to a connection result. It realizes establishing a connection with the target device through the first preset strategy, and provides more optional connection schemes when connecting with the target device, so that the initiator device is more flexible and intelligent when establishing a connection with the target device.

In an embodiment, the present application provides another embodiment of the processing method. After the operation of establishing a connection with the target device according to the connection information and/or the first preset strategy, the processing method further includes:
Operation a, the initiator device and/or the target device outputting prompt information.

In an embodiment, the initiator device and/or the target device outputs prompt information.

In an embodiment, the prompt information includes at least one of the following: text information, voice information, light information and vibration information.

In an embodiment, the prompt information includes at least one of text information, voice information, light information, and vibration information. The text information can be output through a pop-up window on the display screen of the initiator device, for example, output text prompt information "connection with xxx has been established". The display duration of the pop-up window can also be set, for example, the pop-up window will be automatically closed after 0.5 seconds of display. The voice information can be output through the speaker of the initiator device, for example, output voice prompt information, the content of which can be "connection with xxx". The light information can be output through the flashlight of the initiator device, for example, to remind the user that the initiator device has established a connection with the target device through a preset flash mode. The preset flash mode can flash once at a fixed interval, and flash continuously for a period of time. The vibration information can be output through the vibration function of the initiator device, such as through the preset vibration method to remind the user that the connection with the target device has been established. The preset vibration mode may be to vibrate once at a fixed interval and to vibrate continuously for a period of time. Since the information carried by the light information and vibration information is not obvious, it is difficult for users to understand the meaning when they obtain the light information or vibration information. When using light information or vibration information as the prompt information, it is better to use text information or voice information as the prompt information at the same time, so that the user can easily understand the meaning of the prompt information.

In this embodiment, the initiator device and/or the target device outputs prompt information, so that the user can obtain information that the connection between the initiator device and the target device is successfully established through the prompt information, thereby making the device connection process more flexible and intelligent.

In an embodiment, referring to FIG. 16, another embodiment of the application processing method is proposed. Although a logical order is shown in the flowcharts, in some cases the steps shown or described may be performed in an order different from that shown or described herein. The processing method is applied to the target device, and the processing method includes:
Operation B210, obtaining first connection reference information in response to the connection request of the initiator device, and obtaining connection information when the first connection reference information meets a preset connection condition.

In an embodiment, in response to the connection request of the initiator device, the first connection reference information is acquired, and when the first connection reference information meets the preset connection condition, the connection information is acquired. The target device obtains the first connection reference information, and determines whether to establish a connection with the initiator device according to the first connection reference information. The initiator device and the target device include any one of terminal devices (such as smartphones, PADs, tablet computers, etc.), wearable smart devices (such as smart watches, smart bracelets, smart earphones, etc.), smart home devices (such as smart TVs, smart speakers, etc.) and Internet of Vehicles devices (such as smart cars, vehicle terminals, etc.). It can be understood that when the initiator device initiates a connection request, the connection request corresponds to the connection requirement, which can be regarded as determining the target device. The purpose of obtaining the first connection reference information is to determine whether it currently meets the conditions for establishing a connection with the initiator device. The connection is established when it is satisfied, and/or, if it is not satisfied, the connection may not be established, that is, the initiator device determines whether to establish a connection with the target device through the first connection reference information.

In an embodiment, the first connection reference information may include at least one of the following:
positioning information, time information, device use stat information and instruction information.

In an embodiment, the positioning information includes the positioning information of the target device and the positioning information of the initiator device, and the target device determines the distance from the initiator device through the positioning information of the initiator device and the positioning information of the target device. The time information is the current time, which can be the local time of the target device or the network time obtained by the target device, for example, the current time is 18:00 Beijing time. The device use state information includes information provided by the target device, for example, the device is an earphone, and the device use state information of the earphone is not worn by the user. The instruction information is an instruction input by the user received by the target device, for example, a response operation of the user of the target device on the initiator device.

In an embodiment, the first connection reference information meets the preset connection condition, and may include at least one of the following:
the positioning information meets a first preset connection condition.

When the first connection reference information includes the positioning information, the target device determines whether the positioning information meets the first preset connection condition. The first preset connection condition is a distance threshold, and when the distance between the initiator device and the target device is smaller than the distance threshold, the positioning information meets the first preset connection condition. For example, when the user holds a smart phone and approaches the smart car, when the distance between the smart phone and the smart car is less than a distance threshold, the location information meets the first preset connection condition. When the distance between the smart phone and the smart car is greater than or equal to the distance threshold, the positioning information does not meet the first preset connection condition. The distance threshold can be set by those skilled in the art according to needs, or set by users themselves.

The time information meets the second preset connection condition.

When the first connection reference information includes the time information, the target device determines whether the time information meets the second preset connection condition. The second preset connection condition may be set by the user, or obtained by the target device after deep learning of the user's daily device use habits. For example, the current time is 23:00, and the target device is an air conditioner. At 23:00, the air conditioner needs to establish a connection with the initiator device, or the user's daily device use habit is to adjust the temperature setting of the air conditioner at 23:00. Then, when the current time is 23:00, the time information meets the second preset connection condition; when the current time is not 23:00, the time information does not meet he second preset connection condition.

The device use state information meets a third preset connection condition.

When the first connection reference information includes device use state information, the target device determines whether the device use state information meets the third preset connection condition. For example, if the user needs to listen to music (the target device detects that the user has turned on the music player software), the target device is the smart speaker, the device use state information provided by the smart speaker is enabled, while the device use state information provided by the smart earphone is that the user is not wearing. At this time, the device use state information of the smart speaker meets the third preset connection condition, and the device use state information of the smart earphone does not meet the third preset connection condition.

The instruction information meets the fourth preset connection condition.

When the first connection reference information includes instruction information, the target device determines whether the instruction information meets a fourth preset connection condition. The fourth preset connection condition is a preset instruction, and/or triggered by a preset location (such as preset controls, preset interface, lock screen interface, screen off interface, hiboard, floating button, screen edge, physical button, setting interface, etc.), and/or triggered by a preset method (such as voice, air gesture, operation gesture, etc.). When the target device receives that the instruction information input by the user is a preset instruction, the instruction information meets the fourth preset connection condition. The instruction information can be establishing a connection with the sweeping robot, establishing a connection with a smart TV, etc. The sweeping robot and smart TV can be connected to the Internet through a wireless router.

The device state includes at least one of normal, abnormal, smooth, stuck, idle, overloaded, allowed to connect, not allowed to connect, restricted to connect, safe, not safe, worn, not worn, used, and not used.

During the operation of the device, there are various device states, including at least one of normal, abnormal, smooth, stuck, idle, overload, allowed to connect, not allowed to connect, restricted connection, safe, unsafe, worn, not worn, used, not used.

When the device state of the target device is at least one of abnormal, stuck, overloaded, not allowed to connect, unsafe, not worn, and not used, it is inconvenient for subsequent data exchange. For example, if the device state of the target device is stuck, during the subsequent data exchange process, the data processing process of the target device will be extremely long, affecting user experience.

In an embodiment, the device state is normal, which means that the target device is in a normal working state. The device state is abnormal, which means that the target device is in an abnormal working state. The device state is smooth, which means that the target device can work smoothly. The device state is stuck, which means that the target device cannot work smoothly. For example, the target device responds abnormally, and the response time is longer than smooth. The device state is idle, which means that the target device currently needs to process fewer tasks, for example, the Central Processing Unit (CPU) occupies a small proportion. The device state is overloaded, which means that the target device currently needs to process more tasks, such as a large CPU usage. The device state is allowed to connect, which means that the target device is allowed to establish a connection with other devices. The device state is not allowed to connect, which means that the target device is not allowed to establish a connection with other devices. The device state is restricted connection, which means that the target device is only allowed to establish a connection with other devices under certain conditions. The device state being safe means that the target device is in a safe state, for example, the network used by the target device is a secure network. The device state is unsafe, which means that the target device is in an unsafe state. For example, the network used by the target device is an unsafe network (a network with security risks (such as public WiFi)). The device state is worn, which means that the target device is worn by the user. The device state is not worn, which means that the target device is not worn by the user. The device state is in use, which means that the target device is in use by the user. The device state is not in use, which means that the target device is not in use by the user.

By determining whether the first connection reference information meets the preset connection condition, and acquiring the connection information only when it is met, the accuracy of judging whether to establish a connection with the target device by the initiator device is improved, so that the process of device connection is more flexible and intelligent, and unnecessary connections can be reduced, thereby reducing power consumption.

In an embodiment, the connection information may include at least one of device identification, device name, device address, device type, device quantity, device power, and device state; and/or, the connection information includes at least one of a connection user name, a connection password, and a connection parameter.

In an embodiment, the above connection information includes at least one of device identification, device name, device address, device type, device quantity, device power, device state, connection user name, connection password, and connection parameter, or the above connection information includes at least one of device identification, device name, device address, device type, device quantity, device power, and device state, or the above connection information includes at least one of connection user name, connection password and connection parameter.

For the device identification, the target device can provide identification information to the initiator device through the device identification, which is equivalent to the identification information of the device. In addition, the target device may also provide the initiator device with information about whether the target device is a historically connected device through the device identifier. In an embodiment, the device identifier is also used to functionally distinguish other devices, which is equivalent to making a special mark for the device. For example, by setting the device identification, the user can only connect the smart phone to the smart earphone, but not the smart speaker. When the target device is a smart speaker, the initiator device cannot establish a connection with the target device. For example, as shown in FIG. 14, when the target device is a smart speaker, the smart phone 4000 outputs a prompt information through the message prompt box 4001 "attempt to connect to the smart speaker failed, if you need to connect, please use the "settings" function to remove the restriction on automatic connection to the smart speaker".

For the device name, the target device can provide identification information to the initiator device through the device name. The target device can also use the device name to enable the initiator device to output prompt information to the user through the device name, for example, if the device name is "smartphone", the initiator device can output a prompt information "connection has been established with the smartphone". In an embodiment, the target device may also provide the initiator device with information about whether the target device is a historically connected device through the device identification.

For the device address, the target device can provide identification information to the initiator device through the device address. The device address is the device Media Access Control (MAC) address, and the target device establishes a connection with the initiator device through this device address. Generally, when the target device establishes a connection with the initiator device via Bluetooth, the device address is the Bluetooth MAC address. When the target device establishes a connection with the initiator device through WiFi, the device address is the MAC address of WiFi. The target device may also provide the initiator device with information on whether the target device is a historically connected device through the device address.

For the device type, when the target device connects to the initiator device, the target device may not be unique. In other words, there are multiple target devices. When there are multiple target devices, the device type needs to be provided to the initiator device, so that the initiator device can classify the target device according to the device type. For example, there are multiple smart air conditioners that can be connected in a smart home, and the multiple smart air conditioners can be classified as smart air conditioners. Among the connectable smart earphones, there are multiple smart earphones that meet the different audio playback needs of users, such as smart earphones for listening to music, smart earphones for playing games, smart earphones for watching movies, etc., these multiple smart earphones may be classified as smart earphones.

For the device quantity, in order to ensure the stability and/or rate of the connection between devices, the target device limits the maximum device quantity that can be connected. When the initiator device initiates a connection establishment request to the target device, the target device feeds back the number of devices and the maximum number of connectable devices to the initiator device.

For the device power, in order to ensure the stability of the connection between devices, the target device needs to provide device power to the initiator device. It is understandable that the lower the battery power of the device, the shorter the usable time of the device for the same use environment (such as playing music). Therefore, when the battery power of the target device is lower than a certain value (such as 10% or 20%), it is not necessary for the initiator device to connect to the target device.

For the device state, when the initiator device connects to the target device, the device state of the target device may be a device use state and /or a device running state, and the like.

For the connection user name and connection password, when connecting between devices, in order to ensure the accuracy and security of the connection, the target device needs to use the connection username and the connection password to ensure that the connected device is the initiator device and not other connectable devices.

For the connection parameters, when the target device connects to the initiator device, the target device sets certain conditions for the connection through connection parameters, so as to achieve the purpose of restricting the connection.

Operation B220, sending the connection information to the initiator device, to make the initiator device establish a connection with the target device according to the connection information and/or a first preset strategy, and/or update the first preset strategy according to a connection result.

In an embodiment, the target device sends connection information to the initiator device, so that the initiator device establishes a connection with the target device according to the connection information and the first preset strategy, and updates the first preset strategy according to the connection result.

In an embodiment, the first preset strategy includes at least one of setting the connection duration, setting the connection speed, setting the connection time, setting the connection location, setting the connection mode, setting the connection priority, setting the function restriction, setting the automatic trigger application and/or function and/or service, setting execution of preset control instruction, setting the direct connection, and setting the indirect connection.

In an embodiment, for setting the connection duration, start timing when the target device establishes a connection with the initiator device. After the timing starts, when the connection time of the two devices reaches the connection duration, the target device disconnects the connection with the initiator device. For example, when a user shares a song with others, the user's smart phone establishes a connection with the shared party's smart earphone, and the user wishes to disconnect the smart phone from the smart earphone after the song is shared. At this point, the duration of the song can be obtained, and the duration can be used as the connection duration, and the connection duration can be set when the smart phone and the smart earphone are connected.

In an embodiment, for the connection speed, the target device can limit the data transmission capacity between the target device and the initiator device by setting the connection speed between the target device and the initiator device. For example, when the target device accesses the Internet through the data access function, and the remaining data traffic of the target device is insufficient. In order to avoid excessive data usage of the target device, you can set the data transmission rate between the target device and the initiator device when they are connected, that is, the connection speed. The method for judging whether the remaining data traffic of the target device is insufficient can be estimate the daily traffic usage of the target device user, and calculate it based on the remaining traffic of the target device, the daily usage traffic, and the number of days that the remaining traffic needs to be used. When the remaining traffic is less than the product of the size of the daily usage traffic and the number of days the remaining traffic needs to be used, it is determined that the remaining data traffic of the target device is insufficient.

In an embodiment, for setting the connection time, the target device can limit the time for establishing a connection between the target device and the initiator device by setting the connection time between the target device and the initiator device. For example, if the target device is a smart speaker, and the user of the initiator device is currently inconvenient to use the smart speaker, a convenient time for the user may be automatically set as the time for establishing the connection.

In an embodiment, for setting the connection location, the target device can limit the location where the connection between the target device and the initiator device is established by setting the connection location between the target device and the initiator device. For example, when the user is exercising, the location is the gym. Since it is convenient for the user to use the smart watch but not the smart phone, the smart earphone is connected with the smart watch but not connected with the smart phone.

In an embodiment, for setting the connection priority, when the target device is multiple devices, the device power and/or device state can be sent to the initiator device, so that the initiator device determines the target device to finally establish the connection by setting the connection priority. For example, if the device power of the target device 1 is 50%, and the device power of the target device 2 is 40%, then the priority of the target device 1 is higher than that of the target device 2. For another example, if the device state of the target device 1 is stuck and the device state of the target device 2 is smooth, the priority of the target device 2 is higher than that of the target device 1.

In an embodiment, for setting the direct connection, when the target device establishes a connection with the initiator device, the target device directly establishes a connection with the initiator device without establishing a connection with the initiator device through a third-party device.

The above connection modes include at least one of the following:
if the connection is successful, the target device and the initiator device are no longer disconnected or disconnected at a fixed time or timed out; and/or,
if the connection fails, the target device and the initiator device are no longer connected or connected regularly or periodically.

In an embodiment, the target device successfully connects to the initiator device, and the conditions for disconnection between the target device and the initiator device can be determined through a certain disconnection strategy. The disconnection strategy includes no longer disconnection or timing disconnection or timeout disconnection. In an embodiment, no longer disconnection means that the initiator device (or target device) continues to maintain the above connection before receiving the user's connection disconnection instruction. Timing disconnection means that after a certain period of time after the connection is established, the target device will automatically disconnect from the initiator device. For example, if the connection is established within 5 minutes, the target device will automatically disconnect from the initiator device. Timeout disconnection means that after the connection is established, if there is no data exchange between the target device and the initiator device within a certain period of time, the target device and the initiator device will automatically disconnect. For example, after a certain data transmission is completed between the target device and the initiator device, if there is no data exchange between the target device and the initiator device within 6 minutes, the target device and the initiator device will be automatically disconnected. For example, referring to FIG. 15, when the smart phone 5000 tries to connect to the watch when the time is 5001, the smart phone 5000 outputs the prompt information "failed to connect to the watch" through the message prompt box 5002. When the time is 5004, after trying to connect to the watch again, the smart phone 5000 outputs a prompt information "Connect to the watch successfully" through the message prompt box 5002.
And/or
After the connection between the target device and the initiator device fails, the target device can continue to try to connect to the initiator device through the continue connection strategy. The continuous connection strategy includes no longer connection or timing connection or periodic connection. In an embodiment, no longer connection is that the target device does not try to connect to the initiator device until the target device has not received a connection request instruction from the user of the initiator device. Timing connection means that after the connection fails, after a certain time, the target device will automatically try to connect to the initiator device again. For example, if it reaches 5 minutes after the connection is established, the target device will automatically try to connect to the initiator device again. Periodic connection means that after the connection fails, the target device periodically tries to connect to the initiator device again. For example, after the connection fails, the target device tries to connect to the initiator device every 6 minutes.

The above method may further include:
If the connection is successful or the number of successful connections reaches a preset value (such as 3 or 5 times), obtaining the second connection reference information, if the second connection reference information is different from the first connection reference information, changing the first preset strategy to the second preset strategy.

If the connection is successful, the target device obtains the second connection reference information. If the second connection reference information is different from the first connection reference information, the first default strategy is changed to the second default strategy. After the connection is successful, the connection reference information is continuously updated, that is, the target device obtains the second connection reference information to ensure that the connection reference information meets the preset connection conditions. When the second connection reference information does not meet the preset connection condition, the first preset strategy is changed to the second preset strategy. For example, when the time information does not meet the preset connection conditions, the connection is disconnected. For another example, when the device use state information does not meet the preset connection conditions, the device use state information is obtained again within a certain period of time to make a second judgment on whether the device use state information meets the preset connection condition. If still not satisfied, the connection is disconnected, and if satisfied, the first preset strategy is not changed to the second preset strategy.

In an embodiment, after the connection is established, the first preset strategy can also be updated according to the connection result: if the connection is successful or the number of successful connections reaches a preset value (such as 3 or 5 times), then the update of the first preset strategy is: the initiator device is no longer disconnected from the target device or is disconnected at regular intervals or overtime.

If the connection fails or the number of connection failures reaches a preset value (such as 3 times or 5 times), then updating the first preset strategy is: the initiator device and the target device are no longer connected or connected regularly or periodically.

If the connection is successful or the number of successful connections reaches a preset value (such as 3 or 5 times), obtaining the second connection reference information, and if the second connection reference information meets a preset condition, changing the first preset strategy to a second preset strategy.

In an embodiment, the second connection reference information meets the preset condition, including at least one of the following:
the second connection reference information is different from the first connection reference information;
the value of the second connection parameter meets the preset condition.

In an embodiment, the second connection reference information may be the same as or different from the first connection reference information, and specifically may include at least one of the following: positioning information, time information, device use state information, and instruction information. Exemplarily, when the first connection reference information is positioning information, the second connection reference information may be positioning information or time information.

In an embodiment, if the second connection reference information (such as device use state information) is different from the first connection reference information (such as positioning information), it may be determined that the second connection reference information meets the preset condition.

In another embodiment, if the value of the second connection reference information (such as the current location, or the current time point or time period, or device use state, etc.) meets the preset condition (for example, the current location is the preset location, or within the range of the preset location, and if the current time point is the preset time point or within the range of the preset time period), it can be determined that the second connection reference information meets the preset condition.

In an embodiment, the second preset strategy may be the same as or different from the first preset strategy, and specifically may include at least one of the following: setting the connection duration, setting the connection speed, setting the connection time, setting the connection location, setting the connection mode, setting the connection priority, setting the function restriction, setting the automatic trigger application and/or function and/or service, setting execution of preset control instruction, setting the direct connection, and setting the indirect connection.

In an embodiment, the initiator device is a mobile phone, and the target device is an earphone. When the user wants to use the mobile phone to establish a connection with the earphone, according to the technical solution of this application, it can first judge whether the current geographic location of the mobile phone meets the conditions (such as at home, not in a conference room or in a car, etc.). If so, connect the earphone according to the connection information provided by the earphone and connect to the earphone according to the first preset strategy (such as the connection mode being always connected and/or automatically playing preset songs, etc.): If the mobile phone detects that the battery of the earphone is insufficient (for example, only 20% left, etc.), the first preset strategy can be updated to only connect for a preset duration, and then automatically disconnect. If the mobile phone detects that the location information has changed (for example, starting from home to the car), the first default strategy can be updated to disconnect or stop playing. Updating the original connection strategy through the connection results can achieve more flexible and intelligent technical effects, and in some application scenarios (such as driving, sleeping, etc.), it can also achieve safer and healthier technical effects.

Table 2 below shows some typical implementations of the first preset strategy and the second preset strategy (taking the initiator as a mobile phone and the receiver as an earphone or watch as an example). It can be seen that after the connection succeeds or fails, the connection strategy can be updated again according to the connection reference information, thereby making the connection between devices more flexible and intelligent. In some scenarios, technical effects such as reduced power consumption and greater security can also be achieved, thereby improving user experience. In an embodiment, the update connection strategy is jointly determined by connection results and information changes, so that more combinations of technical solutions can be generated, and some typical examples are also given in Table 2 below.

**Table 2**

| First preset strategy | Connection result | Information change (optional) | Second preset strategy | Technical effect | Note |
|---|---|---|---|---|---|
| Time | Succeed | Initiator and/or receiver low on battery | Automatically disconnect after a preset period of time, or reduce the connection speed, or reduce the amount of transmitted data and/or transmission time, etc. | Smarter, lower power consumption | Output prompt information, or connect to another earphone with sufficient power (one mobile phone can be connected to multiple earphones at the same time) |
| Time | Fail | None | Reconnect at another time point or time period | Smarter | Support periodic automatic reconnection |
| Location | Succeed | Location change (such as changing from home to car, or changing from office area to conference room, etc.) | Automatically disconnect or automatically stop playing | Smarter, safer, lower power consumption | When the location changes again, it can automatically reconnect |
| Device use state | Succeed | State change (initiator and/or receiver running state changes from normal to stuck) | Pause playback, or automatically disconnect | Smarter, lower power consumption | When the state returns to normal, it can automatically reconnect |
| Device use state | Fail | State change (e.g. switching from airplane mode back to normal mode, or changing from non-use to use) | Re-initiate connection | Smarter and safer | Support only connect once or multiple times |
| Instruction information | Fail | None | Automatically establish a connection with the target device that meets the preset connection conditions | Smarter | When there are multiple target devices that meet the preset connection conditions, prompt information can also be output for the user to choose |
| Instruction information | Succeed | State change (earphones change from wearing state to non-wearing state, smart terminal changes from safe state to non-safe state) | Automatically disconnect | Smarter and safer | Output prompt information |
| Set connection priority | Succeed | Environment changes (the environment where the earphone is located changes from quiet to noisy) | Execute preset control instruction | Smarter | When the environment changes from noisy to quiet, it can return to the state before executing the preset control instruction |
| Set connection speed | Succeed | State changes (such as watch power changes from insufficient to sufficient) | Set the connection speed (faster than the connection speed of the first preset strategy) | Smarter | When the power changes again, the connection speed can be limited again |

In an embodiment, the initiator device is a smart home control center (such as a smart terminal, mobile phone, etc.), and the target device is a speaker. When the user wants to be woken up by the sound of music in the morning, according to the technical solution of this application, the smart home control center first judges whether the current time meets the preset conditions (such as the alarm clock time set by the user, the user's habitual wake-up time, etc.), If so, the connection information provided by the speaker is obtained, and a connection with the speaker is established according to the connection information and the first preset strategy. Since the time from waking up to going to work is usually fixed for the user, the connection can be established according to the first preset strategy, such as setting the duration of the connection (controlling the playing time of the speaker, controlling the closing time of the speaker, etc.), setting automatic playback of music (automatically play the music in the music list played last time, play the music of the user's favorite music type, etc.), and the like. If the connection is successful, continue to determine whether the current time meets the second preset condition, and if so, the first preset strategy is changed to the second preset strategy. The second preset strategy may be to turn off the currently playing speakers, turn off the lights in the room, and start the sweeping robot to perform cleaning mode lights. If the connection fails, the first default strategy is changed to a second default strategy. The second preset strategy may be to connect the user's wearable device to perform the music playback function. For example, when the connection to the speaker fails, the smart home control center establishes a connection with the user's smart watch or earphone to play music, thereby waking up the user. The above method can realize more flexible and intelligent technical effects.

The above method also includes at least one of the following:
the functional limitations described include: the preset system functions and/or preset application functions and/or preset services (which may be foreground services or background services) of the initiator device and/or the target device are restricted from normal use.

In an embodiment, the functional restriction includes: restricting that the preset system function and/or the preset application function of the initiator device and/or the target device cannot be used normally.

In an embodiment, the default system functions may include camera functions, recording functions, etc., and the preset application functions may include payment functions, chat functions, etc. In order to avoid leakage of user privacy of the initiator device or the target device, or out of consideration for the device security of the initiator device or the target device, it can restrict the target device and the initiator device from accessing data related to user privacy or security after the connection is established. The specific content that needs to be restricted can be set by the user according to the demand, or set after the automatic judgment of the device system.

The automatic triggering of applications or functions includes: automatically triggering and running at least one of the following of the initiator device and/or the target device: a preset system application, a preset system function, a preset application, a preset application function.

In an embodiment, at least one of the following items of the initiator device and/or the target device is automatically triggered to run: a preset system application, a preset system function, a preset application, and a preset application function.

In an embodiment, the default system applications can include camera, recording, etc., and the default applications can include Alipay, WeChat, or the like. When the connection between the target device and the initiator device is established, the initiator device and/or the target device automatically runs the corresponding application or function. The corresponding application includes the most recent application in history, the most frequently used application, or the user's preset application, or the like. Or after the connection between the target device and the initiator device is successfully established, such as a smart earphone connected to a smartphone, when it is detected that the application currently running on the smartphone is a non-media application (an application that does not require the use of smart earphones), open the user's preset application (such as music player software), and open the most frequently played music after opening the music player software, or according to the current time, open the music that the user often listens to at the current time. The corresponding functions include system functions or application functions. For example, when a smart phone is connected to a smart camera, the smart phone and/or the smart camera will automatically pop up related setting functions, and the smart phone can also be used to remotely control related functions of the smart camera.

The performing the preset control instruction includes: performing he preset control instruction of the initiator device and/or the preset control instruction of the target device.

In an embodiment, a preset control instruction of the initiator device and/or a preset control instruction of the target device are executed.

In an embodiment, when a connection is established between the target device and the initiator device, the target device outputs a preset control instruction to the initiator device; the initiator device may also output a preset control instruction to the target device when a connection is established between the target device and the initiator device. The target device outputting preset control instructions to the initiator device is taken as an example. The preset control instruction is an instruction for the target device to control the initiator device to perform a corresponding device control operation, for example, the target device adjusts the volume of the initiator device. In an embodiment, the preset control instruction can also be output in combination with external environment information. For example, when the user is in a noisy environment and the smart earphone is connected to the smartphone, the smartphone can set the volume of the smart earphone to a higher volume and automatically turn on the noise reduction function of the smart earphone. When the user is in a quiet environment, the smart phone can set the volume of the smart earphone to a lower volume to adapt to the corresponding external environment information. It can also combine the mode information of the device to output preset control instruction. For example, when a smart watch is connected to a smart speaker, the smart watch is in the sports mode, and the smart watch outputs the preset control instruction to the smart speaker, to make the smart speaker perform corresponding device control operations. For example, the smart speaker prompts the user whether to turn on the music he or she likes to listen to during exercise according to the user's preferences.

The indirect connection includes: the initiator is connected to a third-party device, and the third-party device is connected to the target device.

In an embodiment, the initiator is connected to the third-party device, and the third-party device is connected to the target device.

In an embodiment, when the target device establishes a connection with the initiator device, the initiator device first establishes a connection with a third-party device (connected to the target device), and then establishes a connection with the target device through the third-party device.

In this embodiment, the processing method includes: obtaining first connection reference information in response to the connection request of the initiator device, and obtaining the connection information when the first connection reference information meets a preset connection condition; sending the connection information to the initiator device, to make the initiator device establish a connection with the target device according to the connection information and/or a first preset strategy, and/or update the first preset strategy according to a connection result. It realizes establishing a connection with the initiator device through the first preset strategy, and provides more optional connection schemes when connecting with the initiator device, so that the target device is more flexible and intelligent when establishing a connection with the initiator device.

In an embodiment, the present application provides another embodiment of the processing method. The processing method further includes:
Operation b, determining whether the connection request meets preset connection requirements.

In an embodiment, the target device needs to perform preset condition judgment on the connection request sent by the initiator device, that is, determine whether the connection requirement meets the preset connection requirement.

Operation c, if the connection request meets the preset connection requirements, feeding back that the connection is possible.

In an embodiment, if the connection request sent by the initiator device meets the preset connection requirements set by the target device, it means that the target device can establish a connection with the initiator device, and feed back the availability of connection to the initiator device, so that the initiator device can establish a connection with the target device through the connection available fed back by the target device.

After the above steps of determining whether the connection request meets the preset requirements, the method also includes:
Operation d, if the connection request does not meet the preset connection requirements, feeding back that the connection is possible but set the data exchange permission after the connection is established with the initiator device.

In an embodiment, if the connection request sent by the initiator device does not meet the preset connection requirements set by the target device, the target device will set the data exchange permission after establishing a connection with the initiator device while feeding back the connection to the initiator device. For example, the data exchange authority may restrict the exchange of text file data. The data exchange right not only restricts the target device from transmitting the restricted exchanged data to the initiator device, but also restricts the target device from receiving the restricted exchanged data sent by the initiator device.

The preset connection requirements above include security requirements.

In an embodiment, to ensure the security of the target device, the above preset connection requirements include security requirements. The security requirement includes whether the initiator device is a registered device, and the registered device may have a registration record on the network where the target device is connected.

In this embodiment, by determining whether the connection request meets the preset connection requirements, including security requirements, and feedback that it is possible to connect when it meets the requirements, and setting the data exchange authority while feedback that it is possible to connect when it does not meet the requirements, which enables a secure connection regardless of whether the connection request meets the preset connection requirements.

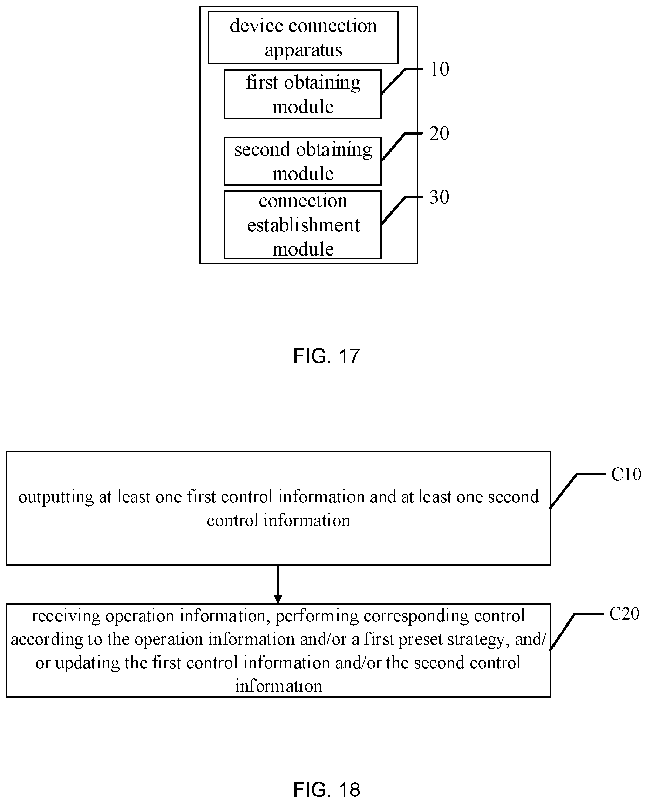

In an embodiment, the present application further provides a processing device. As shown in FIG. 17, the processing device includes:
a first obtaining module 10, configured to obtain first connection reference information;
a second obtaining module 20, configured to obtain connection information when the first connection reference information meets a preset connection condition;
a connection establishment module 30, configured to establish a connection with the target device according to the connection information and/or a first preset strategy;
an update module 40, configured to update the first preset strategy according to the connection result.

In an embodiment, the update module includes:
a first update unit, configured to update the first preset strategy as follows if the connection is successful or the number of successful connections reaches a preset value (such as 3 or 5 times): the initiator device is no longer disconnected from the target device or is disconnected at regular intervals or overtime;
a second update unit, configured to update the first preset strategy as follows if the connection fails or the number of connection failures reaches a preset value (such as 3 or 5 times): the initiator device is no longer connected to the target device or is regularly connected or periodically connected;
an obtaining unit, configured to obtain the second connection reference information if the connection is successful or the number of successful connections reaches a preset value (such as 3 times or 5 times);
a changing unit, configured to change the first preset strategy to the second preset strategy if the second connection reference information meets a preset condition.

In an embodiment, the processing device also includes:
an output module, configured for the initiator device and/or the target device to output prompt information.

In an embodiment, the present application further provides a processing device, including:
a first obtaining module 10, configured to obtain first connection reference information in response to the connection request of the initiator device;
a second obtaining module 20, configured to acquire connection information when the first connection reference information meets a preset connection condition;
a sending module 30, configured to send the connection information to the initiator device;
an update module 40, configured to update the first preset strategy according to the connection result.

In an embodiment, the update module includes:
a first update unit, configured to update the first preset strategy as follows if the connection is successful or the number of successful connections reaches a preset value (such as 3 or 5 times): the initiator device is no longer disconnected from the target device or is disconnected at regular intervals or overtime;
a second update unit, configured to update the first preset strategy as follows if the connection fails or the number of connection failures reaches a preset value (such as 3 or 5 times): the initiator device is no longer connected to the target device or is regularly connected or periodically connected;
an obtaining unit, configured to obtain the second connection reference information if the connection is successful or the number of successful connections reaches a preset value (such as 3 times or 5 times);
a changing unit, configured to change the first preset strategy to the second preset strategy if the second connection reference information meets a preset condition.

The present application provides a processing method. Referring to FIG. 18, FIG. 18 is a schematic flowchart of the processing method according to an embodiment of the present application.

The embodiment of the present application provides the processing method. Although a logical order is shown in the flowcharts, in some cases the steps shown or described may be performed in an order different from that shown or described herein. The processing method can be applied to management devices, including but not limited to personal computers and smart phones. For the convenience of description, the following steps are omitted to describe the processing method of the execution subject, and the processing method includes:
Operation C10, outputting at least one first control information and at least one second control information, the first control information corresponds to a first device directly connected to the management device, and the second control information corresponds to a second device indirectly connected to the management device.

In an embodiment, before the operation of outputting at least one first control information and/or at least one second control information, the method further includes: detecting whether a preset event occurs. If yes, the operation of outputting at least one first control information and/or at least one second control information is performed; and/or, if not, the operation of outputting at least one first control information and/or at least one second control information is not performed.

In an embodiment, the preset event includes at least one of switching of the control center, or establishing or disconnecting the connection between the first device and the management device, or establishing or disconnecting the connection between the second device and the management device, or the change of the function and/or interface of the system and/or application on the first device and/or the second device (such as alarm clock ringing, application opening or exiting, etc.), or the state information of the first device and/or the second device (for example, the remaining power is lower than a certain preset value, such as 10%; or the change of the environment, such as changing from day to night, or from work to home, etc.).

In an embodiment, the state information of the device includes at least one of device identification, device name, device address, device type, device quantity, device power, and device use state.

In an embodiment, the device user state may include at least one of the environment of the device (such as time, location, etc.), storage space information, use information (such as traffic information, use habit information, and currently used application information, etc.), the running state being normal, the running state being abnormal, the running state being smooth, the running state being stuck, the device being idle, the device being overloaded, the device being in the state of allowing connection, the device being in the state of not allowing connection, the device being in the state of restricting connection, the device being in a safe state or mode, the device being in a non-secure state or mode, the device being in the wearing state, the device being in the non-wearing state, the device being in use and the device being not in use.

In an embodiment, outputting at least one first control information and/or at least one second control information, the first control information corresponds to the first device connected to the management device, and the second control information corresponds to the second device connected to the management device. The management device, the first device and the second device include any one of terminal devices (such as smart phones, Portable Android Device, Tablet PC), etc.), wearable smart devices (such as smart watches, smart bracelets, smart earphones, etc.), smart home devices (such as smart TVs, smart speakers, etc.) and Internet of Vehicles devices (such as smart cars, vehicle terminals, etc.).

The content of the above-mentioned first control information and/or the above-mentioned second control information includes at least one of the following: the device information of the first device and/or the second device; the application information and/or function information and/or service information of the first device; the application information and/or function information and/or service information of the second device; the operation interface information of the first device and/or the operation interface information of the second device.

In an embodiment, the content of the first control information and/or the above-mentioned second control information includes at least one of the device information of the first device and/or the second device; the application information and/or function information of the first device; the application information and/or function information of the second device; the operation interface information of the first device and/or the operation interface information of the second device.

For the device information of the first device and/or the second device, it includes information such as the device name and device identification for the user to distinguish between devices, for example, the device name is "smart TV", the user can know that the device is a smart TV through the device name, and will not mistake the smart TV for a smart phone. It also includes device address, such as Bluetooth address, WIFI address and other information used for data exchange between devices, which is the unique identity information of each device.

For the application information and/or function information of the first device, the application information of the first device includes system application (such as camera, recording) information (such as application name, application icon), paid application (such as game application, office application) information (such as application name, application icon), or the like. The function information of the first device includes functions in applications of the first device, such as taking pictures, recording videos, playing audio, creating new files, and the like.

For the application information and/or function information of the second device, the application information of the second device includes system application (such as camera, recording) information (such as application name, application icon), paid application (such as game application, office application) information (such as application name, application icon), or the like. The function information of the second device includes functions in applications of the second device, such as taking pictures, recording videos, playing audio, creating new files, and the like.

For the operation interface information of the first device and/or the operation interface information of the second device, the operation interface information includes the interface currently displayed by the device, which can realize remote control of the first device and/or the second device.

The output form of the above-mentioned first control information and/or the above-mentioned second control information includes at least one of the following: one device corresponds to one window or page or control or card; all devices are correspondingly displayed in the same window or page or control or card; the first control information is displayed in a first display area or a first display screen; the second control information is displayed in a second display area or a second display screen; the first control information and/or the second control information are simultaneously displayed in a display area or a display screen.

In an embodiment, the output form of the first control information and/or the second control information includes at least one of the following: one device corresponds to one window or page or control or card; all devices correspond to display in the same window or page or control or card; the first control information is displayed in the first display area or the first display screen; the second control information is displayed in the second display area or the second display screen; the first control information and/or the second control information are simultaneously displayed in a display area or a display screen.

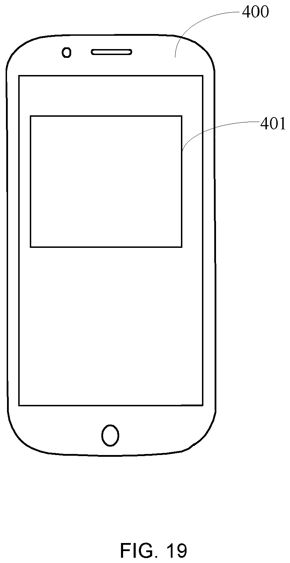

In an embodiment, a window generally refers to a display mode that does not completely occupy the entire screen for display, such as a pop-up frame. Referring to FIG. 19, 400 is a smart phone, and 401 is a pop-up frame. As for the page, it generally takes up the entire screen for display, such as the web page of the browser. As for controls, it generally refers to sub-windows, such as list boxes, edit boxes, and so on. As for the display and window or page or control or card, it determines the expression form of the first control information and/or the second control information, that is, the presented shape.

For the display area and the display screen, what is determined is the display position of the first control information and/or the second control information. The display area is part of the display screen. It can be understood that the management device may have one or more display screens.

In an embodiment, the management device is a data processing center, for example, acquiring the first control information from the first device.

The above method further includes at least one of the following: the first device is directly or indirectly connected to the management device; the second device is directly or indirectly connected to the management device.

In an embodiment, the connection type includes direct connection and indirect connection, the first device may be directly or indirectly connected to the management device, and the second device may also be directly or indirectly connected to the management device. For example, the first device is directly connected to the management device, the first device is directly connected to the second device, and the management device is indirectly connected to the second device.

Operation C20, receiving operation information, performing corresponding control according to the operation information and/or a first preset strategy, and/or updating the first control information and/or the second control information.

In an embodiment, receive operational information, perform corresponding control according to the operation information and the first preset strategy, or update the first control information and/or the second control information, or perform corresponding control and update the first control information and/or the second control information according to the operation information and the first preset strategy. The operation information is information corresponding to the outputted first control information and/or second control information. For example, after the management device outputs the first control information and/or the second control information, the user operates on the output control information, thereby generating operation information.

In an embodiment, the purpose of updating the first control information and/or the second control information is to distinguishably display the first control information and/or the second control information corresponding to the operation information for the user, to make the user to determine the object being operated by the first control information and/or the second control information that are displayed differently.

Before the above operation C20, it is detected whether the management device currently outputting the control information meets the first preset rule, and if so, the operation C20 is executed.

In an embodiment, detect whether the management device currently outputting the control information meets the first preset rule, and if so, perform receiving operation information, and perform corresponding control steps according to the operation information and/or the first preset strategy. The introduction of the first preset rule avoids the misoperation of the user. It can be understood that the misoperation is an operation generated by the user without the intention of the operation, that is, there is no need to obtain operation information.

The above meeting the first preset rule includes at least one of the following: the management device is a control center; the management device is in a preset mode; the interface of the management device is in an operable state; the authentication information is output and the authentication passes; and a preset operation instruction is received.

In an embodiment, the meeting the first preset rule includes at least one of the following: the management device is a control center, it can be understood that the control center acquires the first control information and/or the second control information; the management device is in the preset mode; the interface of the management device is in the operable state; the authentication information is output and the authentication is passed; the preset operation instruction is received.

In an embodiment, the preset modes include smart mode, shortcut operation mode, automatic switching mode and other modes for performing functions related to the control center.

In an embodiment, being in an operable state on the interface of the management device may include that the device is in an unlocked state.

In an embodiment, for the authentication information, it can ensure that the user currently operating the device is an authorized user.

In an embodiment, the preset operation instruction is equivalent to a secondary confirmation instruction, including a preset gesture instruction, a preset voice instruction, a preset combination key instruction, and the like.

The above-mentioned first preset strategy includes at least one of the following: if the operation information is a switching connection operation, changing the connection type of the first device, and/or changing the connection type of the second device; if the operation information is an operation of establishing a connection, establishing a connection between the first device and the second device; if the operation information is a disconnection operation, outputting disconnection setting information, and setting at least one of disconnection time, disconnection duration, and reconnection strategy according to the setting instruction; if the operation information is a setting operation, outputting the setting information, and performing corresponding setting according to the setting instruction; if the operation information is a transfer information operation, transferring at least one information on the first device to the second device; and/or, transferring at least one information on the second device to the first device; and/or transferring at least one information on the management device to the first device and/or the second device.

If the operation information is a switching connection operation, change the connection type of the first device, and/or change the connection type of the second device.

In an embodiment, if the operation information is a switching connection operation, change the connection type of the first device, or change the connection type of the second device, or change the connection type of the first device and change the connection type of the second device. For example, the management device is directly connected to the first device and indirectly connected to the second device, and after performing a switching connection operation, is directly connected to the second device and indirectly connected to the first device.

In an embodiment, the direct connection is changed to an indirect connection, taking the first device as an example, it may be that the third device obtains the connection information through the management device and/or the first device, and the third device may also obtain the connection information through broadcast information. The third device connects to the management device according to the connection information, the management device disconnects from the first device, and/or the first device establishes a connection with a third device.

In an embodiment, the indirect connection is changed to a direct connection, taking the second device as an example, it may be that the second device obtains the connection information through a third device connected to the management device or broadcast information, the second device is connected to the management device according to the connection information, and/or the management device is disconnected from the third device.

If the operation information is an operation of establishing a connection, establish a connection between the first device and the second device.

In an embodiment, if the operation information is an operation of establishing a connection, a connection is established between the first device and the second device. For example, after the management device is respectively connected to the first device and the second device, the first device and the second device can also establish a connection through operations on the management device. Understandably, since the management device has respectively established connections with the first device and the second device, establishing the connection between the first device and the second device through the management device can avoid the process of connection verification (such as device security verification), and improve the efficiency of establishing a connection between the first device and the second device.

In an embodiment, after the connection is established between the first device and the second device, they can also perform cooperative work (e.g., jointly respond to an instruction issued by the management device). For example, the first device is a smart air conditioner, the second device is a smart watch. When the management device needs the smart air conditioner and the smart watch to work together, the connection between the smart air conditioner and the smart watch is established, and the management device sends instructions to the smart air conditioner and the smart watch to intelligently adjust the room temperature. For example, the smart watch feeds back the monitored use's sweating amount to the smart air conditioner in real time (whether the temperature is suitable affects the amount of sweating, if the temperature is low, the sweating amount is too little; if the temperature is high, the sweating amount is too much), for intelligent air conditioners to adjust the output power in real time according to the amount of sweating, and then control the room temperature, thus creating a comfortable environment for the user (especially when the user is sleeping, if the temperature is not suitable, it will greatly affect the user's sleep quality (such as difficulty falling asleep, being woken up by heat, etc.)), so as to make the smart air conditioner more intelligent.

If the operation information is a disconnection operation, disconnection setting information is output, and at least one of disconnection time, disconnection duration, and reconnection strategy according to the setting instruction is set.

In an embodiment, if the operation information is a disconnection operation, disconnection setting information is output, and at least one of disconnection time, disconnection duration, and reconnection strategy according to the setting instruction is set. The disconnection time is the moment, for example, the connection with the first device is disconnected at 16:00; the disconnection duration is the duration, for example, the connection is disconnected after 50 minutes after establishing the connection with the first device. The reconnection strategy is reconnection after the connection between devices is disconnected. For example, after disconnecting from the first device, it will automatically reconnect to the first device after 10 minutes. The reconnection strategy may also be that, after being disconnected from the first device, not reconnecting with the first device, but reconnecting with the second device.

In an embodiment, for devices that cannot establish connections and transmit data with multiple devices at the same time, in order to ensure the stability of the established connection, when establishing a connection, it is possible to set the attribute of whether the connection can be artificially interrupted. For example, for important data transmission tasks, its transmission priority is higher than that of unimportant data (relatively low in importance). When important data needs to be transmitted, the connection can be set to be uninterruptible, that is, it cannot be interrupted or canceled by human operation before the end of the important data transmission.

If the operation information is a setting operation, the setting information is output, and the corresponding setting is performed according to the setting instruction.

In an embodiment, if the operation information is a setting operation, the setting information is output, and the corresponding setting is performed according to the setting instruction. The setting instruction can act on the management device, the first device and/or the second device, for example, the management device, the first device and/or the second device display the same display page (such as the display page of the first device) through the setting instruction.

Make corresponding settings according to the setting instruction includes at least one of the following: turn on or off the system function, application function, and service of the first device (which may be foreground and/or background service, and may be system and/or application and/or third-party services), display at least one item in the interface; turn on or off at least one of the system function, application function, service (which may be foreground and/or background service, can be system and/or application and/or third party service), and display interface of the second device; set connection parameters between the management device and the first device and/or the second device; set working parameters of the first device and/or the second device.

In an embodiment, the make corresponding settings according to the setting instruction includes at least one of the following: turn on or off the system function, application function, and service of the first device (which may be foreground and/or background service, and may be system and/or application and/or third-party services), display at least one item in the interface; turn on or off at least one of the system function, application function, service (which may be foreground and/or background service, can be system and/or application and/or third party service), and display interface of the second device; set connection parameters between the management device and the first device and/or the second device; set working parameters of the first device and/or the second device.

The above connection parameters include at least one of the following:
connection rate, connection delay, connection duration, connection time, connection location, connection mode.

In an embodiment the connection parameters include at least one of connection rate, connection delay, connection duration, connection time, connection location, and connection mode.

In an embodiment, for the connection rate, the rate of data transmission can be limited by setting the connection rate, for example, if the connection rate is 100KB/s, the data transmission rate between connected devices is less than or equal to 100KB/s.

In an embodiment, for connection delay, the delay for data transmission between connected devices can be set. For example, if the connection delay is 5 seconds, it means that the data receiver will receive the data 5 seconds after the data sender sends the data.

In an embodiment, for the connection duration, after the connection reaches the connection duration, the connection is automatically disconnected. For example, if the connection duration is 5 minutes, the connection will be automatically disconnected after 5 minutes after the connection between the devices is established; or, after the setting is completed and the connection duration is reached, the corresponding device will automatically establish a connection.

In an embodiment, for the connection time, when the current time is the connection time, a connection is automatically established between corresponding devices. For example, if the connection time is 16:00, when the current time is 16:00, the corresponding device will automatically establish a connection.

In an embodiment, for the connection location, when the current location is the connection location, a connection is automatically established between corresponding devices. For example, if the connection location is home, after the user arrives at home, the corresponding device will automatically establish a connection.

In an embodiment, for the connection mode, there is at least one of two situations: if the connection is successful, the initiator device and the target device are no longer disconnected or disconnected at a fixed time or timed out; and/or if the connection fails, the initiating device and the target device are no longer connected or regularly connected or periodically connected.

In an embodiment, after the second device is successfully connected, the conditions for disconnection between the management device and the second device may be determined through a certain disconnection strategy. The disconnection strategy includes no longer disconnection or timing disconnection or timeout disconnection. In an embodiment, no longer disconnection means that the above-mentioned connection is continuously maintained before the management device receives a connection disconnection instruction from the user. Timing disconnection means that after a certain time is reached after the connection is established, the management device will automatically disconnect from the second device. For example, the management device will automatically disconnect from the second device if it reaches 5 minutes after the connection is established. Timeout disconnection means that after the connection is established, if there is no data exchange between the management device and the second device within a certain period of time, the management device will automatically disconnect from the second device. For example, after a certain data transmission is completed between the management device and the second device, if there is no data exchange between the management device and the second device within 6 minutes, the management device will automatically disconnect from the second device.
And/or
After the connection between the management device and the second device fails, the management device can continue to try to connect to the second device through the continuous connection strategy. The continuous connection strategy includes no longer connection or timing connection or periodic connection. No longer connection means that the management device does not try to connect to the second device before receiving the user's request connection instruction. Timing connection means that after the connection fails, after a certain time, the management device will automatically try to connect to the second device again. For example, if it reaches 5 minutes after the connection is established, the management device will automatically try to connect to the second device again. Periodic connection means that after the connection fails, the management device periodically tries to connect to the second device again. For example, after the connection fails, the management device tries to connect to the second device every 6 minutes.

It can be understood that the above corresponding device automatically establishes a connection for establishing a direct connection with the currently indirectly connected second device.

The above working parameters include at least one of the following:
device speed, device power, device brightness, device volume, device driving path, device working mode.

In an embodiment, the working parameters include at least one of device speed, device power, device brightness, device volume, device driving path, and work mode. When the first device and/or the second device is a sweeping robot, the working parameter may be the cleaning path of the sweeping robot. When the first device and/or the second device is a vehicle terminal, the working parameter may be vehicle speed. When the first device and/or the second device are smart TVs, the working parameters may be brightness and/or volume of the TV. When the first device and/or the second device is an intelligent air conditioner, the working parameter may be the working power of the air conditioner. When the first device and/or the second device is a smart speaker, the working parameter may be the working mode of the speaker (such as music playing mode, sleeping mode, accompanying mode, etc.).

If the operation information is a transfer information operation, at least one information on the first device is transferred to the second device; and/or at least one information on the second device is transferred to the first device; and/or at least one information on the management device is transferred to the first device and/or the second device.

In an embodiment, if the operation information is a transfer information operation, at least one information on the first device is transferred to the second device; and/or at least one information on the second device is transferred to the first device; and/or at least one information on the management device is transferred to the first device and/or the second device. The transfer information includes transferring at least one of system functions, application functions, and display interfaces. For example, the audio playback function of the management device is transferred to the first device for playback, and/or the display interface of the management device is transferred to the second device for playback, and/or the control function of the first device is transferred to the second device for control.

If the above-mentioned first control information and/or the second control information includes the corresponding device information, updating the first control information and/or the second control information includes at least one of the following: differentially displaying the corresponding device information; hiding the corresponding device information; outputting prompt information corresponding to the control result.

If the first control information and/or the second control information includes the corresponding device information, the first control information and/or the second control information is updated by differentially displaying the corresponding device information and/or hiding the corresponding device information. The corresponding device information is device information corresponding to the operation information.

Differential displaying includes at least one of the following: adjusting the display size of the corresponding device information, for example, increasing the display font size of the corresponding device information; adjusting the display position of the corresponding device information, for example, adjusting the display position of the corresponding device information to the top of the device list corresponding to the corresponding device information; adjusting the display color of the corresponding device information, for example, adjusting the font display color of the corresponding device information to be different from the font display color of other device information; adjusting the display font of the corresponding device information, such as bolding or italicizing the text of the corresponding device information; adjusting the display animation of the corresponding device information, for example, adjusting the display animation of the corresponding device information from static display to dynamic display (such as heartbeat display).

If the first control information and/or the second control information includes application information and/or function information and/or operation interface information of the corresponding device, the control result is fed back by outputting prompt information corresponding to the control result.

The output prompt information includes at least one of the following: feeding back connection results, for example, the first device has been changed to an indirect connection, the second device has been disconnected for 1 hour, the first device has established a connection with the second device, etc.; feeding back setting results, for example, the first device has started the music playback function, the connection delay of the first device has been adjusted to 20ms, and the playback volume value of the second device has been adjusted to 30.

The ways of outputting prompt information may include: text, sound, screen, etc., for example, displaying a text prompt of disconnection through a pop-up box on the screen.

If the first control information and/or the second control information include corresponding application information and/or function information and/or service information, updating the first control information and/or the second control information includes at least one of the following:
turning on or off the corresponding application and/or function and/or service;
increasing or decreasing the parameter value of the corresponding application and/or function and/or service.

If the first control information and/or the second control information includes corresponding application information and/or function information and/or service information, the first control information and/or the second control information are updated by opening or closing the corresponding application and/or function, and/or increasing or decreasing the parameter value of the corresponding application and/or function. In an embodiment, the corresponding application information and/or function information is application information and/or function information corresponding to the operation information.

The parameter value is a parameter value corresponding to a corresponding application and/or function, for example, adjusting a playback volume of a music application.

If the first control information and/or the second control information include corresponding operation interface information, updating the first control information and/or the second control information includes at least one of the following:
adjusting the display parameters of the corresponding operation interface;
transferring the operation interface corresponding to the first control information to the device corresponding to the second control information;
transferring the operation interface corresponding to the second control information to the device corresponding to the first control information;
closing or hiding or suspending or fixing or reducing or enlarging the corresponding operation interface.

If the first control information and/or the second control information includes corresponding operation interface information, the way of updating the first control information and/or the second control information includes at least one of the following: adjusting the display parameters of the corresponding operation interface; transferring the operation interface corresponding to the first control information to the second control information corresponding device, and displaying the operation interface corresponding to the first control information by the second control information corresponding device; transferring the operation interface corresponding to the second control information to the device corresponding to the first control information, and displaying the operation interface corresponding to the second control information by the device corresponding to the first control information; closing or hiding the corresponding operation interface. When there are multiple operation interfaces, the corresponding operation interface information is the operation interface information corresponding to the operation information.

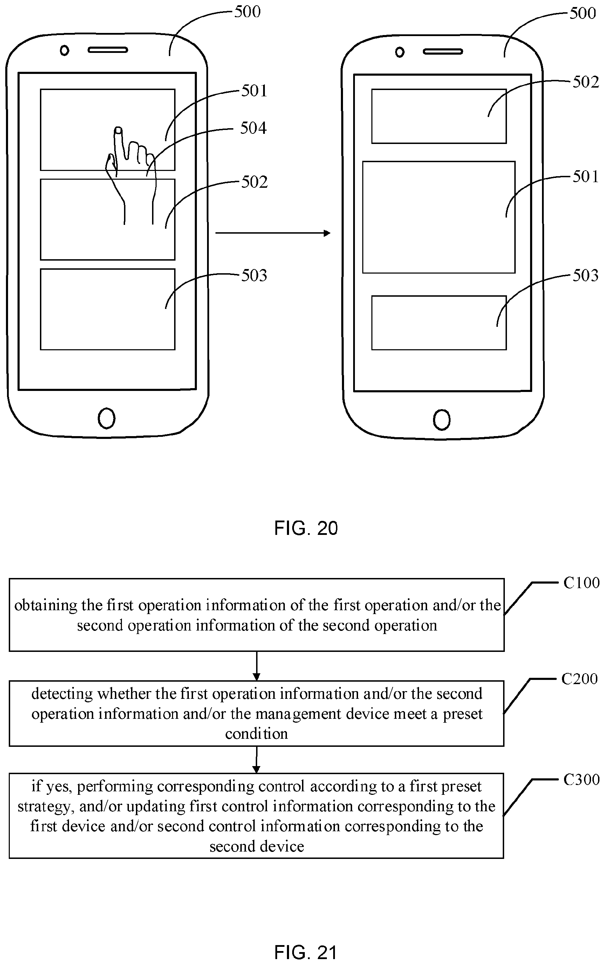

In an embodiment, adjusting the display parameters of the corresponding operation interface includes at least one of the following: adjusting the display size of the corresponding operation interface, for example, increasing the display ratio of the corresponding operation interface; adjusting the display position of the corresponding operation interface, for example, adjusting the display position of the corresponding operation interface to the center of the display screen of the management device and enlarging, for example, referring to FIG. 20, 500 is a management device, 501, 502 and 503 are different operation interfaces, before receiving operation information, each operation interface can be displayed with the same display size, after receiving the operation information input by the user through 504, the display position of the operation interface 501 is adjusted to the central position of the display screen of the management device and enlarged for display; adjusting the display color of the corresponding operation interface, for example, adjusting the font display color in the corresponding operation interface to be different from the font display color in other operation interface information; adjusting the display font in the corresponding operation interface, such as bolding or italicizing the text in the corresponding operation interface; adjusting the display animation of the corresponding operation interface, for example, adjusting the display animation of the corresponding operation interface from a static display to a dynamic display (such as zooming in and out in a certain period).

The method further includes: after the closing or hiding or suspending or fixing or reducing or enlarging the corresponding operation interface, if receiving a preset operation, the displaying the corresponding operation interface again.

In an embodiment, the preset operation includes a rollback instruction operation, an operation of calling out an operation interface, etc., and other operations which can display the corresponding operation interface again after the corresponding operation interface is closed or hidden. That is, after the corresponding operation interface is closed or hidden, if a preset operation is received, the corresponding operation interface may be displayed again. For example, if the corresponding operation interface is closed or hidden due to a user's misoperation, the influence caused by the misoperation can be avoided by inputting a preset operation (for example, a series of complex operations are required to redisplay the corresponding operation interface).

In an embodiment, the method further includes:
Operation C30, in response to the occurrence of a first preset event, switching a first preset strategy to a second preset strategy for control.

In an embodiment, the first preset strategy and the second preset strategy may be the same or different. For example, the preset event is an incoming call while playing music through the smart earphone, and the second preset strategy is not to disconnect the smart earphone when the current time is the disconnection time. When the preset event is that the power of the smart earphone is too low, the second preset strategy is not to establish a connection with the smart earphone when the current time is the connection time. When the preset event is that the battery of the smart earphone is too low, the first preset strategy is to establish a connection with the smart earphone when the current time is the connection time. The second preset strategy is also to establish a connection with the smart earphone when the current time is the connection time.

As a specific application of this embodiment, the management device may be a user's smart phone, the first device may be a smart TV, and the second device may be a smart speaker. The smart TV is directly connected to the smart phone, the smart speaker is connected to the smart TV to provide it with better audio effects, and the smart speaker is also indirectly connected to the smart phone through the smart TV. When a user receives an incoming call while watching a video on a smartphone, the user can open the control interface of the smart phone, and the control interface respectively outputs the first control window and the second control window corresponding to the smart TV and the smart speaker, the user can operate the first control window and the second control window respectively, cast the video being played on the smart phone to the smart TV and play it according to the first preset strategy, and transfer the incoming call to the smart speaker, that is, to establish a direct connection between the smartphone and the smart speaker, so that the user can watch videos and make calls at the same time. When it is detected that the incoming call has ended, the smart phone is controlled according to the second preset strategy, so that the smart speaker no longer receives audio data from the smart phone, but instead receives audio data from the smart TV, that is, the smart speaker returns to the state of indirect connection with the smart phone. The above method realizes more intelligent and flexible functional cooperation and control interaction between devices.

In this embodiment, the processing method includes: C10, outputting at least one first control information and at least one second control information, the first control information corresponds to a first device directly connected to the management device, and the second control information corresponds to a second device indirectly connected to the management device; C20, receiving operation information, performing corresponding control according to the operation information and/or a first preset strategy, and/or updating the first control information and/or the second control information. After the management device is connected with the first device and/or the second device, outputting corresponding first control information and/or second control information and receiving operation information corresponding to the first control information and/or second control information, so as to execute corresponding control through the operation information and the first preset strategy, which avoids that after the management device is connected with the first device and/or the second device, only simple control interaction can be performed, so that the control interaction between the devices after establishing connection with each other is more intelligent, convenient and fast. In addition, since it can support the control interaction between directly connected devices and indirectly connected devices, the function is more powerful, and the experience is more intelligent, convenient and fast.

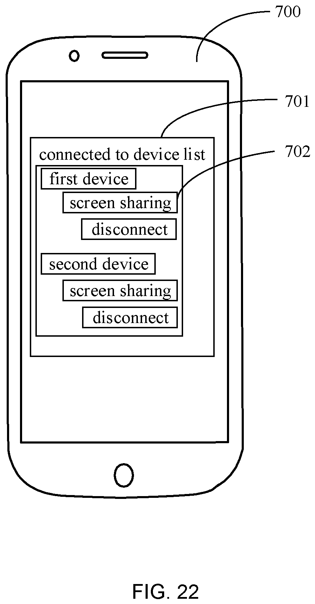

As shown in FIG. 21 and FIG. 22, in another embodiment of the present application, the process of user interface (III) responding to user operations is described. Although a logical order is shown in the flowcharts, in some cases the steps shown or described may be performed in an order different from that shown or described herein. The processing method can be applied to management devices, including but not limited to personal computers and smart phones. For the convenience of description, the following steps are omitted to describe the processing method of the execution subject, and the processing method includes:
Operation C100, obtaining the first operation information of the first operation and/or the second operation information of the second operation, the first operation information corresponds to a first device directly connected to the management device, and the second operation information corresponds to a second device indirectly connected to the management device.

In an embodiment, the first operation information of the first operation, or the second operation information of the second operation, or the first operation information of the first operation and the second operation information of the second operation input by the user are obtained. The first operation information corresponds to the first device directly connected to the management device, and the second operation information corresponds to the second device indirectly connected to the management device. The management device, the first device and the second device include any one of terminal devices (such as smart phones, PAD (Portable Android Device, Tablet PC), etc.), wearable smart devices (such as smart watches, smart bracelets, smart earphones, etc.), smart home devices (such as smart TVs, smart speakers, etc.) and Internet of Vehicles devices (such as smart cars, vehicle terminals, etc.).

Operation C200, detecting whether the first operation information and/or the second operation information and/or the management device meet a preset condition.

Operation C300, if yes, performing corresponding control according to a first preset strategy, and/or updating first control information corresponding to the first device and/or second control information corresponding to the second device.

In an embodiment, whether the first operation information and/or the second operation information and/or the management device meets a preset condition is detected. If the first operation information and/or the second operation information and/or the management device meets a preset condition, corresponding control according to the first preset strategy is performed, and/or the first control information corresponding to the first device and/or the second control information corresponding to the second device are updated. If the first operation information and/or the second operation information and/or the management device does not meet a preset condition, then there is no need to perform corresponding control and no need to update the first control information corresponding to the first device and/or the second control information corresponding to the second device.

The operation C300 includes at least one of the following: changing the first device to an indirect connection, and/or changing the second device to a direct connection; establishing a connection between the first device and the second device; outputting disconnection setting information, and setting at least one of disconnection time, disconnection duration, and reconnection strategy according to the setting instruction; output setting information, and making corresponding settings according to setting instructions; transferring at least one information on the first device to the second device; and/or transferring at least one information on the second device to the first device; and/or transferring at least one information on the management device to the first device and/or the second device.

In an embodiment, the first device is changed to an indirect connection, and/or, the second device is changed to a direct connection. For example, the management device is connected to the first device, and the first device is connected to the second device, that is, directly connected to the first device and indirectly connected to the second device, and after the switching connection operation is performed, directly connected to the second device and indirectly connected to the first device.

In an embodiment, changing the first device to an indirect connection may be that the third device obtains the connection information through the management device and/or the first device. The third device may also obtain connection information through broadcast information, the third device connects to the management device according to the connection information. The management device disconnects from the first device, and/or the first device establishes a connection with a third device.

In an embodiment, changing the second device to a direct connection may be that the second device obtains connection information through a third device connected to the management device or through broadcast information. The second device is connected to the management device according to the connection information, and/or the management device is disconnected from the third device.

In an embodiment, for establishing a connection between the first device and the second device, after connecting to the first device and the second device respectively, the first device and the second device can also establish a connection through operations on the management device. It can be understood that since the management device has respectively established connections with the first device and the second device, establishing the connection between the first device and the second device through the management device can avoid the process of connection verification (such as device security verification), and improve the efficiency of establishing a connection between the first device and the second device.

In an embodiment, after the connection is established between the first device and the second device, they can also work together (for example, jointly respond to an instruction issued by the management device). For example, the first device is a smart air conditioner, the second device is a smart watch. When the management device needs the smart air conditioner and the smart watch to work together, the connection between the smart air conditioner and the smart watch is established, and the management device sends instructions to the smart air conditioner and the smart watch to intelligently adjust the room temperature. For example, the smart watch feeds back the monitored user's sweating amount to the smart air conditioner in real time (whether the temperature is suitable affects the amount of sweating, and the temperature is low, and the amount of sweating is too little. If the temperature is high, the amount of sweating will be too much), so that the intelligent air conditioner can adjust the output power in real time according to the amount of sweating, and then control the room temperature to create a comfortable environment for the user (especially when the user sleeps. If the temperature is not suitable, it will greatly affect the user's sleep quality (such as difficulty falling asleep, being woken up by heat, etc.), so as to make the smart air conditioner more intelligent.

In an embodiment, for outputting disconnection setting information, and at least one of disconnection time, disconnection duration, and reconnection strategy is set according to the setting instruction. The disconnection time is a moment, for example, disconnecting from the first device at 16:00, and the disconnection duration is a duration, for example, after establishing a connection with the first device, the connection is disconnected after 50 minutes, and the reconnection strategy is reconnection after the connection between devices is disconnected, for example, after disconnecting from the first device, automatically reconnect with the first device after 10 minutes. The reconnection strategy may also be, after being disconnected from the first device, not to reconnect with the first device, but to reconnect with the second device.

In an embodiment, for devices that cannot establish connections and transmit data with multiple devices at the same time, in order to ensure the stability of the established connection, when establishing a connection, it is also possible to set the attribute of whether the connection can be artificially interrupted. For example, for important data transmission tasks, its transmission priority is higher than that of unimportant data (relatively low in importance). When important data needs to be transmitted, the connection can be set to be uninterruptible, that is, it cannot be interrupted or canceled by human operation before the end of the important data transmission.

In an embodiment, for the output setting information, and make corresponding settings according to the setting instructions, for example, when the user needs to set the brightness of the first device, the user can directly implement the brightness setting of the first device through the management device without directly operating the first device.

In an embodiment, the setting instruction can act on the management device, the first device and/or the second device. For example, the management device, the first device and/or the second device display the same display page (such as the display page of the first device) through setting instructions.

The above-mentioned corresponding settings are performed according to the setting instructions, including at least one of the following: opening or closing at least one of the system function, application function, service (which can be foreground and/or background services, system and/or application and/or third party services), and display interface of the first device; turning on or off at least one of the system function, application function, service (which can be foreground and/or background services, system and/or application and/or third party services), and display interface of the second device; setting the connection parameters between the management device and the first device and/or the second device; setting the working parameters of the first device and/or the second device.

In an embodiment, make corresponding settings according to the setting instructions includes at least one of the following: turning on or off at least one of the system function, application function, service (foreground and/or background service, system and/or application and/or third-party service), and display interface of the first device; turning on or off at least one of the system function, application function, service (foreground and/or background service, system and/or application and/or third-party service), and display interface of the second device; setting the connection parameters between the management device and the first device and/or the second device; setting the working parameters of the first device and/or the second device.

The above connection parameters include at least one of the following:
connection rate, connection delay, connection duration, connection time, connection location, connection mode.

In an embodiment, the connection parameters include at least one of connection rate, connection delay, connection duration, connection time, connection location, and connection mode.

In an embodiment, for the connection rate, the rate of data transmission can be limited by setting the connection rate, for example, if the connection rate is 100KB/s, the data transmission rate between connected devices is less than or equal to 100KB/s.

In an embodiment, for the connection delay, the delay in data transmission between connected devices can be set. For example, if the connection delay is 5 seconds, it means that the data receiver will receive the data 5 seconds after the data sender sends the data.

In an embodiment, for the connection duration, after the connection reaches the connection duration, the connection is automatically disconnected. For example, if the connection duration is 5 minutes, the connection will be automatically disconnected after 5 minutes after the connection between the devices is established; or, after the setting is completed and the connection duration is reached, the corresponding device will automatically establish a connection.

In an embodiment, for the connection time, when the current time is the connection time, the corresponding devices automatically establish a connection, for example, when the connection time is 16:00, when the current time is 16:00, the corresponding devices automatically establish the connection.

In an embodiment, for the connection location, when the current location is the connection location, the connection between corresponding devices is automatically established, for example, the connection location is home, and after the user arrives at home, the corresponding device automatically establishes the connection.

In an embodiment, for the connection mode, there is at least one of two situations: if the connection is successful, the initiator device and the target device are no longer disconnected or disconnected at a fixed time or timed out; and/or
if the connection fails, the initiator device and the target device are no longer connected or regularly connected or periodically connected.

In an embodiment, after the second device is successfully connected, the conditions for disconnection between the management device and the second device can be determined through a certain disconnection strategy. The disconnection strategy includes no more disconnection or timing disconnection or timeout disconnection. No more disconnection means that the management device continues to maintain the above connection until it receives the user's connection disconnection instruction. Timing disconnection means that after a certain time is reached after the connection is established, the management device will automatically disconnect from the second device. For example, if the connection is established and reaches 5 minutes, the management device will automatically disconnect from the second device. Timeout disconnection means that after the connection is established, if there is no data exchange between the management device and the second device within a certain period of time, the management device will automatically disconnect from the second device. For example, after a certain data transmission is completed between the management device and the second device, if there is no data exchange between the management device and the second device within 6 minutes, the management device will automatically disconnect from the second device.
And/or
After the connection between the management device and the second device fails, the management device can continue to try to connect to the second device through the continuous connection strategy. The continuous connection strategy includes no more connection or timing connection or periodic connection. No more connection means that the management device does not try to connect to the second device until the management device receives the user's request connection instruction. Timing connection means that after the connection fails, after a certain time, the management device will automatically try to connect to the second device again. For example, if it reaches 5 minutes after the connection is established, the management device will automatically try to connect to the second device again. Periodic connection means that after the connection fails, the management device periodically tries to connect to the second device again. For example, after the connection fails, the management device tries to connect to the second device every 6 minutes.

It can be understood that the above corresponding device automatically establishes a connection for establishing a direct connection with the currently indirectly connected second device.

The above working parameters include at least one of the following:
device speed, device power, device brightness, device volume, device driving path, device working mode.

In an embodiment, the working parameters include at least one of device speed, device power, device brightness, device volume, device driving path, and device working mode.

For example, when the first device and/or the second device is a sweeping robot, the working parameter may be the cleaning path of the sweeping robot. When the first device and/or the second device is a vehicle terminal, the working parameter may be vehicle speed. When the first device and/or the second device are smart TVs, the working parameters may be brightness and/or volume of the TV. When the first device and/or the second device is an intelligent air conditioner, the working parameter may be the working power of the air conditioner. When the first device and/or the second device is a smart speaker, the working parameter may be the working mode of the speaker (such as music playing mode, sleeping mode, accompanying mode, etc.).

In an embodiment, at least one information on the first device is transferred to the second device; and/or at least one information on the second device is transferred to the first device; and/or at least one information on the management device is transferred to the first device and/or the second device. The transfer information includes transferring at least one of system functions, application functions, and display interfaces, such as transferring the audio playback function of the management device to the first device for playback, and/or transferring the display interface of the management device to the second device for playback, and/or transferring the control function of the first device to the second device for control.

In an embodiment, this embodiment can also include:
operation C400, in response to the occurrence of a preset event, switching the first preset strategy to the second preset strategy for control.

In an embodiment, the first preset strategy and the second preset strategy may be the same or different. For example, when the preset event is an incoming call while playing music through the smart earphone, the second preset strategy is not to disconnect the smart earphone when the current time is the disconnection time. When the preset event is that the power of the smart earphone is too low, the second preset strategy is not to establish a connection with the smart earphone when the current time is the connection time. When the preset event is that the power of the smart earphone is too low, the first preset strategy is to establish a connection with the smart earphone when the current time is the connection time, and the second preset strategy is also to establish a connection with the smart earphone when the current time is the connection time.

In an embodiment, the processing method further includes:
operation C500, if the preset condition is not met, not responding to the first operation information and/or the second operation information, and/or outputting prompt information.

In an embodiment, detecting whether the first operation information and/or the second operation information and/or the management device meets the preset condition. If the first operation information and/or the second operation information and/or the management device meets the preset condition, a corresponding control is performed according to the first preset strategy. If the first operation information and/or the second operation information and/or the management device does not meet the preset condition, the corresponding control is performed according to other strategies, or do not respond to the first operation information and/or the second operation information, and/or output prompt information (for example, prompting the user to operate incorrectly or fail to operate). The introduction of preset conditions is to avoid user misoperation. It can be understood that a misoperation is an operation generated by the user without the intention of the operation, that is, the instruction corresponding to the operation does not need to be performed.

The first operation corresponding to the first device information and the second operation corresponding to the second device information are two independent operations, or belong to two parts of the same operation.

In an embodiment, the first operation corresponding to the first device information and the second operation corresponding to the second device information are two independent operations, or belong to two parts of the same operation. It can be understood that user operations can be combined operations (the same operation is divided into two parts) or independent operations. For example, for a combined operation, it is an operation that the user wants to control between devices; for an independent operation, it is an operation that the user wants to control a certain device.

In an embodiment, if the first operation and the second operation are two independent operations, the first operation or the second operation is any one of click, double click, heavy press, light press, long press, short press kind.

In an embodiment, if the first operation and the second operation are two independent operations, the first operation or the second operation is any one of click, double click, heavy press, light press, long press, and short press.

It is understandable that click, double click, heavy press, light press, long press, and short press are for operations in a certain area of the UI, such as an operation for a region corresponding to a certain device, or an operation for a region corresponding to a function of a certain device, etc. In an embodiment, for a double-click, it is two clicks within a preset time interval. The preset time is generally relatively short, such as 0.5 seconds. For heavy presses and light presses, it is relative to the user's pressing force. The pressure value corresponding to the pressing force value can be obtained through the pressure sensor, and the pressure value is compared with the first preset pressure value threshold to determine whether the user's operation is a heavy press or a light press. For long press and short press, it is for the first preset press time threshold. For example, if the first preset press time threshold is 1 second, the user's press time is less than 1 second as a short press, and greater than or equal to 1 second as a long press.

It is understandable that compared with short press, the user press time is shorter; heavy press, light press, long press, short press can be combined to determine. For example, the user operation can be a long press or a short press at the same time as a heavy press. Generally, for the convenience of the user, a combination of a heavy press and a long press, and a combination of a light press and a short press can be used.

In an embodiment, if the first operation and the second operation belong to two parts of the same operation, the same operation is any one of sliding, dragging, air gesture, voice control, and visual control.

In an embodiment, if the first operation and the second operation belong to two parts of the same operation, the same operation is any one of sliding, dragging, air gesture, voice control, and visual control.

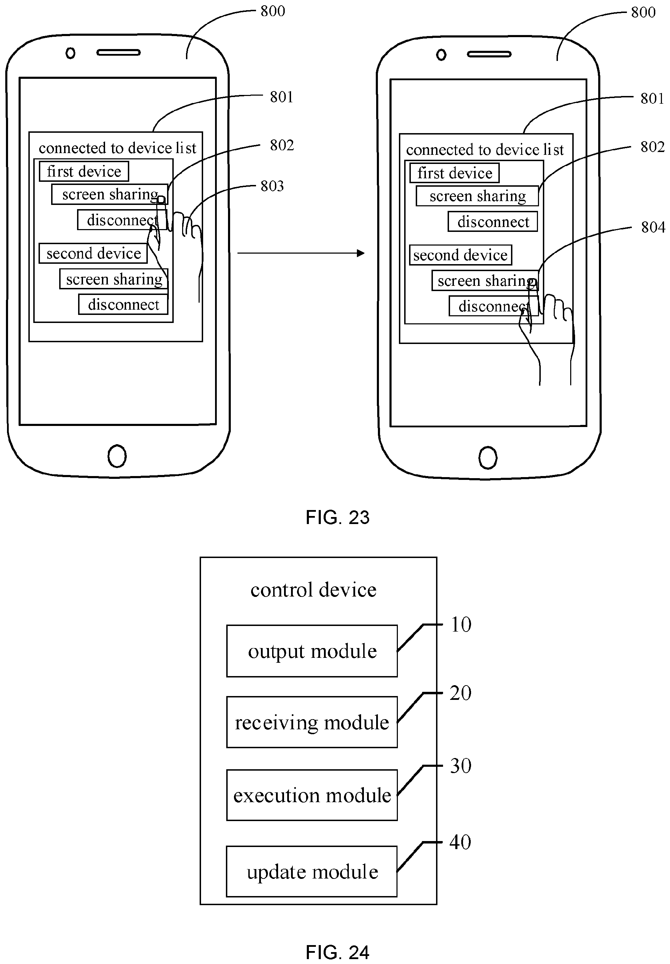

In an embodiment, sliding, dragging, air gestures, voice control, and visual control are aimed at operations in a large area of the UI, for example, operations on corresponding areas between devices, or operations on areas corresponding to functions between devices. For example, referring to FIG. 23, by dragging the "screen sharing" button in the first device area in the UI, the screen sharing between the first device and the second device is realized, and the currently displayed page of the first device is used as the shared content. In an embodiment, after the user selects the "screen sharing" button 502 of the first device by hand 503, drag to the position of the "screen sharing" button 504 of the second device and the hand 503 is released to realize screen sharing between the first device and the second device, and the currently displayed page of the first device is used as the shared content.

In an embodiment, for air gestures, it is an operation instruction that does not need to touch the device screen, for example, the user's palm hovers over the device screen for a certain period of time to turn the device on/off. For voice control, it is realized through the voice input by the user. For example, the voice input by the user is "the first device shares the screen of the second device", that is, the screen sharing is realized between the first device and the second device, and the currently displayed page of the second device is used as the shared content. For visual control, it is generally achieved by detecting the rotation of the eyeball (rotation direction). The visual control input by the user is determined by detecting the transition between the focus points of the eyes, for example, the user's eyes focus on the "screen sharing" button in the first device area in the UI, and then the eyes turn to the second device area in the UI, screen sharing is implemented between the first device and the second device, and the currently displayed page of the first device is used as the shared content.

The first operation belongs to the start operation of the same operation, and the second operation belongs to the end operation of the same operation.

In an embodiment, when the first operation and the second operation belong to two parts of the same operation, the first operation belongs to the start operation of the same operation, and the second operation belongs to the end operation of the same operation. Alternatively, the second operation belongs to the start operation of the same operation, and the first operation belongs to the end operation of the same operation. For example, the user starts to slide and maintains the sliding state as the first operation, that is, the start operation of the same operation, and the user ends the slide as the second operation, that is, the end operation of the same operation.

The above-mentioned preset conditions are met, including at least one of the following:
The management device is a control center;
The management device is in a preset mode;
The current interface of the management device is in an operable state;
Output the authentication information and pass the authentication;
Receive preset operation instructions;
The trigger area of the first operation and/or the second operation is a preset area; the trigger mode of the first operation and/or the second operation is a preset mode;
At least one of the first number of operations, or duration, or pressure value meets a first preset requirement;
At least one of the second number of operations, duration or pressure value meets a second preset requirement;
At least one of the first numbers of operations and/or the second number of operations, or time interval or location information meets a third preset requirement.

In an embodiment, meeting the first preset rule includes at least one of the following: the management device is a control center, it can be understood that the data processing center corresponding to the UI obtains the first operation information and/or the second operation information only as a control center; the management device is in a preset mode; the interface of the management device is in an operable state; the authentication information is output and passed; the preset operation instruction is received; the first operation and/or the second operation trigger area is a preset area; the first operation and/or the second operation trigger mode is a preset mode; the first number of operations, or the duration, or the pressure value meets the first preset requirement; the second number of operations, or duration or pressure value meets the second preset requirement; the first number of operations and the second number of operations, or the time interval or the location information meet the third preset requirement.

In an embodiment, the preset modes include smart mode, shortcut operation mode, automatic switching mode and other modes for performing functions related to the control center.

In an embodiment, the interface being in an operable state may include that the device is in an unlocked state.

In an embodiment, for the authentication information, it can ensure that the user currently operating the device is an authorized user.

In an embodiment, for the preset operation instruction, it is equivalent to a second confirmation instruction, including a preset gesture instruction, a preset voice instruction, a preset combination key instruction, and the like.

In an embodiment, the first operation and/or the second operation need to occur within a preset area. It can be understood that only the operations within the preset area are effective operations, for example, the control-free area in the UI, that is, the blank area.

In an embodiment, the first operation and/or the second operation is triggered in a preset manner. It can be understood that only operations triggered in a preset manner are valid operations, and the judgment process may be to match the first operation and/or the second operation with the preset operation set. If the matching is successful, it means that the first operation and/or the second operation are valid operations, that is, the first operation and/or the second operation are triggered in a preset way. For example, when the first operation and/or the second operation is an air gesture, the user's palm hovers above the screen for 1 second, and the corresponding effective operation requires the user's palm to hover above the screen for 2 seconds, then the air gesture is an invalid operation.

In an embodiment, when the first operation is double-clicking, the first preset requirement is met, and when it is detected that the first operation is multiple (more than two) taps on the screen, the first operation does not meet the first preset requirement. The first preset requirement is met when the pressing duration of the first operation is greater than or equal to the second preset pressing time threshold, and the first preset requirement is not met when the pressing duration of the first operation is less than the second preset pressing time threshold. The first operation is to meet the first preset requirement when the pressure value is greater than or equal to the second preset pressure value threshold, and not to meet the first preset requirement when the pressure value of the first operation is smaller than the second preset pressure value threshold. The second preset pressing time threshold is smaller than the first preset pressing time threshold; the second preset pressure threshold is smaller than the first preset pressure threshold.

In an embodiment, when the second operation is double-clicking, the second preset requirement is met, and when the second operation is detected as multiple (more than two) taps on the screen, the second operation does not meet the second preset requirement. The second preset requirement is met when the pressing duration of the second operation is greater than or equal to the third preset pressing time threshold, and the second preset requirement is not met when the pressing duration of the second operation is less than the third preset pressing time threshold. The second operation is to meet the second preset requirement when the pressure value is greater than or equal to the third preset pressure value threshold, and not to meet the second preset requirement when the pressure value of the second operation is smaller than the third preset pressure value threshold. The third preset pressing time threshold may be the same as or different from the second preset pressing time threshold, and if they are different, the third preset pressing time threshold needs to be smaller than the first preset pressing time threshold. The third preset pressure threshold may be the same as or different from the second preset pressure threshold, and if they are different, the third preset pressure threshold needs to be smaller than the first preset pressure threshold.

In an embodiment, the number of times of the first operation and the second operation needs to meet the third preset requirement. The first operation and the second operation are independent operations, and when both the first operation and the second operation are double-click, the third preset requirement is met. When it is detected that both the first operation and the second operation tap the screen multiple times (greater than twice), the first operation and the second operation do not meet the third preset requirement. The time interval between the first operation and the second operation needs to meet the third preset requirement. The first operation and the second operation are combined operations. When the first operation is the initial operation, after the first operation is executed, it is detected that the user enters the second operation when the time interval is less than or equal to the preset time interval threshold, the first operation and the second operation meet the third preset requirement, and if the user inputs the second operation instruction when the time interval is greater than the preset time interval threshold, the first operation and the second operation do not meet the third preset requirement. For example, after the user triggers the first operation by mistake, when the second operation is triggered by mistake after a long time (greater than the preset time interval threshold), the first operation and the second operation do not meet the third preset requirement. The location information of the first operation and the second operation needs to meet the third preset requirement, the first operation and the second operation are combined operations. When the first operation is the initial operation, after the first operation is executed in the preset area, when the location information of the second operation is not in the preset area (for example, the location of the second operation is a blank area), the first operation and the second operation do not meet the third preset requirement, and when the location information of the second operation is in the preset area, the first operation and the second operation meet the third preset requirement.

The method further includes at least one of the following:
the first device is directly or indirectly connected to the management device;
the second device is directly or indirectly connected to the management device.

In an embodiment, the connection type includes direct connection and indirect connection, the first device may be directly or indirectly connected to the management device, and the second device may also be directly or indirectly connected to the management device. For example, the first device is directly connected to the management device, the first device is directly connected to the second device, and the management device is indirectly connected to the second device.

The content of the first control information and/or the second control information includes at least one of the following:
device information of the first device and/or the second device;
application information and/or function information and/or service information of the first device;
application information and/or function information and/or service information of the second device;
the operation interface information of the first device and/or the operation interface information of the second device.

In an embodiment, the content of the first control information and/or the second control information includes: device information of the first device and/or the second device; application information and/or function information of the first device; application information and/or function information of the second device; at least one of the first device operation interface information and/or the second device operation interface information.

The device information of the first device and/or the second device includes information such as a device name, a device identifier, etc., which are used to facilitate users to distinguish between devices. For example, if the device name is "smart TV", the user can know that the device is a smart TV through the device name, and will not mistake the smart TV for a smart phone. The device information also includes device address, such as Bluetooth address, WIFI address and other information used for data exchange between devices, which is the unique identity information of each device.

For the application information and/or function information of the first device, the application information of the first device includes system application (such as camera, recording) information (such as application name, application icon), paid application (such as game application, office application) information (such as application name, application icon), or the like. The function information of the first device includes functions in applications of the first device, such as taking pictures, recording videos, playing audio, creating new files, and the like.

For the application information and/or function information of the second device, the application information of the second device includes system application (such as camera, recording) information (such as application name, application icon), paid application (such as game application, office application) information (such as application name, application icon), or the like. The function information of the second device includes the functions in the application of the first device, such as taking pictures, video recording, playing audio, creating new files, and so on.

For the operation interface information of the first device and/or the operation interface information of the second device, the operation interface information includes the interface currently displayed by the device, which can realize remote control of the first device and/or the second device.

The output form of the above-mentioned first control information and/or the above-mentioned second control information includes at least one of the following:
one device corresponds to one window or page or control or card;
all devices are correspondingly displayed in the same window or page or control or card;
the first control information is displayed in a first display area or a first display screen;
the second control information is displayed in a second display area or a second display screen;
the first control information and/or the second control information are simultaneously displayed in a display area or a display screen.

In an embodiment, the output form of the first control information and/or the second control information includes at least one of the following: one device corresponds to one window or page or control or card; all devices are correspondingly displayed in the same window or page or control or card; the first control information is displayed in the first display area or the first display screen; the second control information is displayed in the second display area or the second display screen; the first control information and/or the second control information are simultaneously displayed in a display area or a display screen.

In an embodiment, window generally refers to a display method that does not completely occupy the entire screen for display, such as a pop-up box. Referring to FIG. 19, 400 is a smart phone, 401 is a pop-up box; and for a page, it generally occupies the entire screen for display, such as a web page of a browser. For controls, it generally refers to sub-windows, such as list boxes, edit boxes, and so on. For the display and window or page or control or card, it determines the expression form of the first control information and/or the second control information, that is, the presented shape.

For the display area and the display screen, what is determined is the display position of the first control information and/or the second control information. In an embodiment, the display area is part of the display screen. It can be understood that the management device may have one or more display screens.

In an embodiment, the management device is a data processing center, for example, obtaining the first control information from the first device.

If the first control information and/or the second control information includes corresponding device information, updating the first control information and/or the second control information includes at least one of the following: differentially displaying the corresponding device information; hiding the corresponding device information; outputting prompt information corresponding to the control result.

In an embodiment, if the first control information and/or the second control information includes the corresponding device information, the first control information and/or the second control information are updated by differentially displaying the corresponding device information and/or hiding the corresponding device information. The corresponding device information is device information corresponding to the operation information.

In an embodiment, the differentiated display includes at least one of the following: adjusting the display size of the corresponding device information, for example, increasing the display font size of the corresponding device information; adjusting the display position of the corresponding device information, for example, adjusting the display position of the corresponding device information to the top of the device list corresponding to the corresponding device information; adjusting the display color of the corresponding device information, for example, adjusting the font display color of the corresponding device information to be different from the font display color of other device information; adjusting the display font of the corresponding device information, such as bolding or italicizing the text of the corresponding device information; adjusting the display animation of the corresponding device information, for example, adjusting the display animation of the corresponding device information from static display to dynamic display (such as heartbeat display).

In an embodiment, if the first control information and/or the second control information includes application information and/or function information and/or operation interface information of the corresponding device, the control result is fed back by outputting prompt information corresponding to the control result.

In an embodiment, the output prompt information includes at least one of the following: feeding back connection results, for example, the first device has been changed to an indirect connection, the second device has been disconnected for 1 hour, the first device has established a connection with the second device, etc.; feeding back setting results, for example, the first device has started the music playback function, the connection delay of the first device has been adjusted to 20ms, and the playback volume value of the second device has been adjusted to 30.

In an embodiment, the manner of outputting the prompt information may include: text, sound, screen, etc., for example, displaying a text prompt of disconnection through a pop-up box on the screen.

If the first control information and/or the second control information include corresponding application information and/or function information and/or service information, updating the first control information and/or the second control information includes at least one of the following:
opening or closing the corresponding application and/or function and/or service;
increasing or decreasing the parameter value of the corresponding application and/or function and/or service.

In an embodiment, if the first control information and/or the second control information includes corresponding application information and/or function information and/or service information, the first control information and/or the second control information are updated by opening or closing the corresponding application and/or function and/or in a manner of increasing or decreasing the parameter value of the corresponding application and/or function. In an embodiment, the corresponding application information and/or function information is application information and/or function information corresponding to the operation information.

In an embodiment, the parameter value is a parameter value corresponding to a corresponding application and/or function, for example, adjusting a playback volume of a music application.

If the first control information and/or the second control information includes corresponding operation interface information, updating the first control information and/or the second control information includes at least one of the following:
adjusting the display parameter of the corresponding operation interface;
transferring the operation interface corresponding to the first control information to the device corresponding to the second control information;
transferring the operation interface corresponding to the second control information to the device corresponding to the first control information;
closing or hiding or suspending or fixing or reducing or enlarging the corresponding operation interface.

In an embodiment, if the first control information and/or the second control information includes corresponding operation interface information, the way of updating the first control information and/or the second control information includes at least one of the following: adjusting the display parameters of the corresponding operation interface; transferring the operation interface corresponding to the first control information to the second control information corresponding device, and displaying the operation interface corresponding to the first control information by the device corresponding to the second control information; transferring the operation interface corresponding to the second control information to the device corresponding to the first control information, and displaying the operation interface corresponding to the second control information by the device corresponding to the first control information; closing or hiding the corresponding operation interface. In an embodiment, when there are multiple operation interfaces, the corresponding operation interface information is operation interface information corresponding to the operation information.

In an embodiment, adjusting the display parameters of the corresponding operation interface includes at least one of the following: adjusting the display size of the corresponding operation interface, for example, increasing the display ratio of the corresponding operation interface; adjusting the display position of the corresponding operation interface, for example, adjusting the display position of the corresponding operation interface to the center of the display screen of the management device and enlarging the display. For example, referring to FIG. 20, 500 is a management device, 501, 502 and 503 are different operation interfaces, before receiving operation information, each operation interface can be displayed in the same display size, and after receiving the operation information input by the user through 504, the display position of the operation interface 501 is adjusted to the central position of the display screen of the management device and enlarged for display; adjusting the display color of the corresponding operation interface, for example, adjusting the font display color in the corresponding operation interface to be different from the font display color in other operation interface information; adjusting the display font in the corresponding operation interface, such as bolding or italicizing the text in the corresponding operation interface; adjusting the display animation of the corresponding operation interface, for example, adjusting the display animation of the corresponding operation interface from a static display to a dynamic display (such as zooming in and out in a certain period).

The method further includes: after the closing or hiding or floating or fixing or reducing or enlarging the corresponding operation interface, if a preset operation is received, displaying the corresponding operation interface again.

In an embodiment, the preset operation includes a rollback instruction operation, an operation of calling out an operation interface, and an operation of being able to display the corresponding operation interface again after closing or hiding the corresponding operation interface. That is, after the corresponding operation interface is closed or hidden, if a preset operation is received, the corresponding operation interface may be displayed again. For example, if the corresponding operation interface is closed or hidden due to a user's misoperation, the influence caused by the misoperation can be avoided by inputting a preset operation (for example, a series of complex operations are required to redisplay the corresponding operation interface).

In this embodiment, the method includes: C100, obtaining the first operation information and/or the second operation information, the first operation information corresponds to a first device directly connected to the management device, and the second operation information corresponds to a second device indirectly connected to the management device; C200, detecting whether the first operation information and/or the second operation information and/or the management device meet a preset condition; C300, if yes, performing corresponding control according to a first preset strategy, and/or update first control information corresponding to the first device and/or second control information corresponding to the second device; C400, in response to the occurrence of a preset event, switching the first preset strategy to a second preset strategy for control. Detecting whether the first operation information and/or the second operation information and/or the management device meets a preset condition and performs corresponding control according to a first preset strategy when the preset condition is met avoids that after the management device is connected with the first device and/or the second device, only simple control interaction can be performed, so that the control interaction between the devices after establishing connection with each other is more intelligent, convenient and fast. In addition, because it can support the control interaction between directly connected devices and indirectly connected devices, the function is more powerful, and the experience is more intelligent, convenient and fast.

The present application further provides a processing method, including the following operations:
outputting at least one first control information and/or at least one second control information;
receiving operation information, switching at least one information on the management device and/or at least one information on the first device to the second device according to the operation information, and/or switching at least one information on the management device and/or at least one information on the second device to the first device, and/or switching at least two information among at least one information on the management device, at least one information on the first device, and at least one information on the second device to the third device.

In an embodiment, the information may be control instructions or data (such as files, application information, application interface, system information, system interface, service information, service interface, etc.).

In an embodiment, the first control information corresponds to a first device directly or indirectly connected to the management device, and/or the second control information corresponds to a second device directly or indirectly connected to the management device, and/or the third device is directly or indirectly connected to the first device, and/or the third device is directly or indirectly connected to the second device.

In an embodiment, the management device (such as a mobile phone) displays the control information of the management device itself. The first device is a TV, the second device is a speaker, and the third device is a smart screen. By operating the control information, switch the screen display content of the management device to the first device and the third device for display, and/or switch the sound of the management device to the second device for playback. Which device should the specific corresponding information be switched to, can be set by the user or automatically determined according to user habits or choices, or determined by the current state (such as remaining power, whether switching or connection is allowed, whether the maximum number of connections has been reached, whether the device is running smoothly, etc.) of different devices (the interface can be output for the user to choose, and the configuration can also be selected according to the user's setting strategy, for example, select at least one device with the most remaining power and/or the best display resolution and/or the fastest display speed among multiple devices that support the display function as the target display device). Through this control method, not only can it be more convenient, intelligent and fast, but it can also flexibly call and rationally allocate and use resources among different devices. In addition, because it can support the control interaction between directly connected devices and indirectly connected devices, the function is more powerful, and the experience is more intelligent, convenient and fast.

In an embodiment, the management device (such as earphone) can be connected with the first device (such as mobile phone) and/or the second device (such as tablet) and/or the third device (such as PC) at the same time. At this time, if a preset event (such as an incoming call, such as an alarm clock, etc.) occurs, the switch can be automatically triggered according to the state information of the management device and/or the first device and/or the second device. If the user is using the earphone, the incoming call will be automatically switched to the earphone. If the earphone is not worn and the user is using the tablet, the incoming call will be automatically switched to the tablet, or the tablet is low on power, and then automatically switched to other devices such as a PC or even a smart speaker or a smart TV. The automatic switching strategy can be set by the user in advance or automatically determined according to the user's use habits or big data analysis. In this embodiment, when a call comes in, it can also support to simultaneously remind or output prompt information (either voice or interface) on the earphone and/or mobile phone and/or tablet and/or PC and other devices at the same time, then determine which target device to switch to or directly answer or hang up or mute according to the user's choice, which can provide users with more choices and intelligent experience.

In another embodiment, the management device (such as a mobile phone) can be connected with the first device (such as a car) and/or the second device (such as a watch) at the same time. When the user is navigating or listening to music on the mobile phone, if it is detected that the user enters the car with the mobile phone (it can be detected by short-distance communication or camera or infrared or ultrasonic or location service), then the navigation or listening to music on the mobile phone can be automatically switched to the car (if there is a screen, it can support display, if there is no screen, it can support voice output). When the user gets off the car, navigation or listening to music can also be automatically switched from the car to the watch, in addition to the automatic method, it can also support the output of prompt information on the mobile phone, car or watch, and trigger switching through user selection, which can provide users with a more flexible and smarter experience.

In an embodiment, the present application further provides a processing device. As shown in FIG. 24, the processing device includes:
an output module 10, configured to output at least one first control information and at least one second control information;
a receiving module 20, configured to receive operation information;
an execution module 30, configured to execute corresponding control according to the operation information and/or the first preset strategy;
an update module 40, configured to update the first control information and/or the second control information.

In an embodiment, the processing device further includes a detection module, configured to detect whether the management device currently outputting the control information meets the first preset rule before the operation C20, if yes, receiving the operation information, and performing the corresponding control step according to the operation information and/or the first preset strategy.

In an embodiment, the execution module includes at least one of the following:
a changing unit, configured to change the connection type of the first device if the operation information is a switching connection operation, and/or change the connection type of the second device;
an output unit, if the operation information is a disconnection operation, configured to output disconnection setting information, and set at least one of disconnection time, disconnection duration, and reconnection strategy according to the setting instruction;
the output unit is further configured to output setting information if the operation information is a setting operation, and perform corresponding setting according to the setting instruction.

In an embodiment, the processing device further includes:
a switching module, configured to switch the first preset strategy to a second preset strategy for control in response to the occurrence of a first preset event.

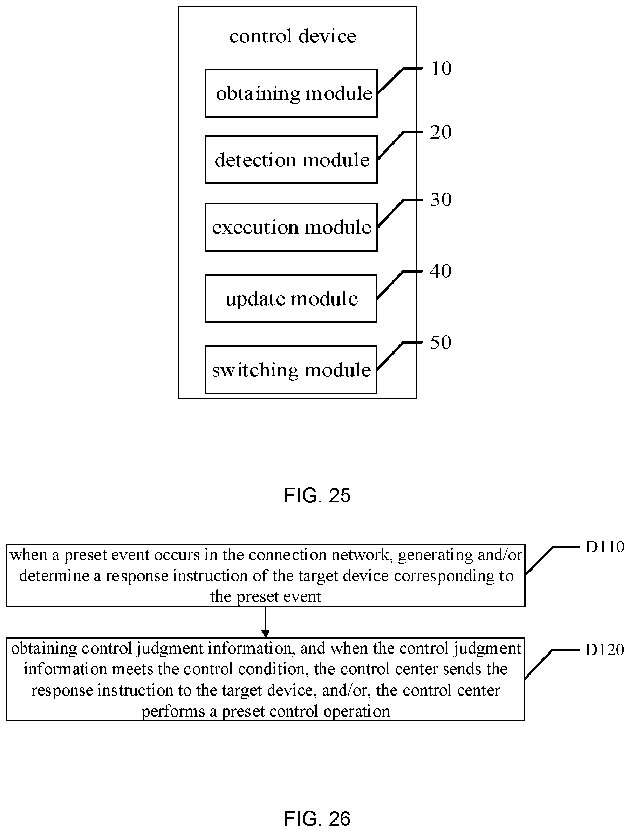

In an embodiment, the present application further provides a processing device, as shown in FIG. 25, the processing device includes:
an obtaining module 10, configured to obtain first operation information and second operation information;
a detection module 20, configured to detect whether the first operation information and/or the second operation information and/or the management device meet a preset condition;
an execution module 30, configured to execute corresponding control according to a first preset strategy if it is satisfied;
an update module 40, configured to update the first control information and/or the second control information;
a switching module 50, configured to switch the first preset strategy to the second preset strategy for control in response to the occurrence of a preset event.

In an embodiment, the execution module includes:
a changing unit, configured to change the first device to an indirect connection, and/or change the second device to a direct connection;
an output unit, configured to output disconnection setting information, and set at least one of disconnection time, disconnection duration, and reconnection strategy according to the setting instruction;
the output unit is also configured to output setting information, and perform corresponding settings according to setting instructions.

In an embodiment, the processing device further includes:
a non-response module, configured to not respond to the first operation information and/or the second operation information if the preset condition is not met; and/or
an output module, configured to output prompt information.

The present application provides a processing method. As shown in FIG. 26, FIG. 26 is a schematic flowchart of an embodiment of the processing method of the present application.

The embodiment of the present application provides the processing method. Although a logical order is shown in the flowcharts, in some cases the steps shown or described may be performed in an order different from that shown or described herein. The processing method is applied to at least one control center, including:
operation D110: when a preset event occurs in the connection network, generating and/or determine a response instruction of the target device corresponding to the preset event.
operation D120: obtaining control judgment information, and when the control judgment information meets the control condition, the control center sends the response instruction to the target device, and/or, the control center performs a preset control operation.

In an embodiment, when a preset event occurs in the connection network where the control center is located, generating and/or determining a response instruction of the target device corresponding to the preset event. The control center and the target device can include any one of terminal devices (such as smart phones, PAD, Tablet PC, etc.), wearable smart devices (such as smart watches, smart bracelets, smart earphones, etc.), smart home devices (such as smart TVs, smart speakers, etc.) and car-connection network devices (such as smart cars, vehicle-mounted terminals, etc.). Afterwards, the control judgment information is obtained, and when the control judgment information meets the control condition, the control center sends the response instruction to the target device, and/or, the control center performs a preset control operation.

In an embodiment, the sequence of generating and/or determining the response instruction of the target device corresponding to the preset event is optional. As another embodiment, the processing method includes the following operations:
when a preset event occurs in the connection network, obtaining control judgment information;
when the control judgment information meets the control condition, generating and/or determining a response instruction of the preset event corresponding to the target device;
the control center sends the response instruction to the target device, and/or, the control center performs a preset control operation.

In an embodiment, the difference between this optional technical solution and the technical solution of an embodiment is only that the sequence of steps for generating a response instruction of a target device corresponding to a preset event is different, and the specific implementation manners of each step are the same.

In an embodiment, the sequence of determining whether the control judgment information meets the control condition is optional. As another implementation, the processing method includes the following operations:
obtaining control judgment information, when the control judgment information meets the control condition, if a preset event occurs in the connection network where it is located, generating and/or determining a response instruction corresponding to the target device of the preset event;
the control center sends the response instruction to the target device, and/or, the control center performs a preset control operation.

The difference between this optional technical solution and the technical solution in one embodiment is that the sequence of determining whether the control judgment information meets the control condition is different, and the specific implementation manners of each step are the same.

In an embodiment, the control center maintains the topology structure of the connection network, and/or the target device is directly or indirectly connected to the control center.

In an embodiment, the control center maintains the topology of the connection network. It can be understood that the control center may determine whether devices outside the connection network are allowed to access the connection network, or may determine the maximum or minimum value of devices within the connection network, or may determine the connection relationship between the settings in the connection network (such as fixed connection, direct connection or indirect connection, etc.), or may decide whether to kick the device in the connection network out of the connection network; and/or, the target device is connected directly or indirectly with the control center. It can be understood that, for the indirect connection between the target device and the control center, there is an intermediate device between the target device and the control center. The intermediate device respectively establishes connections with the target device and the control center, and the control center indirectly controls the target device by controlling the intermediate device. The control center can also obtain the identity information of the target device through the intermediate device, and establish a direct connection with the target device through the identity information.

In an embodiment, the control judgment information includes at least one of the following:
user physiological parameter information, connection information, use information, distance information, application information, state information.

In an embodiment, the control judgment information includes at least one of user physiological parameter information, connection information, use information, distance information, application information, and state information.

For the user physiological parameter information, the device connected to the network where the control center is located has the ability to obtain the user physiological parameter information, so that the device can provide corresponding services. By obtaining the user's heart rate, blood pressure, pulse, blood oxygen, blood sugar and other physiological parameters, the device can provide health services.

For distance information, the distance between the device and the user may change during the use of the device connected to the network where the control center is located. The user puts the smartphone in the bedroom and goes to the living room to watch TV. When the user moves from the bedroom to the living room, the user and the smartphone become farther and farther apart. Specifically, the distance between the user and the mobile phone can be sensed through the wearable device (such as a smart watch) on the user's body, the indoor positioning function, or the indoor monitoring device (such as a camera).

For application information, the application information may be information about installation applications and/or running applications. For example, if there is no security protection application (such as Kingsoft Antivirus, 360 Security Guard, etc.) in the installation application or running application, there may be security risks or risks as the control center.

In an embodiment, the connection information includes at least one of the following: connection state information and network rate information.

In an embodiment, in the above connection network, there are terminal devices or other devices newly added to the connection network (such as wearable devices, smart home devices or car connection network devices), and there are also terminal devices or other devices that exit the connection network. In order to grasp the connection state information of each device joining or exiting the connection network, the control center can maintain a connection information table. The connection information table can record device information and/or connection information (such as connection state, connection rate, connection history, etc.) of all connection network devices, or the like. The device information may be at least one of device physical address, device name, and device code, or other information that can represent the device. The device code can be set by the control center, for example, the device code of the first device connected with the control center is 001, and the device code of the second device connected with the control center is 002. The devices in the connection network generally have the function of connecting to the interconnection network, such as smart watches, smart phones, smart TVs, smart cars, etc. The corresponding network rate information will be affected by the device itself (for example, the processing capacity of the device is low, or the device is downloading data or there are many applications currently surfing the Internet, etc., resulting in a slow network) or by external factors (such as poor signal at the location of the device), resulting in a low network rate.

The use information includes at least one of the following: traffic information, use habit information, and currently used application information.

In an embodiment, in the above connection network, the device may have the ability to provide data network services, such as smart phones, PADs, etc. all have the ability to provide data network services, for obtaining data from the interconnection network, such as updating applications in the device, etc., and the current data network fee is not low, so when using data network services, special attention should be paid to traffic information. For use habit information, the user may be accustomed to using a certain device in the connection network. That is, the frequency of use of a certain device is very high, or it is used to use a certain device connected to the network during a specific time period, specific location, and specific purpose of use. For example, users are used to watching videos on PAD, but not on smartphones. For the currently used application information, during the use of the device, the user will install some corresponding applications according to the use requirements, such as video applications and game applications.

The state information includes at least one of the following: terminal state information, power information, and storage space information.

In an embodiment, in the above connection network, the terminal state information can be judged by the data processing capability of the device, whether the data processing capability of the device is strong or weak. Moreover, it is not that the current data processing capability of the corresponding device is good if the hardware condition is good. It is understandable that the current data processing capability of the device with good hardware condition in a dead state will be very weak. The terminal state information can also be whether the device is in a charging state. It can be understood that electric energy is required during the use of the device, and the electric energy is generally provided by a battery, and the battery needs to be charged when the battery is exhausted or is about to be exhausted. For power information, different devices connected to the network will have batteries with different capacities, and the batteries will have different remaining power or different battery life. For example, the battery capacity of a mobile phone is generally larger than that of a smart watch. In addition, there are also situations where the remaining power of the mobile phone is less than the current power of the smart watch due to the fact that the mobile phone is not charged. Devices connected to the network will exchange data during use and need to store the received data. The storage space information of the device can affect the performance of the device and even determine the work that the device can support, for example, the size of the storage space of the device is not enough to support the size of the data that must be downloaded for its work.

In an embodiment, the control judgment information meeting the control conditions includes at least one of the following:
the user physiological parameter information meets the first preset condition;
the connection information meets the second preset condition;
the use information meets the third preset condition;
the distance information meets the fourth preset condition;
the application information meets the fifth preset condition;
the state information meets the sixth preset condition.

In an embodiment, the control judgment information that meets the control conditions includes at least one of the following: the user physiological parameter information meets the first preset condition, the connection information meets the second preset condition, the use information meets the third preset condition, the distance information meets the fourth preset condition, the application information meets the fifth preset condition, and the state information meets the sixth preset condition.

In an embodiment, the user physiological parameter information meets the first preset condition, when it is detected that the user physiological parameter information reaches a preset physiological parameter information threshold, it is determined that the user physiological parameter information meets the first preset condition. The user physiological parameter information can be detected by devices within the connection network. The user physiological parameter information may be at least one of heart rate, blood pressure, pulse, blood oxygen, and blood sugar. For example, if a user's heart rate is generally 70 to 80 beats/minute when the user is in a non-sleeping state, and the heart rate is generally 40 to 50 beats/minute when the user is in a sleeping state, then the preset heart rate threshold can be set to 50 beats/minute. When it is detected that the user's heart rate reaches 50 beats/minute, it can be determined that the user is in a sleep state. For another example, when a user is in a state of exercise, the heart rate is generally 100 to 130 times per minute. When it is detected that the user's heart rate reaches 110 beats/minute, it can be determined that the user is in a state of exercise, and then it is determined that the user physiological parameter information meets the first preset condition.

In an embodiment, the connection information meets the second preset condition. The second preset condition may include determining whether the control center exits the connection network by detecting connection state information. If the control center exits the connection network, the connection state information meets the second preset condition, and/or, if the control center does not exit the connection network, the connection state information does not meet the second preset condition. In an embodiment, it may be that the number of connections of the control center exceeds a preset threshold or maximum value, then the connection state information meets the second preset condition. In another embodiment, it may be that the connection state of the control center is not smooth or the number of disconnections exceeds a preset number, then the connection state information meets the second preset condition.

The second preset condition may also include a rule of detecting network rate information to determine whether the control center is suitable to continue to serve as the control center to provide control functions. In order not to affect the linkage of various devices in the connection network, it is necessary to select a device with a high network rate as the control center.

For example, it may be that the network rate of other devices controlled by the control center is greater than the network rate of the control center, it is determined that the network rate information meets the second preset condition. For example, the network rate of the control center is 500KB/s, if there is a device with a network rate greater than 500KB/s among other devices controlled by the control center, it can be determined that the network rate information meets the second preset condition.

In this embodiment, a first network rate threshold may also be set for the comparison between the network rates of other devices controlled by the control center and the network rate of the control center. For example, when the network rate of other devices controlled by the control center is greater than or equal to the sum of the network rate of the control center and the first network rate threshold, it is determined that the network rate information meets the second preset condition; and/or, when there is no other device controlled by the control center whose network rate is greater than or equal to the sum of the network rate of the control center and the first network rate threshold. That is, the network rates of other devices controlled by the control center are all less than the sum of the network rate of the control center and the first network rate threshold, and it is determined that the network rate information does not meet the second preset condition.

For example, the network rate of the control center is 500KB/s, the first network rate threshold is 100KB/s, and other devices controlled by the control center have devices with a network rate of 600KB/s. At this time, when the network rate of other devices controlled by the control center is equal to the sum of the network rate of the control center and the first network rate threshold, it is determined that the network rate information meets the second preset condition.

In other embodiments, a second network rate threshold can also be set, and the second network rate threshold is the minimum network rate that does not affect the ability of the control center to provide control services. If the network rate of the control center is greater than or equal to the second network rate threshold, it is determined that the network rate information does not meet the second preset condition; and/or, if the network rate of the control center is less than the second network rate threshold, it is determined that the network rate information meets the second preset condition.

For example, the network rate of the control center is 400KB/s, and the second network rate threshold is 500KB/s. Since the network rate of the control center is less than the second network rate threshold, it may be determined that the network rate information meets the second preset condition.

In an embodiment, if the use information meets the third preset condition, the third preset condition may include a rule for detecting traffic information to determine whether the control center is suitable to continue serving as the control center to provide control functions. In order not to affect the linkage of devices in the connection network, it is necessary to select a device with a large remaining traffic as the control center. It may be that the remaining traffic of other devices controlled by the control center is greater than the remaining traffic of the control center to determine that the traffic information meets the third preset condition.

In this embodiment, a first remaining traffic threshold may also be set for the comparison between the remaining traffic of other devices controlled by the control center and the remaining traffic of the control center. For example, when the remaining traffic of other devices controlled by the control center is greater than or equal to the sum of the remaining traffic of the control center and the first remaining traffic threshold, it is determined that the traffic information meets the third preset condition; and/or, when other devices controlled by the control center do not have a situation in which the remaining traffic of the device is greater than or equal to the sum of the remaining traffic of the control center and the first remaining traffic threshold. That is, the remaining traffic of other devices controlled by the control center is less than the sum of the remaining traffic of the control center and the first remaining traffic threshold, and it is determined that the traffic information does not meet the third preset condition.

For example, the remaining traffic of the control center is 2000MB, the first remaining traffic threshold is 300MB, and other devices controlled by the control center have a remaining traffic of 2300MB. At this time, when the remaining traffic of other devices controlled by the control center is equal to the sum of the remaining traffic of the control center and the first remaining traffic threshold, it is determined that the traffic information meets the third preset condition.

In other embodiments, a second remaining traffic threshold may also be set, and the second remaining traffic threshold is the minimum remaining traffic that does not affect the ability of the control center to provide management services. If the remaining traffic of the control center is greater than or equal to the second remaining traffic threshold, it is determined that the traffic information does not meet the third preset condition; and/or, if the remaining traffic of the control center is less than the second remaining traffic threshold, it is determined that the traffic information meets the third preset condition.

For example, the remaining traffic of the control center is 1800MB, and the second remaining traffic threshold is 2000MB. Since the remaining traffic of the control center is less than the second remaining traffic threshold, it may be determined that the traffic information meets the third preset condition.

The third preset condition may also include a rule for detecting use habit information to determine whether the control center is suitable to continue to serve as the control center to provide control functions.

In an embodiment, if the user is used to running with a smart earphone or smart watch at a certain time in the morning, watching videos on a PAD at a certain time in the evening, and using a mobile phone to read at a certain time in the morning on weekends, then, if the control center at the corresponding time point is not a device conforming to the user's habits, it may be determined that the third preset condition is met.

In another embodiment, if the user is used to using different devices in different environments, such as watching smart TV at home, watching vehicle terminals in the car, and using smartphones in the company, etc., then, if the corresponding environment control center is not a device conforming to the user's habits, it may be determined that the third preset condition is met.

The third preset condition may also include a rule for detecting the currently used application information to determine whether the control center is suitable to continue to serve as the control center to provide control functions.

In an embodiment, if the user is using the control center to watch videos or play games, etc., in general, when watching videos and playing games, the corresponding device interfaces are displayed in full screen, which is inconvenient for users to switch to the corresponding application interface of the control center to use the control functions of the control center. Therefore, if the control center is running video applications, game applications and other applications that are inconvenient to switch to other interfaces, it is determined that the currently used application information meets the third preset condition; and/or, if the control center is running to facilitate switching to other interface applications, it is determined that the currently used application information does not meet the third preset condition.

In another embodiment, if the user is making a phone call, video chatting, or conference call, and it is inconvenient for the user to switch interfaces or controls at this time, it is determined that the currently used application information meets the third preset condition.

For the distance information meeting the fourth preset condition, the fourth preset condition may include a rule for detecting the distance information to determine whether the control center is suitable to continue to serve as the control center to provide control functions.

In an embodiment, when the distance between the user and the control center exceeds a preset range, it is determined that the distance information meets the fourth preset condition.

In an embodiment, each device connected to the network will have a certain relative distance when the user uses it. When the distance between the control center and other devices controlled by it is greater than or equal to a preset distance threshold, it is determined that the distance information meets the fourth preset condition; and/or, when the distance between the control center and other devices controlled by it is less than a preset distance threshold, it is determined that the distance information does not meet the fourth preset condition.

In another embodiment, it can also be calculated that if each connection network device is used as a control center. The total distance value between the device and other connection network devices, the device with the shortest total distance value is taken as the candidate control center. If the control center is different from the candidate control center, it is determined that the distance information meets the fourth preset condition.

In an embodiment, for the application information meeting the fifth preset condition, the application information may be installation application and/or running application information. For example, if there is no security protection application (such as Kingsoft Antivirus, 360 Security Guard, etc.) in the installation application or running application, there may be security risks or risks as the control center, and the application information can be determined to meet the fifth preset condition.

For another example, if the currently running application (can be the foreground or the background) occupies more system resources (such as games, videos, etc.) or has a higher priority (such as phone calls, text messages, emails, etc.) or preset list applications, it is generally inconvenient for the user to switch to the corresponding operation interface of the control center and/or perform the control function of the control center, then it is determined that the application information meets the fifth preset condition.

For the state information meeting the sixth preset condition, the sixth preset condition may include a rule for detecting terminal state information to determine whether the control center is suitable to continue to serve as the control center to provide control functions. In order not to affect the linkage of various devices in the connection network, it is necessary to select a device with a short response time corresponding to the terminal state as the control center.

In an embodiment, the terminal state information can be the data processing capability of the device, such as the number or frequency of CPU, the number or frequency of GPU, the number or frequency of NPU, memory capacity, memory processing speed, or the like. If the data processing capability of the control center is not the strongest or does not belong to the strong category, it is determined that the terminal state information meets the sixth preset condition.

In another embodiment, for the current data processing capability of the device, it may be that the response time corresponding to the device state of other devices controlled by the control center is shorter than the response time corresponding to the device state of the control center, it is determined that the terminal state information meets the sixth preset condition. For example, the response time corresponding to the device state of the control center is 50ms, if other devices controlled by the control center have a device whose response time corresponds to the device state is 40ms, it can be determined that the terminal state information meets the sixth preset condition.

A first response time threshold may also be set for the comparison between the response time corresponding to the device state of other devices controlled by the control center and the response time corresponding to the device state of the control center. For example, when the sum of the response time corresponding to the device state of the device and the first response time threshold is less than or equal to the response time corresponding to the device state of the control center in other devices controlled by the control center, it is determined that the terminal state information meets the sixth preset condition; and/or, when the sum of the response time corresponding to the device state of the device and the first response time threshold is less than or equal to the response time corresponding to the device state of the control center does not exist in other devices controlled by the control center. That is, the sum of the response time corresponding to the device state of other devices controlled by the control center and the first response time threshold is greater than the response time corresponding to the device state of the control center, and it is determined that the terminal state information does not meet the sixth preset condition.

For example, the response time corresponding to the device state of the control center is 50ms, the first response time threshold is 10ms, and other devices controlled by the control center have a device with a response time corresponding to the device state of 40ms. At this time, when the sum of the response time corresponding to the device state of the device and the first response time threshold is equal to the response time corresponding to the state of the control center in other devices controlled by the control center, it is determined that the terminal state information meets the sixth preset condition.

In other embodiments, a second response time threshold may also be set, and the second response time threshold is the maximum response time that does not affect the ability of the control center to provide management services. In an embodiment, if the response time corresponding to the device state of the control center is shorter than or equal to the second response time threshold, it is determined that the terminal state information does not meet the sixth preset condition; and/or, if the response time corresponding to the device state of the control center is longer than the second response time threshold, it is determined that the terminal state information meets the sixth preset condition.

For example, the response time corresponding to the device state of the control center is 60ms, and the second response time threshold is 50ms. Since the response time corresponding to the device state of the control center is longer than the second response time threshold, it may be determined that the terminal state information meets the sixth preset condition.

In other embodiments, for a device in a charging state, the power consumption of the device at this time should be reduced as much as possible to prevent the battery from being depleted. Therefore, if the device is in the charging state, it is determined that the terminal state information meets the sixth preset condition; and/or, if the device is in the non-charging state, it is determined that the terminal state information does not meet the sixth preset condition.

In other embodiments, for a device in a moving state, because it is inconvenient for the user to operate or control, it may be determined that the terminal state information meets the sixth preset condition.

In other embodiments, for a device in a stuck state, the control center may not be able to control other devices well because it cannot respond well to the user's operation, and it can be determined that the terminal state information meets the sixth preset condition.

The sixth preset condition also includes a rule for detecting power information to determine whether the control center is suitable to continue to serve as the control center to provide control functions. In order not to affect the linkage of various devices in the connection network, it is necessary to select a device with a long available time corresponding to the power as the control center. It may be that the available time corresponding to the power of other devices controlled by the control center is longer than the available time corresponding to the power of the control center, it is determined that the power information meets the sixth preset condition. It may also be that the remaining power value of other devices controlled by the control center is greater than the power of the control center, it is determined that the power information meets the sixth preset condition.

In this embodiment, a first available time threshold may also be set for the comparison between the available time corresponding to the power of other devices controlled by the control center and the available time corresponding to the power of the control center. For example, when the available time corresponding to the power of the other devices controlled by the control center is longer than or equal to the sum of the available time corresponding to the power of the control center and the first available time threshold, it is determined that the power information meets the sixth preset condition; and/or, when there is no other device controlled by the control center, the available time corresponding to the power of the device is longer than or equal to the sum of the available time corresponding to the power of the control center and the first available time threshold. That is, when the available time corresponding to the power of other devices controlled by the control center is less than the sum of the available time corresponding to the power of the control center and the first available time threshold, it is determined that the power information does not meet the sixth preset condition.

For example, the available time corresponding to the power of the control center is 200 minutes, the first available time threshold is 30 minutes, and other devices controlled by the control center have the corresponding available time of 170 minutes. At this time, when the available time corresponding to the power of other devices controlled by the control center is equal to the sum of the available time corresponding to the power of the control center and the first available time threshold, it is determined that the power information meets the sixth preset condition.

In other embodiments, a second available time threshold may also be set, and the second available time threshold is the minimum available time that does not affect the ability of the control center to provide management services. If the available time corresponding to the power of the control center is longer than or equal to the second available time threshold, it is determined that the power information does not meet the sixth preset condition; and/or, if the available time corresponding to the power of the control center is shorter than the second available time threshold, it is determined that the power information meets the sixth preset condition.

For example, the available time corresponding to the power of the control center is 180 minutes, and the second available time threshold is 200 minutes. Since the available time corresponding to the power of the control center is shorter than the second available time threshold, it may be determined that the power information meets the sixth preset condition.

The sixth preset condition also includes a rule for detecting storage space information to determine whether the control center is suitable to continue serving as the control center to provide control functions. In order not to affect the linkage of devices in the connection network, it is necessary to select a device with a large remaining storage space as the control center. It may be that the remaining storage space of other devices controlled by the control center is greater than the remaining storage space of the control center, it is determined that the storage space information meets the sixth preset condition. It may also be that the access speed of the storage space of other devices controlled by the control center (such as the higher version of UFS or eMMC or SD) is greater than the access speed of the storage space of the control center, it is determined that the storage space information meets the sixth preset condition.

In this embodiment, a first remaining storage space threshold may also be set for the comparison between the remaining storage space of other devices controlled by the control center and the remaining storage space of the control center. For example, when the remaining storage space of other devices controlled by the control center is greater than or equal to the sum of the remaining storage space of the control center and the first remaining storage space threshold, it is determined that the storage space information meets the sixth preset condition; and/or, when the remaining storage space of other devices controlled by the control center is not greater than or equal to the sum of the remaining storage space of the control center and the first remaining storage space threshold. That is, the remaining storage space of other devices controlled by the control center is less than the sum of the remaining storage space of the control center and the first remaining storage space threshold, and it is determined that the storage space information does not meet the sixth preset condition.

For example, the remaining storage space of the control center is 2000MB, the first remaining storage space threshold is 300MB, other devices controlled by the control center have a remaining storage space of 2300MB. At this time, when the remaining storage space of other devices controlled by the control center is equal to the sum of the remaining storage space of the control center and the first remaining storage space threshold, it is determined that the storage space information meets the sixth preset condition.

In other embodiments, a second remaining storage space threshold may also be set, and the second remaining storage space threshold is the minimum remaining storage space that does not affect the ability of the control center to provide management services. If the remaining storage space of the control center is greater than or equal to the second remaining storage space threshold, it is determined that the storage space information does not meet the sixth preset condition; and/or, if the remaining storage space of the control center is smaller than the second remaining storage space threshold, it is determined that the storage space information meets the sixth preset condition.

For example, the remaining storage space of the control center is 1800MB, and the second remaining storage space threshold is 2000MB. Since the remaining storage space of the control center is smaller than the second remaining storage space threshold, it may be determined that the storage space information meets the sixth preset condition.

For the case where the control center sends a response instruction to the target device.

In an embodiment, when the preset event determination information meets the preset event determination condition, it is determined that a preset event occurs in the connection network where the location is located, and the preset event determination information includes at least one of the following:
environment information, time information, location information.

In an embodiment, the way for the control center to determine the occurrence of preset events on the connection network is to determine whether the preset event determination information meets the preset event determination conditions. That is, when the preset event determination information meets the preset event determination condition, the control center determines that the preset event has occurred in the connection network where it is located.

In an embodiment, the preset event determination information may include at least one of the following: environment information, time information, and location information.

For the environment information, the environment information includes the external environment information, and the control center generates a response instruction for the environment information when the brightness of the current external ambient light reaches the brightness threshold and/or the loudness of the current external environmental noise reaches the loudness threshold.

For example, when the brightness of the current external ambient light reaches the brightness threshold and/or the loudness of the current external environmental noise reaches the loudness threshold, if the brightness is lower than the brightness threshold and the loudness is lower than the loudness threshold, it can be determined that the user has a need for sleep. At this time, an environment suitable for sleeping (such as turning off the lights and smart TV) can be created for the user, and the control center generates a response instruction related to turning off the lights. When the control center generates the above response instruction, it may also add related instructions for outputting prompt information to the response instruction. This related instruction can act on the control center and/or the target device. For example, the prompt information (such as the text "good night") can be output by the control center, the prompt information can also be output by the smart TV, or the prompt information can be output jointly by the control center and the smart TV, to remind the user why the smart TV takes corresponding actions (such as turning off the screen).

The control judgment information corresponding to the environment information is the user physiological parameter information. It can be understood that the user physiological parameter information is used to determine the user's need for sleep again, so as to improve the reliability of the control center to generate a corresponding response instruction and send the response instruction to the target device. When the user physiological parameter information is that the user physiological parameter reaches the physiological parameter threshold, the control condition is met. For example, if the user physiological parameter is a pulse parameter, the number of times corresponding to the user's pulse when the user is resting or sleeping (such as 50 times) will be less than the number of times corresponding to the user's pulse when the user is awake (such as 70 times), then set the physiological parameter threshold value between 50-70 times, for example, 60 times, then when the physiological parameter is less than 60 times, the control judgment information meets the control conditions, and the control center sends a response instruction to the target device. When the physiological parameter is greater than 60 times, the control judgment information does not meet the control condition, and the control center does not send a response instruction to the target device. The user physiological parameter information can also be used as preset event determination information, and similarly, external environment information can also be used as control judgment information.

For the time information, when the control center acquires that the current time is the time corresponding to the user's behavior habits, it generates a response instruction for the time information and the corresponding behavior habits.

For example, the current time is 20:00 Beijing time, and the user's living habit is to turn on the smart TV to watch TV programs at 20:00 Beijing time. Case 1: The response instruction generated by the control center is to wake up the system; or, the case 2: the response instruction generated by the control center is to turn on the TV program (such as the TV program watched last time by the user). Understandably, case 1 is for smart TVs that are dormant, and case 2 is aimed at the smart TV is in the running state, when the control center generates a corresponding response instruction, the response instruction may be a combination of case 1, case 2 or case 1 and case 2. When the control center generates the above response instructions, it can also add related instructions for outputting prompt information for the response instructions corresponding to each situation combination. This related instruction can act on the control center and/or smart TV. That is, the prompt information can be output by the control center, the smart TV can output the prompt information, or the control center and the smart TV can jointly output the prompt information, to remind the user why the Smart TV will take a corresponding action (for example, turn on or brighten the screen or turn off or turn off the screen or turn on a certain TV channel or switch TV channels, etc.).

The control judgment information corresponding to the time information is the terminal state information, that is, whether the smart TV is in the power-on state. If the smart TV is in the off state, it cannot receive and process the response instruction sent by the control center, then the control judgment information does not meet the control conditions, and the control center will not send the response instruction to the target device. If the smart TV is in the power-on state, it can receive and process the response instruction sent by the control center, then the control judgment information meets the control conditions, and the control center sends the response instruction to the target device.

In an embodiment, when the control center and the target device (such as a smart TV) are already connected and the target device is turned on, if a preset event occurs (such as reaching the preset time at 24 o'clock), then, according to user habit data or user settings or system settings, the control center can send instructions to the smart TV to sleep or shut down, and/or output reminder information.

For the location information, when the control center obtains that the current location corresponds to the user's behavior habits, it can generate a response instruction for the location information and the corresponding behavior habits.

For example, the current location is the company address, and the user's living habits are, when the current location is the company address, turn on the navigation of the vehicle terminal for driving route planning (such as the route home from the company). When the control center generates the above response instruction, it may also add related instructions for outputting prompt information to the response instruction. The related instruction can act on the control center and/or vehicle terminal, for example, the prompt information can be output by the control center (such as the text "the navigation of the vehicle terminal is turned on"), or the prompt information can be output by the vehicle terminal, or the prompt information can be output jointly by the control center and the vehicle terminal, to remind the user why the vehicle-mounted terminal takes corresponding actions (such as turning on navigation).

The control judgment information corresponding to the position information is the vehicle state information, that is, whether the vehicle corresponding to the vehicle terminal is in the starting state or has completed the starting state. If the vehicle is in the starting state or has completed the starting state, it can receive and process the response instruction sent by the control center, then the control judgment information meets the control conditions, and the control center sends the response instruction to the target device; and/or, if the vehicle is not started and cannot receive and process the response instruction sent by the control center, the control judgment information does not meet the control conditions, and the control center does not send the response instruction to the target device.

For the situation that the control center performs a preset control operation.

In an embodiment, when the preset event determination information meets the preset event determination condition, the control center determines that the preset event occurs in the connection network. The preset event determination information includes at least one of the following:
the preset event determines information content, environment information, time information, and location information of the information.

For the time information, when the control center obtains that the current time is the time preset by the user, it generates a response instruction for the time information. For example, if the current time is 20:00 Beijing time and the preset time is also 20:00 Beijing time, the preset event determination information meets the preset event determination condition.

For the location information, when the control center obtains that the current location is the preset location of the user, it generates a response instruction for the location information. For example, if the current location is home and the preset location is home, then the preset event determination information meets the preset event determination condition.

In an embodiment, the information content includes at least one of the following: sender information, receiver information, information text content, and information display mode.

The environment information includes at least one of the following: external environment information and use environment information.

In an embodiment, the information content may include at least one of sender information, receiver information, information text content, and information presentation; the environment information may include at least one of external environment information and usage environment information.

In an embodiment, the sender information is the information corresponding to the sender of the preset event determination information. The receiver information is the information corresponding to the sender of the preset event determination information. The content of the message text is the content text of the preset event determination information. The information display mode is the preset event sent by the sender device to the receiver device to determine the display mode of the information, specifically taking SMS or message notification events as an example. The sender information of the SMS or message confirmation information may refer to the sender's device information (such as address, name, type, logo), sender's name, sender's number (such as telephone, QQ, WeChat, email), etc. The receiver information of the short message or message confirmation information may refer to the sender's device information, the sender's name, the sender's number, or the like. The information text content of the short message or message confirmation information may refer to the text content of the short message or message. The information display mode of the short message or message confirmation information may be interface output, or voice broadcast, or the like.

In an embodiment, the environment information includes at least one of external environment information and use environment information. The device connected to the network where the control center is located has the ability to obtain external environment information, such as obtaining the brightness of external ambient light and obtaining the loudness of external environmental noise. During the use of the device, the use environment information changes with the user's environment. The user's environment can be perceived through sensors (such as cameras, microphones, GPS, Bluetooth, WIFI, gravity sensors, acceleration sensors, gyroscopes, etc.). If the user is in motion, the device can detect that the user is in a motion environment, or if the user is driving, the device can detect that the user is in a driving environment, or if the user is working or meeting, the device can detect that the user is in a working or meeting environment.

In an embodiment, the execution of a preset control operation by the control center includes at least one of the following:
the control center immediately or delays or regularly or periodically sends the response instruction to the target device;
switching some or all of the control functions to the target device;
duplicating some or all of the control functions to the target device;
activating some or all of the control functions on the target device;
migrating or transferring or backing up the relevant data of the control center to the target device;
the control center outputs first prompt information, and/or controls a device directly or indirectly connected to the control center to output second prompt information.

In an embodiment, the target device may be at least one of the following:
at least one of the other devices controlled by the control center;
the device with the least number of connections among other devices controlled by the control center;
the device with the smoothest connection state or the least number of disconnections among other devices controlled by the control center;
the device with the best network rate among other devices controlled by the control center;
the device with the largest number of CPUs or the highest frequency among other devices controlled by the control center;
the device with the largest number or highest frequency of GPUs among other devices controlled by the control center;
the device with the largest number or highest frequency of NPUs among other devices controlled by the control center;
the device with the largest memory capacity or the fastest processing speed among other devices controlled by the control center;
the device with the shortest response time among other devices controlled by the control center;
the device in a charging or non-charging state among other devices controlled by the control center;
the device in motion or non-motion among other devices controlled by the control center;
the device in a non-stuck state among other devices controlled by the control center;
the device with the most remaining power among other devices controlled by the control center;
the device with the largest battery capacity among other devices controlled by the control center;
the device with the longest available time corresponding to the power in other devices controlled by the control center;
the device with the largest remaining storage space among other devices controlled by the control center;
the device with the fastest access to storage space in other devices controlled by the control center;
the device that meets the time limit conditions among other devices controlled by the control center;
the device that meet geographical restrictions among other devices controlled by the control center;
one of the devices that is convenient for the user's environment among other devices controlled by the control center;
the device with the most remaining traffic among other devices controlled by the control center;
one of the other devices controlled by the control center that meets the user's use habits;
one of the other devices controlled by the control center that meets the use habits of the user in the environment;
one of the other devices controlled by the control center that is not currently running video applications or game applications or other preset applications;
one of the other devices controlled by the control center that is not currently in a call or video chat or conference call or other preset use state;
one of the devices currently closest to the user among other devices controlled by the control center;
one of the devices with the shortest total distance to other devices among other devices controlled by the control center;
one of the devices that is conveniently obtained by the current user among other devices controlled by the control center;
one of the other devices controlled by the control center whose current mode meets the requirements, the current mode meeting the requirements includes at least one of the following: the current mode is smart mode, the current mode is linkage mode, the current mode is control mode, the current mode is power saving mode, and the current mode is normal mode.

In an embodiment, performing a preset control operation by the control center includes sending the response instruction to the target device immediately or after a delay by the control center; switching some or all of the control functions to the target device; duplicating some or all of the control functions to the target device; activating part or all of the control functions on the target device; migrating or transferring or backing up the relevant data of the control center to the target device; the control center outputs first prompt information, and/or controls a device directly or indirectly connected to the control center to output at least one of second prompt information.

When the control center sends the response instruction to the target device, the immediate or delayed sending strategy can be adopted. For sending immediately, it can be understood that when the above-mentioned preset event is that the user needs to rest or sleep. The control center immediately turns off the lights and immediately provides users with an environment suitable for rest or sleep, which can improve user experience and make the control center more flexible and intelligent when performing control functions. For deferred delivery, understandably, when the above preset event is that the user needs to watch a program through the smart TV, the control center can output relevant prompt information to the user in advance before the current time reaches the preset time, so as to remind the user that the program he wants to watch is about to be played. However, no response instruction is sent to the target device at this time, but a response instruction is sent to the target device when the current time is the preset time. Before sending a response instruction to the target device, it can also output relevant prompt information to the user, which improves the user experience and makes the control center more flexible and intelligent when performing control functions.

For switching part or all of the control function to the target device, when the control center is no longer suitable to continue to serve as the control center to provide the control function, the control center will switch the control function to the target device that is suitable as the control center to provide the control function.

In some application scenarios, all control functions may not need to be switched to the target device. It is only necessary to switch those related to the target device, or frequently used, or supported by the target device, so that the switching control function can be achieved to facilitate user operation, and can save switching resources and/or reduce power consumption.

In an embodiment, it is also possible to duplicate some or all of the control functions to the target device. It is equivalent to that in addition to the control center, at least one target device can also have the same control function as the control center, which can provide users with more operation entrances, thereby achieving more flexible and powerful functions. In some implementations, in order to reduce user's misoperation, it can also be set that only one device with control function is active. That is, although there may be multiple devices with control functions in the connection network (such as the control center, target device, or the like in this embodiment, and even every device in the connection network supports the control function), only one device can issue control instructions at the same time. Specifically, which one can have multiple determination strategies. For example, it may be the device currently being used by the user; can also be the device with the most remaining power or the largest battery capacity; can be a device with the most powerful processing capability or smooth system operation or currently not running entertainment or multimedia applications (such as video, games, etc.) or currently running preset applications (such as phone calls, text messages, emails, WeChat, etc.); can also be determined according to the priority of the device, for example, the device with the highest priority.

For migrating or transferring the relevant data of the control center to the target device, when the control center transfers the control function to the target device, the relevant data in the control center can be migrated or transferred to the target device, so that the target device can perform the control function according to the relevant data. In addition, all devices connected to the network have the ability to act as a control center. Therefore, when the control center does not migrate or transfer relevant data in the control center to the target device, but only transfers the control function to the target device, the target device can also perform the control function.

In particular, when the control center performs control functions, it can synchronize relevant data to the cloud. For the situation where the control center meets the second preset condition, since the control center has not had time to migrate or transfer the relevant data to the target device, it exits the connection network, other devices controlled by the control center can continue to use the relevant data before the control center exits the network connection, such as maintaining the setting item parameters, while the target device obtains the relevant data before the control center exits the network connection from the cloud. For the situation where the control center meets the fourth preset condition, the control center starts to migrate or transfer relevant data when the distance from other devices under its control is greater than or equal to the preset distance threshold, so as to ensure that the relevant data migration or transfer is completed before the control center is disconnected from the connection network.

Outputting the first prompt information to the control center, and/or controlling a device directly or indirectly connected to the control center to output the second prompt information. It can be understood that the purpose of the first prompt information and the second prompt information may be to enable the user to understand the reason why the control center sends the response instruction to the target device and the control operation performed by the target device in response to the response instruction.

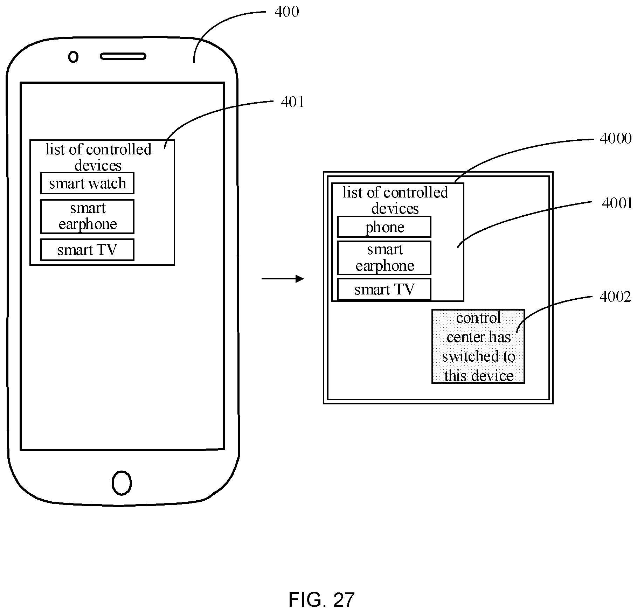

For example, as shown in FIG. 27, 400 is a control center, which is a mobile phone, and 401 is a list of devices controlled by the mobile phone, including smart watches, smart earphones and smart TVs. 4000 is the target device, which is a smart watch controlled by a mobile phone. 4001 is the list of devices controlled by the smart watch after the control center is switched to the smart watch, including the control center mobile phone, smart earphones and smart TV. 4002 is the pop-up box prompt information output by the target device after the control function of the control center is switched from the control center to the target device. Of course, the pop-up box can also be output by the control center.

In an embodiment, the above is the situation where the control center sends a response instruction to the target device or the control center to perform a preset control operation. For the situation where the control center sends a response instruction to the target device and the control center to perform a preset control operation, it can be understood that, when the control judgment information meets the control condition, the control center needs to execute a preset control operation while sending the response instruction to the target device. For example, when the preset event is that the user needs to take a break or sleep, the control center is a mobile phone. When the control center generates a response instruction to turn off the light and sends the response instruction to the corresponding light, it also needs to transfer the control function to the smart watch connected to the network, to facilitate the user to use the control function of the control center when waking up, thus the user experience is improved, and the control center is more flexible and intelligent when performing the control function.

In an embodiment, the operation of generating and/or determining a response instruction of the target device corresponding to the preset event when a preset event occurs in the connection network includes at least one of the following:
when a preset event occurs in the connection network, outputting prompt information for selecting a preset mode, and generating and/or determining the response instruction based on the selected preset mode;
when a preset event occurs in the connection network, according to the correspondence between the preset event and the response instruction, automatically trigger generation and/or determine the response instruction;
when a preset event occurs in the connection network, generating and/or determining the response instruction based on the input control instruction.

In an embodiment, when a preset event occurs in the connection network, the operation of generating and/or determining a response instruction of the target device corresponding to the preset event includes at least one of: when a preset event occurs in the connection network, outputting prompt information for selecting a preset mode, and generating and/or determining the response instruction based on the selected preset mode; when a preset event occurs in the connection network, according to the correspondence between the preset event and the response instruction, automatically trigger generation and/or determine the response instruction; when a preset event occurs in the connection network, generating and/or determining the response instruction based on the input control instruction.

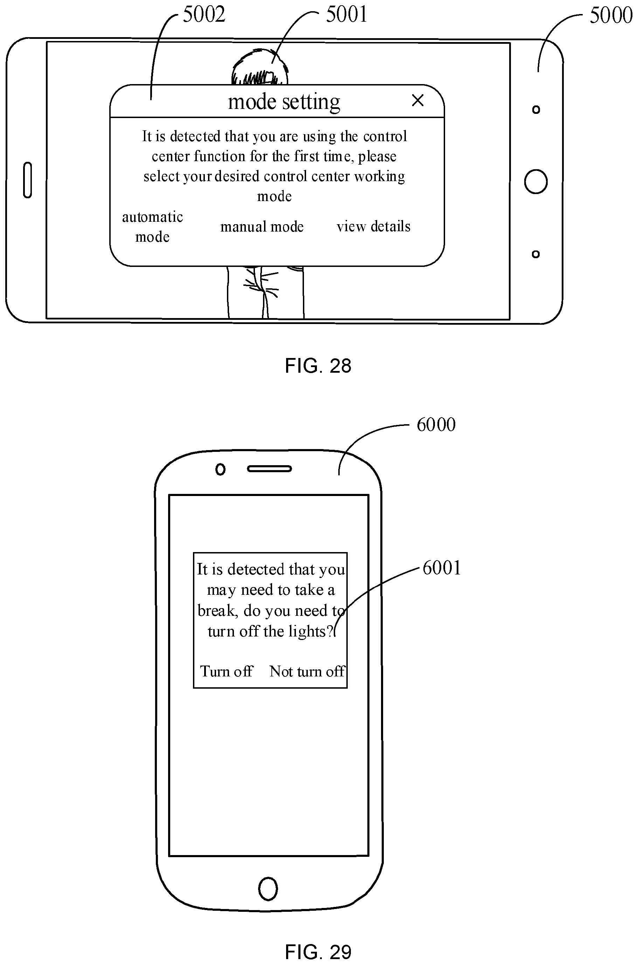

When a preset event occurs in the connection network, a prompt information for selecting a preset mode is output, and the response instruction is generated and/or determined based on the selected preset mode. For the preset event, the control center outputs corresponding prompt information, the prompt information is information prompting the user to select the preset mode, and after the user selects the corresponding preset mode, a response instruction is generated based on the selected preset mode. The preset modes may include an automatic mode and a manual mode. In the automatic mode, corresponding response instructions can be automatically generated for different preset events; and/or, in the manual mode, a control instruction input by a user is required to generate a response instruction corresponding to the control instruction. Referring to FIG. 28, 5000 is the control center, 5001 is the background image of the display screen of the control center 5000, 5002 is the pop-up box prompt information output by the control center 5000, which is used to prompt the user to set the working mode of the control center, and the user can learn the detailed functions of the automatic mode and manual mode by clicking "View Details" therein.

When a preset event occurs in the connection network, the generation and/or determination of the response instruction is automatically triggered according to the correspondence between the preset event and the response instruction. There is a correspondence between the preset event and the response instruction, through which the matching of the preset event and the response instruction can be completed. That is, when a preset event occurs in the connection network, the control center automatically triggers and generates a corresponding response instruction without requiring the user to operate on the preset event. For example, the preset event is that the user needs to rest or sleep, and according to the correspondence, the response instruction corresponding to the rest or sleep is to turn off the light, and then the generation of the light off instruction is automatically triggered.

When a preset event occurs in the connection network, the response instruction is generated and/or determined based on the input control instruction. When a preset event occurs in the connection network, the corresponding optional processing item can be output to the user, and after the user inputs a corresponding control instruction for the optional processing item, the control center generates a corresponding response instruction according to the control instruction. Referring to FIG. 29, 6000 is the control center, and 6001 is a pop-up box output by the control center 6000, which is used to output corresponding optional processing items and/or corresponding prompt information. For example, the optional processing items include the options of turning off the light and not turning off the light. If the user chooses to turn off the light, a response instruction to turn off the light will be generated; and/or, if the user chooses not to turn off the light, an instruction to continuously detect the user physiological information parameters is generated, and an external environment suitable for sleeping (such as adjusting the room temperature) for the user is created after it is determined that the user is asleep.

In this embodiment, the processing method includes: when a preset event occurs in the connection network, generating and/or determining a response instruction of the target device corresponding to the preset event; obtaining control judgment information, when the control judgment information meets a control condition, the control center sends the response instruction to the target device, and/or, the control center performs a preset control operation. When a preset event occurs in the connection network, the control center can generate a corresponding response instruction, and control itself or the target device to make a corresponding response through the response instruction, which makes the control interaction between the devices more flexible and intelligent after the devices are connected to each other.

In an embodiment, based on an embodiment of the processing method of the present application, another embodiment is proposed, the relevant data further includes at least one first relevant data and/or at least one second relevant data. The operation of migrating or transferring or backing up relevant data in the control center to the target device includes at least one of the following:
only backing up or transferring the first relevant data in the control center to the target device;
only backing up or transferring the second relevant data in the control center to the target device;
in addition to backing up or transferring the first relevant data in the control center to the target device, backing up or transferring second relevant data corresponding to the first relevant data to the target device;
backing up or transferring the first relevant data and corresponding update data in the control center to the target device;
backing up or transferring the second relevant data and corresponding update data in the control center to the target device;
backing up or transferring the first relevant data and the corresponding update data in the control center, and the update data of the second relevant data to the target device.

In an embodiment, the relevant data further includes at least one first relevant data and/or at least one second relevant data. After the target device is determined, the relevant data in the control center can be selectively backed up or transferred to the target device, so that the target device can perform the control function according to the relevant data.

In an embodiment, the way of backing up or transferring the first relevant data and the second relevant data includes at least one of the following: only backing up or transferring the first relevant data in the control center to the target device; only backing up or transferring the second relevant data in the control center to the target device; in addition to backing up or transferring the first relevant data in the control center to the target device, backing up or transferring the second relevant data corresponding to the first relevant data to the target device; backing up or transferring the first relevant data in the control center and the corresponding update data to the target device; backing up or transferring the second relevant data and corresponding update data in the control center to the target device; backing up or transfer the first relevant data and the corresponding update data in the control center, and the update data of the second relevant data to the target device.

For connection information data, the first relevant data may be connection information between the control center and other devices controlled by the control center. The second relevant data may be connection information between other devices controlled by the control center. The update data may be the data corresponding to the relevant data updated by the control center during the process of backing up or transferring the relevant data. If during the process of backing up or transferring relevant data, any device outside the connection network joins the connection network and connects with the control center, then, the update data at this time is the connection information between the device joining the connection network and the control center corresponding to the first relevant data.

For the setting item parameter data, the first relevant data may be the setting data corresponding to the shortcut function, such as the setting data for quickly opening the music playback function. The second relevant data may be an application (such as a music player) or a local file (such as music, video, sound effect) associated with the shortcut function. The update data may be the data corresponding to the relevant data updated by the control center during the process of backing up or transferring the relevant data. During the process of backing up or transferring relevant data, if the setting data corresponding to the shortcut function changes, the opening gesture command of the shortcut function has changed, from "double-click" the button corresponding to the shortcut function to "click" the button corresponding to the shortcut function, then the update data at this time is the setting data corresponding to the "click" gesture command to open the shortcut function.

For relevant download data, the first relevant data may be the version number, release time, installation package and other data of the control center application. The second relevant data may be data generated during the operation of the control center application. The update data may be the data corresponding to the relevant data updated by the control center during the process of backing up or transferring the relevant data, for example, the data generated during the operation of the control center application by the control center during the process of backing up or transferring the relevant data.

Therefore, when the control center transfers the control function of the control center to the target device, at least one of connection information data, setting item parameter data and relevant download data in the control center can be migrated or transferred to the target device. For example, migrating or transferring the connection information data to the target device, so that the target device can establish a connection relationship with other devices controlled by the control center according to the connection information data. The target device directly initiates a connection request to the device corresponding to the device's physical address according to the device's physical address in the connection information data, without first searching for devices within the connectable range of the target device to obtain the device's physical address, thereby initiating a connection request.

This embodiment provides a variety of migration or transfer solutions for relevant data, so that there are more implementation methods for relevant data when migrating or transferring, which meets more user demands, improves user experience, and makes the control center more flexible and intelligent when performing control functions.

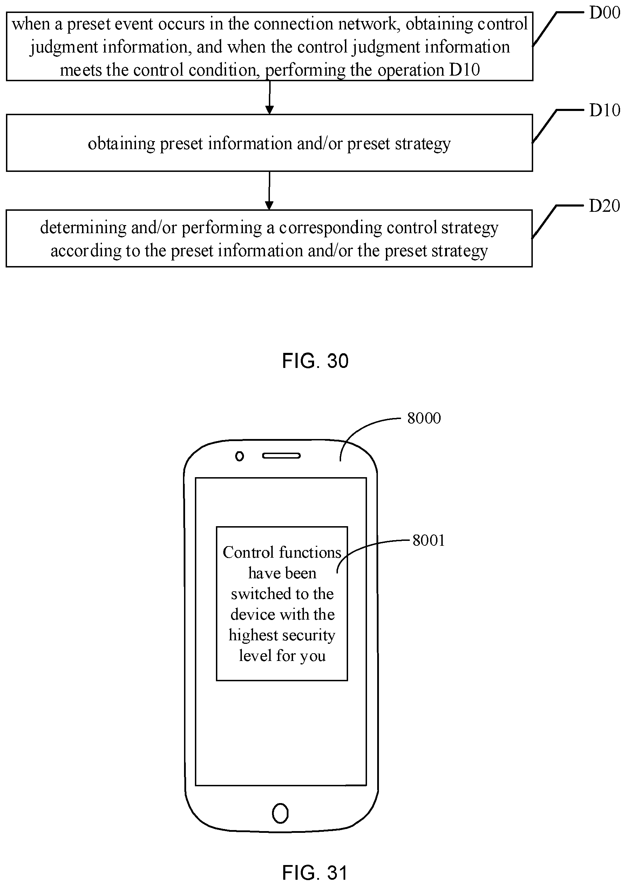

In an embodiment, referring to FIG. 30, the present application further provides another embodiment of the processing method. Although a logical order is shown in the flowcharts, in some cases the steps shown or described may be performed in an order different from that shown or described herein. The processing method is applied in at least one control center, including:
operation D00, when a preset event occurs in the connection network, obtaining control judgment information, and when the control judgment information meets the control condition, performing operation D10;
operation D10, acquiring the preset information and/or the preset strategy;
operation D20, determining and/or performing a corresponding control strategy according to the preset information and/or the preset strategy.

When a preset event occurs in the connection network, the control judgment information is obtained, and when the control judgment information meets the control condition, the steps of obtaining the preset information and the preset strategy are executed. After the preset information and the preset strategy are acquired, a corresponding control strategy is determined and/or executed according to the preset information and the preset strategy.

For a preset event, when the preset event determination information meets the preset event determination condition, it is determined that a preset event occurs in the connection network. In an embodiment, the preset event determination information includes at least one of the following:
the information content, environment information, time information, and location information of the preset event determination information.

For the time information, when the control center obtains that the current time is the time preset by the user, it generates a response instruction for the time information. For example, if the current time is 20:00 Beijing time and the preset time is also 20:00 Beijing time, the preset event determination information meets the preset event determination condition.

For the location information, when the control center obtains that the current location is the preset location of the user, it generates a response instruction for the location information. For example, if the current location is home and the preset location is home, then the preset event determination information meets the preset event determination condition.

In an embodiment, the information content includes at least one of the following: sender information, receiver information, information text content, and information display mode;
the environment information includes at least one of the following: external environment information and use environment information.

In an embodiment, the information content may include at least one of sender information, receiver information, information text content, and information presentation; the environment information may include at least one of external environment information and use environment information.

In an embodiment, the sender information is the information corresponding to the sender of the preset event determination information. The receiver information is the information corresponding to the sender of the preset event determination information. The content of the message text is the content text of the preset event determination information. The information display mode is the preset event sent by the sender device to the receiver device to determine the display mode of the information, specifically taking SMS or message notification events as an example. The sender information of the SMS or message confirmation information may refer to the sender's device information (such as address, name, type, logo), sender's name, sender's number (such as telephone, QQ, WeChat, email), etc. The receiver information of the short message or message confirmation information may refer to the sender's device information, the sender's name, the sender's number, or the like. The information text content of the short message or message confirmation information may refer to the text content of the short message or message. The information display mode of the short message or message confirmation information may be interface output, or voice broadcast, or the like.

In an embodiment, environment information may include at least one of external environment information and use environment information. The device connected to the network where the control center is located has the ability to obtain external environment information, such as obtaining the brightness of external ambient light and obtaining the loudness of external environment noise. During the use of the device, the use environment information changes with the user's environment. The user's environment can be perceived through sensors (such as cameras, microphones, GPS, Bluetooth, WIFI, gravity sensors, acceleration sensors, gyroscopes, etc.). If the user is in motion, the device can detect that the user is in a motion environment, or if the user is driving, the device can detect that the user is in a driving environment, or if the user is working or meeting, the device can detect that the user is in a working or meeting environment.

In an embodiment, the control judgment information includes at least one of the following:
user physiological parameter information, connection information, use information, distance information, application information, state information.

In an embodiment, the control judgment information may include at least one of user physiological parameter information, connection information, use information, distance information, application information, and state information.

For the user physiological parameter information, the device connected to the network where the control center is located has the ability to obtain the user physiological parameter information, so that the device can provide corresponding services. By obtaining the user's heart rate, blood pressure, pulse, blood oxygen, blood sugar and other physiological parameters, the device can provide health services.

For distance information, the distance between the device and the user may change during the use of the device connected to the network where the control center is located. If the user puts the smart phone in the bedroom and goes to the living room to watch TV, the user will be farther and farther away from the smart phone when the user moves from the bedroom to the living room. Specifically, the distance between the user and the mobile phone can be sensed through wearable devices (such as smart watches) on the user's body, indoor positioning functions, or indoor monitoring device (such as cameras).

For application information, the application information may be information about installation applications and/or running applications, for example, if there is no security protection application (such as Kingsoft Antivirus, 360 Security Guard, etc.) in the installation application or running application, there may be security risks or risks as the control center.

In an embodiment, the connection information includes at least one of the following: connection state information and network rate information.

In an embodiment, in the above connection network, there are terminal devices or other devices that newly join the connection network (such as wearable devices, smart home devices, or car connection network devices), and there are also terminal devices or other devices that leave the connection network. In order to grasp the connection state information of each device joining or exiting the connection network, the control center can maintain a connection information table. The connection information table can record device information and/or connection information (such as connection state, connection rate, connection history, etc.) of all connection network devices, or the like. The device information may be at least one of device physical address, device name, and device code, or other information that can represent the device. The device code can be set by the control center, for example, the device code of the first device connected with the control center is 001, and the device code of the second device connected with the control center is 002. The devices in the connection network generally have the function of connecting to the interconnection network, such as smart watches, smart phones, smart TVs, smart cars, etc. The corresponding network rate information will be affected by the device itself (for example, the processing capacity of the device is low, and the device is downloading data or there are many applications currently surfing the Internet, etc., resulting in a slow network) or by external factors (such as poor signal at the location of the device), resulting in a low network rate.

The use information includes at least one of the following: traffic information, use habit information, and currently used application information.

In an embodiment, in the above connection network, the device may be capable of providing data network services, for example, smartphones and PADs are capable of providing data network services to obtain data from interconnection networks, such as updating applications in devices, and the current data network costs are not low. Therefore, when using data network services, special attention should be paid to traffic information. For use habit information, the user may be accustomed to using a certain device in the connection network, that is, the frequency of use of a certain device is very high, or the user is used to using a certain device in the connection network during a specific time period, specific location, and specific purpose of use. For example, the user is used to watching videos on PAD, but not on smartphones. For the currently used application information, during the use of the device, the user will install some corresponding applications according to the use requirements, such as video applications and game applications.

The state information includes at least one of the following: terminal state information, power information, and storage space information.

In an embodiment, in the above connection network, the terminal state information can be judged by the data processing capability of the device, whether the data processing capability of the device is strong or weak. Moreover, it does not necessarily mean that the current data processing capability of the corresponding device is good if the hardware condition is good. It is understandable that the current data processing capability of a device with good hardware conditions in a dead state will be very weak. The terminal state information can also be whether the device is in a charging state. It can be understood that electric energy is required during the use of the device, and the electric energy is generally provided by a battery, and the battery needs to be charged when the battery is exhausted or is about to be exhausted. For power information, different devices connected to the network will have batteries with different capacities, and the batteries will have different remaining power or different battery life. For example, the battery capacity of a mobile phone is generally larger than that of a smart watch. In addition, there are also situations where the remaining power of the mobile phone is less than the current power of the smart watch due to the fact that the mobile phone is not charged. Devices connected to the network will exchange data during use and need to store the received data. The storage space information of the device can affect the performance of the device and even determine the work that the device can support, for example, the size of the storage space of the device is not enough to support the size of the data that must be downloaded for its work.

In an embodiment, the control judgment information meeting the control condition includes at least one of the following:
the control center is in a preset mode;
the user physiological parameter information meets the preset rules of physiological parameters;
the connection information meets the connection preset rules;
the use information meets the preset rules of usage;
the distance information meets the distance preset rule;
the application information meets application preset rules;
the state information meets state preset rules.

In an embodiment the control judgment information meeting the control condition includes at least one of: the control center is in a preset mode; the user physiological parameter information meets the preset rules of physiological parameters; the connection information meets the connection preset rules; the use information meets the preset rules of usage; the distance information meets the distance preset rule; the application information meets application preset rules; the state information meets state preset rules.

If the control center is in the preset mode, the operation of obtaining preset information and preset strategy is executed only in the preset mode, and/or the operation of obtaining preset information and preset strategy is not executed when the control center is not in the preset mode. The preset mode may include a smart mode.

For the user physiological parameter information conforming to the preset rules of physiological parameters, in an embodiment, when it is detected that the user physiological parameter information reaches a preset physiological parameter information threshold, it is determined that the user physiological parameter information meets the physiological parameter preset rule. The user physiological parameter information can be detected by devices within the connection network. The user physiological parameter information may be at least one of heart rate, blood pressure, pulse, blood oxygen, and blood sugar. For example, if a user's heart rate is generally 70 to 80 beats/minute when he is in a non-sleeping state, and the heart rate is generally 40 to 50 beats/minute when the user is in a sleeping state, then the preset heart rate threshold can be set to 50 beats/minute. When it is detected that the user's heart rate reaches 50 beats/minute, it can be determined that the user is in a sleep state. For another example, when a user is in a state of exercise, the heart rate is generally 100 to 130 times per minute. When it is detected that the user's heart rate reaches 110 beats per minute, it can be determined that the user is in a state of exercise, and then it is determined that the user physiological parameter information meets the physiological parameter preset rule.

In an embodiment, for the connection information meeting the connection preset rules, the connection preset rule may include determining whether the control center exits the connection network by detecting connection state information. If the control center exits the connection network, the connection state information meets the connection preset rules, and/or, if the control center does not log out of the connection network, the connection state information does not meet the connection preset rules. In an embodiment, if the number of connections in the control center exceeds a preset threshold or maximum value, then the connection state information meets the connection preset rule. In another embodiment, it may be that the connection state of the control center is not smooth or the number of disconnections exceeds a preset number of times, then the connection state information meets the connection preset rule.

The connection preset rule also includes a rule for detecting network rate information to determine whether the control center is suitable to continue to serve as the control center to provide control functions. In order not to affect the linkage of various devices in the connection network, it is necessary to select a device with a high network rate as the control center.

For example, it may be that the network rate of other devices controlled by the control center is greater than the network rate of the control center, it is determined that the network rate information meets the connection preset rule. For example, the network rate of the control center is 500KB/s. If there is a device with a network rate greater than 500KB/s among other devices controlled by the control center, it can be determined that the network rate information meets the connection preset rules.

In this embodiment, a first network rate threshold may also be set for the comparison between the network rates of other devices controlled by the control center and the network rate of the control center. For example, when the network rate of other devices controlled by the control center is greater than or equal to the sum of the network rate of the control center and the first network rate threshold, it is determined that the network rate information meets the connection preset rule; and/or, when there is no other device controlled by the control center whose network rate is greater than or equal to the sum of the network rate of the control center and the first network rate threshold, that is, the network rates of other devices controlled by the control center are all less than the sum of the network rate of the control center and the first network rate threshold, it is determined that the network rate information does not meet the connection preset rule.

For example, the network rate of the control center is 500KB/s, the first network rate threshold is 100KB/s, and other devices controlled by the control center have devices with a network rate of 600KB/s. At this time, when the network rate of other devices controlled by the control center is equal to the sum of the network rate of the control center and the first network rate threshold, it is determined that the network rate information meets the connection preset rule.

In other embodiments, a second network rate threshold may also be set, and the second network rate threshold is the minimum network rate that does not affect the ability of the control center to provide control services. If the network rate of the control center is greater than or equal to the second network rate threshold, it is determined that the network rate information does not meet the connection preset rules; and/or, if the network rate of the control center is lower than the second network rate threshold, it is determined that the network rate information meets the connection preset rule.

For example, the network rate of the control center is 400KB/s, and the second network rate threshold is 500KB/s. Since the network rate of the control center is less than the second network rate threshold, it can be determined that the network rate information meets the connection preset rule.

In an embodiment, the use information meets the use preset rule, and the use preset rule includes a rule of detecting traffic information to determine whether the control center is suitable to continue to serve as the control center to provide control functions. In order not to affect the linkage of various devices in the connection network, it is necessary to select a device with a large amount of remaining traffic as the control center. It may be that the remaining traffic of other devices controlled by the control center is more than the remaining traffic of the control center, it is determined that the traffic information meets the preset rule.

In this embodiment, a first remaining traffic threshold may also be set for the comparison between the remaining traffic of other devices controlled by the control center and the remaining traffic of the control center. For example, when the remaining traffic of other devices controlled by the control center is greater than or equal to the sum of the remaining traffic of the control center and the first remaining traffic threshold, it is determined that the traffic information meets the preset rule; and/or, when other devices controlled by the control center do not have a situation in which the remaining traffic of the device is greater than or equal to the sum of the remaining traffic of the control center and the first remaining traffic threshold, that is, the remaining traffic of other devices controlled by the control center is less than the sum of the remaining traffic of the control center and the first remaining traffic threshold, and it is determined that the traffic information does not meet the preset rule.

For example, the remaining traffic of the control center is 2000MB, the first remaining traffic threshold is 300MB, and other devices controlled by the control center have a remaining traffic of 2300MB. At this time, when the remaining traffic of other devices controlled by the control center is equal to the sum of the remaining traffic of the control center and the first remaining traffic threshold, it is determined that the traffic information meets the preset rule.

In other embodiments, a second remaining traffic threshold may also be set, and the second remaining traffic threshold is the minimum remaining traffic that does not affect the ability of the control center to provide management services. If the remaining traffic of the control center is greater than or equal to the second remaining traffic threshold, it is determined that the traffic information does not meet the use of preset rules; and/or, if the remaining traffic of the control center is less than the second remaining traffic threshold, it is determined that the traffic information meets the preset rule.

For example, the remaining traffic of the control center is 1800MB, and the second remaining traffic threshold is 2000MB. Since the remaining traffic of the control center is less than the second remaining traffic threshold, it can be determined that the traffic information meets the preset rule.

Using the preset rule also includes a rule for detecting the use habit information to determine whether the control center is suitable to continue to serve as the control center to provide control functions.

In an embodiment, if the user is used to running with a smart earphone or smart watch at a certain time in the morning, watching videos on a PAD at a certain time in the evening, and using a mobile phone to read at a certain time in the morning on weekends, then, if the control center at the corresponding time point is not a device that meets the user's habits, it can be determined that the preset rule of use is met.

In another embodiment, if the user is used to using different devices in different environments, such as watching a smart TV at home, watching a car terminal in a car, using a smart phone in a company, etc., then, if the corresponding environment control center is not a device that meets the user's habits, it may be determined that the preset rule of use is met.

The preset use rule also includes a rule for detecting the currently used application information to determine whether the control center is suitable for continuing to serve as the control center to provide control functions.

In an embodiment, if the user is using the control center to watch videos or play games, etc., in general, when watching videos and playing games, the corresponding device interfaces are displayed in full screen, which is inconvenient for users to switch to the corresponding application interface of the control center to use the control functions of the control center. Therefore, if the control center is running video applications, game applications and other applications that are inconvenient to switch to other interfaces, it is determined that the currently used application information meets the preset use rule; and/or, if the control center is running an application that facilitates switching to other interfaces, it is determined that the application information currently used does not meet the preset use rule.

In another embodiment, if the user is making a phone call, video chatting, or conference call, and it is inconvenient for the user to switch interfaces or controls at this time, it is determined that the currently used application information meets the preset use rule.

For the distance information conforming to the preset distance rule, the preset distance rule includes a rule for detecting the distance information to determine whether the control center is suitable to continue to serve as the control center to provide control functions.

In an embodiment, when the distance between the user and the control center exceeds a preset range, it is determined that the distance information meets a preset distance rule.

In an embodiment, each device connected to the network will have a certain relative distance when the user uses it. When the distance between the control center and other devices controlled by it is greater than or equal to the preset distance threshold, it is determined that the distance information meets the preset distance rule; and/or, when the distance between the control center and other devices it controls is less than a preset distance threshold, it is determined that the distance information does not meet the preset distance rule.

In another embodiment, if each connection network device is used as a control center, the total distance value between the device and other connection network devices can also be calculated, and the device with the shortest total distance value is taken as a candidate control center. If the control center is different from the candidate control center, it is determined that the distance information meets the preset distance rule.

For the application information conforming to the preset application rule, in an embodiment, the application information may be installation application and/or running application information. For example, if there is no security protection application (such as Kingsoft Antivirus, 360 Security Guard, etc.) in the installation application or running application, there may be security risks or risks as the control center, and the application information can be determined to meet the preset application rule.

For another example, if the currently running application (can be the foreground or the background) occupies more system resources (such as games, videos, etc.) or has a higher priority (such as phone calls, text messages, emails, etc.) or preset list applications, then it is generally inconvenient for the user to switch to the corresponding operation interface of the control center and/or perform the control function of the control center, it is determined that the application information meets the preset application rules.

For the state information meeting the preset state rule, the preset state rule includes a rule for detecting the terminal state information to determine whether the control center is suitable to continue to serve as the control center to provide control functions. In order not to affect the linkage among various devices in the connection network, it is necessary to select a device with a short response time corresponding to the terminal state as the control center.

In an embodiment, the terminal state information can be the data processing capability of the device, such as the number or frequency of Central Processing Unit (CPU), the number or frequency of Graphic Processing Unit (GPU), the number or frequency of Network Processing Unit (NPU), memory capacity, memory processing speed, or the like. If the data processing capability of the control center is not the strongest or does not belong to a strong category, it is determined that the terminal state information meets the preset state rule.

In another embodiment, for the current data processing capability of the device, it may be that the response time corresponding to the device state of other devices controlled by the control center is shorter than the response time corresponding to the device state of the control center, it is determined that the terminal state information meets the preset state rule. For example, the response time corresponding to the device state of the control center is 50ms, and other devices controlled by the control center have a response time corresponding to the device state of 40ms, it can be determined that the terminal state information meets the preset state rule.

A first response time threshold may also be set for the comparison between the response time corresponding to the device state of other devices controlled by the control center and the response time corresponding to the device state of the control center. For example, when the sum of the response time corresponding to the device state and the first response time threshold is less than or equal to the response time corresponding to the device state of the control center in other devices controlled by the control center, it is determined that the terminal state information meets the preset state rule; and/or, when the sum of the response time corresponding to the device state and the first response time threshold is less than or equal to the response time corresponding to the device state of the control center does not exist in other devices controlled by the control center, that is, the sum of the response time corresponding to the device state of other devices controlled by the control center and the first response time threshold is greater than the response time corresponding to the device state of the control center, and it is determined that the terminal state information does not meet the preset state rule.

For example, the response time corresponding to the device state of the control center is 50ms, the first response time threshold is 10ms, and other device controlled by the control center has a device with a response time corresponding to the device state of 40ms. At this time, when the sum of the response time corresponding to the device state of the device and the first response time threshold is equal to the response time corresponding to the state of the control center in other devices controlled by the control center, it is determined that the terminal state information meets the preset state rule.

In other embodiments, a second response time threshold may also be set, and the second response time threshold is the maximum response time that does not affect the ability of the control center to provide management services. If the response time corresponding to the device state of the control center is shorter than or equal to the second response time threshold, it is determined that the terminal state information does not meet the preset state rule; and/or, if the response time corresponding to the device state of the control center is longer than the second response time threshold, it is determined that the terminal state information meets the preset state rule.

For example, the response time corresponding to the device state of the control center is 60ms, and the second response time threshold is 50ms. Since the response time corresponding to the device state of the control center is longer than the second response time threshold, it can be determined that the terminal state information meets the preset state rule.

In other embodiments, for a device in a charging state, the power consumption of the device at this time should be reduced as much as possible to prevent the battery from being depleted. Therefore, if the device is in the charging state, it is determined that the terminal state information meets the preset state rule; and/or, if the device is in the non-charging state, it is determined that the terminal state information does not meet the preset state rule.

In other embodiments, for a device in a moving state, since it is inconvenient for the user to operate or control, it may be determined that the terminal state information meets the preset state rule.

In other embodiments, for a device in a stuck state, the control center may not be able to control other devices well because it cannot respond well to user operations, and it may be determined that the terminal state information meets the preset state rule.

The preset state rule also includes a rule for detecting power information to determine whether the control center is suitable to continue to serve as the control center to provide control functions. In order not to affect the linkage among various devices in the connection network, it is necessary to select a device with a long available time corresponding to the power as the control center. It may be that the available time corresponding to the power of other devices controlled by the control center is longer than the available time corresponding to the power of the control center, it is determined that the power information meets the preset state rule. It may also be that the remaining power value of other devices controlled by the control center is greater than the power of the control center, it is determined that the power information meets the preset state rule.

In this embodiment, a first available time threshold may also be set for the comparison between the available time corresponding to the power of other devices controlled by the control center and the available time corresponding to the power of the control center. For example, when the available time corresponding to the power of other devices controlled by the control center is longer than or equal to the sum of the available time corresponding to the power of the control center and the first available time threshold, it is determined that the power information meets the preset state rule; and/or, when there is no other device controlled by the control center, the available time corresponding to the power of the device is longer than or equal to the sum of the available time corresponding to the power of the control center and the first available time threshold, that is, when the available time corresponding to the power of other devices controlled by the control center is less than the sum of the available time corresponding to the power of the control center and the first available time threshold, it is determined that the power information does not meet the preset state rule.

For example, the available time corresponding to the power of the control center is 200 minutes, the first available time threshold is 30 minutes, and there are other devices controlled by the control center with the corresponding available time of 170 minutes. At this time, when the available time corresponding to the power of other devices controlled by the control center is equal to the sum of the available time corresponding to the power of the control center and the first available time threshold, it is determined that the power information meets the preset state rule.

In other embodiments, a second available time threshold may also be set, and the second available time threshold is the minimum available time that does not affect the ability of the control center to provide management services. If the available time corresponding to the power of the control center is longer than or equal to the second available time threshold, it is determined that the power information does not conform to the preset state rule; and/or, if the available time corresponding to the power of the control center is shorter than the second available time threshold, it is determined that the power information meets the preset state rule.

For example, the available time corresponding to the power of the control center is 180 minutes, and the second available time threshold is 200 minutes. Since the available time corresponding to the power of the control center is shorter than the second available time threshold, it can be determined that the power information meets the preset state rule.

The preset state rule also includes a rule for detecting storage space information to determine whether the control center is suitable to continue to serve as the control center to provide control functions. In order not to affect the linkage of devices in the connection network, it is necessary to select a device with a large remaining storage space as the control center. It may be that the remaining storage space of other devices controlled by the control center is greater than the remaining storage space of the control center, it is determined that the storage space information meets the preset state rule. It can also be that the access speed of the storage space of other devices controlled by the control center (such as the higher version of UFS or eMMC or SD) is greater than the access speed of the storage space of the control center (such as the lower version of UFS or eMMC or SD), it is determined that the storage space information meets the preset state rule.

In this embodiment, a first remaining storage space threshold may also be set for the comparison between the remaining storage space of other devices controlled by the control center and the remaining storage space of the control center. For example, when the remaining storage space of other devices controlled by the control center is greater than or equal to the sum of the remaining storage space of the control center and the first remaining storage space threshold, it is determined that the storage space information meets the preset state rule; and/or, when the remaining storage space of other devices controlled by the control center is not greater than or equal to the sum of the remaining storage space of the control center and the first remaining storage space threshold, that is, the remaining storage space of other devices controlled by the control center is less than the sum of the remaining storage space of the control center and the first remaining storage space threshold, and it is determined that the storage space information does not meet the preset state rule.

For example, the remaining storage space of the control center is 2000MB, the first remaining storage space threshold is 300MB, other devices controlled by the control center have a remaining storage space of 2300M B. At this time, when the remaining storage space of other devices controlled by the control center is equal to the sum of the remaining storage space of the control center and the first remaining storage space threshold, it is determined that the storage space information meets the preset state rule.

In other embodiments, a second remaining storage space threshold may also be set, and the second remaining storage space threshold is the minimum remaining storage space that does not affect the ability of the control center to provide management services. If the remaining storage space of the control center is greater than or equal to the second remaining storage space threshold, it is determined that the storage space information does not conform to the preset state rule; and/or, if the remaining storage space of the control center is smaller than the second remaining storage space threshold, it is determined that the storage space information meets the preset state rule.

For example, the remaining storage space of the control center is 1800MB, and the second remaining storage space threshold is 2000MB. Since the remaining storage space of the control center is smaller than the second remaining storage space threshold, it can be determined that the storage space information meets the preset state rule.

In an embodiment, the preset information includes at least one of the following: connection information, state information, environment information, use information, distance information, and user physiological parameter information.

The connection information includes at least one of the following: connection state information and network rate information.

In an embodiment, for the connection information, the connection information includes at least one of connection state information and network rate information.

In an embodiment, in the above connection network, there are terminal devices or other devices that newly join the connection network (such as wearable devices, smart home devices, or car connection network devices), and there are also terminal devices or other devices that leave the connection network. In order to grasp the connection state information of each device joining or exiting the connection network, the control center can maintain a connection information table. The connection information table can record device information and/or connection information (such as connection state, connection rate, connection history, etc.) of all connection network devices, or the like. The device information may be at least one of device physical address, device name, and device code, or other information that can represent the device. The device code can be set by the control center, for example, the device code of the first device connected with the control center is 001, and the device code of the second device connected with the control center is 002. The devices in the connection network generally have the function of connecting to the interconnection network, such as smart watches, mobile phones, smart TVs, smart cars, etc. The corresponding network rate information will be affected by the device itself (for example, the processing capacity of the device is low, or the device is downloading data or there are many applications currently surfing the Internet, etc., resulting in a slow network) or by external factors (such as poor signal at the location of the device), resulting in a low network rate.

The state information includes at least one of the following: terminal state information, power information, and storage space information.

In an embodiment, for the state information, the state information may include at least one of terminal state information, power information, and storage space information.

In an embodiment, in the above connection network, the terminal state information can be judged by the data processing capability of the device, whether the data processing capability of the device is strong or weak. Moreover, it does not necessarily mean that the current data processing capability of the corresponding device is good if the hardware condition is good. It is understandable that the current data processing capability of a device with good hardware conditions in a dead state will be very weak. The terminal state information can also be whether the device is in a charging state. It can be understood that electric energy is required during the use of the device, and the electric energy is generally provided by a battery, and the battery needs to be charged when the battery is exhausted or is about to be exhausted. For power information, different devices connected to the network will have batteries with different capacities, and the batteries will have different remaining power or different battery life. For example, the battery capacity of a mobile phone is generally larger than that of a smart watch. In addition, there are also situations where the remaining power of the mobile phone is less than the current power of the smart watch due to the fact that the mobile phone is not charged. Devices connected to the network will exchange data during use and need to store the received data. The storage space information of the device can affect the performance of the device and even determine the work that the device can support, for example, the size of the storage space of the device is not enough to support the size of the data that must be downloaded for its work.

The environment information includes at least one of the following: external environment information and use environment information.

In an embodiment, for the environment information, the environment information may include at least one of external environment information and use environment information.

In an embodiment, in the above connection network, the device has the ability to obtain external environment information, such as obtaining the brightness of external ambient light and obtaining the loudness of external environmental noise. During the use of the device, the use environment information changes with the user's environment. The user's environment can be perceived through sensors (such as cameras, microphones, GPS, Bluetooth, WIFI, gravity sensors, acceleration sensors, gyroscopes, etc.). If the user is exercising, the device can detect that the user is in an exercising environment, and adjust the device parameters accordingly to facilitate the user's use in an exercising environment, or if the user is driving, the device detects that the user is in the driving environment, and adjusts the device parameters accordingly to facilitate the user's use in the driving environment, or if the user is working or meeting, the device adjusts the device parameters correspondingly after detecting that the user is in the working or meeting environment.

The use information includes at least one of the following: traffic information, use habit information, and currently used application information.

In an embodiment, for the use information, the use information may include at least one of traffic information, use habit information, and currently used application information.

In an embodiment, in the above connection network, the device may have the ability to provide data network services. For example, mobile phones, PADs, etc. all have the ability to provide data network services, which are used to obtain data from the interconnection network, update applications in the device, etc. However, the current data network fee is not low, so when using data network services, you need to pay special attention to traffic information. For use habit information, the user may be accustomed to using a certain device in the connection network, that is, the frequency of use of a certain device is very high, or the user is used to using a certain device connected to the network in a specific time period, specific location, and specific purpose of use, such as users are accustomed to watching videos with a PAD, but not with a mobile phone. For the currently used application information, during the use of the device, the user will install some corresponding applications according to the use requirements, such as video applications and game applications.

In an embodiment, for the distance information, in the above connection network, when the device is used by the user, the distance between the device and the user may change. For example, if the user puts the mobile phone in the bedroom and goes to the living room to watch TV, then when the user moves from the bedroom to the living room, the user and the mobile phone become farther and farther away.

In an embodiment, for the user physiological parameter information, in the above connection network, the device has the ability to obtain the user physiological parameter information to provide corresponding services. For example, health services are provided by obtaining physiological information such as the user's heart rate, blood pressure, pulse, blood oxygen, and blood sugar.

In an embodiment, the operation of determining and/or performing a corresponding control strategy according to the preset information and the preset strategy includes at least one of the following:
if the connection state information meets a first preset rule, performing a corresponding device control operation according to a first preset strategy;
if the network rate information meets a second preset rule, performing a corresponding device control operation according to a second preset strategy;
if the terminal state information meets a third preset rule, performing a corresponding device control operation according to a third preset strategy;
if the power information meets a fourth preset rule, performing a corresponding device control operation according to a fourth preset strategy;
if the storage space information meets a fifth preset rule, performing a corresponding device control operation according to a fifth preset strategy;
if the external environment information meets a sixth preset rule, performing a corresponding device control operation according to a sixth preset strategy;
if the use environment information meets a seventh preset rule, performing a corresponding device control operation according to a seventh preset strategy;
if the traffic information meets an eighth preset rule, performing a corresponding device control operation according to an eighth preset strategy;
if the use habit information meets a ninth preset rule, performing a corresponding device control operation according to a ninth preset strategy;
if the distance information meets a tenth preset rule, performing a corresponding device control operation according to a tenth preset strategy;
if the user physiological parameter information meets an eleventh preset rule, performing a corresponding device control operation according to an eleventh preset strategy.
If the connection state information meets the first preset rule, a corresponding device control operation is executed according to the first preset strategy.

Detecting whether the connection state information meets the first preset rule, and if the connection state information meets the first preset rule, a corresponding device control operation is performed according to the first preset strategy. The first preset rule is to determine whether the control center exits the connection network by detecting the connection state information, if the control center exits the connection network, the connection state information meets the first preset rule, and/or, if the control center does not exit the connection network, the connection state information does not meet the first preset rule.

In an embodiment, if the number of connections in the control center exceeds a preset threshold or maximum value, then the connection state information meets the first preset rule, and the corresponding device control operation is performed according to the first preset strategy.

In another embodiment, it may be that the connection state of the control center is not smooth or the number of disconnections exceeds a preset number, then the connection state information meets the first preset rule, and the corresponding device control operation is performed according to the first preset strategy.

If the network rate information meets the second preset rule, a corresponding device control operation is performed according to the second preset strategy.

Detecting whether the network rate information meets the second preset rule, and if the network rate information meets the second preset rule, the corresponding device control operation is performed according to the second preset strategy. The second preset rule is a rule for determining whether the control center is suitable to continue serving as the control center to provide control functions by detecting network rate information. In order not to affect the linkage of various devices in the connection network, it is necessary to select a device with a high network rate as the control center.

For example, it may be that the network rate of other devices controlled by the control center is greater than the network rate of the control center, it is determined that the network rate information meets the second preset rule. For example, the network rate of the control center is 500KB/s, if other devices controlled by the control center have a network rate greater than 500KB/s, it can be determined that the network rate information meets the second preset rule.

In this embodiment, a first network rate threshold may also be set for the comparison between the network rates of other devices controlled by the control center and the network rate of the control center. For example, when the network rate of other devices controlled by the control center is greater than or equal to the sum of the network rate of the control center and the first network rate threshold, it is determined that the network rate information meets the second preset rule; and/or, when there is no other device controlled by the control center whose network rate is greater than or equal to the sum of the network rate of the control center and the first network rate threshold, that is, the network rates of other devices controlled by the control center are all less than the sum of the network rate of the control center and the first network rate threshold, and it is determined that the network rate information does not meet the second preset rule.

For example, the network rate of the control center is 500KB/s, the first network rate threshold is 100KB/s, and other devices controlled by the control center have devices with a network rate of 600KB/s. At this time, when the network rate of other devices controlled by the control center is equal to the sum of the network rate of the control center and the first network rate threshold, it is determined that the network rate information meets the second preset rule.

In other embodiments, a second network rate threshold can also be set, and the second network rate threshold is the minimum network rate that does not affect the ability of the control center to provide management services. If the network rate of the control center is greater than or equal to the second network rate threshold, it is determined that the network rate information does not meet the second preset rule; and/or, if the network rate of the control center is less than the second network rate threshold, it is determined that the network rate information meets the second preset rule.

For example, the network rate of the control center is 400KB/s, and the second network rate threshold is 500KB/s. Since the network rate of the control center is less than the second network rate threshold, it may be determined that the network rate information meets the second preset rule.

If the terminal state information meets a third preset rule, a corresponding device control operation is performed according to a third preset strategy.

Detecting whether the terminal state information meets the third preset rule, and if the terminal state information meets the third preset rule, a corresponding device control operation is performed according to the third preset strategy. The third preset rule is a rule for determining whether the control center is suitable for continuing to serve as the control center to provide control functions by detecting terminal state information. In order not to affect the linkage of each device in the connection network, it is necessary to select a device with a short response time corresponding to the device state as the control center.

In an embodiment, the terminal state information can be the data processing capability of the device, such as the number or frequency of CPU, the number or frequency of GPU, the number or frequency of NPU, memory capacity, memory processing speed, or the like. If the data processing capability of the control center is not the strongest or does not belong to a strong category, it is determined that the terminal state information meets the third preset rule.

In another embodiment, for the current data processing capability of the device, it may be that the response time corresponding to the device state of other devices controlled by the control center is shorter than the response time corresponding to the device state of the control center, it is determined that the terminal state information meets the third preset rule. For example, the response time corresponding to the device state of the control center is 50ms, if other devices controlled by the control center have a device whose response time corresponds to the device state is 40ms, it can be determined that the terminal state information meets the third preset rule.

A first response time threshold may also be set for the comparison between the response time corresponding to the device state of other devices controlled by the control center and the response time corresponding to the device state of the control center. For example, when the sum of the response time corresponding to the device state of the device and the first response time threshold is less than or equal to the response time corresponding to the device state of the control center in other devices controlled by the control center, it is determined that the terminal state information meets the third preset rule; and/or, when the sum of the response time corresponding to the device state of the device and the first response time threshold is less than or equal to the response time corresponding to the device state of the control center does not exist in other devices controlled by the control center, that is, the sum of the response time corresponding to the device state of other devices controlled by the control center and the first response time threshold is greater than the response time corresponding to the device state of the control center, and it is determined that the terminal state information does not meet the third preset rule.

For example, the response time corresponding to the device state of the control center is 50ms, the first response time threshold is 10ms, and other devices controlled by the control center have a device with a response time corresponding to the device state of 40ms. At this time, when the sum of the response time corresponding to the device state of the device and the first response time threshold is equal to the response time corresponding to the state of the control center in other devices controlled by the control center, it is determined that the terminal state information meets the third preset rule.

In other embodiments, a second response time threshold may also be set, and the second response time threshold is the maximum response time that does not affect the ability of the control center to provide management services. If the response time corresponding to the device state of the control center is shorter than or equal to the second response time threshold, it is determined that the terminal state information does not meet the third preset rule; and/or, if the response time corresponding to the device state of the control center is longer than the second response time threshold, it is determined that the terminal state information meets the third preset rule.

For example, the response time corresponding to the device state of the control center is 60ms, and the second response time threshold is 50ms. Since the response time corresponding to the device state of the control center is longer than the second response time threshold, it may be determined that the terminal state information meets the third preset rule.

In other embodiments, for a device in a charging state, the power consumption of the device at this time should be reduced as much as possible to prevent the battery from being depleted. Therefore, if the device is in the charging state, it is determined that the terminal state information meets the third preset rule; and/or, if the device is in the non-charging state, it is determined that the terminal state information does not meet the third preset rule.

In other embodiments, for a device in a moving state, since it is inconvenient for the user to operate or control, it may be determined that the terminal state information meets the third preset rule.

In other embodiments, for a device in a stuck state, since the control center may not be able to well control other devices because it cannot respond well to the user's operation, it may be determined that the terminal state information meets the third preset rule.

If the power information meets the fourth preset rule, a corresponding device control operation is executed according to the fourth preset strategy.

Whether the power information meets the fourth preset rule is detected, and if the power information meets the fourth preset rule, a corresponding device control operation is performed according to the fourth preset strategy. The fourth preset rule is a rule for determining whether the control center is suitable to continue serving as the control center to provide control functions by detecting power information. In order not to affect the linkage of various devices in the connection network, it is necessary to select a device with a long available time corresponding to the power as the control center. It may be that the available time corresponding to the power of other devices controlled by the control center is longer than the available time corresponding to the power of the control center, it is determined that the power information meets the fourth preset rule. It may also be that the remaining power values of other devices controlled by the control center are greater than the power of the control center, it is determined that the power information meets the fourth preset rule.

In this embodiment, a first available time threshold may also be set for the comparison between the available time corresponding to the power of other devices controlled by the control center and the available time corresponding to the power of the control center. For example, when the available time corresponding to the power of other devices controlled by the control center is longer than or equal to the sum of the available time corresponding to the power of the control center and the first available time threshold, it is determined that the power information meets the fourth preset rule; and/or, when there is no other device controlled by the control center, the available time corresponding to the power of the device is longer than or equal to the sum of the available time corresponding to the power of the control center and the first available time threshold, that is, when the available time corresponding to the power of other devices controlled by the control center is less than the sum of the available time corresponding to the power of the control center and the first available time threshold, it is determined that the power information does not meet the fourth preset rule.

For example, the available time corresponding to the power of the control center is 200 minutes, the first available time threshold is 30 minutes, and there are other devices controlled by the control center with the corresponding available time of 170 minutes. At this time, when the available time corresponding to the power of other devices controlled by the control center is equal to the sum of the available time corresponding to the power of the control center and the first available time threshold, it is determined that the power information meets the fourth preset rule.

In other embodiments, a second available time threshold may also be set, and the second available time threshold is the minimum available time that does not affect the ability of the control center to provide management services. If the available time corresponding to the power of the control center is longer than or equal to the second available time threshold, it is determined that the power information does not meet the fourth preset rule; and/or, if the available time corresponding to the power of the control center is shorter than the second available time threshold, it is determined that the power information meets the fourth preset rule.

For example, the available time corresponding to the power of the control center is 180 minutes, and the second available time threshold is 200 minutes. Since the available time corresponding to the power of the control center is shorter than the second available time threshold, it can be determined that the power information meets the fourth preset rule.

If the storage space information meets the fifth preset rule, a corresponding device control operation is performed according to the fifth preset strategy.

Whether the storage space information meets the fifth preset rule is detected, and if the storage space information meets the fifth preset rule, a corresponding device control operation is performed according to the fifth preset strategy. The fifth preset rule is a rule for determining whether the control center is suitable to continue serving as the control center to provide control functions by detecting storage space information. In order not to affect the linkage of devices in the connection network, it is necessary to select a device with a large remaining storage space as the control center. It may be that the remaining storage space of other devices controlled by the control center is greater than the remaining storage space of the control center, it is determined that the storage space information meets the fifth preset rule. It may also be that the access speed of the storage space of other devices controlled by the control center (such as a high version of UFS or eMMC or SD) is greater than the access speed of the storage space of the control center (such as a lower version of UFS or eMMC or SD), it is determined that the storage space information meets the fifth preset rule.

In this embodiment, a first remaining storage space threshold may also be set for the comparison between the remaining storage space of other devices controlled by the control center and the remaining storage space of the control center. For example, when the remaining storage space of other devices controlled by the control center is greater than or equal to the sum of the remaining storage space of the control center and the first remaining storage space threshold, it is determined that the storage space information meets the fifth preset rule; and/or, when the remaining storage space of other devices controlled by the control center is not greater than or equal to the sum of the remaining storage space of the control center and the first remaining storage space threshold, that is, the remaining storage space of other devices controlled by the control center is less than the sum of the remaining storage space of the control center and the first remaining storage space threshold, and it is determined that the storage space information does not meet the fifth preset rule.

For example, the remaining storage space of the control center is 2000MB, the first remaining storage space threshold is 300MB, other devices controlled by the control center have a remaining storage space of 2300M B. At this time, when the remaining storage space of other devices controlled by the control center is equal to the sum of the remaining storage space of the control center and the first remaining storage space threshold, it is determined that the storage space information meets the fifth preset rule.

In other embodiments, a second remaining storage space threshold may also be set, and the second remaining storage space threshold is the minimum remaining storage space that does not affect the ability of the control center to provide management services. If the remaining storage space of the control center is greater than or equal to the second remaining storage space threshold, it is determined that the storage space information does not meet the fifth preset rule; and/or, if the remaining storage space of the control center is smaller than the second remaining storage space threshold, it is determined that the storage space information meets the fifth preset rule.

For example, the remaining storage space of the control center is 1800MB, and the second remaining storage space threshold is 2000MB. Since the remaining storage space of the control center is smaller than the second remaining storage space threshold, it may be determined that the storage space information meets the fifth preset rule.

If the external environment information meets the sixth preset rule, a corresponding device control operation is performed according to the sixth preset strategy.

Whether the external environment information meets the sixth preset rule is detected, and if the external environment information meets the sixth preset rule, the corresponding device control operation is performed according to the sixth preset strategy. The sixth preset rule is a rule for determining whether the control center is suitable to continue serving as the control center to provide control functions by detecting external environment information.

In an embodiment, when it is detected that the brightness of the external ambient light reaches the brightness threshold and/or the loudness of the external environmental noise reaches the loudness threshold, it is determined that the external environment information meets the sixth preset rule; and/or, when it is detected that the brightness of external ambient light does not reach the brightness threshold and/or the loudness of external environmental noise does not reach the loudness threshold, it is determined that the external environment information does not meet the sixth preset rule.

For example, when the brightness of the external ambient light reaches the brightness threshold and the loudness of the external environmental noise reaches the loudness threshold, if the brightness is lower than the brightness threshold and the loudness is lower than the loudness threshold, it can be determined that the user is ready to enter or is already in a quiet state (such as sleep). At this time, it is inconvenient for the user to obtain devices such as mobile phones and PADs, but it is convenient for users to obtain devices such as smart bracelets and smart watches. Therefore, if the brightness of the ambient light is lower than the brightness threshold and before the loudness of the ambient noise is lower than the loudness threshold, the control center is one of the devices currently inconvenient for users to obtain, such as mobile phones and PADs, it is determined that the external environment information meets the sixth preset rule; and/or, if the brightness of the external ambient light is lower than the brightness threshold and before the loudness of the external ambient noise is lower than the loudness threshold, the control center is a smart bracelet, a smart watch and other devices that are currently readily available, it is determined that the external environment information does not meet the sixth preset rule.

In another embodiment, the external environment information may be time information and/or geographical information. If it is in a time when it is not convenient to use the control center (for example, it is not convenient to use mobile phones during working duration, or in the early hours of the morning), or in a place where it is not allowed to carry the control center (for example, where mobile phones are not allowed to enter), then it is determined that the external environment information meets the sixth preset rule.

If the use environment information meets the seventh preset rule, the corresponding device control operation is performed according to the seventh preset strategy.

Whether the use environment information meets the seventh preset rule is detected, and if the use environment information meets the seventh preset rule, the corresponding device control operation is performed according to the seventh preset strategy. The seventh preset rule is a rule for determining whether the control center is suitable to continue serving as the control center to provide control functions by detecting the use environment information.

In an embodiment, if the user is in a sports environment, it is obviously inconvenient for the user to use devices such as mobile phones and PADs, but it is convenient for users to use wearable devices such as smart bracelets and smart watches. Therefore, if before the user is in the sports environment, the control center is one of the devices that are inconvenient for the user to use when exercising, such as mobile phones and PADs, then it is determined that the use environment information meets the seventh preset rule; and/or, if the user is in the exercise environment and the control center is one of the devices that are convenient for the user to use when exercising, such as smart bracelets and smart watches, it is determined that the use environment information does not meet the seventh preset rule.

Detecting whether the user is in a sports environment can be determined according to the scene mode of the control center (such as sports mode, outdoor mode, etc.), or may be determined based on motion sensors of the control center and/or other devices, or may be determined based on camera data of the control center and/or other devices.

In another embodiment, if the user is in a driving environment, it is obvious that the user is inconvenient to use devices such as mobile phones and PADs, but it is convenient to use devices such as smart watches, smart earphones, and vehicle terminals. Therefore, if before the user is in the driving environment, the control center is one of the mobile phones, PADs and other devices that are inconvenient for the user to use, it is determined that the use environment information meets the seventh preset rule; and/or, if the user is in the driving environment and the control center is one of the devices that are convenient for the user to use in the driving environment, such as smart watches, smart earphones, and vehicle terminals, then it is determined that the use environment information does not meet the seventh preset rule.

Detecting whether the user is in the driving environment can be determined based on the scene mode of the control center (such as driving mode, navigation mode, etc.), or can be determined based on the motion sensor or geographic information of the control center and/or other devices, can also be determined according to the camera data of the control center and/or other devices, and can also be determined through the wireless connection information of the control center and/or other devices (such as connected WIFI hotspots, paired and connected Bluetooth devices, etc.).

In another embodiment, if the user is in a home environment, it is obvious that the user is more convenient to use devices such as smart TVs and smart speakers. Therefore, if before the user is in the home environment, the control center is one of the mobile phones, PADs and other devices that are inconvenient for the user to use, it is determined that the use environment information meets the seventh preset rule; and/or, if the user is in the home environment and the control center is one of the devices that are convenient for the user to use in the home environment, such as smart TVs and smart speakers, it is determined that the use environment information does not meet the seventh preset rule.

Detecting whether the user is in a home environment can be determined based on the scene mode of the control center (such as work mode, home mode, etc.), or can be determined based on the geographic information of the control center and/or other devices, can also be determined according to the camera data of the control center and/or other devices, and can also be determined through the wireless connection information of the control center and/or other devices (such as connected WIFI hotspots, paired and connected Bluetooth devices, etc.).

In an embodiment, if the user leaves the home or driving environment and switches to a new environment, such as a working environment, it is inconvenient for the user to use devices such as vehicle terminals and smart TVs, but it is convenient to use devices such as mobile phones and smart watches. Therefore, if before the user is in a new environment, the control center is one of the inconvenient vehicle-mounted terminal, smart TV and other equipment for the user, then it is determined that the use environment information meets the seventh preset rule; and/or, if before the user is in a new environment, the control center is one of the mobile phones, smart watches and other devices that are convenient for the user to use when working, then it is determined that the use environment information does not meet the seventh preset rule.

Detecting whether the user is in a non-home or non-driving environment can be determined based on the scene mode of the control center (such as work mode, sports mode, etc.), or can be determined based on the geographical information of the control center and/or other devices, can also be determined according to the camera data of the control center and/or other devices, and can also be determined through the wireless connection information of the control center and/or other devices (such as connected WIFI hotspots, paired and connected Bluetooth devices, etc.).

In another embodiment, if the user is in a meeting environment, it is inconvenient for the user to use devices such as smart earphones that need to be controlled by voice commands, but it is convenient to use devices such as mobile phones and smart watches that can be controlled by touch commands. Therefore, if the user is in the meeting environment and the control center is one of the devices such as smart earphones that are inconvenient for the user to use during the meeting, it is determined that the use environment information meets the seventh preset rule; and/or, if the user is in the meeting environment and the control center is one of the mobile phones, smart watches and other devices that are convenient for the user to use during the meeting, it is determined that the use environment information does not meet the seventh preset rule.

If the traffic information meets the eighth preset rule, a corresponding device control operation is performed according to the eighth preset strategy.

Whether the traffic information meets the eighth preset rule is detected, and if the traffic information meets the eighth preset rule, a corresponding device control operation is performed according to the eighth preset strategy. The eighth preset rule is a rule for determining whether the control center is suitable to continue serving as the control center to provide control functions by detecting traffic information. In order not to affect the linkage of various devices in the connection network, it is necessary to select a device with a large amount of remaining traffic as the control center. It may be that the remaining traffic of other devices controlled by the control center is greater than the remaining traffic of the control center, it is determined that the traffic information meets the eighth preset rule.

In this embodiment, a first remaining traffic threshold may also be set for the comparison between the remaining traffic of other devices controlled by the control center and the remaining traffic of the control center. For example, when the remaining traffic of other device controlled by the control center is greater than or equal to the sum of the remaining traffic of the control center and the first remaining traffic threshold, it is determined that the traffic information meets the eighth preset rule; and/or, when other devices controlled by the control center do not have a situation in which the remaining traffic of the device is greater than or equal to the sum of the remaining traffic of the control center and the first remaining traffic threshold, that is, the remaining traffic of other devices controlled by the control center is less than the sum of the remaining traffic of the control center and the first remaining traffic threshold, it is determined that the traffic information does not meet the eighth preset rule.

For example, the remaining traffic of the control center is 2000MB, the first remaining traffic threshold is 300MB, and other devices controlled by the control center have a remaining traffic of 2300MB. At this time, when the remaining traffic of other devices controlled by the control center is equal to the sum of the remaining traffic of the control center and the first remaining traffic threshold, it is determined that the traffic information meets the eighth preset rule.

In other embodiments, a second remaining traffic threshold may also be set, and the second remaining traffic threshold is the minimum remaining traffic that does not affect the ability of the control center to provide management services. If the remaining traffic in the control center is greater than or equal to the second remaining traffic threshold, it is determined that the traffic information does not meet the eighth preset rule; and/or, if the remaining traffic of the control center is less than the second remaining traffic threshold, it is determined that the traffic information meets the eighth preset rule.

For example, the remaining traffic of the control center is 1800MB, and the second remaining traffic threshold is 2000MB. Since the remaining traffic of the control center is less than the second remaining traffic threshold, it can be determined that the traffic information meets the eighth preset rule.

If the use habit information meets the ninth preset rule, a corresponding device control operation is performed according to the ninth preset strategy.

Whether the use habit information meets the ninth preset rule is detected, and if the use habit information meets the ninth preset rule, a corresponding device control operation is performed according to the ninth preset strategy. The ninth preset rule is a rule for determining whether the control center is suitable for continuing to serve as the control center to provide control functions by detecting the use habit information.

In an embodiment, if users are used to running with smart earphones or smart watches at a certain time in the morning, watching videos on a PAD at a certain time in the evening, and using mobile phones to read at a certain time in the morning on weekends, then, if the control center at the corresponding time point is not a device that meets the user's habits, it can be determined that the ninth preset rule is met.

In another embodiment, if users are used to using different devices in different environments, such as watching smart TV at home, watching vehicle terminals in the car, and using smartphones in the company, etc., then, if the corresponding environment control center is not a device conforming to the user's habit, it can be determined that the ninth preset rule is met.

If the distance information meets the tenth preset rule, a corresponding device control operation is performed according to the tenth preset strategy.

Whether the distance information meets the tenth preset rule is detected, and if the distance information meets the tenth preset rule, a corresponding device control operation is performed according to the tenth preset strategy. The tenth preset rule is a rule for determining whether the control center is suitable to continue serving as the control center to provide control functions by detecting distance information.

In an embodiment, when the distance between the user and the control center exceeds a preset range, it is determined that the distance information meets the tenth preset rule.

In an embodiment, each device in the connection network will have a certain relative distance when the user uses it. When the distance between the control center and other devices controlled by it is greater than or equal to the preset distance threshold, it is determined that the distance information meets the tenth preset rule; and/or, when the distance between the control center and other devices controlled by it is less than a preset distance threshold, it is determined that the distance information does not meet the tenth preset rule.

In another embodiment, if each connection network device is used as a control center, the total distance between the device and other connection network devices can also be calculated. The device with the shortest total distance value is taken as the candidate control center. If the control center is different from the candidate control center, it is determined that the distance information meets the tenth preset rule.

If the user physiological parameter information meets the eleventh preset rule, a corresponding device control operation is performed according to the eleventh preset strategy.

Whether the user physiological information meets the eleventh preset rule is detected, and if the user physiological parameter information meets the eleventh preset rule, a corresponding device control operation is performed according to the eleventh preset strategy. The eleventh preset rule is a rule for determining whether the control center is suitable to continue serving as the control center to provide control functions by detecting the physiological information of the user.

In an embodiment, when it is detected that the physiological information of the user reaches the preset physiological information threshold, it is determined that the physiological information of the user meets the eleventh preset rule. The user physiological information may be detected by the control center and/or other devices. Physiological information may be at least one of heart rate, blood pressure, pulse, blood oxygen, and blood sugar.

In an embodiment, if a user's heart rate is generally 70 to 80 beats/minute when the user is in a non-sleeping state, and the heart rate is generally 40 to 50 beats/minute when the user is in a sleeping state, then the preset heart rate threshold can be set to 50 beats/minute. When it is detected that the user's heart rate reaches 50 beats/minute, it can be determined that the user is in a sleep state. If the control center is not a wearable device such as a smart watch or a smart bracelet that is convenient for the user to acquire and operate, it is determined that the physiological information meets the eleventh preset rule.

If the user's heart rate is generally 100 to 130 beats per minute when the user is in a state of exercise, when it is detected that the user's heart rate reaches 110 beats per minute, it can be determined that the user is in a state of exercise. If the control center is a device that is inconvenient for the user to obtain and operate, such as a smart phone, it may also be determined that the physiological information meets the eleventh preset rule.

In an embodiment, the device control operation includes at least one of the following:
establishing a direct or indirect connection between the control center and the target device;
switching some or all of the control functions to the target device;
duplicating some or all of the control functions to the target device;
activating some or all of the control functions on the target device;
migrating or transferring or backing up the relevant data of the control center to the target device;
the control center outputs first prompt information, and/or controls a device directly or indirectly connected to the control center to output second prompt information.

In an embodiment, the target device may be at least one of the following:
at least one of the other devices controlled by the control center;
the device with the least number of connections among other devices controlled by the control center;
the device with the smoothest connection state or the least number of disconnections among other devices controlled by the control center;
the device with the best network rate among other devices controlled by the control center;
the device with the largest number of CPUs or the highest frequency among other devices controlled by the control center;
the device with the largest number or highest frequency of GPUs among other devices controlled by the control center;
the device with the largest number or highest frequency of NPUs among other devices controlled by the control center;
the device with the largest memory capacity or the fastest processing speed among other devices controlled by the control center;
the device with the shortest response time among other devices controlled by the control center;
the device in a charging or non-charging state among other devices controlled by the control center;
the device in motion or non-motion among other devices controlled by the control center;
the device in a non-stuck state among other devices controlled by the control center;
the device with the most remaining power among other devices controlled by the control center;
the device with the largest battery capacity among other devices controlled by the control center;
the device with the longest available time corresponding to the power in other devices controlled by the control center;
the device with the largest remaining storage space among other devices controlled by the control center;
the device with the fastest access to storage space in other devices controlled by the control center;
the device that meets the time limit conditions among other devices controlled by the control center;
the device that meets geographical restrictions among other devices controlled by the control center;
one of the devices that are convenient to use in the user's environment among other devices controlled by the control center;
the device with the most remaining traffic among other devices controlled by the control center;
one of the other devices controlled by the control center that meets the user's use habits;
one of the other devices controlled by the control center that meets the use habits of the user in the environment;
one of the other devices controlled by the control center that is not currently running video applications or game applications or other preset applications;
one of the other devices controlled by the control center that is not currently in a call or video chat or conference call or other preset usage state;
one of the devices currently closest to the user among other devices controlled by the control center;
one of the devices with the shortest total distance to other devices among other devices controlled by the control center;
one of the devices that is conveniently obtained by the current user among other devices controlled by the control center;
one of the other devices controlled by the control center whose current mode meets the requirements, the current mode meeting the requirements includes at least one of the following: the current mode is smart mode, the current mode is linkage mode, the current mode is control mode, the current mode is power saving mode, and the current mode is normal mode.

In an embodiment, the preset strategy includes at least one of: establishing a direct or indirect connection between the control center and the target device; switching some or all of the control functions to the target device; duplicating some or all of the control functions to the target device; activating part or all of the control functions on the target device; migrating or transferring or backing up the relevant data of the control center to the target device; the control center outputs first prompt information, and/or controls a device directly or indirectly connected to the control center to output second prompt information.

For the establishment of a direct or indirect connection between the control center and the target device, when the connection between the control center and the target device is an indirect connection, there may be some restrictions on the interaction between the two devices relative to the direct connection. For example, in an indirect connection, the control center cannot perform device control on the target device when the system of the target device is dormant, but in a direct connection, the control center can wake up the system and perform device control on the target device when the system of the target device is dormant.

For switching part or all of the control function to the target device, when the control center is no longer suitable to continue to serve as the control center to provide the control function, the control center will switch the control function to the target device that is suitable as the control center to provide the control function.

In some application scenarios, the control functions may not all need to be switched to the target device, but only those related to the target device, or frequently used, or supported by the target device. In this way, the switching control function can be achieved to facilitate user operation, and can save switching resources and/or reduce power consumption.

In an embodiment, it is also possible to copy some or all of the control functions to the target device. It is equivalent to that in addition to the control center, at least one target device can also have the same control function as the control center, which can provide users with more operation entrances, thereby achieving more flexible and powerful functions. In some implementations, in order to reduce user misoperation, it can also be set that only one device with control function is active. That is, although there may be multiple devices with control functions in the connection network (such as the control center and the target device in this embodiment, it may even be that each device in the connection network supports the control function), but there can only be one device that can issue control commands, and there can be multiple determination strategies for which one, for example, it can be the device that the user is currently using; can also be the device with the most remaining power or the largest battery capacity; can be the device with the most powerful processing capability or smooth system operation or currently not running entertainment or multimedia applications (such as video, games, etc.) or currently running preset applications (such as phone calls, text messages, emails, WeChat, etc.); can also be determined according to the priority of the device, for example, the device with the highest priority.

For migrating or transferring the relevant data of the control center to the target device, when the control center transfers the control function to the target device, the relevant data in the control center can be migrated or transferred to the target device, so that the target device can perform the control function according to the relevant data. In addition, all devices connected to the network have the ability to act as a control center. Therefore, when the control center does not migrate or transfer relevant data in the control center to the target device, but only transfers the control function to the target device, the target device can also perform the control function.

In particular, when the control center performs control functions, it can synchronize relevant data to the cloud. For the situation that the control center meets the second preset condition, since the control center has not had time to migrate or transfer the relevant data to the target device, it exits the connection network. Therefore, other devices controlled by the control center can continue to use the relevant data before the control center exits the network connection, such as maintaining the setting item parameters, while the target device obtains the relevant data before the control center exits the network connection from the cloud. For the situation that the control center meets the fourth preset condition, the control center starts to migrate or transfer relevant data when the distance from other devices under its control is greater than or equal to the preset distance threshold, so as to ensure that the relevant data migration or transfer is completed before the control center is disconnected from the connection network.

Outputting the first prompt information to the control center, and/or controlling a device directly or indirectly connected to the control center to output the second prompt information. It can be understood that the purpose of the first prompt information and the second prompt information may be to enable the user to understand the reason why the control center sends the response instruction to the target device and the control operation performed by the target device in response to the response instruction.

In an embodiment, the target device corresponds to the preset information, or the target device is determined by any of the following methods:
the first or last or any of the devices that initiated the connection;
the device with the strongest processing capability or the smoothest state, or any processing capability meets the requirements (such as CPU main frequency exceeds a certain set value, such as 800M), or any state meets the conditions (such as the system resource usage does not exceed a certain threshold, such as 50%);
the device with the largest battery capacity or the most remaining power, or the current power value meets the conditions (such as the remaining power exceeds 20%);
the system default;
the device with the highest priority or any priority that meets the conditions (such as higher than or equal to the preset priority);
the device with the shortest or longest distance or any distance that meets the conditions (such as greater than or equal to the preset distance value);
the device with the highest security level or any security level that meets the conditions (such as higher than or equal to the preset security level);
user choice or user habit.

In an embodiment, the target device corresponds to the preset information, or the target device is determined by any of the following methods: the first or last or any of the devices that initiated the connection; the device with the strongest processing capability or the smoothest state, or any processing capability meets the requirements (such as CPU main frequency exceeds a certain set value, such as 800M), or any state meets the conditions (such as the system resource usage does not exceed a certain threshold, such as 50%); the device with the largest battery capacity or the most remaining power, or the current power value meets the conditions (such as the remaining power exceeds 20%); the system default; the device with the highest priority or any priority that meets the conditions (such as higher than or equal to the preset priority); the device with the shortest or longest distance or any distance that meets the conditions (such as greater than or equal to the preset distance value); the device with the highest security level or any security level that meets the conditions (such as higher than or equal to the preset security level); user choice or user habit.

In an embodiment, the target device can be understood that its corresponding preset information is optimal relative to the preset information corresponding to each device in the connection network. For example, the processing capability of the target device is the strongest relative to the processing capabilities of each device in the connection network. It can be understood that the principle of selecting the target device is to select the device that is most suitable for the user under the current conditions (such as the current moment). For example, for the first device to initiate a connection, it can be understood that this device is the first to access the connection network, that is, the device that the user has been using. Similarly, for the last device that initiates a connection, it can be understood that at least one device already exists in the connection network before the last device that initiates a connection accesses the connection network. The last device that initiates the connection is the latest device connected to the connection network, that is, the device that the user carries has just entered the accessible range of the connection network, that is, the device is currently used by the user.

For example, referring to FIG. 31, if the target device is the device with the highest security level, the control center 8000 can output the first prompt information through the pop-up box 8001: "The control function has been switched to the device with the highest security level for you".

In this embodiment, the processing method includes: D00, when a preset event occurs in the connection network, obtaining control judgment information, and when the control judgment information meets the control condition, performing operation D10; D10, obtaining preset information and/or a preset strategy; D20, determining and/or performing a corresponding control strategy according to the preset information and/or the preset strategy. When a preset event occurs in the connection network, the control center obtains the control judgment information. When the control judgment information meets the control conditions, the preset information and the preset strategy are obtained to determine and/or execute the corresponding control strategy, so that the control interaction between the devices is more flexible and intelligent after the devices are connected to each other.

In an embodiment, based on still another embodiment of the processing method of the present application, an embodiment is proposed, the relevant data further includes at least one first relevant data and/or at least one second relevant data. The operation of migrating or transferring or backing up relevant data in the control center to the target device includes at least one of the following:
only backing up or transferring the first relevant data in the control center to the target device;
only backing up or transferring the second relevant data in the control center to the target device;
in addition to backing up or transferring the first relevant data in the control center to the target device, backing up or transferring second relevant data corresponding to the first relevant data to the target device;
backing up or transferring the first relevant data and corresponding update data in the control center to the target device;
backing up or transferring the second relevant data and corresponding update data in the control center to the target device;
backing up or transferring the first relevant data and the corresponding update data in the control center, and the update data of the second relevant data to the target device.

In an embodiment, the relevant data also includes at least one first relevant data and/or at least one second relevant data. After the target device is determined, the relevant data in the control center can be selectively backed up or transferred to the target device, so that the target device can perform the control function according to the relevant data.

In an embodiment, the way of backing up or transferring the first relevant data and the second relevant data includes at least one of the following: only backing up or transferring the first relevant data in the control center to the target device; only backing up or transferring the second relevant data in the control center to the target device; in addition to backing up or transferring the first relevant data in the control center to the target device, backing up or transferring second relevant data corresponding to the first relevant data to the target device; backing up or transferring the first relevant data and corresponding update data in the control center to the target device; backing up or transferring the second relevant data and corresponding update data in the control center to the target device; backing up or transferring the first relevant data and the corresponding update data in the control center, and the update data of the second relevant data to the target device.

For connection information data, the first relevant data may be connection information between the control center and other devices controlled by the control center. The second relevant data may be connection information between other devices controlled by the control center. The update data may be the data corresponding to the relevant data updated by the control center during the process of backing up or transferring the relevant data. For example, during the process of backing up or transferring relevant data, any device outside the connection network joins the connection network and connects with the control center, then, the update data at this time is the connection information between the device joining the connection network and the control center corresponding to the first relevant data.

For the setting item parameter data, the first relevant data may be the setting data corresponding to the shortcut function, such as the setting data for quickly opening the music playback function. The second relevant data may be an application (such as a music player) or a local file (such as music, video, sound effect) associated with the shortcut function. The update data may be the data corresponding to the relevant data updated by the control center during the process of backing up or transferring the relevant data. During the process of backing up or transferring relevant data, if the setting data corresponding to the shortcut function changes, the opening gesture command of the shortcut function has changed, from "double-click" the button corresponding to the shortcut function to "click" the button corresponding to the shortcut function, then the update data at this time is the setting data corresponding to the "click" gesture command to open the shortcut function.

For relevant download data, the first relevant data may be the version number, release time, installation package and other data of the control center application. The second relevant data may be data generated during the operation of the control center application. The update data may be the data corresponding to the relevant data updated by the control center during the process of backing up or transferring the relevant data, such as during the process of backing up or transferring relevant data, the data generated during the operation of the control center application by the control center.

Therefore, when the control center transfers the control function of the control center to the target device, at least one of connection information data, setting item parameter data and relevant download data in the control center can be migrated or transferred to the target device. For example, migrating or transferring the connection information data to the target device, so that the target device can establish a connection relationship with other devices controlled by the control center according to the connection information data. The target device directly initiates a connection request to the device corresponding to the device's physical address according to the device's physical address in the connection information data, without first searching for devices within the connectable range of the target device to obtain the device's physical address, thereby initiating a connection request.

This embodiment provides a variety of migration or transfer solutions for relevant data, so that there are more implementation methods for relevant data when migrating or transferring, which meets more user demands, improves user experience, and makes the control center more flexible and intelligent when performing control functions.

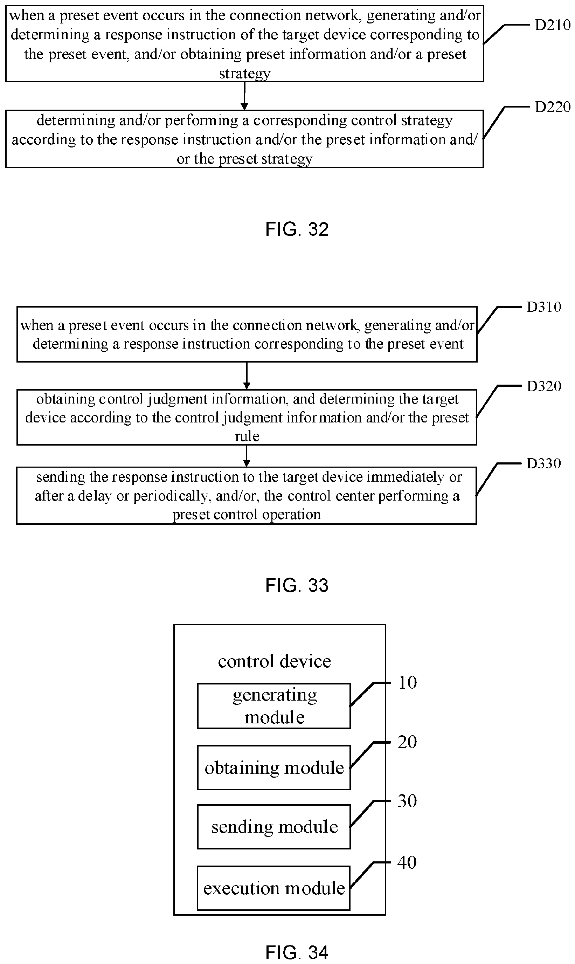

In an embodiment, referring to FIG. 32, another embodiment of the application processing method is proposed. Although a logical order is shown in the flowcharts, in some cases the steps shown or described may be performed in an order different from that shown or described herein. The processing method is applied to at least one control center, including:
D210, when a preset event occurs in the connection network, generating and/or determining a response instruction of the target device corresponding to the preset event, and obtaining preset information and/or a preset strategy.
D220, determining and/or performing a corresponding control strategy according to the response instruction, the preset information and/or the preset strategy.

As another implementation, the processing method includes the operations of:
D210, obtaining preset information and/or preset strategy when a preset event occurs in the connection network; generating and/or determining a response instruction corresponding to the target device for the preset event;
D220, determining and/or performing a corresponding control strategy according to the response instruction, the preset information and/or the preset strategy.

The difference between this embodiment and the previous embodiment lies in that the sequence of steps for generating the response instruction of the target device corresponding to the preset event is different.

As the operation D210, when a preset event occurs in the connection network, generate and/or determine a response instruction corresponding to the target device for the preset event, and obtain the preset information and/or the preset strategy.

In an embodiment, when a preset event occurs in the connection network where the control center is located, generating and/or determining a response instruction of the target device corresponding to the preset event, and obtaining the preset information and/or the preset strategy. The control center and the target device can include any one of terminal devices (such as smartphones, PAD, Tablet PC, etc.), wearable smart devices (such as smart watches, smart bracelets, smart earphones, etc.), smart home devices (such as smart TVs, smart speakers, etc.) and car-connection network devices (such as smart cars, vehicle-mounted terminals, etc.). In this embodiment, the control function is provided by the control center, and the control center manages all connected devices in the network including the control center itself. The control center can be a terminal device, or a wearable smart device, a smart home device, or a car connected to a network device.

In an embodiment, the operation of generating and/or determining a response instruction of the target device corresponding to the preset event when a preset event occurs in the connection network includes at least one of the following:
when a preset event occurs in the connection network, outputting prompt information for selecting a preset mode, and generating and/or determining the response instruction based on the selected preset mode;
when a preset event occurs in the connection network, according to the correspondence between the preset event and the response instruction, automatically trigger generation and/or determine the response instruction;
when a preset event occurs in the connection network, generating and/or determining the response instruction based on the input control instruction.

In an embodiment, the operation of generating and/or determining a response instruction of the target device corresponding to the preset event when a preset event occurs in the connection network includes at least one of: when a preset event occurs in the connection network, outputting prompt information for selecting a preset mode, and generating and/or determining the response instruction based on the selected preset mode; when a preset event occurs in the connection network, according to the correspondence between the preset event and the response instruction, automatically trigger generation and/or determine the response instruction; when a preset event occurs in the connection network, generating and/or determining the response instruction based on the input control instruction.

For when a preset event occurs in the connection network, the prompt information for selecting a preset mode is output, and the response instruction is generated and/or determined based on the selected preset mode. For the preset event, the control center outputs corresponding prompt information, the prompt information is information prompting the user to select the preset mode, and after the user selects the corresponding preset mode, a response instruction is generated based on the selected preset mode. The preset modes may include an automatic mode and a manual mode. In the automatic mode, corresponding response instructions can be automatically generated for different preset events; and/or, in the manual mode, a control instruction input by a user is required to generate a response instruction corresponding to the control instruction. Referring to FIG. 28, 5000 is the control center, 5001 is the background image of the display screen of the control center 5000. 5002 is the pop-up box prompt information output by the control center 5000, which is used to prompt the user to set the working mode of the control center, and the user can learn the detailed functions of the automatic mode and manual mode by clicking "View Details" therein.

When a preset event occurs in the connection network, the response instruction is automatically triggered to be generated and/or determined according to the correspondence between the preset event and the response instruction. There is a correspondence between the preset event and the response instruction, through which the matching of the preset event and the response instruction can be completed. That is, when a preset event occurs in the connection network, the control center automatically triggers and generates a corresponding response instruction without requiring the user to operate on the preset event. For example, the preset event is that the user needs to rest or sleep, and according to the correspondence, the response instruction corresponding to the rest or sleep is to turn off the light, and then the generation of the light off command is automatically triggered.

When a preset event occurs in the connection network, the response instruction is generated and/or determined based on the input control instruction. When a preset event occurs in the connection network, the corresponding optional processing item can be output to the user, and after the user inputs a corresponding control instruction for the optional processing item, the control center generates a corresponding response instruction according to the control instruction. Referring to FIG. 29, 6000 is the control center, and 6001 is a pop-up box output by the control center 6000, which is used to output corresponding optional processing items and/or corresponding prompt information. For example, the optional processing items include the options of turning off the light and not turning off the light. If the user chooses to turn off the light, a response instruction to turn off the light will be generated. If the user chooses not to turn off the light, an instruction to continuously detect the user physiological information parameters will be generated, and after the user is determined to be asleep, an external environment suitable for sleeping (such as adjusting the room temperature) will be created for the user.

In an embodiment, the preset information includes at least one of the following: connection information, state information, environment information, use information, distance information, and user physiological parameter information.

The connection information includes at least one of the following: connection state information and network rate information.

In an embodiment, for the connection information, the connection information may include at least one of connection state information and network rate information.

In an embodiment, in the above connection network, there are terminal devices or other devices that newly join the connection network (such as wearable devices, smart home devices, or car connection network devices), and there are also terminal devices or other devices that leave the connection network. In order to grasp the connection state information of each device joining or exiting the connection network, the control center can maintain a connection information table. The connection information table can record device information and/or connection information (such as connection state, connection rate, connection history, etc.) of all connection network devices, or the like. The device information may be at least one of device physical address, device name, and device code, or other information that can represent the device. The device code can be set by the control center, for example, the device code of the first device connected with the control center is 001, and the device code of the second device connected with the control center is 002. The devices in the connection network generally have the function of connecting to the interconnection network, such as smart watches, mobile phones, smart TVs, smart cars, etc. The corresponding network rate information will be affected by the device itself (for example, the processing capacity of the device is low, or the device is downloading data or there are many applications currently surfing the Internet, etc., resulting in a slow network) or by external factors (such as poor signal at the location of the device), resulting in a low network rate.

The state information includes at least one of the following: terminal state information, power information, and storage space information.

In an embodiment, for the state information, the state information may include at least one of terminal state information, power information, and storage space information.

In an embodiment, in the above connection network, the terminal state information can be judged by the data processing capability of the device, whether the data processing capability of the device is strong or weak. Moreover, it does not necessarily mean that the current data processing capability of the corresponding device is good if the hardware condition is good. It is understandable that the current data processing capability of a device with good hardware conditions in a dead state will be very weak. The terminal state information can also be whether the device is in a charging state. It can be understood that electric energy is required during the use of the device, and the electric energy is generally provided by a battery, and the battery needs to be charged when the battery is exhausted or is about to be exhausted. For power information, different devices connected to the network will have batteries with different capacities, and the batteries will have different remaining power or different battery life. For example, the battery capacity of a mobile phone is generally larger than that of a smart watch. In addition, there are also situations where the remaining power of the mobile phone is less than the current power of the smart watch due to the fact that the mobile phone is not charged. Devices connected to the network will exchange data during use and need to store the received data. The storage space information of the device can affect the performance of the device and even determine the work that the device can support, for example, the size of the storage space of the device is not enough to support the size of the data that must be downloaded for its work.

The environment information includes at least one of the following: external environment information and use environment information.

In an embodiment, for the environment information, the environment information may include at least one of external environment information and use environment information.

In an embodiment, in the above connection network, the device has the ability to obtain external environment information, such as obtaining the brightness of external ambient light and obtaining the loudness of external environmental noise. During the use of the device, the use environment information changes with the user's environment. The user's environment can be perceived through sensors (such as cameras, microphones, GPS, Bluetooth, WIFI, gravity sensors, acceleration sensors, gyroscopes, etc.). If the user is exercising, the device can detect that the user is in an exercising environment, and adjust the device parameters accordingly to facilitate the user's use in an exercising environment, or if the user is driving, the device detects that the user is in the driving environment, and adjusts the device parameters accordingly to facilitate the user's use in the driving environment, or if the user is working or meeting, the device adjusts the device parameters correspondingly after detecting that the user is in the working or meeting environment.

The use information includes at least one of the following: traffic information, use habit information, and currently used application information.

In an embodiment, for the use information, the use information may include at least one of traffic information, use habit information, and currently used application information.

In an embodiment, in the above connection network, the device may have the ability to provide data network services. For example, mobile phones, PADs, etc. all have the ability to provide data network services, which are used to obtain data from the interconnection network, update applications in the device, etc. However, the current data network fee is not low, so when using data network services, you need to pay special attention to traffic information. For use habit information, the user may be accustomed to using a certain device in the connection network, that is, the frequency of use of a certain device is very high, or the user is used to using a certain device connected to the network in a specific time period, specific location, and specific purpose of use, such as users are accustomed to watching videos with a PAD, but not with a mobile phone. For the currently used application information, during the use of the device, the user will install some corresponding applications according to the use requirements, such as video applications and game applications.

In an embodiment, for the distance information, in the above connection network, when the device is used by the user, the distance between the device and the user may change. For example, if the user puts the mobile phone in the bedroom and goes to the living room to watch TV, then when the user moves from the bedroom to the living room, the user and the mobile phone become farther and farther away.

In an embodiment, for the user physiological parameter information, in the above connection network, the device has the ability to obtain the user physiological parameter information to provide corresponding services. For example, health services are provided by obtaining physiological information such as the user's heart rate, blood pressure, pulse, blood oxygen, and blood sugar.

Operation D220, determining and/or performing a corresponding control strategy according to the response instruction, the preset information and/or the preset strategy.

In an embodiment, the operation D220 includes at least one of the following:
determining and/or performing a corresponding control strategy according to the response instruction and the preset information;
determining and/or performing a corresponding control strategy according to the response instruction and the preset strategy;
determining and/or performing a corresponding control strategy according to the preset information and the preset strategy;
determining and/or performing a corresponding control strategy according to the response instruction, the preset information and the preset strategy.

In an embodiment, the corresponding control strategy is determined and/or performed according to the response instruction, the preset information and the preset strategy. In an embodiment, the control center sends a response instruction to the target device, so that the target device determines the type of the preset event through the response instruction, so as to respond to the response instruction accordingly, for example, output corresponding prompt information (for example, when the preset information meets the preset rule, migrate or transfer the relevant data of the control center to the target device).

In an embodiment, the operation D220 includes at least one of the following:
obtaining control judgment information, and when the control judgment information meets a control condition, the control center sending the response instruction to the target device;
the control center performs a preset control operation;
if the connection state information meets the first preset rule, performing a corresponding device control operation according to the first preset strategy;
if the network rate information meets the second preset rule, performing a corresponding device control operation according to the second preset strategy;
if the terminal state information meets the third preset rule, performing a corresponding device control operation according to the third preset strategy;
if the power information meets the fourth preset rule, performing a corresponding device control operation according to the fourth preset strategy;
if the storage space information meets the fifth preset rule, performing a corresponding device control operation according to the fifth preset strategy;
if the external environment information meets the sixth preset rule, performing a corresponding device control operation according to the sixth preset strategy;
if the use environment information meets the seventh preset rule, performing the corresponding device control operation according to the seventh preset strategy;
if the traffic information meets the eighth preset rule, performing a corresponding device control operation according to the eighth preset strategy;
If the use habit information meets the ninth preset rule, performing a corresponding device control operation according to the ninth preset strategy;
If the distance information meets the tenth preset rule, performing a corresponding device control operation according to the tenth preset strategy;
If the user physiological parameter information meets the eleventh preset rule, performing a corresponding device control operation according to the eleventh preset strategy.

In an embodiment, for acquiring control judgment information, when the control judgment information meets a control condition, the control center sends the response instruction to the target device.

In an embodiment, the control judgment information includes at least one of the following:
user physiological parameter information, connection information, use information, distance information, application information, state information.

In an embodiment, the control judgment information may include at least one of user physiological parameter information, connection information, use information, distance information, application information, and state information.

For the user physiological parameter information, the device connected to the network where the control center is located has the ability to obtain the user physiological parameter information, so that the device can provide corresponding services. For example, the device can provide health services through obtaining the user's heart rate, blood pressure, pulse, blood oxygen, blood sugar and other physiological parameters.

For the distance information, the distance between the device and the user may change during the use of the device where the control center is located and connected to the network. If the user puts the smart phone in the bedroom and goes to the living room to watch TV, the user will be farther and farther away from the smart phone when the user moves from the bedroom to the living room. The distance between the user and the mobile phone can be sensed through wearable devices (such as smart watches) on the user's body, indoor positioning functions, or indoor monitoring equipment (such as cameras).

For application information, the application information may be information about installation applications and/or running applications. For example, if there is no security protection application (such as Kingsoft Antivirus, 360 Security Guard, etc.) in the installation application or running application, there may be security risks or risks as the control center.

In an embodiment, the connection information includes at least one of the following: connection state information and network rate information.

In an embodiment, in the above connection network, there are terminal devices or other devices that newly join the connection network (such as wearable devices, smart home devices, or car connection network devices), and there are also terminal devices or other devices that leave the connection network. In order to grasp the connection state information of each device joining or exiting the connection network, the control center can maintain a connection information table. The connection information table can record device information and/or connection information (such as connection state, connection rate, connection history, etc.) of all connection network devices, or the like. The device information may be at least one of device physical address, device name, and device code, or other information that can represent the device. The device code can be set by the control center, for example, the device code of the first device connected with the control center is 001, and the device code of the second device connected with the control center is 002. The devices in the connection network generally have the function of connecting to the interconnection network, such as smart watches, mobile phones, smart TVs, smart cars, etc. The corresponding network rate information will be affected by the device itself (for example, the processing capacity of the device is low, or the device is downloading data or there are many applications currently surfing the Internet, etc., resulting in a slow network) or by external factors (such as poor signal at the location of the device), resulting in a low network rate.

The use information includes at least one of the following: traffic information, use habit information, and currently used application information.

In an embodiment, in the above connection network, the device may have the ability to provide data network services. For example, mobile phones, PADs, etc. all have the ability to provide data network services, which are used to obtain data from the interconnection network, update applications in the device, etc. However, the current data network fee is not low, so when using data network services, you need to pay special attention to traffic information. For use habit information, the user may be accustomed to using a certain device in the connection network, that is, the frequency of use of a certain device is very high, or the user is used to using a certain device connected to the network in a specific time period, specific location, and specific purpose of use, such as users are accustomed to watching videos with a PAD, but not with a mobile phone. For the currently used application information, during the use of the device, the user will install some corresponding applications according to the use requirements, such as video applications and game applications.

The state information includes at least one of the following: terminal state information, power information, and storage space information.

In an embodiment, in the above connection network, the terminal state information can be judged by the data processing capability of the device, and the data processing capability of the device is strong or weak. Moreover, it does not necessarily mean that the current data processing capability of the corresponding device is good if the hardware condition is good. It is understandable that the current data processing capability of a device with good hardware conditions in a dead state will be very weak. The terminal state information can also be whether the device is in a charging state. It can be understood that electric energy is required during the use of the device, and the electric energy is generally provided by a battery, and the battery needs to be charged when the battery is exhausted or is about to be exhausted. For power information, different devices connected to the network will have batteries with different capacities, and the batteries will have different remaining power or different battery life. For example, the battery capacity of a mobile phone is generally larger than that of a smart watch. In addition, there are also situations where the remaining power of the mobile phone is less than the current power of the smart watch due to the fact that the mobile phone is not charged. Devices connected to the network will exchange data during use and need to store the received data. The storage space information of the device can affect the performance of the device and even determine the work that the device can support, for example, the size of the storage space of the device is not enough to support the size of the data that must be downloaded for its work.

In an embodiment, the control judgment information meeting the control condition includes at least one of the following:
the user physiological parameter information meets the first preset condition;
the connection information meets the second preset condition;
the use information meets the third preset condition;
the distance information meets the fourth preset condition;
the application information meets the fifth preset condition;
the state information meets the sixth preset condition.

In an embodiment, the control judgment information meeting the control condition includes at least one of: the user physiological parameter information meets the first preset condition; the connection information meets the second preset condition; the use information meets the third preset condition; the distance information meets the fourth preset condition; the application information meets the fifth preset condition; the state information meets the sixth preset condition.

In an embodiment, for the user physiological parameter information meeting the first preset condition, when it is detected that the user physiological parameter information reaches the preset physiological parameter information threshold, it is determined that the user physiological parameter information meets the first preset condition. The user physiological parameter information can be detected by devices within the connection network. The user physiological parameter information may be at least one of heart rate, blood pressure, pulse, blood oxygen, and blood sugar. For example, if a user's heart rate is generally 70 to 80 beats/minute when he is in a non-sleeping state, and the heart rate is generally 40 to 50 beats/minute when the user is in a sleeping state, then the preset heart rate threshold can be set to 50 beats/minute. When it is detected that the user's heart rate reaches 50 beats/minute, it can be determined that the user is in a sleep state. For another example, when a user is in a state of exercise, the heart rate is generally 100 to 130 times per minute. When it is detected that the user's heart rate reaches 110 beats/minute, it can be determined that the user is in a state of exercise, and then it is determined that the user physiological parameter information meets the first preset condition.

In an embodiment, for the connection information meeting the second preset condition, the second preset condition includes determining whether the control center exits the connection network by detecting connection state information. If the control center exits the connection network, the connection state information meets the second preset condition, and/or, if the control center does not exit the connection network, the connection state information does not meet the second preset condition. In one embodiment, it may be that the number of connections of the control center exceeds a preset threshold or maximum value, the connection state information meets the second preset condition. In another embodiment, it may be that the connection state of the control center is not smooth or the number of disconnections exceeds a preset number of times, the connection state information meets the second preset condition.

The second preset condition also includes a rule for detecting network rate information to determine whether the control center is suitable to continue to serve as the control center to provide control functions. In order not to affect the linkage of various devices in the connection network, it is necessary to select a device with a high network rate as the control center.

For example, it may be that the network rate of other devices controlled by the control center is greater than the network rate of the control center, it is determined that the network rate information meets the second preset condition. For example, the network rate of the control center is 500KB/s, if there is a device with a network rate greater than 500KB/s among other devices controlled by the control center, it can be determined that the network rate information meets the second preset condition.

In this embodiment, a first network rate threshold may also be set for the comparison between the network rates of other devices controlled by the control center and the network rate of the control center. For example, when the network rate of other devices controlled by the control center is greater than or equal to the sum of the network rate of the control center and the first network rate threshold, it is determined that the network rate information meets the second preset condition; and/or, when there is no other device controlled by the control center whose network rate is greater than or equal to the sum of the network rate of the control center and the first network rate threshold, that is, the network rates of other devices controlled by the control center are all less than the sum of the network rate of the control center and the first network rate threshold, and it is determined that the network rate information does not meet the second preset condition.

For example, the network rate of the control center is 500KB/s, the first network rate threshold is 100KB/s, and other devices controlled by the control center have devices with a network rate of 600KB/s. At this time, when the network rate of other devices controlled by the control center is equal to the sum of the network rate of the control center and the first network rate threshold, it is determined that the network rate information meets the second preset condition.

In other embodiments, a second network rate threshold can also be set, and the second network rate threshold is the minimum network rate that does not affect the ability of the control center to provide control services. If the network rate of the control center is greater than or equal to the second network rate threshold, it is determined that the network rate information does not meet the second preset condition; and/or, if the network rate of the control center is less than the second network rate threshold, it is determined that the network rate information meets the second preset condition.

For example, the network rate of the control center is 400KB/s, and the second network rate threshold is 500KB/s. Since the network rate of the control center is less than the second network rate threshold, it may be determined that the network rate information meets the second preset condition.

For the use information meeting the third preset condition, the third preset condition may include a rule for detecting traffic information to determine whether the control center is suitable to continue to serve as the control center to provide control functions. In order not to affect the linkage of various devices in the connection network, it is necessary to select a device with a large amount of remaining traffic as the control center. It may be that the remaining traffic of other devices controlled by the control center is greater than the remaining traffic of the control center, it is determined that the traffic information meets the third preset condition.

In this embodiment, a first remaining traffic threshold may also be set for the comparison between the remaining traffic of other devices controlled by the control center and the remaining traffic of the control center. For example, when the remaining traffic of other devices controlled by the control center is greater than or equal to the sum of the remaining traffic of the control center and the first remaining traffic threshold, it is determined that the traffic information meets the third preset condition; and/or, when other devices controlled by the control center do not have a situation in which the remaining traffic of the device is greater than or equal to the sum of the remaining traffic of the control center and the first remaining traffic threshold, that is, the remaining traffic of other devices controlled by the control center is less than the sum of the remaining traffic of the control center and the first remaining traffic threshold, it is determined that the traffic information does not meet the third preset condition.

For example, the remaining traffic of the control center is 2000MB, the first remaining traffic threshold is 300MB, and other devices controlled by the control center have a remaining traffic of 2300MB. At this time, when the remaining traffic of other devices controlled by the control center is equal to the sum of the remaining traffic of the control center and the first remaining traffic threshold, it is determined that the traffic information meets the third preset condition.

In other embodiments, a second remaining traffic threshold may also be set, and the second remaining traffic threshold is the minimum remaining traffic that does not affect the ability of the control center to provide management services. If the remaining traffic of the control center is greater than or equal to the second remaining traffic threshold, it is determined that the traffic information does not meet the third preset condition; and/or, if the remaining traffic of the control center is less than the second remaining traffic threshold, it is determined that the traffic information meets the third preset condition.

For example, the remaining traffic of the control center is 1800MB, and the second remaining traffic threshold is 2000MB. Since the remaining traffic of the control center is less than the second remaining traffic threshold, it may be determined that the traffic information meets the third preset condition.

The third preset condition may also include a rule of detecting use habit information to determine whether the control center is suitable to continue to serve as the control center to provide control functions.

In an embodiment, if the user is used to running with a smart earphone or smart watch at a certain time in the morning, watching videos on a PAD at a certain time in the evening, and using a mobile phone to read at a certain time in the morning on weekends, then, if the control center at the corresponding time point is not a device conforming to the user's habits, it may be determined that the third preset condition is met.

In another embodiment, if the user is used to using different devices in different environments, such as watching a smart TV at home, watching a car terminal in a car, using a smart phone in a company, etc., then, if the corresponding environment control center is not a device conforming to the user's habits, it may be determined that the third preset condition is met.

The third preset condition may also include a rule for detecting the currently used application information to determine whether the control center is suitable to continue to serve as the control center to provide control functions.

In an embodiment, if the user is using the control center to watch videos or play games, or the like, in general, when watching videos and playing games, the corresponding device interfaces are displayed in full screen, which is inconvenient for users to switch to the corresponding application interface of the control center to use the control functions of the control center. Therefore, if the control center is running video applications, game applications and other applications that are inconvenient to switch to other interfaces, it is determined that the currently used application information meets the third preset condition; and/or, if the control center is running to facilitate switching to other interface applications, it is determined that the currently used application information does not meet the third preset condition.

In another embodiment, if the user is making a phone call, video chatting, or conference call, and it is inconvenient for the user to switch interfaces or controls at this time, it is determined that the currently used application information meets the third preset condition.

For the distance information meeting the fourth preset condition, the fourth preset condition may include a rule for detecting the distance information to determine whether the control center is suitable to continue to serve as the control center to provide control functions.

In an embodiment, when the distance between the user and the control center exceeds a preset range, it is determined that the distance information meets the fourth preset condition.

In an embodiment, each device in the connection network has a certain relative distance when the user uses it. When the distance between the control center and other devices controlled by it is greater than or equal to a preset distance threshold, it is determined that the distance information meets the fourth preset condition; and/or, when the distance between the control center and other devices controlled by it is less than a preset distance threshold, it is determined that the distance information does not meet the fourth preset condition.

In another embodiment, if each connection network device is used as a control center, the total distance between the device and other connection network devices can also be calculated. The device with the shortest total distance value is selected as the candidate control center, and if the control center is different from the candidate control center, it is determined that the distance information meets the fourth preset condition.

In an embodiment, for the application information meeting the fifth preset condition, the application information may be installed application and/or running application information. For example, if there is no security protection application (such as Kingsoft Antivirus, 360 Security Guard, etc.) in the installation application or running application, there may be security risks or risks as the control center, and the application information can be determined to meet the fifth preset condition.

For another example, if the currently running application (can be the foreground or the background) occupies more system resources (such as games, videos, etc.) or has a higher priority (such as phone calls, text messages, emails, etc.) or preset list applications, it is generally inconvenient for the user to switch to the corresponding operation interface of the control center and/or perform the control function of the control center, then it is determined that the application information meets the fifth preset condition.

For the state information meeting the sixth preset condition, the sixth preset condition may include a rule for detecting the terminal state information to determine whether the control center is suitable to continue serving as the control center to provide control functions. In order not to affect the linkage of various devices in the connection network, it is necessary to select a device with a short response time corresponding to the terminal state as the control center.

In an embodiment, the terminal state information may be the data processing capability of the device, such as the number or frequency of CPUs, the number or frequency of GPUs, the number or frequency of NPUs, memory capacity, memory processing speed, or the like. If the data processing capability of the control center is not the strongest or does not belong to the strong category, it is determined that the terminal state information meets the sixth preset condition.

In another embodiment, for the current data processing capability of the device, it may be that the response time corresponding to the device state of other devices controlled by the control center is shorter than the response time corresponding to the device state of the control center, it is determined that the terminal state information meets the sixth preset condition. For example, the response time corresponding to the device state of the control center is 50ms, if other devices controlled by the control center have a device whose response time corresponds to the device state is 40ms, it can be determined that the terminal state information meets the sixth preset condition.

A first response time threshold may also be set for the comparison between the response time corresponding to the device state of other devices controlled by the control center and the response time corresponding to the device state of the control center. For example, when the sum of the response time corresponding to the device state of the device and the first response time threshold is less than or equal to the response time corresponding to the device state of the control center in other devices controlled by the control center, it is determined that the terminal state information meets the sixth preset condition; and/or, when the sum of the response time corresponding to the device state of the device and the first response time threshold is less than or equal to the response time corresponding to the device state of the control center does not exist in other devices controlled by the control center, that is, the sum of the response time corresponding to the device state of other devices controlled by the control center and the first response time threshold is greater than the response time corresponding to the device state of the control center, it is determined that the terminal state information does not meet the sixth preset condition.

For example, the response time corresponding to the device state of the control center is 50ms, the first response time threshold is 10ms, and other devices controlled by the control center has a device with a response time corresponding to the device state of 40ms. At this time, when the sum of the response time corresponding to the device state of the device and the first response time threshold is equal to the response time corresponding to the state of the control center in other devices controlled by the control center, it is determined that the terminal state information meets the sixth preset condition.

In other embodiments, a second response time threshold may also be set, and the second response time threshold is the maximum response time that does not affect the ability of the control center to provide management services. If the response time corresponding to the device state of the control center is shorter than or equal to the second response time threshold, it is determined that the terminal state information does not meet the sixth preset condition; and/or, if the response time corresponding to the device state of the control center is longer than the second response time threshold, it is determined that the terminal state information meets the sixth preset condition.

For example, the response time corresponding to the device state of the control center is 60ms, and the second response time threshold is 50ms. Since the response time corresponding to the device state of the control center is longer than the second response time threshold, it may be determined that the terminal state information meets the sixth preset condition.

In other embodiments, for a device in a charging state, the power consumption of the device at this time should be reduced as much as possible to prevent the battery from being depleted. Therefore, if the device is in the charging state, it is determined that the terminal state information meets the sixth preset condition; and/or, if the device is in the non-charging state, it is determined that the terminal state information does not meet the sixth preset condition.

In other embodiments, for a device in a moving state, since it is inconvenient for the user to operate or control, it may be determined that the terminal state information meets the sixth preset condition.

In other embodiments, for a device in a stuck state, the control center may not be able to control other devices well because it cannot respond well to the user's operation, and it can be determined that the terminal state information meets the sixth preset condition.

The sixth preset condition also includes a rule for detecting power information to determine whether the control center is suitable to continue to serve as the control center to provide control functions. In order not to affect the linkage of various devices in the connection network, it is necessary to select a device with a long available time corresponding to the power as the control center. It may be that the available time corresponding to the power of other devices controlled by the control center is longer than the available time corresponding to the power of the control center, it is determined that the power information meets the sixth preset condition. It may also be that the remaining power value of other devices controlled by the control center is greater than the power of the control center, it is determined that the power information meets the sixth preset condition.

In this embodiment, a first available time threshold may also be set for the comparison between the available time corresponding to the power of other devices controlled by the control center and the available time corresponding to the power of the control center. For example, when the available time corresponding to the power of other devices controlled by the control center is longer than or equal to the sum of the available time corresponding to the power of the control center and the first available time threshold, it is determined that the power information meets the sixth preset condition; and/or, when there is no other device controlled by the control center, the available time corresponding to the power of the device is longer than or equal to the sum of the available time corresponding to the power of the control center and the first available time threshold, that is, when the available time corresponding to the power of other devices controlled by the control center is less than the sum of the available time corresponding to the power of the control center and the first available time threshold, it is determined that the power information does not meet the sixth preset condition.

For example, the available time corresponding to the power of the control center is 200 minutes, the first available time threshold is 30 minutes, and there are other devices controlled by the control center with the corresponding available time of 170 minutes. At this time, when the available time corresponding to the power of other devices controlled by the control center is equal to the sum of the available time corresponding to the power of the control center and the first available time threshold, it is determined that the power information meets the sixth preset condition.

In other embodiments, a second available time threshold may also be set, and the second available time threshold is the minimum available time that does not affect the ability of the control center to provide management services. If the available time corresponding to the power of the control center is longer than or equal to the second available time threshold, it is determined that the power information does not meet the sixth preset condition; and/or, if the available time corresponding to the power of the control center is shorter than the second available time threshold, it is determined that the power information meets the sixth preset condition.

For example, the available time corresponding to the power of the control center is 180 minutes, and the second available time threshold is 200 minutes. Since the available time corresponding to the power of the control center is shorter than the second available time threshold, it may be determined that the power information meets the sixth preset condition.

The sixth preset condition also includes a rule for detecting storage space information to determine whether the control center is suitable to continue serving as the control center to provide control functions. In order not to affect the linkage of devices in the connection network, it is necessary to select a device with a large remaining storage space as the control center. It may be that the remaining storage space of other devices controlled by the control center is greater than the remaining storage space of the control center to determine that the storage space information meets the sixth preset condition. It may also be that the access speed of the storage space of other devices controlled by the control center (such as a high version of UFS or eMMC or SD) is greater than the access speed of the storage space of the control center (such as a lower version of UFS or eMMC or SD) to determine that the storage space information meets the sixth preset condition.

In this embodiment, a first remaining storage space threshold may also be set for the comparison between the remaining storage space of other devices controlled by the control center and the remaining storage space of the control center. For example, when the remaining storage space of other devices controlled by the control center is greater than or equal to the sum of the remaining storage space of the control center and the first remaining storage space threshold, it is determined that the storage space information meets the sixth preset condition; and/or, when the remaining storage space of other devices controlled by the control center is not greater than or equal to the sum of the remaining storage space of the control center and the first remaining storage space threshold, that is, the remaining storage space of other devices controlled by the control center is less than the sum of the remaining storage space of the control center and the first remaining storage space threshold, it is determined that the storage space information does not meet the sixth preset condition.

For example, the remaining storage space of the control center is 2000MB, the first remaining storage space threshold is 300MB, other devices controlled by the control center have a remaining storage space of 2300M B. At this time, when the remaining storage space of other devices controlled by the control center is equal to the sum of the remaining storage space of the control center and the first remaining storage space threshold, it is determined that the storage space information meets the sixth preset condition.

In other embodiments, a second remaining storage space threshold may also be set, and the second remaining storage space threshold is the minimum remaining storage space that does not affect the ability of the control center to provide management services. If the remaining storage space of the control center is greater than or equal to the second remaining storage space threshold, it is determined that the storage space information does not meet the sixth preset condition; and/or, if the remaining storage space of the control center is smaller than the second remaining storage space threshold, it is determined that the storage space information meets the sixth preset condition.

For example, the remaining storage space of the control center is 1800MB, and the second remaining storage space threshold is 2000MB. Since the remaining storage space of the control center is less than the second remaining storage space threshold, it can be determined that the storage space information meets the sixth preset condition.

In an embodiment, if the control center meets at least one of the first preset condition, the second preset condition, the third preset condition, the fourth preset condition, the fifth preset condition, and the sixth preset condition, the execution of a preset control operation by the control center may be: transferring or migrating or duplicating or backing up the control function and/or relevant data of the control center to at least one target device.

In an embodiment, the target device may be at least one of the following:
at least one of the other devices controlled by the control center;
the device with the least number of connections among other devices controlled by the control center;
the device with the smoothest connection state or the least number of disconnections among other devices controlled by the control center;
the device with the best network rate among other devices controlled by the control center;
the device with the largest number of CPUs or the highest frequency among other devices controlled by the control center;
the device with the largest number or highest frequency of GPUs among other devices controlled by the control center;
the device with the largest number or highest frequency of NPUs among other devices controlled by the control center;
the device with the largest memory capacity or the fastest processing speed among other devices controlled by the control center;
the device with the shortest response time among other devices controlled by the control center;
the device in a charging or non-charging state among other devices controlled by the control center;
the device in motion or non-motion among other devices controlled by the control center;
the device in a non-stuck state among other devices controlled by the control center;
the device with the most remaining power among other devices controlled by the control center;
the device with the largest battery capacity among other devices controlled by the control center;
the device with the longest available time corresponding to the power in other devices controlled by the control center;
the device with the largest remaining storage space among other devices controlled by the control center;
the device with the fastest access to storage space in other devices controlled by the control center;
the device that meets the time limit conditions among other devices controlled by the control center;
the device that meets geographical restrictions among other devices controlled by the control center;
one of the devices that are convenient to use in the user's environment among other devices controlled by the control center;
the device with the most remaining traffic among other devices controlled by the control center;
one of the other devices controlled by the control center that meets the user's use habits;
one of the other devices controlled by the control center that meets the use habits of the user in the environment;
one of the other devices controlled by the control center that is not currently running video applications or game applications or other preset applications;
one of the other devices controlled by the control center that is not currently in a call or video chat or conference call or other preset use state;
one of the devices currently closest to the user among other devices controlled by the control center;
one of the devices with the shortest total distance to other devices among other devices controlled by the control center;
one of the devices that is conveniently obtained by the current user among other devices controlled by the control center;
one of the other devices controlled by the control center whose current mode meets the requirements, the current mode meeting the requirements includes at least one of the following: the current mode is smart mode, the current mode is linkage mode, the current mode is control mode, the current mode is power saving mode, and the current mode is normal mode.

For the control center to send the response instruction to the target device, the preset event determination information for determining whether a preset event occurs includes at least one of the following: environment information, time information, and location information.

For the environment information, the environment information includes external environment information, and the control center generates a response instruction for the environment information when the brightness of the current external ambient light reaches the brightness threshold and/or the loudness of the current external environmental noise reaches the loudness threshold.

For example, when the brightness of the current external ambient light reaches the brightness threshold and/or the loudness of the current external environmental noise reaches the loudness threshold, if the brightness is lower than the brightness threshold and the loudness is lower than the loudness threshold, it can be determined that the user has a need for sleep. At this time, an environment suitable for sleeping (such as turning off the lights and smart TV) can be created for the user, and the control center generates a response instruction related to turning off the lights. In an embodiment, when the control center generates the above-mentioned response instruction, it may also add a relevant instruction for outputting prompt information to the response instruction. The relevant instruction can act on the control center and/or the target device. For example, the control center can output prompt information (such as the text "good night"), or the smart TV can output prompt information, or the control center and smart TV can jointly output prompt information, to remind the user why the smart TV takes corresponding actions (such as turning off the screen).

Correspondingly, the control judgment information corresponding to the environment information is the user physiological parameter information. It can be understood that the user physiological parameter information is used to determine the user's need for sleep again, so as to improve the reliability of the control center to generate a corresponding response instruction and send the response instruction to the target device. When the user physiological parameter information is that the user physiological parameter reaches the physiological parameter threshold, the control condition is met. For example, if the user physiological parameter is a pulse parameter, the number of times corresponding to the user's pulse when the user is resting or sleeping (such as 50 times) will be less than the number of times corresponding to the user's pulse when the user is awake (such as 70 times), then the physiological parameter threshold is set between 50-70 times, for example, 60 times, then when the physiological parameter is less than 60 times, the control judgment information meets the control conditions, and the control center sends a response instruction to the target device. When the physiological parameter is greater than 60 times, the control judgment information does not meet the control condition, and the control center does not send a response instruction to the target device. The user physiological parameter information can also be used as preset event determination information, and similarly, the external environment information can also be used as control judgment information.

For the time information, when the control center acquires that the current time is the time corresponding to the user's behavior habits, it generates a response instruction for the time information and the corresponding behavior habits.

For example, the current time is 20:00 Beijing time, and the user's living habit is that when Beijing time is 20:00, the smart TV will be turned on to watch TV programs. At this time, case 1: the response instruction generated by the control center is to wake up the system; or case 2: the response instruction generated by the control center is to turn on the TV program (such as the TV program watched last time by the user). It can be understood that, case 1 is for the smart TV in the dormant state, and case 2 is for the smart TV in the running state. When the control center generates a corresponding response instruction, the response instruction may be a combination of case 1, case 2, or case 1 and case 2. In an embodiment, when the control center generates the above response instructions, it may also add relevant instructions for outputting prompt information for the response instructions corresponding to each situation combination, The relevant instruction can act on the control center and/or the smart TV, that is, the prompt information can be output by the control center, the smart TV can output prompt information, or the control center and the smart TV can jointly output prompt information, to remind the user why the Smart TV will take a corresponding action (for example, turn on or brighten the screen or turn off or turn off the screen or turn on a certain TV channel or switch TV channels, etc.).

Correspondingly, the control judgment information corresponding to the time information is the terminal state information, that is, whether the smart TV is in the power-on state. If the smart TV is in the off state, it cannot receive and process the response instruction sent by the control center, then the control judgment information does not meet the control conditions, and the control center will not send the response instruction to the target device. If the smart TV is in the power-on state, it can receive and process the response instruction sent by the control center, then the control judgment information meets the control conditions, and the control center sends the response instruction to the target device.

In an embodiment, when the control center and the target device (such as a smart TV) are already connected and the target device is turned on, if a preset event occurs (such as reaching the preset time at 24 o'clock), then, according to user habit data or user settings or system settings, the control center can send instructions to the smart TV to sleep or shut down, and/or output reminder information.

For the location information, when the control center acquires that the current location corresponds to the user's behavior habits, it generates a response instruction for the location information and the corresponding behavior habits.

For example, the current location is the company address, and the user's living habits are that, when the current location is the company address, turn on the navigation of the vehicle terminal for driving route planning (such as the route home from the company). When the control center generates the above response instruction, it may also add related instructions for outputting prompt information to the response instruction. The related instruction can act on the control center and/or vehicle terminal. For example, the prompt information can be output by the control center (such as the text "the navigation of the vehicle terminal is turned on"), or the prompt information can be output by the vehicle terminal, or the prompt information can be output jointly by the control center and the vehicle terminal, to remind the user why the vehicle-mounted terminal takes corresponding actions (such as turning on navigation).

Correspondingly, the control judgment information corresponding to the location information is the vehicle state information, that is, whether the vehicle corresponding to the vehicle terminal is in the starting state or has completed the starting state. If the vehicle is in the starting state or has completed the starting state, it can receive and process the response instruction sent by the control center, then the control judgment information meets the control conditions, and the control center sends the response instruction to the target device; and/or, if the vehicle is not started and cannot receive and process the response instruction sent by the control center, the control judgment information does not meet the control conditions, and the control center does not send the response instruction to the target device.

For the control center to perform a preset control operation, the preset event determination information for determining whether a preset event occurs in the connection network includes at least one of the following:
the information content, environment information, time information, and location information of the preset event determination information.

For the time information, when the control center obtains that the current time is the time preset by the user, it generates a response instruction for the time information. For example, if the current time is 20:00 Beijing time and the preset time is also 20:00 Beijing time, the preset event determination information meets the preset event determination condition.

For the location information, when the control center obtains that the current location is the preset location of the user, it generates a response instruction for the location information. For example, if the current location is home and the preset location is home, then the preset event determination information meets the preset event determination condition.

In an embodiment, the information content includes at least one of the following: sender information, receiver information, information text content, and information display mode;
the environment information includes at least one of the following: external environment information and use environment information.

In an embodiment, the information content may include at least one of sender information, receiver information, information text content, and information presentation; the environment information may include at least one of external environment information and use environment information.

In an embodiment, the sender information is the information corresponding to the sender of the preset event determination information. The receiver information is the information corresponding to the recipient of the preset event determination information. The content of the message text is the content text of the preset event determination information. The information presentation mode is the preset event sent by the sender device to the receiver device to determine the information presentation mode, specifically taking SMS or message notification events as an example. The sender information of the SMS or message confirmation information may refer to the sender's device information (such as address, name, type, logo), sender's name, sender's number (such as telephone, QQ, WeChat, email), etc. The receiver information of the short message or message confirmation information may refer to the receiver's device information, the receiver's name, the receiver's number, or the like. The information text content of the short message or message confirmation information may refer to the text content of the short message or message. The information display mode of the short message or message confirmation information may be interface output, or voice broadcast, etc.

In an embodiment, the environment information may include at least one of external environment information and use environment information. The device connected to the network where the control center is located has the ability to obtain external environment information, such as obtaining the brightness of external ambient light and obtaining the loudness of external environmental noise. During the use of the device, the use environment information changes with the user's environment. The user's environment can be perceived through sensors (such as cameras, microphones, GPS, Bluetooth, WIFI, gravity sensors, acceleration sensors, gyroscopes, etc.). If the user is in motion, the device can detect that the user is in a motion environment, or if the user is driving, the device can detect that the user is in a driving environment, or if the user is working or meeting, the device can detect that the user is in a working or meeting environment.

If the connection state information meets the first preset rule, a corresponding device control operation is executed according to the first preset strategy.

Whether the connection state information meets the first preset rule is detected, and if the connection state information meets the first preset rule, a corresponding device control operation is performed according to the first preset strategy. The first preset rule is to determine whether the control center exits the connection network by detecting the connection state information. If the control center exits the connection network, the connection state information meets the first preset rule, and/or, if the control center does not exit the connection network, the connection state information does not meet the first preset rule.

In an embodiment, if the number of connections in the control center exceeds a preset threshold or maximum value, then the connection state information meets a first preset rule, and the corresponding device control operation is performed according to the first preset strategy.

In another embodiment, if the connection state of the control center is not smooth or the number of disconnections exceeds a preset number, then the connection state information meets the first preset rule, and the corresponding device control operation is performed according to the first preset strategy.

If the network rate information meets the second preset rule, a corresponding device control operation is performed according to the second preset strategy.

In an embodiment, whether the network rate information meets the second preset rule is detected, and if the network rate information meets the second preset rule, the corresponding device control operation is performed according to the second preset strategy.

The second preset rule is a rule for determining whether the control center is suitable to continue serving as the control center to provide control functions by detecting network rate information. In order not to affect the linkage of various devices in the connection network, it is necessary to select a device with a high network rate as the control center.

For example, it may be that the network rate of other devices controlled by the control center is greater than the network rate of the control center, it is determined that the network rate information meets the second preset rule. For example, the network rate of the control center is 500KB/s, if other devices controlled by the control center have devices with a network rate greater than 500KB/s, it can be determined that the network rate information meets the second preset rule.

In this embodiment, a first network rate threshold may also be set for the comparison between the network rates of other devices controlled by the control center and the network rate of the control center. For example, when the network rate of other devices controlled by the control center is greater than or equal to the sum of the network rate of the control center and the first network rate threshold, it is determined that the network rate information meets the second preset rule; and/or, when there is no other device controlled by the control center whose network rate is greater than or equal to the sum of the network rate of the control center and the first network rate threshold, that is, the network rates of other devices controlled by the control center are all less than the sum of the network rate of the control center and the first network rate threshold, it is determined that the network rate information does not meet the second preset rule.

For example, the network rate of the control center is 500KB/s, the first network rate threshold is 100KB/s, and other devices controlled by the control center have devices with a network rate of 600KB/s. At this time, when the network rate of other devices controlled by the control center is equal to the sum of the network rate of the control center and the first network rate threshold, it is determined that the network rate information meets the second preset rule.

In other embodiments, a second network rate threshold may also be set, and the second network rate threshold is the minimum network rate that does not affect the ability of the control center to provide management services. If the network rate of the control center is greater than or equal to the second network rate threshold, it is determined that the network rate information does not meet the second preset rule; and/or, if the network rate of the control center is less than the second network rate threshold, it is determined that the network rate information meets the second preset rule.

For example, the network rate of the control center is 400KB/s, and the second network rate threshold is 500KB/s. Since the network rate of the control center is less than the second network rate threshold, it may be determined that the network rate information meets the second preset rule.

If the terminal state information meets the third preset rule, a corresponding device control operation is performed according to the third preset strategy.

In an embodiment, it is detected whether the terminal state information meets the third preset rule, and if the terminal state information meets the third preset rule, a corresponding device control operation is executed according to the third preset strategy. The third preset rule is a rule for determining whether the control center is suitable for continuing to serve as the control center to provide control functions by detecting terminal state information. In order not to affect the linkage of each device in the connection network, it is necessary to select a device with a short response time corresponding to the device state as the control center.

In an embodiment, the terminal state information may be the data processing capability of the device, such as the number or frequency of CPUs, the number or frequency of GPUs, the number or frequency of NPUs, memory capacity, memory processing speed, etc., If the data processing capability of the control center is not the strongest or does not belong to a strong category, it is determined that the terminal state information meets the third preset rule.

In another embodiment, for the current data processing capability of the device, it may be that the response time corresponding to the device state of other devices controlled by the control center is shorter than the response time corresponding to the device state of the control center, it is determined that the terminal state information meets the third preset rule. For example, the response time corresponding to the device state of the control center is 50ms, if other devices controlled by the control center have a device whose response time corresponds to the device state is 40ms, it can be determined that the terminal state information meets the third preset rule.

A first response time threshold may also be set for the comparison between the response time corresponding to the device state of other devices controlled by the control center and the response time corresponding to the device state of the control center. For example, when the sum of the response time corresponding to the device state of the device and the first response time threshold is less than or equal to the response time corresponding to the device state of the control center in other devices controlled by the control center, it is determined that the terminal state information meets the third preset rule; and/or, when the sum of the response time corresponding to the device state of the device and the first response time threshold is less than or equal to the response time corresponding to the device state of the control center does not exist in other devices controlled by the control center, that is, the sum of the response time corresponding to the device state of other devices controlled by the control center and the first response time threshold is greater than the response time corresponding to the device state of the control center, and it is determined that the terminal state information does not meet the third preset rule.

For example, the response time corresponding to the device state of the control center is 50ms, the first response time threshold is 10ms, and other devices controlled by the control center have a device with a response time corresponding to the device state of 40ms. At this time, when the sum of the response time corresponding to the device state of the device and the first response time threshold is equal to the response time corresponding to the state of the control center in other devices controlled by the control center, it is determined that the terminal state information meets the third preset rule.

In other embodiments, a second response time threshold may also be set, and the second response time threshold is the maximum response time that does not affect the ability of the control center to provide management services. If the response time corresponding to the device state of the control center is shorter than or equal to the second response time threshold, it is determined that the terminal state information does not meet the third preset rule; and/or, if the response time corresponding to the device state of the control center is longer than the second response time threshold, it is determined that the terminal state information meets the third preset rule.

For example, the response time corresponding to the device state of the control center is 60ms, and the second response time threshold is 50ms. Since the response time corresponding to the device state of the control center is longer than the second response time threshold, it may be determined that the terminal state information meets the third preset rule.

In other embodiments, for a device in a charging state, the power consumption of the device at this time should be reduced as much as possible to prevent the battery from being depleted. Therefore, if the device is in the charging state, it is determined that the terminal state information meets the third preset rule; and/or, if the device is in the non-charging state, it is determined that the terminal state information does not meet the third preset rule.

In other embodiments, for a device in a moving state, because it is inconvenient for the user to operate or control, it can be determined that the terminal state information meets the third preset rule.

In other embodiments, for a device in a stuck state, the control center may not be able to control other devices well because it cannot respond well to the user's operation, it can be determined that the terminal state information meets the third preset rule.

If the power information meets the fourth preset rule, a corresponding device control operation is executed according to the fourth preset strategy.

Whether the power information meets the fourth preset rule is detected, and if the power information meets the fourth preset rule, a corresponding device control operation is performed according to the fourth preset strategy. The fourth preset rule is a rule for determining whether the control center is suitable to continue serving as the control center to provide control functions by detecting power information. In order not to affect the linkage of various devices in the connection network, it is necessary to select a device with a long available time corresponding to the power as the control center. It may be that the available time corresponding to the power of other devices controlled by the control center is longer than the available time corresponding to the power of the control center, to determine that the power information meets the fourth preset rule. It may also be that the remaining power values of other devices controlled by the control center are greater than the power of the control center, to determine that the power information meets the fourth preset rule.

In this embodiment, a first available time threshold may also be set for the comparison between the available time corresponding to the power of other devices controlled by the control center and the available time corresponding to the power of the control center. For example, when the available time corresponding to the power of other devices controlled by the control center is longer than or equal to the sum of the available time corresponding to the power of the control center and the first available time threshold, it is determined that the power information meets the fourth preset rule; and/or, when there is no other device controlled by the control center, the available time corresponding to the power of the device is longer than or equal to the sum of the available time corresponding to the power of the control center and the first available time threshold, that is, when the available time corresponding to the power of other devices controlled by the control center is less than the sum of the available time corresponding to the power of the control center and the first available time threshold, it is determined that the power information does not meet the fourth preset rule.

For example, the available time corresponding to the power of the control center is 200 minutes, the first available time threshold is 30 minutes, and other devices controlled by the control center have the corresponding available time of 170 minutes. At this time, when the available time corresponding to the power of other devices controlled by the control center is equal to the sum of the available time corresponding to the power of the control center and the first available time threshold, it is determined that the power information meets the fourth preset rule.

In other embodiments, a second available time threshold may also be set, and the second available time threshold is the minimum available time that does not affect the ability of the control center to provide management services. If the available time corresponding to the power of the control center is longer than or equal to the second available time threshold, it is determined that the power information does not meet the fourth preset rule; and/or, if the available time corresponding to the power of the control center is shorter than the second available time threshold, it is determined that the power information meets the fourth preset rule.

For example, the available time corresponding to the power of the control center is 180 minutes, and the second available time threshold is 200 minutes. Since the available time corresponding to the power of the control center is shorter than the second available time threshold, it can be determined that the power information meets the fourth preset rule.

If the storage space information meets the fifth preset rule, a corresponding device control operation is executed according to the fifth preset strategy.

Whether the storage space information meets the fifth preset rule is detected, and if the storage space information meets the fifth preset rule, a corresponding device control operation is performed according to the fifth preset strategy. The fifth preset rule is a rule for determining whether the control center is suitable to continue serving as the control center to provide control functions by detecting storage space information. In order not to affect the linkage of devices in the connection network, it is necessary to select a device with a large remaining storage space as the control center. It may be that the remaining storage space of other devices controlled by the control center is greater than the remaining storage space of the control center, to determine that the storage space information meets the fifth preset rule. It may also be that the access speed of the storage space of other devices controlled by the control center (such as a high version of UFS or eMMC or SD) is greater than the access speed of the storage space of the control center (such as a lower version of UFS or eMMC or SD), to determine that the storage space information meets the fifth preset rule.

In this embodiment, a first remaining storage space threshold may also be set for the comparison between the remaining storage space of other devices controlled by the control center and the remaining storage space of the control center. For example, when the remaining storage space of other devices controlled by the control center is greater than or equal to the sum of the remaining storage space of the control center and the first remaining storage space threshold, it is determined that the storage space information meets the fifth preset rule; and/or, when the remaining storage space of other devices controlled by the control center is not greater than or equal to the sum of the remaining storage space of the control center and the first remaining storage space threshold, that is, the remaining storage space of other devices controlled by the control center is less than the sum of the remaining storage space of the control center and the first remaining storage space threshold, it is determined that the storage space information does not meet the fifth preset rule.

For example, the remaining storage space of the control center is 2000MB, the first remaining storage space threshold is 300MB, other devices controlled by the control center have a remaining storage space of 2300M B. At this time, when the remaining storage space of other devices controlled by the control center is equal to the sum of the remaining storage space of the control center and the first remaining storage space threshold, it is determined that the storage space information meets the fifth preset rule.

In other embodiments, a second remaining storage space threshold may also be set, and the second remaining storage space threshold is the minimum remaining storage space that does not affect the ability of the control center to provide management services. If the remaining storage space of the control center is greater than or equal to the second remaining storage space threshold, it is determined that the storage space information does not meet the fifth preset rule; and/or, if the remaining storage space of the control center is smaller than the second remaining storage space threshold, it is determined that the storage space information meets the fifth preset rule.

For example, the remaining storage space of the control center is 1800MB, and the second remaining storage space threshold is 2000MB. Since the remaining storage space of the control center is smaller than the second remaining storage space threshold, it may be determined that the storage space information meets the fifth preset rule.

If the external environment information meets the sixth preset rule, a corresponding device control operation is performed according to the sixth preset strategy.

Whether the external environment information meets the sixth preset rule is detected, and if the external environment information meets the sixth preset rule, a corresponding device control operation is performed according to the sixth preset strategy. The sixth preset rule is a rule for determining whether the control center is suitable to continue serving as the control center to provide control functions by detecting the external environment information.

In an embodiment, when it is detected that the brightness of the external ambient light reaches the brightness threshold and/or the loudness of the external environmental noise reaches the loudness threshold, it is determined that the external environment information meets the sixth preset rule; and/or, when it is detected that the brightness of external ambient light does not reach the brightness threshold and/or the loudness of external environmental noise does not reach the loudness threshold, it is determined that the external environment information does not meet the sixth preset rule.

For example, when the brightness of the external ambient light reaches the brightness threshold and the loudness of the external environmental noise reaches the loudness threshold, for example, the brightness is lower than the brightness threshold and the loudness is lower than the loudness threshold, it can be determined that the user is ready to enter or is already in a quiet state (such as sleep). At this time, it is inconvenient for the user to obtain devices such as mobile phones and PADs, but it is convenient for users to obtain devices such as smart bracelets and smart watches. Therefore, if the brightness of the ambient light is lower than the brightness threshold and before the loudness of the ambient noise is lower than the loudness threshold, the control center is one of the devices currently inconvenient for users to obtain, such as mobile phones and PADs, it is determined that the external environment information meets the sixth preset rule; and/or, if the brightness of the external ambient light is lower than the brightness threshold and before the loudness of the external ambient noise is lower than the loudness threshold, the control center is a smart bracelet, a smart watch and other devices that are currently readily available, it is determined that the external environment information does not meet the sixth preset rule.

In another embodiment, the external environment information may be time information and/or geographical information. If it is in a time when it is inconvenient to use the control center (for example, it is not convenient to use a mobile phone during working duration, or in the early hours of the morning), or a place where the control center is not allowed to be carried (for example, occasions where the mobile phone is not allowed to enter), it is determined that the external environment information meets the sixth preset rule.

If the use environment information meets the seventh preset rule, the corresponding device control operation is performed according to the seventh preset strategy.

Whether the use environment information meets the seventh preset rule is detected, and if the use environment information meets the seventh preset rule, the corresponding device control operation is performed according to the seventh preset strategy. The seventh preset rule is a rule for determining whether the control center is suitable to continue serving as the control center to provide control functions by detecting the use environment information.

In an embodiment, if the user is in the exercise environment, it is obvious that the user is inconvenient to use devices such as mobile phones and PADs, but it is convenient to use wearable devices such as smart bracelets and smart watches. Therefore, if before the user is in the exercise environment, the control center is one of the devices that are inconvenient for the user to use when exercising, such as mobile phones and PADs, then it is determined that the use environment information meets the seventh preset rule; and/or if the user is in the exercise environment and the control center is one of the devices that are convenient for the user to use during exercise, such as smart bracelets and smart watches, it is determined that the use environment information does not meet the seventh preset rule.

Detecting whether the user is in the exercise environment can be determined according to the scene mode of the control center (such as sports mode, outdoor mode, etc.), can also be determined based on motion sensors of the control center and/or other devices, or can be determined based on camera data of the control center and/or other devices.

In another embodiment, if the user is in a driving environment, it is obvious that the user is inconvenient to use devices such as mobile phones and PADs, but it is convenient to use devices such as smart watches, smart earphones, and vehicle terminals. Therefore, if before the user is in the driving environment, the control center is one of the mobile phones, PADs and other devices that are inconvenient for the user to use, it is determined that the use environment information meets the seventh preset rule; and/or, if the user is in the driving environment and the control center is one of the devices that are convenient for the user to use in the driving environment, such as smart watches, smart earphones, and vehicle terminals, then it is determined that the use environment information does not meet the seventh preset rule.

Detecting whether the user is in the driving environment can be determined according to the scene mode of the control center (such as driving mode, navigation mode, etc.), can also be determined based on motion sensors or geographical information of the control center and/or other devices, can also be determined according to the camera data of the control center and/or other devices, and can also be determined through the wireless connection information of the control center and/or other devices (such as connected WIFI hotspots, paired and connected Bluetooth devices, etc.).

In another embodiment, if the user is in a home environment, it is obvious that the user is more convenient to use devices such as smart TVs and smart speakers. Therefore, if before the user is in the home environment, the control center is one of the mobile phone, PAD and other devices that the user is inconvenient to use, it is determined that the use environment information meets the seventh preset rule; and/or, if the user is in the home environment and the control center is one of the devices that are convenient for the user to use in the home environment, such as smart TVs and smart speakers, it is determined that the use environment information does not meet the seventh preset rule.

Detecting whether the user is in the home environment can be determined according to the scene mode of the control center (such as work mode, home mode, etc.), can also be determined based on the geographic information of the control center and/or other devices, can also be determined according to the camera data of the control center and/or other devices, and can also be determined through the wireless connection information of the control center and/or other devices (such as connected WIFI hotspots, paired and connected Bluetooth devices, etc.).

In an embodiment, if the user leaves the home or driving environment and switches to a new environment, such as a working environment, it is inconvenient for the user to use devices such as vehicle terminals and smart TVs, but it is convenient to use devices such as mobile phones and smart watches. Therefore, if before the user is in a new environment, the control center is one of the inconvenient vehicle-mounted terminal, smart TV and other devices for the user, then it is determined that the use environment information meets the seventh preset rule; and/or, if before the user is in a new environment, the control center is one of the mobile phones, smart watches and other devices that are convenient for the user to use when working, then it is determined that the use environment information does not meet the seventh preset rule.

Detecting whether the user is in a non-home or non-driving environment can be determined based on the scene mode of the control center (such as work mode, sports mode, etc.), or can be determined based on the geographical information of the control center and/or other devices, can also be determined according to the camera data of the control center and/or other devices, and can also be determined through the wireless connection information of the control center and/or other devices (such as connected WIFI hotspots, paired and connected Bluetooth devices, etc.).

In another embodiment, if the user is in a meeting environment, it is inconvenient for the user to use devices such as smart earphones that need to be controlled by voice instructions, but it is convenient to use devices such as mobile phones and smart watches that can be controlled by touch commands. Therefore, if the user is in the meeting environment and the control center is one of the devices such as smart earphones that are inconvenient for the user to use during the meeting, it is determined that the use environment information meets the seventh preset rule; and/or, if the user is in the meeting environment and the control center is one of the mobile phones, smart watches and other devices that are convenient for the user to use during the meeting, it is determined that the use environment information does not meet the seventh preset rule.

If the traffic information meets the eighth preset rule, a corresponding device control operation is performed according to the eighth preset strategy.

Whether the traffic information meets the eighth preset rule is detected, and if the traffic information meets the eighth preset rule, a corresponding device control operation is performed according to the eighth preset strategy. The eighth preset rule is a rule for determining whether the control center is suitable to continue serving as the control center to provide control functions by detecting traffic information. In order not to affect the linkage of various devices in the connection network, it is necessary to select a device with a large amount of remaining traffic as the control center. It may be that the remaining traffic of other devices controlled by the control center is greater than the remaining traffic of the control center, to determine that the traffic information meets the eighth preset rule.

In this embodiment, a first remaining traffic threshold may also be set for the comparison between the remaining traffic of other devices controlled by the control center and the remaining traffic of the control center. For example, when the remaining traffic of other devices controlled by the control center is greater than or equal to the sum of the remaining traffic of the control center and the first remaining traffic threshold, it is determined that the traffic information meets the eighth preset rule; and/or, when other devices controlled by the control center do not have a situation in which the remaining traffic of the device is greater than or equal to the sum of the remaining traffic of the control center and the first remaining traffic threshold, that is, the remaining traffic of other devices controlled by the control center is less than the sum of the remaining traffic of the control center and the first remaining traffic threshold, it is determined that the traffic information does not meet the eighth preset rule.

For example, the remaining traffic of the control center is 2000MB, the first remaining traffic threshold is 300MB, and other devices controlled by the control center have a remaining traffic of 2300MB. At this time, when the remaining traffic of other devices controlled by the control center is equal to the sum of the remaining traffic of the control center and the first remaining traffic threshold, it is determined that the traffic information meets the eighth preset rule.

In other embodiments, a second remaining traffic threshold may also be set, and the second remaining traffic threshold is the minimum remaining traffic that does not affect the ability of the control center to provide management services. If the remaining traffic of the control center is greater than or equal to the second remaining traffic threshold, it is determined that the traffic information does not meet the eighth preset rule; and/or, if the remaining traffic of the control center is less than the second remaining traffic threshold, it is determined that the traffic information meets the eighth preset rule.

For example, the remaining traffic of the control center is 1800MB, and the second remaining traffic threshold is 2000MB. Since the remaining traffic of the control center is less than the second remaining traffic threshold, it can be determined that the traffic information meets the eighth preset rule.

If the use habit information meets the ninth preset rule, a corresponding device control operation is performed according to the ninth preset strategy.

Whether the use habit information meets the ninth preset rule is detected, and if the use habit information meets the ninth preset rule, a corresponding device control operation is performed according to the ninth preset strategy. The ninth preset rule is a rule for determining whether the control center is suitable for continuing to serve as the control center to provide control functions by detecting the use habit information.

In an embodiment, if users are used to running with smart earphones or smart watches at a certain time in the morning, watching videos on a PAD at a certain time in the evening, and using mobile phones to read at a certain time in the morning on weekends, then, if the control center at the corresponding time point is not a device that meets the user's habits, it can be determined that the ninth preset rule is met.

In another embodiment, if users are used to using different devices in different environments, such as watching smart TV at home, watching vehicle terminals in the car, and using smartphones in the company, etc., then, if the corresponding environment control center is not a device conforming to the user's habit, it can be determined that the ninth preset rule is met.

If the distance information meets the tenth preset rule, a corresponding device control operation is performed according to the tenth preset strategy.

Whether the distance information meets the tenth preset rule is detected, and if the distance information meets the tenth preset rule, a corresponding device control operation is performed according to the tenth preset strategy. The tenth preset rule is a rule for determining whether the control center is suitable to continue serving as the control center to provide control functions by detecting distance information.

In an embodiment, when the distance between the user and the control center exceeds the preset range, it is determined that the distance information meets the tenth preset rule.

In an embodiment, each device in the connection network has a certain relative distance when the user uses it. When the distance between the control center and other devices controlled by it is greater than or equal to the preset distance threshold, it is determined that the distance information meets the tenth preset rule; and/or, when the distance between the control center and other devices controlled by it is less than a preset distance threshold, it is determined that the distance information does not meet the tenth preset rule.

In another embodiment, if each connection network device is used as a control center, the total distance between the device and other connection network devices can also be calculated. The device with the shortest total distance value is selected as the candidate control center. If the control center is different from the candidate control center, it is determined that the distance information meets the tenth preset rule.

If the user physiological parameter information meets the eleventh preset rule, a corresponding device control operation is performed according to the eleventh preset strategy.

Whether the user physiological information meets the eleventh preset rule is detected, and if the user physiological parameter information meets the eleventh preset rule, a corresponding device control operation is performed according to the eleventh preset strategy. The eleventh preset rule is a rule for determining whether the control center is suitable to continue serving as the control center to provide control functions by detecting the user physiological information.

In an embodiment, when it is detected that the user physiological information reaches the preset physiological information threshold, it is determined that the user physiological information meets the eleventh preset rule. The user physiological information may be detected by the control center and/or other devices. Physiological information may be at least one of heart rate, blood pressure, pulse, blood oxygen, and blood sugar.

If a user's heart rate is generally 70 to 80 beats/minute when the user is in a non-sleeping state, and the heart rate is generally 40 to 50 beats/minute when the user is in a sleeping state, then the preset heart rate threshold can be set to 50 beats/minute. When it is detected that the user's heart rate reaches 50 beats/minute, it can be determined that the user is in a sleep state. If the control center is not a wearable device such as a smart watch or a smart bracelet that is convenient for the user to obtain and operate, it is determined that the physiological information meets the eleventh preset rule.

In an embodiment, the user's heart rate is generally 100 to 130 beats per minute when he is in a state of exercise. When it is detected that the user's heart rate reaches 110 beats/minute, it can be determined that the user is in a state of exercise. If the control center is a device that is inconvenient for the user to obtain and operate, such as a smart phone, it may also be determined that the physiological information meets the eleventh preset rule.

In an embodiment, the control center performing a preset control operation, or performing a corresponding device control operation includes at least one of the following:
the control center immediately or delays or regularly or periodically sends the response instruction to the target device;
switching some or all of the control functions to the target device;
duplicating some or all of the control functions to the target device;
activating some or all of the control functions on the target device;
migrating or transferring or backing up the relevant data of the control center to the target device;
the control center outputs first prompt information, and/or controls a device directly or indirectly connected to the control center to output second prompt information.

In an embodiment, the control center performing a preset control operation, or performing a corresponding device control operation includes at least one of: the control center immediately or delays or regularly or periodically sends the response instruction to the target device; switching some or all of the control functions to the target device; duplicating some or all of the control functions to the target device; activating some or all of the control functions on the target device; migrating or transferring or backing up the relevant data of the control center to the target device; the control center outputs first prompt information, and/or controls a device directly or indirectly connected to the control center to output second prompt information.

When the control center sends the response instruction to the target device, the strategy of immediate or delayed sending can be adopted. For immediate sending, understandably, when the preset event is that the user needs to rest or sleep, the control center immediately turns off the lights and immediately provides the user with an environment suitable for rest or sleep, which can improve user experience and make the control center more flexible and intelligent when performing control functions. For delayed sending, understandably, when the preset event is that the user needs to watch a program through the smart TV, the control center can output relevant prompt information to the user in advance before the current time reaches the preset time, so as to remind the user that the program he wants to watch is about to be played. However, no response instruction is sent to the target device at this time, but the response instruction is sent to the target device when the current time is the preset time. Before sending the response instruction to the target device, relevant prompt information can also be output to the user, which improves the user experience and makes the control center more flexible and intelligent when performing control functions.

For switching part or all of the control function to the target device, when the control center is no longer suitable to continue to serve as the control center to provide the control function, the control center will switch the control function to the target device that is suitable as the control center to provide the control function.

In some application scenarios, the control functions may not all need to be switched to the target device, but only those related to the target device, or frequently used, or supported by the target device. In this way, the switching control function can be achieved to facilitate user operation, and can save switching resources and/or reduce power consumption.

It is also possible to duplicate some or all of the control functions to the target device. It is equivalent to that in addition to the control center, at least one target device can also have the same control function as the control center, which can provide users with more operation entrances, thereby achieving more flexible and powerful functions. In some implementations, in order to reduce user misoperation, it can also be set that only one device with control function is active. That is, although there may be multiple devices with control functions in the connection network (such as the control center, target device, etc. in this embodiment, and even every device in the connection network supports the control function), only one device can issue control commands at the same time. Which one can be determined in multiple ways, for example, it can be the device that the user is currently using; can also be the device with the most remaining power or the largest battery capacity; can be a device with the most powerful processing capability or smooth system operation or currently not running entertainment or multimedia applications (such as video, games, etc.) or currently running preset applications (such as phone calls, text messages, emails, WeChat, etc.); can also be determined according to the priority of the device, for example, the device with the highest priority.

For migrating or transferring the relevant data of the control center to the target device, when the control center transfers the control function to the target device, the relevant data in the control center can be migrated or transferred to the target device, so that the target device can perform the control function according to the relevant data. In addition, all devices connected to the network have the ability to act as a control center. Therefore, when the control center does not migrate or transfer relevant data in the control center to the target device, but only transfers the control function to the target device, the target device can also perform the control function.

In particular, when the control center performs the control function, it can synchronize relevant data to the cloud. For the control center meeting the second preset condition, since the control center has not had time to migrate or transfer the relevant data to the target device, it exits the connection network. Therefore, other devices controlled by the control center can continue to use the relevant data before the control center exits the network connection, such as maintaining the setting item parameters, while the target device obtains the relevant data before the control center exits the network connection from the cloud. For the control center meeting the fourth preset condition, the control center starts to migrate or transfer relevant data when the distance from other devices under its control is greater than or equal to the preset distance threshold, so as to ensure that the relevant data migration or transfer is completed before the control center is disconnected from the connection network.

The control center outputs the first prompt information, and/or controls a device directly or indirectly connected with the control center to output the second prompt information. It can be understood that the purpose of the first prompt information and the second prompt information may be to enable the user to understand the reason why the control center sends the response instruction to the target device and the control operation performed by the target device in response to the response instruction.

For example, referring to FIG. 27, 400 is a control center, which is a mobile phone, and 401 is a list of devices controlled by the mobile phone, including smart watches, smart earphones and smart TVs. 4000 is the target device, which is a smart watch controlled by a mobile phone. 4001 is the list of devices controlled by the smart watch after the control center is switched to the smart watch, including the control center mobile phone, smart earphones and smart TV. 4002 is the pop-up prompt information output by the target device after the control function of the control center is switched from the control center to the target device. This pop-up box can also be output by the control center.

In an embodiment, the target device corresponds to the preset information, or the target device is determined by any of the following methods:
the first or last or any of the devices that initiated the connection;
the device with the strongest processing capability or the smoothest state, or any processing capability meets the requirements (such as CPU main frequency exceeds a certain set value, such as 800M), or any state meets the conditions (such as the system resource usage does not exceed a certain threshold, such as 50%);
the device with the largest battery capacity or the most remaining power, or the current power value meets the conditions (such as the remaining power exceeds 20%);
the system default;
the device with the highest priority or any priority that meets the conditions (such as higher than or equal to the preset priority);
the device with the shortest or longest distance or any distance that meets the conditions (such as greater than or equal to the preset distance value);
the device with the highest security level or any security level that meets the conditions (such as higher than or equal to the preset security level);
user choice or user habit.

In an embodiment, the target device corresponds to the preset information, or the target device is determined by any of the following methods: the first or last or any of the devices that initiated the connection; the device with the strongest processing capability or the smoothest state, or any processing capability meets the requirements (such as CPU main frequency exceeds a certain set value, such as 800M), or any state meets the conditions (such as the system resource usage does not exceed a certain threshold, such as 50%); the device with the largest battery capacity or the most remaining power, or the current power value meets the conditions (such as the remaining power exceeds 20%); the system default; the device with the highest priority or any priority that meets the conditions (such as higher than or equal to the preset priority); the device with the shortest or longest distance or any distance that meets the conditions (such as greater than or equal to the preset distance value); the device with the highest security level or any security level that meets the conditions (such as higher than or equal to the preset security level); user choice or user habit.

In an embodiment, the target device can be understood that its corresponding preset information is optimal relative to the preset information corresponding to each device in the connection network. For example, the processing capability of the target device is the strongest relative to the processing capabilities of each device in the connection network. It can be understood that the principle of selecting the target device is to select the device that is most suitable for the user under the current conditions (such as the current moment). For example, for the first device to initiate a connection, it can be understood that this device is the first to access the connection network, that is, the device that the user has been using. Similarly, for the last device that initiates a connection, it can be understood that at least one device already exists in the connection network before the last device that initiates a connection accesses the connection network. The last device that initiates the connection is the latest device connected to the connection network, that is, the device that the user carries has just entered the accessible range of the connection network, that is, the device is currently used by the user.

For example, referring to FIG. 31, if the target device is the device with the highest security level, the control center 8000 can output the first prompt information through the pop-up box 8001: "The control function has been switched to the device with the highest security level for you".

In this embodiment, the processing method includes: when a preset event occurs in the connection network, generating and/or determining a response instruction of the target device corresponding to the preset event, and obtaining the preset information and/or the preset strategy; according to the response instruction, the preset information and/or the preset strategy determining and/or performing a corresponding control strategy. When a preset event occurs in the connection network, the control center can generate the corresponding response instruction and obtain the preset information and/or the preset strategy, and determine and/or execute the corresponding control strategy through response instructions, preset information and/or preset strategies, which makes the control interaction between the devices more flexible and intelligent after the devices are connected to each other.

In an embodiment, based on another embodiment of the processing method of the present application, another embodiment is proposed, the relevant data further includes at least one first relevant data and/or at least one second relevant data. The operation of migrating or transferring or backing up relevant data in the control center to the target device includes at least one of the following:
only backing up or transferring the first relevant data in the control center to the target device;
only backing up or transferring the second relevant data in the control center to the target device;
in addition to backing up or transferring the first relevant data in the control center to the target device, backing up or transferring second relevant data corresponding to the first relevant data to the target device;
backing up or transferring the first relevant data and corresponding update data in the control center to the target device;
backing up or transferring the second relevant data and corresponding update data in the control center to the target device;
backing up or transferring the first relevant data and the corresponding update data in the control center, and the update data of the second relevant data to the target device.

In an embodiment, the relevant data may also include at least one first relevant data and/or at least one second relevant data. After the target device is determined, the relevant data in the control center can be selectively backed up or transferred to the target device, so that the target device can perform the control function according to the relevant data.

In an embodiment, the way of backing up or transferring the first relevant data and the second relevant data includes at least one of the following: only backing up or transferring the first relevant data in the control center to the target device; only backing up or transferring the second relevant data in the control center to the target device; in addition to backing up or transferring the first relevant data in the control center to the target device, backing up or transferring second relevant data corresponding to the first relevant data to the target device; backing up or transferring the first relevant data and corresponding update data in the control center to the target device; backing up or transferring the second relevant data and corresponding update data in the control center to the target device; backing up or transferring the first relevant data and the corresponding update data in the control center, and the update data of the second relevant data to the target device.

For connection information data, the first relevant data may be connection information between the control center and other devices controlled by the control center. The second relevant data may be connection information between other devices controlled by the control center. The update data may be the data corresponding to the relevant data updated by the control center during the process of backing up or transferring the relevant data. In the process of backing up or transferring relevant data, if a device outside the connection network joins the connection network and connects to the control center, then the update data at this time is the connection information between the device joining the connection network and the control center corresponding to the first relevant data.

For the setting item parameter data, the first relevant data may be the setting data corresponding to the shortcut function, such as the setting data for quickly opening the music playback function. The second relevant data may be an application (such as a music player) or a local file (such as music, video, sound effect) associated with the shortcut function. The update data may be the data corresponding to the relevant data updated by the control center during the process of backing up or transferring the relevant data. During the process of backing up or transferring relevant data, if the setting data corresponding to the shortcut function changes, the opening gesture instruction of the shortcut function has changed, from "double-click" the button corresponding to the shortcut function to "click" the button corresponding to the shortcut function, then the update data at this time is the setting data corresponding to the "click" gesture instruction to open the shortcut function.

For relevant download data, the first relevant data may be the version number, release time, installation package and other data of the control center application. The second relevant data may be data generated during the operation of the control center application. The update data may be the data corresponding to the relevant data updated by the control center during the process of backing up or transferring the relevant data, for example, the data generated during the operation of the control center application by the control center during the process of backing up or transferring the relevant data.

Therefore, when the control center transfers the control function of the control center to the target device, at least one of connection information data, setting item parameter data and related download data in the control center can be migrated or transferred to the target device. For example, migrating or transferring the connection information data to the target device, so that the target device can establish a connection relationship with other devices controlled by the control center according to the connection information data. If the target device directly initiates a connection request to the device corresponding to the device's physical address according to the device's physical address in the connection information data, there is no need to first search for devices within the connectable range of the target device to obtain the physical address of the device, so as to initiate a connection request.

This embodiment provides a variety of migration or transfer solutions for relevant data, so that there are more implementation methods for relevant data when migrating or transferring, which meets more user demands, improves user experience, and makes the control center more flexible and intelligent when performing control functions.

Referring to FIG. 33, an embodiment of the processing method of the present application is proposed. Although a logical order is shown in the flowcharts, in some cases the steps shown or described may be performed in an order different from that shown or described herein. The processing method is applied to at least one control center, including:
operation D310, when a preset event occurs in the connection network, generating and/or determining a response instruction corresponding to the preset event;
operation D320, obtaining control judgment information, and determining the target device according to the control judgment information and/or the preset rule;
operation D330, sending the response instruction to the target device immediately or after a delay or periodically, and/or, the control center performing a preset control operation.

As another embodiment, the processing method includes the following operations:
operation D310, when a preset event occurs in the connection network, obtaining control judgment information, and determining the target device according to the control judgment information and/or the preset rule;
operation D320, generating and/or determining a response instruction corresponding to the preset event;
operation D330, sending the response instruction to the target device immediately or after a delay or periodically, and/or, the control center performing a preset control operation.

The difference between this embodiment and the previous embodiment lies in that the sequence of steps for generating the response instruction of the target device corresponding to the preset event is different.

Operation D310, when a preset event occurs in the connection network, generating a response instruction corresponding to the preset event.

When a preset event occurs in the connection network where the control center is located, a response instruction corresponding to the preset event is generated. The control center and other devices in the connection network may include any of terminal devices (such as smartphones, PAD, tablets) etc.), wearable smart devices (such as smart watches, smart bracelets, smart earphones, etc.), smart home devices (such as smart TV, smart speaker, etc.), and vehicle connection network devices (such as smart cars, vehicle terminals, etc.).

When a preset event occurs in the connection network, the operation of generating and/or determining a response instruction corresponding to the preset event includes at least one of the following:
when a preset event occurs in the connection network, outputting prompt information for selecting a preset mode, and generating and/or determining the response instruction based on the selected preset mode;
when a preset event occurs in the connection network, according to the correspondence between the preset event and the response instruction, automatically triggering to generate and/or determine the response instruction;
when a preset event occurs in the connection network, generating and/or determining the response instruction based on the input control instruction.

In an embodiment, when a preset event occurs in the connection network, the operation of generating and/or determining a response instruction corresponding to the preset event includes at least one of when a preset event occurs in the connection network, outputting prompt information for selecting a preset mode, and generating and/or determining the response instruction based on the selected preset mode; when a preset event occurs in the connection network, according to the correspondence between the preset event and the response instruction, automatically triggering to generate and/or determine the response instruction; when a preset event occurs in the connection network, generating and/or determining the response instruction based on the input control instruction.

When a preset event occurs in the connection network, a prompt information for selecting a preset mode is output, and the response instruction is generated and/or determined based on the selected preset mode. For the preset event, the control center outputs the corresponding prompt information, which is the information prompting the user to select the preset mode. After the user selects a corresponding preset mode, a response instruction is generated based on the selected preset mode. The preset modes may include an automatic mode and a manual mode. In the automatic mode, the corresponding response instruction can be automatically generated for different preset events; and/or, in the manual mode, a control instruction input by a user is required to generate a response instruction corresponding to the control instruction. Referring to FIG. 28, 5000 is the control center, 5001 is the background image of the display screen of the control center 5000, 5002 is the pop-up box prompt information output by the control center 5000, which is used to prompt the user to set the working mode of the control center, and the user can learn the detailed functions of the automatic mode and manual mode by clicking "View Details" therein.

When a preset event occurs in the connection network, the generation and/or determination of the response instruction is automatically triggered according to the correspondence between the preset event and the response instruction. There is a correspondence between the preset event and the response instruction, through which the matching of the preset event and the response instruction can be completed. That is, when a preset event occurs in the connection network, the control center automatically triggers and generates a corresponding response instruction without requiring the user to operate on the preset event. For example, the preset event is that the user needs to rest or sleep, and according to the correspondence, the response instruction corresponding to the rest or sleep is to turn off the light, and then the generation of the light off command is automatically triggered.

When a preset event occurs in the connection network, the response instruction is generated and/or determined based on the input control instruction. When a preset event occurs in the connection network, the corresponding optional processing item can be output to the user, and after the user inputs a corresponding control instruction for the optional processing item, the control center generates a corresponding response instruction according to the control instruction. Referring to FIG. 29, 6000 is the control center, and 6001 is a pop-up box output by the control center 6000, which is used to output corresponding optional processing items and/or corresponding prompt information. For example, the optional processing items include the options of turning off the light and not turning off the light. If the user chooses to turn off the light, a response instruction to turn off the light will be generated; and/or, if the user chooses not to turn off the light, an instruction is generated to continuously detect the user physiological information parameters, and an external environment suitable for sleeping (such as adjusting the room temperature) for the user is created after it is determined that the user is asleep.

Operation D320, obtaining control judgment information, and determining the target device according to the control judgment information and the preset rule.

The control judgment information is obtained, and the target device is determined according to the control judgment information and the preset rule.

The above control judgment information includes at least one first control judgment information and/or at least one second control judgment information, and the first control judgment information and/or second control judgment information includes at least one of the following:
user physiological parameter information, connection information, use information, distance information, application information, state information.

In an embodiment the control judgment information includes at least first control judgment information and/or at least second control judgment information. The first control judgment information is provided by the first device, and the second control judgment information is provided by the second device.

The first control judgment information and/or the second control judgment information include at least one of user physiological parameter information, connection information, use information, distance information, application information, and state information.

For the user physiological parameter information, the device connected to the network where the control center is located has the ability to obtain the user physiological parameter information, so that the device can provide corresponding services. For example, the device can provide health services by obtaining physiological parameter information such as the user's heart rate, blood pressure, pulse, blood oxygen, and blood sugar.

For the distance information, the distance between the device and the user may change during the use of the device where the control center is located and connected to the network. If the user puts the smart phone in the bedroom and goes to the living room to watch TV, the user will be farther and farther away from the smart phone when the user moves from the bedroom to the living room. Specifically, the distance between the user and the mobile phone can be sensed through wearable devices (such as smart watches) on the user's body, indoor positioning functions, or indoor monitoring equipment (such as cameras).

For application information, the application information may be information about installation applications and/or running applications. For example, if there is no security protection application (such as Kingsoft Antivirus, 360 Security Guard, etc.) in the installation application or running application, there may be security risks or risks as the control center.

In an embodiment, the connection information includes at least one of the following: connection state information and network rate information.

In an embodiment, in the above connection network, there are terminal devices or other devices that newly join the connection network (such as wearable devices, smart home devices, or car connection network devices), and there are also terminal devices or other devices that leave the connection network. In order to grasp the connection state information of each device joining or exiting the connection network, the control center can maintain a connection information table. The connection information table can record device information and/or connection information (such as connection state, connection rate, connection history, etc.) of all connection network devices, or the like. The device information may be at least one of device physical address, device name, and device code, or other information that can represent the device. The device code can be set by the control center, for example, the device code of the first device connected with the control center is 001, and the device code of the second device connected with the control center is 002. The devices in the connection network generally have the function of connecting to the interconnection network, such as smart watches, mobile phones, smart TVs, smart cars, etc. The corresponding network rate information will be affected by the device itself (for example, the processing capacity of the device is low, or the device is downloading data or there are many applications currently surfing the Internet, etc., resulting in a slow network) or by external factors (such as poor signal at the location of the device), resulting in a low network rate.

The use information includes at least one of the following: traffic information, use habit information, and currently used application information.

In an embodiment, in the above connection network, the device may have the ability to provide data network services. For example, mobile phones, PADs, etc. all have the ability to provide data network services, which are used to obtain data from the interconnection network, update applications in the device, etc. However, the current data network fee is not low, so when using data network services, it is necessary to pay special attention to traffic information. For use habit information, the user may be accustomed to using a certain device in the connection network, that is, the frequency of use of a certain device is very high, or the user is used to using a certain device connected to the network in a specific time period, specific location, and specific purpose of use, such as users are accustomed to watching videos with a PAD, but not with a mobile phone. For the currently used application information, during the use of the device, the user will install some corresponding applications according to the use requirements, such as video applications and game applications.

The state information includes at least one of the following: terminal state information, power information, and storage space information.

In an embodiment, in the above connection network, the terminal state information can be judged by the data processing capability of the device, and the data processing capability of the device is strong or weak. Moreover, it does not necessarily mean that the current data processing capability of the corresponding device is good if the hardware condition is good. It is understandable that the current data processing capability of a device with good hardware conditions in a dead state will be very weak. The terminal state information can also be whether the device is in a charging state. It can be understood that electric energy is required during the use of the device, and the electric energy is generally provided by a battery, and the battery needs to be charged when the battery is exhausted or is about to be exhausted. For power information, different devices connected to the network will have batteries with different capacities, and the batteries will have different remaining power or different battery life. For example, the battery capacity of a mobile phone is generally larger than that of a smart watch. In addition, there are also situations where the remaining power of the mobile phone is less than the current power of the smart watch due to the fact that the mobile phone is not charged. Devices connected to the network will exchange data during use and need to store the received data. The storage space information of the device can affect the performance of the device and even determine the work that the device can support, for example, the size of the storage space of the device is not enough to support the size of the data that must be downloaded for its work.

Determining the target device according to the control judgment information and the preset rule includes at least one of the following:
determining the target device according to the priority of the first control judgment information and/or the second control judgment information;
determining the first or last device or any device in the middle that initiates the connection as the target device;
determining the device with the strongest processing capability or the smoothest state, or any processing capability that meets the requirements (for example, CPU main frequency exceeds a certain preset value, such as 800M) or any state that meets the conditions (for example, the system resource occupancy rate does not exceed a certain threshold, such as 50%) as the target device;
determining the device with the largest battery capacity or the most remaining power or the current power value meets the conditions (such as the remaining power exceeds 20%) as the target device;
determining the device preset by the system as the target device;
determining the device with the highest priority or any priority that meets the conditions (such as higher than or equal to the preset priority) as the target device;
determining the device with the shortest or longest distance or any distance that meets the conditions (such as greater than or equal to the preset distance value) as the target device;
determining the device with the highest security level or any security level that meets the conditions (such as higher than or equal to the preset security level) as the target device;
determining the target device based on user selection or user habits;
determining that the device whose physiological parameter information of the user meets the first preset condition is the target device;
determining that the device whose connection information meets the second preset condition is the target device;
determining that the device whose usage information meets the third preset condition is the target device;
determining that the device whose distance information meets the fourth preset condition is the target device;
determining that the device whose application information meets the fifth preset condition is the target device;
determining that the device whose state information meets the sixth preset condition is the target device.

In an embodiment, determining the target device according to the control judgment information and the preset rule includes at least one of: determining the target device according to the priority of the first control judgment information and/or the second control judgment information; determining the first or last device or any device in the middle that initiates the connection as the target device; determining the device with the strongest processing capability or the smoothest state, or any processing capability that meets the requirements (for example, CPU main frequency exceeds a certain preset value, such as 800M) or any state that meets the conditions (for example, the system resource occupancy rate does not exceed a certain threshold, such as 50%) as the target device; determining the device with the largest battery capacity or the most remaining power or the current power value meets the conditions (such as the remaining power exceeds 20%) as the target device; determining the device preset by the system as the target device; determining the device with the highest priority or any priority that meets the conditions (such as higher than or equal to the preset priority) as the target device; determining the device with the shortest or longest distance or any distance that meets the conditions (such as greater than or equal to the preset distance value) as the target device; determining the device with the highest security level or any security level that meets the conditions (such as higher than or equal to the preset security level) as the target device; determining the target device based on user selection or user habits; determining that the device whose physiological parameter information of the user meets the first preset condition is the target device; determining that the device whose connection information meets the second preset condition is the target device; determining that the device whose usage information meets the third preset condition is the target device; determining that the device whose distance information meets the fourth preset condition is the target device; determining that the device whose application information meets the fifth preset condition is the target device; determining that the device whose state information meets the sixth preset condition is the target device.

In an embodiment, the target device can be understood that its corresponding control judgment information is optimal relative to the control judgment information corresponding to each device in the connection network. For example, the processing capability of the target device is the strongest relative to the processing capabilities of all devices in the connection network. It can be understood that the principle of selecting the target device is to select the device that is most suitable for the user under the current conditions (such as the current moment). For example, for the first device to initiate a connection, it can be understood that this device is the first to access the connection network, that is, the device that the user has been using. Similarly, for the last device that initiates a connection, it can be understood that at least one device already exists in the connection network before the last device that initiates a connection accesses the connection network. The last device that initiates the connection is the latest device connected to the connection network, that is, the device that the user carries has just entered the accessible range of the connection network, that is, the device is currently used by the user.

For example, referring to FIG. 31, if the target device is the device with the highest security level, the control center 8000 can output the first prompt information through the pop-up box 8001: "The control function has been switched to the device with the highest security level for you".

In an embodiment, weights are set for the first control judgment information and/or the second control judgment information, the higher the weight, the higher the corresponding priority, and the target device is determined in order of priority from high to low. For example, the first control judgment information and/or the second control judgment information include user physiological parameter information and connection information, and the weight of the user physiological parameter information is 5, and the weight of the connection information is 4, then the priority of the user physiological parameter information is higher than that of the connection information. When determining the target device, the user physiological parameter information is used for judgment first, and when the user physiological parameter information does not meet the conditions for being a target device, the connection information is used for judgment.

For the user physiological parameter information meeting the first preset condition, in an embodiment, when it is detected that the user physiological parameter information reaches the preset physiological parameter information threshold, it is determined that the user physiological parameter information meets the first preset condition. The user physiological parameter information can be detected by devices within the connection network. The user physiological parameter information may be at least one of heart rate, blood pressure, pulse, blood oxygen, and blood sugar. For example, if a user's heart rate is generally 70 to 80 beats/minute when the user is in a non-sleeping state, and the heart rate is generally 40 to 50 beats/minute when the user is in a sleeping state, then the preset heart rate threshold can be set to 50 beats/minute. When it is detected that the user's heart rate reaches 50 beats/minute, it can be determined that the user is in a sleep state. For another example, when a user is in a state of exercise, the heart rate is generally 100 to 130 times per minute. When it is detected that the user's heart rate reaches 110 beats/minute, it can be determined that the user is in a state of exercise, and then it is determined that the user physiological parameter information meets the first preset condition.

For the connection information meeting the second preset condition, the second preset condition may include determining whether the control center exits the connection network by detecting the connection state information. If the control center exits the connection network, the connection state information meets the second preset condition, and/or, if the control center does not exit the connection network, the connection state information does not meet the second preset condition. In an embodiment, it may be that the number of connections of the control center exceeds a preset threshold or maximum value, then the connection state information meets the second preset condition. In another embodiment, it may be that the connection state of the control center is not smooth or the number of disconnections exceeds a preset number of times, then the connection state information meets the second preset condition.

For the use information meeting the third preset condition, the second preset condition may further include a rule of detecting network rate information to determine whether the control center is suitable to continue to serve as the control center to provide control functions. In order not to affect the linkage of various devices in the connection network, it is necessary to select a device with a high network rate as the control center.

For example, it may be that the network rate of other devices controlled by the control center is greater than the network rate of the control center, it is determined that the network rate information meets the second preset condition. For example, the network rate of the control center is 500KB/s, if there is a device with a network rate greater than 500KB/s among other devices controlled by the control center, it can be determined that the network rate information meets the second preset condition.

In this embodiment, a first network rate threshold may also be set for the comparison between the network rates of other devices controlled by the control center and the network rate of the control center. For example, when the network rate of other devices controlled by the control center is greater than or equal to the sum of the network rate of the control center and the first network rate threshold, it is determined that the network rate information meets the second preset condition; and/or, when there is no other device controlled by the control center whose network rate is greater than or equal to the sum of the network rate of the control center and the first network rate threshold, that is, the network rates of other devices controlled by the control center are all less than the sum of the network rate of the control center and the first network rate threshold, it is determined that the network rate information does not meet the second preset condition.

For example, the network rate of the control center is 500KB/s, the first network rate threshold is 100KB/s, and other devices controlled by the control center have devices with a network rate of 600KB/s. At this time, when the network rate of other devices controlled by the control center is equal to the sum of the network rate of the control center and the first network rate threshold, it is determined that the network rate information meets the second preset condition.

In other embodiments, a second network rate threshold may also be set, and the second network rate threshold is the minimum network rate that does not affect the ability of the control center to provide control services. If the network rate of the control center is greater than or equal to the second network rate threshold, it is determined that the network rate information does not meet the second preset condition; and/or, if the network rate of the control center is less than the second network rate threshold, it is determined that the network rate information meets the second preset condition.

For example, the network rate of the control center is 400KB/s, and the second network rate threshold is 500KB/s. Since the network rate of the control center is less than the second network rate threshold, it may be determined that the network rate information meets the second preset condition.

For the use information meeting the third preset condition, the third preset condition may include a rule for detecting traffic information to determine whether the control center is suitable to continue to serve as the control center to provide control functions. In order not to affect the linkage of various devices in the connection network, it is necessary to select a device with a large amount of remaining traffic as the control center. It may be that the remaining traffic of other devices controlled by the control center is greater than the remaining traffic of the control center, to determine that the traffic information meets the third preset condition.

In this embodiment, a first remaining traffic threshold may also be set for the comparison between the remaining traffic of other devices controlled by the control center and the remaining traffic of the control center. For example, when the remaining traffic of other devices controlled by the control center is greater than or equal to the sum of the remaining traffic of the control center and the first remaining traffic threshold, it is determined that the traffic information meets the third preset condition; and/or, when other devices controlled by the control center do not have a situation in which the remaining traffic of the device is greater than or equal to the sum of the remaining traffic of the control center and the first remaining traffic threshold, that is, the remaining traffic of other devices controlled by the control center is less than the sum of the remaining traffic of the control center and the first remaining traffic threshold, it is determined that the traffic information does not meet the third preset condition.

For example, the remaining traffic of the control center is 2000MB, the first remaining traffic threshold is 300MB, and other devices controlled by the control center have a remaining traffic of 2300MB. At this time, when the remaining traffic of other devices controlled by the control center is equal to the sum of the remaining traffic of the control center and the first remaining traffic threshold, it is determined that the traffic information meets the third preset condition.

In other embodiments, a second remaining traffic threshold may also be set, and the second remaining traffic threshold is the minimum remaining traffic that does not affect the ability of the control center to provide management services. If the remaining traffic of the control center is greater than or equal to the second remaining traffic threshold, it is determined that the traffic information does not meet the third preset condition; and/or, if the remaining traffic of the control center is less than the second remaining traffic threshold, it is determined that the traffic information meets the third preset condition.

For example, the remaining traffic of the control center is 1800MB, and the second remaining traffic threshold is 2000MB. Since the remaining traffic of the control center is less than the second remaining traffic threshold, it can be determined that the traffic information meets the third preset condition.

The third preset condition may also include a rule of detecting use habit information to determine whether the control center is suitable to continue to serve as the control center to provide control functions.

In an embodiment, if the user is used to running with a smart earphone or smart watch at a certain time in the morning, watching videos on a PAD at a certain time in the evening, and using a mobile phone to read at a certain time in the morning on weekends, then, if the control center at the corresponding time point is not a device conforming to the user's habits, it may be determined that the third preset condition is met.

In another embodiment, if the user is used to using different devices in different environments, such as watching smart TV at home, watching vehicle terminals in the car, and using smartphones in the company, or the like, then, if the corresponding environment control center is not a device conforming to the user's habits, it may be determined that the third preset condition is met.

The third preset condition may also include a rule for detecting the currently used application information to determine whether the control center is suitable to continue to serve as the control center to provide control functions.

In an embodiment, if the user is using the control center to watch videos or play games, etc., in general, when watching videos and playing games, the corresponding device interfaces are displayed in full screen, which is inconvenient for users to switch to the corresponding application interface of the control center to use the control functions of the control center. Therefore, if the control center is running video applications, game applications and other applications that are inconvenient to switch to other interfaces, it is determined that the currently used application information meets the third preset condition; and/or, if the control center is running to facilitate switching to other interface applications, it is determined that the currently used application information does not meet the third preset condition.

In another embodiment, if the user is making a phone call, video chatting, or conference call, and it is inconvenient for the user to switch interfaces or controls at this time, it is determined that the currently used application information meets the third preset condition.

For the distance information meeting the fourth preset condition, the fourth preset condition may include a rule for detecting the distance information to determine whether the control center is suitable to continue to serve as the control center to provide control functions.

In an embodiment, when the distance between the user and the control center exceeds a preset range, it is determined that the distance information meets the fourth preset condition.

In an embodiment, each device in the connection network has a certain relative distance when the user uses it. When the distance between the control center and other devices controlled by it is greater than or equal to a preset distance threshold, it is determined that the distance information meets the fourth preset condition; and/or, when the distance between the control center and other devices controlled by it is less than a preset distance threshold, it is determined that the distance information does not meet the fourth preset condition.

In another embodiment, if each connection network device is used as a control center, the total distance between the device and other connection network devices can also be calculated. The device with the shortest total distance value is selected as the candidate control center, and if the control center is different from the candidate control center, it is determined that the distance information meets the fourth preset condition.

For the application information meeting the fifth preset condition, in an embodiment, the application information may be information about installation applications and/or running applications. For example, if there is no security protection application (such as Kingsoft Antivirus, 360 Security Guard, etc.) in the installation application or running application, there may be security risks or risks as the control center, and it is determined that the application information meets the fifth preset condition.

For another example, if the currently running application (can be the foreground or the background) occupies more system resources (such as games, videos, etc.) or has a higher priority (such as phone calls, text messages, emails, etc.) or preset list applications, if it is generally inconvenient for the user to switch to the corresponding operation interface of the control center and/or perform the control function of the control center, it is determined that the application information meets the fifth preset condition.

For the state information meeting the sixth preset condition, the sixth preset condition may include a rule for detecting the terminal state information to determine whether the control center is suitable to continue serving as the control center to provide control functions. In order not to affect the linkage of various devices in the connection network, it is necessary to select a device with a short response time corresponding to the terminal state as the control center.

In an embodiment, the terminal state information can be the data processing capability of the device, such as the number or frequency of CPU, the number or frequency of GPU, the number or frequency of NPU, memory capacity, memory processing speed, etc. If the data processing capability of the control center is not the strongest or does not belong to the strong category, it is determined that the terminal state information meets the sixth preset condition.

In another embodiment, for the current data processing capability of the device, it may be that the response time corresponding to the device state of other devices controlled by the control center is shorter than the response time corresponding to the device state of the control center, it is determined that the terminal state information meets the sixth preset condition. For example, the response time corresponding to the device state of the control center is 50ms, if other devices controlled by the control center have a device whose response time corresponds to the device state is 40ms, it can be determined that the terminal state information meets the sixth preset condition.

A first response time threshold may also be set for the comparison between the response time corresponding to the device state of other devices controlled by the control center and the response time corresponding to the device state of the control center. For example, when the sum of the response time corresponding to the device state of the device and the first response time threshold is less than or equal to the response time corresponding to the device state of the control center in other devices controlled by the control center, it is determined that the terminal state information meets the sixth preset condition; and/or, when the sum of the response time corresponding to the device state of the device and the first response time threshold is less than or equal to the response time corresponding to the device state of the control center does not exist in other devices controlled by the control center, that is, the sum of the response time corresponding to the device state of other devices controlled by the control center and the first response time threshold is greater than the response time corresponding to the device state of the control center, it is determined that the terminal state information does not meet the sixth preset condition.

For example, the response time corresponding to the device state of the control center is 50ms, the first response time threshold is 10ms, and other devices controlled by the control center have devices with a response time of 40ms corresponding to the device state. At this time, when the sum of the response time corresponding to the device state of the device and the first response time threshold is equal to the response time corresponding to the state of the control center in other devices controlled by the control center, it is determined that the terminal state information meets the sixth preset condition.

In other embodiments, a second response time threshold may also be set, and the second response time threshold is the maximum response time that does not affect the ability of the control center to provide management services. If the response time corresponding to the device state of the control center is shorter than or equal to the second response time threshold, it is determined that the terminal state information does not meet the sixth preset condition; and/or, if the response time corresponding to the device state of the control center is longer than the second response time threshold, it is determined that the terminal state information meets the sixth preset condition.

For example, the response time corresponding to the device state of the control center is 60ms, and the second response time threshold is 50ms. Since the response time corresponding to the device state of the control center is longer than the second response time threshold, it is determined that the terminal state information meets the sixth preset condition.

In other embodiments, for a device in a charging state, the power consumption of the device at this time should be reduced as much as possible to prevent the battery from being depleted. Therefore, if the device is in the charging state, it is determined that the terminal state information meets the sixth preset condition; and/or, if the device is in the non-charging state, it is determined that the terminal state information does not meet the sixth preset condition.

In other embodiments, for a device in a moving state, since it is inconvenient for the user to operate or control, it may be determined that the terminal state information meets the sixth preset condition.

In other embodiments, for a device in a stuck state, the control center may not be able to control other devices well because it cannot respond well to the user's operation, and it can be determined that the terminal state information meets the sixth preset condition.

The sixth preset condition also includes a rule for detecting power information to determine whether the control center is suitable to continue to serve as the control center to provide control functions. In order not to affect the linkage of various devices in the connection network, it is necessary to select a device with a long available time corresponding to the power as the control center. It may be that the available time corresponding to the power of other devices controlled by the control center is longer than the available time corresponding to the power of the control center, to determine that the power information meets the sixth preset condition. It may also be that the remaining power value of other devices controlled by the control center is greater than the power of the control center, to determine that the power information meets the sixth preset condition.

In this embodiment, a first available time threshold may also be set for the comparison between the available time corresponding to the power of other devices controlled by the control center and the available time corresponding to the power of the control center. For example, when the available time corresponding to the power of the other devices controlled by the control center is longer than or equal to the sum of the available time corresponding to the power of the control center and the first available time threshold, it is determined that the power information meets the sixth preset condition; and/or, when there is no other device controlled by the control center, the available time corresponding to the power of the device is longer than or equal to the sum of the available time corresponding to the power of the control center and the first available time threshold, that is, when the available time corresponding to the power of other devices controlled by the control center is less than the sum of the available time corresponding to the power of the control center and the first available time threshold, it is determined that the power information does not meet the sixth preset condition.

For example, the available time corresponding to the power of the control center is 200 minutes, the first available time threshold is 30 minutes, and there are other devices controlled by the control center with the corresponding available time of 170 minutes. At this time, when the available time corresponding to the power of other devices controlled by the control center is equal to the sum of the available time corresponding to the power of the control center and the first available time threshold, it is determined that the power information meets the sixth preset condition.

In other embodiments, a second available time threshold may also be set, and the second available time threshold is the minimum available time that does not affect the ability of the control center to provide management services. If the available time corresponding to the power of the control center is longer than or equal to the second available time threshold, it is determined that the power information does not meet the sixth preset condition; and/or, if the available time corresponding to the power of the control center is shorter than the second available time threshold, it is determined that the power information meets the sixth preset condition.

For example, the available time corresponding to the power of the control center is 180 minutes, and the second available time threshold is 200 minutes. Since the available time corresponding to the power of the control center is shorter than the second available time threshold, it can be determined that the power information meets the sixth preset condition.

The sixth preset condition also includes a rule for detecting storage space information to determine whether the control center is suitable to continue serving as the control center to provide control functions. In order not to affect the linkage of devices in the connection network, it is necessary to select a device with a large remaining storage space as the control center. It may be that the remaining storage space of other devices controlled by the control center is greater than the remaining storage space of the control center, to determine that the storage space information meets the sixth preset condition. It may also be that the access speed of the storage space of other devices controlled by the control center (such as a high version of UFS or eMMC or SD) is greater than the access speed of the storage space of the control center (such as a lower version of UFS or eMMC or SD), to determine that the storage space information meets the sixth preset condition.

In this embodiment, a first remaining storage space threshold may also be set for the comparison between the remaining storage space of other devices controlled by the control center and the remaining storage space of the control center. For example, when the remaining storage space of other devices controlled by the control center is greater than or equal to the sum of the remaining storage space of the control center and the first remaining storage space threshold, it is determined that the storage space information meets the sixth preset condition; and/or, when the remaining storage space of other devices controlled by the control center is not greater than or equal to the sum of the remaining storage space of the control center and the first remaining storage space threshold, that is, the remaining storage space of other devices controlled by the control center is less than the sum of the remaining storage space of the control center and the first remaining storage space threshold, it is determined that the storage space information does not meet the sixth preset condition.

For example, the remaining storage space of the control center is 2000MB, the first remaining storage space threshold is 300MB, and other devices controlled by the control center have a remaining storage space of 2300MB. At this time, when the remaining storage space of other devices controlled by the control center is equal to the sum of the remaining storage space of the control center and the first remaining storage space threshold, it is determined that the storage space information meets the sixth preset condition.

In other embodiments, a second remaining storage space threshold may also be set, and the second remaining storage space threshold is the minimum remaining storage space that does not affect the ability of the control center to provide management services. If the remaining storage space of the control center is greater than or equal to the second remaining storage space threshold, it is determined that the storage space information does not meet the sixth preset condition; and/or, if the remaining storage space of the control center is smaller than the second remaining storage space threshold, it is determined that the storage space information meets the sixth preset condition.

For example, the remaining storage space of the control center is 1800MB, and the second remaining storage space threshold is 2000MB. Since the remaining storage space of the control center is smaller than the second remaining storage space threshold, it can be determined that the storage space information meets the sixth preset condition.

Operation D330, sending the response instruction to the target device immediately or after a delay or periodically, and/or, the control center performs a preset control operation.

In an embodiment, the control center sends a response instruction to the target device immediately or after a delay, and/or, the control center performs a preset control operation.

For the control center to send the response instruction to the target device immediately or after a delay, when the control center sends the response instruction to the target device, it can adopt the immediate or delayed sending strategy. For immediate sending, understandably, when the preset event is that the user needs to rest or sleep, the control center will immediately turn off the lights and immediately provide the user with an environment suitable for rest or sleep, which can improve user experience and make the control center more flexible and intelligent when performing control functions. For delayed sending, understandably, when the preset event is that the user needs to watch a program through the smart TV, the control center can output relevant prompt information to the user in advance before the current time reaches the preset time, so as to remind the user that the program he wants to watch is about to be played. However, no response instruction is sent to the target device at this time, but a response instruction is sent to the target device when the current time is the preset time. Before sending a response instruction to the target device, relevant prompt information can also be output to the user, which improves the user experience and makes the control center more flexible and intelligent when performing control functions.

The control center performing a preset control operation includes at least one of switching some or all of the control functions to the target device; duplicating some or all of the control functions to the target device; activating some or all of the control functions on the target device; migrating or transferring or backing up the relevant data of the control center to the target device; the control center outputs first prompt information, and/or controls a device directly or indirectly connected to the control center to output second prompt information.

For switching part or all of the control functions to the target device, when the control center is no longer suitable to continue to serve as the control center to provide the control function, the control center will switch the control function to the target device that is suitable as the control center to provide the control function.

In some application scenarios, the control functions may not all need to be switched to the target device, but only those related to the target device, or frequently used, or supported by the target device. In this way, the switching control function can be achieved to facilitate user operation, and can save switching resources and/or reduce power consumption.

It is also possible to duplicate some or all of the control functions to the target device. It is equivalent to that in addition to the control center, at least one target device can also have the same control function as the control center, which can provide users with more operation entrances, thereby achieving more flexible and powerful functions. In some implementations, in order to reduce user misoperation, it can also be set that only one device with control function is active. That is: although there may be multiple devices with control functions in the connection network (such as the control center, target device, etc. in this embodiment, and even every device in the connection network supports the control function), only one device can issue control instructions at the same time. The specific one can have multiple determination strategies, for example, it can be the device that the user is currently using; it can also be the device with the most remaining power or the largest battery capacity; it can be a device with the most powerful processing capability or smooth system operation or currently not running entertainment or multimedia applications (such as video, games, etc.) or currently running preset applications (such as phone calls, text messages, emails, WeChat, etc.); it may also be determined according to the priority of the device, for example, the device with the highest priority.

For migrating or transferring the relevant data of the control center to the target device, when the control center transfers the control function to the target device, the relevant data in the control center can be migrated or transferred to the target device, so that the target device can perform the control function according to the relevant data. In addition, all devices connected to the network have the ability to act as a control center. Therefore, when the control center does not migrate or transfer relevant data in the control center to the target device, but only transfers the control function to the target device, the target device can also perform the control function.

In particular, when the control center performs control functions, it can synchronize relevant data to the cloud. For the control center meeting the second preset condition, since the control center has not had time to migrate or transfer the relevant data to the target device, it exits the connection network. Therefore, other devices controlled by the control center can continue to use the relevant data before the control center exits the network connection, such as maintaining the setting item parameters, while the target device obtains the relevant data before the control center exits the network connection from the cloud. For the control center meeting the fourth preset condition, the control center starts to migrate or transfer relevant data when the distance from other devices under its control is greater than or equal to the preset distance threshold, so as to ensure that the relevant data migration or transfer is completed before the control center is disconnected from the connection network.

The control center outputs the first prompt information, and/or controls a device directly or indirectly connected with the control center to output the second prompt information. It can be understood that the purpose of the first prompt information and the second prompt information may be to enable the user to understand the reason why the control center sends the response instruction to the target device and the control operation performed by the target device in response to the response instruction.

For example, referring to FIG. 27, 400 is a control center, which is a mobile phone, and 401 is a list of devices controlled by the mobile phone, including smart watches, smart earphones and smart TVs. 4000 is the target device, which is a smart watch controlled by a mobile phone. 4001 is the list of devices controlled by the smart watch after the control center is switched to the smart watch, including the control center mobile phone, smart earphones and smart TV. 4002 is the pop-up box prompt information output by the target device after the control function of the control center is switched from the control center to the target device. Of course, the pop-up box can also be output by the control center.

In this embodiment, the processing method includes: when a preset event occurs in the connection network, generating and/or determining a response instruction corresponding to the preset event; obtaining control judgment information, and determining a target device according to the control judgment information and/or the preset rule; sending the response instruction to the target device immediately or with a delay or at regular intervals or periodically, and/or, the control center performs a preset control operation. When a preset event occurs in the connection network, the control center can generate a corresponding response instruction, and control itself or the target device to make a corresponding response through the response instruction, which makes the control interaction between the devices more flexible and intelligent after the devices are connected to each other.

In an embodiment, based on an embodiment of the processing method of the present application, another embodiment is proposed. The relevant data also includes at least one first relevant data and/or at least one second relevant data. The operation of migrating or transferring or backing up relevant data in the control center to the target device includes at least one of the following:
only backing up or transferring the first relevant data in the control center to the target device;
only backing up or transferring the second relevant data in the control center to the target device;
in addition to backing up or transferring the first relevant data in the control center to the target device, backing up or transferring second relevant data corresponding to the first relevant data to the target device;
backing up or transferring the first relevant data and corresponding update data in the control center to the target device;
backing up or transferring the second relevant data and corresponding update data in the control center to the target device;
backing up or transferring the first relevant data and the corresponding update data in the control center, and the update data of the second relevant data to the target device.

In an embodiment, the relevant data may also include at least one first relevant data and/or at least one second relevant data. After the target device is determined, the relevant data in the control center can be selectively backed up or transferred to the target device, so that the target device can perform the control function according to the relevant data.

In an embodiment, the way of backing up or transferring the first relevant data and the second relevant data includes at least one of the following: only backing up or transferring the first relevant data in the control center to the target device; only backing up or transferring the second relevant data in the control center to the target device; in addition to backing up or transferring the first relevant data in the control center to the target device, backing up or transferring second relevant data corresponding to the first relevant data to the target device; backing up or transferring the first relevant data and corresponding update data in the control center to the target device; backing up or transferring the second relevant data and corresponding update data in the control center to the target device; backing up or transferring the first relevant data and the corresponding update data in the control center, and the update data of the second relevant data to the target device.

For connection information data, the first relevant data may be connection information between the control center and other devices controlled by the control center. The second relevant data may be connection information between other devices controlled by the control center. The update data may be the data corresponding to the relevant data updated by the control center during the process of backing up or transferring the relevant data. If in the process of backing up or transferring relevant data, there is a device outside the connection network joining the connection network and connecting with the control center, then the update data at this time is the connection information between the device joining the connection network and the control center corresponding to the first relevant data.

For the setting item parameter data, the first relevant data may be the setting data corresponding to the shortcut function, such as the setting data for quickly opening the music playback function. The second relevant data may be an application (such as a music player) or a local file (such as music, video, sound effect) associated with the shortcut function. The update data may be the data corresponding to the relevant data updated by the control center during the process of backing up or transferring the relevant data. During the process of backing up or transferring the relevant data, if the setting data corresponding to the shortcut function changes, the opening gesture instruction of the shortcut function also changed, from "double-click" the button corresponding to the shortcut function to "click" the button corresponding to the shortcut function, then the update data at this time is the setting data corresponding to the "click" gesture instruction to open the shortcut function.

For relevant download data, the first relevant data may be the version number, release time, installation package and other data of the control center application. The second relevant data may be data generated during the operation of the control center application. The update data may be the data corresponding to the relevant data updated by the control center during the process of backing up or transferring the relevant data, for example, the data generated during the operation of the control center application by the control center during the process of backing up or transferring the relevant data.

Therefore, when the control center transfers the control function of the control center to the target device, at least one of connection information data, setting item parameter data and relevant download data in the control center can be migrated or transferred to the target device. For example, the connection information data is migrates or transferred to the target device, so that the target device can establish a connection relationship with other devices controlled by the control center according to the connection information data. For example, the target device directly initiates a connection request to the device corresponding to the device's physical address according to the device's physical address in the connection information data, without first searching for devices within the connectable range of the target device to obtain the device's physical address, thereby initiating a connection request.

This embodiment provides a variety of migration or transfer solutions for relevant data, so that there are more implementation methods for relevant data when migrating or transferring, which meets more user instructions, improves user experience, and makes the control center more flexible and intelligent when performing control functions.

In an embodiment, the present application further provides a processing device. As shown in FIG. 34, the processing device includes:
a generating module 10, configured to generate and/or determine a response instruction corresponding to a target device corresponding to the preset event when a preset event occurs in the connection network where it is located;
an obtaining module 20, configured to acquire control judgment information;
a sending module 30, configured to send the response instruction to the target device by the control center when the control judgment information meets the control condition; and/or
an execution module 40, configured to execute a preset control operation by the control center when the control judgment information meets a control condition.

In an embodiment, the processing device also includes:
a maintenance module, configured for the control center to maintain the topology of the connection network; and/or
a connection module, configured for direct or indirect connection between the target device and the control center.

In an embodiment, the present application further provides a processing device, including:
a first obtaining module 10, configured to acquire control judgment information when a preset event occurs in the connection network where it is located, and execute step D10 when the control judgment information meets the control condition;
a second obtaining module 20, configured to acquire preset information and/or preset strategy;
a determination and/or execution module 30, configured to determine and/or execute a corresponding control strategy according to the preset information and/or the preset strategy.

In an embodiment, the present application further provides a processing device, including:
a generating module 10, configured to generate and/or determine a response instruction corresponding to a target device corresponding to the preset event when a preset event occurs in the connection network where it is located;
an obtaining module 20, configured to obtain the preset information and/or the preset strategy;
a determination and/or execution module, configured to determine and/or execute a corresponding control strategy according to the response instruction, the preset information and/or the preset strategy.

In an embodiment, the present application further provides a processing device, including:
a generating module 10, configured to generate and/or determine a response instruction corresponding to the preset event when a preset event occurs in the connection network where it is located;
an obtaining module 20, configured to acquire control judgment information;
a determining module 30, configured to determine the target device according to the control judgment information and the preset rule;
a sending module 40, configured to immediately or delay sending the response instruction to the target device; and/or
an execution module 50, configured for the control center to execute a preset control operation.

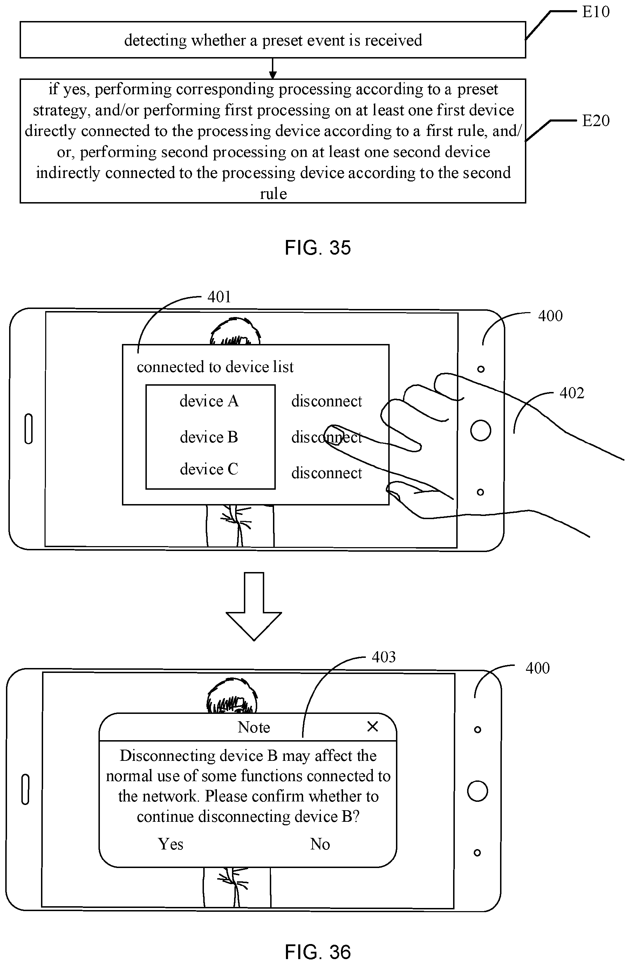

The present application provides a processing method. Referring to FIG. 35, FIG. 35 is a schematic flowchart of a processing method according to an embodiment of the present application.

The embodiment of the present application provides the processing method. Although a logical order is shown in the flowcharts, in some cases the steps shown or described may be performed in an order different from that shown or described herein. The processing method can be applied to a processing device including but not limited to a personal computer, a smart phone, and the like. For the convenience of description, the following steps are omitted to describe the processing method of the execution subject, and the processing method includes:
Operation E10, detecting whether a preset event is received.

In an embodiment, it is detected whether a preset event occurs in the connection network, such as detecting whether a preset event occurred in the connection network is received.

The preset event includes at least one of the following:
a first preset event occurs in the processing device;
a second preset event occurs on the first device, and in an embodiment, the first device is directly connected to the processing device;
a third preset event occurs on the second device, and in an embodiment, the second device is indirectly connected to the processing device.

In an embodiment, the preset event includes at least one of a first preset event occurring on the processing device, a second preset event occurring on the first device, and a third preset event occurring on the second device. In an embodiment, the first device is directly connected to the device, and the second device is indirectly connected to the device.

In an embodiment, the processing device may be the current management device connected to the network. It can be understood that the management device can be switched to connect to any device in the network as required, including the first device and the second device. The first device is a device within at least one connection network directly connected to the processing device. It can be understood that the first device may also be a type of device, for example, the first device is at least one device in a connection network directly connected to the processing device. Likewise, the second device is at least one device in a connection network indirectly connected to the processing device.

In an embodiment, the processing device, the first device and the second device include any one of terminal devices (such as smart phones, PAD, Tablet PC, etc.), wearable smart devices (such as smart watches, smart bracelets, smart earphones, etc.), smart home devices (such as smart TVs, smart speakers, etc.) and Internet of Vehicles devices (such as smart cars, vehicle terminals, etc.).

In an embodiment, the processing device is in a connection network. The connection network includes the processing device, the first device and the second device. The first preset event or the second preset event or the third preset event includes at least one of the following:
at least one of the processing device, the first device and the second device is in or switched to a preset mode; the preset mode can be set by the system or set by the user or selected by the user, and the preset mode can be an intelligent mode or an interconnected mode or a linkage mode or a transfer mode, or the like.

At least one of the processing device, the first device and the second device is in or switched to a preset environment. In an embodiment, the preset environment can be a preset time (such as day, night, weekdays, holidays, 7:00 am, 10:00 am, 11:00 pm, or the like), or a preset location (such as home, office, subway, bus, car, or the like), an environment where the brightness value meets the brightness threshold condition (such as, dark, bright), or an environment where the noise value meets the noise threshold condition (such as, noisy, quiet), or the like.

At least one of the processing device, the first device, and the second device detects that the user physiological information meets a first preset condition. In an embodiment, the physiological information can be heart rate, blood oxygen, blood pressure, blood sugar, or the like, and the heart rate is taken as an example. If the heart rate is lower than 50 beats/min or more than 120 beats/min (i.e., does not meet the normal heart rate range), it can be considered as meeting the first preset condition. The blood oxygen concentration is taken as an example again, in an embodiment, if it is lower than 90% (below the normal range), it can also be considered as meeting the first preset condition.

At least one of the processing device, the first device, and the second device detects that the user state meets a second preset condition. In an embodiment, the user state can be sleep state, sitting state, exercise state (such as walking, running, swimming, climbing, cycling, or the like). The sleep state is taken as an example, in an embodiment, if the user sleeps for a long time that day, or the second preset condition can be considered to be satisfied when the average sleep state duration of the week, month, year, or user preset time period (such as nearly 3 months, etc.) is lower than a preset threshold (such as 8 hours). The sitting posture is taken as an example, in an embodiment, if the user continuously maintains the sitting posture for more than a certain preset value (such as 1 hour), it can be considered as meeting the second preset condition.
at least one preset parameter (such as speed) detected by at least one of the processing device, the first device, and the second device meets a parameter condition (such as greater than or less than or equal to a preset parameter range);
at least one device is newly added in the connection network or the maximum number of connected devices has been reached;
at least one device in the connection network is disconnected or the minimum number of connected devices has been reached;
at least one of the processing device, the first device and the second device receives at least one message;
the power value of at least one of the processing device, the first device and the second device is lower than or equal to a preset power threshold;
the connection signal value of at least one of the processing device, the first device and the second device is less than or equal to a preset signal threshold;
the resource occupancy value of at least one of the processing device, the first device, and the second device is greater than or equal to a preset resource threshold;
the working state of at least one of the processing device, the first device and the second device is stuck or not smooth;
the preset application and/or the preset function of at least one of the processing device, the first device, and the second device is turned on;
the security level of at least one of the processing device, the first device, and the second device is less than or equal to a preset security level threshold;
the working duration of at least one of the processing device, the first device and the second device is greater than or equal to a preset working duration threshold;
at least one of the processing device, the first device and the second device is at a preset position.

In an embodiment, the processing device, the first device and the second device belong to the same connection network, and the processing device, the first device and the second device can all serve as management devices to manage other devices in the connection network.

In an embodiment, the first preset event, the second preset event, or the third preset event may be that at least one of the processing device, the first device, and the second device is in or switched to a preset mode. The preset mode can be set by the system or set by the user or selected by the user, and the preset mode can be an intelligent mode, an interconnected mode, a linked mode, or a transfer mode, and the like.

In an embodiment, the first preset event, the second preset event, or the third preset event may be that at least one of the processing device, the first device, and the second device is in or switched to a preset environment. In an embodiment, the preset environment can be a preset time (such as day, night, weekdays, holidays, 7:00 am, 10:00 am, 11:00 pm, or the like), or a preset location (such as home, office, subway, bus, car, or the like), an environment where the brightness value meets the brightness threshold condition (such as, dark, bright), or an environment where the noise value meets the noise threshold condition (such as, noisy, quiet), or the like.

In an embodiment, the first preset event, the second preset event, or the third preset event may be that at least one of the processing device, the first device, and the second device detects that the user physiological information meets a first preset condition. In an embodiment, the physiological information can be heart rate, blood oxygen, blood pressure, blood sugar, or the like, and the heart rate is taken as an example. If the heart rate is lower than 50 beats/min or more than 120 beats/min (i.e., does not meet the normal heart rate range), it can be considered as meeting the first preset condition. The blood oxygen concentration is taken as an example again, in an embodiment, if it is lower than 90% (below the normal range), it can also be considered as meeting the first preset condition.

In an embodiment, the first preset event, the second preset event, or the third preset event may be that at least one of the processing device, the first device, and the second device detects that the user state meets a second preset condition. In an embodiment, the user state can be sleep state, sitting state, exercise state (such as walking, running, swimming, climbing, cycling, or the like). The sleep state is taken as an example, in an embodiment, if the user sleeps for a long time that day, or the second preset condition can be considered to be satisfied when the average sleep state duration of the week, month, year, or user preset time period (such as nearly 3 months, etc.) is lower than a preset threshold (such as 8 hours). The sitting posture is taken as an example, in an embodiment, if the user continuously maintains the sitting posture for more than a certain preset value (such as 1 hour), it can be considered as meeting the second preset condition.

In an embodiment, the first preset event, the second preset event, or the third preset event includes at least one of: at least one device is newly added in the connection network or the maximum number of connected devices has been reached; at least one device in the connection network is disconnected or the minimum number of connected devices has been reached; at least one of the processing device, the first device and the second device receives at least one message; the power value of at least one of the processing device, the first device and the second device is lower than or equal to a preset power threshold; the connection signal value of at least one of the processing device, the first device and the second device is less than or equal to a preset signal threshold; the resource occupancy value of at least one of the processing device, the first device, and the second device is greater than or equal to a preset resource threshold; the working state of at least one of the processing device, the first device and the second device is stuck or not smooth; the preset application and/or the preset function of at least one of the processing device, the first device, and the second device is turned on; the security level of at least one of the processing device, the first device, and the second device is less than or equal to a preset security level threshold; the working duration of at least one of the processing device, the first device and the second device is greater than or equal to a preset working duration threshold; at least one of the processing device, the first device and the second device is at a preset position.

In an embodiment, in the above connection network, there are terminal devices or other devices that newly join the connection network (such as wearable devices, smart home devices, or Internet of Vehicles devices), and there are also terminal devices or other devices that leave the connection network. Device performance, network quality, or the like will affect the maximum number of connected devices connected to the network. It can be understood that the better the device performance and the better the network quality, the greater the maximum number of connected devices connected to the network. The worse the performance of the device and the worse the quality of the network, the smaller the maximum number of connected devices connected to the network. The maximum number of connected devices can also be set by the user or preset by the system according to specific needs.

In an embodiment, when the number of currently connected devices in the connection network is close to the maximum number of connected devices, the user can be prompted not to add devices to the connection network at will, so as to avoid the failure to add new devices due to the connection network reaching the maximum number of connected devices, or the user can be prompted to disconnect the device that has been connected to the network but has not been used for a long time, so as to provide access space for new devices connected to the network in the past. For example, the maximum number of connected devices is 9, and the user will be prompted when the number of currently connected devices is 7. When the number of currently connected devices in the connection network is close to the minimum number of connected devices, the user can be prompted not to disconnect the devices connected to the connection network at will, so as to avoid the restriction of related functions that require device linkage in the connection network.

In an embodiment, when the number of currently connected devices in the connection network is between the minimum number of connected devices and the maximum number of connected devices, the default event processing capability of the connection network is optimal, for example, the process of adding new devices will be smoother, data exchange will be faster. That is, it not only ensures the response speed of connecting to the network, but also ensures the processing capability of linkage between devices to handle preset events.

For example, as shown in FIG. 36, 400 is a mobile phone, and 401 is a list of connected devices in the connection network output by the mobile phone. When the user triggers the disconnection of device B in the connection network through the hand 402, the mobile phone 400 outputs prompt information through the pop-up box 403.

In an embodiment, during the use of each device, there may be interaction with devices in the connection network, and there may also be information exchange with devices in other non-connection networks. For information exchange with other devices in the non-connection network, information interaction between devices can be realized through network services (such as Internet services), for example, the first device in the connection network receives a message (such as SMS, instant message, etc.)).

In an embodiment, each device requires electric energy during use, and the electric energy is generally provided by a battery, and the battery needs to be charged when the battery is exhausted or will be exhausted. For the power value, different devices connected to the network will have batteries with different capacities, and the batteries will have different remaining power or different battery life. For example, the battery capacity of a mobile phone is generally larger than that of a smart watch. In addition, there is also a situation where the remaining power of the mobile phone is less than the current power of the smart watch due to the fact that the mobile phone is not charged. When the power value of at least one of the processing device, the first device, and the second device is lower than or equal to a preset power threshold, it may be considered that a preset event is triggered.

In an embodiment, the preset power threshold is a trigger condition for a preset event, and the preset power threshold can be a threshold for battery protection. For example, when the power value is less than or equal to the preset power threshold, reminding the user to charge the power value can prolong the service life of the battery. The preset power threshold can also be a threshold for the purpose of requiring the minimum battery life. For example, the user requires the minimum battery life of the device to be 10 hours, so that the battery has enough power for the user when the user cannot charge the battery. When the battery life of at least one of the processing device, the first device and the second device is less than or equal to 10 hours, it may be considered that the preset event is triggered.

In an embodiment, to maintain the connection between each device, a signal is required. The strength of the signal can be determined by the connection distance between the devices and/or the transmission power of the RF module. For example, the smaller the connection distance or the greater the transmission power, the greater the signal strength. The greater the connection distance or the lower the transmission power, the lower the signal strength. When the connection signal value of at least one of the processing device, the first device, and the second device is less than or equal to a preset signal threshold, a preset event may be deemed to be triggered. The preset signal threshold is generally set based on whether normal interaction between devices can be maintained. For example, the connection signal value less than or equal to the preset signal threshold cannot maintain normal interaction between devices; another example is the connection signal value greater than the preset signal threshold can maintain normal interaction between devices.

In an embodiment, each device needs to occupy a certain amount of resources to maintain normal operation. When this resource is occupied, it cannot handle new tasks assigned by the device. When the resource occupation value reaches a certain value, the device cannot normally process the tasks that need to be processed. The preset resource threshold is the certain value, and when the resource occupation value is greater than or equal to the preset resource threshold, it may be considered that a preset event is triggered. The preset resource threshold is set according to the actual use requirements of the device. If the resource occupancy value corresponding to the user's frequently used software is large, the preset resource threshold needs to be set larger. Furthermore, if the resource occupation value corresponding to the user's frequently used software is small, the preset resource threshold may be set smaller.

In an embodiment, the running state of each device may be stuck or not smooth due to various reasons (such as overheating of the device, too many applications opened, too frequent user operations, etc.). When the running state of at least one of the processing device, the first device and the second device is stuck or unsmooth, it may be considered that a preset event is triggered.

In an embodiment, each device will run applications (such as the notepad application) or enable functions (such as the recording function) when the user uses it. When the preset application and/or the preset function of at least one of the processing device, the first device and the second device is turned on, it may be considered that the preset event is triggered. For example, the preset application is instant chat application, and the preset event triggered is to detect whether the instant chat application receives a new message, and then feed back the detection result corresponding to the detection to the message receiving device or other devices in the connection network. For another example, the preset function is camera, and the triggered preset event is to traverse the camera performance of each device in the connection network, and then feed back the traversal result corresponding to the traversal to the device with the preset function enabled or other devices in the connection network, to facilitate the user to use the intelligently recommended camera device (the camera device with the best camera performance) to take pictures through the traversal results.

In an embodiment, the safety level of the use environment of each device is classified to obtain the safety level of each device. A high security level represents a safe environment; a low security level represents an unsafe environment. The basis for judging whether the use environment is safe is whether the safety level is greater than the preset safety level threshold, for example, the use environment is safe when the safety level is greater than the preset safety level threshold. The use environment is not safe when the security level is less than or equal to the preset security level threshold. For example, the network used by the device is a secure network (such as home WiFi), and the security level is greater than the preset security level threshold. For another example, the network used by the device is a non-secure network (a network with security risks (such as public WiFi)). When the security level of at least one of the processing device, the first device and the second device is less than or equal to a preset security level threshold, it may be considered that a preset event is triggered.

In an embodiment, when each device is connected to the connection network, the working duration can be set, so as to limit the working duration of the corresponding device in the connection network through the working duration. It can be understood that, in one embodiment, there may be an upper limit on the number of connected devices due to various reasons (such as limited data processing capability of the control center). After the number of devices in the connection network is equal to the upper limit of the number of connected devices, the connection network cannot add new devices. By setting the working duration, when the connection time of the device is equal to the working duration, the connection of the device is disconnected, which can make room for the devices that need to connect to the network.

It can be understood that the working duration can be used in conjunction with the working state of each device. For example, the time of device A accessing the connection network is equal to the working duration, but it is interacting with other devices in the connection network at this time. Understandably, it is not appropriate to disconnect device A at this time. Therefore, when the connection duration of device A is equal to the working duration, if the device A is idle (without interacting with other devices in the connection network), the connection of device A is disconnected. If the device A is in the interactive state, the connection of the device A is kept.

It can be understood that when the access priority of the newly added device is higher (the user applies for the device to access the connection network by manually establishing a connection, rather than the device automatically applying for access to the connection network), in the case that it is not appropriate to disconnect the device through the working duration (device A is in the interactive state), disconnect the device in the network whose connection time is less than the working duration and has been in the idle state for the longest time.

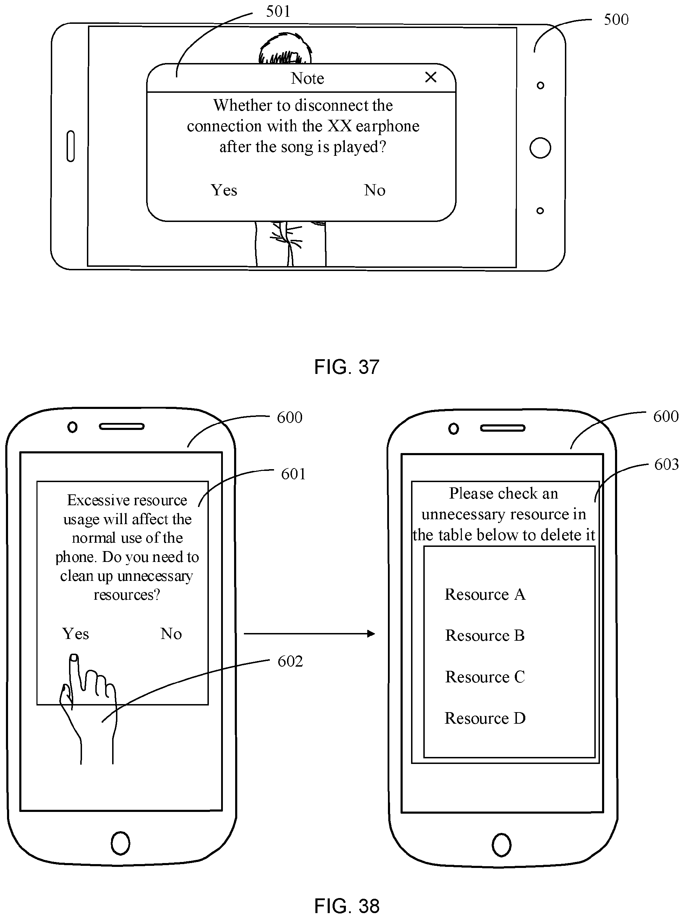

In other embodiments, the working duration can be set for the first newly added device to facilitate the use of users. For example, user A needs to share a song with user B, but user B wants to listen to the song through his own earphone, but does not want to use the earphone of user A to listen to the song. Besides, the earphone of user B is connected to the network where the earphone of user A is connected for the first time. At this time, the connection network of the earphone of user A can establish a temporary connection for the earphone of user B, such as setting the working duration. Correspondingly, the working duration is the playing duration of the song. After the song is played, the network where the earphone of user A is connected to is automatically disconnected from the temporary connection. In addition to automatically disconnecting the temporary connection, it can also determine whether to continue to establish a connection with the earphone of user B according to user input. For example, with reference to FIG. 37, 500 is a mobile phone, and 501 is a pop-up prompt information output by the mobile phone 500 to prompt the user to choose whether to disconnect the connection with "earphone of XX" after the song is played.

In an embodiment, when the position of at least one device among the processing device, the first device and the second device is at a preset position, it may be considered that a preset event is triggered. Generally, for the convenience of the user, the user can set the preset location in advance, for example, the preset location can be home, an office, a subway or a car, etc.

In an embodiment, at least one of the processing device, the first device and the second device may serve as a device for detecting various parameters, such as a smart wearable device used to detect the user physiological parameters (blood oxygen concentration, heart rate, steps, etc.), road side unit (Road Side Unit, RSU) used to detect vehicle speed in the Internet of Vehicles scenario, router used to detect network rate, or the like. When the detected parameter is larger or smaller than the preset parameter range, it can be regarded as triggering the preset event. For example, when the smart wearable device detects that the user's blood oxygen level is low during exercise, the roadside unit detects that the road vehicle is speeding, or the router detects that the current network rate is too low, it can be considered that a preset event has occurred on the current network.

The processing device stores a device information table corresponding to the connection network, and the device information table is used to indicate all device information of the connection network.

In an embodiment, in order to grasp the new or disconnected connection state information of each device in the connection network, a device information table can be maintained in the device, such as a device information table corresponding to the connection network is stored in the device. The device information table is used to indicate the information of all devices connected to the network, and the device information table records the device information of the processing device, the first device and the second device.

In an embodiment, the method further includes at least one of the following:
the device information table is also stored on the first device and/or the second device;
the device information includes at least one of device identification information, device state information, and device control information.

In an embodiment, for the convenience of the first device and/or the second device to query the device information table, the device information table is also saved on the first device and/or the second device.

In an embodiment, the device information includes at least one of device identification information, device state information, and device control information. For the device identification information, this information is used to identify each device, for example, the processing device, the first device and the second device can be distinguished through the device identification information; for the device state information, this information is used to record the current state information of each device.

In an embodiment, the device identification information includes at least one of device manufacturer, device type, device name, and device address.

The device state information includes at least one of running state, power information, fault information, environment information, device safety level, device working duration, device operating parameters, and device location.

The device control information includes at least one of connection information and control strategy.

In an embodiment, for the device type, different devices may be different device types due to different functions, for example, smart TVs are used to watch TV programs, smart phones are used to socialize in real time, or the like. For the device name, it is understandable that there are differences between devices of the same type. For example, to distinguish smartphones by equipment manufacturers, their names can be "Huawei mobile phone", "Apple mobile phone", or the like. For the device address, different devices have different device addresses, so the device address can be used as the identification information of the device. The device address includes the device Media Access Control (MAC) address. The MAC address of the device can be used to establish a connection between devices. For example, when each device establishes a connection through Bluetooth, the device address is the MAC address of Bluetooth. When each device establishes a connection through Wireless Fidelity (WiFi), the device address is the MAC address of the WiFi.

In an embodiment, for the running state, the device may be in a normal running state, stuck state, unsmooth state, etc.

For the power information, generally, it can be the current power, the total battery capacity, the ratio of the remaining power, or the estimated usable time based on the user's use habits in the near future (for example, within 2 hours).

The fault information can be the fault log of the device. The failure information may include the cause of the device failure, the type of the failure, the time of the failure, the frequency of the failure, etc., so that the device or engineering and technical personnel can repair or optimize through the failure information.

The environment information may be external environment information or use environment information.

In an embodiment, the devices connected to the network have the ability to obtain external environment information, such as obtaining the brightness of external ambient light, or obtaining the loudness of external environmental noise.

In an embodiment, during the use of devices connected to the network, the use environment information changes with the user's environment. The user's environment can be perceived through sensors (such as gravity sensors, acceleration sensors, gyroscopes, cameras, GPS, etc.). If the user is in motion, the device can detect that the user is in a motion environment, or if the user is driving, the device can detect that the user is in a driving environment, or if the user is in a work or meeting, the device can detect that the user is in a work or meeting environment.

For the device security level, each device connected to the network can support the setting of the corresponding security level (for example, the security level of the mobile phone is level 5, and the security level of the vehicle terminal is level 2). It can be understood that a device with a high security level will have greater authority in the connection network than a device with a low security level, so that users can process private information through devices with a high security level. For example, the security level of mobile phones is higher than that of vehicle-mounted terminals, and users are more inclined to perform bank account transfer operations through mobile phones.

The working duration of the device may be the working duration after the device is connected to the network or the time after the device is turned on.

The device operating parameters may depend on the specific device type. For example, for a smart phone, the device operating parameters may include phone volume, screen brightness, etc., and for smart home devices, the device operating parameters may include device power, device operating temperature, device brightness, and the like.

The location of the device includes the precise location information of the device (such as Global Positioning System (GPS) or Beidou positioning location information) and the fuzzy location information of the device (such as a building, or a park, such as a home or company, etc.). It can be understood that the precise location information can be expressed as a specific longitude and latitude, while the fuzzy location information is a location range.

The above connection information includes at least one of the following: connection user name information, connection password information, connection time and/or location information, connection duration and/or rate information, connection fee information.

In an embodiment, the connection information includes at least one of connection user name information, connection password information, connection time and/or location information, connection duration and/or rate information, connection fee information. For the connection user name and connection password, when connecting between devices, in order to ensure the accuracy and security of the connection, when establishing a connection, the initiator device needs to use the connection user name and the connection password to ensure that the connected device is the target device and not other connectable devices. For the connection time information, it may be the information of the connection establishment time; for the connection location information, it may be the information of the connection establishment location. For the connection duration information, it may be the restricted connection duration of the corresponding device, and its display form may be at least one of connection establishment time, remaining connection duration, and connectable duration. For example, the available connection time is 10 minutes, the connection establishment time is 15:30, the remaining connection time is 5 minutes, and the current time is 15:35. For connection rate information, including real-time connection rate information and maximum available connection rate information. It can be understood that the real-time connection rate information is the rate information corresponding to the current data transmission between corresponding devices, and the maximum available connection rate information is the theoretical maximum connection rate that data transmission between corresponding devices can achieve.

The control strategy may be a response strategy when preset events occur within the connection network. It can be understood that different events may correspond to the same or different response strategies. The control strategy can be a rough strategy (for example, the first device receives the first event, and the device forwards the first event to the second device), or it can be a strategy for simply assigning task executors. The control strategy can be a precise strategy (for example, the first device receives the first event, and the device forwards the first event and the corresponding processing plan to the second device), which not only includes assigning task executors but also determines the event handling plan for the executors.

Operation E20, if yes, performing corresponding processing according to a preset strategy, and/or performing first processing on at least one first device directly connected to the processing device according to a first rule, and/or, performing the second processing on at least one second device indirectly connected to the processing device according to the second rule.

In an embodiment, performing corresponding processing according to a preset strategy may be processing the processing device itself (such as connecting, disconnecting, hibernating, turning off the screen, shutting down, etc.), and may also be to process the information on the processing device (such as event conversion, event transmission, etc.).

In an embodiment, performing the first processing on the first device may be processing the first device itself (such as connecting, disconnecting, sleeping, turning off the screen, shutting down, etc.), and may also be to process information on the first device (such as event conversion, event delivery, etc.).

In an embodiment, performing the second processing on the second device may be processing on the second device itself (such as connecting, disconnecting, sleeping, turning off the screen, shutting down, etc.), and may also be to process information on the second device (such as event conversion, event delivery, etc.).

In an embodiment, if it is detected that a preset event is received, it will be processed accordingly according to the preset strategy, and/or perform first processing on at least one first device directly connected to the processing device according to a first rule, or perform the second processing on at least one second device indirectly connected to the processing device according to the second rule, or perform the first processing on at least one first device directly connected to the processing device according to the first rule and perform the second processing on at least one second device indirectly connected to the processing device according to the second rule.

In an embodiment, the method further includes at least one of the following:
outputting the operation option and/or the prompt information corresponding to the preset event on the processing device;
outputting the operation option and/or the prompt information corresponding to the preset event on at least one first device directly connected to the processing device;
outputting the operation option and/or the prompt information corresponding to the preset event on at least one second device indirectly connected to the processing device.

In an embodiment, the operation option and/or the prompt information corresponding to the preset event are output on the processing device. For example, the preset event is that the resource occupation value of the first device is greater than or equal to the preset resource threshold, and the operation option can be one-click cleaning of unimportant resources (whether it is important or not is selected by the user, just list the items that can be cleaned up and a brief description of each item that can be cleaned up). The prompt information may be to prompt the user that the resource occupation value of the first device is greater than or equal to the preset resource threshold, and the prompt method includes pop-up box output or voice output on the screen. For example, referring to FIG. 38, 600 is the first device, 601 is a screen pop-up box output by the first device 600, which is used to prompt the user that the resource occupation value of the first device is greater than or equal to the preset resource threshold. After the user obtains the information of the screen pop-up box 601, and clicks "Yes" in the screen pop-up box 601 with the finger of the hand 602, the first device 600 outputs the screen pop-up box 603, so as to facilitate the user to clean up unimportant resources.

In an embodiment, the operation option and/or the prompt information corresponding to the preset event are output on at least one first device directly connected to the processing device. For example, the preset event is that the resource occupation value of the second device is greater than or equal to the preset resource threshold, and the operation option can be one-click cleaning of unimportant resources (whether it is important or not is selected by the user, just list the items that can be cleaned up and a brief description of each item that can be cleaned up). The prompt information may be to prompt the user that the resource occupation value of the first device is greater than or equal to the preset resource threshold, and the prompt method includes pop-up box output or voice output on the screen.

In an embodiment, the operation option and/or the prompt information corresponding to the preset event are output on the second device directly connected to the processing device. For example, the preset event is that the resource occupation value of the second device is greater than or equal to the preset resource threshold, and the operation option can be one-click cleaning of unimportant resources (whether it is important or not is selected by the user, just list the items that can be cleaned up and a brief description of each item that can be cleaned up). The prompt information may be to prompt the user that the resource occupation value of the first device is greater than or equal to the preset resource threshold, and the prompt method includes pop-up box output or voice output on the screen.

In an embodiment, the above operation option is used to solve or improve the problems caused by the preset event. For example, if the security level of the first device is less than or equal to the preset security level threshold, it means that the first device is not suitable for continuing to access the connection network, there is a need to solve the problem that the first device is not suitable for continuing to maintain access to the connection network, such as disconnecting the first device. The above prompt information is used to prompt the user to solve or improve the problem caused by the preset event.

In an embodiment, the method further includes:
receiving operation information for the operation option, and updating the control information and/or transmitting the preset event according to the operation information.

In an embodiment, the operation information for the operation option is received, such as receiving instruction information corresponding to a preset information processing solution provided by a user, and update corresponding control information and/or transmit the preset event according to the operation information. For transmitting the preset event, the preset event may be that a preset application and/or a preset function of at least one of the processing device, the first device, and the second device is turned on. For example, the camera function of a device in the first device is turned on, and the device connected to the network outputs the operation option to the user (the camera function of this device is not the strongest camera function among devices connected to the network. The operation option includes the option to connect to other devices in the network for video recording. If one of the second devices has the strongest camera function, the user will most likely select this device for shooting, and the preset event is transmitted to the device.

In an embodiment, if there are at least two preset events, the method further includes at least one of the following:
sorting the preset events according to a preset sorting strategy, and processing the preset events sequentially;
if the preset events are triggered by different devices, processing the preset events in parallel by different trigger devices;
if the preset events are triggered by the same device, transferring at least one preset event to at least one first device directly connected to the processing device or at least one second device indirectly connected to the processing device for processing according to the transfer strategy.

In an embodiment, if there are at least two preset events, the method for processing the preset event includes at least one of sorting the preset events according to a preset sorting strategy, and processing the preset events sequentially; if the preset events are triggered by different devices, processing the preset events in parallel by different trigger devices; if the preset events are triggered by the same device, transferring at least one preset event to at least one first device directly connected to the processing device or at least one second device indirectly connected to the processing device for processing according to the transfer strategy.

In an embodiment, events are processed in parallel by different trigger devices, such as each trigger device processes the corresponding preset event, avoiding the transmission of preset events between devices, and improving the processing efficiency of preset events. At least one preset event is transferred to at least one first device directly connected to the processing device or at least one second device indirectly connected to the processing device for processing according to the transfer strategy. Compared with processing multiple preset events by one device, processing multiple preset events by multiple devices can significantly improve processing efficiency.

In an embodiment, the transfer strategy can be formulated by the correlation degree between devices and between preset events and devices.

In an embodiment, the preset sorting strategy includes at least one of the following: according to the chronological order in which the preset events occur, according to the priority of the preset events, and according to the priority of devices that trigger the preset events.

In an embodiment, the preset events have a chronological order of occurrence, and the processing sequence of each preset event is sorted through the chronological order, such as the preset event that occurs first is processed first. The priority of the preset event can be preset by the system, set by the user, adjusted during use after the user is set, or adjusted during use after the system is preset.

In an embodiment, the preferred usage scenario of the preset sorting strategy is a scenario where multiple preset events cannot be processed simultaneously.

In an embodiment, the above method further includes: if the control information table of the processing device is updated, making at least one first device directly connected to the processing device and/or at least one second device indirectly connected to the processing device update the update information corresponding to the preset event synchronously or asynchronously.

In an embodiment, if the control information table of the processing device is updated, at least one first device directly connected to the processing device and/or at least one second device indirectly connected to the processing device update the update information corresponding to the preset event synchronously or asynchronously. The updating way can be sending the entire contents of the control information table of the processing device to the first device and/or the second device for updating, and can also sending only part of the contents (such as the change part, and the difference part with the control information table of the first device and/or the second device) of the control information table of the processing device to the first device and/or the second device for updating. The update information is the corresponding information after the preset event is processed. For example, the preset event is that the connection signal value of the first device is less than the preset signal threshold, and the corresponding processing process is to change the position of the first device in the connection network, to increase its connection signal value so that its connection signal value is greater than the preset signal threshold, the update information is that the connection signal value of the first device is greater than the preset signal threshold or the connection signal value after the first location is changed.

In an embodiment, the control information table and/or the update of the control information table are downloaded from a server; and/or, the control information table and/or the update of the control information table are uploaded to the server synchronously.

In an embodiment, the control information table is stored by the server, and the update of the control information table and/or the control information table is downloaded from the server; and/or the control information table and/or the update of the control information table are updated to the server synchronously. It can be understood that the storage environment of the server is relatively safer than the devices connected to the network.

In an embodiment, the operation of synchronously or asynchronously updating the update information corresponding to the preset event includes:
broadcasting the update information, so that the first device and/or the second device synchronize the update information;
receiving completed information update feedback sent by the first device and/or the second device;
stop broadcasting if all the first devices and/or the second devices have completed updating information.

In an embodiment, the update information is broadcasted in the connection network, so that the first device and/or the second device receives the update information, thereby synchronizes its own control information table. In order to avoid devices that have not completed synchronization in the connection network, the first device and/or the second device need to send completed information update feedback after completing the update. Stop broadcasting after both the first device and/or the second device complete the information update. If there is a device that has not completed the information update in the first device and/or the second device, keep broadcasting until both the first device and/or the second device complete the information update.

In an embodiment, the operation of synchronously or asynchronously updating the update information corresponding to the preset event includes:
sending the update information to at least one first device and/or at least one second device;
receiving completed information update feedback sent by the first device and/or the second device;
if the first device and/or the second device have completed updating information, sending the update information to another first device or another second device, until all the first devices and/or the second devices complete information update.

In an embodiment, sending update information to at least one first device and/or at least one second device; receiving completed information update feedback sent by the corresponding first device and/or the second device; if the corresponding first device and/or the second device has completed the information update, sending the update information to another first device or the second device, until all the first devices and/or the second devices complete the information update.

In this embodiment, the processing method includes: detecting whether a preset event is received; if yes, performing corresponding processing according to a preset strategy, and/or performing the first processing on at least one first device directly connected to the processing device according to a first rule, and/or, performing the second processing on at least one second device indirectly connected to the processing device according to the second rule. After receiving the preset event, the corresponding processing is performed through the preset strategy, and the first processing is performed on the first device, and/or the second processing is performed on the second device, which avoids that after the connection is established through the network, only simple information processing can be performed between each device, so that the information processing after each device establishes a connection with each other is more intelligent, convenient and flexible. In addition, since it can support information processing between directly connected devices and indirectly connected devices, the function is more powerful, and the experience is more intelligent, convenient and flexible.

Based on the above embodiments, the present application provides another embodiment of the processing method. Performing the corresponding processing according to the preset strategy includes at least one of the following:
if the processing device has a control information table, updating the control information corresponding to the preset event into the control information table;
if the processing device does not have a control information table, generating and/or determining the control information table, and updating the control information corresponding to the preset event into the control information table;
converting the preset event to obtain at least one new event;
disconnecting the processing device from the connection network;
connecting the processing device to other networks.

In an embodiment, if the processing device has a control information table, the control information corresponding to the preset event is updated into the control information table. It can be understood that the control information table is used to record the control information corresponding to the preset event, and the control information can include at least the above-mentioned device information, can also include the control operation information (such as the device control operation corresponding to the above treatment plan, and can also include detailed steps of the device control operation (such as recording the detailed execution process of the device control operation)).

If the processing device does not have a control information table, a control information table needs to be generated for the processing device to record the control information, and the control information corresponding to the preset event can also be updated to the control information table.

In an embodiment, the preset event can also be transformed to obtain at least one new event. It can be understood that the difference between the new event and the preset event may be that the information (such as device name, device type, and device address) of the event transmitter and/or event receiver is different, may also be that the content of the event is different (such as converting the received information or notification content, the conversion method may be compression, encryption, data type and/or data format change, etc.).

In an embodiment, after receiving a preset event, the processing device disconnects from the connection network. For example, the preset event is that the power value of the processing device is lower than the preset power threshold. That is, the power value of the processing device is not enough to maintain interaction with other devices connected to the network, and it needs to be charged to reconnect to the network after the power value is greater than the preset power threshold.

In an embodiment, after receiving a preset event, the processing device connects to another network, and this connection is to establish a connection with another connection network different from the current connection network. For example, the preset event is that the processing device receives a message, the message needs to be processed by a network other than the current connection, and needs to be connected to other devices in the network other than the current connection. Therefore, the processing device can establish a connection with the connection network where the other device is located.

In an embodiment, the method further includes at least one of the following:
if there is at least one first device directly connected to the processing device, sending the control information table, so that the first device updates a local control information table according to the control information table;
if there is at least one first device directly connected to the processing device, and the preset event does not occur at the first device, the processing device sends the preset event, so that the first device generates or updates the local control information table according to the preset event;
if there is at least one first device directly connected to the processing device and there is at least one second device directly connected to the first device but indirectly connected to the processing device, and the preset event does not occur in the second device, the processing device sends the preset event, making the second device generate or update a local control information table according to the preset event forwarded by the first device;
if there is at least one first device directly connected to the processing device, converting the preset event into at least one new first event;
If there is at least one second device indirectly connected to the processing device, converting the preset event into at least one new second event.

In an embodiment, if there is at least one first device directly connected to the processing device in the connection network, the control information table is sent to the first device, so that the first device updates the local control information table according to the control information table. It can be understood that regardless of whether the preset event is related to the first device, the local control information table of the first device is updated, which is equivalent to a backup function, thereby avoiding the loss of the entire control information table after the control information table is lost in a device, and improving the security of the control information table.

In an embodiment, if there is at least one first device directly connected to the processing device in the connection network, and the preset event does not occur in the first device, the preset event is sent to the first device. It can be understood that the preset event is different from the control information table, and the control information table is generated or updated according to the preset event.

In an embodiment, if there is at least one first device directly connected to the processing device, and there is at least one second device directly connected to the first device but indirectly connected to the processing device, and the preset event does not occur in the second device, the device sends a preset event to the first device, and forwards the preset event to the second device through the first device, so that the second device generates or updates a local control information table according to the preset event forwarded by the first device.

In an embodiment, in addition to the above-mentioned devices that have preset events, other devices in the network need to be connected to update the preset events to generate or update the corresponding local control information table. Its purpose also includes that when the processing device is switched to other devices in any connection network, the new device can quickly perform device management functions according to the local control information table, so that the processing device can manage the connection network more intelligently and quickly.

In an embodiment, in addition to single processing device, it is also convenient for each device to perform corresponding management work directly through the local control information table in a connection network that is a processing device for each other (such as decentralized management, all devices in the connection network are processing devices).

In an embodiment, if there is at least one first device directly connected to the processing device, the preset event is converted into at least one new first event. If there is at least one second device indirectly connected to the processing device, the preset event is converted into at least one new second event. It can be understood that the conversion of the event is to facilitate the processing of the event by each device in the connection network, or to enable each device in the connection network to update the preset event to the local control information table. In an embodiment, it is convenient for the user to know that the preset event has occurred in the connection network when using any device in the connection network. It can be understood that the difference between a new event and a preset event may be that the information (such as device name, device type, and device address) of the event transmitter and/or event receiver is different, and may also be that the content of the event is different (such as converting the received information or notification content, the conversion method may be compression, encryption, data type and/or data format change, etc.).

This embodiment provides a variety of solutions for corresponding processing according to preset policies, with more powerful functions and more intelligent, convenient and flexible experience.

Based on the above-mentioned embodiment, another embodiment of the processing method of the present application is proposed, the first processing and/or the second processing includes at least one of the following:
transmitting or updating the preset event, transmitting the preset event after conversion, the processing device is disconnected from the connection network, the processing device is connected to other networks, the processing device and at least one of the first device and the second device open preset applications and/or services, the processing device and at least one of the first device and the second device close preset applications and/or services.

In an embodiment, the preset application can be a system application (such as address book, SMS, dial pad, camera, system settings, etc.), or a general application (such as WeChat, QQ, sports App, etc.). The preset service may be a system service (such as network connection, Bluetooth, WIFI, etc.), or a general service (such as search, privacy security, antivirus, listening to music, etc.).

In an embodiment, if any device connected to the network (may be a processing device, or may be a first device or a second device, or the like) is within a preset time period (such as 12:00 am to 3:00 am), it can be regarded as the preset event has occurred. The processing device (such as a mobile phone) can disconnect from the network or enter power saving mode or enter sleep mode or enter silent mode. The first device (such as a watch) can enter the off-screen state or enable sleep monitoring services (such as monitoring the user's heart rate, blood oxygen, etc.), and the second device (such as a TV) can sleep or even shut down. The processing device and/or the first device and/or the second device perform different processing by querying the processing strategy corresponding to the preset event in the control information table from the local or the server. Through this implementation manner, the intelligent linkage between devices can be strengthened, and power consumption can be reduced, thereby improving user experience.

In an embodiment, if the user connected to any device in the network (may be a processing device, or the first device or the second device, or the like) switches to a preset state (such as an exercise state), it can be considered that a preset event has occurred. The processing device (such as a mobile phone) can turn off the screen or enter the power saving mode or enter the sports mode or enter the outdoor mode or open the sports App (such as Keep software). The first device (such as a watch) can open the sports app or enter the off-screen state or open the sports monitoring service (such as monitoring the user's heart rate, blood oxygen, step frequency, speed, location information, etc. If the corresponding indicator is too high and abnormal, an early warning prompt can be output locally and/or on the processing device and/or the second device). The second device (such as earphones) can automatically connect to the processing device or automatically open the music app or automatically play safety guidance content related to the exercise state or automatically play a certain song (can be set by the system or automatically determined according to user habits or selected by the user). The processing device and/or the first device and/or the second device perform different processing by querying the processing strategy corresponding to the preset event in the control information table from the local or the server. Through this implementation manner, the intelligent linkage between devices can be enhanced, security can be enhanced, power consumption can be reduced, and user experience can be improved.

In an embodiment, the method further includes at least one of the following:
the first rule is: transmitting to all the first devices, or the preset first devices, or the authenticated first devices;
the second rule is: transmitting to all the second devices, or the preset second devices, or the authenticated second devices.

In an embodiment, the method includes one or more of: transmitting or updating the preset event to at least one first device directly connected to the processing device according to the transmission to all first devices, or the preset first device, or the authenticated first device, transmitting the preset event after conversion, the processing device is disconnected from the connection network, the processing device is connected to other networks, the processing device, and at least one of the first device and the second device open preset applications and/or services, at least one of the processing device, the first device and the second device close preset applications and/or services.

In an embodiment, the method includes one or more of: transmitting or updating the preset event to a second device directly connected to the processing device according to the transmission to all second devices, or the preset second device, or the authenticated second device, transmitting the preset event after conversion, the processing device is disconnected from the connection network, the processing device is connected to other networks, the processing device and at least one of the first device and the second device open preset applications and/or services, at least one of the processing device, the first device and the second device close preset applications and/or services.

In an embodiment, the preset first device and the preset second device can be set by the user according to needs, such as limiting the devices that can perform the first processing and/or the second processing, which are not specifically limited in this embodiment.

In an embodiment, for the transmitting, after the preset event is processed according to the preset strategy, the preset event is transmitted to the target device (one or more of the processing device, the first device and the second device) corresponding to the preset event. For example, the processing device receives a preset event that the power value of the first device is lower than the preset power value threshold, and if the processing object of the preset event is the first device, the preset event is transmitted to the first device. For another example, the preset event is that the power value of the processing device is lower than the preset power threshold, and when the processing device is disconnected from the connection network, the preset event needs to be transmitted to the first device and/or the second device in the connection network, so that the connection network reselects a new processing device to maintain the topology of the connection network.

In an embodiment, for the updating, after the preset event is processed according to the preset strategy, the content of the preset event needs to be updated. For example, the preset event is that the processing device receives a video file with a large amount of data, and the target receiving device of the preset event is the first device with a small storage space, then the video file can be updated (such as compression or format conversion or content interception, etc.) and then delivered to the first device. Common update methods can be compression, encryption, conversion of data types (such as speech to text, pictures to text, etc.), conversion of data formats (such as .bmp to .jpeg), etc.

In an embodiment, for transmitting the preset event after conversion, after the preset event is processed according to the preset strategy (performing corresponding processing according to a preset strategy is converting a preset event to obtain at least one new event), the new event is delivered to other devices (such as the first device) in the connection network. For example, the target receiving device of the preset event is the first device, which cannot receive or display text content to the user but can play audio content. While the preset event is receiving text content, the process of converting the preset event is to convert the received text content into audio content, and then transmit the audio content to the first device.

In an embodiment, for the disconnection of the processing device from the connection network, after the preset event is processed according to the preset strategy, it is necessary to disconnect the connection of the target device corresponding to the preset event in the connection network. For example, the preset event is that the first device receives a message with a high security level, and to avoid leakage of the message, the first device may be disconnected.

In an embodiment, for the connection of the processing device to another network, this connection is to establish a connection with another connection network different from the current connection network. For example, the preset event is that the first device receives a message, and the message needs to be processed by other devices not currently connected to the network. Therefore, the first device can establish a connection with the connection network where the other device is located.

This embodiment provides multiple solutions for performing the first processing on at least one first device directly connected to the processing device according to the first rule, and/or performing the second processing on at least one second device indirectly connected to the processing device according to the second rule, which makes it more intelligent when responding to the first event and the second event.

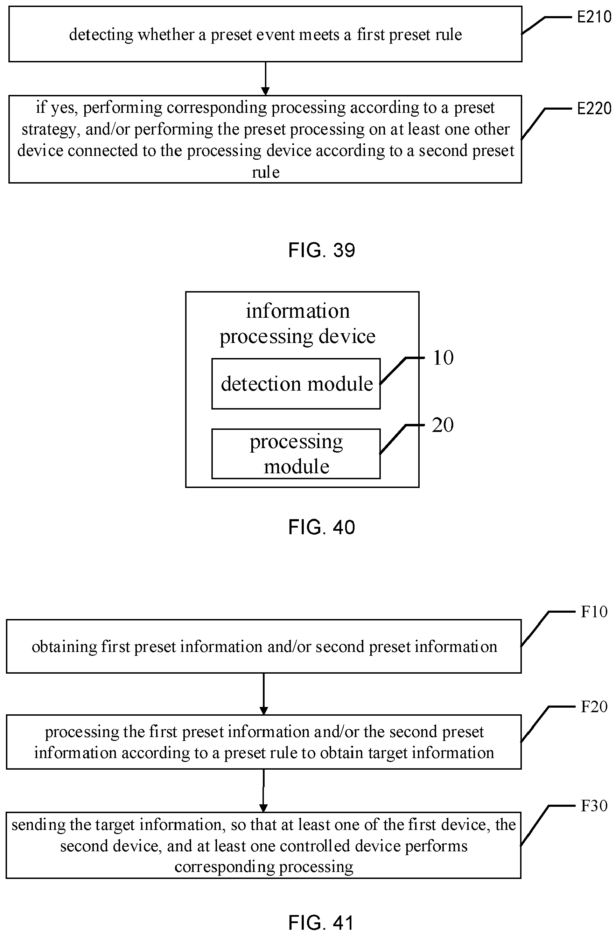

As shown in FIG. 39, in an embodiment of the present application, although a logical order is shown in the flowcharts, in some cases the steps shown or described may be performed in an order different from that shown or described herein. The processing method can be applied to a processing device including, but not limited to, a personal computer, a smart phone, and the like. For the convenience of description, the following steps are omitted to describe the processing method of the execution subject, and the processing method includes:
operation E210, detecting whether a preset event meets a first preset rule. In an embodiment, the preset event at least includes at least one first event and at least one second event.

In an embodiment, it is detected whether the first event and the second event meet the first preset rule.

In an embodiment, whether the first preset rule is met includes at least one of the following:
the first event and/or the second event is triggered by the processing device;
the at least one other device includes at least one first device directly connected to the processing device, and/or at least one second device indirectly connected to the processing device, the first event and/or the second event is triggered by the first device and/or the second device;
the time and/or location triggered by the first event and/or the second event meet a first preset condition;
the order in which the first event and/or the second event are triggered meets a second preset condition;
the priority of the first event and/or the second event meets a third preset condition;
the content information of the first event and/or the second event meets a fourth preset condition.

In an embodiment, whether the first preset rule is met includes at least one of: the first event and/or the second event is triggered by the processing device; the first event and/or the second event is triggered by the first device; the first event and/or the second event is triggered by the second device; the time and/or place triggered by the first event and/or the second event meet the first preset condition; the sequence of the trigger of the first event and/or the second event meets the second preset condition; the priority of the first event and/or the second event meets the third preset condition; the content information of the first event and/or the second event meets the fourth preset condition.

In an embodiment, the first preset condition is that the trigger location of the first event and/or the second event is a preset location, and/or the trigger time of the first event and/or the second event is a preset time. The preset location is the location set by the user and/or the system, such as home or office or on the subway or car; the preset time is the time set by the user and/or the system, such as 5:30 pm.

In an embodiment, the second preset condition is that the sequence triggered by the first event and/or the second event meets the preset sequence. The preset sequence is that there is a logical sequence relationship between the first event and the second event, for example, the second event must be processed only after the first event is processed.

In an embodiment, the third preset condition is that the priority of the first event and/or the second event meets the preset priority condition. The preset priority condition is a priority limit between the first event and the second event, for example, the third preset condition is met only when the priority of the first event is higher than that of the second event.

In an embodiment, the fourth preset condition is that the content information of the first event and/or the second event is preset content information. The preset content information may be keywords, key sentences, etc. set by the user or preset by the system, or determined according to use habits or machine learning.

Operation E220, if yes, performing corresponding processing according to a preset strategy, and/or performing the preset processing on at least one other device connected to the processing device according to a second preset rule.

In an embodiment, the at least one other device may include at least one first device directly connected to the processing device, and/or at least one second device indirectly connected to the processing device.

In an embodiment, the corresponding processing according to the preset strategy may be processing the processing device itself (such as connecting, disconnecting, sleeping, turning off the screen, shutting down, etc.), and may also be processing the information on the processing device (such as event conversion, event transmission, etc.).

The preset processing on other devices can be processing on other devices themselves (such as connecting, disconnecting, sleeping, turning off the screen, shutting down, etc.), and can also be processing information on other devices (such as event conversion, event transmission, etc.).

If the first preset rule is met, the corresponding processing is performed according to a preset strategy, and/or the preset processing is performed on at least one other device connected to the device according to a second preset rule. It can be understood that when the first preset rule is not met, the problems corresponding to the first event and the second event may not be dealt with, for example, the mobile phone cannot be charged when the user is not at home without power.

In an embodiment, the performing the preset processing on at least one other device connected to the processing device according to the second preset rule includes at least one of the following:
performing the first processing on at least one first device directly connected to the processing device according to a first rule;
performing the second processing on at least one second device indirectly connected to the processing device according to a second rule.

In an embodiment, the performing the preset processing on at least one other device connected to the device according to the second preset rule includes: performing the first processing on at least one first device directly connected to the processing device according to a first rule and/or performing the second processing on at least one second device indirectly connected to the processing device according to a second rule.

In an embodiment, the method further includes at least one of the following:
outputting operation options and/or prompt information corresponding to the preset event on the processing device;
outputting operation options and/or prompt information corresponding to the preset event on at least one first device directly connected to the processing device;
outputting operation options and/or prompt information corresponding to the preset event on at least one second device indirectly connected to the processing device.

In an embodiment, operation options and/or prompt information corresponding to preset events are output on the processing device. For example, the preset event is that the resource occupation value of the first device is greater than or equal to the preset resource threshold, and the operation option can be one-click cleaning of unimportant resources (whether it is important or not is selected by the user, just list the items that can be cleaned up and a brief description of each item that can be cleaned up). The prompt information may be to prompt the user that the resource occupation value of the first device is greater than or equal to the preset resource threshold, and the prompt method includes pop-up box output or voice output on the screen. For example, referring to FIG. 38, 600 is the first device, 601 is a screen pop-up box output by the first device 600, which is used to prompt the user that the resource occupation value of the first device is greater than or equal to the preset resource threshold. After the user obtains the information of the screen pop-up box 601, and clicks "Yes" in the screen pop-up box 601 with the finger of the hand 602, the first device 600 outputs the screen pop-up box 603, so as to facilitate the user to clean up unimportant resources.

In an embodiment, operation options and/or prompt information corresponding to preset events are output on at least one first device directly connected to the processing device. For example, the preset event is that the resource occupation value of the second device is greater than or equal to the preset resource threshold, and the operation option can be one-click cleaning of unimportant resources (whether it is important or not is selected by the user, just list the items that can be cleaned up and a brief description of each item that can be cleaned up). The prompt information may be to prompt the user that the resource occupation value of the first device is greater than or equal to the preset resource threshold, and the prompt method includes pop-up box output or voice output on the screen.

In an embodiment, operation options and/or prompt information corresponding to preset events are output on the second device directly connected to the processing device. For example, the preset event is that the resource occupation value of the second device is greater than or equal to the preset resource threshold, and the operation option can be one-click cleaning of unimportant resources (whether it is important or not is selected by the user, just list the items that can be cleaned up and a brief description of each item that can be cleaned up). The prompt information may be to prompt the user that the resource occupation value of the first device is greater than or equal to the preset resource threshold, and the prompt method includes pop-up box output or voice output on the screen.

In an embodiment, the above operation options are used to solve or improve problems caused by preset events, for example, the security level of the first device is less than or equal to the preset security level threshold, which means that the first device is not suitable for continuing to maintain access to the connection network, and it is necessary to solve the problem that the first device is not suitable for continuing to maintain access to the connection network, such as disconnecting the first device. The above prompt information is used to prompt the user to solve or improve the problem caused by the preset event.

In an embodiment, the method further includes:
receiving operation information for the operation option, and updating the control information and/or transmitting the preset event according to the operation information.

In an embodiment, the operation information for the operation option is received, such as receiving instruction information corresponding to a preset information processing solution provided by a user, and update corresponding control information and/or transmit preset events according to the operation information. For transmitting a preset event, the preset event may be that a preset application and/or a preset function of at least one of the processing device, the first device, and the second device is turned on. For example, the camera function of a device in the first device is turned on, and the device connected to the network outputs operation options to the user (the camera function of this device is not the strongest camera function among devices connected to the network). This operation option includes the option to connect to other devices in the network for video recording. If one of the second devices has the strongest camera function, the user will most likely select this device for shooting, and the preset event is transmitted to the device.

In an embodiment, if there are at least two preset events, the method also includes at least one of the following:
sorting the preset events according to a preset sorting strategy, and processing the preset events sequentially;
if the preset events are triggered by different devices, processing the preset events in parallel by different trigger devices; and
if the preset event is triggered by the same device, transferring at least one preset event to at least one first device directly connected to the processing device or at least one second device indirectly connected to the processing device for processing according to the transfer strategy.

In an embodiment, if there are at least two preset events, the way for processing the preset event includes at least one of: sorting the preset events according to a preset sorting strategy, and processing the preset events sequentially; if the preset events are triggered by different devices, processing the preset events in parallel by different trigger devices; and if the preset event is triggered by the same device, transferring at least one preset event to at least one first device directly connected to the processing device or at least one second device indirectly connected to the processing device for processing according to the transfer strategy.

In an embodiment, the events are processed in parallel by different trigger devices. For example, each trigger device processes the corresponding preset event, thereby avoiding the transmission of preset events between devices, and improving the processing efficiency of preset events. At least one preset event is transferred to at least one first device directly connected to the processing device or at least one second device indirectly connected to the processing device for processing according to the transfer strategy. Compared with processing multiple preset events by one device, processing multiple preset events by multiple devices can significantly improve processing efficiency.

In an embodiment, the transfer strategy can be formulated according to the correlation degree between devices and between preset events and devices.

In an embodiment, the preset sorting strategy includes at least one of the following: according to the chronological order in which the preset events occur, according to the priority of the preset events, and according to the priority of devices that trigger the preset events.

In an embodiment, preset events have a chronological order of occurrence. The processing sequence of each preset event is sorted by chronological order, for example, the preset event that occurs first is processed first. The priority of the preset event can be preset by the system, set by the user, adjusted during use after the user is set, or adjusted during use after the system is preset.

It can be understood that the preferred usage scenario of the preset sorting strategy is a scenario where multiple preset events cannot be processed simultaneously.

In an embodiment, the method further includes: if the control information table of the processing device is updated, making at least one first device directly connected to the processing device and/or at least one second device indirectly connected to the processing device update the update information corresponding to the preset event synchronously or asynchronously.

In an embodiment, if the control information table of the processing device is updated, at least one first device directly connected to the processing device and/or at least one second device indirectly connected to the processing device update the update information corresponding to the preset event synchronously or asynchronously. The updating method may be sending the entire content of the control information table of the processing device to the first device and/or the second device for updating, and may also be sending only part of the contents (such as the change part, and the difference part with the control information table of the first device and/or the second device) of the control information table of the processing device to the first device and/or the second device for updating. The update information is the corresponding information after the preset event is processed. For example, the preset event is that the connection signal value of the first device is less than the preset signal threshold, and the corresponding processing process is to change the position of the first device in the connection network to increase its connection signal value so that its connection signal value is greater than the preset signal threshold, then the update information is that the connection signal value of the first device is greater than the preset signal threshold or the connection signal value after the first location is changed.

In an embodiment, the control information table and/or the update of the control information table are downloaded from a server; and/or, the control information table and/or the update of the control information table are uploaded to the server synchronously.

In an embodiment, the control information table is stored by the server, and the control information table and/or the update of the control information table is downloaded from the server; and/or the control information table and/or the update of the control information table are synchronously uploaded to the server. It can be understood that the storage environment of the server is relatively safer than the devices connected to the network.

In an embodiment, the operation of synchronously or asynchronously updating the update information corresponding to the preset event includes:
broadcasting the update information, so that the first device and/or the second device synchronize the update information;
receiving completed information update feedback sent by the first device and/or the second device;
stop broadcasting if all the first devices and/or the second devices have completed updating information.

In an embodiment, the update information is broadcasted in the connection network, so that the first device and/or the second device receives the update information, and thereby synchronizes its own control information table. In order to avoid devices that have not completed synchronization in the connection network, the first device and/or the second device need to send completed information update feedback after completing the update; stop broadcasting after both the first device and/or the second device complete the information update. If there is a device that has not completed the information update in the first device and/or the second device, keep broadcasting until both the first device and/or the second device complete the information update.

In an embodiment, the step of synchronously or asynchronously updating the update information corresponding to the preset event includes:
sending the update information to at least one the first device and/or at least one the second device;
receiving completed information update feedback sent by the first device and/or the second device;
if the first device and/or the second device have completed updating information, sending the update information to another first device or another second device, until all the first devices and/or the second devices complete information update.

In an embodiment, the method includes: sending the update information to at least one the first device and/or at least one the second device; receiving completed information update feedback sent by the first device and/or the second device; if the first device and/or the second device have completed updating information, sending the update information to another first device or another second device, until all the first devices and/or the second devices complete information update.

In this embodiment, the method includes: detecting whether the preset event meets the first preset rule, the preset events include at least one first event and at least one second event; if so, performing corresponding processing according to a preset strategy, and/or performing the preset processing on at least one other device connected to the processing device according to a second preset rule. When the first event and the second event meet the first preset rule, the preset processing is performed on at least one device according to the second preset rule, which avoids that after the connection is established through the network, only simple information processing can be performed between each device, so that the information processing after each device establishes a connection with each other is more intelligent, convenient and flexible.

Based on the above-mentioned embodiments, another embodiment of the processing method of the present application is proposed. The corresponding processing according to the preset strategy includes at least one of the following:
if the processing device has a control information table, updating the control information corresponding to the preset event into the control information table;
if the processing device does not have a control information table, generating and/or determining the control information table, and updating the control information corresponding to the preset event into the control information table;
converting the preset event to obtain at least one new event;
the processing device is disconnected from the connection network;
the processing device is connected to other networks.

In an embodiment, if the processing device has a control information table, the control information corresponding to the preset event is updated into the control information table. It can be understood that the control information table is used to record the control information corresponding to the preset event, and the control information can include at least the above-mentioned device information, can also include control operation information (such as the device control operation corresponding to the above processing plan, and can also include detailed steps of the device control operation (such as recording the detailed execution process of the device control operation)).

If the processing device does not have a control information table, it is necessary to generate a control information table for the processing device to record the control information, which may be to update the control information corresponding to the preset event into the control information table.

In an embodiment, the preset event can also be transformed to obtain at least one new event. It can be understood that the difference between the new event and the preset event may be that the information of the event sender and/or event receiver (such as device name, device type, device address) is different, or the content of the event may be different (such as converting the received information or notification content, the conversion method can be compression, encryption, data type and/or data format change, etc.).

In an embodiment, after receiving a preset event, the processing device disconnects from the connection network. For example, the preset event is that the power value of the processing device is lower than the preset power threshold. That is, the power level of the processing device is not enough to maintain interaction with other devices connected to the network, and it needs to be charged to reconnect to the network after the power level is greater than the preset power threshold.

In an embodiment, after receiving a preset event, the processing device connects to another network, and this connection is to establish a connection with another connection network different from the current connection network. For example, the preset event is that the processing device receives a message. The message needs to be processed by a network other than the current connection, and needs to be connected to other devices in the network other than the current connection, or the like. Therefore, the processing device can establish a connection with the connection network where the other device is located.

In an embodiment, the method further includes at least one of the following:
if there is at least one first device directly connected to the processing device, sending the control information table, so that the first device updates a local control information table according to the control information table;
if there is at least one first device directly connected to the processing device, and the preset event does not occur at the first device, the processing device sends the preset event, so that the first device generates or updates a local control information table according to the preset event;
if there is at least one first device directly connected to the processing device and there is at least one second device directly connected to the first device but indirectly connected to the processing device, the preset event does not occur at the second device, the processing device sends the preset event, so that the second device generates or updates a local control information table according to the preset event forwarded by the first device;
if there is at least one first device directly connected to the processing device, converting the preset event into at least one new first event;
if there is at least one second device indirectly connected to the processing device, converting the preset event into at least one new second event.

In an embodiment, if there is at least one first device directly connected to the processing device in the connection network, the control information table is sent to the first device, so that the first device updates the local control information table according to the control information table. It can be understood that regardless of whether the preset event is related to the first device, the local control information table of the first device is updated, which is equivalent to a backup function, thereby avoiding the loss of the entire control information table after the control information table is lost in a device, and improving the security of the control information table.

In an embodiment, if there is at least one first device directly connected to the processing device in the connection network, and the preset event does not occur on the first device, the preset event is sent to the first device. It can be understood that the preset event is different from the control information table, and the control information table is generated or updated according to the preset event.

In an embodiment, if there is at least one first device directly connected to the processing device, and there is at least one second device directly connected to the first device but indirectly connected to the processing device, and the preset event does not occur on the second device, the device sends a preset event to the first device, and forwards the preset event to the second device through the first device, so that the second device generates or updates a local control information table according to the preset event forwarded by the first device.

In an embodiment, in addition to the device where the preset event occurs, other devices in the connection network need to update the preset event to generate or update the corresponding local control information table. Its purpose also includes that when the processing device is switched to other devices in any connection network, the new device can quickly perform device management functions according to the local control information table, so that the processing device can manage the connection network more intelligently and quickly.

In an embodiment, in addition to a single processing device, it is also convenient for each device to directly perform corresponding management work through the local control information table in the connection network of mutual processing devices (such as decentralized management, all devices connected to the network are processing devices).

In an embodiment, if there is at least one first device directly connected to the processing device, the preset event is converted into at least one new first event. If there is at least one second device indirectly connected to the processing device, the preset event is converted into at least one new second event. It can be understood that the conversion of the event is to facilitate the processing of the event by each device in the connection network, or to enable each device in the connection network to update the preset event to the local control information table. In an embodiment, it is convenient for the user to know that the preset event has occurred in the connection network when using any device in the connection network.

In an embodiment, the difference between the new event and the preset event may be the information of the event sender and/or event receiver (such as device name, device type, device address), or the content of the event (such as converting the received information or notification content, the conversion method can be compression, encryption, data type and/or data format change, etc.).

This embodiment provides a variety of solutions for corresponding processing according to the preset strategy, with more powerful functions and more intelligent, convenient and flexible experience.

Based on the above-mentioned embodiments, another embodiment of the processing method of the present application is proposed, the first processing and/or the second processing includes at least one of the following:
transmitting or updating the preset event, transmitting the preset event after conversion, disconnecting the processing device from a connection network, connecting the processing device to another network, the processing device and at least one of the first device and the second device open preset applications and/or services, the processing device and at least one of the first device and the second device close preset applications and/or services.

In an embodiment, the preset application can be a system application (such as address book, SMS, dial pad, camera, system settings, etc.), or a general application (such as WeChat, QQ, sports App, etc.). The preset service may be a system service (such as network connection, Bluetooth, WIFI, etc.), or a general service (such as search, privacy security, antivirus, listening to music, etc.).

In an embodiment, where the processing device and at least one of the first device and the second device opens preset applications and/or services, if any device connected to the network (may be a processing device, the first device or the second device, etc.) is within a preset time period (such as 12:00 am to 3:00 am), the processing device (such as a mobile phone) can disconnect from the network or enter power saving mode or enter sleep mode or enter silent mode, the first device (such as a watch) can enter the off-screen state or enable sleep monitoring services (such as monitoring the user's heart rate, blood oxygen, etc.), and the second device (such as a TV) can sleep or even shut down. The processing device and/or the first device and/or the second device perform different processing by querying the processing strategy corresponding to the preset event in the control information table from the local or the server. Through this implementation manner, the intelligent linkage between devices can be strengthened, and power consumption can be reduced, thereby improving user experience.

In an embodiment where the processing device and at least one of the first device and the second device opens preset applications and/or services: if the user connected to any device in the network (may be a processing device, or the first device or the second device, etc.) switches to a preset state (such as an exercise state), the processing device (such as a mobile phone) can turn off the screen or enter the power saving mode or enter the sports mode or enter the outdoor mode or open the sports App (such as Keep software), the first device (such as a watch) can open the sports app or enter the off-screen state or start the sports monitoring service (such as monitoring the user's heart rate, blood oxygen, stride frequency, speed, location information, etc., if the corresponding indicators are too high and abnormal, an early warning prompt can be output locally and/or on the processing device and/or the second device), the second device (such as earphones) can automatically connect to the processing device or automatically open the music app or automatically play safety guidance content related to the exercise state or automatically play a certain song (can be set by the system or automatically determined according to user habits or selected by the user). The processing device and/or the first device and/or the second device perform different processing by querying the processing strategy corresponding to the preset event in the control information table from the local or the server. Through this implementation manner, the intelligent linkage between devices can be enhanced, security can be enhanced, power consumption can be reduced, and user experience can be improved.

In an embodiment, the method further includes at least one of the following:
the first rule is: transmitting to all the first devices, or the preset first devices, or the authenticated first devices;
the second rule is: transmitting to all the second devices, or the preset second devices, or the authenticated second devices.

In an embodiment, the method includes one or more of: transmitting or updating the preset event to at least one first device directly connected to the processing device according to the transmission to all first devices, or the preset first device, or the authenticated first device, transmitting the preset event after conversion, the processing device is disconnected from the connection network, the processing device is connected to other networks, the processing device, and at least one of the first device and the second device open preset applications and/or services, at least one of the processing device, the first device and the second device close preset applications and/or services.

In an embodiment, the method includes one or more of: transmitting or updating the preset event to a second device directly connected to the processing device according to the transmission to all second devices, or the preset second device, or the authenticated second device, transmitting the preset event after conversion, the processing device is disconnected from the connection network, the processing device is connected to other networks, the processing device and at least one of the first device and the second device open preset applications and/or services, at least one of the processing device, the first device and the second device close preset applications and/or services.

In an embodiment, the preset first device and the preset second device can be set by the user according to needs, such as limiting the devices that can perform the first processing and/or the second processing, which are not specifically limited in this embodiment.

In an embodiment, for the transmitting, after the preset event is processed according to the preset strategy, the preset event is transmitted to the target device (one or more of the processing device, the first device and the second device) corresponding to the preset event. For example, the device receives a preset event that the power value of the first device is lower than the preset power value threshold, and if the processing object of the preset event is the first device, the preset event is transmitted to the first device. For another example, the preset event is that the power value of the processing device is lower than the preset power threshold, and when the processing device is disconnected from the connection network, the preset event needs to be transmitted to the first device and/or the second device in the connection network, so that the connection network reselects a new processing device to maintain the topology of the connection network.

In an embodiment, for the updating, after the preset event is processed according to the preset strategy, the content of the preset event needs to be updated. For example, the preset event is that the processing device receives a video file with a large amount of data, and the target receiving device of the preset event is the first device with a small storage space, then the video file can be updated (such as compression or format conversion or content interception, etc.) and then delivered to the first device. Common update methods can be compression, encryption, conversion of data types (such as speech to text, pictures to text, etc.), conversion of data formats (such as .bmp to .jpeg), etc.

In an embodiment, for transmitting the preset event after conversion, after the preset event is processed according to the preset strategy (performing corresponding processing according to a preset strategy is converting a preset event to obtain at least one new event), the new event is delivered to other devices (such as the first device) in the connection network. For example, the target receiving device of the preset event is the first device, which cannot receive or display text content to the user but can play audio content. While the preset event is receiving text content, the process of converting the preset event is to convert the received text content into audio content, and then transmit the audio content to the first device.

In an embodiment, for the disconnection of the processing device from the connection network, after the preset event is processed according to the preset strategy, it is necessary to disconnect the connection of the target device corresponding to the preset event in the connection network. For example, the preset event is that the first device receives a message with a high security level, and to avoid leakage of the message, the first device may be disconnected.

In an embodiment, for the connection of the processing device to another network, this connection is to establish a connection with another connection network different from the current connection network. For example, the preset event is that the first device receives a message, and the message needs to be processed by other devices that are not connected to the network where it is currently located. Therefore, the first device can establish a connection with the connection network where the other device is located.

This embodiment provides multiple solutions for performing the first processing on at least one first device directly connected to the processing device according to the first rule, and/or performing the second processing on at least one second device indirectly connected to the processing device according to the second rule, which makes it more intelligent when responding to the first event and the second event.

In an embodiment, the present application further provides a processing device. As shown in FIG. 40, the processing device includes:
a detection module 10, configured to detect whether a preset event is received;
a processing module 20, configured to, if yes, perform corresponding processing according to a preset strategy, and/or perform first processing on at least one first device directly connected to the processing device according to a first rule, and/or, perform the second processing on at least one second device indirectly connected to the processing device according to the second rule.

In an embodiment, the processing device further includes:
a receiving module, configured to receive operation information for the operation option;
an update module, configured to update the control information and/or transmit the preset event according to the operation information.

In an embodiment, the processing device also includes:
a synchronous or asynchronous update module, configured to update the control information table of the processing device, to make at least one first device directly connected to the processing device and/or at least one second device indirectly connected to the processing device synchronously or asynchronously update update information corresponding to the preset event. The specific update implementation may be by sending all the contents of the control information table of the processing device to the first device and/or the second device for updating, and may also be sending only part (such as the change part, and the difference part with the control information table of the first device and/or the second device) of the content of the control information table of the processing device to the first device and/or the second device for updating.

In an embodiment, the synchronous or asynchronous update module includes:
a broadcasting unit, configured to broadcast the update information, so that the first device and/or the second device synchronize the update information;
a receiving unit, configured to receive completed information update feedback sent by the first device and/or the second device;
a stop unit, configured to stop broadcasting if all of the first devices and/or the second devices have completed updating information.

In an embodiment, the synchronous or asynchronous update module further includes:
a sending unit, configured to send the update information to at least one of the first devices and/or at least one of the second devices;
a second receiving unit, configured to receive completed information update feedback sent by the first device and/or the second device;
the sending unit is further configured to send the update information to another first device or another second device if the first device and/or the second device have completed information update, until all the first devices and/or the second devices complete information update.

In an embodiment, the present application further provides a processing device. As shown in FIG. 40, the processing device includes:
a detection module 10, configured to detect whether a preset event meets a first preset rule, the preset event at least includes at least one first event and at least one second event;
a processing unit 20, configured to, if yes, perform corresponding processing according to a preset strategy, and/or perform preset processing on at least one other device connected to the processing device according to a second preset rule.

In an embodiment, the processing device further includes:
a receiving module, configured to receive operation information for the operation option;
an update module, configured to update the control information and/or transmit the preset event according to the operation information.

In an embodiment, the processing device further includes:
a synchronous or asynchronous update module, configured to update the control information table of the processing device, to make at least one first device directly connected to the processing device and/or at least one second device indirectly connected to the processing device synchronously or asynchronously update update information corresponding to the preset event. The specific update implementation may be by sending all the contents of the control information table of the processing device to the first device and/or the second device for updating, and may also be sending only part (such as the change part, and the difference part with the control information table of the first device and/or the second device) of the content of the control information table of the processing device to the first device and/or the second device for updating.

In an embodiment, the synchronous or asynchronous update module includes:
a broadcasting unit, configured to broadcast the update information, so that the first device and/or the second device synchronize the update information;
a receiving unit, configured to receive completed information update feedback sent by the first device and/or the second device;
a stop unit, configured to stop broadcasting if all of the first devices and/or the second devices have completed updating information.

In an embodiment, the synchronous or asynchronous update module further includes:
a sending unit, configured to send the update information to at least one of the first devices and/or at least one of the second devices;
a second receiving unit, configured to receive completed information update feedback sent by the first device and/or the second device;
the sending unit is further configured to send the update information to another first device or another second device if the first device and/or the second device have completed information update, until all the first devices and/or the second devices complete information update.

This application provides a processing method. Referring to FIG. 41, FIG. 41 is a schematic flowchart of a processing method according to an embodiment of the present application.

The embodiment of the present application provides the processing method. Although a logical order is shown in the flowcharts, in some cases the steps shown or described may be performed in an order different from that shown or described herein. The processing method can be applied to a processing device including, but not limited to, a personal computer, a smart phone, and the like. The processing method includes:
operation F10, obtaining first preset information and/or second preset information, the first preset information is provided by at least one first device directly connected to the processing device, and the second preset information is provided by at least one second device indirectly connected to the processing device.

In an embodiment, the processing device, at least one first device, and at least one second device belong to the same connection network. The processing device acquires first preset information, second preset information, or first preset information and second preset information. The first preset information is provided by at least one first device directly connected to the processing device, and the second preset information is provided by at least one second device indirectly connected to the processing device. It can be understood that the direct connection is a direct connection between devices. The indirect connection means that there is no connection between the devices, but the two devices that have not established the connection establish a connection with another device at the same time, that is, the two devices that have not established the connection can exchange data through the other device. The processing device, the first device and the second device include any one of a terminal device (such as a smartphone, a PAD, a Tablet, etc.), a wearable smart device (such as a smart watch, a smart bracelet, a smart earphone, etc.), a smart home device (such as a smart TV, a smart speaker, etc.), and an Internet of Vehicles device (such as a smart car, a vehicle terminal, etc.).

In an embodiment, the first device and the second device are connected directly or indirectly.

The first device may be directly connected or indirectly connected to the second device, for example, the first device is directly connected to the second device. The first device is indirectly connected to the second device, and the second device is not directly connected to the first device, but is directly connected to other devices in the connection network to realize an indirect connection with the processing device.

In an embodiment, the first preset information includes at least one of the following: first user physiological parameters, first device application information, first device system information, first device information, first environment information, first device operation information.

The second preset information includes at least one of the following: second user physiological parameters, second device application information, second device system information, second device information, second environment information, and second device operation information.

In an embodiment, the first preset information includes at least one of the first user physiological parameters, the first device application information, the first device system information, the first device information, the first environment information, the first device operation information. The second preset information includes at least one of the second user physiological parameters, the second device application information, the second device system information, the second device information, the second environment information, and the second device operation information.

In an embodiment, the third device is directly or indirectly connected to the first device. The first preset information also includes at least one of the following: the third user physiological parameters, the third device application information, the third device system information, the third device information, the third environment information, and the third device operation information provided by the third device.

The fourth device is directly or indirectly connected to the second device. The second preset information also includes at least one of the following: the fourth user physiological parameters, the fourth device application information, the fourth device system information, the fourth device information, the fourth environment information, and the fourth device operation information provided by the fourth device.

In an embodiment, the third device and the fourth device belong to the same connection network as the processing device, the first device and the second device, that is, the third device and the fourth device are directly or indirectly connected to the processing device. The third device is directly or indirectly connected to the first device, and the fourth device is directly or indirectly connected to the second device. The first preset information also includes at least one of the third user physiological parameters, the third device application information, the third device system information, the third device information, the third environment information, and the third device operation information provided by the third device. The second preset information further includes at least one of the fourth user physiological parameters, the fourth device application information, the fourth device system information, the fourth device information, the fourth environment information, and the fourth device operation information provided by the fourth device. It can be understood that the first preset information and the second preset information may not only be provided by the preset information sender device itself, but may also be provided by other devices directly or indirectly connected to the preset information sender device, thereby expanding the information collection scope of the first preset information and the second preset information. When the devices connected to the network respond to the user's instructions or the information collected by the device, there are more factors to refer to, so that the device response process is more intelligent and accurate.

In an embodiment, this solution may further include: the first user physiological parameter, the second user physiological parameter, the third user physiological parameter or the fourth user physiological parameter includes at least one of physiological parameters and exercise parameters;
the first device application and/or service information, the second device application and/or service information, the third device application and/or service information or the fourth device application and/or service information includes at least one of application and/or service type, application and/or service name, application and/or service state, application and/or service data;
the first device system information, the second device system information, the third device system information or the fourth device system information includes at least one of system type, system name, system state, and system data;
the first device information, second device information, third device information or fourth device information includes at least one of device type, device name, device state, and device data;
the first environment information, the second environment information, the third environment information or the fourth environment information includes at least one of time, location, brightness, noise, altitude, road slope, weather, temperature, humidity, air pressure, wind level, and wind direction;
the first device operation information, the second device operation information, the third device operation information or the fourth device operation information includes at least one of gesture information, voice information, sensing information, and touch operation information.

The first device operation information, the second device operation information, the third device operation information or the fourth device operation information includes at least one of gesture information, voice information, sensing information, and touch operation information.

In an embodiment, the first user physiological parameter, the second user physiological parameter, the third user physiological parameter or the fourth user physiological parameter may include at least one of physiological parameters and exercise parameters of the same user or different users.

For physiological parameters, it can be understood that the devices connected to the network have the ability to obtain the user physiological parameters to provide corresponding services. For example, the health services are provided by obtaining physiological parameters such as the user's heart rate, blood pressure, pulse, blood oxygen, blood sugar, and sweating volume. For example, it is detected that the user's heart rate is higher than the normal value when the user is sitting still, that is, the user is reminded of the abnormal heart rate, and in an embodiment, a corresponding solution can also be pushed to the user.

For exercise parameters, when the user is exercising, the physiological parameters will be different from those when not exercising. It can be understood that the heart rate of a person during exercise will be significantly higher than that of a person while sitting still, so when it is detected that the user is in a state of exercise, the exercise parameters are obtained. It can be understood that the processing schemes corresponding to physiological parameters and exercise parameters need to be different. For example, it is detected that the user's heart rate in the exercise parameters is greater than the normal value, but after the user finishes exercising for a period of time, the user's heart rate returns to the normal value, that is, there is no need to remind the user of abnormal heart rate.

In an embodiment, the first device application information, the second device application information, the third device application information or the fourth device application information may include at least one of application type, application name, application state, and application data.

For the application type, it is used to distinguish different types of applications, such as video applications, audio applications, etc. By identifying the application type, the corresponding function of the application can be obtained, for example, the video application is used to play videos.

For the application name, it is used to specifically distinguish whether the application is the same application and to determine the specific information of the application, for example, the application name of the application is "Alipay". It can be understood that it specifies the application as "Alipay" rather than other applications.

For the application state, it can be understood that it is the running state of the application, such as stuck, smooth, foreground running, background running, crash, etc.

For application data, the application will generate corresponding data during operation, such as log data recording application state, user usage data, and so on.

In an embodiment, the first device system information, the second device system information, the third device system information or the fourth device system information may include at least one of system type, system name, system state, and system data.

For the system type, it is used to distinguish different types of systems, such as Android system, Symbian system, Apple system, etc., and a deep customization system based on Android system (such as MIUI (Mobile Internet UI, Xiaomi mobile operating system)). In an embodiment, different systems provide users with different services during operation, for example, the operating mechanisms of the Apple system and the Android system are different.

For the system name, it is used to specifically distinguish whether the systems are the same system and to determine the specific information of the system, for example, the system name of the system is "Android System". It can be understood that it specifically specifies that the system is an "Android system" rather than other systems. In an embodiment, the system name may also include a complete name, for example, the name includes a system version number.

For the system state, it can be understood that it is the running state of the system, such as stuck, smooth, sleep, crash, standby, etc.

For system data, the system will generate corresponding data during operation, such as log data recording system state, system update data, etc.

In an embodiment, the above-mentioned first device information, the second device information, the third device information or the fourth device information includes at least one of device type, device name, device state, and device data.

For the device type, it is used to distinguish different types of devices, such as screen devices, non-screen devices, communication devices, audio output devices, video output devices, etc. It can be understood that different types of devices can provide different services, for example, a communication device has a communication function and can provide communication services (such as calling, sending text messages, etc.).

For the device name, it is used to specifically distinguish whether the system is the same device and to determine the specific information of the device, for example, the device name is "mobile phone". It can be understood that it specifically designates the device as a "mobile phone" rather than other devices.

For the device state, it can be understood that it reflects the use state of the device, such as overheating, abnormal power consumption, in use, and standby.

For the device data, the device will generate corresponding data during use, such as device failure data, device state data, etc.

In an embodiment, the above-mentioned first environment information, the second environment information, the third environment information or the fourth environment information includes at least one of time, location, brightness, noise, altitude, road slope, weather, temperature, humidity, air pressure, wind level, and wind direction.

For the time, it can include day, night, weekdays, holidays, 7:00 am, 10:00 am, 11:00 pm, etc.

For the location, it is positioning information, which may include home, company, supermarket, office, on the subway, on the bus, on the car, and so on.

For the brightness, the brightness reflects the light intensity of the environment where the device is located (e.g., dark, bright).

For the noise, the noise reflects the noise level of the environment where the device is located (such as loud, quiet).

For the altitude, the altitude reflects the altitude of the environment where the device is located (for example, 500 meters above sea level).

For the road slope, the road slope reflects the inclination of the environment where the device is located (for example, a slope of 5 degrees).

For the weather, it can include sunny, cloudy, cloudy, rain, fog, snow, haze, etc. It can also include weather condition levels or parameters, such as light pollution, PM2.5 is 150µg/m³, etc.

For the temperature, the temperature reflects the hot and cold conditions of the environment where the device is located (such as warm, high, cold, 20°C, etc.)

For the humidity, the humidity reflects the humidity of the environment where the device is located (such as dry, humid, 60%RH, 30%RH, etc.).

For the air pressure, the air pressure reflects the atmospheric pressure of the environment where the device is located (such as 1 standard atmosphere, etc.).

For the wind level, the wind level reflects the wind speed of the environment where the device is located (such as breeze, typhoon, wind level 3, etc.);

For the wind direction, the wind direction reflects the wind direction of the environment where the device is located (such as southeast wind, northwest wind, etc.).

In an embodiment, the first device operation information, the second device operation information, the third device operation information or the fourth device operation information includes at least one of gesture information, voice information, sensing information, and touch operation information.

For the gesture information, it includes at least one of a sliding instruction, a stretching instruction, a rotating instruction, a single-click instruction, and a double-click instruction triggered by the user on the touch screen or through the air, and can also include at least one of pointing operation (point the terminal to a specific device, which can be the first device, the second device, or another device, etc.), shaking operation (such as shaking), and rotation operation (such as switching from portrait to landscape) by the user with the device.

For the voice information, it may be voice control information sent by the user or other devices, and the device performs preset operations or performs preset functions by recognizing the voice control information.

For the sensing information, it can be sensory control information, and the device performs preset operations or performs preset functions through sensory control information detected by internal or external sensors (such as motion sensors, gyroscopes, etc.).

For the touch operation information, it can include user gestures in the air, or at least one of sliding operations, clicking operations, dragging operations, 3D Touch operations, and knuckle tapping operations on the touch screen.

In an embodiment, before the operation F10, the method further includes at least one of the following:
outputting prompt information on the first device to prompt the processing device to obtain the first preset information;
outputting prompt information on the second device to prompt the processing device to obtain the second preset information.

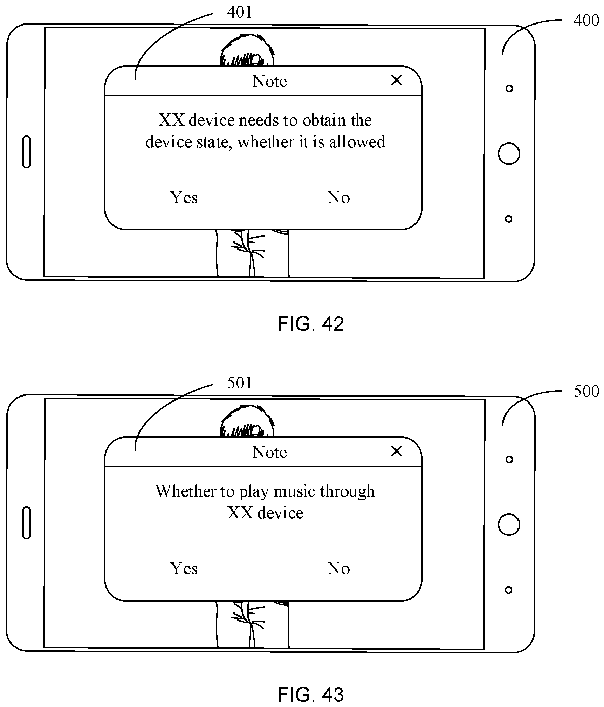

In an embodiment, the processing device may directly obtain the corresponding first preset information without obtaining the permission of the first device, or may output prompt information on the first device before obtaining the first preset information, to prompt the user to process the device to obtain the first preset information. Similarly, the processing device may directly obtain the corresponding second preset information without obtaining the permission of the second device, or may output prompt information on the second device before obtaining the second preset information, to prompt the user to process the device to obtain the second preset information. For example, referring to FIG. 42, 400 is a mobile phone, and 401 is a pop-up box output by the mobile phone 400, and the pop-up box includes prompt information.

In an embodiment, after the outputting the prompt information, the method further includes: receiving a confirmation operation, and determining whether to acquire the first preset information and/or the second preset information according to the confirmation operation.

In an embodiment, the processing device receives the user's confirmation operation on the prompt information transmitted by the first device and/or the second device, and determines whether to acquire the first preset information and/or the second preset information according to the confirmation operation. It can be understood that the processing device can obtain the first preset information and/or the second preset information only after the user agrees to the processing device to obtain the first preset information and/or the second preset information through the confirmation operation.

In an embodiment, before the operation F20, the method further includes:
determining whether to process the first preset information and/or the second preset information according to the preset rule.

In an embodiment, the processing device determines whether to process the first preset information and/or the second preset information according to the preset rule. That is, before the processing device processes the first preset information and/or the second preset information, it is also necessary to determine whether to process the first preset information and/or the second preset information in combination with its own state, the first preset information and/or the second preset information, and the preset rule.

In an embodiment, determining whether to process the first preset information and/or the second preset information according to the preset rule includes at least one of the following:
if at least one parameter value in the first preset information and/or the second preset information meets the preset rule, processing the first preset information and/or the second preset information;
if the resources consumed by processing the first preset information and/or the second preset information are less than or equal to a preset resource threshold or remaining resources of the processing device, processing the first preset information and/or the second preset information.

In an embodiment, if at least one parameter value in the first preset information and/or the second preset information meets a preset rule, the first preset information and/or the second preset information is processed. The parameter value may include specific values corresponding to the first preset information and/or the second preset information (such as the user's heart rate is 70 beats/min), and may also include specific contents corresponding to the first preset information and/or the second preset information (for example, the name of the application is "Alipay").

In an embodiment, if the resources consumed by processing the first preset information and/or the second preset information are less than or equal to the preset resource threshold or the remaining resources of the processing device, the processing device processes the first preset information and/or the second preset information. The preset resource threshold or the remaining resources of the processing device take into account whether the processing device has enough memory space and whether there are processing conditions to process the first preset information and/or the second preset information. It can be understood that for data such as application data and device data, due to the need for real-time recording, the data size is very large compared to the data size of physiological parameters, application names and other information, such as tens of MB. Therefore, when processing data such as application data and device data, the processing device needs to consider whether the memory space meets the conditions for loading the data. If not satisfied, the first preset information and/or the second preset information are not processed; and/or, if satisfied, the first preset information and/or the second preset information are processed. In an embodiment, it can be understood that the processing device may be processing other affairs and has no time to process the first preset information and/or the second preset information, or the processing device is in a dead state, and cannot allocate resources for the transaction of processing the first preset information and/or the second preset information.

In an embodiment, at least one parameter value in the first preset information and/or the second preset information meeting the preset rule includes at least one of the following:
the user physiological parameter value meets the first preset condition;
the application information on the device corresponding to the preset information and/or at least one other device directly or indirectly connected to the corresponding device meets the second preset condition;
the system information of the device corresponding to the preset information and/or at least one other device directly or indirectly connected to the corresponding device meets the third preset condition;
the device information of the device corresponding to the preset information and/or at least one other device directly or indirectly connected to the corresponding device meets the fourth preset condition;
the environment information of the device corresponding to the user or the preset information and/or at least one other device directly or indirectly connected to the corresponding device meets the fifth preset condition;
the device operation information of the device corresponding to the preset information and/or at least one other device directly or indirectly connected to the corresponding device meets the sixth preset condition.

In an embodiment, the user physiological parameter value meeting the first preset condition includes at least one of the following:
the user physiological parameter value is less than or equal to the first preset physiological parameter threshold;
the user physiological parameter value is greater than the second preset physiological parameter threshold.

In an embodiment, the user physiological parameter value meeting the first preset condition includes at least one of: the user physiological parameter value is less than or equal to the first preset physiological parameter threshold; the user physiological parameter value is greater than the second preset physiological parameter threshold. The user physiological parameters include at least one of the following: heart rate, blood pressure, pulse, blood oxygen, blood sugar, and sweating amount. It can be understood that if the user physiological parameter value is too large or too small, it means that there is a certain hidden danger in the user's health. That is, the value of the user physiological parameter is less than or equal to the first preset physiological parameter threshold; or, the value of the user physiological parameter is greater than the second preset physiological parameter threshold. For example, low blood pressure or high blood pressure. It can be understood that when the user physiological parameter value is between the first preset physiological parameter threshold and the second preset physiological parameter threshold, the second preset physiological parameter threshold is smaller than the first preset physiological parameter threshold, which generally means that the user physiological parameter is at a normal value.

In an embodiment, the preset information corresponding to the application information on the device and/or at least one other device directly or indirectly connected to the corresponding device meeting the second preset condition includes at least one of the following:
if the application and/or service information includes the application and/or service type, and the application and/or service type belongs to the preset application and/or service type;
if the application and/or service information includes the application and/or service name, and the application and/or service name meets the preset name rules;
if the application and/or service information includes the application and/or service state, and the application and/or service state belongs to the preset state;
if the application and/or service information includes application and/or service data, and the content and/or type of the application and/or service data meet the preset application and/or service data requirements.

In an embodiment, the application information on the device corresponding to the preset information and/or at least one other device directly or indirectly connected to the corresponding device meeting the second preset condition includes at least one of the following: if the application information includes an application type, and the application type belongs to a preset application type (such as whitelist, blacklist, VIP application, confidential or hidden or safe application, etc.), then the application information meets the second preset condition; if the application information includes an application name, and the application name meets the preset name rules (such as including preset keywords, etc.), then the application information meets the second preset condition; if the application information includes an application state, and the application state belongs to a preset state (such as foreground, background, frozen, etc.), then the application information meets the second preset condition; if the application information includes application data, and the content and/or type of the application data meet the requirements of preset application data (the data content includes specific keywords, and the data type belongs to application configuration parameters or multimedia data, etc.), then the application information meets the second preset condition.

In an embodiment, the system information of the device corresponding to the preset information and/or at least one other device directly or indirectly connected to the corresponding device meeting a third preset condition includes at least one of the following:
if the system information includes a system type, and the system type belongs to the preset system type;
if the system information includes a system name, and the system name meets the preset name rule;
if the system information includes a system state, and the system state belongs to a preset system state;
if the system information includes system data, and the content and/or type of the system data meet the preset system data requirements.

In an embodiment, the system information of the preset information corresponding device and/or at least one other device directly or indirectly connected with the corresponding device meeting the third preset condition includes at least one of the following: if the system information includes the system type, and the system type belongs to the preset system type (such as iOS, Android, Linux, Windows, Hongmeng, padOS, MacOS or watchOS, etc.), the system information meets the third preset condition; if the system information includes a system name, and the system name meets the preset name rule (such as including preset keywords, etc.), the system information meets the third preset condition; if the system information includes a system state, and the system state belongs to a preset system state (such as stuck, smooth, sleep, screen off, screen on, screen lock, power saving, do not disturb, meeting, sports, navigation, games, entertainment, etc.), the system information meets the third preset condition; if the system information includes system data, and the content and/or type of the system data meet the requirements of the preset system data (such as the data content includes specific keywords, and the data type belongs to system configuration data or application data or multimedia data, etc.), the system information meets the third preset condition.

In an embodiment, the device information of the device corresponding to the preset information and/or at least one other device directly or indirectly connected to the corresponding device meeting a fourth preset condition includes at least one of the following:
if the device information includes a device type, and the device type belongs to a preset device type;
if the device information includes a device name, and the device name meets the preset name rule;
if the device information includes a device state, and the device state is a preset state;
if the device information includes device data, and the content and/or type of the device data meet the preset device data requirements.

In an embodiment, the device information of the device corresponding to the preset information and/or at least one other device directly or indirectly connected to the corresponding device meeting a fourth preset condition includes at least one of: if the device information includes a device type, and the device type belongs to the preset device type (such as mobile phones, watches, bracelets, earphones, speakers, TVs, cars, fixed low-power devices, etc.), then the device information meets the fourth preset condition; if the device information includes a device name, and the device name meets the preset name rule (such as including preset keywords, etc.), then the device information meets the fourth preset condition; if the device information includes a device state, and the device state belongs to a preset state (such as stuck, smooth, sleep, screen off, screen on, screen lock, power saving, do not disturb, meeting, exercise, driving, running, navigation, games, entertainment, etc.), then the device information meets the fourth preset condition; if the device information includes device data, and the content and/or type of the device data meet the requirements of preset device data (the data content includes specific keywords, and the data type belongs to device system configuration data or device application configuration data or device system data or device application data or multimedia data, etc.), then the device information meets the fourth preset condition.

In an embodiment, the environment information of the device corresponding to the user or preset information and/or at least one other device directly or indirectly connected to the corresponding device meeting the fifth preset condition includes at least one of the following:
if the environment information includes the time, and the time meets the preset time requirements;
if the environment information includes the location, and the location meets the preset location requirements;
if the environment information includes the brightness, and the brightness meets the preset brightness requirements;
if the environment information includes the noise, and the noise meets the preset noise requirements;
if the environment information includes the altitude, and the altitude meets the preset altitude requirements;
if the environment information includes the road slope, and the road slope meets the preset road slope requirements;
if the environment information includes the weather, and the weather meets the preset weather requirements;
if the environment information includes the temperature, and the temperature meets the preset temperature requirements;
if the environment information includes the humidity, and the humidity meets the preset humidity requirements;
if the environment information includes the air pressure, and the air pressure meets the preset air pressure requirements;
if the environment information includes the wind level, and the wind level meets the preset wind level requirements;
if the environment information includes the wind direction, and the wind direction meets the preset wind direction requirements.

In an embodiment, the environment information of the device corresponding to the user or preset information and/or at least one other device directly or indirectly connected to the corresponding device meeting the fifth preset condition includes at least one of: if the environment information includes the time, and the time meets the preset time requirements (for example, the time value belongs to the preset time value, or the time value is within the preset time range), then the environment information meets the fifth preset condition; if the environment information includes a location, and the location meets the preset location requirements (for example, the geographic location corresponding to the location belongs to the preset geographic location, or the geographic location is within the range of the preset geographic location, etc.), then the environment information meets the fifth preset condition; if the environment information includes the brightness, and the brightness meets the preset brightness requirements (for example, the brightness value belongs to the preset brightness value, or the brightness value is within the preset brightness range, etc.), then the environment information meets the fifth preset condition; if the environment information includes the noise, and the noise meets the preset noise requirements (for example, the noise value belongs to the preset noise value, or the noise value is within the preset noise range, etc.), then the environment information meets the fifth preset condition; if the environment information includes the altitude, and the altitude meets the preset altitude requirement (for example, the altitude reaches the preset poster height value), then the environment information meets the fifth preset condition; if the environment information includes the road slope, and the road slope meets the preset road slope requirements (for example, the road slope is exactly equal to the preset road slope value), then the environment information meets the fifth preset condition; if the environment information includes the weather, and the weather meets the preset weather requirements (for example, the current weather is the same as the preset weather, both are rainy days, etc.), then the environment information meets the fifth preset condition; if the environment information includes the temperature, and the temperature meets the preset temperature requirements (for example, the currently detected temperature is exactly equal to the preset temperature value), then the environment information meets the fifth preset condition; if the environment information includes the humidity, and the humidity meets the preset humidity requirements (for example, the currently detected humidity is exactly equal to the preset humidity value), then the environment information meets the fifth preset condition; if the environment information includes the air pressure, and the air pressure meets the preset air pressure requirements (for example, when the detected air pressure is exactly equal to the preset air pressure value), then the environment information meets the fifth preset condition; if the environment information includes a wind level, and the wind level meets the preset wind level requirements (for example, the currently detected wind level reaches the preset wind level), then the environment information meets the fifth preset condition; if the environment information includes a wind direction, and the wind direction meets the preset wind direction requirements (for example, the currently detected wind direction is the same as the preset wind direction), then the environment information meets the fifth preset condition.

In an embodiment, the device operation information of the device corresponding to the preset information and/or at least one other device directly or indirectly connected to the corresponding device meeting the sixth preset condition includes at least one of the following:
if the device operation information includes gesture information, and the gesture information meets the preset gesture operation requirements;
if the device operation information includes voice information, and the voice information meets the preset voice control requirements;
if the device operation information includes sensing information, and the sensing information meets the preset sensing information requirements;
if the device operation information includes touch operation information, and the touch operation information meets the preset touch operation information requirements.

In an embodiment, the device operation information of the device corresponding to the preset information and/or at least one other device directly or indirectly connected to the corresponding device meeting the sixth preset condition includes at least one of: if the device operation information includes gesture information, and the gesture information meets the preset gesture operation requirements (for example, the current gesture operation matches the preset gesture operation), then the device operation information meets the sixth preset condition; if the device operation information includes voice information, and the voice information meets the preset voice control requirements (for example, the voice control instruction spoken by the user matches the preset voice information), then the device operation information meets the sixth preset condition; if the device operation information includes sensing information, and the sensing information meets the preset sensing information requirements (for example, the device detects that the current gravitational acceleration has reached the preset gravitational acceleration value through the gravitational accelerometer), then the device operation information meets the sixth preset condition; if the device operation information includes touch operation information, and the touch operation information meets the preset touch operation information requirements (for example, the current user's touch operation on the touch screen matches the preset touch operation), then the device operation information meets the sixth preset condition.

In an embodiment, when analyzing the first preset information and/or the second preset information, the analysis data further includes information about the processing device.

In an embodiment, when the processing device analyzes the first preset information and/or the second preset information, the analysis data further includes information about the processing device, that is, the processing device can obtain its own third preset information. The third preset information includes at least one of fifth user physiological parameters, fifth device application information, fifth device system information, fifth device information, fifth environment information, and fifth device operation information.

In an embodiment, operation F20 includes: processing the first preset information and/or the second preset information according to the preset rule to obtain target information.

In an embodiment, the preset rule is determined by the content and/or type of the first preset information and/or the second preset information.

In an embodiment, the processing device processes the first preset information, the second preset information, or the first preset information and the second preset information according to the preset rule to obtain target information.

In an embodiment, the operation F20 includes at least one of the following:
if the first preset information and/or the second preset information is at least one of physiological parameters and exercise parameters, analyzing the first preset information and/or the second preset information according to preset health rules to obtain health control information;
if the first preset information and/or the second preset information is at least one of application and/or service type, application and/or service name, application and/or service state, application and/or service data, analyzing the first preset information and/or the second preset information according to preset application rules to obtain application control information;
if the first preset information and/or the second preset information is at least one of system type, system name, system state, and system data, analyzing the first preset information and/or the second preset information according to preset system rules to obtain system control information;
if the first preset information and/or the second preset information is at least one of device type, device name, device state, and device data, analyzing the first preset information and/or the second preset information according to preset device rules to obtain device control information;
if the first preset information and/or the second preset information is at least one of time, location, brightness, noise, altitude, road slope, weather, temperature, humidity, air pressure, wind level, and wind direction, analyzing the first preset information and/or the second preset information according to preset environment rules to obtain environment control information;
if the first preset information and/or the second preset information is at least one of gesture information, voice information, sensing information, and touch operation information, analyzing the first preset information and/or the second preset information according to preset operation rules to obtain operation control information.

In an embodiment, if the first preset information and/or the second preset information is at least one of physiological parameters and exercise parameters, the first preset information and/or the second preset information are analyzed according to the preset health rules to obtain health control information. The preset health rule is a rule for determining the correspondence between different physiological parameters and/or exercise parameters and different health control information.

For the physiological parameters, for example, the processing device detects the same physiological parameters as the user's sleep when the user's heart rate decreases and breathing is smooth by connecting to the device (such as first device (e.g. smart watch) and/or second device (e.g. earphones)) in the network. The health control information may be a control instruction for reducing the volume of an audio output device (such as the second device), so as to create a comfortable sleeping environment for the user. For another example, when the first device (such as a smart watch) detects that the user's sweating is greater than the normal value, it means that the user's environment is at a high temperature. The current user-specified temperature (target room temperature set by the user) of the second device (air conditioner) can be used to determine the target room temperature to be achieved (the degree to which the room temperature is lowered according to the amount of sweating), and the health control information is to control the air conditioner to lower the room temperature to the target room temperature.

For exercise parameters, for example, the processing device can determine that the user is in a state of exercise by detecting that the user's heart rate is greater than the normal value and the amount of sweat is greater than the normal value by connecting to a device in the network (such as the first device (such as the smart watch)); or it can be determined that the user is in a state of exercise through the fact that the smart watch is in the exercise mode and the amount of sweat is greater than the normal value. When the user is in a state of exercise, the user needs to sweat without the need to lower the room temperature. Therefore, there is no need to adjust the air conditioner when it is detected that the user's sweating is greater than the normal value, and the health control information is to control the air conditioner to maintain the room temperature.

In an embodiment, if the first preset information and/or the second preset information is at least one of application and/or service type, application and/or service name, application and/or service state, application and/or service data, the first preset information and/or the second preset information are analyzed according to the preset application rule to obtain the application control information. The preset application rule is a rule for determining the correspondence between at least one of different application types, application names, application states, and application data and different application control information.

For the application type, for example, when the processing device obtains that a device connected to the network (such as the first device (such as a mobile phone)) starts an audio application (such as NetEase Cloud Music), the system state of the second device (such as a speaker) is in a smooth state. Combining the application type of the first device and the system state of the second device, the processing device outputs prompt information by connecting to any device in the network (preferably, since the first device is the device currently used by the user, prompt information is output through the first device) to prompt the user whether to use the speaker to play audio. The application control information is to output prompt information by connecting any device in the network. For example, referring to FIG. 43, 500 is a mobile phone, and 501 is a pop-up box output by the mobile phone, and the pop-up box includes prompt information.

For the application name, when the processing device acquires that a device (such as the first device) in the connection network starts an application whose application name is the same as that of the preset application, the application control information is to display the display content of the application synchronously through the second device. For example, the processing device obtains that the mobile phone has opened the application "Youku Video", and "Youku Video" is the preset application, the user's setting content is: when "Youku Video" is turned on, the screen is cast to the TV synchronously, and the application control information is for the TV to receive and output the screen data of the mobile phone.

For the application state, the processing device acquires that the application state of an application connected to a device (such as a third device) in the network is crashed, the application control information is to continue to provide the unfinished service of the third device to the user by connecting to any other device installed with the application in the network. For example, if the processing device acquires that the application state of the mobile phone application "Taobao" is crashed, then the display interface on the mobile phone is cloned or transferred to the tablet computer on which "Taobao" is installed, the service provided by the mobile phone can be connected through the tablet computer, that is, the user can continue to complete the unfinished operations on the "Taobao" of the mobile phone through the tablet computer.

For the application data, the processing device acquires user usage data of an application connected to a device (such as the fourth device) in the network, the user usage data is that the frequency with which the user uses the application on the fourth device is greater than the preset frequency threshold (such as 10 weeks/time) compared to the frequency with which the user uses the application on other devices in the connection network, and the application control information is synchronized to the fourth device when other devices in the connection network receive the notification message of the application, so that the user can obtain the content of the message through the fourth device.

In an embodiment, if the first preset information and/or the second preset information is at least one of system type, system name, system state, and system data, the first preset information and/or the second preset information are analyzed according to the preset system rules to obtain system control information. The preset system rule is a rule for determining the correspondence between at least one of different system types, system names, system states, and system data and different system control information.

For the system type, for example, when the processing device obtains that the system type of a device connected to the network (such as the first device (such as a mobile phone)) is Android system, the application that needs to be downloaded by the first device only supports the Apple system, and the system type of the second device is an Apple system, then the system control information is to download the application through the second device or prompt the user to download the application through the second device.

For the system name, for example, the processing device obtains the system name of the device connected to the network (such as the first device) as "Apple System", and obtains the system name of the second device as "Apple System", their system version numbers are different, and the release time of the system version of the first device is earlier than the release time of the system version of the second device, the system control information is updating the system of the first device or prompting the user to update the system of the first device.

For the system state, the processing device acquires that the system state of a system connected to a device (such as a third device) in the network is crashed, the system control information is to continue to provide users with unfinished services of the third device by connecting to any other device installed with the system in the network. For example, if the processing device acquires that the system state of the mobile phone system is crashed, the display interface on the mobile phone is cloned or transferred to a tablet computer of the same system, so that the services provided by the mobile phone can be connected through the tablet computer. That is, the user can continue to complete the unfinished processing items on the mobile phone through the tablet computer.

For the system data, the processing device obtains the log data recording system state of a device (such as the fourth device) connected to the network, and finds that the frequency of system crashes reaches the preset crash frequency threshold, which indicates that the system of the fourth device needs to be repaired, and the system control information is the repair system of the fourth device.

In an embodiment, if the first preset information and/or the second preset information is at least one of device type, device name, device state, and device data, the first preset information and/or the second preset information are analyzed according to the preset device rules to obtain device control information. The preset device rule is a rule for determining the correspondence between at least one of different device types, device names, device states, and device data and different device control information.

For the device type, the processing device obtains the device type of a device (such as the first device) connected to the network, and when the device type is a preset device type, the device control information is a pre-assigned task. That is, the processing device notifies the device to prepare for the pre-assigned task through the device control information. For example, if the device type of the first device is a device with a screen, the pre-assigned task is a task related to playing video. Therefore, the processing device may notify the first device through the device control information that a video playback environment can be built in advance (for example, a video decoding library is ready, etc.).

For the device name, the processing device obtains the device name of a device (such as the first device) connected to the network, and when the device name is a preset device name, the device control information is to complete a preset task. It can be understood that the acquisition of the device name by the processing device generally occurs when the device is connected to the connection network. For example, the device name of the first device is "mobile phone", and the preset task is to receive the connection network control function transferred by the current processing device and act as a new processing device, then the processing device can notify the first device to take over the control function through the device control information. It can be understood that the usage time of mobile phone users is much longer than that of users connected to other devices in the network. Therefore, it is more convenient for the user to manage the connection network through the mobile phone.

For the device state, the processing device acquires the device state of a device (such as the first device) connected to the network. When the device state is the preset device state, the device control information provides a corresponding device state adjustment solution. For example, if the device state of the first device is overheated, the processing device may notify the first device to cool down the device through the device control information (for example, increase the output power of the heat sink, reduce the calorific value of the first device, etc.).

For the device data, the processing device acquires device data of a device (such as the first device) connected to the network, and when the device data reaches a preset device data condition, the device control information provides a corresponding device data solution. For example, if the device failure data of the first device meets the preset device failure data condition, the processing device may notify the first device to output corresponding prompt information through the device control information, to remind the user that the first device needs to be repaired.

In an embodiment, if the first preset information and/or the second preset information is at least one of time, location, brightness, noise, altitude, road slope, weather, temperature, humidity, air pressure, wind level, and wind direction, the first preset information and/or the second preset information are analyzed according to preset environmental rules to obtain environment control information. The preset environment rules are rules for determining the correspondence between at least one of different time, location, brightness, noise, altitude, road slope, weather, temperature, humidity, air pressure, wind level, and wind direction and different environment control information.

For the time, the processing device obtains the time connected to a device (such as the fourth device) in the network. When the time is different from the time connected to other devices in the network, the environment control information is to notify the device to adjust the time to the time connected to other devices in the network.

For the location, the processing device acquires the location of a device (such as the fourth device) connected to the network, and when the location is a preset location, the environment control information is to notify the device to make a preset response to the location. For example, if the location of the fourth device is a company, the processing device notifies the device to run a preset application in the background through the environment control information, which is convenient for users to handle work matters through the preset application (for example, DingTalk automatically runs in the background to facilitate users to clock in when they arrive at the company).

For the brightness, the processing device acquires the brightness of a device (such as the fourth device) connected to the network, and when the brightness is less than a preset brightness threshold, the environment control information is to notify the device to adjust accordingly so that the device is suitable for the user to use under the brightness. It can be understood that the brightness is the ambient brightness detected by the device. For example, when the brightness of the fourth device is lower than the preset brightness threshold, the processing device may notify the fourth device to reduce the display brightness of the display through the environment control information, to avoid visual impairment caused by users using a display device with high display brightness in a dark environment.

For the noise, the processing device obtains the noise of an audio output device (such as the fourth device) connected to the network. It can be understood that the noise level will affect the use of the audio output device. Therefore, the audio output device can be notified to adjust the audio output power in real time for the noise through the environmental control information, and the audio output device may also be informed of the noise by using the environment control information to eliminate the influence of the noise in real time (for example, active noise reduction for the noise).

For the altitude, the processing device obtains the altitude of the location of a device (such as the fourth device) connected to the network. When the altitude exceeds the preset altitude, the environment control information is to notify the device to make corresponding adjustments so that the device can provide higher oxygen supply to the climber, so as to avoid the shock phenomenon caused by the climber not being able to detect the insufficient oxygen supply in time.

For the road slope, the processing device acquires the road slope at the location of a device (such as the fourth device) in the connection network. When the road slope exceeds the preset value, the environment control information is to notify the device to adjust accordingly so that the device can adjust the suspension height in time to ensure that the device is always on a horizontal working surface.

For weather, temperature, humidity, air pressure, wind level and wind direction, the processing device acquires at least one of the weather, temperature, humidity, air pressure, wind level and wind direction of a device (such as the fourth device) in the connection network. When at least one of weather, temperature, humidity, air pressure, wind level and wind direction is different from the preset value or the preset range, the environment control information is to notify the device to make corresponding adjustments so that the device can adapt and/or adjust the environmental conditions, such as automatically cooling down when the temperature is too high, and performing moisture-proof treatment when it rains or the humidity is too high.

In an embodiment, if the first preset information and/or the second preset information is at least one of gesture information, voice information, sensing information, and touch operation information, the first preset information and/or the second preset information are analyzed according to preset operation rules to obtain operation control information. The preset operation rule is a rule for determining a correspondence between at least one of different gesture information, voice information, sensing information, and touch operation information and different operation control information.

For the gesture information, it includes at least one of a sliding instruction, a stretching instruction, a rotation instruction, a single-click instruction, and a double-click instruction triggered by the user on the touch screen or through the air, and may also include that the user uses the device to perform at least one of a pointing operation (point the terminal to a specific device, which can be the first device, the second device, or another device, etc.), a swing operation (such as shaking), and a rotation operation (such as switching from a vertical screen state to a horizontal screen state).

For the voice information, it can be voice control information sent by a user or other devices, and the device performs preset operations or performs preset functions by recognizing the voice control information.

For the sensing information, it can be sensory control information, and the device performs preset operations or performs preset functions through the sensory control information detected by internal or external sensors (such as motion sensors, gyroscopes, etc.).

For the touch operation information, it can include user gestures in the air, or at least one of sliding operations, clicking operations, dragging operations, 3D Touch operations, and knuckle tapping operations on the touch screen.

In an embodiment, in addition to the above-mentioned embodiments, in another embodiment, various combinations of different first preset information and/or second preset information may also be processed according to preset rules to obtain target information.

For example, the first device is the mobile phone, the application type obtained by the processing device is a game. The second device is an earphone, and the device state acquired by the processing device is in use. The third device is a smart watch, and the device state acquired by the processing device is standby. For the above scenario, the user is playing the game through the mobile phone and the earphone, in order not to affect the user's game play, when the processing device obtains the event that the WeChat call is connected to the mobile phone, it can transfer the WeChat call to the smart watch, so as to remind the user that there is a WeChat call connected through the smart watch.

For another example, the first device is a smart watch, and the processing device obtains a schedule (including specific work arrangements, such as a meeting at 9 o'clock) in the application data of the "memo" of the smart watch, and the device state of the smart watch is standby. The second device is an earphone, and the processing device acquires that the device state of the earphone is in use. The third device is a mobile phone, and the processing device acquires that the device state of the mobile phone is in standby. For the above scenario, the user is using the earphones instead of the smart watch and the mobile phone, to enable the user to receive prompt information in time, the processing device can output the schedule through the earphones in the form of voice reminders.

For another example, the first device is a TV, and the processing device obtains that the user has reserved a program in the application data of "Youku Video" of the TV, and the device state of the TV is standby. The second device is a smart watch, and the physiological parameter obtained by the processing device is the heart rate value corresponding to the user's heart rate in an awake state. The third device is a mobile phone, and the processing device acquires that the device state of the mobile phone is in use. For the above scenario, the user needs to watch the program through the TV, and the user is using the mobile phone at this time, the processing device can remind the user through the mobile phone that the reserved program will be played soon.

In an embodiment, the operation F20 further includes:
determining a processing rule according to the type of preset information, and processing the preset information according to the processing rule to obtain target information.

In an embodiment, in addition to determining the processing rule based on the content of the preset information (such as physiological parameter value), the processing rule can also be determined according to the type of the preset information, and the preset information is processed according to the processing rule to obtain the target information. It can be understood that the specific object for processing the preset information can be determined through the type of the preset information, that is, the preparation for processing the preset information can be done by determining the type of the preset information (for example, if the object of processing the preset information is an air conditioner, and the air conditioner is in a standby state, the air conditioner will be put into a normal operation state from the standby state immediately after the type of the preset information is determined), so as to improve the speed of processing the preset information. It can be understood that the process of determining the type of the preset information may be performed simultaneously with determining the content of the preset information, so as to further increase the speed of processing the preset information.

In an embodiment, the type of preset information includes at least one of the following: health data type, application and/or service data type, system data type, device data type, environment data type, and operation data type.

In an embodiment, the type of the preset information includes at least one of health data type, application and/or service data type, system data type, device data type, environment data type, and operation data type. The health data type is related to the user's health. For example, a type of data used to detect whether the user's vital signs are normal is the health data type. The application data type is related to the application installed on the device. The application includes user-installed applications and system pre-installed applications, such as application information, application operation process data, and other types of data whose data type is application data type. The system data type is related to the system installed on the device. For example, the data type of data used to support the normal operation of the system (such as data related to system state) is the system data type.

In an embodiment, the method further includes at least one of the following:
the health data type includes at least one of physiological parameters and exercise parameters;
the application and/or service data type includes at least one of application and/or service type, application and/or service name, application and/or service state, and application and/or service data;
the system data type includes at least one of system type, system name, system state, and system data;
the device data type includes at least one of device type, device name, device state, and device data;
the type of environment data includes at least one of time, location, brightness, noise, altitude, road slope, weather, temperature, humidity, air pressure, wind level, and wind direction;
the type of operation data includes at least one of gesture information, voice information, sensing information, and touch operation information.

In an embodiment, the health data type includes at least one of physiological parameters and exercise parameters; the application data type includes at least one of application type, application name, application state, and application data; the system data type includes at least one of system type, system name, system state, and system data; the device data type includes at least one of device type, device name, device state, and device data; the type of environment data includes at least one of time, location, brightness, noise, altitude, road slope, weather, temperature, humidity, air pressure, wind level, and wind direction; the type of operation data includes at least one of gesture information, voice information, sensing information, and touch operation information.

In an embodiment, processing the preset information according to the processing rule to obtain target information includes at least one of the following:
if the type of the preset information is a health data type, analyzing the preset information according to a preset health rule to obtain health control information;
if the type of the preset information is an application and/or service data type, analyzing the preset information according to a preset application rule to obtain application control information;
if the type of the preset information is a system data type, analyzing the preset information according to a preset system rule to obtain system control information;
if the type of the preset information is a device data type, analyzing the preset information according to a preset device rule to obtain device control information;
if the type of the preset information is an environmental data type, analyzing the preset information according to a preset environmental rule to obtain environment control information;
if the type of the preset information is an operation data type, analyzing the preset information according to a preset operation rule to obtain device operation control information.

In an embodiment, the processing the preset information according to the processing rule to obtain target information includes: if the type of the preset information is a health data type, analyzing the preset information according to a preset health rule to obtain health control information; if the type of the preset information is an application and/or service data type, analyzing the preset information according to a preset application rule to obtain application control information; if the type of the preset information is a system data type, analyzing the preset information according to a preset system rule to obtain system control information; if the type of the preset information is a device data type, analyzing the preset information according to a preset device rule to obtain device control information; if the type of the preset information is an environmental data type, analyzing the preset information according to a preset environmental rule to obtain environment control information; if the type of the preset information is an operation data type, analyzing the preset information according to a preset operation rule to obtain device operation control information.

In an embodiment, if the type of preset information is a health data type, the preset information is analyzed according to the preset health rule to obtain health control information. The preset health rule is a rule for determining the correspondence between different physiological parameters and/or exercise parameters and different health control information.

For the physiological parameters, for example, the processing device detects the same physiological parameters as the user's sleep when the user's heart rate decreases and breathing is smooth by connecting to the device (such as first device (e.g. smart watch) and/or second device (e.g. earphones)) in the network. The health control information may be a control instruction for reducing the volume of an audio output device (such as the second device), so as to create a comfortable sleeping environment for the user. For another example, when the first device (such as a smart watch) detects that the user's sweating is greater than the normal value, it means that the user's environment is at a high temperature. The current user-specified temperature (target room temperature set by the user) of the second device (air conditioner) can be used to determine the target room temperature to be achieved (the degree to which the room temperature is lowered according to the amount of sweating), and the health control information is to control the air conditioner to lower the room temperature to the target room temperature.

For exercise parameters, for example, the processing device can determine that the user is in a state of exercise by detecting that the user's heart rate is greater than the normal value and the amount of sweat is greater than the normal value by connecting to a device in the network (such as the first device (such as the smart watch)); or it can be determined that the user is in a state of exercise through the fact that the smart watch is in the exercise mode and the amount of sweat is greater than the normal value. When the user is in a state of exercise, the user needs to sweat without the need to lower the room temperature. Therefore, there is no need to adjust the air conditioner when it is detected that the user's sweating is greater than the normal value, and the health control information is to control the air conditioner to maintain the room temperature.

In an embodiment, if the type of preset information is an application and/or service data type, the preset information is analyzed according to the preset application rule to obtain application control information. The preset application rule is a rule for determining the correspondence between at least one of different application types, application names, application states, and application data and different application control information.

For the application type, for example, when the processing device obtains that a device connected to the network (such as the first device (such as a mobile phone)) starts an audio application (such as NetEase Cloud Music), the system state of the second device (such as a speaker) is in a smooth state. Combining the application type of the first device and the system state of the second device, the processing device outputs prompt information by connecting to any device in the network (preferably, since the first device is the device currently used by the user, prompt information is output through the first device) to prompt the user whether to use the speaker to play audio. The application control information is to output prompt information by connecting any device in the network. For example, referring to FIG. 43, 500 is a mobile phone, and 501 is a pop-up box output by the mobile phone, and the pop-up box includes prompt information.

For the application name, when the processing device acquires that a device (such as the first device) in the connection network starts an application whose application name is the same as that of the preset application, the application control information is to display the display content of the application synchronously through the second device. For example, the processing device obtains that the mobile phone has opened the application "Youku Video", and "Youku Video" is the preset application, the user's setting content is: when "Youku Video" is turned on, the screen is cast to the TV synchronously, and the application control information is for the TV to receive and output the screen data of the mobile phone.

For the application state, the processing device acquires that the application state of an application connected to a device (such as a third device) in the network is crashed, the application control information is to continue to provide the unfinished service of the third device to the user by connecting to any other device installed with the application in the network. For example, if the processing device acquires that the application state of the mobile phone application "Taobao" is crashed, then the display interface on the mobile phone is cloned or transferred to the tablet computer on which "Taobao" is installed, the service provided by the mobile phone can be connected through the tablet computer, that is, the user can continue to complete the unfinished operations on the "Taobao" of the mobile phone through the tablet computer.

For the application data, the processing device acquires user usage data of an application connected to a device (such as the fourth device) in the network, the user usage data is that the frequency with which the user uses the application on the fourth device is greater than the preset frequency threshold (such as 10 weeks/time) compared to the frequency with which the user uses the application on other devices in the connection network, and the application control information is synchronized to the fourth device when other devices in the connection network receive the notification message of the application, so that the user can obtain the content of the message through the fourth device.

In an embodiment, if the type of the preset information is the system data type, the preset information is analyzed according to the preset system rule to obtain the system control information. The preset system rule is a rule for determining the correspondence between at least one of different system types, system names, system states, and system data and different system control information.

For the system type, for example, when the processing device obtains that the system type of a device connected to the network (such as the first device (such as a mobile phone)) is Android system, the application that needs to be downloaded by the first device only supports the Apple system, and the system type of the second device is an Apple system, then the system control information is to download the application through the second device or prompt the user to download the application through the second device.

For the system name, for example, the processing device obtains the system name of the device connected to the network (such as the first device) as "Apple System", and obtains the system name of the second device as "Apple System", their system version numbers are different, and the release time of the system version of the first device is earlier than the release time of the system version of the second device, the system control information is updating the system of the first device or prompting the user to update the system of the first device.

For the system state, the processing device acquires that the system state of a system connected to a device (such as a third device) in the network is crashed, the system control information is to continue to provide users with unfinished services of the third device by connecting to any other device installed with the system in the network. For example, if the processing device acquires that the system state of the mobile phone system is crashed, the display interface on the mobile phone is cloned or transferred to a tablet computer of the same system, so that the services provided by the mobile phone can be connected through the tablet computer. That is, the user can continue to complete the unfinished processing items on the mobile phone through the tablet computer.

For the system data, the processing device obtains the log data recording system state of a device (such as the fourth device) connected to the network, and finds that the frequency of system crashes reaches the preset crash frequency threshold, which indicates that the system of the fourth device needs to be repaired, and the system control information is the repair system of the fourth device.

In an embodiment, if the type of preset information is a device data type, the preset information is analyzed according to the preset device rule to obtain device control information. The preset device rule is a rule for determining the correspondence between at least one of different device types, device names, device states, and device data and different device control information.

For the device type, the processing device obtains the device type of a device (such as the first device) connected to the network, and when the device type is a preset device type, the device control information is a pre-assigned task. That is, the processing device notifies the device to prepare for the pre-assigned task through the device control information. For example, if the device type of the first device is a device with a screen, the pre-assigned task is a task related to playing video. Therefore, the processing device may notify the first device through the device control information that a video playback environment can be built in advance (for example, a video decoding library is ready, etc.).

For the device name, the processing device obtains the device name of a device (such as the first device) connected to the network, and when the device name is a preset device name, the device control information is to complete a preset task. It can be understood that the acquisition of the device name by the processing device generally occurs when the device is connected to the connection network. For example, the device name of the first device is "mobile phone", and the preset task is to receive the connection network control function transferred by the current processing device and act as a new processing device, then the processing device can notify the first device to take over the control function through the device control information. It can be understood that the usage time of mobile phone users is much longer than that of users connected to other devices in the network. Therefore, it is more convenient for the user to manage the connection network through the mobile phone.

For the device state, the processing device acquires the device state of a device (such as the first device) connected to the network. When the device state is the preset device state, the device control information provides a corresponding device state adjustment solution. For example, if the device state of the first device is overheated, the processing device may notify the first device to cool down the device through the device control information (for example, increase the output power of the heat sink, reduce the calorific value of the first device, etc.).

For the device data, the processing device acquires device data of a device (such as the first device) connected to the network, and when the device data reaches a preset device data condition, the device control information provides a corresponding device data solution. For example, if the device failure data of the first device meets the preset device failure data condition, the processing device may notify the first device to output corresponding prompt information through the device control information, to remind the user that the first device needs to be repaired.

In an embodiment, if the type of preset information is an environmental data type, the preset information is analyzed according to the preset environmental rule to obtain environmental control information. The preset environmental rule is a rule for determining the correspondence between at least one of different time, location, brightness, noise, altitude, road slope, weather, temperature, humidity, air pressure, wind level, and wind direction and different environmental control information.

For the time, the processing device obtains the time connected to a device (such as the fourth device) in the network. When the time is different from the time connected to other devices in the network, the environment control information is to notify the device to adjust the time to the time connected to other devices in the network.

For the location, the processing device acquires the location of a device (such as the fourth device) connected to the network, and when the location is a preset location, the environment control information is to notify the device to make a preset response to the location. For example, if the location of the fourth device is a company, the processing device notifies the device to run a preset application in the background through the environment control information, which is convenient for users to handle work matters through the preset application (for example, DingTalk automatically runs in the background to facilitate users to clock in when they arrive at the company).

For the brightness, the processing device acquires the brightness of a device (such as the fourth device) connected to the network, and when the brightness is less than a preset brightness threshold, the environment control information is to notify the device to adjust accordingly so that the device is suitable for the user to use under the brightness. It can be understood that the brightness is the ambient brightness detected by the device. For example, when the brightness of the fourth device is lower than the preset brightness threshold, the processing device may notify the fourth device to reduce the display brightness of the display through the environment control information, to avoid visual impairment caused by users using a display device with high display brightness in a dark environment.

For the noise, the processing device obtains the noise of an audio output device (such as the fourth device) connected to the network. It can be understood that the noise level will affect the use of the audio output device. Therefore, the audio output device can be notified to adjust the audio output power in real time for the noise through the environmental control information, and the audio output device may also be informed of the noise by using the environment control information to eliminate the influence of the noise in real time (for example, active noise reduction for the noise).

For the altitude, the processing device obtains the altitude of the location of a device (such as the fourth device) connected to the network. When the altitude exceeds the preset altitude, the environment control information is to notify the device to make corresponding adjustments so that the device can provide higher oxygen supply to the climber, so as to avoid the shock phenomenon caused by the climber not being able to detect the insufficient oxygen supply in time.

For the road slope, the processing device acquires the road slope at the location of a device (such as the fourth device) in the connection network. When the road slope exceeds the preset value, the environment control information is to notify the device to adjust accordingly so that the device can adjust the suspension height in time to ensure that the device is always on a horizontal working surface.

For weather, temperature, humidity, air pressure, wind level and wind direction, the processing device acquires at least one of the weather, temperature, humidity, air pressure, wind level and wind direction of a device (such as the fourth device) in the connection network. When at least one of weather, temperature, humidity, air pressure, wind level and wind direction is different from the preset value or the preset range, the environment control information is to notify the device to make corresponding adjustments so that the device can adapt and/or adjust the environmental conditions, such as automatically cooling down when the temperature is too high, and performing moisture-proof treatment when it rains or the humidity is too high.

In an embodiment, if the type of the preset information is an operation data type, the preset information is analyzed according to a preset operation rule to obtain device operation control information. The preset operation rule is a rule for determining a correspondence between at least one of different gesture information, voice information, sensing information, and touch operation information and different operation control information.

For the gesture information, it includes at least one of a sliding instruction, a stretching instruction, a rotation instruction, a single-click instruction, and a double-click instruction triggered by the user on the touch screen or through the air, and may also include that the user uses the device to perform at least one of a pointing operation (point the terminal to a specific device, which can be the first device, the second device, or another device, etc.), a swing operation (such as shaking), and a rotation operation (such as switching from a vertical screen state to a horizontal screen state).

For the voice information, it can be voice control information sent by a user or other devices, and the device performs preset operations or performs preset functions by recognizing the voice control information.

For the sensing information, it can be sensory control information, and the device performs preset operations or performs preset functions through the sensory control information detected by internal or external sensors (such as motion sensors, gyroscopes, etc.).

For the touch operation information, it can include user gestures in the air, or at least one of sliding operations, clicking operations, dragging operations, 3D Touch operations, and knuckle tapping operations on the touch screen.

In an embodiment, in addition to the above embodiments, in another embodiment, a combination of various preset information may also be processed according to preset rules to obtain target information.

For example, the first device is the mobile phone, the application type obtained by the processing device is a game. The second device is an earphone, and the device state acquired by the processing device is in use. The third device is a smart watch, and the device state acquired by the processing device is standby. For the above scenario, the user is playing the game through the mobile phone and the earphone, in order not to affect the user's game play, when the processing device obtains the event that the WeChat call is connected to the mobile phone, it can transfer the WeChat call to the smart watch, so as to remind the user that there is a WeChat call connected through the smart watch.

For another example, the first device is a smart watch, and the processing device obtains a schedule (including specific work arrangements, such as a meeting at 9 o'clock) in the application data of the "memo" of the smart watch, and the device state of the smart watch is standby. The second device is an earphone, and the processing device acquires that the device state of the earphone is in use. The third device is a mobile phone, and the processing device acquires that the device state of the mobile phone is in standby. For the above scenario, the user is using the earphones instead of the smart watch and the mobile phone, to enable the user to receive prompt information in time, the processing device can output the schedule through the earphones in the form of voice reminders.

For another example, the first device is a TV, and the processing device obtains that the user has reserved a program in the application data of "Youku Video" of the TV, and the device state of the TV is standby. The second device is a smart watch, and the physiological parameter obtained by the processing device is the heart rate value corresponding to the user's heart rate in an awake state. The third device is a mobile phone, and the processing device acquires that the device state of the mobile phone is in use. For the above scenario, the user needs to watch the program through the TV, and the user is using the mobile phone at this time, the processing device can remind the user through the mobile phone that the reserved program will be played soon.

Operation F30, sending the target information, so that at least one of the first device, the second device, and at least one controlled device performs corresponding processing.

In an embodiment, the processing device sends target information to at least one of the first device, the second device and at least one controlled device, such that at least one of the first device, the second device and at least one controlled device performs corresponding processing, such as performing a control operation corresponding to the target information.

In an embodiment, the first device and/or the second device can not only undertake the function of providing the first preset information and/or the second preset information, and can also perform the corresponding processing according to the target information obtained by processing the first preset information and/or the second preset information. When the first device and/or the second device do not support or cannot perform corresponding processing, the target information may also be sent to at least one controlled device for corresponding processing. The controlled device is directly or indirectly connected to the processing device.

For example, the first device is a mobile phone, the second device is a smart TV or a surveillance camera, the first preset information provided by the first device is that the location information of the current user is the living room, and the second preset information provided by the second device is that the brightness of the living room is low. Thus, the target information obtained by processing the first preset information and the second preset information by the processing device is that the brightness of the light in the living room needs to be adjusted to the lighting level brightness. Therefore, the processing device sends the target information to the smart lighting device in the living room, so that the smart lighting device adjusts the light brightness of the living room to the lighting level brightness according to the target information.

In an embodiment, the operation F30 further includes:
the processing device performs corresponding processing according to a preset strategy.

In an embodiment, the processing device processes the target information for itself according to a preset strategy. The fifth user physiological parameters include at least one of physiological parameters and exercise parameters; the fifth device application information includes at least one of application type, application name, application state, and application data; the fifth device system information includes at least one of system type, system name, system state, and system data; the fifth device information includes at least one of device type, device name, device state, and device data; the fifth environment information includes at least one of time, location, brightness, noise, altitude, road slope, weather, temperature, humidity, air pressure, wind level, and wind direction; the fifth device operation information includes at least one preset strategy among gesture information, voice information, sensor information, and touch operation information. Correspondingly, the preset strategy includes at least one of the following: if the third preset information is at least one of physiological parameters and exercise parameters, analyzing the third preset information according to preset health rules to obtain health control information; if the third preset information is at least one of application and/or service type, application and/or service name, application and/or service state, application and/or service data, analyzing the third preset information according to the preset application rules to obtain application control information; if the third preset information is at least one of system type, system name, system state, and system data, analyzing the third preset information according to preset system rules to obtain system control information; if the third preset information is at least one of device type, device name, device state, and device data, analyzing the third preset information according to preset device rules to obtain device control information; if the third preset information is at least one of time, location, brightness, noise, altitude, road slope, weather, temperature, humidity, air pressure, wind level, and wind direction, analyzing the third preset information according to preset environmental rules to obtain environment control information; if the third preset information is at least one of gesture information, voice information, sensing information, and touch operation information, analyzing the third preset information according to preset operation rules to obtain device operation control information.

In this embodiment, the method includes: F10, obtaining the first preset information and/or the second preset information, the first preset information is provided by at least one first device directly connected to the processing device, and the second preset information is provided by at least one second device indirectly connected to the processing device; F20, processing the first preset information and/or the second preset information according to preset rules to obtain target information; F30, sending the target information, so that at least one of the first device, the second device, and at least one controlled device performs corresponding processing. Through obtaining the first preset information and/or the second preset information other than self information, sending the target information obtained after processing the first preset information and/or the second preset information back to the first device and/or the second device corresponding to the first preset information and/or the second preset information, the processing device may respond to the first preset information and/or the second preset information of the first device and/or the second device other than its own information. In this way, the device response process after each device establishes a connection with each other is more intelligent, convenient and fast.

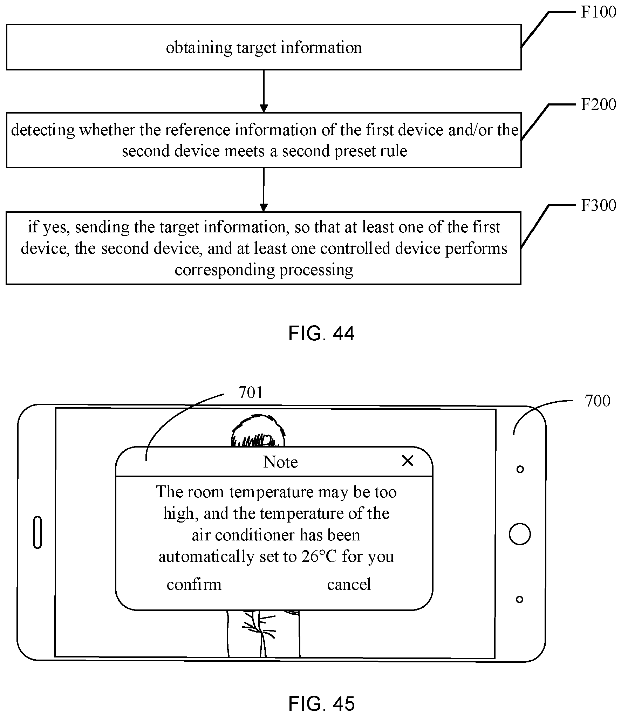

As shown in FIG. 44, another embodiment of the present application is proposed. Although a logical order is shown in the flowcharts, in some cases the steps shown or described may be performed in an order different from that shown or described herein. The processing method can be applied to a processing device including, but not limited to, a personal computer, a smart phone, and the like. The processing method includes:
operation F100, obtaining target information, the target information is obtained by the processing device processing first preset information provided by at least one first device and/or second preset information provided by at least one second device based on a first preset rule.

In an embodiment, the first preset rule is determined by the content and/or type of the first preset information and/or the second preset information.

In an embodiment, the processing device acquires target information. The target information is obtained by the processing device processing first preset information provided by at least one first device and/or second preset information provided by at least one second device based on a first preset rule. The processing device, the first device and the second device include any of terminal devices (such as smartphones, PADs, tablet computers, etc.), wearable smart devices (such as smart watches, smart bracelets, smart headphones, etc.), smart home devices (such as smart TVs, smart speakers, etc.) and Internet of Vehicles devices (such as smart cars, vehicle terminals, etc.)

In an embodiment, the first preset information includes at least one of the following: first user physiological parameters, first device application information, first device system information, first device information, first environment information, first device operation information.

The second preset information includes at least one of the following: second user physiological parameters, second device application information, second device system information, second device information, second environment information, and second device operation information.

In an embodiment, the first preset information includes at least one of: the first user physiological parameters, the first device application information, the first device system information, the first device information, the first environment information, the first device operation information. The second preset information includes at least one of: the second user physiological parameters, the second device application information, the second device system information, the second device information, the second environment information, and the second device operation information.

In an embodiment, the fourth device is directly or indirectly connected to the second device. The second preset information also includes at least one of the following: the fourth user physiological parameters, the fourth device application information, the fourth device system information, the fourth device information, the fourth environment information, and the fourth device operation information provided by the fourth device.

In an embodiment, the third device and the fourth device belong to the same connection network as the processing device, the first device and the second device, that is, the third device and the fourth device are directly or indirectly connected to the processing device. The third device is directly or indirectly connected to the first device, and the fourth device is directly or indirectly connected to the second device. The first preset information also includes at least one of the third user physiological parameters, the third device application information, the third device system information, the third device information, the third environment information, and the third device operation information provided by the third device. The second preset information further includes at least one of the fourth user physiological parameters, the fourth device application information, the fourth device system information, the fourth device information, the fourth environment information, and the fourth device operation information provided by the fourth device. It can be understood that the first preset information and the second preset information may not only be provided by the preset information sender device itself, but may also be provided by other devices directly or indirectly connected to the preset information sender device, thereby expanding the information collection scope of the first preset information and the second preset information. When the devices connected to the network respond to the user's instructions or the information collected by the device, there are more factors to refer to, so that the device response process is more intelligent and accurate.

In an embodiment, this solution may further include: the first user physiological parameter, the second user physiological parameter, the third user physiological parameter or the fourth user physiological parameter includes at least one of physiological parameters and exercise parameters;
the first device application and/or service information, the second device application and/or service information, the third device application and/or service information or the fourth device application and/or service information includes at least one of application and/or service type, application and/or service name, application and/or service state, application and/or service data;
the first device system information, the second device system information, the third device system information or the fourth device system information includes at least one of system type, system name, system state, and system data;
the first device information, second device information, third device information or fourth device information includes at least one of device type, device name, device state, and device data;
the first environment information, the second environment information, the third environment information or the fourth environment information includes at least one of time, location, brightness, noise, altitude, road slope, weather, temperature, humidity, air pressure, wind level, and wind direction;
the first device operation information, the second device operation information, the third device operation information or the fourth device operation information includes at least one of gesture information, voice information, sensing information, and touch operation information.

The first device operation information, the second device operation information, the third device operation information or the fourth device operation information includes at least one of gesture information, voice information, sensing information, and touch operation information.

In an embodiment, the first user physiological parameter, the second user physiological parameter, the third user physiological parameter or the fourth user physiological parameter may include at least one of physiological parameters and exercise parameters of the same user or different users.

For physiological parameters, it can be understood that the devices connected to the network have the ability to obtain the user physiological parameters to provide corresponding services. For example, the health services are provided by obtaining physiological parameters such as the user's heart rate, blood pressure, pulse, blood oxygen, blood sugar, and sweating volume. For example, it is detected that the user's heart rate is higher than the normal value when the user is sitting still, that is, the user is reminded of the abnormal heart rate, and in an embodiment, a corresponding solution can also be pushed to the user.

For exercise parameters, when the user is exercising, the physiological parameters will be different from those when not exercising. It can be understood that the heart rate of a person during exercise will be significantly higher than that of a person while sitting still, so when it is detected that the user is in a state of exercise, the exercise parameters are obtained. It can be understood that the processing schemes corresponding to physiological parameters and exercise parameters need to be different. For example, it is detected that the user's heart rate in the exercise parameters is greater than the normal value, but after the user finishes exercising for a period of time, the user's heart rate returns to the normal value, that is, there is no need to remind the user of abnormal heart rate.

In an embodiment, the first device application information, the second device application information, the third device application information or the fourth device application information may include at least one of application type, application name, application state, and application data.

For the application type, it is used to distinguish different types of applications, such as video applications, audio applications, etc. By identifying the application type, the corresponding function of the application can be obtained, for example, the video application is used to play videos.

For the application name, it is used to specifically distinguish whether the application is the same application and to determine the specific information of the application, for example, the application name of the application is "Alipay". It can be understood that it specifies the application as "Alipay" rather than other applications.

For the application state, it can be understood that it is the running state of the application, such as stuck, smooth, foreground running, background running, crash, etc.

For application data, the application will generate corresponding data during operation, such as log data recording application state, user usage data, and so on.

In an embodiment, the first device system information, the second device system information, the third device system information or the fourth device system information may include at least one of system type, system name, system state, and system data.

For the system type, it is used to distinguish different types of systems, such as Android system, Symbian system, Apple system, etc., and a deep customization system based on Android system (such as MIUI (Mobile Internet UI, Xiaomi mobile operating system)). In an embodiment, different systems provide users with different services during operation, for example, the operating mechanisms of the Apple system and the Android system are different.

For the system name, it is used to specifically distinguish whether the systems are the same system and to determine the specific information of the system, for example, the system name of the system is "Android System". It can be understood that it specifically specifies that the system is an "Android system" rather than other systems. In an embodiment, the system name may also include a complete name, for example, the name includes a system version number.

For the system state, it can be understood that it is the running state of the system, such as stuck, smooth, sleep, crash, standby, etc.

For system data, the system will generate corresponding data during operation, such as log data recording system state, system update data, etc.

In an embodiment, the above-mentioned first device information, the second device information, the third device information or the fourth device information includes at least one of device type, device name, device state, and device data.

For the device type, it is used to distinguish different types of devices, such as screen devices, non-screen devices, communication devices, audio output devices, video output devices, etc. It can be understood that different types of devices can provide different services, for example, a communication device has a communication function and can provide communication services (such as calling, sending text messages, etc.).

For the device name, it is used to specifically distinguish whether the system is the same device and to determine the specific information of the device, for example, the device name is "mobile phone". It can be understood that it specifically designates the device as a "mobile phone" rather than other devices.

For the device state, it can be understood that it reflects the use state of the device, such as overheating, abnormal power consumption, in use, and standby.

For the device data, the device will generate corresponding data during use, such as device failure data, device state data, etc.

In an embodiment, the above-mentioned first environment information, the second environment information, the third environment information or the fourth environment information includes at least one of time, location, brightness, noise, altitude, road slope, weather, temperature, humidity, air pressure, wind level, and wind direction.

For the time, it can include day, night, weekdays, holidays, 7:00 am, 10:00 am, 11:00 pm, etc.

For the location, it is positioning information, which may include home, company, supermarket, office, on the subway, on the bus, on the car, and so on.

For the brightness, the brightness reflects the light intensity of the environment where the device is located (e.g., dark, bright).

For the noise, the noise reflects the noise level of the environment where the device is located (such as loud, quiet).

For the altitude, the altitude reflects the altitude of the environment where the device is located (for example, 500 meters above sea level).

For the road slope, the road slope reflects the inclination of the environment where the device is located (for example, a slope of 5 degrees).

For the weather, it can include sunny, cloudy, cloudy, rain, fog, snow, haze, etc. It can also include weather condition levels or parameters, such as light pollution, PM2.5 is 150µg/m³, etc.

For the temperature, the temperature reflects the hot and cold conditions of the environment where the device is located (such as warm, high, cold, 20°C, etc.)

For the humidity, the humidity reflects the humidity of the environment where the device is located (such as dry, humid, 60%RH, 30%RH, etc.).

For the air pressure, the air pressure reflects the atmospheric pressure of the environment where the device is located (such as 1 standard atmosphere, etc.).

For the wind level, the wind level reflects the wind speed of the environment where the device is located (such as breeze, typhoon, wind level 3, etc.);

For the wind direction, the wind direction reflects the wind direction of the environment where the device is located (such as southeast wind, northwest wind, etc.).

In an embodiment, the first device operation information, the second device operation information, the third device operation information or the fourth device operation information includes at least one of gesture information, voice information, sensing information, and touch operation information.

For the gesture information, it includes at least one of a sliding instruction, a stretching instruction, a rotating instruction, a single-click instruction, and a double-click instruction triggered by the user on the touch screen or through the air, and can also include at least one of pointing operation (point the terminal to a specific device, which can be the first device, the second device, or another device, etc.), shaking operation (such as shaking), and rotation operation (such as switching from portrait to landscape) by the user with the device.

For the voice information, it may be voice control information sent by the user or other devices, and the device performs preset operations or performs preset functions by recognizing the voice control information.

For the sensing information, it can be sensory control information, and the device performs preset operations or performs preset functions through sensory control information detected by internal or external sensors (such as motion sensors, gyroscopes, etc.).

For the touch operation information, it can include user gestures in the air, or at least one of sliding operations, clicking operations, dragging operations, 3D Touch operations, and knuckle tapping operations on the touch screen.

In an embodiment, the target information is obtained by processing the first preset information provided by at least one first device and/or the second preset information provided by at least one second device based on a first preset rule by the processing device, including:
if the first preset information and/or the second preset information is at least one of physiological parameters and exercise parameters, analyzing the first preset information and/or the second preset information according to preset health rules to obtain health control information;
if the first preset information and/or the second preset information is at least one of application and/or service type, application and/or service name, application and/or service state, application and/or service data, analyzing the first preset information and/or the second preset information according to preset application rules to obtain application control information;
if the first preset information and/or the second preset information is at least one of system type, system name, system state, and system data, analyzing the first preset information and/or the second preset information according to preset system rules to obtain system control information;
if the first preset information and/or the second preset information is at least one of device type, device name, device state, and device data, analyzing the first preset information and/or the second preset information according to preset device rules to obtain device control information;
if the first preset information and/or the second preset information is at least one of time, location, brightness, noise, altitude, road slope, weather, temperature, humidity, air pressure, wind level, and wind direction, analyzing the first preset information and/or the second preset information according to preset environmental rules to obtain environmental control information;
if the first preset information and/or the second preset information is at least one of gesture information, voice information, sensing information, and touch operation information, analyzing the first preset information and/or the second preset information according to preset operation rules to obtain operation control information.

In an embodiment, if the first preset information and/or the second preset information is at least one of physiological parameters and exercise parameters, the first preset information and/or the second preset information are analyzed according to the preset health rules to obtain health control information. In an embodiment, the preset health rule is a rule for determining the correspondence between different physiological parameters and/or exercise parameters and different health control information.

For the physiological parameters, for example, the processing device detects the same physiological parameters as the user's sleep when the user's heart rate decreases and breathing is smooth by connecting to the device (such as first device (e.g. smart watch) and/or second device (e.g. earphones)) in the network. The health control information may be a control instruction for reducing the volume of an audio output device (such as the second device), so as to create a comfortable sleeping environment for the user. For another example, when the first device (such as a smart watch) detects that the user's sweating is greater than the normal value, it means that the user's environment is at a high temperature. The current user-specified temperature (target room temperature set by the user) of the second device (air conditioner) can be used to determine the target room temperature to be achieved (the degree to which the room temperature is lowered according to the amount of sweating), and the health control information is to control the air conditioner to lower the room temperature to the target room temperature.

For exercise parameters, for example, the processing device can determine that the user is in a state of exercise by detecting that the user's heart rate is greater than the normal value and the amount of sweat is greater than the normal value by connecting to a device in the network (such as the first device (such as the smart watch)); or it can be determined that the user is in a state of exercise through the fact that the smart watch is in the exercise mode and the amount of sweat is greater than the normal value. When the user is in a state of exercise, the user needs to sweat without the need to lower the room temperature. Therefore, there is no need to adjust the air conditioner when it is detected that the user's sweating is greater than the normal value, and the health control information is to control the air conditioner to maintain the room temperature.

In an embodiment, if the first preset information and/or the second preset information is at least one of application and/or service type, application and/or service name, application and/or service state, application and/or service data, the first preset information and/or the second preset information are analyzed according to the preset application rule to obtain the application control information. The preset application rule is a rule for determining the correspondence between at least one of different application types, application names, application states, and application data and different application control information.

For the application type, for example, when the processing device obtains that a device connected to the network (such as the first device (such as a mobile phone)) starts an audio application (such as NetEase Cloud Music), the system state of the second device (such as a speaker) is in a smooth state. Combining the application type of the first device and the system state of the second device, the processing device outputs prompt information by connecting to any device in the network (preferably, since the first device is the device currently used by the user, prompt information is output through the first device) to prompt the user whether to use the speaker to play audio. The application control information is to output prompt information by connecting any device in the network. For example, referring to FIG. 43, 500 is a mobile phone, and 501 is a pop-up box output by the mobile phone, and the pop-up box includes prompt information.

For the application name, when the processing device acquires that a device (such as the first device) in the connection network starts an application whose application name is the same as that of the preset application, the application control information is to display the display content of the application synchronously through the second device. For example, the processing device obtains that the mobile phone has opened the application "Youku Video", and "Youku Video" is the preset application, the user's setting content is: when "Youku Video" is turned on, the screen is cast to the TV synchronously, and the application control information is for the TV to receive and output the screen data of the mobile phone.

For the application state, the processing device acquires that the application state of an application connected to a device (such as a third device) in the network is crashed, the application control information is to continue to provide the unfinished service of the third device to the user by connecting to any other device installed with the application in the network. For example, if the processing device acquires that the application state of the mobile phone application "Taobao" is crashed, then the display interface on the mobile phone is cloned or transferred to the tablet computer on which "Taobao" is installed, the service provided by the mobile phone can be connected through the tablet computer, that is, the user can continue to complete the unfinished operations on the "Taobao" of the mobile phone through the tablet computer.

For the application data, the processing device acquires user usage data of an application connected to a device (such as the fourth device) in the network, the user usage data is that the frequency with which the user uses the application on the fourth device is greater than the preset frequency threshold (such as 10 weeks/time) compared to the frequency with which the user uses the application on other devices in the connection network, and the application control information is synchronized to the fourth device when other devices in the connection network receive the notification message of the application, so that the user can obtain the content of the message through the fourth device.

In an embodiment, if the first preset information and/or the second preset information is at least one of system type, system name, system state, and system data, the first preset information and/or the second preset information are analyzed according to the preset system rules to obtain system control information. The preset system rule is a rule for determining the correspondence between at least one of different system types, system names, system states, and system data and different system control information.

For the system type, for example, when the processing device obtains that the system type of a device connected to the network (such as the first device (such as a mobile phone)) is Android system, the application that needs to be downloaded by the first device only supports the Apple system, and the system type of the second device is an Apple system, then the system control information is to download the application through the second device or prompt the user to download the application through the second device.

For the system name, for example, the processing device obtains the system name of the device connected to the network (such as the first device) as "Apple System", and obtains the system name of the second device as "Apple System", their system version numbers are different, and the release time of the system version of the first device is earlier than the release time of the system version of the second device, the system control information is updating the system of the first device or prompting the user to update the system of the first device.

For the system state, the processing device acquires that the system state of a system connected to a device (such as a third device) in the network is crashed, the system control information is to continue to provide users with unfinished services of the third device by connecting to any other device installed with the system in the network. For example, if the processing device acquires that the system state of the mobile phone system is crashed, the display interface on the mobile phone is cloned or transferred to a tablet computer of the same system, so that the services provided by the mobile phone can be connected through the tablet computer. That is, the user can continue to complete the unfinished processing items on the mobile phone through the tablet computer.

For the system data, the processing device obtains the log data recording system state of a device (such as the fourth device) connected to the network, and finds that the frequency of system crashes reaches the preset crash frequency threshold, which indicates that the system of the fourth device needs to be repaired, and the system control information is the repair system of the fourth device.

In an embodiment, if the first preset information and/or the second preset information is at least one of device type, device name, device state, and device data, the first preset information and/or the second preset information are analyzed according to the preset device rules to obtain device control information. The preset device rule is a rule for determining the correspondence between at least one of different device types, device names, device states, and device data and different device control information.

For the device type, the processing device obtains the device type of a device (such as the first device) connected to the network, and when the device type is a preset device type, the device control information is a pre-assigned task. That is, the processing device notifies the device to prepare for the pre-assigned task through the device control information. For example, if the device type of the first device is a device with a screen, the pre-assigned task is a task related to playing video. Therefore, the processing device may notify the first device through the device control information that a video playback environment can be built in advance (for example, a video decoding library is ready, etc.).

For the device name, the processing device obtains the device name of a device (such as the first device) connected to the network, and when the device name is a preset device name, the device control information is to complete a preset task. It can be understood that the acquisition of the device name by the processing device generally occurs when the device is connected to the connection network. For example, the device name of the first device is "mobile phone", and the preset task is to receive the connection network control function transferred by the current processing device and act as a new processing device, then the processing device can notify the first device to take over the control function through the device control information. It can be understood that the usage time of mobile phone users is much longer than that of users connected to other devices in the network. Therefore, it is more convenient for the user to manage the connection network through the mobile phone.

For the device state, the processing device acquires the device state of a device (such as the first device) connected to the network. When the device state is the preset device state, the device control information provides a corresponding device state adjustment solution. For example, if the device state of the first device is overheated, the processing device may notify the first device to cool down the device through the device control information (for example, increase the output power of the heat sink, reduce the calorific value of the first device, etc.).

For the device data, the processing device acquires device data of a device (such as the first device) connected to the network, and when the device data reaches a preset device data condition, the device control information provides a corresponding device data solution. For example, if the device failure data of the first device meets the preset device failure data condition, the processing device may notify the first device to output corresponding prompt information through the device control information, to remind the user that the first device needs to be repaired.

In an embodiment, if the first preset information and/or the second preset information is at least one of time, location, brightness, noise, altitude, road slope, weather, temperature, humidity, air pressure, wind level, and wind direction, the first preset information and/or the second preset information are analyzed according to preset environmental rules to obtain environment control information. The preset environment rule is a rule for determining the correspondence between at least one of different time, location, brightness, noise, altitude, road slope, weather, temperature, humidity, air pressure, wind level, and wind direction and different environment control information.

For the time, the processing device obtains the time connected to a device (such as the fourth device) in the network. When the time is different from the time connected to other devices in the network, the environment control information is to notify the device to adjust the time to the time connected to other devices in the network.

For the location, the processing device acquires the location of a device (such as the fourth device) connected to the network, and when the location is a preset location, the environment control information is to notify the device to make a preset response to the location. For example, if the location of the fourth device is a company, the processing device notifies the device to run a preset application in the background through the environment control information, which is convenient for users to handle work matters through the preset application (for example, DingTalk automatically runs in the background to facilitate users to clock in when they arrive at the company).

For the brightness, the processing device acquires the brightness of a device (such as the fourth device) connected to the network, and when the brightness is less than a preset brightness threshold, the environment control information is to notify the device to adjust accordingly so that the device is suitable for the user to use under the brightness. It can be understood that the brightness is the ambient brightness detected by the device. For example, when the brightness of the fourth device is lower than the preset brightness threshold, the processing device may notify the fourth device to reduce the display brightness of the display through the environment control information, to avoid visual impairment caused by users using a display device with high display brightness in a dark environment.

For the noise, the processing device obtains the noise of an audio output device (such as the fourth device) connected to the network. It can be understood that the noise level will affect the use of the audio output device. Therefore, the audio output device can be notified to adjust the audio output power in real time for the noise through the environmental control information, and the audio output device may also be informed of the noise by using the environment control information to eliminate the influence of the noise in real time (for example, active noise reduction for the noise).

For the altitude, the processing device obtains the altitude of the location of a device (such as the fourth device) connected to the network. When the altitude exceeds the preset altitude, the environment control information is to notify the device to make corresponding adjustments so that the device can provide higher oxygen supply to the climber, so as to avoid the shock phenomenon caused by the climber not being able to detect the insufficient oxygen supply in time.

For the road slope, the processing device acquires the road slope at the location of a device (such as the fourth device) in the connection network. When the road slope exceeds the preset value, the environment control information is to notify the device to adjust accordingly so that the device can adjust the suspension height in time to ensure that the device is always on a horizontal working surface.

For weather, temperature, humidity, air pressure, wind level and wind direction, the processing device acquires at least one of the weather, temperature, humidity, air pressure, wind level and wind direction of a device (such as the fourth device) in the connection network. When at least one of weather, temperature, humidity, air pressure, wind level and wind direction is different from the preset value or the preset range, the environment control information is to notify the device to make corresponding adjustments so that the device can adapt and/or adjust the environmental conditions, such as automatically cooling down when the temperature is too high, and performing moisture-proof treatment when it rains or the humidity is too high.

In an embodiment, if the type of the preset information is an operation data type, the preset information is analyzed according to a preset operation rule to obtain device operation control information. The preset operation rule is a rule for determining the corresponding relationship between at least one of different gesture information, voice information, sensing information, touch operation information and different operation control information.

For the gesture information, it includes at least one of a sliding instruction, a stretching instruction, a rotation instruction, a single-click instruction, and a double-click instruction triggered by the user on the touch screen or through the air, and may also include that the user uses the device to perform at least one of a pointing operation (point the terminal to a specific device, which can be the first device, the second device, or another device, etc.), a swing operation (such as shaking), and a rotation operation (such as switching from a vertical screen state to a horizontal screen state).

For the voice information, it can be voice control information sent by a user or other devices, and the device performs preset operations or performs preset functions by recognizing the voice control information.

For the sensing information, it can be sensory control information, and the device performs preset operations or performs preset functions through the sensory control information detected by internal or external sensors (such as motion sensors, gyroscopes, etc.).

For the touch operation information, it can include user gestures in the air, or at least one of sliding operations, clicking operations, dragging operations, 3D Touch operations, and knuckle tapping operations on the touch screen.

In an embodiment, in addition to the above embodiments, in another embodiment, a combination of various preset information may also be processed according to preset rules to obtain target information.

For example, the first device is the mobile phone, the application type obtained by the processing device is a game. The second device is an earphone, and the device state acquired by the processing device is in use. The third device is a smart watch, and the device state acquired by the processing device is standby. For the above scenario, the user is playing the game through the mobile phone and the earphone, in order not to affect the user's game play, when the processing device obtains the event that the WeChat call is connected to the mobile phone, it can transfer the WeChat call to the smart watch, so as to remind the user that there is a WeChat call connected through the smart watch.

For another example, the first device is a smart watch, and the processing device obtains a schedule (including specific work arrangements, such as a meeting at 9 o'clock) in the application data of the "memo" of the smart watch, and the device state of the smart watch is standby. The second device is an earphone, and the processing device acquires that the device state of the earphone is in use. The third device is a mobile phone, and the processing device acquires that the device state of the mobile phone is in standby. For the above scenario, the user is using the earphones instead of the smart watch and the mobile phone, to enable the user to receive prompt information in time, the processing device can output the schedule through the earphones in the form of voice reminders.

For another example, the first device is a TV, and the processing device obtains that the user has reserved a program in the application data of "Youku Video" of the TV, and the device state of the TV is standby. The second device is a smart watch, and the physiological parameter obtained by the processing device is the heart rate value corresponding to the user's heart rate in an awake state. The third device is a mobile phone, and the processing device acquires that the device state of the mobile phone is in use. For the above scenario, the user needs to watch the program through the TV, and the user is using the mobile phone at this time, the processing device can remind the user through the mobile phone that the reserved program will be played soon.

In an embodiment, the first device and the second device are directly or indirectly connected.

In an embodiment, the first device and the second device may be directly connected or indirectly connected, for example, the first device and the second device are directly connected; the first device is indirectly connected to the second device, and the second device is not directly connected to the first device, but is directly connected to other devices in the connection network to realize an indirect connection with the processing device.

Operation F200, detecting whether the reference information of the first device and/or the second device meets a second preset rule.

In an embodiment, the second preset rule is determined by content and/or type of reference information of the first device and/or the second device.

In an embodiment, the reference information includes at least one of the following: device state information, device function information, device parameter information, and device application information.

In an embodiment, the processing device detects whether the device state information of the first device and/or the second device meets a second preset rule. The device state information includes in use, shutdown, overheating, etc. It can be understood that when the first device and/or the second device are in a shutdown or overheating state, new transactions in the connection network cannot be processed. Therefore, when the device state information of the first device and/or the second device is in a power-off or overheated state, the device state information does not meet the second preset rule. If the device state information of the first device and/or the second device is in use, then the device state information meets the second preset rule. The second preset rule is that the first device and/or the second device can process new transactions in the connection network.

In an embodiment, the processing device detects whether the device function information of the first device and/or the second device meets a second preset rule. The device function information includes functions supported by the first device and/or the second device, such as: adjusting room temperature, adjusting brightness, cooling, etc. It can be understood that when the first device and/or the second device cannot support the preset function, the processing operation corresponding to the target information cannot be performed. For example, when the processing operation corresponding to the target information is to adjust the room temperature, and the device function information of the first device and/or the second device is only for adjusting indoor brightness, the device function information does not meet the second preset rule. When the device function information of the first device and/or the second device is to adjust the indoor temperature, the device function information meets the second preset rule. The second preset rule is that the first device and/or the second device can handle new transactions connected to the network.

In an embodiment, the processing device detects whether the device parameter information of the first device and/or the second device meets a second preset rule. The device parameter information includes temperature, brightness, position, speed, or the like. It can be understood that when the device parameter information of the first device and/or the second device meets the second preset rule, for example: when the indoor temperature is too high, the brightness is too low, the current device position is not at the target position, or the speed is too low, the target information needs to be sent to process the first device and/or the second device and/or at least one controlled device, so as to adjust indoor temperature, brightness, device position and speed, and so on. The second preset rule is that the first device and/or the second device can handle new transactions in the connection network.

In an embodiment, the processing device detects whether the device application information of the first device and/or the second device meets a second preset rule. The device application information includes system applications and third-party applications, such as application functions such as sending information, playing music, and taking pictures. It can be understood that when the device application information of the first device and/or the second device can support the processing corresponding to the target information, the device application information can be considered to meet the second preset rule. The second preset rule is that the first device and/or the second device can handle new transactions in the connection network.

Operation F300, if yes, send the target information, so that at least one of the first device, the second device and at least one controlled device performs corresponding processing.

In an embodiment, the processing device sends the target information to at least one of the first device, the second device and at least one controlled device, such that at least one of the first device, the second device and at least one controlled device performs corresponding processing, such as performing a control operation corresponding to the target information.

In an embodiment, the first device and/or the second device can not only undertake the function of providing the first preset information and/or the second preset information, but also perform the corresponding processing according to the target information obtained by processing the first preset information and/or the second preset information. When the first device and/or the second device do not support or cannot perform corresponding processing, the target information may also be sent to at least one controlled device for corresponding processing. The controlled device is directly or indirectly connected to the processing device.

For example, the first device is a mobile phone, the second device is a smart TV or a surveillance camera, the first preset information provided by the first device is that the location information of the current user is the living room, and the second preset information provided by the second device is that the brightness of the living room is low. Thus, the target information obtained by processing the first preset information and the second preset information by the processing device is that the brightness of the light in the living room needs to be adjusted to the lighting level brightness. Therefore, the processing device sends the target information to the smart lighting device in the living room, so that the smart lighting device adjusts the light brightness of the living room to the lighting level brightness according to the target information.

In an embodiment, the operation F300 includes: sending the target information to a preset fifth device, so that the fifth device performs the preset processing.

In an embodiment, the processing device sends the target information to the preset fifth device, that is, the fifth device may also respond to the target information obtained by processing the first preset information provided by at least one first device and/or the second preset information provided by at least one second device based on the first preset rule by the processing device, so that the third device performs the preset processing.

In an embodiment, the preset processing includes:
outputting prompt information corresponding to the target information through the fifth device.

In an embodiment, the processing device outputs prompt information corresponding to the target information through the fifth device, and the prompt information is used to prompt the user of the device control operation corresponding to the target information and/or the device response result after the device control operation is performed. For example, referring to FIG. 45, 700 is a mobile phone, and 701 is a pop-up box output by the mobile phone 700, and the pop-up box prompts information.

In this embodiment, the processing method includes: F100, obtaining target information, the target information is obtained by the processing device processing the first preset information provided by at least one first device and/or the second preset information provided by at least one second device based on a first preset rule; F200, detecting whether the reference information of the first device and/or the second device meets a second preset rule; F300, if yes, sending the target information, so that at least one of the first device, the second device, and at least one controlled device performs the corresponding processing. Through obtaining the first preset information and/or the second preset information other than self information, and when the state information of the first device and/or the second device meets the second preset rule, the target information obtained after processing the first preset information and/or the second preset information is sent back to the first device and/or the second device corresponding to the first preset information and/or the second preset information, such that the processing device may respond to the first preset information and/or the second preset information of the first device and/or the second device other than its own information. In this way, the device response process after each device establishes a connection with each other is more intelligent, convenient and fast.

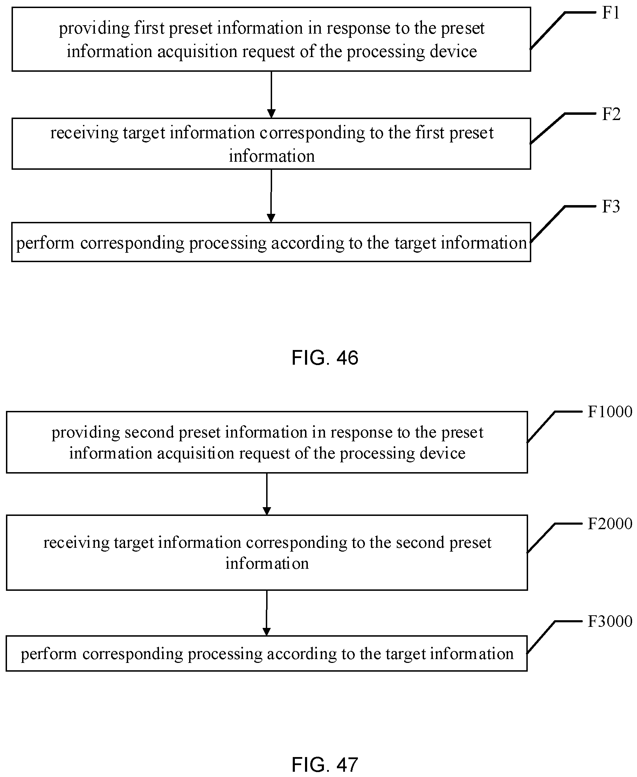

In an embodiment, as shown in FIG. 46, yet another embodiment of the present application is proposed. Although the logical sequence is shown in the flowchart, in some cases, the steps shown or described may be performed in a different order than here. The processing method is applicable to a first device directly connected to the processing device. The first device includes, but is not limited to, a personal computer, a smart phone, and the like. The processing method includes:
operation F1, providing the first preset information in response to the preset information acquisition request of the processing device.

In an embodiment, the first device provides the first preset information in response to the preset information acquisition request of the processing device.

In an embodiment, the first preset information includes at least one of the following: first user physiological parameters, first device application information, first device system information, first device information, first environment information, first device operation information;
The second preset information includes at least one of the following: second user physiological parameters, second device application information, second device system information, second device information, second environment information, and second device operation information.

In an embodiment, the first preset information includes at least one of: the first user physiological parameters, the first device application information, the first device system information, the first device information, the first environment information, the first device operation information. The second preset information includes at least one of: the second user physiological parameters, the second device application information, the second device system information, the second device information, the second environment information, and the second device operation information.

In an embodiment, the third device is directly or indirectly connected to the first device. The first preset information also includes at least one of the following: the third user physiological parameters, the third device application information, the third device system information, the third device information, the third environment information, and the third device operation information provided by the third device.

In an embodiment, the fourth device is directly or indirectly connected to the second device. The second preset information also includes at least one of the following: the fourth user physiological parameters, the fourth device application information, the fourth device system information, the fourth device information, the fourth environment information, and the fourth device operation information provided by the fourth device.

In an embodiment, the third device and the fourth device belong to the same connection network as the processing device, the first device and the second device, that is, the third device and the fourth device are directly or indirectly connected to the processing device. The third device is directly or indirectly connected to the first device, and the fourth device is directly or indirectly connected to the second device. The first preset information also includes at least one of the third user physiological parameters, the third device application information, the third device system information, the third device information, the third environment information, and the third device operation information provided by the third device. The second preset information further includes at least one of the fourth user physiological parameters, the fourth device application information, the fourth device system information, the fourth device information, the fourth environment information, and the fourth device operation information provided by the fourth device. It can be understood that the first preset information and the second preset information may not only be provided by the preset information sender device itself, but may also be provided by other devices directly or indirectly connected to the preset information sender device, thereby expanding the information collection scope of the first preset information and the second preset information. When the devices connected to the network respond to the user's instructions or the information collected by the device, there are more factors to refer to, so that the device response process is more intelligent and accurate.

In an embodiment, this solution may further include: the first user physiological parameter, the second user physiological parameter, the third user physiological parameter or the fourth user physiological parameter includes at least one of physiological parameters and exercise parameters;
the first device application and/or service information, the second device application and/or service information, the third device application and/or service information or the fourth device application and/or service information includes at least one of application and/or service type, application and/or service name, application and/or service state, application and/or service data;
the first device system information, the second device system information, the third device system information or the fourth device system information includes at least one of system type, system name, system state, and system data;
the first device information, second device information, third device information or fourth device information includes at least one of device type, device name, device state, and device data;
the first environment information, the second environment information, the third environment information or the fourth environment information includes at least one of time, location, brightness, noise, altitude, road slope, weather, temperature, humidity, air pressure, wind level, and wind direction;
the first device operation information, the second device operation information, the third device operation information or the fourth device operation information includes at least one of gesture information, voice information, sensing information, and touch operation information.

The first device operation information, the second device operation information, the third device operation information or the fourth device operation information includes at least one of gesture information, voice information, sensing information, and touch operation information.

In an embodiment, the first user physiological parameter, the second user physiological parameter, the third user physiological parameter or the fourth user physiological parameter may include at least one of physiological parameters and exercise parameters of the same user or different users.

For physiological parameters, it can be understood that the devices connected to the network have the ability to obtain the user physiological parameters to provide corresponding services. For example, the health services are provided by obtaining physiological parameters such as the user's heart rate, blood pressure, pulse, blood oxygen, blood sugar, and sweating volume. For example, it is detected that the user's heart rate is higher than the normal value when the user is sitting still, that is, the user is reminded of the abnormal heart rate, and in an embodiment, a corresponding solution can also be pushed to the user.

For exercise parameters, when the user is exercising, the physiological parameters will be different from those when not exercising. It can be understood that the heart rate of a person during exercise will be significantly higher than that of a person while sitting still, so when it is detected that the user is in a state of exercise, the exercise parameters are obtained. It can be understood that the processing schemes corresponding to physiological parameters and exercise parameters need to be different. For example, it is detected that the user's heart rate in the exercise parameters is greater than the normal value, but after the user finishes exercising for a period of time, the user's heart rate returns to the normal value, that is, there is no need to remind the user of abnormal heart rate.

In an embodiment, the first device application information, the second device application information, the third device application information or the fourth device application information may include at least one of application type, application name, application state, and application data.

For the application type, it is used to distinguish different types of applications, such as video applications, audio applications, etc. By identifying the application type, the corresponding function of the application can be obtained, for example, the video application is used to play videos.

For the application name, it is used to specifically distinguish whether the application is the same application and to determine the specific information of the application, for example, the application name of the application is "Alipay". It can be understood that it specifies the application as "Alipay" rather than other applications.

For the application state, it can be understood that it is the running state of the application, such as stuck, smooth, foreground running, background running, crash, etc.

For application data, the application will generate corresponding data during operation, such as log data recording application state, user usage data, and so on.

In an embodiment, the first device system information, the second device system information, the third device system information or the fourth device system information may include at least one of system type, system name, system state, and system data.

For the system type, it is used to distinguish different types of systems, such as Android system, Symbian system, Apple system, etc., and a deep customization system based on Android system (such as MIUI (Mobile Internet UI, Xiaomi mobile operating system)). In an embodiment, different systems provide users with different services during operation, for example, the operating mechanisms of the Apple system and the Android system are different.

For the system name, it is used to specifically distinguish whether the systems are the same system and to determine the specific information of the system, for example, the system name of the system is "Android System". It can be understood that it specifically specifies that the system is an "Android system" rather than other systems. In an embodiment, the system name may also include a complete name, for example, the name includes a system version number.

For the system state, it can be understood that it is the running state of the system, such as stuck, smooth, sleep, crash, standby, etc.

For system data, the system will generate corresponding data during operation, such as log data recording system state, system update data, etc.

In an embodiment, the above-mentioned first device information, the second device information, the third device information or the fourth device information includes at least one of device type, device name, device state, and device data.

For the device type, it is used to distinguish different types of devices, such as screen devices, non-screen devices, communication devices, audio output devices, video output devices, etc. It can be understood that different types of devices can provide different services, for example, a communication device has a communication function and can provide communication services (such as calling, sending text messages, etc.).

For the device name, it is used to specifically distinguish whether the system is the same device and to determine the specific information of the device, for example, the device name is "mobile phone". It can be understood that it specifically designates the device as a "mobile phone" rather than other devices.

For the device state, it can be understood that it reflects the use state of the device, such as overheating, abnormal power consumption, in use, and standby.

For the device data, the device will generate corresponding data during use, such as device failure data, device state data, etc.

In an embodiment, the above-mentioned first environment information, the second environment information, the third environment information or the fourth environment information includes at least one of time, location, brightness, noise, altitude, road slope, weather, temperature, humidity, air pressure, wind level, and wind direction.

For the time, it can include day, night, weekdays, holidays, 7:00 am, 10:00 am, 11:00 pm, etc.

For the location, it is positioning information, which may include home, company, supermarket, office, on the subway, on the bus, on the car, and so on.

For the brightness, the brightness reflects the light intensity of the environment where the device is located (e.g., dark, bright).

For the noise, the noise reflects the noise level of the environment where the device is located (such as loud, quiet).

For the altitude, the altitude reflects the altitude of the environment where the device is located (for example, 500 meters above sea level).

For the road slope, the road slope reflects the inclination of the environment where the device is located (for example, a slope of 5 degrees).

For the weather, it can include sunny, cloudy, cloudy, rain, fog, snow, haze, etc. It can also include weather condition levels or parameters, such as light pollution, PM2.5 is 150µg/m³, etc.

For the temperature, the temperature reflects the hot and cold conditions of the environment where the device is located (such as warm, high, cold, 20°C, etc.)

For the humidity, the humidity reflects the humidity of the environment where the device is located (such as dry, humid, 60%RH, 30%RH, etc.).

For the air pressure, the air pressure reflects the atmospheric pressure of the environment where the device is located (such as 1 standard atmosphere, etc.).

For the wind level, the wind level reflects the wind speed of the environment where the device is located (such as breeze, typhoon, wind level 3, etc.);
For the wind direction, the wind direction reflects the wind direction of the environment where the device is located (such as southeast wind, northwest wind, etc.).

In an embodiment, the first device operation information, the second device operation information, the third device operation information or the fourth device operation information includes at least one of gesture information, voice information, sensing information, and touch operation information.

For the gesture information, it includes at least one of a sliding instruction, a stretching instruction, a rotating instruction, a single-click instruction, and a double-click instruction triggered by the user on the touch screen or through the air, and can also include at least one of pointing operation (point the terminal to a specific device, which can be the first device, the second device, or another device, etc.), shaking operation (such as shaking), and rotation operation (such as switching from portrait to landscape) by the user with the device.

For the voice information, it may be voice control information sent by the user or other devices, and the device performs preset operations or performs preset functions by recognizing the voice control information.

For the sensing information, it can be sensory control information, and the device performs preset operations or performs preset functions through sensory control information detected by internal or external sensors (such as motion sensors, gyroscopes, etc.).

For the touch operation information, it can include user gestures in the air, or at least one of sliding operations, clicking operations, dragging operations, 3D Touch operations, and knuckle tapping operations on the touch screen.

Operation F2, receiving the target information corresponding to the first preset information. The target information is obtained by processing the first preset information and/or the second preset information according to the preset rule by the processing device. The second preset information is provided by at least one second device indirectly connected to the processing device.

In an embodiment, the preset rule is determined by the content and/or type of the first preset information and/or the second preset information.

In an embodiment, the first device receives the target information corresponding to the first preset information. The target information is obtained by processing the first preset information and/or the second preset information according to the preset rule by the processing device. The processing device, the first device and the second device include any one of terminal devices (such as smartphones, PADs, Tablets, etc.), wearable smart devices (such as smart watches, smart bracelets, smart headphones, etc.), smart home devices (such as smart TVs, smart speakers, etc.) and Internet of Vehicles devices (such as smart cars, vehicle terminals, etc.).

In an embodiment, the target information is obtained by processing the first preset information and/or the second preset information according to preset rules by the processing device, including:
if the first preset information and/or the second preset information is at least one of physiological parameters and exercise parameters, analyzing the first preset information and/or the second preset information according to preset health rules to obtain health control information;
if the first preset information and/or the second preset information is at least one of application and/or service type, application and/or service name, application and/or service state, application and/or service data, analyzing the first preset information and/or the second preset information according to preset application rules to obtain application control information;
if the first preset information and/or the second preset information is at least one of system type, system name, system state, and system data, analyzing the first preset information and/or the second preset information according to preset system rules to obtain system control information;
if the first preset information and/or the second preset information is at least one of device type, device name, device state, and device data, analyzing the first preset information and/or the second preset information according to preset device rules to obtain device control information;
if the first preset information and/or the second preset information is at least one of time, location, brightness, noise, altitude, road slope, weather, temperature, humidity, air pressure, wind level, and wind direction, analyzing the first preset information and/or the second preset information according to preset environmental rules to obtain environmental control information;
if the first preset information and/or the second preset information is at least one of gesture information, voice information, sensing information, and touch operation information, analyzing the first preset information and/or the second preset information according to preset operation rules to obtain operation control information.

In an embodiment, if the first preset information and/or the second preset information is at least one of physiological parameters and exercise parameters, the first preset information and/or the second preset information are analyzed according to the preset health rules to obtain health control information. In an embodiment, the preset health rule is a rule for determining the correspondence between different physiological parameters and/or exercise parameters and different health control information.

For the physiological parameters, for example, the processing device detects the same physiological parameters as the user's sleep when the user's heart rate decreases and breathing is smooth by connecting to the device (such as first device (e.g. smart watch) and/or second device (e.g. earphones)) in the network. The health control information may be a control instruction for reducing the volume of an audio output device (such as the second device), so as to create a comfortable sleeping environment for the user. For another example, when the first device (such as a smart watch) detects that the user's sweating is greater than the normal value, it means that the user's environment is at a high temperature. The current user-specified temperature (target room temperature set by the user) of the second device (air conditioner) can be used to determine the target room temperature to be achieved (the degree to which the room temperature is lowered according to the amount of sweating), and the health control information is to control the air conditioner to lower the room temperature to the target room temperature.

For exercise parameters, for example, the processing device can determine that the user is in a state of exercise by detecting that the user's heart rate is greater than the normal value and the amount of sweat is greater than the normal value by connecting to a device in the network (such as the first device (such as the smart watch)); or it can be determined that the user is in a state of exercise through the fact that the smart watch is in the exercise mode and the amount of sweat is greater than the normal value. When the user is in a state of exercise, the user needs to sweat without the need to lower the room temperature. Therefore, there is no need to adjust the air conditioner when it is detected that the user's sweating is greater than the normal value, and the health control information is to control the air conditioner to maintain the room temperature.

In an embodiment, if the first preset information and/or the second preset information is at least one of application and/or service type, application and/or service name, application and/or service state, application and/or service data, the first preset information and/or the second preset information are analyzed according to the preset application rule to obtain the application control information. The preset application rule is a rule for determining the correspondence between at least one of different application types, application names, application states, and application data and different application control information.

For the application type, for example, when the processing device obtains that a device connected to the network (such as the first device (such as a mobile phone)) starts an audio application (such as NetEase Cloud Music), the system state of the second device (such as a speaker) is in a smooth state. Combining the application type of the first device and the system state of the second device, the processing device outputs prompt information by connecting to any device in the network (preferably, since the first device is the device currently used by the user, prompt information is output through the first device) to prompt the user whether to use the speaker to play audio. The application control information is to output prompt information by connecting any device in the network. For example, referring to FIG. 43, 500 is a mobile phone, and 501 is a pop-up box output by the mobile phone, and the pop-up box includes prompt information.

For the application name, when the processing device acquires that a device (such as the first device) in the connection network starts an application whose application name is the same as that of the preset application, the application control information is to display the display content of the application synchronously through the second device. For example, the processing device obtains that the mobile phone has opened the application "Youku Video", and "Youku Video" is the preset application, the user's setting content is: when "Youku Video" is turned on, the screen is cast to the TV synchronously, and the application control information is for the TV to receive and output the screen data of the mobile phone.

For the application state, the processing device acquires that the application state of an application connected to a device (such as a third device) in the network is crashed, the application control information is to continue to provide the unfinished service of the third device to the user by connecting to any other device installed with the application in the network. For example, if the processing device acquires that the application state of the mobile phone application "Taobao" is crashed, then the display interface on the mobile phone is cloned or transferred to the tablet computer on which "Taobao" is installed, the service provided by the mobile phone can be connected through the tablet computer, that is, the user can continue to complete the unfinished operations on the "Taobao" of the mobile phone through the tablet computer.

For the application data, the processing device acquires user usage data of an application connected to a device (such as the fourth device) in the network, the user usage data is that the frequency with which the user uses the application on the fourth device is greater than the preset frequency threshold (such as 10 weeks/time) compared to the frequency with which the user uses the application on other devices in the connection network, and the application control information is synchronized to the fourth device when other devices in the connection network receive the notification message of the application, so that the user can obtain the content of the message through the fourth device.

In an embodiment, if the first preset information and/or the second preset information is at least one of system type, system name, system state, and system data, the first preset information and/or the second preset information are analyzed according to the preset system rules to obtain system control information. The preset system rule is a rule for determining the correspondence between at least one of different system types, system names, system states, and system data and different system control information.

For the system type, for example, when the processing device obtains that the system type of a device connected to the network (such as the first device (such as a mobile phone)) is Android system, the application that needs to be downloaded by the first device only supports the Apple system, and the system type of the second device is an Apple system, then the system control information is to download the application through the second device or prompt the user to download the application through the second device.

For the system name, for example, the processing device obtains the system name of the device connected to the network (such as the first device) as "Apple System", and obtains the system name of the second device as "Apple System", their system version numbers are different, and the release time of the system version of the first device is earlier than the release time of the system version of the second device, the system control information is updating the system of the first device or prompting the user to update the system of the first device.

For the system state, the processing device acquires that the system state of a system connected to a device (such as a third device) in the network is crashed, the system control information is to continue to provide users with unfinished services of the third device by connecting to any other device installed with the system in the network. For example, if the processing device acquires that the system state of the mobile phone system is crashed, the display interface on the mobile phone is cloned or transferred to a tablet computer of the same system, so that the services provided by the mobile phone can be connected through the tablet computer. That is, the user can continue to complete the unfinished processing items on the mobile phone through the tablet computer.

For the system data, the processing device obtains the log data recording system state of a device (such as the fourth device) connected to the network, and finds that the frequency of system crashes reaches the preset crash frequency threshold, which indicates that the system of the fourth device needs to be repaired, and the system control information is the repair system of the fourth device.

In an embodiment, if the first preset information and/or the second preset information is at least one of device type, device name, device state, and device data, the first preset information and/or the second preset information are analyzed according to the preset device rules to obtain device control information. The preset device rule is a rule for determining the correspondence between at least one of different device types, device names, device states, and device data and different device control information.

For the device type, the processing device obtains the device type of a device (such as the first device) connected to the network, and when the device type is a preset device type, the device control information is a pre-assigned task. That is, the processing device notifies the device to prepare for the pre-assigned task through the device control information. For example, if the device type of the first device is a device with a screen, the pre-assigned task is a task related to playing video. Therefore, the processing device may notify the first device through the device control information that a video playback environment can be built in advance (for example, a video decoding library is ready, etc.).

For the device name, the processing device obtains the device name of a device (such as the first device) connected to the network, and when the device name is a preset device name, the device control information is to complete a preset task. It can be understood that the acquisition of the device name by the processing device generally occurs when the device is connected to the connection network. For example, the device name of the first device is "mobile phone", and the preset task is to receive the connection network control function transferred by the current processing device and act as a new processing device, then the processing device can notify the first device to take over the control function through the device control information. It can be understood that the usage time of mobile phone users is much longer than that of users connected to other devices in the network. Therefore, it is more convenient for the user to manage the connection network through the mobile phone.

For the device state, the processing device acquires the device state of a device (such as the first device) connected to the network. When the device state is the preset device state, the device control information provides a corresponding device state adjustment solution. For example, if the device state of the first device is overheated, the processing device may notify the first device to cool down the device through the device control information (for example, increase the output power of the heat sink, reduce the calorific value of the first device, etc.).

For the device data, the processing device acquires device data of a device (such as the first device) connected to the network, and when the device data reaches a preset device data condition, the device control information provides a corresponding device data solution. For example, if the device failure data of the first device meets the preset device failure data condition, the processing device may notify the first device to output corresponding prompt information through the device control information, to remind the user that the first device needs to be repaired.

In an embodiment, if the first preset information and/or the second preset information is at least one of time, location, brightness, noise, altitude, road slope, weather, temperature, humidity, air pressure, wind level, and wind direction, the first preset information and/or the second preset information are analyzed according to preset environmental rules to obtain environment control information. The preset environment rule is a rule for determining the correspondence between at least one of different time, location, brightness, noise, altitude, road slope, weather, temperature, humidity, air pressure, wind level, and wind direction and different environment control information.

For the time, the processing device obtains the time connected to a device (such as the fourth device) in the network. When the time is different from the time connected to other devices in the network, the environment control information is to notify the device to adjust the time to the time connected to other devices in the network.

For the location, the processing device acquires the location of a device (such as the fourth device) connected to the network, and when the location is a preset location, the environment control information is to notify the device to make a preset response to the location. For example, if the location of the fourth device is a company, the processing device notifies the device to run a preset application in the background through the environment control information, which is convenient for users to handle work matters through the preset application (for example, DingTalk automatically runs in the background to facilitate users to clock in when they arrive at the company).

For the brightness, the processing device acquires the brightness of a device (such as the fourth device) connected to the network, and when the brightness is less than a preset brightness threshold, the environment control information is to notify the device to adjust accordingly so that the device is suitable for the user to use under the brightness. It can be understood that the brightness is the ambient brightness detected by the device. For example, when the brightness of the fourth device is lower than the preset brightness threshold, the processing device may notify the fourth device to reduce the display brightness of the display through the environment control information, to avoid visual impairment caused by users using a display device with high display brightness in a dark environment.

For the noise, the processing device obtains the noise of an audio output device (such as the fourth device) connected to the network. It can be understood that the noise level will affect the use of the audio output device. Therefore, the audio output device can be notified to adjust the audio output power in real time for the noise through the environmental control information, and the audio output device may also be informed of the noise by using the environment control information to eliminate the influence of the noise in real time (for example, active noise reduction for the noise).

For the altitude, the processing device obtains the altitude of the location of a device (such as the fourth device) connected to the network. When the altitude exceeds the preset altitude, the environment control information is to notify the device to make corresponding adjustments so that the device can provide higher oxygen supply to the climber, so as to avoid the shock phenomenon caused by the climber not being able to detect the insufficient oxygen supply in time.

For the road slope, the processing device acquires the road slope at the location of a device (such as the fourth device) in the connection network. When the road slope exceeds the preset value, the environment control information is to notify the device to adjust accordingly so that the device can adjust the suspension height in time to ensure that the device is always on a horizontal working surface.

For weather, temperature, humidity, air pressure, wind level and wind direction, the processing device acquires at least one of the weather, temperature, humidity, air pressure, wind level and wind direction of a device (such as the fourth device) in the connection network. When at least one of weather, temperature, humidity, air pressure, wind level and wind direction is different from the preset value or the preset range, the environment control information is to notify the device to make corresponding adjustments so that the device can adapt and/or adjust the environmental conditions, such as automatically cooling down when the temperature is too high, and performing moisture-proof treatment when it rains or the humidity is too high.

In an embodiment, if the type of the preset information is an operation data type, the preset information is analyzed according to a preset operation rule to obtain device operation control information. The preset operation rule is a rule for determining the corresponding relationship between at least one of different gesture information, voice information, sensing information, touch operation information and different operation control information.

For the gesture information, it includes at least one of a sliding instruction, a stretching instruction, a rotation instruction, a single-click instruction, and a double-click instruction triggered by the user on the touch screen or through the air, and may also include that the user uses the device to perform at least one of a pointing operation (point the terminal to a specific device, which can be the first device, the second device, or another device, etc.), a swing operation (such as shaking), and a rotation operation (such as switching from a vertical screen state to a horizontal screen state).

For the voice information, it can be voice control information sent by a user or other devices, and the device performs preset operations or performs preset functions by recognizing the voice control information.

For the sensing information, it can be sensory control information, and the device performs preset operations or performs preset functions through the sensory control information detected by internal or external sensors (such as motion sensors, gyroscopes, etc.).

For the touch operation information, it can include user gestures in the air, or at least one of sliding operations, clicking operations, dragging operations, 3D Touch operations, and knuckle tapping operations on the touch screen.

In an embodiment, in addition to the above-mentioned embodiments, in another embodiment, various combinations of different first preset information and/or second preset information may also be processed according to preset rules to obtain target information.

For example, the first device is the mobile phone, the application type obtained by the processing device is a game. The second device is an earphone, and the device state acquired by the processing device is in use. The third device is a smart watch, and the device state acquired by the processing device is standby. For the above scenario, the user is playing the game through the mobile phone and the earphone, in order not to affect the user's game play, when the processing device obtains the event that the WeChat call is connected to the mobile phone, it can transfer the WeChat call to the smart watch, so as to remind the user that there is a WeChat call connected through the smart watch.

For another example, the first device is a smart watch, and the processing device obtains a schedule (including specific work arrangements, such as a meeting at 9 o'clock) in the application data of the "memo" of the smart watch, and the device state of the smart watch is standby. The second device is an earphone, and the processing device acquires that the device state of the earphone is in use. The third device is a mobile phone, and the processing device acquires that the device state of the mobile phone is in standby. For the above scenario, the user is using the earphones instead of the smart watch and the mobile phone, to enable the user to receive prompt information in time, the processing device can output the schedule through the earphones in the form of voice reminders.

For another example, the first device is a TV, and the processing device obtains that the user has reserved a program in the application data of "Youku Video" of the TV, and the device state of the TV is standby. The second device is a smart watch, and the physiological parameter obtained by the processing device is the heart rate value corresponding to the user's heart rate in an awake state. The third device is a mobile phone, and the processing device acquires that the device state of the mobile phone is in use. For the above scenario, the user needs to watch the program through the TV, and the user is using the mobile phone at this time, the processing device can remind the user through the mobile phone that the reserved program will be played soon.

Operation F3, performing the corresponding processing according to the target information.

In an embodiment, the first device and/or the second device performs the corresponding processing according to the target information, and performs the control operation corresponding to the target information.

In an embodiment, before the operation F3, the processing method further includes:
outputting the prompt information corresponding to the target information;
if the cancel execution instruction corresponding to the prompt information is not received (it may not be received within a preset time), performing the operation F3; and/or, if the cancel execution instruction is received, not performing the operation F3 and/or outputting the corresponding prompt information (the prompt information output mode can be interface display or voice broadcast or light prompt, etc.).

In an embodiment, the first device and/or the second device outputs prompt information corresponding to the target information, so that the user decides whether the first device and/or the second device performs the corresponding processing according to the prompt information. If the cancel execution instruction corresponding to the prompt information is not received within the preset time or the confirmation execution instruction corresponding to the prompt information is received within the preset time, the corresponding processing operation is performed according to the target information. The preset time may be preset by the system or set by the user, which is not specifically limited in this embodiment.

In an embodiment, the method further includes:
determining whether the historical number of consecutive receptions of the cancellation execution instruction is less than or equal to the preset number of times;
if the historical number of consecutive receptions of the cancellation execution instruction is less than or equal to the preset number of times, when the target information is received, performing the operation of outputting the prompt information corresponding to the target information.

In an embodiment, the first device and/or the second device judges whether the number of historical consecutive receptions of the cancel execution instruction is less than or equal to a preset number of times. It can be understood that the purpose of the above judgment process is to determine the user's historical operations on the target information, that is, to determine whether the number of consecutive instructions given by the user that he does not want the first device and/or the second device to perform the corresponding processing reaches the preset number of times. If the number of historical consecutive receptions of the cancel execution instruction is less than the preset number of times, it means that the user may also want the first device and/or the second device to perform the corresponding processing; and/or, if the number of historical consecutive receptions of the cancel execution instruction is greater than the preset number of times, it means that the user may not want the first device and/or the second device to perform the corresponding processing. Therefore, the operation of outputting the prompt information corresponding to the target information is executed only when the number of historical consecutive receptions of the cancel execution instruction is less than the preset number of times and the target information is received.

In an embodiment, this solution further includes:
when the target information meets the preset safety condition, performing the operation of determining whether the number of historical consecutive reception times of the cancel execution instruction is less than or equal to the preset number of times.

In an embodiment, before determining whether the number of historical consecutive receptions of the cancel execution instruction is less than or equal to the preset number of times, it is also necessary to determine whether the target information meets the preset safety conditions of the first device and/or the second device. If so, the operation of determining whether the number of historical consecutive receptions of the cancellation execution instruction is less than or equal to the preset number of times is performed; and/or, if not, the operation of determining whether the number of historical consecutive reception times of the cancel execution instruction is less than or equal to the preset number of times is not performed. The preset safety conditions include device control safety conditions, that is, preventing the first device and/or the second device from being controlled by other devices. The preset safety conditions also include information safety conditions, that is, to avoid information leakage of the first device and/or the second device due to receiving target information.

In an embodiment, the method further includes:
obtaining update data corresponding to the first preset information and/or the second preset information, and processing the update data according to the preset rule to obtain updated target information.

In an embodiment, the corresponding processing is only performed if the updated target information is the same as the target information; or the corresponding process is only performed if the updated target information is different from the target information.

In an embodiment, the first device and/or the second device obtains update data corresponding to the first preset information and/or the second preset information, processes the update data according to preset rules, and obtains updated target information. If the updated target information is the same as the target information, the corresponding processing is performed. It can be understood that the update data is the first preset information and/or the second preset information reacquired by the first device and/or the second device after obtaining the target information. The purpose of reacquisition is to determine whether the corresponding updated target information has changed. If the corresponding updated target information has changed, the updated target information will be different from the corresponding processing corresponding to the target information, and then the target information will become invalid, and corresponding processing needs to be performed according to the updated target information; and/or, if the corresponding updated target information has not changed, the updated target information is the same as the corresponding processing corresponding to the target information, and the corresponding processing can be directly executed. In this way, the accuracy of performing the corresponding processing can be ensured.

In an embodiment, before the operation F3, the method includes:
when the target information meets a preset requirement, performing the corresponding processing.

In an embodiment, before performing the corresponding processing, the first device and/or the second device further need to determine whether the target information meets a preset requirement, and only performs the corresponding processing when the preset requirement is met. It can be understood that when the corresponding processing conflicts with the corresponding preset requirement, the preset requirement shall prevail, that is, the preset system setting shall not be changed. For example, the corresponding processing is to adjust the volume of the earphone to be greater than 80% of the total volume, while the preset requirement is that the volume of the earphone cannot be greater than 80% of the total volume, At this time, the corresponding processing conflicts with the preset requirement, and the corresponding processing is not executed, or a corresponding prompt information is output to allow the user to decide whether to execute the corresponding processing.

In this embodiment, the method includes: F1, providing first preset information in response to the preset information acquisition request of the processing device; F2, receiving target information corresponding to the first preset information, the target information is obtained by processing the first preset information and/or the second preset information according to preset rules by the processing device, the second preset information is provided by at least one second device indirectly connected to the processing device; F3, performing the corresponding processing according to the target information. By responding to the preset information acquisition request of the processing device, providing the first preset information, and after receiving the corresponding target information, executing the processing corresponding to the target information, the device response process after each device establishes a connection with each other is more intelligent, convenient and fast.

As shown in FIG. 47, an embodiment of the present application is proposed. Although a logical order is shown in the flowcharts, in some cases the steps shown or described may be performed in an order different from that shown or described herein. The processing method can be applied to a second device that is indirectly connected to the processing device, and the second device includes but is not limited to a personal computer, a smart phone, and the like. The processing method includes:
operation F1000, providing second preset information in response to the preset information acquisition request of the processing device.

In an embodiment, the first device provides the first preset information in response to the preset information acquisition request of the processing device.

In an embodiment, the first preset information includes at least one of the following: first user physiological parameters, first device application information, first device system information, first device information, first environment information, first device operation information;

The second preset information includes at least one of the following: second user physiological parameters, second device application information, second device system information, second device information, second environment information, and second device operation information.

In an embodiment, the first preset information includes at least one of: the first user physiological parameters, the first device application information, the first device system information, the first device information, the first environment information, the first device operation information. The second preset information includes at least one of: the second user physiological parameters, the second device application information, the second device system information, the second device information, the second environment information, and the second device operation information.

In an embodiment, the third device is directly or indirectly connected to the first device. The first preset information also includes at least one of the following: the third user physiological parameters, the third device application information, the third device system information, the third device information, the third environment information, and the third device operation information provided by the third device.

In an embodiment, the fourth device is directly or indirectly connected to the second device. The second preset information also includes at least one of the following: the fourth user physiological parameters, the fourth device application information, the fourth device system information, the fourth device information, the fourth environment information, and the fourth device operation information provided by the fourth device.

In an embodiment, the third device and the fourth device belong to the same connection network as the processing device, the first device and the second device, that is, the third device and the fourth device are directly or indirectly connected to the processing device. The third device is directly or indirectly connected to the first device, and the fourth device is directly or indirectly connected to the second device. The first preset information also includes at least one of the third user physiological parameters, the third device application information, the third device system information, the third device information, the third environment information, and the third device operation information provided by the third device. The second preset information further includes at least one of the fourth user physiological parameters, the fourth device application information, the fourth device system information, the fourth device information, the fourth environment information, and the fourth device operation information provided by the fourth device. It can be understood that the first preset information and the second preset information may not only be provided by the preset information sender device itself, but may also be provided by other devices directly or indirectly connected to the preset information sender device, thereby expanding the information collection scope of the first preset information and the second preset information. When the devices connected to the network respond to the user's instructions or the information collected by the device, there are more factors to refer to, so that the device response process is more intelligent and accurate.

In an embodiment, this solution may further include: the first user physiological parameter, the second user physiological parameter, the third user physiological parameter or the fourth user physiological parameter includes at least one of physiological parameters and exercise parameters;
the first device application and/or service information, the second device application and/or service information, the third device application and/or service information or the fourth device application and/or service information includes at least one of application and/or service type, application and/or service name, application and/or service state, application and/or service data;
the first device system information, the second device system information, the third device system information or the fourth device system information includes at least one of system type, system name, system state, and system data;
the first device information, second device information, third device information or fourth device information includes at least one of device type, device name, device state, and device data;
the first environment information, the second environment information, the third environment information or the fourth environment information includes at least one of time, location, brightness, noise, altitude, road slope, weather, temperature, humidity, air pressure, wind level, and wind direction;
the first device operation information, the second device operation information, the third device operation information or the fourth device operation information includes at least one of gesture information, voice information, sensing information, and touch operation information.

The first device operation information, the second device operation information, the third device operation information or the fourth device operation information includes at least one of gesture information, voice information, sensing information, and touch operation information.

In an embodiment, the first user physiological parameter, the second user physiological parameter, the third user physiological parameter or the fourth user physiological parameter may include at least one of physiological parameters and exercise parameters of the same user or different users.

For physiological parameters, it can be understood that the devices connected to the network have the ability to obtain the user physiological parameters to provide corresponding services. For example, the health services are provided by obtaining physiological parameters such as the user's heart rate, blood pressure, pulse, blood oxygen, blood sugar, and sweating volume. For example, it is detected that the user's heart rate is higher than the normal value when the user is sitting still, that is, the user is reminded of the abnormal heart rate, and in an embodiment, a corresponding solution can also be pushed to the user.

For exercise parameters, when the user is exercising, the physiological parameters will be different from those when not exercising. It can be understood that the heart rate of a person during exercise will be significantly higher than that of a person while sitting still, so when it is detected that the user is in a state of exercise, the exercise parameters are obtained. It can be understood that the processing schemes corresponding to physiological parameters and exercise parameters need to be different. For example, it is detected that the user's heart rate in the exercise parameters is greater than the normal value, but after the user finishes exercising for a period of time, the user's heart rate returns to the normal value, that is, there is no need to remind the user of abnormal heart rate.

In an embodiment, the first device application information, the second device application information, the third device application information or the fourth device application information may include at least one of application type, application name, application state, and application data.

For the application type, it is used to distinguish different types of applications, such as video applications, audio applications, etc. By identifying the application type, the corresponding function of the application can be obtained, for example, the video application is used to play videos.

For the application name, it is used to specifically distinguish whether the application is the same application and to determine the specific information of the application, for example, the application name of the application is "Alipay". It can be understood that it specifies the application as "Alipay" rather than other applications.

For the application state, it can be understood that it is the running state of the application, such as stuck, smooth, foreground running, background running, crash, etc.

For application data, the application will generate corresponding data during operation, such as log data recording application state, user usage data, and so on.

In an embodiment, the first device system information, the second device system information, the third device system information or the fourth device system information may include at least one of system type, system name, system state, and system data.

For the system type, it is used to distinguish different types of systems, such as Android system, Symbian system, Apple system, etc., and a deep customization system based on Android system (such as MIUI (Mobile Internet UI, Xiaomi mobile operating system)). In an embodiment, different systems provide users with different services during operation, for example, the operating mechanisms of the Apple system and the Android system are different.

For the system name, it is used to specifically distinguish whether the systems are the same system and to determine the specific information of the system, for example, the system name of the system is "Android System". It can be understood that it specifically specifies that the system is an "Android system" rather than other systems. In an embodiment, the system name may also include a complete name, for example, the name includes a system version number.

For the system state, it can be understood that it is the running state of the system, such as stuck, smooth, sleep, crash, standby, etc.

For system data, the system will generate corresponding data during operation, such as log data recording system state, system update data, etc.

In an embodiment, the above-mentioned first device information, the second device information, the third device information or the fourth device information includes at least one of device type, device name, device state, and device data.

For the device type, it is used to distinguish different types of devices, such as screen devices, non-screen devices, communication devices, audio output devices, video output devices, etc. It can be understood that different types of devices can provide different services, for example, a communication device has a communication function and can provide communication services (such as calling, sending text messages, etc.).

For the device name, it is used to specifically distinguish whether the system is the same device and to determine the specific information of the device, for example, the device name is "mobile phone". It can be understood that it specifically designates the device as a "mobile phone" rather than other devices.

For the device state, it can be understood that it reflects the use state of the device, such as overheating, abnormal power consumption, in use, and standby.

For the device data, the device will generate corresponding data during use, such as device failure data, device state data, etc.

In an embodiment, the above-mentioned first environment information, the second environment information, the third environment information or the fourth environment information includes at least one of time, location, brightness, noise, altitude, road slope, weather, temperature, humidity, air pressure, wind level, and wind direction.

For the time, it can include day, night, weekdays, holidays, 7:00 am, 10:00 am, 11:00 pm, etc.

For the location, it is positioning information, which may include home, company, supermarket, office, on the subway, on the bus, on the car, and so on.

For the brightness, the brightness reflects the light intensity of the environment where the device is located (e.g., dark, bright).

For the noise, the noise reflects the noise level of the environment where the device is located (such as loud, quiet).

For the altitude, the altitude reflects the altitude of the environment where the device is located (for example, 500 meters above sea level).

For the road slope, the road slope reflects the inclination of the environment where the device is located (for example, a slope of 5 degrees).

For the weather, it can include sunny, cloudy, cloudy, rain, fog, snow, haze, etc. It can also include weather condition levels or parameters, such as light pollution, PM2.5 is 150µg/m³, etc.

For the temperature, the temperature reflects the hot and cold conditions of the environment where the device is located (such as warm, high, cold, 20°C, etc.)

For the humidity, the humidity reflects the humidity of the environment where the device is located (such as dry, humid, 60%RH, 30%RH, etc.).

For the air pressure, the air pressure reflects the atmospheric pressure of the environment where the device is located (such as 1 standard atmosphere, etc.).

For the wind level, the wind level reflects the wind speed of the environment where the device is located (such as breeze, typhoon, wind level 3, etc.);
For the wind direction, the wind direction reflects the wind direction of the environment where the device is located (such as southeast wind, northwest wind, etc.).

In an embodiment, the first device operation information, the second device operation information, the third device operation information or the fourth device operation information includes at least one of gesture information, voice information, sensing information, and touch operation information.

For the gesture information, it includes at least one of a sliding instruction, a stretching instruction, a rotating instruction, a single-click instruction, and a double-click instruction triggered by the user on the touch screen or through the air, and can also include at least one of pointing operation (point the terminal to a specific device, which can be the first device, the second device, or another device, etc.), shaking operation (such as shaking), and rotation operation (such as switching from portrait to landscape) by the user with the device.

For the voice information, it may be voice control information sent by the user or other devices, and the device performs preset operations or performs preset functions by recognizing the voice control information.

For the sensing information, it can be sensory control information, and the device performs preset operations or performs preset functions through sensory control information detected by internal or external sensors (such as motion sensors, gyroscopes, etc.).

For the touch operation information, it can include user gestures in the air, or at least one of sliding operations, clicking operations, dragging operations, 3D Touch operations, and knuckle tapping operations on the touch screen.

Operation F2000, receiving target information corresponding to the second preset information, the target information is obtained by the processing device processing the first preset information and/or the second preset information according to preset rules, the first preset information is provided by at least one first device directly connected to the processing device.

The preset rule is determined by the content and/or type of the first preset information and/or the second preset information.

The second device receives target information corresponding to the second preset information, and the target information is obtained by processing the first preset information and/or the second preset information according to preset rules by the processing device. The processing device, the first device and the second device include any one of terminal devices (such as smartphones, PADs, Tablets, etc.), wearable smart devices (such as smart watches, smart bracelets, smart headphones, etc.), smart home devices (such as smart TVs, smart speakers, etc.) and Internet of Vehicles devices (such as smart cars, vehicle terminals, etc.).

In an embodiment, the target information is obtained by processing the first preset information and/or the second preset information according to preset rules by the processing device, including:
if the first preset information and/or the second preset information is at least one of physiological parameters and exercise parameters, analyzing the first preset information and/or the second preset information according to preset health rules to obtain health control information;
if the first preset information and/or the second preset information is at least one of application and/or service type, application and/or service name, application and/or service state, application and/or service data, analyzing the first preset information and/or the second preset information according to preset application rules to obtain application control information;
if the first preset information and/or the second preset information is at least one of system type, system name, system state, and system data, analyzing the first preset information and/or the second preset information according to preset system rules to obtain system control information;
if the first preset information and/or the second preset information is at least one of device type, device name, device state, and device data, analyzing the first preset information and/or the second preset information according to preset device rules to obtain device control information;
if the first preset information and/or the second preset information is at least one of time, location, brightness, noise, altitude, road slope, weather, temperature, humidity, air pressure, wind level, and wind direction, analyzing the first preset information and/or the second preset information according to preset environmental rules to obtain environmental control information;
if the first preset information and/or the second preset information is at least one of gesture information, voice information, sensing information, and touch operation information, analyzing the first preset information and/or the second preset information according to preset operation rules to obtain operation control information.

In an embodiment, if the first preset information and/or the second preset information is at least one of physiological parameters and exercise parameters, the first preset information and/or the second preset information are analyzed according to the preset health rules to obtain health control information. The preset health rule is a rule for determining the correspondence between different physiological parameters and/or exercise parameters and different health control information.

For the physiological parameters, for example, the processing device detects the same physiological parameters as the user's sleep when the user's heart rate decreases and breathing is smooth by connecting to the device (such as first device (e.g. smart watch) and/or second device (e.g. earphones)) in the network. The health control information may be a control instruction for reducing the volume of an audio output device (such as the second device), so as to create a comfortable sleeping environment for the user. For another example, when the first device (such as a smart watch) detects that the user's sweating is greater than the normal value, it means that the user's environment is at a high temperature. The current user-specified temperature (target room temperature set by the user) of the second device (air conditioner) can be used to determine the target room temperature to be achieved (the degree to which the room temperature is lowered according to the amount of sweating), and the health control information is to control the air conditioner to lower the room temperature to the target room temperature.

For exercise parameters, for example, the processing device can determine that the user is in a state of exercise by detecting that the user's heart rate is greater than the normal value and the amount of sweat is greater than the normal value by connecting to a device in the network (such as the first device (such as the smart watch)); or it can be determined that the user is in a state of exercise through the fact that the smart watch is in the exercise mode and the amount of sweat is greater than the normal value. When the user is in a state of exercise, the user needs to sweat without the need to lower the room temperature. Therefore, there is no need to adjust the air conditioner when it is detected that the user's sweating is greater than the normal value, and the health control information is to control the air conditioner to maintain the room temperature.

In an embodiment, if the first preset information and/or the second preset information is at least one of application and/or service type, application and/or service name, application and/or service state, application and/or service data, the first preset information and/or the second preset information are analyzed according to the preset application rule to obtain the application control information. The preset application rule is a rule for determining the correspondence between at least one of different application types, application names, application states, and application data and different application control information.

For the application type, for example, when the processing device obtains that a device connected to the network (such as the first device (such as a mobile phone)) starts an audio application (such as NetEase Cloud Music), the system state of the second device (such as a speaker) is in a smooth state. Combining the application type of the first device and the system state of the second device, the processing device outputs prompt information by connecting to any device in the network (preferably, since the first device is the device currently used by the user, prompt information is output through the first device) to prompt the user whether to use the speaker to play audio. The application control information is to output prompt information by connecting any device in the network. For example, referring to FIG. 43, 500 is a mobile phone, and 501 is a pop-up box output by the mobile phone, and the pop-up box includes prompt information.

For the application name, when the processing device acquires that a device (such as the first device) in the connection network starts an application whose application name is the same as that of the preset application, the application control information is to display the display content of the application synchronously through the second device. For example, the processing device obtains that the mobile phone has opened the application "Youku Video", and "Youku Video" is the preset application, the user's setting content is: when "Youku Video" is turned on, the screen is cast to the TV synchronously, and the application control information is for the TV to receive and output the screen data of the mobile phone.

For the application state, the processing device acquires that the application state of an application connected to a device (such as a third device) in the network is crashed, the application control information is to continue to provide the unfinished service of the third device to the user by connecting to any other device installed with the application in the network. For example, if the processing device acquires that the application state of the mobile phone application "Taobao" is crashed, then the display interface on the mobile phone is cloned or transferred to the tablet computer on which "Taobao" is installed, the service provided by the mobile phone can be connected through the tablet computer, that is, the user can continue to complete the unfinished operations on the "Taobao" of the mobile phone through the tablet computer.

For the application data, the processing device acquires user usage data of an application connected to a device (such as the fourth device) in the network, the user usage data is that the frequency with which the user uses the application on the fourth device is greater than the preset frequency threshold (such as 10 weeks/time) compared to the frequency with which the user uses the application on other devices in the connection network, and the application control information is synchronized to the fourth device when other devices in the connection network receive the notification message of the application, so that the user can obtain the content of the message through the fourth device.

In an embodiment, if the first preset information and/or the second preset information is at least one of system type, system name, system state, and system data, the first preset information and/or the second preset information are analyzed according to the preset system rules to obtain system control information. The preset system rule is a rule for determining the correspondence between at least one of different system types, system names, system states, and system data and different system control information.

For the system type, for example, when the processing device obtains that the system type of a device connected to the network (such as the first device (such as a mobile phone)) is Android system, the application that needs to be downloaded by the first device only supports the Apple system, and the system type of the second device is an Apple system, then the system control information is to download the application through the second device or prompt the user to download the application through the second device.

For the system name, for example, the processing device obtains the system name of the device connected to the network (such as the first device) as "Apple System", and obtains the system name of the second device as "Apple System", their system version numbers are different, and the release time of the system version of the first device is earlier than the release time of the system version of the second device, the system control information is updating the system of the first device or prompting the user to update the system of the first device.

For the system state, the processing device acquires that the system state of a system connected to a device (such as a third device) in the network is crashed, the system control information is to continue to provide users with unfinished services of the third device by connecting to any other device installed with the system in the network. For example, if the processing device acquires that the system state of the mobile phone system is crashed, the display interface on the mobile phone is cloned or transferred to a tablet computer of the same system, so that the services provided by the mobile phone can be connected through the tablet computer. That is, the user can continue to complete the unfinished processing items on the mobile phone through the tablet computer.

For the system data, the processing device obtains the log data recording system state of a device (such as the fourth device) connected to the network, and finds that the frequency of system crashes reaches the preset crash frequency threshold, which indicates that the system of the fourth device needs to be repaired, and the system control information is the repair system of the fourth device.

In an embodiment, if the first preset information and/or the second preset information is at least one of device type, device name, device state, and device data, the first preset information and/or the second preset information are analyzed according to the preset device rules to obtain device control information. The preset device rule is a rule for determining the correspondence between at least one of different device types, device names, device states, and device data and different device control information.

For the device type, the processing device obtains the device type of a device (such as the first device) connected to the network, and when the device type is a preset device type, the device control information is a pre-assigned task. That is, the processing device notifies the device to prepare for the pre-assigned task through the device control information. For example, if the device type of the first device is a device with a screen, the pre-assigned task is a task related to playing video. Therefore, the processing device may notify the first device through the device control information that a video playback environment can be built in advance (for example, a video decoding library is ready, etc.).

For the device name, the processing device obtains the device name of a device (such as the first device) connected to the network, and when the device name is a preset device name, the device control information is to complete a preset task. It can be understood that the acquisition of the device name by the processing device generally occurs when the device is connected to the connection network. For example, the device name of the first device is "mobile phone", and the preset task is to receive the connection network control function transferred by the current processing device and act as a new processing device, then the processing device can notify the first device to take over the control function through the device control information. It can be understood that the usage time of mobile phone users is much longer than that of users connected to other devices in the network. Therefore, it is more convenient for the user to manage the connection network through the mobile phone.

For the device state, the processing device acquires the device state of a device (such as the first device) connected to the network. When the device state is the preset device state, the device control information provides a corresponding device state adjustment solution. For example, if the device state of the first device is overheated, the processing device may notify the first device to cool down the device through the device control information (for example, increase the output power of the heat sink, reduce the calorific value of the first device, etc.).

For the device data, the processing device acquires device data of a device (such as the first device) connected to the network, and when the device data reaches a preset device data condition, the device control information provides a corresponding device data solution. For example, if the device failure data of the first device meets the preset device failure data condition, the processing device may notify the first device to output corresponding prompt information through the device control information, to remind the user that the first device needs to be repaired.

In an embodiment, if the first preset information and/or the second preset information is at least one of time, location, brightness, noise, altitude, road slope, weather, temperature, humidity, air pressure, wind level, and wind direction, the first preset information and/or the second preset information are analyzed according to preset environmental rules to obtain environment control information. The preset environment rule is a rule for determining the correspondence between at least one of different time, location, brightness, noise, altitude, road slope, weather, temperature, humidity, air pressure, wind level, and wind direction and different environment control information.

For the time, the processing device obtains the time connected to a device (such as the fourth device) in the network. When the time is different from the time connected to other devices in the network, the environment control information is to notify the device to adjust the time to the time connected to other devices in the network.

For the location, the processing device acquires the location of a device (such as the fourth device) connected to the network, and when the location is a preset location, the environment control information is to notify the device to make a preset response to the location. For example, if the location of the fourth device is a company, the processing device notifies the device to run a preset application in the background through the environment control information, which is convenient for users to handle work matters through the preset application (for example, DingTalk automatically runs in the background to facilitate users to clock in when they arrive at the company).

For the brightness, the processing device acquires the brightness of a device (such as the fourth device) connected to the network, and when the brightness is less than a preset brightness threshold, the environment control information is to notify the device to adjust accordingly so that the device is suitable for the user to use under the brightness. It can be understood that the brightness is the ambient brightness detected by the device. For example, when the brightness of the fourth device is lower than the preset brightness threshold, the processing device may notify the fourth device to reduce the display brightness of the display through the environment control information, to avoid visual impairment caused by users using a display device with high display brightness in a dark environment.

For the noise, the processing device obtains the noise of an audio output device (such as the fourth device) connected to the network. It can be understood that the noise level will affect the use of the audio output device. Therefore, the audio output device can be notified to adjust the audio output power in real time for the noise through the environmental control information, and the audio output device may also be informed of the noise by using the environment control information to eliminate the influence of the noise in real time (for example, active noise reduction for the noise).

For the altitude, the processing device obtains the altitude of the location of a device (such as the fourth device) connected to the network. When the altitude exceeds the preset altitude, the environment control information is to notify the device to make corresponding adjustments so that the device can provide higher oxygen supply to the climber, so as to avoid the shock phenomenon caused by the climber not being able to detect the insufficient oxygen supply in time.

For the road slope, the processing device acquires the road slope at the location of a device (such as the fourth device) in the connection network. When the road slope exceeds the preset value, the environment control information is to notify the device to adjust accordingly so that the device can adjust the suspension height in time to ensure that the device is always on a horizontal working surface.

For weather, temperature, humidity, air pressure, wind level and wind direction, the processing device acquires at least one of the weather, temperature, humidity, air pressure, wind level and wind direction of a device (such as the fourth device) in the connection network. When at least one of weather, temperature, humidity, air pressure, wind level and wind direction is different from the preset value or the preset range, the environment control information is to notify the device to make corresponding adjustments so that the device can adapt and/or adjust the environmental conditions, such as automatically cooling down when the temperature is too high, and performing moisture-proof treatment when it rains or the humidity is too high.

In an embodiment, if the type of the preset information is an operation data type, the preset information is analyzed according to a preset operation rule to obtain device operation control information. The preset operation rule is a rule for determining the corresponding relationship between at least one of different gesture information, voice information, sensing information, touch operation information and different operation control information.

For the gesture information, it includes at least one of a sliding instruction, a stretching instruction, a rotation instruction, a single-click instruction, and a double-click instruction triggered by the user on the touch screen or through the air, and may also include that the user uses the device to perform at least one of a pointing operation (point the terminal to a specific device, which can be the first device, the second device, or another device, etc.), a swing operation (such as shaking), and a rotation operation (such as switching from a vertical screen state to a horizontal screen state).

For the voice information, it can be voice control information sent by a user or other devices, and the device performs preset operations or performs preset functions by recognizing the voice control information.

For the sensing information, it can be sensory control information, and the device performs preset operations or performs preset functions through the sensory control information detected by internal or external sensors (such as motion sensors, gyroscopes, etc.).

For the touch operation information, it can include user gestures in the air, or at least one of sliding operations, clicking operations, dragging operations, 3D Touch operations, and knuckle tapping operations on the touch screen.

In an embodiment, in addition to the above-mentioned embodiments, in another embodiment, various combinations of different first preset information and/or second preset information may also be processed according to preset rules to obtain target information.

For example, the first device is the mobile phone, the application type obtained by the processing device is a game. The second device is an earphone, and the device state acquired by the processing device is in use. The third device is a smart watch, and the device state acquired by the processing device is standby. For the above scenario, the user is playing the game through the mobile phone and the earphone, in order not to affect the user's game play, when the processing device obtains the event that the WeChat call is connected to the mobile phone, it can transfer the WeChat call to the smart watch, so as to remind the user that there is a WeChat call connected through the smart watch.

For another example, the first device is a smart watch, and the processing device obtains a schedule (including specific work arrangements, such as a meeting at 9 o'clock) in the application data of the "memo" of the smart watch, and the device state of the smart watch is standby. The second device is an earphone, and the processing device acquires that the device state of the earphone is in use. The third device is a mobile phone, and the processing device acquires that the device state of the mobile phone is in standby. For the above scenario, the user is using the earphones instead of the smart watch and the mobile phone, to enable the user to receive prompt information in time, the processing device can output the schedule through the earphones in the form of voice reminders.

For another example, the first device is a TV, and the processing device obtains that the user has reserved a program in the application data of "Youku Video" of the TV, and the device state of the TV is standby. The second device is a smart watch, and the physiological parameter obtained by the processing device is the heart rate value corresponding to the user's heart rate in an awake state. The third device is a mobile phone, and the processing device acquires that the device state of the mobile phone is in use. For the above scenario, the user needs to watch the program through the TV, and the user is using the mobile phone at this time, the processing device can remind the user through the mobile phone that the reserved program will be played soon.

Operation F3000, performing the corresponding processing according to the target information.

In an embodiment, the first device and/or the second device performs the corresponding processing according to the target information, and performs the control operation corresponding to the target information.

In an embodiment, before the operation F3000, the processing method further includes:
outputting the prompt information corresponding to the target information;
if the cancel execution instruction corresponding to the prompt information is not received (it may not be received within a preset time), performing the operation F3000; and/or, if the cancel execution instruction is received, not performing the operation F3000 and/or outputting the corresponding prompt information (the prompt information output mode can be interface display or voice broadcast or light prompt, etc.).

In an embodiment, the first device and/or the second device outputs prompt information corresponding to the target information, so that the user decides whether the first device and/or the second device performs the corresponding processing according to the prompt information. If the cancel execution instruction corresponding to the prompt information is not received within the preset time or the confirmation execution instruction corresponding to the prompt information is received within the preset time, the corresponding processing operation is performed according to the target information. The preset time may be preset by the system or set by the user, which is not specifically limited in this embodiment.

In an embodiment, the method further includes:
determining whether the historical number of consecutive receptions of the cancellation execution instruction is less than or equal to the preset number of times;
if the historical number of consecutive receptions of the cancellation execution instruction is less than or equal to the preset number of times, when the target information is received, performing the operation of outputting the prompt information corresponding to the target information.

In an embodiment, the first device and/or the second device judges whether the number of historical consecutive receptions of the cancel execution instruction is less than or equal to a preset number of times. It can be understood that the purpose of the above judgment process is to determine the user's historical operations on the target information, that is, to determine whether the number of consecutive instructions given by the user that he does not want the first device and/or the second device to perform the corresponding processing reaches the preset number of times. If the number of historical consecutive receptions of the cancel execution instruction is less than the preset number of times, it means that the user may also want the first device and/or the second device to perform the corresponding processing; and/or, if the number of historical consecutive receptions of the cancel execution instruction is greater than the preset number of times, it means that the user may not want the first device and/or the second device to perform the corresponding processing. Therefore, the operation of outputting the prompt information corresponding to the target information is executed only when the number of historical consecutive receptions of the cancel execution instruction is less than the preset number of times and the target information is received.

In an embodiment, this solution further includes:
when the target information meets the preset safety condition, performing the operation of determining whether the number of historical consecutive reception times of the cancel execution instruction is less than or equal to the preset number of times.

In an embodiment, before determining whether the number of historical consecutive receptions of the cancel execution instruction is less than or equal to the preset number of times, it is also necessary to determine whether the target information meets the preset safety conditions of the first device and/or the second device. If so, the operation of determining whether the number of historical consecutive receptions of the cancellation execution instruction is less than or equal to the preset number of times is performed; and/or, if not, the operation of determining whether the number of historical consecutive reception times of the cancel execution instruction is less than or equal to the preset number of times is not performed. The preset safety conditions include device control safety conditions, that is, preventing the first device and/or the second device from being controlled by other devices. The preset safety conditions also include information safety conditions, that is, to avoid information leakage of the first device and/or the second device due to receiving target information.

In an embodiment, the method further includes:
obtaining update data corresponding to the first preset information and/or the second preset information, and processing the update data according to the preset rule to obtain updated target information.

In an embodiment, the corresponding processing is only performed if the updated target information is the same as the target information; or the corresponding process is only performed if the updated target information is different from the target information.

In an embodiment, the first device and/or the second device obtains update data corresponding to the first preset information and/or the second preset information, processes the update data according to preset rules, and obtains updated target information. If the updated target information is the same as the target information, the corresponding processing is performed. It can be understood that the update data is the first preset information and/or the second preset information reacquired by the first device and/or the second device after obtaining the target information. The purpose of reacquisition is to determine whether the corresponding updated target information has changed. If the corresponding updated target information has changed, the updated target information will be different from the corresponding processing corresponding to the target information, and then the target information will become invalid, and corresponding processing needs to be performed according to the updated target information; and/or, if the corresponding updated target information has not changed, the updated target information is the same as the corresponding processing corresponding to the target information, and the corresponding processing can be directly executed. In this way, the accuracy of performing the corresponding processing can be ensured.

In an embodiment, before the operation F3000, the method includes:
when the target information meets a preset requirement, performing the corresponding processing.

In an embodiment, before performing the corresponding processing, the first device and/or the second device further need to determine whether the target information meets a preset requirement, and only performs the corresponding processing when the preset requirement is met. It can be understood that when the corresponding processing conflicts with the corresponding preset requirement, the preset requirement shall prevail, that is, the preset system setting shall not be changed. For example, the corresponding processing is to adjust the volume of the earphone to be greater than 80% of the total volume, while the preset requirement is that the volume of the earphone cannot be greater than 80% of the total volume, At this time, the corresponding processing conflicts with the preset requirement, and the corresponding processing is not executed, or a corresponding prompt information is output to allow the user to decide whether to execute the corresponding processing.

In this embodiment, the method includes: F1000, providing second preset information in response to the preset information acquisition request of the processing device; F2000, receiving target information corresponding to the second preset information, the target information is obtained by processing the first preset information and/or the second preset information according to preset rules by the processing device, the first preset information is provided by at least one first device indirectly connected to the processing device; F3000, performing the corresponding processing according to the target information. By responding to the preset information acquisition request of the processing device, providing the second preset information, and after receiving the corresponding target information, executing the processing corresponding to the target information, the device response process after each device establishes a connection with each other is more intelligent, convenient and fast.

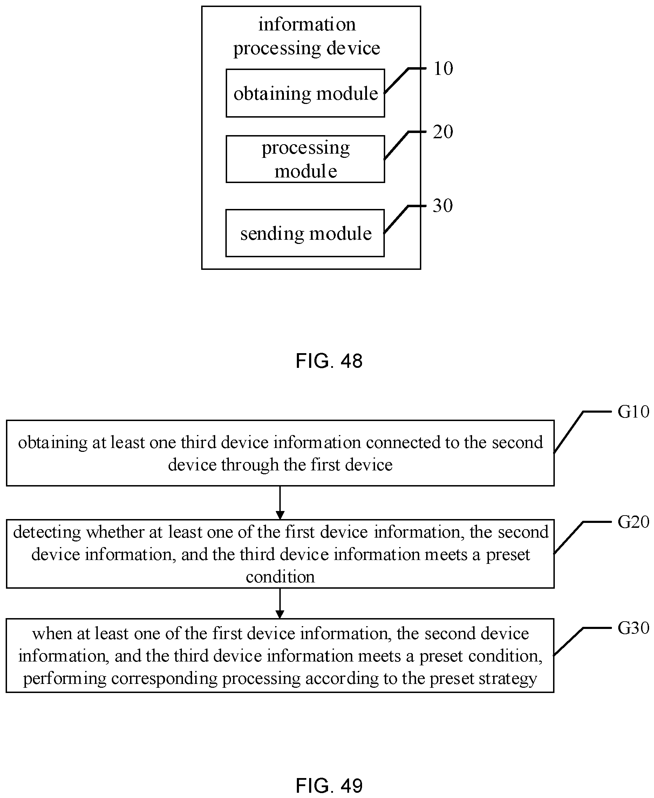

In an embodiment, the present application further provides a processing device. As shown in FIG. 48, the processing device includes:
an obtaining module 10, configured to acquire first preset information and/or second preset information;
a processing module 20, configured to process the first preset information and/or the second preset information according to preset rules to obtain target information;
a sending module 30, configured to send the target information.

In an embodiment, the processing device further includes:
a first output module, configured to output prompt information on the first device;
a second output module, configured to output prompt information on the second device.

In an embodiment, the processing device further includes:
a receiving module, configured to receive the confirmation operation;
a first determining module, configured to determine whether to acquire the first preset information and/or the second preset information according to the confirmation operation.

In an embodiment, the processing device also includes:
a second determining module, configured to determine whether to process the first preset information and/or the second preset information according to a preset rule.

In an embodiment, the present application further provides a processing device, including:
an obtaining module, configured to acquire target information;
a detection module, configured to detect whether the reference information of the first device and/or the second device meets a second preset rule;
a sending module, configured to send the target information if yes.

In an embodiment, the sending module includes:
a sending unit, configured to send the target information to a preset fifth device.

In an embodiment, the present application also provides a processing device, including:
a response module, configured to provide first preset information in response to the preset information acquisition request of the processing device;
a receiving module, configured to receive target information corresponding to the first preset information;
an executing module, configured to execute corresponding processing according to the target information.

In an embodiment, the processing device further includes:
an output module, configured to output the prompt information corresponding to the target information; if the cancel execution instruction corresponding to the prompt information is not received within a preset time, perform the corresponding processing step according to the target information.

In an embodiment, the processing device further includes:
a judging module, configured to judge whether the number of historical successive receptions of the cancel execution instruction is less than or equal to the preset number of times; if so, when the target information is received, perform the step of outputting the prompt information corresponding to the target information.

In an embodiment, the processing device further includes:
an acquiring module, configured to acquire update data corresponding to the first preset information and/or the second preset information, process the update data according to preset rules, and obtain updated target information.

In an embodiment, the present application further provides a processing device, including:
a response module, configured to provide second preset information in response to the preset information acquisition request of the processing device;
a receiving module, configured to receive target information corresponding to the second preset information;
an executing module, configured to execute corresponding processing according to the target information.

In an embodiment, the processing device further includes:
an output module, configured to output the prompt information corresponding to the target information; if the cancel execution instruction corresponding to the prompt information is not received within a preset time, execute the corresponding processing step according to the target information.

In an embodiment, the processing device further includes:
a judging module, configured to judge whether the number of historical successive receptions of the cancel execution instruction is less than or equal to the preset number of times; if so, when the target information is received, execute the step of outputting the prompt information corresponding to the target information.

In an embodiment, the processing device further includes:
an acquiring module, configured to acquire update data corresponding to the first preset information and/or the second preset information, process the update data according to preset rules, and obtain updated target information.

The present application provides a processing method. As shown in FIG. 49, Fig. 49 is a schematic flowchart of the processing method according to an embodiment of the present application.

The embodiment of the present application provides a processing method. Although a logical order is shown in the flowcharts, in some cases the steps shown or described may be performed in an order different from that shown or described herein. The processing method is applied to a second device connected to the first device. The first device is directly connected to the second device, and the second device includes but is not limited to a personal computer, a smart phone, and the like. The processing method includes:
operation G10, obtaining information about at least one third device connected to the second device through the first device.

In an embodiment, the second device and the third device are indirectly connected.

In an embodiment, the second device acquires at least one third device information through the first device, and the third device corresponding to the third device information is indirectly connected or directly connected to the second device. The connection methods between devices include indirect connection and direct connection. For the direct connection, it is to establish a connection through a preset connection method (such as Bluetooth, WIFI, personal hotspot, etc.), for example, if device A establishes a connection with device B through Bluetooth, then the connection method between device A and device B is a direct connection. For the indirect connection, it is through a third party device. It can be understood that the third-party device has a connection relationship with the device that establishes the indirect connection, that is, the device that establishes the connection relationship of the indirect connection can perform data interaction through the third-party device. For example, the connection relationship between device A and device C is direct connection or indirect connection, the connection relationship between device B and device C is direct connection or indirect connection, the connection relationship between the device A and the device B is not directly connected, and the connection relationship between the device A and the device B is an indirect connection relationship. The first device, the second device and the third device belong to the same connection network, include any one of terminal devices (such as smartphones, PADs, Tablets, etc.), wearable smart devices (such as smart watches, smart bracelets, smart headphones, etc.), smart home devices (such as smart TVs, smart speakers, etc.) and Internet of Vehicles devices (such as smart cars, vehicle terminals, etc.).

Operation G20, detecting whether at least one of the first device information, the second device information and the third device information meets a preset condition.

In an embodiment, the second device detects whether at least one of the first device information, the second device information and the third device information meets a preset condition.

In an embodiment, the operation G20 includes at least one of the following:
a first preset event occurring on the first device;
a second preset event occurring on the second device;
a third preset event occurring on the third device.

In an embodiment, the operation of detecting whether at least one of the first device information, the second device information and the third device information meets a preset condition includes at least one of a first preset event occurring on the first device, a second preset event occurring on the second device, and a third preset event occurring on the third device. Understandably, when a first preset event occurs on the first device, a second preset event occurs on the second device, and/or a third preset event occurs on the third device, at least one of the first device information, the second device information and the third device information meets the preset condition.

In an embodiment, the first preset event or the second preset event or the third preset event includes at least one of the following:
the user physiological parameter information meets the first preset condition;
the corresponding device system information meets the second preset condition;
the corresponding device communication information meets the third preset condition;
the corresponding device application information meets the fourth preset condition;
the corresponding device reminder information meets the fifth preset condition;
the corresponding device detection information meets the sixth preset condition;
the corresponding device state information meets the seventh preset condition;
the corresponding device environment information meets the eighth preset condition.

In an embodiment, the first preset event or the second preset event or the third preset event includes at least one of: the user physiological parameter information meets the first preset condition; the corresponding device system information meets the second preset condition; the corresponding device communication information meets the third preset condition; the corresponding device application information meets the fourth preset condition; the corresponding device reminder information meets the fifth preset condition; the corresponding device detection information meets the sixth preset condition; the corresponding device state information meets the seventh preset condition; the corresponding device environment information meets the eighth preset condition.

The user physiological parameter information includes the user's heart rate, blood pressure, pulse, blood oxygen, blood sugar, sweating, etc. Generally, the above user physiological parameter information can be measured by corresponding sensors in the device, for example, the user's heart rate can be measured by an optical heart rate sensor in a smart watch.

The first preset condition is that the user physiological parameter reaches the preset user physiological parameter threshold, for example, the user's heart rate reaches the preset user's heart rate threshold.

The corresponding device system information includes system type, system name, system state, or the like. The system type is used to distinguish different types of systems, such as Android system, Symbian system, Apple system, etc., and the deep customization system based on Android system (such as MIUI (Mobile Internet UI, Xiaomi mobile operating system)). Different systems will provide users with different services during operation, for example, the operating mechanisms of the Apple system and the Android system are different.

The system name is used to specifically distinguish whether the systems are the same system and to determine the specific information of the system, for example, the system name is "Android System". It can be understood that it specifically specifies that the system is an "Android System" rather than other systems. The system name may also include a complete name, for example, the name includes a system version number.

The system state is the running state of the system, such as stuck, smooth, sleep, crash, standby, or the like.

The second preset condition is that the corresponding device system information meets the preset device system information rule. For example, if the system state is stuck, then the corresponding device in the system state cannot normally handle the tasks that the device needs to process, and the system state meets the preset device system information rule.

The corresponding device communication information includes device communication signal strength, device communication mode, or the like.

The third preset condition is that the corresponding device communication information meets the preset device communication information rule. For example, when the device communication signal strength is lower than the preset device communication signal strength threshold, the device communication signal strength meets the preset device communication information rule.

The corresponding device application information includes device application name information and the like. It can be understood that the application name can be used to distinguish the application, that is, the application can be identified by the application name.

The fourth preset condition is that the corresponding device application information meets the preset device application information rules. For example, when the device application name information meets the preset response operation trigger condition (for example, it is recognized by the application name that the device is running a game application, and it is recognized by the application name that the "WeChat" application has call access), the device application data information meets the preset device application information rule.

The corresponding device reminder information is used to remind the user to prevent the user from forgetting the corresponding event information. For example, the corresponding device reminder information reminds the user that the reserved TV program will be played soon.

The fifth preset condition is that the corresponding device reminder information meets the preset device reminder information rule. For example, when the time information in the reminder information is consistent with the current time, a condition for outputting reminder information to the user is triggered.

The corresponding device detection information is the information for detecting the condition of the device itself, such as whether the working state of the device is normal, whether the hardware state of the device is normal, the current working state of the device hardware is normal, etc.

The sixth preset condition is that the corresponding device detection information meets the preset device detection information rule. For example, when the current working state of the device hardware meets the preset working state requirements (for example, the vehicle terminal detects that the car door is not closed), the current working state of the device hardware meets the preset device detection information rule.

The corresponding device state information includes running state, power information, fault information, etc.

For the running state, the device can be in the normal running state, stuck state, unsmooth state, etc.

Generally, the power information can be the current power, the total capacity of the battery, the ratio of the remaining power, or the estimated usable time based on the user's use habits in the near future (for example, within 2 hours).

The fault information may be the fault log of the device. The fault information may include the cause of the fault, the type of the fault, the time of the fault, the frequency of the fault, or the like, so as to facilitate the repair or optimization of the device or engineering and technical personnel through the fault information.

The seventh preset condition is that the corresponding device state information meets the preset device state information rule, for example, the running state is stuck.

The corresponding device environment information includes device external environment information, device use environment information, and the like.

For the device external environment information, the device has the ability to obtain the external environment information, such as obtaining the brightness of the external ambient light, or obtaining the loudness of the external environmental noise.

For the device use environment information, during the use of the device, the use environment information changes with the user's environment. The user's environment can be perceived through sensors (such as gravity sensors, acceleration sensors, gyroscopes, cameras, GPS, etc.). If the user is in motion, the device can detect that the user is in a motion environment, or if the user is driving, the device can detect that the user is in a driving environment, or if the user is working or meeting, the device can detect that the user is in a working or meeting environment.

The eighth preset condition is that the corresponding device environment information meets the preset device environment information rule, for example, the device use environment information is that the user is driving.

Operation G30, if yes, performing the corresponding processing according to a preset strategy.

In an embodiment, if at least one of the first device information, the second device information, and the third device information meets a preset condition, the corresponding processing is performed according to a preset strategy. If the first device information, the second device information and the third device information does not meet the preset condition, the first device information, the second device information and the third device information is not responded to.

In an embodiment, the operation G30 includes at least one of the following:
the first device performs processing according to a first preset strategy;
the second device performs processing according to a second preset strategy;
the third device performs processing according to a third preset strategy.

In an embodiment, if at least one of the first device information, the second device information, and the third device information meets the preset condition, performing the corresponding processing according to the preset strategy includes at least one of: the first device performs processing according to a first preset strategy; the second device performs processing according to a second preset strategy; the third device performs processing according to a third preset strategy.

In an embodiment, the first preset strategy or the second preset strategy or the third preset strategy includes at least one of the following:
transmitting or updating the corresponding preset event, transmitting the corresponding preset event after conversion, disconnecting at least one of the first device and the second device and the third device from the connection network, connecting at least one of the first device, the second device, and the third device to other networks, at least one of the first device, the second device, and the third device opening preset applications and/or services, at least one of the first device, the second device, and the third device closing preset applications and/or services, changing the parameters of the currently running application and/or service of at least one of the first device, the second device, and the third device, switching the current mode of at least one of the first device, the second device, and the third device, changing a strategy for processing current data of at least one of the first device, the second device, and the third device.

In an embodiment, the first preset strategy or the second preset strategy or the third preset strategy includes at least one of: transmitting or updating the corresponding preset event, transmitting the corresponding preset event after conversion, disconnecting at least one of the first device and the second device and the third device from the connection network, connecting at least one of the first device, the second device, and the third device to other networks, at least one of the first device, the second device, and the third device opening preset applications and/or services, at least one of the first device, the second device, and the third device closing preset applications and/or services, changing the parameters of the currently running application and/or service of at least one of the first device, the second device, and the third device, switching the current mode of at least one of the first device, the second device, and the third device, changing a strategy for processing current data of at least one of the first device, the second device, and the third device.

In an embodiment, the preset application can be a system application (such as address book, SMS, dial pad, camera, system settings, etc.), or a general application (such as WeChat, QQ, sports App, etc.). The preset service can be a system service (such as network connection, Bluetooth, WIFI, etc.), or a general service (such as search, privacy security, antivirus, listening to music, etc.).

In an embodiment, if at least one of the first device, the second device, and the third device is within a preset time period (such as 12:00 am to 3:00 am), it can be considered that a preset event has occurred (for example, the reminder information of the corresponding device meets the fifth preset condition). The second device (such as a mobile phone) can disconnect from the network or enter power saving mode or enter sleep mode or enter silent mode, the third device (such as a watch) can enter the off-screen state or enable sleep monitoring services (such as monitoring the user's heart rate, blood oxygen, etc.), and the first device (such as a TV) can sleep or even shut down.

In an embodiment, if the user of at least one of the first device, the second device, and the third device switches the device to a preset state (such as an exercise state) (the corresponding device environment information meets the eighth preset condition), it can be regarded as a preset event has occurred. The second device (such as a mobile phone) can turn off the screen or enter the power saving mode (the current mode of the device is switched) or enter the sports mode or enter the outdoor mode or open the sports App (such as Keep software). The third device (such as a watch) can open the sports app or enter the off-screen state or start the sports monitoring service (such as monitoring the user's heart rate, blood oxygen, stride frequency, speed, location information, etc., if the corresponding indicators are too high and abnormal, an early warning prompt can be output locally and/or on the processing device and/or the second device). The first device (such as earphones) can automatically connect to the processing device or automatically open the music app or automatically play the safety guidance content related to the exercise state or automatically play a certain song (can be set by the system or automatically determined according to user habits or selected by the user).

In an embodiment, if at least one of the first device, the second device, and the third device detects that the user's heart rate reaches a preset user's heart rate threshold, it may be determined that the user enters a sleep state, then it can be considered that a preset event has occurred. The second device (such as a mobile phone) can send an instruction to the first device (such as an earphone) to lower the volume of the earphone (change the parameters of the service).

In an embodiment, if the system state of at least one of the first device, the second device, and the third device is stuck, it can be considered that a preset event has occurred. The task being processed by the device (such as the first device, whose system is Android) is assigned to a device with the same system as the device (such as the third device, whose system is Android).

In an embodiment, if the device communication signal strength of at least one of the first device, the second device, and the third device is lower than a preset device communication signal strength threshold, it can be considered that a preset event has occurred, changing the communication mode of the device (such as the first device) (for example, changing data communication to wireless communication).

In an embodiment, if the device application name information of at least one of the first device, the second device, and the third device is that the application name is a game application name, when the device has a WeChat phone access, it can be considered that a preset event has occurred. The second device (such as a mobile phone) can notify the third device (such as a watch) of the WeChat call access, so as to answer the WeChat call through the watch without affecting the user's game play through the mobile phone.

In an embodiment, if the time information in the reminder information of at least one of the first device, the second device, and the third device is consistent with the current time, it can be considered that a preset event has occurred. If the third device (such as a watch) detects that the user is not sleeping, the second device (such as a mobile phone) reminds the user that the scheduled TV program is about to start playing (for example, when watching a TV program on a mobile phone, the current application of the mobile phone is switched to the application that plays the TV program by default (the currently running application is changed)).

In an embodiment, if the device detection information of at least one of the first device, the second device, and the third device is that the door is not closed, it can be considered that a preset event has occurred. The first device, the second device and/or the third device output information reminding to close the car door to the user.

In an embodiment, for transmitting, after the preset event is processed according to the preset strategy, the preset event is transmitted to the target device corresponding to the preset event (one or more of the first device, the second device, and the third device). For example, the second device receives a preset event that the power level of the first device is lower than the preset power level threshold, and if the processing object of the preset event is the first device, the preset event is transmitted to the first device.

In an embodiment, for updating, after the preset event is processed according to the preset strategy, the content of the preset event needs to be updated. For example, the preset event is that the second device receives a video file with a large amount of data, and the target receiving device of the preset event is the first device with a small storage space, then the video file can be updated (such as compression or format conversion or content interception, etc.) (the strategy for processing current data of the device is changed) and then transmitted to the first device. Common update methods can be compression, encryption, conversion of data types (such as speech to text, pictures to text, etc.), conversion of data formats (such as .bmp to jpeg), etc.

In an embodiment, for transmitting the preset event after conversion, after the preset event is processed according to the preset strategy (the corresponding processing according to the preset strategy is to convert the preset event to obtain at least one new event), the new event is transmitted to other devices (for example, the second device). For example, the target receiving device of the preset event is the first device, which cannot receive or display text content to the user but can play audio content. The preset event is receiving text content, the process of converting the preset event is to convert the received text content into audio content, and then transmit the audio content to the first device.

In an embodiment, for the disconnection of at least one of the first device and the second device and the third device from the connection network, after the preset event is processed according to the preset strategy, the target device corresponding to the preset event needs to be disconnected from the connection network. For example, the preset event is that the first device receives a message with a high security level, and to avoid leakage of the message, the first device may be disconnected.

In an embodiment, when at least one of the first device, the second device and the third device is connected to another network, the connection is to establish a connection with another connection network different from the current connection network. For example, the preset event is that the first device receives a message, and the message needs to be processed by other devices that are not connected to the network where it is currently located. Therefore, the first device can establish a connection with the connection network where the other device is located.

In an embodiment, the operation G30 includes at least one of the following:
outputting operation options and/or prompt information corresponding to the preset event on the first device;
outputting operation options and/or prompt information corresponding to the preset event on the second device;
outputting operation options and/or prompt information corresponding to the preset event on the third device.

In an embodiment, if at least one of the first device information, the second device information, and the third device information meets a preset condition, the corresponding processing according to the preset strategy includes at least one of: outputting operation options and/or prompt information corresponding to the preset event on the first device; outputting operation options and/or prompt information corresponding to the preset event on the second device; outputting operation options and/or prompt information corresponding to the preset event on the third device.

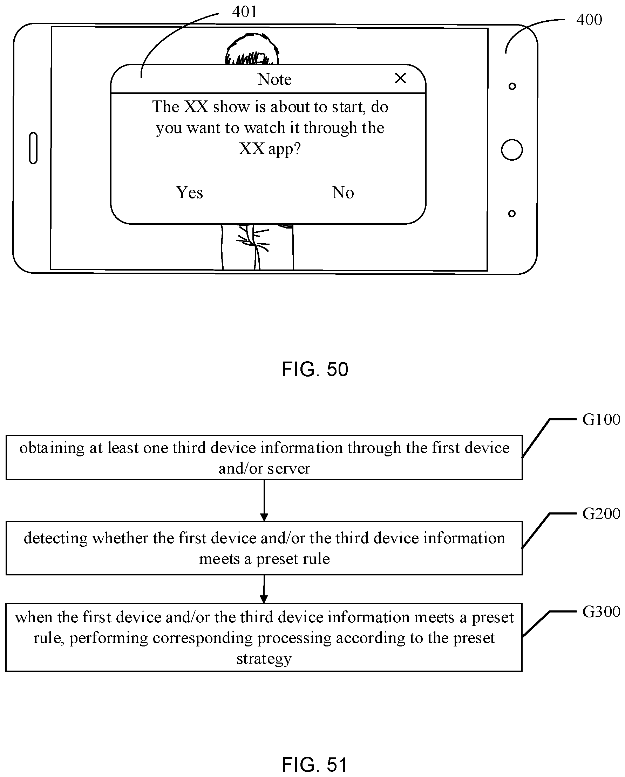

In an embodiment, the above-mentioned operation options are choices made by the user for the preset event, for example, the mobile phone outputs the operation options to allow the user to choose whether to enter the preset TV program playback application. The prompt information is to prompt the user that a preset event has occurred on at least one of the first device, the second device, and the third device. For example. Referring to FIG. 50, 400 is a mobile phone, and 401 is the pop-up prompt information and operation options output by the mobile phone 400.

In an embodiment, the method further includes: receiving operation information for the operation option, and updating and/or transmitting the preset event according to the operation information.

In an embodiment, the second device receives operation information for the above operation options (for example, confirming the compression operation), and updates and/or transmits the preset event according to the operation information (for example, updates the preset event to replace the original video file with the compressed video file).

In this embodiment, the processing method includes: G10, obtaining at least one third device information indirectly connected to the second device through the first device; G20, detecting whether at least one of information on the first device, the second device, and the third device meets a preset condition; G30: if yes, performing corresponding processing according to the preset strategy. When at least one of information on the first device, the second device, and the third device indirectly connected to the second device meets a preset condition, the corresponding processing is performed according to a preset strategy. In this way, the device response process after each device establishes a connection with each other is more intelligent, convenient and fast.

In an embodiment, another embodiment of the processing method of the present application is proposed. Although a logical order is shown in the flowcharts, in some cases the steps shown or described may be performed in an order different from that shown or described herein. The processing method is applied to a second device connected to the first device. The first device can be directly connected to the second device, and the second device includes but is not limited to a personal computer and a smart phone. Referring to FIG. 51, the processing method includes:
operation G100, obtaining at least one third device information through the first device and/or the server.

In an embodiment, the third device is directly or indirectly connected to the first device.

In an embodiment, the second device obtains at least one third device information through the first device or the server, and the third device corresponding to the third device information is indirectly connected or directly connected to the second device. The connection methods between devices include indirect connection and direct connection. For the direct connection, it is to establish a connection through a preset connection method (such as Bluetooth, WIFI, personal hotspot, etc.), for example, if device A establishes a connection with device B through Bluetooth, then the connection method between device A and device B is a direct connection. For the indirect connection, it is through a third party device. It can be understood that the third-party device has a connection relationship with the device that establishes the indirect connection, that is, the device that establishes the connection relationship of the indirect connection can perform data interaction through the third-party device. For example, the connection relationship between device A and device C is direct connection or indirect connection, the connection relationship between device B and device C is direct connection or indirect connection, the connection relationship between the device A and the device B is not directly connected, and the connection relationship between the device A and the device B is an indirect connection relationship. The first device, the second device and the third device belong to the same connection network, include any one of terminal devices (such as smartphones, PADs, Tablets, etc.), wearable smart devices (such as smart watches, smart bracelets, smart headphones, etc.), smart home devices (such as smart TVs, smart speakers, etc.) and Internet of Vehicles devices (such as smart cars, vehicle terminals, etc.).

Operation G200, detecting whether the first device and/or the third device information meets a preset rule.

In an embodiment, the second device detects whether the first device and/or the third device information meets a preset rule.

In an embodiment, in the process of detecting whether the first device and/or the third device information meets a preset rule, the second device may also perform detection in combination with its own information.

In an embodiment, the operation G200 includes at least one of the following:
a first preset event occurring on the first device;
a second preset event occurring on the second device;
a third preset event occurring on the third device.

In an embodiment, the operation of detecting whether at least one of the first device information, the second device information and the third device information meets a preset condition includes at least one of a first preset event occurring on the first device, a second preset event occurring on the second device, and a third preset event occurring on the third device. Understandably, when a first preset event occurs on the first device, a second preset event occurs on the second device, and/or a third preset event occurs on the third device, at least one of the first device information, the second device information and the third device information meets the preset condition.

In an embodiment, the first preset event or the second preset event or the third preset event includes at least one of the following:
the user physiological parameter information meets the first preset condition;
the corresponding device system information meets the second preset condition;
the corresponding device communication information meets the third preset condition;
the corresponding device application information meets the fourth preset condition;
the corresponding device reminder information meets the fifth preset condition;
the corresponding device detection information meets the sixth preset condition;
the corresponding device state information meets the seventh preset condition;
the corresponding device environment information meets the eighth preset condition.

In an embodiment, the first preset event or the second preset event or the third preset event includes at least one of: the user physiological parameter information meets the first preset condition; the corresponding device system information meets the second preset condition; the corresponding device communication information meets the third preset condition; the corresponding device application information meets the fourth preset condition; the corresponding device reminder information meets the fifth preset condition; the corresponding device detection information meets the sixth preset condition; the corresponding device state information meets the seventh preset condition; the corresponding device environment information meets the eighth preset condition.

The user physiological parameter information includes the user's heart rate, blood pressure, pulse, blood oxygen, blood sugar, sweating, etc. Generally, the above user physiological parameter information can be measured by corresponding sensors in the device, for example, the user's heart rate can be measured by an optical heart rate sensor in a smart watch.

The first preset condition is that the user physiological parameter reaches the preset user physiological parameter threshold, for example, the user's heart rate reaches the preset user's heart rate threshold.

The corresponding device system information includes system type, system name, system state, or the like. The system type is used to distinguish different types of systems, such as Android system, Symbian system, Apple system, etc., and the deep customization system based on Android system (such as MIUI (Mobile Internet UI, Xiaomi mobile operating system)). Different systems will provide users with different services during operation, for example, the operating mechanisms of the Apple system and the Android system are different.

The system name is used to specifically distinguish whether the systems are the same system and to determine the specific information of the system, for example, the system name is "Android System". It can be understood that it specifically specifies that the system is an "Android System" rather than other systems. The system name may also include a complete name, for example, the name includes a system version number.

The system state is the running state of the system, such as stuck, smooth, sleep, crash, standby, or the like.

The second preset condition is that the corresponding device system information meets the preset device system information rule. For example, if the system state is stuck, then the corresponding device in the system state cannot normally handle the tasks that the device needs to process, and the system state meets the preset device system information rule.

The corresponding device communication information includes device communication signal strength, device communication mode, or the like.

The third preset condition is that the corresponding device communication information meets the preset device communication information rule. For example, when the device communication signal strength is lower than the preset device communication signal strength threshold, the device communication signal strength meets the preset device communication information rule.

The corresponding device application information includes device application name information and the like. It can be understood that the application name can be used to distinguish the application, that is, the application can be identified by the application name.

The fourth preset condition is that the corresponding device application information meets the preset device application information rules. For example, when the device application name information meets the preset response operation trigger condition (for example, it is recognized by the application name that the device is running a game application, and it is recognized by the application name that the "WeChat" application has call access), the device application data information meets the preset device application information rule.

The corresponding device reminder information is used to remind the user to prevent the user from forgetting the corresponding event information. For example, the corresponding device reminder information reminds the user that the reserved TV program will be played soon.

The fifth preset condition is that the corresponding device reminder information meets the preset device reminder information rule. For example, when the time information in the reminder information is consistent with the current time, a condition for outputting reminder information to the user is triggered.

The corresponding device detection information is the information for detecting the condition of the device itself, such as whether the working state of the device is normal, whether the hardware state of the device is normal, the current working state of the device hardware is normal, etc.

The sixth preset condition is that the corresponding device detection information meets the preset device detection information rule. For example, when the current working state of the device hardware meets the preset working state requirements (for example, the vehicle terminal detects that the car door is not closed), the current working state of the device hardware meets the preset device detection information rule.

The corresponding device state information includes running state, power information, fault information, etc.

For the running state, the device can be in the normal running state, stuck state, unsmooth state, etc.

Generally, the power information can be the current power, the total capacity of the battery, the ratio of the remaining power, or the estimated usable time based on the user's use habits in the near future (for example, within 2 hours).

The fault information may be the fault log of the device. The fault information may include the cause of the fault, the type of the fault, the time of the fault, the frequency of the fault, or the like, so as to facilitate the repair or optimization of the device or engineering and technical personnel through the fault information.

The seventh preset condition is that the corresponding device state information meets the preset device state information rule, for example, the running state is stuck.

The corresponding device environment information includes device external environment information, device use environment information, and the like.

For the device external environment information, the device has the ability to obtain the external environment information, such as obtaining the brightness of the external ambient light, or obtaining the loudness of the external environmental noise.

For the device use environment information, during the use of the device, the use environment information changes with the user's environment. The user's environment can be perceived through sensors (such as gravity sensors, acceleration sensors, gyroscopes, cameras, GPS, etc.). If the user is in motion, the device can detect that the user is in a motion environment, or if the user is driving, the device can detect that the user is in a driving environment, or if the user is working or meeting, the device can detect that the user is in a working or meeting environment.

The eighth preset condition is that the corresponding device environment information meets the preset device environment information rule, for example, the device use environment information is that the user is driving.

Operation G300, if yes, performing the corresponding processing according to a preset strategy.

In an embodiment, if at least one of the first device information, the second device information, and the third device information meets a preset condition, the corresponding processing is performed according to a preset strategy. If the first device information, the second device information and the third device information does not meet the preset condition, the first device information, the second device information and the third device information is not responded to.

In an embodiment, the operation G300 includes at least one of the following:
the first device performs processing according to a first preset strategy;
the second device performs processing according to a second preset strategy;
the third device performs processing according to a third preset strategy.

In an embodiment, if at least one of the first device information, the second device information, and the third device information meets the preset condition, performing the corresponding processing according to the preset strategy includes at least one of: the first device performs processing according to a first preset strategy; the second device performs processing according to a second preset strategy; the third device performs processing according to a third preset strategy.

In an embodiment, the first preset strategy or the second preset strategy or the third preset strategy includes at least one of the following:
transmitting or updating the corresponding preset event, transmitting the corresponding preset event after conversion, disconnecting at least one of the first device and the second device and the third device from the connection network, connecting at least one of the first device, the second device, and the third device to other networks, at least one of the first device, the second device, and the third device opening preset applications and/or services, at least one of the first device, the second device, and the third device closing preset applications and/or services, changing the parameters of the currently running application and/or service of at least one of the first device, the second device, and the third device, switching the current mode of at least one of the first device, the second device, and the third device, changing a strategy for processing current data of at least one of the first device, the second device, and the third device.

In an embodiment, the first preset strategy or the second preset strategy or the third preset strategy includes at least one of: transmitting or updating the corresponding preset event, transmitting the corresponding preset event after conversion, disconnecting at least one of the first device and the second device and the third device from the connection network, connecting at least one of the first device, the second device, and the third device to other networks, at least one of the first device, the second device, and the third device opening preset applications and/or services, at least one of the first device, the second device, and the third device closing preset applications and/or services, changing the parameters of the currently running application and/or service of at least one of the first device, the second device, and the third device, switching the current mode of at least one of the first device, the second device, and the third device, changing a strategy for processing current data of at least one of the first device, the second device, and the third device.

In an embodiment, the preset application can be a system application (such as address book, SMS, dial pad, camera, system settings, etc.), or a general application (such as WeChat, QQ, sports App, etc.). The preset service can be a system service (such as network connection, Bluetooth, WIFI, etc.), or a general service (such as search, privacy security, antivirus, listening to music, etc.).

In an embodiment, if at least one of the first device, the second device, and the third device is within a preset time period (such as 12:00 am to 3:00 am), it can be considered that a preset event has occurred (for example, the reminder information of the corresponding device meets the fifth preset condition). The second device (such as a mobile phone) can disconnect from the network or enter power saving mode or enter sleep mode or enter silent mode, the third device (such as a watch) can enter the off-screen state or enable sleep monitoring services (such as monitoring the user's heart rate, blood oxygen, etc.), and the first device (such as a TV) can sleep or even shut down.

In an embodiment, if the user of at least one of the first device, the second device, and the third device switches the device to a preset state (such as an exercise state) (the corresponding device environment information meets the eighth preset condition), it can be regarded as a preset event has occurred. The second device (such as a mobile phone) can turn off the screen or enter the power saving mode (the current mode of the device is switched) or enter the sports mode or enter the outdoor mode or open the sports App (such as Keep software). The third device (such as a watch) can open the sports app or enter the off-screen state or start the sports monitoring service (such as monitoring the user's heart rate, blood oxygen, stride frequency, speed, location information, etc., if the corresponding indicators are too high and abnormal, an early warning prompt can be output locally and/or on the processing device and/or the second device). The first device (such as earphones) can automatically connect to the processing device or automatically open the music app or automatically play the safety guidance content related to the exercise state or automatically play a certain song (can be set by the system or automatically determined according to user habits or selected by the user).

In an embodiment, if at least one of the first device, the second device, and the third device detects that the user's heart rate reaches a preset user's heart rate threshold, it may be determined that the user enters a sleep state, then it can be considered that a preset event has occurred. The second device (such as a mobile phone) can send an instruction to the first device (such as an earphone) to lower the volume of the earphone (change the parameters of the service).

In an embodiment, if the system state of at least one of the first device, the second device, and the third device is stuck, it can be considered that a preset event has occurred. The task being processed by the device (such as the first device, whose system is Android) is assigned to a device with the same system as the device (such as the third device, whose system is Android).

In an embodiment, if the device communication signal strength of at least one of the first device, the second device, and the third device is lower than a preset device communication signal strength threshold, it can be considered that a preset event has occurred, changing the communication mode of the device (such as the first device) (for example, changing data communication to wireless communication).

In an embodiment, if the device application name information of at least one of the first device, the second device, and the third device is that the application name is a game application name, when the device has a WeChat phone access, it can be considered that a preset event has occurred. The second device (such as a mobile phone) can notify the third device (such as a watch) of the WeChat call access, so as to answer the WeChat call through the watch without affecting the user's game play through the mobile phone.

In an embodiment, if the time information in the reminder information of at least one of the first device, the second device, and the third device is consistent with the current time, it can be considered that a preset event has occurred. If the third device (such as a watch) detects that the user is not sleeping, the second device (such as a mobile phone) reminds the user that the scheduled TV program is about to start playing (for example, when watching a TV program on a mobile phone, the current application of the mobile phone is switched to the application that plays the TV program by default (the currently running application is changed)).

In an embodiment, if the device detection information of at least one of the first device, the second device, and the third device is that the door is not closed, it can be considered that a preset event has occurred. The first device, the second device and/or the third device output information reminding to close the car door to the user.

In an embodiment, for transmitting, after the preset event is processed according to the preset strategy, the preset event is transmitted to the target device corresponding to the preset event (one or more of the first device, the second device, and the third device). For example, the second device receives a preset event that the power level of the first device is lower than the preset power level threshold, and if the processing object of the preset event is the first device, the preset event is transmitted to the first device.

In an embodiment, for updating, after the preset event is processed according to the preset strategy, the content of the preset event needs to be updated. For example, the preset event is that the second device receives a video file with a large amount of data, and the target receiving device of the preset event is the first device with a small storage space, then the video file can be updated (such as compression or format conversion or content interception, etc.) (the strategy for processing current data of the device is changed) and then transmitted to the first device. Common update methods can be compression, encryption, conversion of data types (such as speech to text, pictures to text, etc.), conversion of data formats (such as .bmp to jpeg), etc.

In an embodiment, for transmitting the preset event after conversion, after the preset event is processed according to the preset strategy (the corresponding processing according to the preset strategy is to convert the preset event to obtain at least one new event), the new event is transmitted to other devices (for example, the second device). For example, the target receiving device of the preset event is the first device, which cannot receive or display text content to the user but can play audio content. The preset event is receiving text content, the process of converting the preset event is to convert the received text content into audio content, and then transmit the audio content to the first device.

In an embodiment, for the disconnection of at least one of the first device and the second device and the third device from the connection network, after the preset event is processed according to the preset strategy, the target device corresponding to the preset event needs to be disconnected from the connection network. For example, the preset event is that the first device receives a message with a high security level, and to avoid leakage of the message, the first device may be disconnected.

In an embodiment, when at least one of the first device, the second device and the third device is connected to another network, the connection is to establish a connection with another connection network different from the current connection network. For example, the preset event is that the first device receives a message, and the message needs to be processed by other devices that are not connected to the network where it is currently located. Therefore, the first device can establish a connection with the connection network where the other device is located.

In an embodiment, the operation G300 includes at least one of the following:
outputting operation options and/or prompt information corresponding to the preset event on the first device;
outputting operation options and/or prompt information corresponding to the preset event on the second device;
outputting operation options and/or prompt information corresponding to the preset event on the third device.

In an embodiment, if at least one of the first device information, the second device information, and the third device information meets a preset condition, the corresponding processing according to the preset strategy includes at least one of: outputting operation options and/or prompt information corresponding to the preset event on the first device; outputting operation options and/or prompt information corresponding to the preset event on the second device; outputting operation options and/or prompt information corresponding to the preset event on the third device.

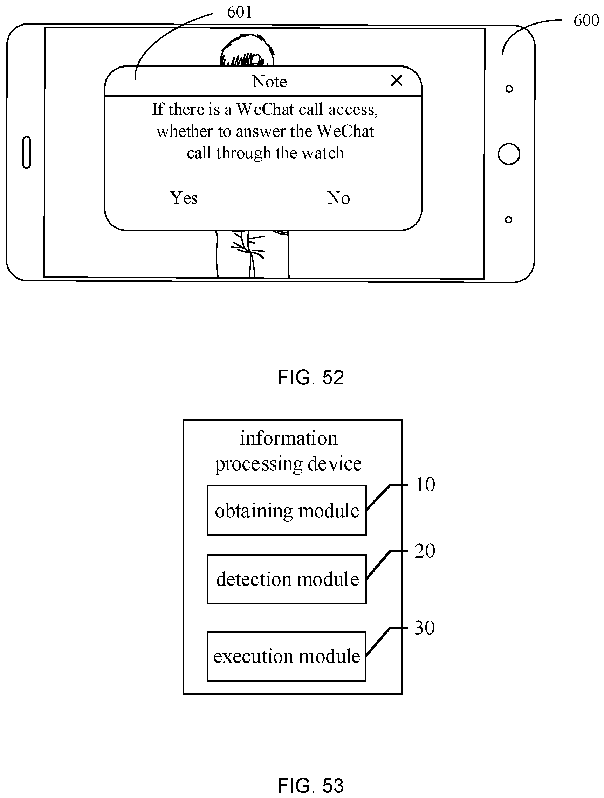

In an embodiment, the above-mentioned operation options are choices made by the user for the preset event, for example, the mobile phone outputs the operation options to allow the user to choose whether to answer the WeChat call through the watch. The prompt information is to prompt the user that a preset event has occurred in at least one of the first device, the second device, and the third device. Referring to FIG. 52, 600 is the mobile phone, and 601 is the pop-up prompt information and operation options output by the mobile phone 600 .

In an embodiment, the method further includes: receiving operation information for the operation option, and updating and/or transmitting the preset event according to the operation information.

In an embodiment, the second device receives operation information for the above operation options (for example, confirming the compression operation), and updates and/or transmits the preset event according to the operation information (for example, updates the preset event to replace the original video file with the compressed video file).

In this embodiment, the processing method includes: G100, obtaining at least one third device information through the first device and/or the server; G200, detecting whether the information of the first device and/or the third device meets a preset rule; G300, if yes, performing the corresponding processing according to a preset strategy. When at least one of the information of the first device and the third device obtained through the first device or the server meets a preset condition, the corresponding processing is performed according to a preset strategy. In this way, the device response process after each device establishes a connection with each other is more intelligent, convenient and fast.

In an embodiment, the present application further provides a processing device. As shown in FIG. 53, the processing device includes:
an obtaining module 10, configured to obtain at least one third device information connected to the second device through the first device;
a detection module 20, configured to detect whether at least one of the first device, the second device, and the third device information meets a preset condition;
an execution module 30, configured to execute corresponding processing according to a preset strategy if yes.

In an embodiment, the present application further provides a processing device, including:
an obtaining module, configured to obtain at least one third device information through the first device and/or the server;
a detection module, configured to detect whether the first device and/or the third device information can meet a preset rule;
an execution module, configured to perform the corresponding processing according to a preset strategy if yes.

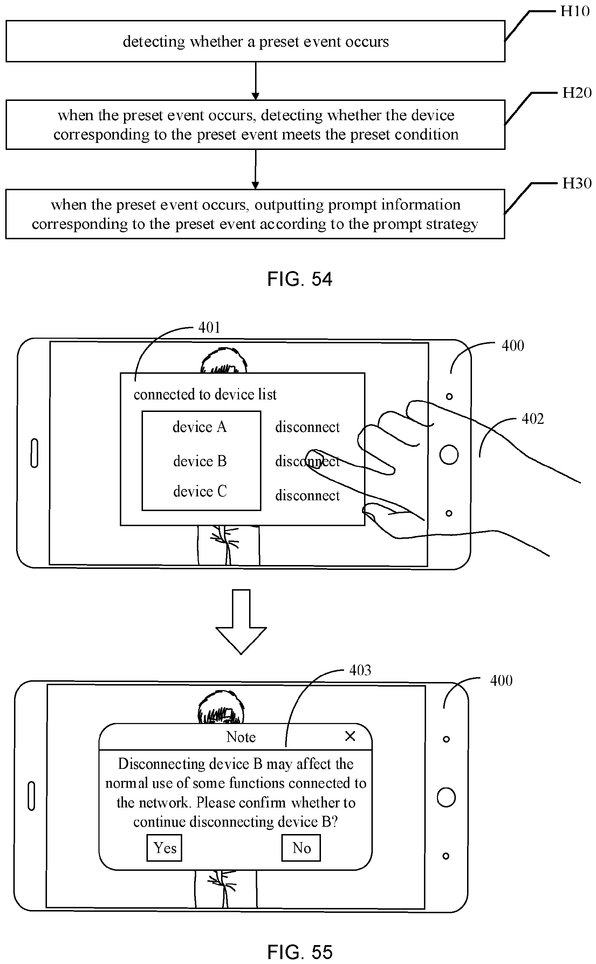

The present application provides a processing method. Referring to FIG. 54, FIG. 54 is a schematic flowchart of a processing method according to an embodiment of the present application.

The embodiment of the present application provides a processing method. Although a logical order is shown in the flowcharts, in some cases the steps shown or described may be performed in an order different from that shown or described herein. The processing method can be applied to a processing device including, but not limited to, a personal computer, a smart phone, and the like. The processing method includes:
operation H10, detecting whether a preset event occurs.

In an embodiment, the processing device detects whether a preset event occurs.

In an embodiment, the processing device is in a connection network, and the connection network includes the processing device, the first device and the second device. The occurrence of preset events includes at least one of the following:
a first preset event occurs on the processing device;
a second preset event occurs on the first device;
a third preset event occurs on the second device.

In an embodiment, the above-mentioned processing device is in the connection network, and the connection network includes the processing device, the first device and the second device, that is, the processing device, the first device and the second device belong to the same connection network. The first device is directly connected to the processing device, and the second device is indirectly connected to the processing device. It can be understood that the direct connection is a direct connection between devices. The indirect connection means that there is no connection between the devices, but the two devices that have not established the connection establish a connection with another device at the same time, that is, the two devices that have not established the connection can exchange data through the other device. The processing device, the first device and the second device include any one of terminal devices (such as smartphones, PADs, tablets, etc.), wearable smart devices (such as smart watches, smart bracelets, smart earphones, etc.), smart home devices (such as smart TVs, smart speakers, etc.) and Internet of Vehicles devices (such as smart cars, vehicle terminals, etc.).

In an embodiment, the aforementioned occurrence of a preset event includes at least one of a first preset event occurring on the processing device, a second preset event occurring on the first device, and a third preset event occurring on the second device.

In an embodiment, the first preset event or the second preset event or the third preset event includes at least one of the following:
at least one of the processing device, the first device and the second device is in or switched to a preset mode;
at least one of the processing device, the first device and the second device is in or switched to a preset environment;
at least one of the processing device, the first device, and the second device detects that the user physiological information meets a first preset condition;
at least one of the processing device, the first device, and the second device detects that the user state meets a second preset condition;
at least one preset parameter detected by at least one of the processing device, the first device, and the second device meets a parameter condition;
at least one device is newly added in the connection network or the maximum number of connected devices has been reached;
at least one device in the connection network is disconnected or the minimum number of connected devices has been reached;
at least one of the processing device, the first device and the second device receives at least one message;
the power value of at least one of the processing device, the first device and the second device is lower than or equal to a preset power threshold;
the connection signal value of at least one of the processing device, the first device and the second device is less than or equal to a preset signal threshold;
the resource occupancy value of at least one of the processing device, the first device, and the second device is greater than or equal to a preset resource threshold;
the running state of at least one of the processing device, the first device and the second device is stuck or not smooth;
the preset application and/or preset function of at least one of the processing device, the first device, and the second device is turned on;
the security level of at least one of the processing device, the first device, and the second device is less than or equal to a preset security level threshold;
the working time of at least one of the processing device, the first device and the second device is greater than or equal to a preset working time threshold;
at least one of the processing device, the first device and the second device is at a preset position.

In an embodiment, at least one of the processing device, the first device and the second device is in or switched to a preset mode. The preset mode can be set by the system or set by the user or selected by the user, and the preset mode can be an intelligent mode or an interconnected mode or a linkage mode or a transfer mode, etc.

At least one of the processing device, the first device and the second device is in or switched to a preset environment. The preset environment can be a preset time (such as day, night, working day, holiday, 7:00 am, 10:00 am, 11:00 pm, etc.), can also be a preset location (such as home, office, subway, bus, car, etc.), can be an environment where the brightness value meets the brightness threshold condition (such as dark, bright), or an environment where the noise value meets the noise threshold condition (such as noisy, quiet), etc.;

At least one of the processing device, the first device, and the second device detects that the user physiological information meets a first preset condition. The physiological information can be heart rate, blood oxygen, blood pressure, blood sugar, or the like. The heart rate is taken as an example, in an embodiment, if the heart rate is lower than 50 beats/minute or exceeds 120 beats/minute (i.e.: does not meet the normal heart rate range), it can be considered as meeting the first preset condition. The blood oxygen concentration is taken as an example again, in an embodiment, if it is lower than 90% (below the normal range), it can also be considered as meeting the first preset condition.

At least one of the processing device, the first device, and the second device detects that the user state meets a second preset condition. The user state can be sleep state, sitting state, exercise state (such as walking, running, swimming, climbing, cycling, etc.). The sleep state is taken as an example, in an embodiment, if the user's sleep state duration of the day, or the average sleep state duration of the week, month, year, or user preset time period (such as the past 3 months, etc.) is lower than a preset threshold (such as 8 hours), it can be considered as meeting the second preset condition.

The sitting posture is taken as an example, in an embodiment, if the user continuously maintains the sitting posture for more than a certain preset value (such as 1 hour), it can be considered as meeting the second preset condition.

At least one preset parameter (such as speed) detected by at least one of the processing device, the first device, and the second device meets a parameter condition (such as greater than or less than or equal to a preset parameter range).

At least one device is newly added in the connection network or the maximum number of connected devices has been reached.

At least one device in the connection network is disconnected or the minimum number of connected devices has been reached.

At least one of the processing device, the first device and the second device receives at least one message.

The power value of at least one of the processing device, the first device and the second device is lower than or equal to a preset power threshold.

The connection signal value of at least one of the processing device, the first device and the second device is less than or equal to a preset signal threshold.

The resource occupancy value of at least one of the processing device, the first device, and the second device is greater than or equal to a preset resource threshold.

The running state of at least one of the processing device, the first device and the second device is stuck or not smooth.

The preset application and/or preset function of at least one of the processing device, the first device, and the second device is turned on.

The security level of at least one of the processing device, the first device, and the second device is less than or equal to a preset security level threshold.

The working time of at least one of the processing device, the first device and the second device is greater than or equal to a preset working time threshold.

At least one of the processing device, the first device and the second device is at a preset position.

In an embodiment, the processing device, the first device and the second device belong to the same connection network, and the processing device, the first device and the second device can all serve as management devices to manage other devices in the connection network.

In an embodiment, the first preset event, the second preset event, or the third preset event may be that at least one of the processing device, the first device, and the second device is in or switched to a preset mode. The preset mode can be set by the system or set by the user or selected by the user, and the preset mode can be an intelligent mode, an interconnected mode, a linked mode, or a transfer mode, etc.

In an embodiment, the first preset event, the second preset event, or the third preset event may be that at least one of the processing device, the first device, and the second device is in or switched to a preset environment. The preset environment can be a preset time (such as day, night, working day, holiday, 7:00 am, 10:00 am, 11:00 pm, etc.), can also be a preset location (such as home, office, subway, bus, car, etc.), can be an environment where the luminance value meets the luminance threshold condition (such as dark, bright), or an environment where the noise value meets the noise threshold condition (such as noisy, quiet), etc.

In an embodiment, the first preset event, the second preset event, or the third preset event may be that at least one of the processing device, the first device, and the second device detects that the user physiological information meets a first preset condition. The physiological information can be heart rate, blood oxygen, blood pressure, blood sugar, or the like. The heart rate is taken as an example, in an embodiment, if the heart rate is lower than 50 beats/minute or exceeds 120 beats/minute (i.e.: does not meet the normal heart rate range), it can be considered as meeting the first preset condition. The blood oxygen concentration is taken as an example again, in an embodiment, if it is lower than 90% (below the normal range), it can also be considered as meeting the first preset condition.

In an embodiment, the first preset event, the second preset event, or the third preset event may be that at least one of the processing device, the first device, and the second device detects that the user state meets a second preset condition. The user state can be sleep state, sitting state, exercise state (such as walking, running, swimming, climbing, cycling, etc.). The sleep state is taken as an example, in an embodiment, if the user's sleep state duration of the day, or the average sleep state duration of the week, month, year, or user preset time period (such as the past 3 months, etc.) is lower than a preset threshold (such as 8 hours), it can be considered as meeting the second preset condition. The sitting posture is taken as an example, in an embodiment, if the user continuously maintains the sitting posture for more than a certain preset value (such as 1 hour), it can be considered as meeting the second preset condition.

In an embodiment, the first preset event, the second preset event, or the third preset event includes at least one of: at least one device is newly added in the connection network or the maximum number of connected devices has been reached; at least one device in the connection network is disconnected or the minimum number of connected devices has been reached; at least one of the processing device, the first device and the second device receives at least one message; the power value of at least one of the processing device, the first device and the second device is lower than or equal to a preset power threshold; the connection signal value of at least one of the processing device, the first device and the second device is less than or equal to a preset signal threshold; the resource occupancy value of at least one of the processing device, the first device, and the second device is greater than or equal to a preset resource threshold; the running state of at least one of the processing device, the first device and the second device is stuck or not smooth; the preset application and/or preset function of at least one of the processing device, the first device, and the second device is turned on; the security level of at least one of the processing device, the first device, and the second device is less than or equal to a preset security level threshold; the working time of at least one of the processing device, the first device and the second device is greater than or equal to a preset working time threshold; at least one of the processing device, the first device and the second device is at a preset position.

In an embodiment, in the above connection network, there are terminal devices or other devices that newly join the connection network (such as wearable devices, smart home devices, or Internet of Vehicles devices), and there are also terminal devices or other devices that exit the connection network. Device performance, network quality, etc. will affect the maximum number of connected devices connected to the network. It can be understood that the better the device performance and the better the network quality, the greater the maximum number of connected devices connected to the network. The worse the performance of the device and the worse the quality of the network, the smaller the maximum number of connected devices connected to the network. The maximum number of connected devices can also be set by the user or preset by the system according to specific needs.

In an embodiment, when the number of currently connected devices in the connection network is close to the maximum number of connected devices, the user can be prompted not to add devices to the connection network at will, so as to avoid the failure to add new devices due to the connection network reaching the maximum number of connected devices, or the user can be prompted to disconnect the device that has been connected to the network but has not been used for a long time, so as to provide access space for new devices connected to the network. For example, the maximum number of connected devices is 9, and the user will be prompted when the number of currently connected devices is 7. When the number of currently connected devices in the connection network is close to the minimum number of connected devices, the user can be prompted not to disconnect the devices connected to the connection network at will, so as to avoid the restriction of related functions that require device linkage in the connection network.

In an embodiment, when the number of currently connected devices in the connection network is between the minimum number of connected devices and the maximum number of connected devices, the preset event processing capability of the connection network is optimal, for example, the process of adding new devices will be smoother, data exchange will be faster, or the like. That is, it not only ensures the response speed of connecting to the network, but also ensures the processing capability of linkage between devices to handle preset events.

For example, as shown in FIG. 55, 400 is a mobile phone, and 401 is a list of connected devices in the connection network output by the mobile phone. When the user triggers the disconnection of device B in the connection network through the hand 402, the mobile phone 400 outputs prompt information through the pop-up box 403.

In an embodiment, during the use of each device, there may be interaction with devices in the connection network, and there may also be information exchange with devices in other non-connection networks. For information exchange with other devices in the non-connection network, information interaction between devices can be realized through network services (such as Internet services), for example, the first device in the connection network receives a message (such as SMS, instant message, etc.)).

In an embodiment, each device requires electric energy during use, and the electric energy is generally provided by a battery, and the battery needs to be charged when the battery is exhausted or will be exhausted. For the power value, different devices connected to the network will have batteries with different capacities, and the batteries will have different remaining power or different battery life. For example, the battery capacity of a mobile phone is generally larger than that of a smart watch. In addition, there is also a situation where the remaining power of the mobile phone is less than the current power of the smart watch due to the fact that the mobile phone is not charged. When the power value of at least one of the processing device, the first device, and the second device is lower than or equal to a preset power threshold, it may be considered that a preset event is triggered.

In an embodiment, the preset power threshold is a trigger condition for a preset event, and the preset power threshold can be a threshold for battery protection. For example, when the power value is less than or equal to the preset power threshold, reminding the user to charge the power value can prolong the service life of the battery. The preset power threshold can also be a threshold for the purpose of requiring the minimum battery life. For example, the user requires the minimum battery life of the device to be 10 hours, so that the battery has enough power for the user when the user cannot charge the battery. When the battery life of at least one of the processing device, the first device and the second device is less than or equal to 10 hours, it may be considered that the preset event is triggered.

In an embodiment, to maintain the connection between each device, a signal is required. The strength of the signal can be determined by the connection distance between the devices and/or the transmission power of the RF module. For example, the smaller the connection distance or the greater the transmission power, the greater the signal strength. The greater the connection distance or the lower the transmission power, the lower the signal strength. When the connection signal value of at least one of the processing device, the first device, and the second device is less than or equal to a preset signal threshold, a preset event may be deemed to be triggered. The preset signal threshold is generally set based on whether normal interaction between devices can be maintained. For example, the connection signal value less than or equal to the preset signal threshold cannot maintain normal interaction between devices; another example is the connection signal value greater than the preset signal threshold can maintain normal interaction between devices.

In an embodiment, each device needs to occupy a certain amount of resources to maintain normal operation. When this resource is occupied, it cannot handle new tasks assigned by the device. When the resource occupation value reaches a certain value, the device cannot normally process the tasks that need to be processed. The preset resource threshold is the certain value, and when the resource occupation value is greater than or equal to the preset resource threshold, it may be considered that a preset event is triggered. The preset resource threshold is set according to the actual use requirements of the device. If the resource occupancy value corresponding to the user's frequently used software is large, the preset resource threshold needs to be set larger. Furthermore, if the resource occupation value corresponding to the user's frequently used software is small, the preset resource threshold may be set smaller.

In an embodiment, the running state of each device may be stuck or not smooth due to various reasons (such as overheating of the device, too many applications opened, too frequent user operations, etc.). When the running state of at least one of the processing device, the first device and the second device is stuck or unsmooth, it may be considered that a preset event is triggered.

In an embodiment, each device will run applications (such as the notepad application) or enable functions (such as the recording function) when the user uses it. When the preset application and/or the preset function of at least one of the processing device, the first device and the second device is turned on, it may be considered that the preset event is triggered. For example, the preset application is instant chat application, and the preset event triggered is to detect whether the instant chat application receives a new message, and then feed back the detection result corresponding to the detection to the message receiving device or other devices in the connection network. For another example, the preset function is camera, and the triggered preset event is to traverse the camera performance of each device in the connection network, and then feed back the traversal result corresponding to the traversal to the device with the preset function enabled or other devices in the connection network, to facilitate the user to use the intelligently recommended camera device (the camera device with the best camera performance) to take pictures through the traversal results.

In an embodiment, the safety level of the use environment of each device is classified to obtain the safety level of each device. A high security level represents a safe environment; a low security level represents an unsafe environment. The basis for judging whether the use environment is safe is whether the safety level is greater than the preset safety level threshold, for example, the use environment is safe when the safety level is greater than the preset safety level threshold. The use environment is not safe when the security level is less than or equal to the preset security level threshold. For example, the network used by the device is a secure network (such as home WiFi), and the security level is greater than the preset security level threshold. For another example, the network used by the device is a non-secure network (a network with security risks (such as public WiFi)). When the security level of at least one of the processing device, the first device and the second device is less than or equal to a preset security level threshold, it may be considered that a preset event is triggered.

In an embodiment, when each device is connected to the connection network, the working duration can be set, so as to limit the working duration of the corresponding device in the connection network through the working duration. It can be understood that, in one embodiment, there may be an upper limit on the number of connected devices due to various reasons (such as limited data processing capability of the control center). After the number of devices in the connection network is equal to the upper limit of the number of connected devices, the connection network cannot add new devices. By setting the working duration, when the connection time of the device is equal to the working duration, the connection of the device is disconnected, which can make room for the devices that need to connect to the network.

It can be understood that the working duration can be used in conjunction with the working state of each device. For example, the time of device A accessing the connection network is equal to the working duration, but it is interacting with other devices in the connection network at this time. Understandably, it is not appropriate to disconnect device A at this time. Therefore, when the connection duration of device A is equal to the working duration, if the device A is idle (without interacting with other devices in the connection network), the connection of device A is disconnected. If the device A is in the interactive state, the connection of the device A is kept.

It can be understood that when the access priority of the newly added device is higher (the user applies for the device to access the connection network by manually establishing a connection, rather than the device automatically applying for access to the connection network), in the case that it is not appropriate to disconnect the device through the working duration (device A is in the interactive state), disconnect the device in the network whose connection time is less than the working duration and has been in the idle state for the longest time.

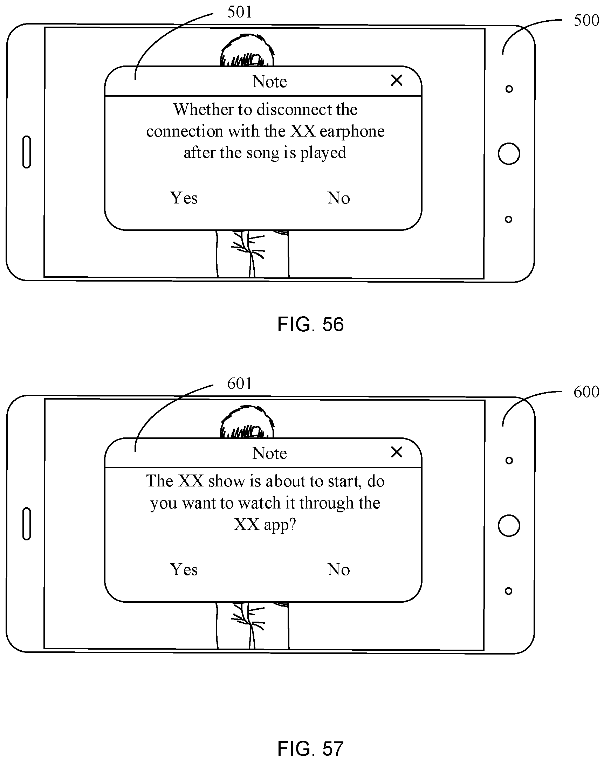

In other embodiments, the working duration can be set for the first newly added device to facilitate the use of users. For example, user A needs to share a song with user B, but user B wants to listen to the song through his own earphone, but does not want to use the earphone of user A to listen to the song. Besides, the earphone of user B is connected to the network where the earphone of user A is connected for the first time. At this time, the connection network of the earphone of user A can establish a temporary connection for the earphone of user B, such as setting the working duration. Correspondingly, the working duration is the playing duration of the song. After the song is played, the network where the earphone of user A is connected to is automatically disconnected from the temporary connection. In addition to automatically disconnecting the temporary connection, it can also determine whether to continue to establish a connection with the earphone of user B according to user input. For example, with reference to FIG. 56, 500 is a mobile phone, and 501 is a pop-up prompt information output by the mobile phone 500 to prompt the user to choose whether to disconnect the connection with "earphone of XX" after the song is played.

In an embodiment, when the position of at least one device among the processing device, the first device and the second device is at a preset position, it may be considered that a preset event is triggered. Generally, for the convenience of the user, the user can set the preset location in advance, for example, the preset location can be home, an office, a subway or a car, etc.

In an embodiment, at least one of the processing device, the first device and the second device may serve as a device for detecting various parameters, such as a smart wearable device used to detect the user physiological parameters (blood oxygen concentration, heart rate, steps, etc.), road side unit (Road Side Unit, RSU) used to detect vehicle speed in the Internet of Vehicles scenario, router used to detect network rate, or the like. When the detected parameter is larger or smaller than the preset parameter range, it can be regarded as triggering the preset event. For example, when the smart wearable device detects that the user's blood oxygen level is low during exercise, the roadside unit detects that the road vehicle is speeding, or the router detects that the current network rate is too low, it can be considered that a preset event has occurred on the current network.

Operation H20, if yes, detecting whether the device corresponding to the preset event meets the preset condition.

In an embodiment, if a preset event occurs, it is detected whether the device corresponding to the preset event meets the preset condition; if the preset event does not occur, it is not detected whether the device corresponding to the preset event meets the preset condition.

In an embodiment, there is only one preset event, and the satisfaction of preset conditions includes at least one of the following:
the preset event is triggered by at least one of the processing device, the first device, and the second device;
the time and/or place triggered by the preset event meets the first preset condition;
the content information of the preset event meets the second preset condition.

In an embodiment, the preset event is a first preset event, a second preset event or a third preset event. Meeting the preset condition includes at least one of: the preset event is triggered by at least one of the processing device, the first device, and the second device; the time and/or location of the preset event trigger meet the first preset condition; the content information of the preset event meets the second preset condition.

In an embodiment, the first preset condition is that the trigger location of the preset event is a preset location, and/or the trigger time of the preset event is a preset time. The preset location is a location set by the user and/or preset by the system, such as home or office or on the subway or car. The preset time is a time set by the user and/or preset by the system, for example, 5:30 pm.

In an embodiment, the second preset condition is that the content information of the preset event is the preset content information. The preset content information may be keywords, key sentences set by the user or preset by the system, or determined according to use habits or machine learning.

In an embodiment, the preset event includes at least two, and the meeting the preset condition includes at least one of the following:
the preset event is triggered by the processing device, the first device and/or the second device;
the time and/or place triggered by the preset event meets the third preset condition;
the trigger sequence of the preset events meets the fourth preset condition;
the priority of the preset event meets the fifth preset condition;
the content information of the preset event meets the sixth preset condition.

In an embodiment, the preset events include at least two of the first preset event, the second preset event and the third preset event. The meeting the preset condition includes at least one of: the preset event is triggered by the processing device, the first device and/or the second device; the time and/or place triggered by the preset event meets the third preset condition; the trigger sequence of the preset events meets the fourth preset condition; the priority of the preset event meets the fifth preset condition; the content information of the preset event meets the sixth preset condition.

In an embodiment, the third preset condition is that the trigger location of the preset event is a preset location, and/or the trigger time of the preset event is a preset time. The preset location is a location set by the user and/or preset by the system, such as home or office or on the subway or car. The preset time is a time set by the user and/or preset by the system, for example, 5:30 pm.

In an embodiment, the fourth preset condition is that the trigger sequence of preset events meets the preset sequence. For example, the preset sequence is that there is a logical sequence relationship between the first preset event and the second preset event, and the second preset event must be processed only after the first preset event is processed.

In an embodiment, the fifth preset condition is that the priority of the preset event meets the preset priority condition. For example, if the preset priority condition is a priority limit between the first preset event and the second preset event, the fifth preset condition is met only when the priority of the first preset event is higher than the priority of the second preset event.

In an embodiment, the sixth preset condition is that the content information of the preset event is preset content information. The preset content information may be keywords, key sentences, etc. set by the user or preset by the system, or determined according to use habits or machine learning.

Operation H30, if yes, outputting prompt information corresponding to the preset event according to the prompt strategy.

In an embodiment, if the device corresponding to the preset event meets the preset condition, the prompt information corresponding to the preset event is output according to the prompt strategy; if the device corresponding to the preset event does not meet the preset condition, no prompt information is output.

In an embodiment, the outputting the prompt information corresponding to the preset event according to the prompt strategy includes at least one of the following:
outputting operation options and/or prompt information corresponding to the preset event on the processing device;
outputting operation options and/or prompt information corresponding to the preset event on the first device;
outputting operation options and/or prompt information corresponding to the preset event on the second device.

In an embodiment, the processing device outputting the prompt information corresponding to the preset event according to the prompt strategy includes at least one of: outputting operation options and/or prompt information corresponding to the preset event on the processing device; outputting operation options and/or prompt information corresponding to the preset event on the first device; outputting operation options and/or prompt information corresponding to the preset event on the second device.

In an embodiment, the above operation options are choices made by the user for the preset event, for example, the mobile phone outputs the operation options to allow the user to choose whether to enter the preset TV program playback application. The prompt information is to remind the user that at least one of the processing device, the first device and the second device has occurred a preset event. For example, referring to FIG. 57, 600 is a mobile phone, and 601 is the pop-up prompt information and operation options output by the mobile phone 600.

In an embodiment, the method further includes: receiving the operation information for the operation option, and updating and/or transmitting the preset event according to the operation information.

In an embodiment, the processing device receives operation information for the above operation options (for example, confirms the compression operation), and updates and/or transmits (for example, updates the preset event to replace the original video file with the compressed video file) the preset event according to the operation information.

In this embodiment, the processing method includes: H10, detecting whether a preset event occurs; H20, when the preset event occurs, detecting whether the device corresponding to the preset event meets the preset condition; H30, when the device corresponding to the preset event meets the preset condition, outputting prompt information corresponding to the preset event according to the prompt strategy. When it is detected that the preset event occurs and the device corresponding to the preset event meets the preset condition, the prompt information corresponding to the preset event is output according to the prompt strategy, so that when the device is disconnected from the connection network where it is located, the user can obtain the message that the device is disconnected from the connection network where it is located through the prompt information. Therefore, it is more intelligent, convenient and faster for the user to obtain the message that the device is disconnected from the connection network where it is located.

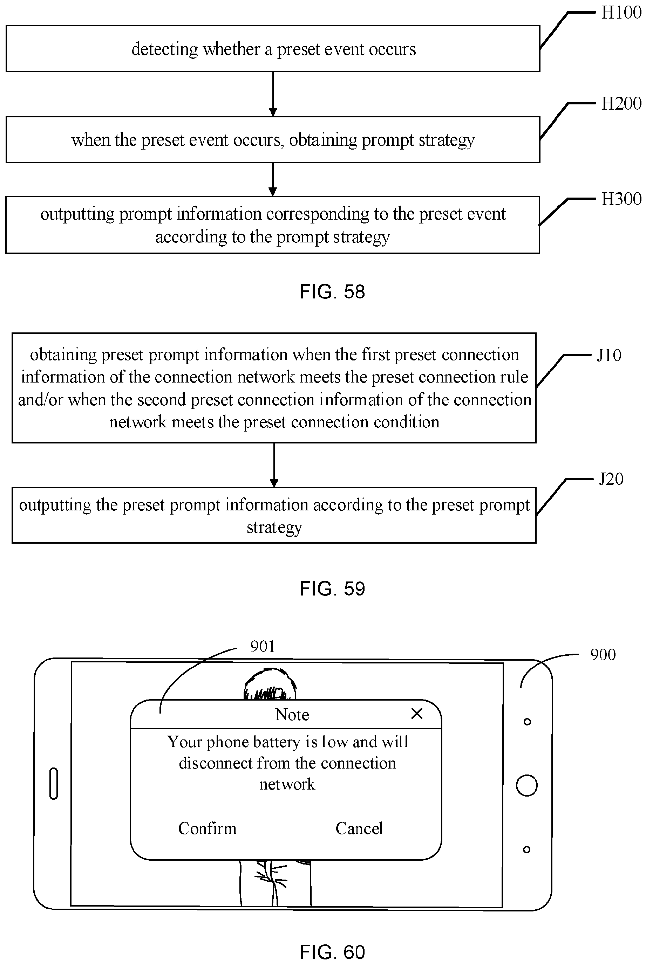

Another embodiment of the processing method of the present application is proposed. As shown in FIG. 58, FIG. 58 is a schematic flowchart of the processing method according to another embodiment of the present application.

The embodiment of the present application provides the processing method. Although a logical order is shown in the flowcharts, in some cases the steps shown or described may be performed in an order different from that shown or described herein. The processing method can be applied to a processing device including, but not limited to, a personal computer, a smart phone, and the like. The processing method includes:
Operation H100, detecting whether a preset event occurs.

In an embodiment, the processing device detects whether the preset event occurs.

The processing device is in a connection network, the connection network includes the processing device, the first device, and the second device, and the occurrence of a preset event includes at least one of the following:
a first preset event occurs on the processing device;
a second preset event occurs on the first device;
a third preset event occurs on the second device.

In an embodiment, the above-mentioned processing device is in the connection network, and the connection network includes the processing device, the first device and the second device, that is, the processing device, the first device and the second device belong to the same connection network. The first device is directly connected to the processing device, and the second device is indirectly connected to the processing device. It can be understood that the direct connection is a direct connection between devices. The indirect connection means that there is no connection between the devices, but the two devices that have not established the connection establish a connection with another device at the same time, that is, the two devices that have not established the connection can exchange data through the other device. The processing device, the first device and the second device include any one of terminal devices (such as smartphones, PADs, tablets, etc.), wearable smart devices (such as smart watches, smart bracelets, smart earphones, etc.), smart home devices (such as smart TVs, smart speakers, etc.) and Internet of Vehicles devices (such as smart cars, vehicle terminals, etc.).

In an embodiment, the aforementioned occurrence of a preset event includes at least one of a first preset event occurring on the processing device, a second preset event occurring on the first device, and a third preset event occurring on the second device.

In an embodiment, the first preset event or the second preset event or the third preset event includes at least one of the following:
at least one of the processing device, the first device and the second device is in or switched to a preset mode;
at least one of the processing device, the first device and the second device is in or switched to a preset environment;
at least one of the processing device, the first device, and the second device detects that the user physiological information meets a first preset condition;
at least one of the processing device, the first device, and the second device detects that the user state meets a second preset condition;
at least one preset parameter detected by at least one of the processing device, the first device, and the second device meets a parameter condition;
at least one device is newly added in the connection network or the maximum number of connected devices has been reached;
at least one device in the connection network is disconnected or the minimum number of connected devices has been reached;
at least one of the processing device, the first device and the second device receives at least one message;
the power value of at least one of the processing device, the first device and the second device is lower than or equal to a preset power threshold;
the connection signal value of at least one of the processing device, the first device and the second device is less than or equal to a preset signal threshold;
the resource occupancy value of at least one of the processing device, the first device, and the second device is greater than or equal to a preset resource threshold;
the running state of at least one of the processing device, the first device and the second device is stuck or not smooth;
the preset application and/or preset function of at least one of the processing device, the first device, and the second device is turned on;
the security level of at least one of the processing device, the first device, and the second device is less than or equal to a preset security level threshold;
the working time of at least one of the processing device, the first device and the second device is greater than or equal to a preset working time threshold;
at least one of the processing device, the first device and the second device is at a preset position.

In an embodiment, at least one of the processing device, the first device and the second device is in or switched to a preset mode. The preset mode can be set by the system or set by the user or selected by the user, and the preset mode can be an intelligent mode or an interconnected mode or a linkage mode or a transfer mode, etc.

At least one of the processing device, the first device and the second device is in or switched to a preset environment. The preset environment can be a preset time (such as day, night, working day, holiday, 7:00 am, 10:00 am, 11:00 pm, etc.), can also be a preset location (such as home, office, subway, bus, car, etc.), can be an environment where the brightness value meets the brightness threshold condition (such as dark, bright), or an environment where the noise value meets the noise threshold condition (such as noisy, quiet), etc..

At least one of the processing device, the first device, and the second device detects that the user physiological information meets a first preset condition. The physiological information can be heart rate, blood oxygen, blood pressure, blood sugar, or the like. The heart rate is taken as an example, in an embodiment, if the heart rate is lower than 50 beats/minute or exceeds 120 beats/minute (i.e.: does not meet the normal heart rate range), it can be considered as meeting the first preset condition. The blood oxygen concentration is taken as an example again, in an embodiment, if it is lower than 90% (below the normal range), it can also be considered as meeting the first preset condition.

At least one of the processing device, the first device, and the second device detects that the user state meets a second preset condition. The user state can be sleep state, sitting state, exercise state (such as walking, running, swimming, climbing, cycling, etc.). The sleep state is taken as an example, in an embodiment, if the user's sleep state duration of the day, or the average sleep state duration of the week, month, year, or user preset time period (such as the past 3 months, etc.) is lower than a preset threshold (such as 8 hours), it can be considered as meeting the second preset condition. The sitting posture is taken as an example, in an embodiment, if the user continuously maintains the sitting posture for more than a certain preset value (such as 1 hour), it can be considered as meeting the second preset condition.

At least one preset parameter (such as speed) detected by at least one of the processing device, the first device, and the second device meets a parameter condition (such as greater than or less than or equal to a preset parameter range).

At least one device is newly added in the connection network or the maximum number of connected devices has been reached.

At least one device in the connection network is disconnected or the minimum number of connected devices has been reached.

At least one of the processing device, the first device and the second device receives at least one message.

The power value of at least one of the processing device, the first device and the second device is lower than or equal to a preset power threshold.

The connection signal value of at least one of the processing device, the first device and the second device is less than or equal to a preset signal threshold.

The resource occupancy value of at least one of the processing device, the first device, and the second device is greater than or equal to a preset resource threshold.

The running state of at least one of the processing device, the first device and the second device is stuck or not smooth.

The preset application and/or preset function of at least one of the processing device, the first device, and the second device is turned on.

The security level of at least one of the processing device, the first device, and the second device is less than or equal to a preset security level threshold.

The working time of at least one of the processing device, the first device and the second device is greater than or equal to a preset working time threshold.

At least one of the processing device, the first device and the second device is at a preset position.

In an embodiment, the processing device, the first device and the second device belong to the same connection network, and the processing device, the first device and the second device can all serve as management devices to manage other devices in the connection network.

In an embodiment, the first preset event, the second preset event, or the third preset event may be that at least one of the processing device, the first device, and the second device is in or switched to a preset mode. The preset mode can be set by the system or set by the user or selected by the user, and the preset mode can be an intelligent mode, an interconnected mode, a linked mode, or a transfer mode, etc.

In an embodiment, the first preset event, the second preset event, or the third preset event may be that at least one of the processing device, the first device, and the second device is in or switched to a preset environment. The preset environment can be a preset time (such as day, night, working day, holiday, 7:00 am, 10:00 am, 11:00 pm, etc.), can also be a preset location (such as home, office, subway, bus, car, etc.), can be an environment where the luminance value meets the luminance threshold condition (such as dark, bright), or an environment where the noise value meets the noise threshold condition (such as noisy, quiet), etc.

In an embodiment, the first preset event, the second preset event, or the third preset event may be that at least one of the processing device, the first device, and the second device detects that the user physiological information meets a first preset condition. The physiological information can be heart rate, blood oxygen, blood pressure, blood sugar, or the like. The heart rate is taken as an example, in an embodiment, if the heart rate is lower than 50 beats/minute or exceeds 120 beats/minute (i.e.: does not meet the normal heart rate range), it can be considered as meeting the first preset condition. The blood oxygen concentration is taken as an example again, in an embodiment, if it is lower than 90% (below the normal range), it can also be considered as meeting the first preset condition.

In an embodiment, the first preset event, the second preset event, or the third preset event may be that at least one of the processing device, the first device, and the second device detects that the user state meets a second preset condition. The user state can be sleep state, sitting state, exercise state (such as walking, running, swimming, climbing, cycling, etc.). The sleep state is taken as an example, in an embodiment, if the user's sleep state duration of the day, or the average sleep state duration of the week, month, year, or user preset time period (such as the past 3 months, etc.) is lower than a preset threshold (such as 8 hours), it can be considered as meeting the second preset condition. The sitting posture is taken as an example, in an embodiment, if the user continuously maintains the sitting posture for more than a certain preset value (such as 1 hour), it can be considered as meeting the second preset condition.

In an embodiment, the first preset event, the second preset event, or the third preset event includes at least one of: at least one device is newly added in the connection network or the maximum number of connected devices has been reached; at least one device in the connection network is disconnected or the minimum number of connected devices has been reached; at least one of the processing device, the first device and the second device receives at least one message; the power value of at least one of the processing device, the first device and the second device is lower than or equal to a preset power threshold; the connection signal value of at least one of the processing device, the first device and the second device is less than or equal to a preset signal threshold; the resource occupancy value of at least one of the processing device, the first device, and the second device is greater than or equal to a preset resource threshold; the running state of at least one of the processing device, the first device and the second device is stuck or not smooth; the preset application and/or preset function of at least one of the processing device, the first device, and the second device is turned on; the security level of at least one of the processing device, the first device, and the second device is less than or equal to a preset security level threshold; the working time of at least one of the processing device, the first device and the second device is greater than or equal to a preset working time threshold; at least one of the processing device, the first device and the second device is at a preset position.

In an embodiment, in the above connection network, there are terminal devices or other devices that newly join the connection network (such as wearable devices, smart home devices, or Internet of Vehicles devices), and there are also terminal devices or other devices that exit the connection network. Device performance, network quality, etc. will affect the maximum number of connected devices connected to the network. It can be understood that the better the device performance and the better the network quality, the greater the maximum number of connected devices connected to the network. The worse the performance of the device and the worse the quality of the network, the smaller the maximum number of connected devices connected to the network. The maximum number of connected devices can also be set by the user or preset by the system according to specific needs.

In an embodiment, when the number of currently connected devices in the connection network is close to the maximum number of connected devices, the user can be prompted not to add devices to the connection network at will, so as to avoid the failure to add new devices due to the connection network reaching the maximum number of connected devices, or the user can be prompted to disconnect the device that has been connected to the network but has not been used for a long time, so as to provide access space for new devices connected to the network. For example, the maximum number of connected devices is 9, and the user will be prompted when the number of currently connected devices is 7. When the number of currently connected devices in the connection network is close to the minimum number of connected devices, the user can be prompted not to disconnect the devices connected to the connection network at will, so as to avoid the restriction of related functions that require device linkage in the connection network.

In an embodiment, when the number of currently connected devices in the connection network is between the minimum number of connected devices and the maximum number of connected devices, the preset event processing capability of the connection network is optimal, for example, the process of adding new devices will be smoother, data exchange will be faster, or the like. That is, it not only ensures the response speed of connecting to the network, but also ensures the processing capability of linkage between devices to handle preset events.

For example, as shown in FIG. 55, 400 is a mobile phone, and 401 is a list of connected devices in the connection network output by the mobile phone. When the user triggers the disconnection of device B in the connection network through the hand 402, the mobile phone 400 outputs prompt information through the pop-up box 403.

In an embodiment, during the use of each device, there may be interaction with devices in the connection network, and there may also be information exchange with devices in other non-connection networks. For information exchange with other devices in the non-connection network, information interaction between devices can be realized through network services (such as Internet services), for example, the first device in the connection network receives a message (such as SMS, instant message, etc.)).

In an embodiment, each device requires electric energy during use, and the electric energy is generally provided by a battery, and the battery needs to be charged when the battery is exhausted or will be exhausted. For the power value, different devices connected to the network will have batteries with different capacities, and the batteries will have different remaining power or different battery life. For example, the battery capacity of a mobile phone is generally larger than that of a smart watch. In addition, there is also a situation where the remaining power of the mobile phone is less than the current power of the smart watch due to the fact that the mobile phone is not charged. When the power value of at least one of the processing device, the first device, and the second device is lower than or equal to a preset power threshold, it may be considered that a preset event is triggered.

In an embodiment, the preset power threshold is a trigger condition for a preset event, and the preset power threshold can be a threshold for battery protection. For example, when the power value is less than or equal to the preset power threshold, reminding the user to charge the power value can prolong the service life of the battery. The preset power threshold can also be a threshold for the purpose of requiring the minimum battery life. For example, the user requires the minimum battery life of the device to be 10 hours, so that the battery has enough power for the user when the user cannot charge the battery. When the battery life of at least one of the processing device, the first device and the second device is less than or equal to 10 hours, it may be considered that the preset event is triggered.

In an embodiment, to maintain the connection between each device, a signal is required. The strength of the signal can be determined by the connection distance between the devices and/or the transmission power of the RF module. For example, the smaller the connection distance or the greater the transmission power, the greater the signal strength. The greater the connection distance or the lower the transmission power, the lower the signal strength. When the connection signal value of at least one of the processing device, the first device, and the second device is less than or equal to a preset signal threshold, a preset event may be deemed to be triggered. The preset signal threshold is generally set based on whether normal interaction between devices can be maintained. For example, the connection signal value less than or equal to the preset signal threshold cannot maintain normal interaction between devices; another example is the connection signal value greater than the preset signal threshold can maintain normal interaction between devices.

In an embodiment, each device needs to occupy a certain amount of resources to maintain normal operation. When this resource is occupied, it cannot handle new tasks assigned by the device. When the resource occupation value reaches a certain value, the device cannot normally process the tasks that need to be processed. The preset resource threshold is the certain value, and when the resource occupation value is greater than or equal to the preset resource threshold, it may be considered that a preset event is triggered. The preset resource threshold is set according to the actual use requirements of the device. If the resource occupancy value corresponding to the user's frequently used software is large, the preset resource threshold needs to be set larger. Furthermore, if the resource occupation value corresponding to the user's frequently used software is small, the preset resource threshold may be set smaller.

In an embodiment, the running state of each device may be stuck or not smooth due to various reasons (such as overheating of the device, too many applications opened, too frequent user operations, etc.). When the running state of at least one of the processing device, the first device and the second device is stuck or unsmooth, it may be considered that a preset event is triggered.

In an embodiment, each device will run applications (such as the notepad application) or enable functions (such as the recording function) when the user uses it. When the preset application and/or the preset function of at least one of the processing device, the first device and the second device is turned on, it may be considered that the preset event is triggered. For example, the preset application is instant chat application, and the preset event triggered is to detect whether the instant chat application receives a new message, and then feed back the detection result corresponding to the detection to the message receiving device or other devices in the connection network. For another example, the preset function is camera, and the triggered preset event is to traverse the camera performance of each device in the connection network, and then feed back the traversal result corresponding to the traversal to the device with the preset function enabled or other devices in the connection network, to facilitate the user to use the intelligently recommended camera device (the camera device with the best camera performance) to take pictures through the traversal results.

In an embodiment, the safety level of the use environment of each device is classified to obtain the safety level of each device. A high security level represents a safe environment; a low security level represents an unsafe environment. The basis for judging whether the use environment is safe is whether the safety level is greater than the preset safety level threshold, for example, the use environment is safe when the safety level is greater than the preset safety level threshold. The use environment is not safe when the security level is less than or equal to the preset security level threshold. For example, the network used by the device is a secure network (such as home WiFi), and the security level is greater than the preset security level threshold. For another example, the network used by the device is a non-secure network (a network with security risks (such as public WiFi)). When the security level of at least one of the processing device, the first device and the second device is less than or equal to a preset security level threshold, it may be considered that a preset event is triggered.

In an embodiment, when each device is connected to the connection network, the working duration can be set, so as to limit the working duration of the corresponding device in the connection network through the working duration. It can be understood that, in one embodiment, there may be an upper limit on the number of connected devices due to various reasons (such as limited data processing capability of the control center). After the number of devices in the connection network is equal to the upper limit of the number of connected devices, the connection network cannot add new devices. By setting the working duration, when the connection time of the device is equal to the working duration, the connection of the device is disconnected, which can make room for the devices that need to connect to the network.

It can be understood that the working duration can be used in conjunction with the working state of each device. For example, the time of device A accessing the connection network is equal to the working duration, but it is interacting with other devices in the connection network at this time. Understandably, it is not appropriate to disconnect device A at this time. Therefore, when the connection duration of device A is equal to the working duration, if the device A is idle (without interacting with other devices in the connection network), the connection of device A is disconnected. If the device A is in the interactive state, the connection of the device A is kept.

It can be understood that when the access priority of the newly added device is higher (the user applies for the device to access the connection network by manually establishing a connection, rather than the device automatically applying for access to the connection network), in the case that it is not appropriate to disconnect the device through the working duration (device A is in the interactive state), disconnect the device in the network whose connection time is less than the working duration and has been in the idle state for the longest time.

In other embodiments, the working duration can be set for the first newly added device to facilitate the use of users. For example, user A needs to share a song with user B, but user B wants to listen to the song through his own earphone, but does not want to use the earphone of user A to listen to the song. Besides, the earphone of user B is connected to the network where the earphone of user A is connected for the first time. At this time, the connection network of the earphone of user A can establish a temporary connection for the earphone of user B, such as setting the working duration. Correspondingly, the working duration is the playing duration of the song. After the song is played, the network where the earphone of user A is connected to is automatically disconnected from the temporary connection. In addition to automatically disconnecting the temporary connection, it can also determine whether to continue to establish a connection with the earphone of user B according to user input. For example, with reference to FIG. 56, 500 is a mobile phone, and 501 is a pop-up prompt information output by the mobile phone 500 to prompt the user to choose whether to disconnect the connection with "earphone of XX" after the song is played.

In an embodiment, when the position of at least one device among the processing device, the first device and the second device is at a preset position, it may be considered that a preset event is triggered. Generally, for the convenience of the user, the user can set the preset location in advance, for example, the preset location can be home, an office, a subway or a car, etc.

In an embodiment, at least one of the processing device, the first device and the second device may serve as a device for detecting various parameters, such as a smart wearable device used to detect the user physiological parameters (blood oxygen concentration, heart rate, steps, etc.), road side unit (Road Side Unit, RSU) used to detect vehicle speed in the Internet of Vehicles scenario, router used to detect network rate, or the like. When the detected parameter is larger or smaller than the preset parameter range, it can be regarded as triggering the preset event. For example, when the smart wearable device detects that the user's blood oxygen level is low during exercise, the roadside unit detects that the road vehicle is speeding, or the router detects that the current network rate is too low, it can be considered that a preset event has occurred on the current network.

Operation H200, if yes, obtaining a prompt strategy;
Operation H300, outputting prompt information corresponding to the preset event according to the prompt strategy.

In an embodiment, if a preset event occurs, a prompt strategy is obtained, and the prompt information corresponding to the preset event is output according to the prompt strategy; if a preset event does not occur, the prompt strategy is not obtained.

In an embodiment, the outputting prompt information corresponding to the preset event according to the prompt strategy includes at least one of the following:
outputting operation options and/or prompt information corresponding to the preset event on the processing device;
outputting operation options and/or prompt information corresponding to the preset event on the first device;
outputting operation options and/or prompt information corresponding to the preset event on the second device.

In an embodiment, the processing device outputting the prompt information corresponding to the preset event according to the prompt strategy includes at least one of: outputting operation options and/or prompt information corresponding to the preset event on the processing device; outputting operation options and/or prompt information corresponding to the preset event on the first device; outputting operation options and/or prompt information corresponding to the preset event on the second device.

In an embodiment, the above operation options are choices made by the user for the preset event, for example, the mobile phone outputs the operation options to allow the user to choose whether to enter the preset TV program playback application. The prompt information is to remind the user that at least one of the processing device, the first device and the second device has occurred a preset event. For example, referring to FIG. 57, 600 is a mobile phone, and 601 is the pop-up prompt information and operation options output by the mobile phone 600.

In an embodiment, the method further includes: receiving the operation information for the operation option, and updating and/or transmitting the preset event according to the operation information.

In an embodiment, the processing device receives operation information for the above operation options (for example, confirms the compression operation), and updates and/or transmits (for example, updates the preset event to replace the original video file with the compressed video file) the preset event according to the operation information.

In this embodiment, the processing method includes: H100, detecting whether a preset event occurs; H200, when the preset event occurs, obtaining a prompt strategy; H300, outputting prompt information corresponding to the preset event according to the prompt strategy. When it is detected that when the preset event occurs, the prompt strategy is obtained, the prompt information corresponding to the preset event is output according to the prompt strategy, so that when the device is disconnected from the connection network where it is located, the user can obtain the message that the device is disconnected from the connection network where it is located through the prompt information. Therefore, it is more intelligent, convenient and faster for the user to obtain the message that the device is disconnected from the connection network where it is located.

Another embodiment of the processing method of the present application is proposed. As shown in FIG. 59, FIG. 59 is a schematic flowchart of the processing method according to yet another embodiment of the present application.

The embodiment of the present application provides the processing method. Although a logical order is shown in the flowcharts, in some cases the steps shown or described may be performed in an order different from that shown or described herein. The processing method can be applied to a processing device including, but not limited to, a personal computer, a smart phone, and the like. For the convenience of description, the operations used by the executive subject to describe the processing method are omitted below. The processing method includes:
Operation J10, obtaining preset prompt information when the first preset connection information of the connection network meets the preset connection rule and/or when the second preset connection information of the connection network meets the preset connection condition.

In an embodiment, the preset prompt information is obtained when the first preset connection information of the connection network meets the preset connection rule and/or when the second preset connection information of the connection network meets the preset connection condition. The connection network consists of one or more devices. The one or more devices include any one of a terminal device (such as a smart phone, a PAD, a Tablet PC, etc.), a wearable smart device, a smart home device (such as a smart TV, a smart speaker, etc.), and an Internet of Vehicles device (such as a smart car, a vehicle terminal, etc.).

In an embodiment, the first preset connection information includes at least one of the following:
power information, timing shutdown information, location information, time information, user identity information and use habit information, connection state information, use state information and environment information.

In an embodiment, the first preset connection information includes at least one of: the power information, the timing shutdown information, the location information, the time information, the user identity information and the use habit information, the connection state information, the use state information and the environment information.

In an embodiment, the method further includes:
when the first preset connection information includes the power information and the power information meets a first preset connection rule, obtaining first preset prompt information;
when the first preset connection information includes the timing shutdown information and the timing shutdown information meets a second preset connection rule, obtaining second preset prompt information;
when the first preset connection information includes the location information and the location information meets a third preset connection rule, obtaining third preset prompt information;
when the first preset connection information includes the time information and the time information meets a fourth preset connection rule, obtaining fourth preset prompt information;
when the first preset connection information includes the user identity information and the user identity information meets a fifth preset connection rule, obtaining fifth preset prompt information;
when the first preset connection information includes the use habit information and the use habit information meets a sixth preset connection rule, obtaining sixth preset prompt information;
when the second preset connection information includes the device type information and the device type information meets a seventh preset connection rule, obtaining seventh preset prompt information;
when the second preset connection information includes the connection state information and the connection state information meets an eighth preset connection rule, obtaining eighth preset prompt information;
when the second preset connection information includes the use state information and the use state information meets a ninth preset connection rule, obtaining ninth preset prompt information;
when the second preset connection information includes the environment information and the environment information meets a tenth preset connection rule, obtaining tenth preset prompt information.

In an embodiment, the method further includes: when the first preset connection information includes the power information and the power information meets a first preset connection rule, obtaining first preset prompt information; when the first preset connection information includes the timing shutdown information and the timing shutdown information meets a second preset connection rule, obtaining second preset prompt information; when the first preset connection information includes the location information and the location information meets a third preset connection rule, obtaining third preset prompt information; when the first preset connection information includes the time information and the time information meets a fourth preset connection rule, obtaining fourth preset prompt information; when the first preset connection information includes the user identity information and the user identity information meets a fifth preset connection rule, obtaining fifth preset prompt information; when the first preset connection information includes the use habit information and the use habit information meets a sixth preset connection rule, obtaining sixth preset prompt information; when the second preset connection information includes the device type information and the device type information meets a seventh preset connection rule, obtaining seventh preset prompt information; when the second preset connection information includes the connection state information and the connection state information meets an eighth preset connection rule, obtaining eighth preset prompt information; when the second preset connection information includes the use state information and the use state information meets a ninth preset connection rule, obtaining ninth preset prompt information; when the second preset connection information includes the environment information and the environment information meets a tenth preset connection rule, obtaining tenth preset prompt information.

In an embodiment, the device needs electric energy during use, and the electric energy is generally provided by the battery, and the battery needs to be charged when the battery is exhausted or is about to be exhausted. For power information, different devices connected to the network will have batteries with different capacities, and the batteries will have different remaining power or different battery life. For example, the battery capacity of a mobile phone is generally larger than that of a smart watch. In addition, it can be understood that there are also cases where the remaining power of the mobile phone is less than the current power of the smart watch due to the lack of charging.

When the power information meets the first preset connection rule, the first preset prompt information is obtained. The meeting the first preset connection rule includes that the power is less than or equal to the first power threshold and the power is greater than the second power threshold. The first preset prompt information is to remind the situation that the power is less than or equal to the first power threshold, for example, to remind the mobile phone user that the power of the mobile phone is too low and the connection with the network will be disconnected. For example, referring to FIG. 60, 900 is a mobile phone, and 901 is preset prompt information output by the mobile phone 900.

In order to make the device more convenient for users to use, when the current time is the user setting time, the device will automatically shut down, that is, the timed shutdown. For the timing shutdown information, when the timing shutdown information meets the second preset connection rule, the second preset prompt information is acquired. The second preset prompt information is to remind the user that the automatic shutdown time is up and the connection with the network connection will be disconnected, and it can also prompt the automatic shutdown countdown, such as automatically shutting down after 10 seconds after outputting the preset prompt information.

In an embodiment, after the devices are connected, there is a connection distance, that is, the location information of the devices is different when they are in use. Different locations make there is a certain distance between each device after the connection is established. The connection distance affects the connection quality between devices, and even when the connection distance reaches a certain value, the connection between devices will be forced to disconnect. For the location information, when the location information meets the third preset connection rule, the third preset prompt information is obtained. Meeting the third preset connection rule means that the location information is greater than or equal to the connection distance threshold, and the third preset prompt information is to remind the user that the connection distance between the devices is too far, the connection quality will be affected or the connection will be disconnected.

In an embodiment, when the connection is established between devices, the duration of the connection can be limited by setting, that is, after the connection is established, when the connection duration reaches the preset duration, the connection will be automatically disconnected. For the time information, when the time information meets the fourth preset connection rule, the fourth preset prompt information is acquired. Meeting the fourth preset connection rule means that the time information is a preset duration, and the fourth preset prompt information is to remind the user that the connection duration between devices reaches the preset duration, and that the connection between devices is about to be disconnected.

In an embodiment, in order to ensure the data security after the connection between devices is established, the connection relationship or data interaction needs to be maintained by authorized users. That is, if the current user of the device is not an authorized user, it is necessary to cut off the connection between the devices or restrict the authority of the unauthorized user. For the user identity information, when the user identity information meets the fifth preset connection rule, the fifth preset prompt information is obtained. Meeting the fifth preset connection rule means that the user identity information is an unauthorized user. The fifth preset prompt information is to prompt the user that the connection between the devices is about to be disconnected or to prompt the user to switch the connection relationship between the devices to the guest mode (that is, to restrict permissions). For the detection of user identity information, it can be detected through user physiological parameters (such as heart rate, etc.), biological information (such as face information, iris information, etc.).

In an embodiment, the user of the device will develop certain habits after using the device deeply. For example, if the user is used to not using the watch at all while using the mobile phone, the watch can be disconnected from the network after detecting that the user is using the mobile phone. For another example, if the user no longer uses the TV after 11:00 pm, the connection to the TV in the network is disconnected at 11:00 pm. For the use habit information, when the use habit information meets the sixth preset connection rule, the sixth preset prompt information is acquired. Meeting the sixth preset connection rule means that the preset information meets the preset requirements (that is, the above-mentioned user is using a mobile phone or the current time is 11:00 p.m.). The sixth preset prompt information is to prompt the user that the connection of the corresponding device in the connection network is about to be disconnected.

For the convenience of the user, sometimes the user needs to be reminded when the connection between the devices is about to be disconnected, and sometimes the user does not need to be reminded when the connection between the devices is about to be disconnected. For the device type information, when the device type information meets the seventh preset connection rule, the seventh preset prompt information is acquired. Meeting the seventh preset connection rule means that the device type information is a preset device type and the device is disconnected from the connection network, and the seventh preset prompt information is to prompt the user to disconnect the device from the connection network. For example, when the mobile phone is disconnected from the vehicle-mounted terminal due to the user leaving the vehicle, the disconnection is predictable by the user, and there is no need to prompt the user. When the mobile phone is disconnected from the earphone, there is a problem with the connection, and the disconnection is unpredictable to the user, so the user needs to be prompted.

In an embodiment, in order to ensure that the user receives the preset prompt information of device disconnection in a timely manner, the output device of the preset prompt information can be determined according to the connection state information of the device. For example, when the earphone is disconnected, the connection state of the mobile phone is not connected and the connection state of the watch is connected, then the preset prompt information is output for the connected watch through the connection state. For the connection state information, when the connection state information meets the eighth preset connection rule, the eighth preset prompt information is acquired. If the eighth preset connection rule is met, the connection state information of the device is connected, and the eighth preset prompt information is to prompt the user device to disconnect from the connection network.

Since the preset reminder information is generally output by the screen of the device, in order to facilitate the user to use the device, it is not necessary to output the preset reminder information through the device that is inconvenient to output the preset reminder information through the device screen. For example, if the user is playing a game with a mobile phone, the preset prompt information will be output through the watch. In addition, when the screen of the device is convenient for outputting preset prompt information, and when the user is using the device, the preset prompt information is only output through the device, and the preset prompt information is not output through other devices. For the use state information, when the use state information meets the ninth preset connection rule, the ninth preset prompt information is acquired. Meeting the ninth preset connection rule is that the use state information of the device is convenient for receiving preset prompt information on the screen of the device, and the ninth preset prompt information is to prompt the user to disconnect the device from the connection network.

In an embodiment, in order to avoid disturbing the user when the preset prompt information is output, for example, the user is sleeping, it is not necessary to prompt the user to disconnect the device from the connection network. For the environment information, when the environment information meets the tenth preset connection rule, the tenth preset prompt information is obtained. Meeting the tenth preset connection rule means that the environment information meets the condition for outputting preset prompt information to the user (for example, the user is not sleeping), and the tenth preset prompt information is to prompt the user to disconnect the device from the connection network.

Operation J20, outputting the preset prompt information according to the preset prompt strategy.

In an embodiment, the preset prompt information is output according to the preset prompt strategy. Different preset prompt information is output through different or the same preset prompt strategy. The preset prompt strategy may include setting the output duration of the preset prompt information, setting the output mode of the preset prompt information, and the like.

In an embodiment, the method also includes:
outputting first preset prompt information according to the first preset prompt strategy;
outputting second preset prompt information according to the second preset prompt strategy;
outputting third preset prompt information according to the third preset prompt strategy;
outputting fourth preset prompt information according to the fourth preset prompt strategy;
outputting fifth preset prompt information according to the fifth preset prompt strategy;
outputting sixth preset prompt information according to the sixth preset prompt strategy;
outputting seventh preset prompt information according to the seventh preset prompt strategy;
outputting eighth preset prompt information according to the eighth preset prompt strategy;
outputting ninth preset prompt information according to the ninth preset prompt strategy;
outputting tenth preset prompt information according to the tenth preset prompt strategy.

In an embodiment, the method includes: outputting first preset prompt information according to the first preset prompt strategy; outputting second preset prompt information according to the second preset prompt strategy; outputting third preset prompt information according to the third preset prompt strategy; outputting fourth preset prompt information according to the fourth preset prompt strategy; outputting fifth preset prompt information according to the fifth preset prompt strategy; outputting sixth preset prompt information according to the sixth preset prompt strategy; outputting seventh preset prompt information according to the seventh preset prompt strategy; outputting eighth preset prompt information according to the eighth preset prompt strategy; outputting ninth preset prompt information according to the ninth preset prompt strategy; outputting tenth preset prompt information according to the tenth preset prompt strategy. The preset prompt strategies can be the same or different.

In an embodiment, the method includes:
if the device in the connection network is not used, obtaining the third preset connection information, and determining the preset prompt strategy according to the third preset connection information.

In an embodiment, if the device in the connection network is in an unused state, the third preset connection information is acquired and the preset prompt strategy is determined according to the preset connection information.

In an embodiment, the third preset connection information includes at least one of the following:
use frequency information, use habit information, and use information.

In an embodiment, the third preset connection information includes at least one of the use frequency information, the use habit information, and the use information.

For the use frequency information, it can be calculated by the number of times the device is used within a certain period of time. For the use habit information, different devices can be classified according to different filtering rules, for example, different devices can be classified according to the time period of use. For the use state information, it is the specific use state of each device, for example, the last historical usage time of each device.

In an embodiment, the preset prompt strategy includes one of the following:
outputting the preset prompt information on the device whose use frequency information meets the preset use frequency requirements;
outputting the preset prompt information on the device whose use habit information meets the preset use habit requirements;
outputting the preset prompt information on the device whose use information meets the preset use requirements.

In an embodiment, the preset prompt information is output on the device whose usage frequency information meets the preset use frequency requirements. Meeting the preset use frequency requirements means that the frequency of use is greater than or equal to the frequency threshold, or that the frequency of use is sorted in descending order and the device with the highest frequency of use is regarded as the device that meets the preset use frequency requirements. The preset prompt information is output on the device whose use habit information meets the preset use habit requirements. The device that meets the requirements of the preset use habits is to select the device corresponding to the current time according to the mapping relationship between the time period and the device. The preset prompt information is output on the device whose use information meets preset use requirements. The device that meets the preset use habit requirements is the device that was used by the user last time (that is, the last use time in history is the shortest).

In an embodiment, the preset prompt strategy further includes one of the following:
when detecting the use of a device in the connection network, outputting the preset prompt information on the device, and notifying other devices in the connection network except the device to cancel the output of the preset prompt information;
broadcasting the preset prompt information to devices in the connection network;
outputting the preset prompt information to the device currently in use.

In an embodiment, the preset prompt strategy includes at least one of: when detecting the use of a device in the connection network, outputting the preset prompt information on the device, and notifying other devices in the connection network except the device to cancel the output of the preset prompt information; broadcasting the preset prompt information to devices in the connection network; outputting the preset prompt information to the device currently in use.

When detecting the use of a device within the connection network, the preset prompt information is output on the device, and other devices in the connection network other than the device are notified to cancel the output of preset prompt information. It can be understood that notification through the device being used by the user can improve the user's efficiency in obtaining the preset prompt information, and canceling the output of other devices avoids repeated reminders.

For broadcasting the preset prompt information to devices in the connection network, broadcasting the preset prompt information means outputting the preset prompt information to any device in the connection network.

For outputting the preset prompt information to the device currently in use, the device is not limited to devices connected to the network. For a device not in the connection network, the preset prompt information can be transmitted to the device currently in use through the device in the connection network.

In an embodiment, the manner of determining the device currently in use includes at least one of the following:
the device is on or awake, has apps and services running on the device, and is not powered off or asleep.

In an embodiment, the manner of determining the device currently in use includes at least one of the device being in a lighted or awake state, applications and services running on the device, and the device not being powered off or sleeping. If the device is on, it means that the screen of the device is on; if the device is awake, it means that the system of the device is awake.

In an embodiment, the preset prompt information includes at least one of the following:
text information, voice information, light information and vibration information.

In an embodiment, the preset prompt information includes at least one of text information, voice information, light information and vibration information.

In an embodiment, the text information can be output through a pop-up window on the screen of the device, such as outputting text information through the screen of a mobile phone. Specifically, the display duration of the pop-up window can also be set, such as automatically closing after 0.5 seconds of display. The voice information can be output through the speaker of the device. The light information can be output through the flash of the device. The preset flash mode can be to flash once at a fixed interval and to flash continuously for a period of time. If the user unlocks the lighting information output device at this time, the preset prompt information can be output to the user by outputting text information or outputting voice information. The vibration information can be output through the vibration function of the device. The preset vibration mode can be to vibrate once at a fixed interval, and vibrate continuously for a period of time. If the user unlocks the light information output device at this time, preset prompt information can be output to the user by outputting text information or outputting voice information.

In this embodiment, the processing method includes: when the first preset connection information of the connection network meets the preset connection rule and/or when the second preset connection information of the connection network meets the preset connection condition, obtaining the preset prompt information; outputting the preset prompt information according to a preset prompt strategy. Setting certain restrictions as the requirements for obtaining preset prompt information, and outputting preset prompt information according to the preset prompt strategy make it more intelligent, convenient and faster for users to obtain the message that the device is disconnected from the connection network where it is located.

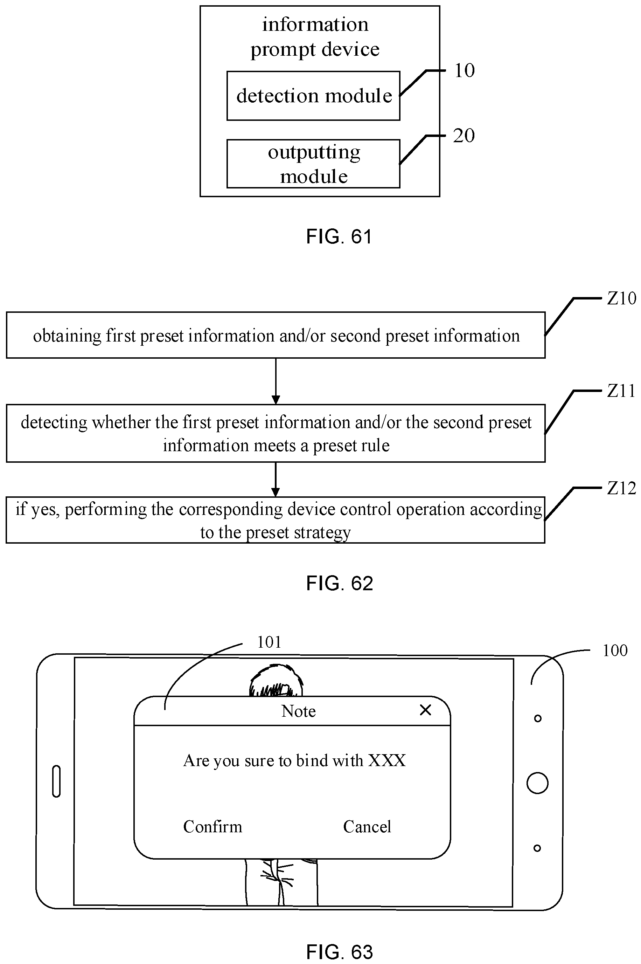

In an embodiment, the present application further provides a processing device. As shown in FIG. 61, the processing device includes:
a detection module 10, configured to detect whether a preset event occurs;
the detection module 10 is further configured to detect whether the device corresponding to the preset event meets a preset condition;
an output module 20, configured to output prompt information corresponding to the preset event according to a prompt strategy when the device corresponding to the preset event meets the preset condition.

In an embodiment, the processing device also includes:
a receiving module, configured to receive operation information for the operation option, and update and/or transmit and/or output the preset event according to the operation information.

In an embodiment, the present application further provides a processing device, including:
a detection module, configured to detect whether a preset event occurs;
an obtaining module, configured to obtain the prompt strategy when the preset event occurs;
an output module, configured to output prompt information corresponding to the preset event according to the prompt strategy.

In an embodiment, the processing device further includes:
a receiving module, configured to receive operation information for the operation option, and update and/or transmit and/or output the preset event according to the operation information.

In an embodiment, the present application further provides a processing device, including:
an obtaining module, configured to obtain preset prompt information when the first preset connection information of the connection network meets the preset connection rules and/or when the second preset connection information of the connection network meets the preset connection conditions;
an output module, configured to output the preset prompt information according to a preset prompt strategy.

In an embodiment, the obtaining module is further configured to obtain third preset connection information and determine the preset prompt strategy according to the third preset connection information if the device in the connection network is not used.

An embodiment of the processing method of the present application is proposed. Referring to FIG. 62, FIG. 62 is a schematic flowchart of the processing method according to an embodiment of the present application.

The embodiment of the present application provides the processing method. Although a logical order is shown in the flowcharts, in some cases the steps shown or described may be performed in an order different from that shown or described herein. The processing method can be applied to the first control center, which includes but not limited to personal computers and smart phones. For the convenience of description, the following steps are omitted to describe the processing method of the execution subject, and the processing method includes:
Z10, obtaining first preset information and/or second preset information.

In an embodiment, the first preset information and/or the second preset information is acquired.

In an embodiment, the first preset information is provided by the first control center and/or other devices controlled by the first control center.

In an embodiment, the first preset information is provided by the first control center and/or other devices controlled by the first control center.

In an embodiment, the first control center and other devices controlled by the first control center are in a network. The first control center and other devices controlled by the first control center can be terminal devices (such as mobile phones, PAD, tablet computers), etc.), wearable smart devices (such as smart watches, smart bracelets, smart earphones, etc.), smart home devices (such as smart TVs, smart speakers, etc.), Internet of Vehicles devices (such as smart cars, vehicle terminals, etc.). The networking is maintained by establishing a connection relationship between each device.

In an embodiment, the second preset information is provided by the second control center and/or other devices controlled by the second control center.

In an embodiment, the second preset information is provided by the second control center and/or other devices controlled by the second control center. The second control center and other devices controlled by the second control center can be in a network (it can be the same network as the first control center, or can be different). The second control center and other devices controlled by the second control center can be terminal devices (such as mobile phones, PAD, tablet computers), etc.), wearable smart devices (such as smart watches, smart bracelets, smart earphones, etc.), smart home devices (such as smart TVs, smart speakers, etc.), Internet of Vehicles devices (such as smart cars, vehicle terminals, etc.). The networking is maintained by establishing a connection relationship between each device.

In an embodiment, both the first control center and the second control center are directly or indirectly connected to at least one third device.

In an embodiment, both the first control center and the second control center are directly or indirectly connected to at least one third device. It can be understood that the third device can interact with the first control center and/or the second control center. Direct connection establishes a direct connection between devices. The indirect connection means that there is no connection between the devices, but the two devices that have not established the connection establish a connection with another device at the same time, that is, the two devices that have not established the connection can exchange data through the other device.

Both the first control center and the second control center are bound to at least one fourth device.

In an embodiment, both the first control center and the second control center are bound to at least one fourth device. The binding can be understood as that only devices that have established a binding relationship can implement the interaction function corresponding to the binding. For example, the watch can only be indirectly operated through the mobile phone after the mobile phone is bound to the watch. When not bound, the mobile phone and the watch can only perform simple data interaction, such as the watch transmitting the detected health data to the mobile phone. Referring to FIG. 63, 100 is a mobile phone, and 101 is a pop-up box output by the mobile phone 100.

If the first control center detects that once the connection between the second control center and the fourth device is established, the control functions and/or relevant data on the first control center are transferred or copied to the second control center according to the binding switching strategy.

In an embodiment, if the first control center detects that once the connection between the second control center and the fourth device is established, the control functions and/or relevant data on the first control center are transferred or copied to the second control center according to the binding switching strategy. It can be understood that before the second control center establishes a connection with the fourth device, the first control center is in a connected state with the fourth device, after the connection between the second control center and the fourth device is established, the user tends to control the fourth device through the second control center. The control function is used to control the fourth device. The relevant data is related to the control function, including the data generated by the first control center when performing the control function and the data necessary to perform the control function as the control center (such as the device names of other devices controlled by the control center, etc.).

In an embodiment, the binding switching strategy includes at least one of the following:
only transferring or duplicating the control functions on the first control center to the second control center immediately or with a delay or timing;
only transferring or duplicating the relevant data on the first control center to the second control center immediately or with a delay or timing;
transferring or duplicating the control functions and/or relevant data on the first control center to the second control center immediately or with a delay or timing;
outputting the prompt information at the first control center and/or the second control center, determining whether to transfer duplicate the control functions and/or relevant data on the first control center to the second control center immediately or with a delay or timing according to user operations.

In an embodiment, the binding switching strategy includes at least one of only transferring or duplicating the control functions on the first control center to the second control center immediately or with a delay or timing; only transferring or duplicating the relevant data on the first control center to the second control center immediately or with a delay or timing; transferring or duplicating the control functions and/or relevant data on the first control center to the second control center immediately or with a delay or timing; outputting the prompt information at the first control center and/or the second control center, determining whether to transfer duplicate the control functions and/or relevant data on the first control center to the second control center immediately or with a delay or timing according to user operations.

In an embodiment, immediately means that the second control center completes the above process when it establishes a connection with the fourth device (such as transferring or duplicating the control function on the first control center to the second control center); delay refers to the completion of the above process after a certain period of time after the second control center establishes a connection with the fourth device (such as transferring or duplicating the control function on the first control center to the second control center); timing refers to completing the above process (such as transferring or duplicating the control function on the first control center to the second control center) at a certain moment (for example, 4:00 p.m.) after the second control center establishes a connection with the fourth device.

In an embodiment, the prompt information includes prompting the user whether to confirm switching of the control center, prompting the user whether to accept the switching of the control center, and the like.

After the first control center transfers or duplicates control functions and/or relevant data to the second control center, the first control center is disconnected from the fourth device or maintains a normal connection state in a non-control mode (e.g., similar to two devices with equal state).

In an embodiment, after the first control center transfers or duplicates the control function and/or relevant data to the second control center, the first control center disconnects from the fourth device or maintains a normal connection state in a non-control mode. For the non-control mode, that is, the first control center no longer has the ability to control the fourth device, and the control ability is received by the second control center, but the first control center still maintains a state of establishing a connection with the fourth device for data interaction, and the first control center is not controlled by the second control center.

In an embodiment, the first control center and the second control center may be the same device or different devices.

In an embodiment, if the first control center and the second control center are different devices, and if only one effective control center is allowed in the connection network at the same time, then the currently valid control center can be determined according to the control center determination strategy.

The first control center and the second control center may be the same device or different devices. If the first control center and the second control center are different devices, and only one effective control center is allowed in the connection network (i.e. networking), the currently effective control center can be determined according to the control center determination strategy. If the first control center and the second control center are different devices, and multiple effective control centers are allowed in the connection network at the same time. That is, both the first control center and the second control center can control the fourth device, and there is no need to determine the currently effective control center.

In an embodiment, the control center determination strategy includes at least one of the following:
same as the user's last selection;
selecting the first control center or the second control center by default;
setting the target control center as the one with the most successes or the least failures within a certain period of time (such as the past week, or the past month, or within a complete historical period);
selecting one at random;
the one that is most convenient (such as being used) according to the user use habits or operation;
at least one of network rate information, state information, environment information, use information, distance information, and user physiological information meets the requirements (if multiple devices meet the requirements at the same time, they can also be sorted according to the corresponding parameter values, and the largest one is preferred).

In an embodiment, the control center determination strategy includes at least one of same as the user's last selection; selecting the first control center or the second control center by default; setting the target control center as the one with the most successes or the least failures within a certain period of time; selecting one at random; the one that is most convenient according to the user use habits or operation; at least one of network rate information, state information, environment information, use information, distance information, and user physiological information meets the requirements.

In an embodiment, for the same as the user's last selection, that is, if the control center used by the user last time is the first control center, the first control center is taken as the effective control center.

In an embodiment, for the control center used last time by the user, the second control center is used as the effective control center.

For the default selection of the first control center or the second control center, the first control center or the second control center is determined to be the effective control center by user or system preset.

For the one set as the target control center with the most successes or the fewest failures over a period of time, it is determined that the first control center and the second control center have the highest success frequency or the lowest failure frequency when they are set as target control centers within a period of time as the effective control center.

For randomly selecting one, no judgment process is required, and the first control center or the second control center is randomly determined as the effective control center.

For the one that is most convenient according to the user's use habits or operations, if the user is accustomed to using the first control center, the first control center will be regarded as an effective control center; if the user is accustomed to using the second control center, the second control center will be regarded as an effective control center; or, if the user uses the first control center for the most convenient operation, the first control center will be used as the effective control center, and when the user uses the second control center for the most convenient operation, the second control center will be used as the effective control center.
Z11, detecting whether the first preset information and/or the second preset information meets a preset rule;
Z12, when the first preset information and/or the second preset information meets the preset rule, performing the corresponding device control operation according to the preset strategy.

In an embodiment, the purpose of performing the corresponding device control operation according to the preset strategy may be to transfer or migrate or copy or backup the relevant data and/or the control function of the first control center, or to output prompts and the like.

In an embodiment, the first preset information and/or the second preset information includes at least one of the following:
connection information including at least one of the following: connection state information, and network rate information;
state information including at least one of the following: device state information, power information, and storage space information;
environment information including at least one of the following: external environment information, and use environment information;
use information including at least one of the following: traffic information, use habit information, and currently used application information;
distance information; and
user physiological information.

In an embodiment, the operation Z11 includes at least one of the following:
detecting whether the connection state information meets a first preset rule;
detecting whether the network rate information meets a second preset rule;
detecting whether the device state information meets a third preset rule;
detecting whether the power information meets a fourth preset rule;
detecting whether the storage space information meets a fifth preset rule;
detecting whether the external environment information meets a sixth preset rule;
detecting whether the use environment information meets a seventh preset rule;
detecting whether the traffic information meets an eighth preset rule;
detecting whether the use habit information meets a ninth preset rule;
detecting whether the currently used application information meets a tenth preset rule;
detecting whether the distance information meets an eleventh preset rule; and
detecting whether the user physiological information meets a twelfth preset rule.

In an embodiment, the operation Z12 includes at least one of the following:
in response that the connection state information meets the first preset rule, performing the corresponding device control operation according to a first preset strategy;
in response that the network rate information meets the second preset rule, performing the corresponding device control operation according to a second preset strategy;
in response that the device state information meets the third preset rule, performing the corresponding device control operation according to a third preset strategy;
in response that the power information meets the fourth preset rule, performing the corresponding device control operation according to a fourth preset strategy;
in response that the storage space information meets the fifth preset rule, performing the corresponding device control operation according to a fifth preset strategy;
in response that the external environment information meets the sixth preset rule, performing the corresponding device control operation according to a sixth preset strategy;
in response that the use environment information meets the seventh preset rule, performing the corresponding device control operation according to a seventh preset strategy;
in response that the traffic information meets the eighth preset rule, performing the corresponding device control operation according to an eighth preset strategy;
in response that the use habit information meets the ninth preset rule, performing the corresponding device control operation according to a ninth preset strategy;
in response that the currently used application information meets the tenth preset rule, performing the corresponding device control operation according to a tenth preset strategy;
in response that the distance information meets the eleventh preset rule, performing the corresponding device control operation according to an eleventh preset strategy; and
in response that the user physiological information meets the twelfth preset rule, performing the corresponding device control operation according to a twelfth preset strategy.

In an embodiment, the processing method further includes:
the performing the corresponding device control operation includes:
in response that the preset information does not meet the first preset rule, the second preset rule, the third preset rule, the fourth preset rule, the fifth preset rule, the sixth preset rule, the seventh preset rule, the eighth preset rule, the ninth preset rule, the tenth preset rule, the eleventh preset rule, or the twelfth preset rule, setting the corresponding device as a second control center. The corresponding device is one of the devices controlled by the first control center.

In an embodiment, the second control center may be at least one of the following:
at least one of the other devices controlled by the first control center;
the device with the least number of connections among other devices controlled by the first control center;
the device with the smoothest connection state or the least number of disconnections among other devices controlled by the first control center;
the device with the best network rate among other devices controlled by the first control center;
the device with the largest number of CPUs or the highest frequency among other devices controlled by the first control center;
the device with the largest number or highest frequency of GPUs among other devices controlled by the first control center;
the device with the largest number or highest frequency of NPUs among other devices controlled by the first control center;
the device with the largest memory capacity or the fastest processing speed among other devices controlled by first the control center;
the device with the shortest response time among other devices controlled by the first control center;
the device in a charging or non-charging state among other devices controlled by the first control center;
the device in motion or non-motion among other devices controlled by the first control center;
the device in a non-stuck state among other devices controlled by the first control center;
the device with the most remaining power among other devices controlled by the first control center;
the device with the largest battery capacity among other devices controlled by the first control center;
the device with the longest available time corresponding to the power in other devices controlled by the first control center;
the device with the largest remaining storage space among other devices controlled by the first control center;
the device with the fastest access to storage space in other devices controlled by the first control center;
the device that meets the time limit conditions among other devices controlled by the first control center;
the device that meets geographical restrictions among other devices controlled by the first control center;
one of the devices that are convenient to use in the user's environment among other devices controlled by the first control center;
the device with the most remaining traffic among other devices controlled by the first control center;
one of the other devices controlled by the first control center that meets the user's use habits;
one of the other devices controlled by the first control center that meets the use habits of the user in the environment;
one of the other devices controlled by the first control center that is not currently running video applications or game applications or other preset applications;
one of the other devices controlled by the first control center that is not currently in a call or video chat or conference call or other preset use state;
one of the devices currently closest to the user among other devices controlled by the first control center;
one of the devices with the shortest total distance to other devices among other devices controlled by the first control center;
one of the devices that is conveniently obtained by the current user among other devices controlled by the first control center;
one of the other devices controlled by the first control center whose current mode meets the requirements, the current mode meeting the requirements includes at least one of the following: the current mode is smart mode, the current mode is linkage mode, the current mode is control mode, the current mode is power saving mode, and the current mode is normal mode.

In an embodiment, the processing method further includes:
the operation of performing the corresponding device control operation includes:
migrating the relevant data in the first control center to the second control center; and/or
transferring the control function of the first control center to the second control center.

In an embodiment, the relevant data includes at least one of the following:
connection information data, setting item parameter data and relevant download data.

In an embodiment, the relevant data further includes at least one first relevant data and/or at least one second relevant data, the operation of migrating or transferring or duplicating or backing up relevant data in the first control center to the second control center includes at least one of the following:
only backing up or transferring the first relevant data in the first control center to the second control center;
only backing up or transferring second relevant data corresponding to the first relevant data in the first control center to the second control center;
in addition to backing up or transferring the first relevant data in the first control center to the second control center, also backing up or transferring the second relevant data corresponding to the first relevant data to the second control center;
backing up or transferring the first relevant data and corresponding update data in the first control center to the second control center;
backing up or transferring the second relevant data corresponding to the first relevant data and the corresponding update data in the first control center to the second control center; and
backing up or transferring the first relevant data and the corresponding update data in the first control center, and the update data of the second relevant data corresponding to the first relevant data to the second control center.

In an embodiment, a method for migrating the relevant data includes at least one of the following:
synchronous, asynchronous, real-time, appointment time, according to user settings, according to user habits, same selection or setting as last time.

In an embodiment, the processing method further includes:
before migrating or transferring or duplicating or backing up the control function of the first control center to the second control center, obtaining first corresponding information related to the second control center; and
processing the first corresponding information.

In an embodiment, the processing the first corresponding information includes at least one of the following:
in response that the first corresponding information meets a first preset condition, performing the operation of transferring the control function of the first control center to the second control center; and
in response that the first corresponding information does not meet the first preset condition, not performing the operation of transferring the control function of the first control center to the second control center, and/or outputting prompt information at the first control center and/or the second control center.

In an embodiment, the first corresponding information includes a first instruction information input on the second control center, and at least one of the connection state information, the network rate information, the device state information, the power information, the storage space information, the external environment information, the use environment information, the traffic information, the use habit information, the currently used application information, the distance information and the user physiological information of the second control center, the meeting the first preset condition includes at least one of the following:
in response that the first instruction information is biometric information, and the biometric information meets preset biometric information, meeting the first preset condition;
in response that the first instruction information is password information, and the password information meets preset password information, meeting the first preset condition; and
in response that at least one of the connection state information, the network rate information, the device state information, the power information, the storage space information, the external environment information, the use environment information, the traffic information, the use habit information, the currently used application information, the distance information and the user physiological information of the second control center meets a second preset condition, meeting the first preset condition.

In an embodiment, the processing method further includes
after migrating or transferring or duplicating or backing up the control function of the first control center to the second control center, receiving second instruction information sent by other devices controlled by the second control center, the second instruction information is input by the user on other devices controlled by the second control center; and
responding to the second instruction information.

In an embodiment, the processing method further includes:
after migrating or transferring or duplicating or backing up the control function of the first control center to the second control center, outputting relevant prompt information at the first control center and/or the second control center.

In an embodiment, before the operation Z20, the method includes:
determining whether it is a preset mode;
performing the operation Z10 when it is in the preset mode.

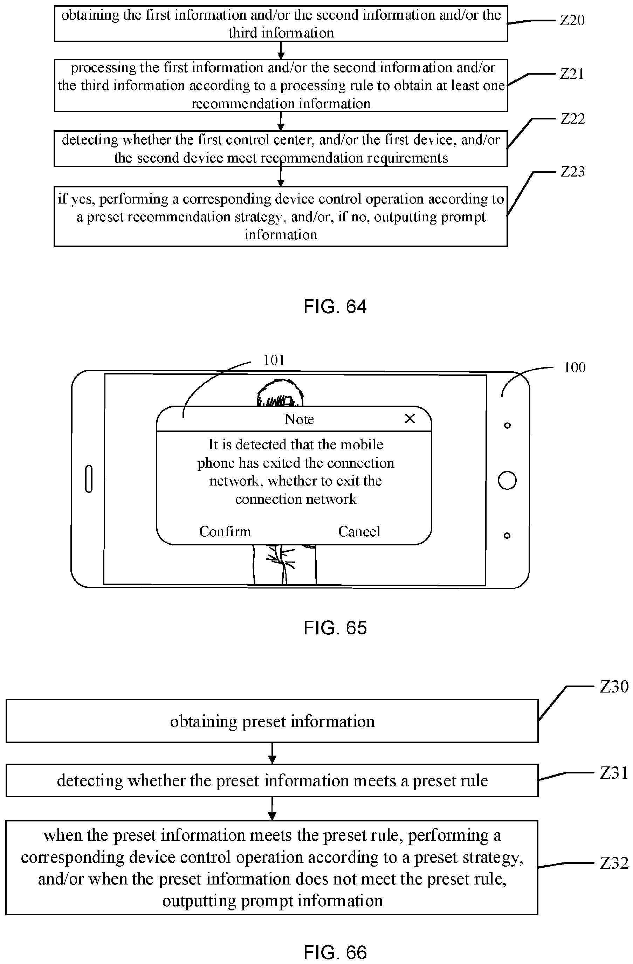

Another embodiment of the processing method of the present application is proposed. Referring to FIG. 64, FIG. 64 is a schematic flowchart of the processing method according to another embodiment of the present application.

The embodiment of the present application provides the processing method. Although a logical order is shown in the flowcharts, in some cases the steps shown or described may be performed in an order different from that shown or described herein. The processing method can be applied to terminal devices, including but not limited to personal computers and smart phones. For the convenience of description, the following steps are omitted to describe the processing method of the execution subject, and the processing method includes:
Operation Z20, obtaining the first information and/or the second information and/or the third information. The first information is provided by at least one first device directly connected to the first control center, the second information is provided by at least one second device indirectly connected to the first control center, and the third information is provided by a web server connected to at least one of the first control center, the first device and the second device.

In an embodiment, the first information and/or the second information and/or the third information is obtained. The first information is provided by at least one first device directly connected to the first control center, the second information is provided by at least one second device indirectly connected to the first control center, and the third information is provided by a web server connected to at least one of the first control center, the first device and the second device.

In an embodiment, the first control center, the first device and the second device are in a network. The first control center, the first device and the second device can be terminal devices (such as mobile phone, PAD, tablet computer) etc.), wearable smart devices (such as smart watches, smart bracelets, smart headphones, etc.), smart home devices (such as smart TVs, smart speakers, etc.), car networking devices (such as smart cars, vehicle terminals, etc.). The networking is maintained by establishing a connection relationship between each device.

In an embodiment, the direct connection is directly establishing a connection between devices; the indirect connection means that there is no connection between the devices, but the two devices that have not established the connection establish a connection with another device at the same time, that is, the two devices that have not established the connection can exchange data through the other device.

In an embodiment, the network server provides network services to the first control center, the first device and the second device, for example, the first control center searches for data required in the process of performing the control function through a search engine.

Operation Z21, processing the first information and/or the second information and/or the third information according to a processing rule to obtain at least one recommendation information. The recommendation information includes at least one first recommendation information, and/or at least one second recommendation information, and/or at least one third recommendation information.

In an embodiment, the first information and/or the second information and/or the third information is processed according to a processing rule to obtain at least one recommendation information. The recommendation information includes at least one first recommendation information, and/or at least one second recommendation information, and/or at least one third recommendation information.

In an embodiment, the operation Z21 includes at least one of the following:
processing the first information according to a first processing rule to obtain at least one first recommendation information;
processing the second information according to a second processing rule to obtain at least one second recommendation information;
processing the third information according to a third processing rule to obtain at least one third recommendation information;
processing at least two of the first information, the second information and the third information according to a fourth processing rule to obtain at least one third recommendation information.

In an embodiment, the first information and/or the second information and/or the third information is processed according to the processing rule to obtain at least one recommendation information. The processing the first information and/or the second information and/or the third information according to the processing rule to obtain at least one recommendation information includes at least one of processing the first information according to the first processing rule to obtain at least one first recommendation information; processing the second information according to the second processing rule to obtain at least one second recommendation information; processing the third information according to the third processing rule to obtain at least one third recommendation information; processing at least two of the first information, the second information and the third information according to the fourth processing rule to obtain at least one third recommendation information.

In an embodiment, the first processing rule and/or the second processing rule and/or the third processing rule and/or the fourth processing rule include at least one of the following:
obtaining corresponding recommendation information based on local and/or network data analysis or artificial intelligence algorithms;
extracting information keywords and/or corresponding parameter values, and obtaining corresponding recommendation information according to preset keyword and/or parameter value recommendation strategies;
determining corresponding recommendation information according to user habits or settings or selections.

In an embodiment, the first processing rule and/or the second processing rule and/or the third processing rule and/or the fourth processing rule include at least one of: obtaining corresponding recommendation information based on local and/or network data analysis or artificial intelligence algorithms; extracting information keywords and/or corresponding parameter values, and obtaining corresponding recommendation information according to preset keyword and/or parameter value recommendation strategies; determining corresponding recommendation information according to user habits or settings or selections.

In an embodiment, local or network data (including first information, second information and/or third information) is processed through data analysis or artificial intelligence algorithms to obtain corresponding recommendation information. It can be understood that the recommendation information is to select a matching scheme from a large number of matching schemes. Generally, the matching scheme is recommendation information with the highest matching degree with the first information, the second information and/or the third information.

Operation Z22, detecting whether the first control center, and/or the first device, and/or the second device meet the recommendation requirements;

Operation Z23, if yes, performing corresponding device control operations according to the preset recommendation strategy, and/or if no, outputting prompt information.

In an embodiment, it is detected whether the first control center, and/or the first device, and/or the second device meet the recommendation requirements; if yes, performing corresponding device control operations according to the preset recommendation strategy, and/or if no, outputting prompt information.

In an embodiment, the first information and/or the second information includes at least one of the following:
connection information including at least one of the following: connection state information, and network rate information;
state information including at least one of the following: device state information, power information, and storage space information;
environment information including at least one of the following: external environment information, and use environment information;
use information including at least one of the following: traffic information, use habit information, and currently used application information;
distance information;
user physiological information; and
device identification information.

In an embodiment, the first information and/or the second information includes at least one of: connection information including at least one of the following: connection state information, and network rate information; state information including at least one of the following: device state information, power information, and storage space information; environment information including at least one of the following: external environment information, and use environment information; use information including at least one of the following: traffic information, use habit information, and currently used application information; distance information; user physiological information; and device identification information.

In an embodiment, the operation of detecting whether the first control center, and/or the first device, and/or the second device meets recommendation requirements includes:
detecting whether the first control center, and/or the first device, and/or the second device meets the first preset rule, the second preset rule, the third preset rule, the fourth preset rule, the fifth preset rule, the sixth preset rule, the seventh preset rule, the eighth preset rule, the ninth preset rule, the tenth preset rule, or the eleventh preset rule.

In an embodiment, the operation of detecting whether the first control center, and/or the first device, and/or the second device meets recommendation requirements includes detecting whether the first control center, and/or the first device, and/or the second device meets the first preset rule, the second preset rule, the third preset rule, the fourth preset rule, the fifth preset rule, the sixth preset rule, the seventh preset rule, the eighth preset rule, the ninth preset rule, the tenth preset rule, or the eleventh preset rule.

In an embodiment, the performing the corresponding device control operation includes:
setting at least one of the first control center, the first device and/or the second device meeting the first preset rule, the second preset rule, the third preset rule, the fourth preset rule, the fifth preset rule, the sixth preset rule, the seventh preset rule, the eighth preset rule, the ninth preset rule, the tenth preset rule, or the eleventh preset rule as the recommendation information output device, and/or outputting corresponding recommendation information to at least one of the first control center, the first device and/or the second device.

In an embodiment, the performing the corresponding device control operation is that setting at least one of the first control center, the first device and/or the second device meeting the first preset rule, the second preset rule, the third preset rule, the fourth preset rule, the fifth preset rule, the sixth preset rule, the seventh preset rule, the eighth preset rule, the ninth preset rule, the tenth preset rule, or the eleventh preset rule as the recommendation information output device; and/or outputting the corresponding recommendation information to the first control center, the first device and/or the second device meeting the first preset rule, the second preset rule, the third preset rule, the fourth preset rule, the fifth preset rule, the sixth preset rule, the seventh preset rule, the eighth preset rule, the ninth preset rule, the tenth preset rule, or the eleventh preset rule.

In an embodiment, the operation Z23 includes at least one of the following:
if the connection state information meets a first preset rule, performing a corresponding device control operation according to a first preset strategy;
if the network rate information meets a second preset rule, performing a corresponding device control operation according to a second preset strategy;
if the device state information meets a third preset rule, performing a corresponding device control operation according to a third preset strategy;
if the power information meets a fourth preset rule, performing a corresponding device control operation according to a fourth preset strategy;
if the storage space information meets the fifth preset rule, performing a corresponding device control operation according to the fifth preset strategy;
if the external environment information meets the sixth preset rule, performing a corresponding device control operation according to the sixth preset strategy;
if the use environment information meets the seventh preset rule, performing a corresponding device control operation according to the seventh preset strategy;
if the traffic information meets the eighth preset rule, performing a corresponding device control operation according to the eighth preset strategy;
if the use habit information meets the ninth preset rule, performing a corresponding device control operation according to the ninth preset strategy;
if the currently used application information meets the tenth preset rule, performing a corresponding device control operation according to the tenth preset strategy;
if the distance information meets the eleventh preset rule, performing a corresponding device control operation according to the eleventh preset strategy;
if the user physiological information meets the twelfth preset rule, performing a corresponding device control operation according to the twelfth preset strategy.
in an embodiment, the operation of if yes, performing the corresponding device control operations according to the preset recommendation strategy includes at least one of: if the connection state information meets a first preset rule, performing a corresponding device control operation according to a first preset strategy; if the network rate information meets a second preset rule, performing a corresponding device control operation according to a second preset strategy; if the device state information meets a third preset rule, performing a corresponding device control operation according to a third preset strategy; if the power information meets a fourth preset rule, performing a corresponding device control operation according to a fourth preset strategy; if the storage space information meets the fifth preset rule, performing a corresponding device control operation according to the fifth preset strategy; if the external environment information meets the sixth preset rule, performing a corresponding device control operation according to the sixth preset strategy; if the use environment information meets the seventh preset rule, performing a corresponding device control operation according to the seventh preset strategy; if the traffic information meets the eighth preset rule, performing a corresponding device control operation according to the eighth preset strategy; if the use habit information meets the ninth preset rule, performing a corresponding device control operation according to the ninth preset strategy; if the currently used application information meets the tenth preset rule, performing a corresponding device control operation according to the tenth preset strategy; if the distance information meets the eleventh preset rule, performing a corresponding device control operation according to the eleventh preset strategy; if the user physiological information meets the twelfth preset rule, performing a corresponding device control operation according to the twelfth preset strategy.

In an embodiment, for the connection state information, there are cases where devices are added and devices are withdrawn from the connection network. When the device exits, corresponding processing can be made. For example, when the mobile phone is disconnected from the network, according to local and/or network data analysis, after the mobile phone disconnects from the network, the user will no longer use the device connected to the network, then the recommendation information is that all the devices in the connection network exit the connection network, and at this time, it is determined whether all the devices are in an idle state, and if all the devices are in the idle state, all the devices meet the first preset rule. Referring to FIG. 65, 100 is a tablet computer, and 101 is a pop-up box output by the tablet computer.

In an embodiment, for the network rate information, when the device exchanges data with the Internet, the rate of data exchange is fast or slow. The rate is the network rate, which is a parameter value. When the network rate is too slow, in order to improve user experience, users can be recommended to use a device with a fast network rate in the connection network. At this time, it is determined whether the device with a fast network rate is in an idle state. If so, the device meets the second preset rule. It can be understood that the device with a slow network rate and the device with a fast network rate are preferably of the same type, for example, both are mobile phones.

In an embodiment, for the device state information, the device can be in a smooth state, stuck state, etc. A device in a stuck state will greatly affect the user's use. When the device is stuck, the cause of the device in a stuck state can be analyzed through local and/or network data, and the solution corresponding to the reason can be used as recommendation information. If it can be determined that at least one device is in the stuck state and/or whether the duration of the stuck state is greater than or equal to a certain time threshold (e.g., 5 seconds), if yes, the device meets the third preset rule.

In an embodiment, for the power information, the device is powered by batteries as an energy source. As the device is used, the power of the battery will become lower and lower, and the recommendation information will be obtained by analyzing the power information through local and/or network data (user's use habits, etc.). For example, the user leaves work at 6:00 pm, which is the peak period of power consumption. If the remaining power information of the user device before off-duty is lower than the preset threshold (for example, the power is lower than 20%), the device meets the fourth preset rule.

In an embodiment, for the storage space information, the storage space of the device is limited, and the usage of the storage space by the user can be obtained through local and/or network data, including the user's demand for storage space (how much data the user often downloads), and how much storage space the user will clean up to release more available storage space. It can be understood that there is a remaining storage space threshold in the above user requirements for storage space, that is, when the storage space is less than or equal to the remaining storage space threshold, the device meets the fifth preset rule.

In an embodiment, for the external environment information, the device can monitor changes in the external environment information through relevant sensors, such as monitor the brightness of the external environment through a photosensitive sensor, and process the information through local and/or network data analysis or artificial intelligence algorithms, including different brightness values corresponding to what the user tends to do, and using the response scheme corresponding to the tendency as recommendation information. For example, when the brightness of the external environment is lower than or higher than a preset threshold, the device corresponding to the recommendation information meets the sixth preset rule.

In an embodiment, for the use environment information, users have different requirements for devices in different usage environments. For example, users tend to use smart watches when exercising, and users tend to use smart phones when resting and meeting. After the device determines the environment in which it is used, it processes through local and/or network data analysis or artificial intelligence algorithms, and obtains the corresponding response plan as recommendation information. When the device is in a certain preset state (such as exercise state, sleep state, driving state, meeting mode, etc.) and/or enters a preset use environment (for example, at home, at work, in a car, on a subway, etc.), the device meets the seventh preset rule.

In an embodiment, for the traffic information, devices need to connect to the Internet through WiFi, 4G and other technologies. When connecting to the Internet through the 4G technology, data traffic will be generated, and the operator will charge corresponding service fees based on the size of the data traffic. According to the parameter value corresponding to the traffic information, the parameter value recommendation strategy is obtained to obtain the corresponding recommendation information, including whether the data needs to be turned off if the traffic is insufficient, whether the traffic needs to be purchased if the traffic is insufficient, etc. When the device meets the above conditions of turning off data or purchasing traffic, the device meets the eighth preset rule.

For the use habit information, after using the device, the user will develop certain use habits, such as getting used to using a smartphone in a certain period of time, and using a tablet computer in another period of time. The corresponding recommendation information can be determined through user habits or settings or selections, and the current recommendation information corresponding to the use habit information can be obtained. The recommendation information includes turning on the tablet computer, turning on the smart TV, opening an application on the smart phone, etc., that is, the recommendation information obtained from the use habit information is obtained by predicting the needs of the user. When the device is used and/or operated at the time and/or place that the user is accustomed to, the device meets the ninth preset rule.

For the user physiological information, the device can obtain user physiological information, such as blood pressure, heart rate, or the like. After obtaining the user physiological information, the device can extract the keywords and/or corresponding parameter values of the information, and obtain the corresponding recommendation information according to the preset keyword and/or parameter value recommendation strategy. The preset keyword and/or parameter value recommendation strategy is to output recommendation content to users according to keywords and specific parameter values. For example, the user physiological information is the user's heart rate, and the parameter value is higher than a certain value (such as a value with health risks). The above-mentioned content can be analyzed through local and/or network data, and recommendation content suitable for the user can be obtained, including recommending related health products, fitness equipment, etc., and the recommendation content can be an advertisement. It can be understood that if the parameter name and/or parameter value corresponding to at least one user physiological information is in a healthy or unhealthy state, the device meets the tenth preset rule.

For the device identification information, different devices have different manufacturers, product parameters and/or performance parameters, etc., such as display screen resolution, device performance, or the like. Generally, devices have a certain logo to distinguish each device. In this embodiment, the corresponding manufacturer, product parameters and/or performance parameters can be determined after obtaining the device identification information. Through the device identification information, the network server can obtain the data matching the device identification information on the network. For example, when users need to watch a movie, they can obtain the movie source that is most suitable for the display screen resolution of the playback device. When users need to listen to songs, they can obtain the sound source that best matches the playback device. The matching process can be realized by matching music file formats, etc. It can be understood that if the device identification information meets the preset requirements (for example, the manufacturer is Huawei or Apple, the product parameters support 4K playback, and the performance parameters meet the battery life requirements of more than 10 hours), then the device meets the eleventh preset rule.

In an embodiment, outputting corresponding recommendation information to at least one of the first control center, the first device and/or the second device includes at least one of the following:
outputting the first recommendation information to the first device;
outputting the second recommendation information to the second device;
outputting at least one of the first recommendation information, the second recommendation information and the third recommendation information to the first control center.

In an embodiment, outputting corresponding recommendation information to at least one of the first control center, the first device and/or the second device includes at least one of: outputting the first recommendation information to the first device; outputting the second recommendation information to the second device; outputting at least one of the first recommendation information, the second recommendation information and the third recommendation information to the first control center.

In an embodiment, the solution further includes:
the output timing of outputting the corresponding recommendation information to at least one of the first control center, the first device and/or the second device may be at the same time, at regular intervals, or at a delayed time;
the ways in which the first control center and/or the first device and/or the second device output corresponding recommendation information may be the same or different;
the output mode of the recommendation information may be interface output, voice broadcast, or light prompt.

In an embodiment, it is possible to limit the timing of outputting the corresponding recommendation information to the first control center, the first device and/or the second device, including simultaneous, timing, delay, or the like. The ways in which the first control center, the first device and/or the second device output corresponding recommendation information may also be the same or different. The output method of the above recommendation information can be interface output, voice broadcast or light prompt. For example, the output mode of the same recommendation information on the first device is through interface output, and the output mode on the second device may be through voice broadcast.

In an embodiment, according to the technical solutions of this embodiment, the recommendation information can include at least one of the following:
if the first control center, and/or the first device, and/or the second device meet the first preset rule, the recommendation information is to make all devices in the connection network exit the connection network;
if the first control center, and/or the first device, and/or the second device meet a second preset rule, the recommendation information is to migrate services on devices with a slow network rate to devices with a fast network rate;
if the first control center, and/or the first device, and/or the second device meet a third preset rule, the recommendation information is the processing suggestion and/or solution to solve the problem of device stuck;
if the first control center, and/or the first device, and/or the second device meet a fourth preset rule, the recommendation information is to set the device to the power saving mode, so that the device can be automatically set to the power saving mode after receiving the recommendation information;
if the first control center, and/or the first device, and/or the second device meet the fifth preset rule, the recommendation information is a garbage removal tip and/or a solution to garbage removal;
if the first control center, and/or the first device, and/or the second device meet the sixth preset rule, the recommendation information is to turn on the lighting equipment, and the corresponding equipment (such as a smart light) is automatically turned on after receiving the recommendation information;
if the first control center, and/or the first device, and/or the second device meet the seventh preset rule, the recommendation information is an instruction to play music;
if the first control center, and/or the first device, and/or the second device meet the eighth preset rule, the recommendation information is an instruction to turn on and/or turn off the data switch, and/or a reminder to purchase traffic, and/or a plan to purchase traffic;
if the first control center, and/or the first device, and/or the second device meet the ninth preset rule, the recommendation information is to perform an operation corresponding to the user's usage habits;
if the first control center, and/or the first device, and/or the second device meet the tenth preset rule, the recommendation information is to output to the user the health reminder and/or health plan corresponding to the user physiological information;
if the first control center, and/or the first device, and/or the second device meet the eleventh preset rule, the recommendation information is data and/or operation suggestions corresponding to the device identification information.

In an embodiment, before the operation Z20, the method further includes:
determining whether it is the preset mode;
when it is the preset mode, performing the operation Z20.

In an embodiment, the first information and/or the second information and/or the third information are obtained. The first information is provided by at least one first device directly connected to the first control center, and the second information is provided by at least one second device indirectly connected to the first control center. Before the operation of providing the third information by a web server connected to at least one of the first control center, the first device and the second device, it is determined whether the device corresponding to the first information, the second information and/or the third information is in the preset mode, and if yes, this step is performed; if not, this step is not performed. In an embodiment, the preset mode includes a mode such as an intelligent recommendation mode that meets the conditions for performing this step and subsequent steps.

In this embodiment, the processing method includes: Z2, obtaining the first information and/or the second information and/or the third information, the first information is provided by at least one first device directly connected to the first control center, the second information is provided by at least one second device indirectly connected to the first control center, the third information is provided by a web server connected to at least one of the first control center, the first device and the second device; Z21, processing the first information and/or the second information and/or the third information according to a processing rule to obtain at least one recommendation information, the recommendation information includes at least one first recommendation information, and/or at least one second recommendation information, and/or at least one third recommendation information; Z22, detecting whether the first control center, and/or the first device, and/or the second device meet recommendation requirements; Z23, if yes, performing a corresponding device control operation according to a preset recommendation strategy, and/or if no, outputting prompt information. The corresponding recommendation information is determined according to the acquired first information, second information and/or third information. When the first control center, the first device and/or the second device meet the recommended requirements, the corresponding device control operation is performed, so that the interaction between devices in the network is more intelligent, convenient and fast.

The present application provides another embodiment of the processing method. As shown in FIG. 66, FIG. 66 is a schematic flowchart of another embodiment of the processing method of the present application.

The embodiment of the present application provides the processing method. Although a logical order is shown in the flowcharts, in some cases the steps shown or described may be performed in an order different from that shown or described herein. The processing method can be applied to terminal devices, including but not limited to personal computers and smart phones. For the convenience of description, the following steps are omitted to describe the processing method of the execution subject, and the processing method includes:
Operation Z30, obtaining the preset information, the preset information is provided by the group where the first control center and/or the second control center belong.

In an embodiment, the preset information is obtained. The preset information is provided by the group where the first control center and/or the second control center are located. A group consists of a control center and other devices controlled by the control center, the control center and the other devices are in a network. The control center and the other devices can be terminal devices (such as mobile phones, PADs, tablet PC, etc.), wearable smart devices (such as smart watches, smart bracelets, smart earphones, etc.), smart home devices (such as smart TVs, smart speakers, etc.), car networking devices (such as smart cars, vehicle terminals, etc.). The networking is maintained by establishing a connection relationship between each device. The first control center and second control center may or may not belong to the same network.

Operation Z31, detecting whether the preset information meets the preset rule;
Operation Z32, when the preset information meets the preset rule, performing the corresponding device control operation according to the preset strategy, and/or, when the preset information does not meet the preset rule, outputting the prompt information.

In an embodiment, it is detected whether the preset information meets the preset rule; if the preset information meets the preset rule, a corresponding device control operation is performed according to the preset strategy, and/or, if the preset information does not meet the preset rule, the prompt information is output.

In an embodiment, the purpose of performing the corresponding device control operations according to the preset strategy can be transferring the relevant data and/or control functions of the first control center and/or the group where the first control center is located, or the second control center and/or the group where the second control center is located, may also be outputting prompts and the like.

In an embodiment, the preset information includes at least one of the following:
connection information including at least one of the following: connection state information, network rate information;
state information including at least one of the following: device state information, power information, storage space information;
environment information including at least one of the following: external environment information, use environment information;
use information including at least one of the following: traffic information, use habit information, and currently used application information;
distance information;
user physiological information.

In an embodiment, for the connection information, the connection information includes at least one of the following: connection state information, network rate information.

In the above network, there are terminal devices or other devices that newly join the network (such as wearable devices, smart home devices, or Internet of Vehicles devices), and there are also terminal devices or other devices that exit the network. In order to grasp the connection state information of each device joining or exiting in the network in real time, the first control center can maintain a connection information table. The connection information table records device information of all networked devices, and the device information may be at least one of device physical address, device name, and device code, or other information that can represent the device. The device code can be set by the first control center, for example, the device code of the first device connected with the first control center is 001, and the device code of the second device connected with the first control center is 002. Devices in the network generally have the function of connecting to the Internet, such as smart watches, mobile phones, smart TVs, smart cars, etc. The corresponding network rate information will be affected by the device itself (for example, the device is downloading data or there are many current Internet applications, etc., resulting in a slow network) or by external factors (such as poor signal at the location of the device), resulting in a low network rate.

In an embodiment, for the state information, the state information includes at least one of device state information, power information, and storage space information.

In the above network, the device state information can be judged by the data processing capability of the device. The data processing capability of the device is strong or weak. Moreover, it does not necessarily mean that the current data processing capability of the corresponding device is good if the hardware condition is good. It can be understood that the current data processing capability of a device with good hardware conditions in a dead state will be very weak. In an embodiment, the device state information can also be whether the device is in a charging state. It is well understood that the device needs power during use. The electrical energy is generally provided by the battery, and the battery needs to be charged when the battery power is exhausted or is about to be exhausted. For power information, different devices in the network will have batteries with different capacities, and the batteries will have different remaining power or different battery life. For example, the battery capacity of the mobile phone is generally greater than the battery capacity of the smart watch. In addition, there are also cases where the remaining power of the mobile phone is less than the current power of the smart watch because the mobile phone is not charged. Devices in the network will exchange data during use and need to store the received data. The storage space information of the device affects the working performance of the device and determines the work that can be supported, such as the size of the storage space of the device is not enough to support the size of the data that must be downloaded for its work.

In an embodiment, for the environment information, the environment information includes at least one of the external environment information and the use environment information.

In the above network, the device has the ability to obtain external environment information, such as obtaining the brightness of external ambient light and obtaining the loudness of external environment noise. During the use of the device, the use environment information changes with the user's environment. The use's environment can be sensed by sensors (such as gravity sensors, acceleration sensors, gyroscopes, etc.). If the user is exercising, the device can detect that the user is in an exercising environment, and adjust the device parameters accordingly to facilitate the user's use in an exercising environment. Or, if the user is driving, the device detects that the user is in the driving environment, and adjusts the device parameters accordingly to facilitate the user's use in the driving environment. Or, if the user is working or meeting, the device adjusts the device parameters correspondingly after detecting that the user is in the working or meeting environment.

In an embodiment, for the use information, the use information includes at least one of the traffic information, the use habit information, and the currently used application information.

In the above network, the device may have the ability to provide data network services, such as mobile phones and PADs, which are capable of providing data network services, and are used to obtain data from the Internet, such as updating applications in the device, and the current data network costs are not low. Therefore, when using data network services, special attention should be paid to traffic information. For use habit information, users may be accustomed to using a certain device on the Internet, that is, they use a certain device frequently, or are used to using a certain device on the Internet during a specific period of time, at a specific location, or for a specific purpose of use. For example, users are used to watching videos with PAD, but not with mobile phones. For the currently used application information, during the use of the device, the user will install some corresponding applications according to the use requirements, such as video applications and game applications.

In an embodiment, for the distance information, in the above network, during the use of the device by the user, the distance between the device and the user may change, the user puts the mobile phone in the bedroom and goes to the living room to watch TV. When the user moves from the bedroom to the living room, the user and the mobile phone become farther and farther away.

In an embodiment, for the user physiological information, in the above network, the device has the ability to obtain the user physiological information to provide corresponding services, such as providing health services by obtaining physiological information such as the user's heart rate, blood pressure, pulse, blood oxygen, and blood sugar.

In an embodiment, the operation Z31 includes at least one of the following:
detecting whether the connection state information meets a first preset rule;
detecting whether the network rate information meets a second preset rule;
detecting whether the device state information meets a third preset rule;
detecting whether the power information meets the fourth preset rule;
detecting whether the storage space information meets the fifth preset rule;
detecting whether the external environment information meets the sixth preset rule;
detecting whether the use environment information meets the seventh preset rule;
detecting whether the traffic information meets the eighth preset rule;
detecting whether the use habit information meets the ninth preset rule;
detecting whether the currently used application information meets the tenth preset rule;
detecting whether the distance information meets the eleventh preset rule;
detecting whether the user physiological information meets a twelfth preset rule.

In an embodiment, for detecting whether the connection state information meets the first preset rule.

In an embodiment, it is detected whether the connection state information meets the first preset rule. The first preset rule is to determine whether the first control center or the second control center in the network exits the network by detecting connection state information. If the first control center or the second control center withdraws from the network, the connection state information meets the first preset rule, and/or, if the first control center or the second control center does not withdraw from the network, the connection state information does not meet the first preset rule.

In an embodiment, it may be that the number of connections of the first control center or the second control center exceeds a preset threshold or maximum value, then the connection state information meets the first preset rule.

In another embodiment, it may be that the connection state of the first control center or the second control center is not smooth or the number of disconnections exceeds a preset number of times, then the connection state information meets the first preset rule.

Detecting whether the network rate information meets a second preset rule.

In an embodiment, it is detected whether the network rate information meets the second preset rule. The second preset rule is a rule determined by detecting network rate information that the first control center or the second control center in the network is not suitable to continue to serve as a control center to provide control functions. In order not to affect the linkage of each device in the network, it is necessary to select a device with a high network rate as the control center.

For example, it may be that the network rate of other devices controlled by the first control center or the second control center in the network is greater than the network rate of the first control center or the second control center, it is determined that the network rate information meets the second preset rule. For example, the network rate of the first control center or the second control center is 500KB/s, if other devices controlled by the first control center or the second control center in the network have a network rate greater than 500KB/s, it can be determined that the network rate information meets the second preset rule.

In this embodiment, a first network rate threshold may also be set for the comparison between the network rates of other devices controlled by the first control center or the second control center in the network and the network rate of the first control center or the second control center. For example, when the network rate of other devices controlled by the first control center or the second control center in the network is greater than or equal to the sum of the network rate of the first control center or the second control center and the first network rate threshold, it is determined that the network rate information meets the second preset rule. When there is no other device controlled by the first control center or the second control center in the network whose network rate is greater than or equal to the sum of the network rate of the first control center or the second control center and the first network rate threshold, that is, the network rates of other devices controlled by the first control center or the second control center in the network are all lower than the sum of the network rate of the first control center or the second control center and the first network rate threshold, and it is determined that the network rate information does not meet the second preset rule.

For example, the network rate of the first control center or the second control center is 500KB/s, the first network rate threshold is 100KB/s, and other devices controlled by the first control center or the second control center in the network have devices with a network rate of 600KB/s. At this time, when the network rate of other devices controlled by the first control center or the second control center in the network is equal to the sum of the network rate of the first control center or the second control center and the first network rate threshold, it is determined that the network rate information meets the second preset rule.

In other embodiments, a second network rate threshold can also be set, and the second network rate threshold is the minimum network rate that does not affect the ability of the first control center or the second control center to provide management services. In an embodiment, if the network rate of the first control center or the second control center is greater than or equal to the second network rate threshold, it is determined that the network rate information does not meet the second preset rule. If the network rate of the first control center or the second control center is less than the second network rate threshold, it is determined that the network rate information meets the second preset rule.

For example, the network rate of the first control center or the second control center is 400KB/s, the second network rate threshold is 500KB/s. Since the network rate of the first control center or the second control center is less than the second network rate threshold, it may be determined that the network rate information meets the second preset rule.

Detecting whether the device state information meets a third preset rule.

In an embodiment, it is detected whether the device state information meets the third preset rule. The third preset rule is a rule determined by detecting device state information that the first control center or the second control center in the network is not suitable to continue to serve as a control center to provide control functions. In order not to affect the linkage of each device in the network, it is necessary to select a device with a short response time corresponding to the device state as the control center.

In an embodiment, the device state information can be the data processing capability of the device, such as the number or frequency of Central Processing Unit (CPU), the number or frequency of Graphic Processing Unit (GPU), the number or frequency of Neural Networks Process Unit (NPU), memory capacity, memory processing speed, etc. If the data processing capability of the first control center or the second control center is not the strongest or does not belong to a strong category, it is determined that the device state information meets the third preset rule.

In another embodiment, for the current data processing capability of the device, it may be that the response time corresponding to the device state of other devices controlled by the first control center or the second control center in the network is shorter than the response time corresponding to the device state of the first control center, it is determined that the device state information meets the third preset rule. For example, the response time corresponding to the device state of the first control center or the second control center is 50ms, if other devices controlled by the first control center or the second control center in the network have a device whose state corresponds to a response time of 40ms, it may be determined that the device state information meets the third preset rule.

A first response time threshold may also be set for the comparison between the response time corresponding to the device state of other devices controlled by the first control center or the second control center in the network and the response time corresponding to the device state of the first control center. For example, when the sum of the response time corresponding to the device state and the first response time threshold is less than or equal to the response time corresponding to the device state of the first control center or the second control center in other devices controlled by the first control center or the second control center in the network, it is determined that the device state information meets the third preset rule. And/or, when the sum of the response time corresponding to the device state and the first response time threshold is less than or equal to the response time corresponding to the device state of the first control center or the second control center does not exist in other devices controlled by the first control center or the second control center in the network, that is, the sum of the response time corresponding to the device state of other devices controlled by the first control center or the second control center in the network and the first response time threshold is greater than the response time corresponding to the device state of the first control center or the second control center, it is determined that the device state information does not meet the third preset rule.

For example, the response time corresponding to the device state of the first control center or the second control center is 50ms, and the first response time threshold is 10ms. Other devices controlled by the first control center or the second control center in the network have device whose response time corresponding to the device state is 40ms. When other devices controlled by the first control center or the second control center in the network have the response time corresponding to the device state and the first response time threshold equal to the response time corresponding to the state of the first control center or the second control center, it is determined that the device state information meets the third preset rule.

In other embodiments, a second response time threshold may also be set, and the second response time threshold is the maximum response time that does not affect the ability of the first control center or the second control center to provide management services. If the response time corresponding to the device state of the first control center or the second control center is shorter than or equal to the second response time threshold, it is determined that the device state information does not meet the third preset rule; and/or, if the response time corresponding to the device state of the first control center or the second control center is longer than the second response time threshold, it is determined that the device state information meets the third preset rule.

For example, the response time corresponding to the device state of the first control center or the second control center is 60ms, and the second response time threshold is 50ms. Since the response time corresponding to the device state of the first control center or the second control center is longer than the second response time threshold, it may be determined that the device state information meets the third preset rule.

In other embodiments, for a device in a charging state, the power consumption of the device at this time should be reduced as much as possible to prevent the battery from being depleted. Therefore, if the device is in the charging state, it is determined that the device state information meets the third preset rule; and/or, if the device is in the non-charging state, it is determined that the device state information does not meet the third preset rule.

In other embodiments, for a device in a moving state, because it is inconvenient for the user to operate or control, it may be determined that the device state information meets the third preset rule.

In other embodiments, for a device in a stuck state, since the first control center or the second control center may not be able to well control other devices because it cannot respond well to the user's operation, it may be determined that the device state information meets the third preset rule.

Detecting whether the power information meets a fourth preset rule.

In an embodiment, it is detected whether the power information meets the fourth preset rule. The fourth preset rule is a rule determined by detecting power information that the first control center or the second control center in the network is not suitable to continue to serve as a control center to provide control functions. In order not to affect the linkage of each device in the network, it is necessary to select a device with a long available time corresponding to the power as the control center. It may be that the available time corresponding to the power of other devices controlled by the first control center or the second control center in the network is longer than the available time corresponding to the power of the first control center or the second control center, it is determined that the power information meets the fourth preset rule. It may also be that the remaining power value of other devices controlled by the first control center or the second control center in the network is greater than the power of the first control center or the second control center, it is determined that the power information meets the fourth preset rule.

In this embodiment, a first available time threshold may also be set for the comparison between the available time corresponding to the power of other devices controlled by the first control center or the second control center in the network and the available time corresponding to the power of the first control center or the second control center. For example, when other devices controlled by the first control center or the second control center in the network have an available time corresponding to the power of the device that is longer than or equal to the sum of the available time corresponding to the power of the first control center or the second control center and the first available time threshold, it is determined that the power information meets the fourth preset rule. When there is no other device controlled by the first control center or the second control center in the network, the available time corresponding to the power of the device is longer than or equal to the sum of the available time corresponding to the power of the first control center or the second control center and the first available time threshold, that is, when the available time corresponding to the power of other devices controlled by the first control center or the second control center in the network is less than the sum of the available time corresponding to the power of the first control center or the second control center and the first available time threshold, it is determined that the power information does not meet the fourth preset rule.

For example, the available time corresponding to the power of the first control center or the second control center is 200 minutes, the first available time threshold is 30 minutes, and other devices controlled by the first control center or the second control center in the network have a corresponding available time of 170 minutes. At this time, when the available time corresponding to the power in other devices controlled by the first control center or the second control center in the network is equal to the sum of the available time corresponding to the power of the first control center or the second control center and the first available time threshold, it is determined that the power information meets the fourth preset rule.

In other embodiments, a second available time threshold may also be set, and the second available time threshold is the minimum available time that does not affect the ability of the first control center or the second control center to provide management services. If the available time corresponding to the power of the first control center or the second control center is longer than or equal to the second available time threshold, it is determined that the power information does not meet the fourth preset rule; and/or, if the available time corresponding to the power of the first control center or the second control center is shorter than the second available time threshold, it is determined that the power information meets the fourth preset rule.

For example, the available time corresponding to the power of the first control center or the second control center is 180 minutes, and the second available time threshold is 200 minutes. Since the available time corresponding to the power of the first control center or the second control center is shorter than the second available time threshold, it may be determined that the power information meets the fourth preset rule.

Detecting whether the storage space information meets a fifth preset rule.

In an embodiment, it is detected whether the storage space information meets the fifth preset rule. The fifth preset rule is a rule determined by detecting storage space information that the first control center or the second control center in the network is not suitable to continue to serve as a control center to provide control functions. In order not to affect the linkage of each device in the network, it is necessary to select a device with a large remaining storage space as the control center. It may be that the remaining storage space of other devices controlled by the first control center or the second control center in the network is greater than the remaining storage space of the first control center or the second control center, it is determined that the storage space information meets the fifth preset rule. It may also be that the access speed of the storage space of other devices (such as a higher version of universal flash storage (UFS)) controlled by the first control center or the second control center in the network or Embedded MultiMedia Card (eMMC) or Secure Digital Card (SD) is greater than the access speed of the storage space of the first control center or the second control center (such as low version UFS or eMMC or SD), it is determined that the storage space information meets the fifth preset rule.

In this embodiment, a first remaining storage space threshold may also be set for the comparison between the remaining storage space of other devices controlled by the first control center or the second control center in the network and the remaining storage space of the first control center or the second control center. For example, when the remaining storage space of other devices controlled by the first control center or the second control center in the network is greater than or equal to the sum of the remaining storage space of the first control center or the second control center and the first remaining storage space threshold, it is determined that the storage space information meets the fifth preset rule; and/or, when the remaining storage space of other devices controlled by the first control center or the second control center in the network is not greater than or equal to the sum of the remaining storage space of the first control center or the second control center and the first remaining storage space threshold, that is, the remaining storage space of other devices controlled by the first control center or the second control center in the network is less than the sum of the remaining storage space of the first control center or the second control center and the first remaining storage space threshold, it is determined that the storage space information does not meet the fifth preset rule.

For example, the remaining storage space of the first control center or the second control center is 2000MB, the threshold of the first remaining storage space is 300MB, other devices controlled by the first control center or the second control center in the network have a remaining storage space of 2300MB. At this time, when the remaining storage space of other devices controlled by the first control center or the second control center in the network is equal to the sum of the remaining storage space of the first control center or the second control center and the first remaining storage space threshold, it is determined that the storage space information meets the fifth preset rule.

In other embodiments, a second remaining storage space threshold may also be set, and the second remaining storage space threshold is the minimum remaining storage space that does not affect the ability of the first control center or the second control center to provide management services. If the remaining storage space of the first control center or the second control center is greater than or equal to the second remaining storage space threshold, it is determined that the storage space information does not meet the fifth preset rule; and/or, if the remaining storage space of the first control center or the second control center is smaller than the second remaining storage space threshold, it is determined that the storage space information meets the fifth preset rule.

For example, the remaining storage space of the first control center or the second control center is 1800MB, and the second remaining storage space threshold is 2000MB. Since the remaining storage space of the first control center or the second control center is smaller than the second remaining storage space threshold, it may be determined that the storage space information meets the fifth preset rule.

Detecting whether the external environment information meets a sixth preset rule.

In an embodiment, it is detected whether the external environment information meets the sixth preset rule. The sixth preset rule is a rule that determines by detecting external environment information that the first control center or the second control center in the network is not suitable for continuing to serve as a control center to provide control functions.

In an embodiment, when it is detected that the brightness of the external ambient light reaches the brightness threshold and/or the loudness of the external environmental noise reaches the loudness threshold, it is determined that the external environment information meets the sixth preset rule; and/or, when it is detected that the brightness of external ambient light does not reach the brightness threshold and/or the loudness of external environmental noise does not reach the loudness threshold, it is determined that the external environment information does not meet the sixth preset rule.

For example, when the brightness of the external ambient light reaches the brightness threshold and the loudness of the external environmental noise reaches the loudness threshold, if the brightness is lower than the brightness threshold and the loudness is lower than the loudness threshold, it can be determined that the user is ready to enter or is already in a quiet state (such as sleep). At this time, it is inconvenient for the user to obtain devices such as mobile phones and PADs, but it is convenient for users to obtain devices such as smart bracelets and smart watches. Therefore, before the brightness of the external ambient light is lower than the brightness threshold and the loudness of the external ambient noise is lower than the loudness threshold, if the first control center or the second control center is one of the devices that are currently inconvenient for users to obtain, such as mobile phones and PADs, it is determined that the external environment information meets the sixth preset rule; and/or before the brightness of the external ambient light is lower than the brightness threshold and the loudness of the external ambient noise is lower than the loudness threshold, if the first control center or the second control center is a smart bracelet, a smart watch, and other devices that are currently readily available, it is determined that the external environment information does not meet the sixth preset rule.

In another embodiment, the external environment information may be time information and/or geographic information. If it is inconvenient to use the first control center or the second control center (for example, it is inconvenient to use mobile phones during working duration, or in the early hours of the morning), or the place where the first control center or the second control center is not allowed to be carried (such as the place where the mobile phone is not allowed to enter), it is determined that the external environment information meets the sixth preset rule.

Detecting whether the use environment information meets a seventh preset rule.

In an embodiment, it is detected whether the use environment information meets the seventh preset rule. The seventh preset rule is a rule determined by detecting the use environment information that the first control center or the second control center in the network is not suitable to continue to serve as the control center to provide control functions.

In an embodiment, if the user is in a sports environment, it is obvious that the user is inconvenient to use devices such as mobile phones and PADs, but it is convenient to use wearable devices such as smart bracelets and smart watches. Therefore, before the user is in the exercise environment, when the first control center or the second control center is one of the devices that are inconvenient for the user to use when exercising, such as mobile phones and PADs, it is determined that the use environment information meets the seventh preset rule; and/or, before the user is in the exercise environment, when the first control center or the second control center is one of the devices that are convenient for the user to use during exercise, such as smart bracelets and smart watches, it is determined that the use environment information does not meet the seventh preset rule.

Detecting whether the user is in a sports environment can be determined according to the scene mode (such as sports mode, outdoor mode, etc.) of the first control center or the second control center, or according to the motion sensor of the first control center or the second control center and/or other devices, or according to the camera data of the first control center or the second control center and/or other devices.

In another embodiment, if the user is in a driving environment, it is obvious that the user is inconvenient to use devices such as mobile phones and PADs, but it is convenient to use devices such as smart watches, smart earphones, and vehicle terminals. Therefore, before the user is in the driving environment, when the first control center or the second control center is one of the mobile phones, PADs and other devices that are inconvenient for the user to use, it is determined that the use environment information meets the seventh preset rule; and/or, before the user is in the driving environment, when the first control center or the second control center is one of the devices that are convenient for the user to use in the driving environment, such as smart watches, smart earphones, and vehicle terminals, it is determined that the use environment information does not meet the seventh preset rule.

Detecting whether the user is in the driving environment can be determined according to the scene mode (such as driving mode, navigation mode, etc.) of the first control center or the second control center, or according to motion sensors or geographical information of the first control center or the second control center and/or other devices, or according to the camera data of the first control center or the second control center and/or other devices, or according to the first control center or the second control center and/or other device wireless connection information (such as accessed WIFI hotspots, paired and connected Bluetooth devices, etc.).

In another embodiment, if the user is in a home environment, it is obvious that the user is more convenient to use devices such as smart TVs and smart speakers. Therefore, before the user is in the home environment, when the first control center or the second control center is one of the mobile phones, PADs and other devices that are inconvenient for the user to use, it is determined that the use environment information meets the seventh preset rule; and/or before the user is in the home environment, when the first control center or the second control center is one of the devices that are convenient for the user to use in the home environment, such as smart TVs and smart speakers, it is determined that the use environment information does not meet the seventh preset rule.

Detecting whether the user is in the home environment can be determined according to the scene mode of the first control center or the second control center (such as work mode, home mode, etc.), or according to the geographic information of the first control center and/or other devices, or according to the camera data of the first control center and/or other devices, or according to the wireless connection information of the first control center and/or other devices (such as accessed WIFI hotspots, paired and connected Bluetooth devices, etc.).

In an embodiment, if the user leaves the home or driving environment and switches to a new environment, such as a working environment, it is inconvenient for the user to use devices such as vehicle terminals and smart TVs, but it is convenient to use devices such as mobile phones and smart watches. Therefore, before the user is in a new environment, when the first control center or the second control center is one of the inconvenient vehicle-mounted terminal, smart TV and other equipment for the user, it is determined that the use environment information meets the seventh preset rule; and/or, before the user is in a new environment, when the first control center or the second control center is one of the mobile phones, smart watches and other devices that are convenient for the user to use at work, it is determined that the use environment information does not meet the seventh preset rule.

Detecting whether the user is in a non-home or non-driving environment can be determined according to the scene mode (such as work mode, sports mode, etc.) of the first control center or the second control center, or according to the geographic information of the first control center and/or other devices, or according to the camera data of the first control center and/or other devices, or according to the wireless connection information of the first control center and/or other devices (such as accessed WIFI hotspots, paired and connected Bluetooth devices, etc.).

In another embodiment, if the user is in a meeting environment, it is inconvenient for the user to use devices such as smart earphones that need to be controlled by voice instructions, but it is convenient to use devices such as mobile phones and smart watches that can be controlled by touch instructions. Therefore, before the user is in the meeting environment, when the first control center or the second control center is one of the devices such as smart earphones that are inconvenient for the user to use during the meeting, it is determined that the use environment information meets the seventh preset rule; and/or, before the user is in the meeting environment, when the first control center or the second control center is one of the mobile phones, smart watches and other devices that are convenient for the user to use during the meeting, it is determined that the use environment information does not meet the seventh preset rule.

Detecting whether the traffic information meets an eighth preset rule.

In an embodiment, it is detected whether the traffic information meets the eighth preset rule. The eighth preset rule is a rule determined by detecting traffic information that the first control center or the second control center in the network is not suitable to continue to serve as a control center to provide control functions. In order not to affect the linkage of each device in the network, it is necessary to select a device with a large amount of remaining traffic as the control center. It may be that the remaining traffic of other devices controlled by the first control center or the second control center in the network is greater than the remaining traffic of the first control center or the second control center, it is determined that the traffic information meets the eighth preset rule.

In this embodiment, a first remaining traffic threshold may also be set for the comparison between the remaining traffic of other devices controlled by the first control center or the second control center in the network and the remaining traffic of the first control center or the second control center. For example, when the remaining traffic of other devices controlled by the first control center or the second control center in the network is greater than or equal to the sum of the remaining traffic of the first control center or the second control center and the first remaining traffic threshold, it is determined that the traffic information meets the eighth preset rule; and/or, when there is no other devices controlled by the first control center or the second control center in the network, the remaining traffic of the device is greater than or equal to the sum of the remaining traffic of the first control center or the second control center and the first remaining traffic threshold, that is, the remaining traffic of other devices controlled by the first control center or the second control center in the network is less than the sum of the remaining traffic of the first control center or the second control center and the first remaining traffic threshold, and it is determined that the traffic information does not meet the eighth preset rule.

For example, the remaining traffic of the first control center or the second control center is 2000MB, the first remaining traffic threshold is 300MB, other devices controlled by the first control center or the second control center in the network have a remaining traffic of 2300MB. At this time, when the remaining traffic of other devices controlled by the first control center or the second control center in the network is equal to the sum of the remaining traffic of the first control center or the second control center and the first remaining traffic threshold, it is determined that the traffic information meets the eighth preset rule.

In other embodiments, a second remaining traffic threshold may also be set, and the second remaining traffic threshold is the minimum remaining traffic that does not affect the ability of the first control center or the second control center to provide management services. If the remaining traffic of the first control center or the second control center is greater than or equal to the second remaining traffic threshold, it is determined that the traffic information does not meet the eighth preset rule; and/or, if the remaining traffic of the first control center or the second control center is less than the second remaining traffic threshold, it is determined that the traffic information meets the eighth preset rule.

For example, the remaining traffic of the first control center or the second control center is 1800MB, and the second remaining traffic threshold is 2000MB. Since the remaining traffic of the first control center or the second control center is less than the second remaining traffic threshold, it can be determined that the traffic information meets the eighth preset rule.

Detecting whether the use habit information meets a ninth preset rule.

In an embodiment, it is detected whether the use habit information meets the ninth preset rule. The ninth preset rule is a rule for determining that the first control center or the second control center in the network is not suitable for continuing to serve as a control center to provide control functions by detecting use habit information.

In an embodiment, if users are used to running with smart earphones or smart watches at a certain time in the morning, watching videos on a PAD at a certain time in the evening, and using mobile phones to read at a certain time in the morning on weekends, the first control center or the second control center at the corresponding time point is not a device conforming to the user habits, it may be determined that the ninth preset rule is met.

In another embodiment, if users are used to using different devices in different environments, such as watching smart TV at home, watching vehicle terminals in the car, and using smartphones in the company, etc., and the first control center or the second control center in the corresponding environment is not a device conforming to user habits, it may be determined that the ninth preset rule is met.
detecting whether the currently used application information meets a tenth preset rule.

In an embodiment, it is detected whether the currently used application information meets the tenth preset rule. The tenth preset rule is a rule for determining that the first control center or the second control center in the network is not suitable to continue to serve as a control center to provide control functions by detecting the currently used application information.

In an embodiment, if the user is using the first control center or the second control center to watch videos or play games, etc., in general, when watching videos and playing games, the corresponding device interfaces are displayed in full screen, which is inconvenient for users to switch to the corresponding application interface of the first control center or the second control center to use the control functions of the first control center or the second control center. Therefore, if the first control center or the second control center is running video applications, game applications and other applications that are inconvenient to switch to other interfaces, it is determined that the currently used application information meets the tenth preset rule; and/or, if the first control center or the second control center is running an application that facilitates switching to other interfaces, it is determined that the currently used application information does not meet the tenth preset rule.

In another embodiment, if the user is making a phone call, video chatting, or conference call, and it is inconvenient for the user to switch interfaces or controls at this time, it is determined that the currently used application information meets the tenth preset rule.

Detecting whether the distance information meets an eleventh preset rule.

In an embodiment, it is detected whether the distance information meets the eleventh preset rule. The eleventh preset rule is a rule for determining that the first control center or the second control center in the network is not suitable for continuing to serve as a control center to provide control functions by detecting distance information.

In an embodiment, when the distance between the user and the first control center or the second control center exceeds a preset range, it is determined that the distance information meets the eleventh preset rule.

In an embodiment, each device in the network will have a certain relative distance when used by the user. When the distance between the first control center or the second control center and other devices controlled by it is greater than or equal to a preset distance threshold, it is determined that the distance information meets the eleventh preset rule; and/or, when the distance between the first control center or the second control center and other devices controlled by it is less than a preset distance threshold, it is determined that the distance information does not meet the eleventh preset rule.

In another embodiment, it can also be calculated that if each networked device acts as a control center. The total distance value between the device and other networked devices, the device with the shortest total distance value is taken as the candidate control center. If the first control center or the second control center is different from the candidate control center, it is determined that the distance information meets the eleventh preset rule.

Detecting whether the user physiological information meets a twelfth preset rule.

In an embodiment, it is detected whether the user physiological information meets the twelfth preset rule. The twelfth preset rule is a rule for determining that the first control center or the second control center in the network is not suitable to continue to serve as a control center to provide control functions by detecting user physiological information.

In an embodiment, when it is detected that the user physiological information reaches a preset physiological information threshold, it is determined that the user physiological information meets the twelfth preset rule. The user physiological information may be detected by the first control center and/or other devices. Physiological information may be at least one of heart rate, blood pressure, pulse, blood oxygen, and blood sugar.

If a user's heart rate is generally 70 to 80 beats/minute when he is in a non-sleep state, and the heart rate is generally 40 to 50 beats/minute when the user is in a sleep state, then the preset heart rate threshold can be set to 50 beats /minute. When it is detected that the user's heart rate reaches 50 beats/minute, it can be determined that the user is in a sleep state. If the first control center or the second control center is not a wearable device such as a smart watch or a smart bracelet that is convenient for the user to acquire and operate, it is determined that the physiological information meets the twelfth preset rule.

For example, when the user is in a state of exercise, the heart rate is generally 100 to 130 times per minute. When the user's heart rate is detected to reach 110 times per minute, it can be determined that the user is in a state of exercise. If the first control center or the second control center is a device that is inconvenient for the user to obtain and operate, such as a smart phone, it may also be determined that the physiological information meets the twelfth preset rule.

In an embodiment, the processing method further includes:
performing the corresponding device control operation, including:
when the preset information does not meet the first preset rule, the second preset rule, the third preset rule, the fourth preset rule, the fifth preset rule, the sixth preset rule, the seventh preset rule, the eighth preset rule, the ninth preset rule, the tenth preset rule, the eleventh preset rule, or the twelfth preset rule, setting the corresponding device as the third control center.

In an embodiment, the corresponding device is one of the devices controlled by the first control center.

In an embodiment, when the preset information does not meet the first preset rule, the second preset rule, the third preset rule, the fourth preset rule, the fifth preset rule, the sixth preset rule, the seventh preset rule, the eighth preset rule, the ninth preset rule, the tenth preset rule, the eleventh preset rule, or the twelfth preset rule, the corresponding device is set as the third control center. In an embodiment, the corresponding device can be one of the devices controlled by the first control center, or can be a device in another network except the network where the first control center is located and the network where the second control center is located.

In an embodiment, the third control center can include at least one of the following:
at least one of other devices controlled by the first control center and/or the second control center;
a device with the least number of connections among other devices controlled by the first control center and/or the second control center;
a device with the smoothest connection state or the least number of disconnections among other devices controlled by the first control center and/or the second control center;
a device with the best network rate among other devices controlled by the first control center and/or the second control center;
a device with the largest number of CPUs or the highest frequency among other devices controlled by the first control center and/or the second control center;
a device with the largest number of GPUs or the highest frequency among other devices controlled by the first control center and/or the second control center;
a device with the largest number of NPUs or the highest frequency among other devices controlled by the first control center and/or the second control center;
a device with the largest memory capacity or the fastest processing speed among other devices controlled by the first control center and/or the second control center;
a device with the shortest response time among other devices controlled by the first control center and/or the second control center;
a device in a non-charging state among other devices controlled by the first control center and/or the second control center;
a device in a non-moving state among other devices controlled by the first control center and/or the second control center;
a device in a non-stuck state among other devices controlled by the first control center and/or the second control center;
a device with the most remaining power among other devices controlled by the first control center and/or the second control center;
a device with the largest battery capacity among other devices controlled by the first control center and/or the second control center;
a device with the longest available time corresponding to the power of other devices controlled by the first control center and/or the second control center;
a device with the largest remaining storage space among other devices controlled by the first control center and/or the second control center;
a device with the fastest storage space access speed among other devices controlled by the first control center and/or the second control center;
a device meeting the time limit condition among other devices controlled by the first control center and/or the second control center;
a device meeting geographical restrictions among other devices controlled by the first control center and/or the second control center;
one of the other devices controlled by the first control center and/or the second control center that is convenient to use in the user's environment;
a device with the largest remaining traffic among other devices controlled by the first control center and/or the second control center;
one of the other devices controlled by the first control center and/or the second control center that meets the user's usage habits;
one of the other devices controlled by the first control center and/or the second control center that meets the use habits of the user in the environment;
one of the other devices controlled by the first control center and/or the second control center that is not currently running video applications or game applications or other preset applications;
one of the other devices controlled by the first control center and/or the second control center that is not currently in a call or video chat or conference call or other preset use state;
one of the devices currently closest to the user among other devices controlled by the first control center and/or the second control center;
one of the devices with the shortest total distance to other devices among other devices controlled by the first control center and/or the second control center;
one of the devices that is conveniently acquired by the current user among other devices controlled by the first control center and/or the second control center;
one of the devices whose current mode meets the requirements among other devices controlled by the first control center and/or the second control center. The current mode meeting the requirements includes at least one of the following: the current mode is smart mode, the current mode is linkage mode, the current mode is control mode, the current mode is power saving mode, and the current mode is normal mode.

In an embodiment, performing the corresponding device control operation further includes at least one of the following:
if the third control center belongs to a group where the first control center belongs, only migrating or transferring a control function of the first control center to the third control center;
if the third control center belongs to a group where the first control center belongs, only migrating or transferring relevant data of the first control center to the third control center;
if the third control center belongs to a group where the second control center belongs, migrating or transferring the control function and/or the relevant data of the first control center to the third control center, and/or migrating or transferring a relevant function and/or relevant data of at least one first device in a group where the first control center is located to at least one second device in a group where the second control center is located; and
if the third control center does not belong to the group where the first control center is located, nor does it belong to the group where the second control center is located, migrating or transferring the control function and/or the relevant data of the first control center to the third control center, and/or migrating or transferring the relevant function and/or the relevant data of at least one first device in the group where the first control center is located to at least one third device in the group where the third control center is located.

In an embodiment, the operation of performing the corresponding device control operation further includes at least one of: if the third control center belongs to a group where the first control center belongs, only migrating or transferring a control function of the first control center to the third control center; if the third control center belongs to a group where the first control center belongs, only migrating or transferring relevant data of the first control center to the third control center; if the third control center belongs to a group where the second control center belongs, migrating or transferring the control function and/or the relevant data of the first control center to the third control center, and/or migrating or transferring a relevant function and/or relevant data of at least one first device in a group where the first control center is located to at least one second device in a group where the second control center is located; and if the third control center does not belong to the group where the first control center is located, nor does it belong to the group where the second control center is located, migrating or transferring the control function and/or the relevant data of the first control center to the third control center, and/or migrating or transferring the relevant function and/or the relevant data of at least one first device in the group where the first control center is located to at least one third device in the group where the third control center is located.

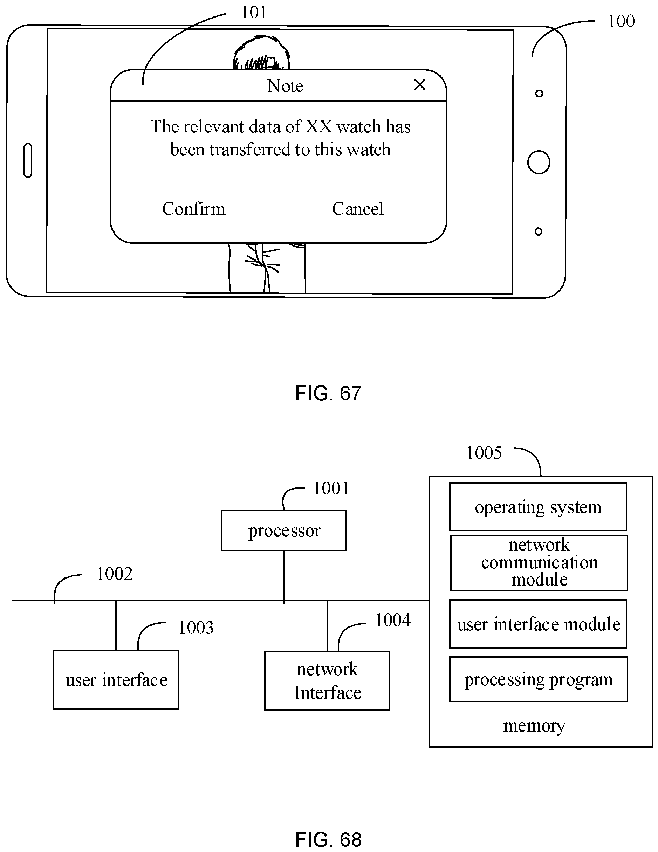

In an embodiment, for the situation where the control center is switched within the group, it is only necessary to migrate or transfer the control functions or relevant data of the first control center. For the situation where the control center is switched outside the group, since the data of each group is not interoperable, for the convenience of users, it is necessary to transfer or migrate the relevant data in the group where the control center is switched to the group where the third control center is located. It is understandable that most of the current smart device manufacturers have launched smart device "family buckets". For example, a manufacturer not only produces mobile phones but also watches, earphones and other equipment. It can be understood that for each equipment produced by the same manufacturer, the collocation between the equipment is optimal when the device is in use. Generally, the basis for grouping the above-mentioned devices can be divided into different groups according to different manufacturers, and the products of each manufacturer overlap. For example, manufacturer 1 produces mobile phones, and manufacturer 2 also produces mobile phones. Therefore, between different networks, there are devices with the same or similar functions in each device. When the control center is switched across groups, for the convenience of users, the data of the devices in the group where the control center is transferred can be transferred or migrated to the group where the third control center is located. Accordingly, the target device of the transferred or migrated data is the same or similar in function to the device on which the data transfer or migration occurred. For example, data from a watch in network 1 is transferred or migrated to a watch in network 2. Referring to FIG. 67, 100 is a mobile phone, and 101 is a pop-up box output by the mobile phone.

In an embodiment, the method further includes at least one of the following:
the first device is not the same device as the first control center, and may be directly or indirectly connected to the first control center;
the second device may be any device in the group where the second control center is located;
the third device may be any device in the group where the third control center is located.

In an embodiment, the first device is not the same device as the first control center, and may be directly or indirectly connected to the first control center.

In an embodiment, the second device may be any device in the group where the second control center is located.

In an embodiment, the third device may be any device in the group where the third control center is located.

In an embodiment, the relevant data further includes at least one first relevant data and/or at least one second relevant data, and the operation of migrating or transferring the relevant data in the first device to the second device includes at least one of the following:
only backing up or transferring the first relevant data in the first device to the second device;
only backing up or transferring the second relevant data corresponding to the first relevant data in the first device to the second device;
in addition to backing up or transferring the first relevant data in the first device to the second device, backing up or transferring the second relevant data corresponding to the first relevant data to the second device;
backing up or transferring the first relevant data and corresponding update data in the first device to the second device;
backing up or transferring the second relevant data corresponding to the first relevant data and the corresponding update data in the first device to the second device;
backing up or transferring the first relevant data and the corresponding update data in the first device, and the update data of the second relevant data corresponding to the first relevant data to the second device.

In an embodiment, the relevant data further includes at least one first relevant data and/or at least one second relevant data, the operation of migrating or transferring the relevant data in the first device to the second device includes at least one of: only backing up or transferring the first relevant data in the first device to the second device; only backing up or transferring the second relevant data corresponding to the first relevant data in the first device to the second device; in addition to backing up or transferring the first relevant data in the first device to the second device, backing up or transferring the second relevant data corresponding to the first relevant data to the second device; backing up or transferring the first relevant data and corresponding update data in the first device to the second device; backing up or transferring the second relevant data corresponding to the first relevant data and the corresponding update data in the first device to the second device; backing up or transferring the first relevant data and the corresponding update data in the first device, and the update data of the second relevant data corresponding to the first relevant data to the second device.

In an embodiment, the migration method of the relevant data includes at least one of the following:
synchronous, asynchronous, real-time, appointment time, according to user settings, according to user habits, the same selection or setting as last time.

In an embodiment, the migration method of the relevant data includes at least one of synchronous, asynchronous, real-time, appointment time, according to user settings, according to user habits, the same selection or setting as last time.

In an embodiment, the relevant data can be migrated synchronously while setting up the third control center. The synchronous migration includes at least migration in real time. The relevant data can be migrated asynchronously while setting up the third control center. The migration method of asynchronous migration includes at least an appointment time. The migration method of appointment time is to set the specific migration time for the user. According to the user's setting, the user decides whether to migrate the relevant data, including when to migrate relevant data and whether to migrate relevant data, when to migrate relevant data includes one of synchronous, asynchronous, real-time, and scheduled time. According to user habits, it is the most frequent migration method among the migration methods used by users, including when to migrate relevant data and whether to migrate relevant data. When to migrate relevant data includes one of synchronous, asynchronous, real-time, and scheduled time. Same as the last selection or set to continue the migration method when switching the control center last time, including when to migrate relevant data and whether to migrate relevant data, when to migrate relevant data includes one of synchronous, asynchronous, real-time, and scheduled time.

In an embodiment, the processing method further includes:
before migrating or transferring or duplicating or backing up the control function of the first control center to the third control center, obtaining first corresponding information related to the third control center;
processing the first corresponding information.

In an embodiment, before migrating or transferring or duplicating or backing up the control function of the first control center to the third control center, the first corresponding information related to the third control center is obtained.

In an embodiment, the processing the first corresponding information includes at least one of the following:
if the first corresponding information meets the first preset condition, performing the operation of transferring the control function of the first control center to the third control center;
if the first corresponding information does not meet the first preset condition, not performing the operation of transferring the control function of the first control center to the third control center, and/or outputting prompt information at the first control center and/or the third control center.

In an embodiment, if the first corresponding information meets the first preset condition, the operation of transferring the control function of the first control center to the third control center is performed. If the first corresponding information does not meet the first preset condition, the operation of transferring the control function of the first control center to the third control center is not performed, and/or the prompt information on the first control center and/or the third control center is output.

In an embodiment, the first corresponding information includes first instruction information input on the second device and/or at least one of connection state information, network rate information, device state information, power information, storage space information, external environment information, use environment information, traffic information, use habit information, currently used application information, distance information, and user physiological information of the second device.

In an embodiment, the processing the first corresponding information includes at least one of the following: if the first corresponding information meets the first preset condition, performing the operation of transferring the control function of the first device to the second device, and/or, if the first corresponding information does not meet the first preset condition, not performing the operation of transferring the control function of the first device to the second device, and/or, outputting prompt information on the first device and/or the second device.

In an embodiment, the processing the first corresponding information includes: if the first corresponding information meets the first preset condition, performing the operation of transferring the control function of the first device to the second device, and/or, if the first corresponding information does not meet the first preset condition, not performing the operation of transferring the control function of the first device to the second device, and/or, outputting the prompt information on the first device and/or the second device.

In an embodiment, the meeting the first preset condition includes at least one of the following:
if the first instruction information is biometric information, and the biometric information meets preset biometric information, meeting the first preset condition;
if the first instruction information is password information, and the password information meets preset password information, meeting the first preset condition;
if at least one of the connection state information, the network rate information, the device state information, the power information, the storage space information, the external environment information, the use environment information, the traffic information, the use habit information, the currently used application information, the distance information, and the user physiological information of the second device meets the second preset condition, meeting the first preset condition.

In an embodiment, if the first instruction information is biometric information, and the biometric information meets the preset biometric information, the first preset condition is met. The preset biometric information is the biometric information of the owner saved in the first device, such as fingerprint information, iris information, face information. If the obtained biometric information matches the preset biological feature, for example, the obtained fingerprint information matches the preset fingerprint information, the first instruction information meets the first preset condition.

In an embodiment, if the first instruction information is password information, and the password information meets the preset password information, the first preset condition is met. The preset password information is the password information preset by the owner saved in the first device, such as digital password information, pattern password information. If the obtained password information matches the preset password information, for example, the obtained digital password information matches the preset digital password information, the first instruction information meets the first preset condition.

The first corresponding information is at least one of the connection state information, the network rate information, the device state information, the power information, the storage space information, the external environment information, the use environment information, the traffic information, the use habit information, the currently used application information, the distance information, and the user physiological information of the second device. Before transferring the control function, the first device needs to determine whether the control function can be transferred to the second device according to at least one of the connection state information, the network rate information, the device state information, the power information, the storage space information, the external environment information, the use environment information, the traffic information, the use habit information, the currently used application information, the distance information, and the user physiological information of the second device meeting the second preset condition. If at least one of the connection state information, the network rate information, the device state information, the power information, the storage space information, the external environment information, the use environment information, the traffic information, the use habit information, the currently used application information, the distance information, and the user physiological information of the second device meets the second preset condition, it is indicated that the first preset condition is met, the first device can transfer the control function to the second device, and perform the operation of transferring the control function of the first device to the second device. If none of the connection state information, the network rate information, the device state information, the power information, the storage space information, the external environment information, the use environment information, the traffic information, the use habit information, the currently used application information, the distance information, and the user physiological information of the second device meets the second preset condition, it is indicated that the first preset condition is not met, the operation of transferring the control function of the first device to the second device is not performed, and/or, the prompt information is output on the first device and/or the second device. The form of output prompt information includes but is not limited to voice prompts and screen pop-up prompts to prompt the user that the transfer of the control function of the first device failed and the reason for the transfer failure, such as the traffic information of the second device does not meet the second preset condition.

In an embodiment, before the operation Z30, the method includes:
determining whether the device is in the preset mode;
performing the operation Z30 when the device is in the preset mode.

In an embodiment, before obtaining the preset information, it is necessary to determine whether the relevant device is in the preset mode, and if so, the operation of obtaining the preset information is performed; if not, the operation of obtaining the preset information is not performed. The preset mode includes the group switching mode, that is, the preset information is acquired only when the device is in the group switching mode.

In this embodiment, the processing method includes: Z30, obtaining preset information, the preset information is provided by the group where the first control center and/or the second control center are located; Z31, detecting whether the preset information meets a preset rule; Z32, when the preset information meets the preset rule, performing a corresponding device control operation according to a preset strategy, and/or, when the preset information does not meet the preset rule, outputting prompt information. When the preset information meets the preset rule, the corresponding device control operations are performed according to the preset strategy, making the devices in the group more intelligent, convenient and faster during use.

The specific implementation manner of the processing device of the present application is basically the same as that of the embodiments of the above processing method, and will not be repeated here.

In an embodiment, the present application further provides a processing device, which is applied to the first control center and other devices controlled by the first control center in the network. As shown in FIG. 68, FIG. 68 is a schematic structural diagram of the hardware operating environment involved in the solution of the embodiment of the present application.

As shown in FIG. 68, the processing device may include a processor 1001 such as a CPU, a memory 1005, a user interface 1003, a network interface 1004, and a communication bus 1002. The communication bus 1002 is used to realize communication between these components. The user interface 1003 may include a display, and an input unit such as a keyboard. The user interface 1003 may also include standard wired interfaces and wireless interfaces. The network interface 1004 may include a standard wired interface and a wireless interface (such as a WI-FI interface). The memory 1005 may be a high-speed random access memory (RAM), or a non-volatile memory, such as a disk memory. The memory 1005 may also be a storage device independent of the aforementioned processor 1001.

The processing device may further include a radio frequency (RF) circuit, a sensor, an audio circuit, a WiFi module, and the like.

Those skilled in the art can understand that the processing device structure shown in FIG. 68 does not constitute a limitation on the processing device, and may include more or less components than those shown in the Figure, or a combination of components, or differently arranged components.

As shown in FIG. 68, the memory 1005 as a computer storage medium may include an operating system, a network communication module, a user interface module, and a device processing program. The operating system is a program that manages and controls the hardware and software resources of the device, and supports the operation of the device processing program and other software or programs.

In the processing device shown in FIG. 68, the user interface 1003 is mainly configured to connect to the terminal and perform data communication with the terminal, such as receiving an image to be steganographically sent by the terminal. The network interface 1004 is mainly configured for the background server to communicate data with the background server. The processor 1001 may be configured to call the device processing program stored in the memory 1005, and perform the operations of the processing method described above.

The specific implementation manners of the processing device of the present application are basically the same as the above embodiments of the processing method, and will not be repeated herein.

The present application also provides a device, the device including: a memory, a processor, and a computer program stored in the memory and operable on the processor. The computer program implements the operations of the above method when executed by the processor.

The present application also provides a computer storage medium, on which a computer program is stored. The computer program implements the operations of the above method when executed by the processor.

The present application also provides a computer program product, and the computer program product includes computer program code. When the computer program code is run on the computer, the computer is made to execute the methods described in the above various possible implementation manners.

The present application also provides a chip, including a memory and a processor, the memory is configured to store computer programs. The processor is configured to call and run the computer program from the memory, so that the device installed with the chip executes the methods described in the above various possible implementation manners.

Step codes such as S11 and S12 are used herein, the purpose of which is to express the corresponding content more clearly and concisely, and does not constitute a substantive limitation on the order. Those skilled in the art may perform S12 first and then S11 etc. during specific implementation, but these should all be within the protection scope of the present application.

The terms "comprising", "including" or any other variation thereof are intended to cover a non-exclusive inclusion. Thus, a process, a method, an article, or an apparatus including a set of elements includes not only those elements but also other elements not expressly listed, or includes elements inherent in such a process, a method, an article, or an apparatus. Without further limitations, an element defined by the phrase "comprising a ..." does not preclude the presence of additional identical elements in the process, the method, the article, or the apparatus including that element. Components, features, and elements with the same name in different embodiments of the present application may have the same or different meanings, and the specific meaning thereof needs to be determined according to its explanation in the specific embodiment or further combined with the context in the specific embodiment.

It should be understood that although the terms first, second, third, etc. may be used herein to describe various information, the information should not be limited to these terms. These terms are only used to distinguish information of the same type from one another. For example, without departing from the scope of the present application, first information may also be called second information, and similarly, second information may also be called first information. Depending on the context, the word "if" as used herein may be interpreted as "when" or "in response to determining". Furthermore, as used herein, the singular forms "a", "an" and "the" are intended to include the plural forms as well, unless the context indicates otherwise. It should be further understood that the terms "comprising", "including" indicate the existence of the described features, steps, operations, elements, components, items, species, and/or groups, However, it does not exclude the existence, occurrence or addition of one or more other features, steps, operations, elements, components, items, species, and/or groups. The terms "or", "and/or", "comprising at least one of' and the like used in the present application may be interpreted as inclusive, or mean any one or any combination. For example, "comprising at least one of: A, B, C" means "any of: A; B; C; A and B; A and C; B and C; A and B and C". As another example, "A, B, or C" or "A, B, and/or C" means "any of the following: A; B; C; A and B; A and C; B and C; A and B and C. Exceptions to this definition will only arise when combinations of elements, functions, steps or operations are inherently mutually exclusive in some way.

It should be understood that although the various steps in the flowchart in the embodiment of the present application are displayed sequentially as indicated by the arrows, these steps are not necessarily executed sequentially in the order indicated by the arrows. Unless otherwise specified herein, there is no strict order restriction on the execution of these steps, and they can be executed in other orders. Moreover, at least some of the steps in the figure may include multiple sub-steps or multiple stages. These sub-steps or stages are not necessarily executed at the same time, but can be executed at different times. The execution sequence thereof is not necessarily performed sequentially, but may be performed alternately or alternately with at least a part of other steps or sub-steps or stages of other steps.

Depending on the context, the words "if" as used herein may be interpreted as "when" or "in response to determining" or "in response to detecting". Similarly, depending on the context, the phrases "if determined" or "if detected (the stated condition or event)" could be interpreted as "when determined" or "in response to determining" or "when detected (the stated condition or event)" or "in response to detecting (the stated condition or event)".

The serial numbers of the above embodiments of the present application are for description only, and do not represent the advantages and disadvantages of the embodiments.

In the present application, for the description of the same or similar term concepts, technical solutions and/or application scenarios, generally, it is only described in detail when it appears for the first time, and when it appears repeatedly later, for the sake of brevity, it is not repeated. When understanding the content of the technical solutions of the present application, for the same or similar term concepts, technical solutions and/or application scenario descriptions that are not described in detail later, the previous relevant detailed descriptions can be referred to.

In the present application, the description of each embodiment has its own emphasis. For the parts that are not detailed or recorded in a certain embodiment, please refer to the relevant descriptions of other embodiments.

The various technical features of the technical solution of the present application can be combined arbitrarily. For the sake of concise description, all possible combinations of the various technical features in the above-mentioned embodiments are not described. However, as long as there is no contradiction in the combination of these technical features, it should be considered as within the scope of the present application.

Through the description of the above embodiment, those skilled in the art can clearly understand that the above-mentioned embodiments can be implemented by software plus a necessary general hardware platform, it can also be implemented by hardware, but in many cases the former is a better implementation. Based on this understanding, the technical solution of the present application can be embodied in the form of software product in essence or the part that contributes to the existing technology. The computer software product is stored on a storage medium (such as ROM/RAM, magnetic disk, optical disk) as described above, including several instructions to cause a terminal device (which can be a mobile phone, a computer, a server, a device, or a network device, etc.) to execute the method described in each embodiment of the present application.

The above are only some embodiments of the present application, and do not limit the scope of the present application thereto. Under the concept of the present application, equivalent structural transformations made according to the description and drawings of the present application, or direct/indirect application in other related technical fields are included in the scope of the present application.

## Claims

1. A processing method applied to a first control center, **characterized by** comprising following operations:
S10, obtaining preset information;
S11, detecting whether the preset information meets a preset rule; and
S12, in response that the preset information meets the preset rule, performing a corresponding device control operation according to a preset strategy, to transfer or migrate or duplicate or backup relevant data and/or control function of the first control center.

2. The method of claim 1, wherein the preset information comprises at least one of the following:
connection information comprising at least one of the following: connection state information, and network rate information;
state information comprising at least one of the following: device state information, power information, and storage space information;
environment information comprising at least one of the following: external environment information, and use environment information;
use information comprising at least one of the following: traffic information, use habit information, and currently used application information;
distance information; and
user physiological information.

3. The method of claim 2, wherein the operation S11 comprises at least one of the following:
detecting whether the connection state information meets a first preset rule;
detecting whether the network rate information meets a second preset rule;
detecting whether the device state information meets a third preset rule;
detecting whether the power information meets a fourth preset rule;
detecting whether the storage space information meets a fifth preset rule;
detecting whether the external environment information meets a sixth preset rule;
detecting whether the use environment information meets a seventh preset rule;
detecting whether the traffic information meets an eighth preset rule;
detecting whether the use habit information meets a ninth preset rule;
detecting whether the currently used application information meets a tenth preset rule;
detecting whether the distance information meets an eleventh preset rule; and
detecting whether the user physiological information meets a twelfth preset rule.

4. The method of claim 3, wherein the operation S12 comprises at least one of the following:
in response that the connection state information meets the first preset rule, performing the corresponding device control operation according to a first preset strategy;
in response that the network rate information meets the second preset rule, performing the corresponding device control operation according to a second preset strategy;
in response that the device state information meets the third preset rule, performing the corresponding device control operation according to a third preset strategy;
in response that the power information meets the fourth preset rule, performing the corresponding device control operation according to a fourth preset strategy;
in response that the storage space information meets the fifth preset rule, performing the corresponding device control operation according to a fifth preset strategy;
in response that the external environment information meets the sixth preset rule, performing the corresponding device control operation according to a sixth preset strategy;
in response that the use environment information meets the seventh preset rule, performing the corresponding device control operation according to a seventh preset strategy;
in response that the traffic information meets the eighth preset rule, performing the corresponding device control operation according to an eighth preset strategy;
in response that the use habit information meets the ninth preset rule, performing the corresponding device control operation according to a ninth preset strategy;
in response that the currently used application information meets the tenth preset rule, performing the corresponding device control operation according to a tenth preset strategy;
in response that the distance information meets the eleventh preset rule, performing the corresponding device control operation according to an eleventh preset strategy; and
in response that the user physiological information meets the twelfth preset rule, performing the corresponding device control operation according to a twelfth preset strategy.

5. The method of claim 4, wherein the performing the corresponding device control operation comprises:
in response that the preset information does not meet the first preset rule, the second preset rule, the third preset rule, the fourth preset rule, the fifth preset rule, the sixth preset rule, the seventh preset rule, the eighth preset rule, the ninth preset rule, the tenth preset rule, the eleventh preset rule, or the twelfth preset rule, setting the corresponding device as a second control center.

6. The method of claim 5, wherein the operation of performing the corresponding device control operation comprises:
migrating the relevant data in the first control center to the second control center; and/or
transferring the control function of the first control center to the second control center.

7. The method of claim 6, wherein the relevant data comprises at least one of the following:
connection information data, setting item parameter data and relevant download data.

8. The method of claim 6, wherein the relevant data further comprises at least one first relevant data and/or at least one second relevant data, the operation of migrating or transferring or duplicating or backing up relevant data in the first control center to the second control center comprises at least one of the following:
only backing up or transferring the first relevant data in the first control center to the second control center;
only backing up or transferring the second relevant data corresponding to the first relevant data in the first control center to the second control center;
in addition to backing up or transferring the first relevant data in the first control center to the second control center, also backing up or transferring the second relevant data corresponding to the first relevant data to the second control center;
backing up or transferring the first relevant data and corresponding update data in the first control center to the second control center;
backing up or transferring the second relevant data corresponding to the first relevant data and the corresponding update data in the first control center to the second control center; and
backing up or transferring the first relevant data and the corresponding update data in the first control center, and the update data of the second relevant data corresponding to the first relevant data to the second control center.

9. The method of claim 6, wherein a method for migrating the relevant data comprises at least one of the following:
synchronous, asynchronous, real-time, appointment time, according to user settings, according to user habits, same selection or setting as last time.

10. The method of claim 6, further comprising:
before migrating or transferring or duplicating or backing up the control function of the first control center to the second control center, obtaining first corresponding information related to the second control center; and
processing the first corresponding information.

11. The method of claim 10, wherein the processing the first corresponding information comprises at least one of the following:
in response that the first corresponding information meets a first preset condition, performing the operation of transferring the control function of the first control center to the second control center; and
in response that the first corresponding information does not meet the first preset condition, not performing the operation of transferring the control function of the first control center to the second control center, and/or outputting prompt information at the first control center and/or the second control center.

12. The method of claim 11, wherein the first corresponding information comprises a first instruction information input on the second control center, and at least one of the connection state information, the network rate information, the device state information, the power information, the storage space information, the external environment information, the use environment information, the traffic information, the use habit information, the currently used application information, the distance information and the user physiological information of the second control center, the meeting the first preset condition comprises at least one of the following:
in response that the first instruction information is biometric information, and the biometric information meets preset biometric information, meeting the first preset condition;
in response that the first instruction information is password information, and the password information meets preset password information, meeting the first preset condition; and
in response that at least one of the connection state information, the network rate information, the device state information, the power information, the storage space information, the external environment information, the use environment information, the traffic information, the use habit information, the currently used application information, the distance information and the user physiological information of the second control center meets a second preset condition, meeting the first preset condition.

13. The method of claim 6, further comprising:
after migrating or transferring or duplicating or backing up the control function of the first control center to the second control center, receiving second instruction information sent by other devices controlled by the second control center; and
responding to the second instruction information.

14. The method of any one of claims 6 to 13, further comprising:
after migrating or transferring or duplicating or backing up the control function of the first control center to the second control center, outputting relevant prompt information at the first control center and/or the second control center.

15. The method of any one of claims 1 to 13, wherein before the operation S10, the method comprises:
determining whether it is a preset mode;
performing the operation S10 in response that it is the preset mode.

16. A processing method, **characterized by** comprising following operations:
outputting device list information at a first control center;
determining a target control center according to a selection operation or determining a target control center according to a preset rule;
detecting whether relevant information of the target control center meets a preset requirement; and
in response that the relevant information of the target control center meets the preset requirement, performing a corresponding device control operation according to a preset strategy, to transfer or migrate or duplicate or backup relevant data and/or control function of the first control center.

17. A processing method applied to an initiator device, **characterized by** comprising following operations:
A1, obtaining connection information; and
A2, connecting a target device according to a first preset connection rule and/or a second preset connection rule and the connection information.

18. A processing method applied to a terminal, **characterized by** comprising following operations:
A10, obtaining connection information of a target device according to a request from an initiator device; and
A20, sending the connection information, to make the initiator device connect to the target device according to a first preset connection rule and/or a second preset connection rule and the connection information.

19. A processing method applied to a target device, **characterized by** comprising following operations:
A100, obtaining connection information according to a request from a terminal; and
A200, sending the connection information, to make an initiator device connected to the terminal connect to the target device according to a first preset connection rule and/or a second preset connection rule and the connection information.

20. A processing method applied to an initiator device, **characterized by** comprising following operations:
obtaining a first connection reference information;
in response that the first connection reference information meets a preset connection condition, obtaining connection information provided by a target device; and
establishing a connection with the target device according to the connection information and/or a first preset strategy, and/or updating the first preset strategy according to a connection result.

21. A processing method applied to a target device, **characterized by** comprising following operations:
obtaining first connection reference information in response to a connection request from an initiator device, and obtaining connection information when the first connection reference information meets a preset connection condition; and
sending the connection information to the initiator device, to make the initiator device establish a connection with the target device according to the connection information and/or a first preset strategy, and/or updating the first preset strategy according to a connection result.

22. A processing method, **characterized by** comprising following operations:
C10, outputting at least one first control information and at least one second control information in response that a preset event occurs; and
C20, receiving operation information, performing a corresponding control according to the operation information and/or a first preset strategy, and/or updating the first control information and/or the second control information.

23. A processing method, **characterized by** comprising following operations:
C100, obtaining first operation information of a first operation and/or second operation information of a second operation;
C200, detecting whether the first operation information and/or the second operation information and/or a management device meet a preset condition; and
C300, in response that the first operation information and/or the second operation information and/or the management device meet the preset condition, performing corresponding control according to a first preset strategy.

24. A processing method applied to at least one control center, **characterized by** comprising following operations:
in response that a preset event occurs on a connection network, generating and/or determining a response instruction of a target device corresponding to the preset event; and
obtaining control judgment information, in response that the control judgment information meets a control condition, sending, by the control center, the response instruction to the target device, and/or performing, by the control center, a preset control operation.

25. A processing method applied to at least one control center, **characterized by** comprising following operations:
D00, in response that a preset event occurs on a connection network, obtaining control judgment information, and in response that the control judgment information meets a control condition, performing operation D10;
D10, obtaining preset information and/or a preset strategy; and
D20, determining and/or performing a corresponding control strategy according to the preset information and/or the preset strategy.

26. A processing method applied to at least one control center, **characterized by** comprising following operations:
D210, in response that a preset event occurs on a connection network, generating and/or determining a response instruction of a target device corresponding to the preset event, and/or obtaining preset information and/or a preset strategy; and
D220, determining and/or performing a corresponding control strategy according to the response instruction, and/or the preset information and/or the preset strategy.

27. A processing method applied to at least one control center, **characterized by** comprising following operations:
in response that a preset event occurs on a connection network, generating and/or determining a response instruction corresponding to a preset event;
obtaining control judgment information, and determining a target device according to the control judgment information and/or a preset rule; and
sending the response instruction to the target device immediately or with a delay or at regular intervals or periodically, and/or performing, by the control center, a preset control operation.

28. A processing method applied to a processing device, **characterized by** comprising following operations:
detecting whether a preset event is received; and
in response to receiving the preset event, performing a corresponding processing according to a preset strategy, and/or performing a first processing on at least one first device directly connected to the processing device according to a first rule, and/or, performing a second processing on at least one second device indirectly connected to the processing device according to a second rule.

29. A processing method applied to a processing device, **characterized by** comprising following operations:
detecting whether a preset event meets a first preset rule; and
in response that the preset event meets the first preset rule, performing a corresponding processing according to a preset strategy, and/or performing a preset processing on at least one other device connected and/or associated with the processing device according to a second preset rule.

30. A processing method applied to a processing device, **characterized by** comprising following operations:
F10, obtaining first preset information and/or second preset information, wherein the first preset information is provided by at least one first device directly connected to the processing device, and the second preset information is provided by at least one second device indirectly connected to the processing device;
F20, processing the first preset information and/or the second preset information according to a preset rule to obtain target information; and
F30, sending the target information, to make at least one of the first device, the second device, and at least one controlled device perform corresponding processing.

31. A processing method applied to a processing device, **characterized by** comprising following operations:
F100, obtaining target information, wherein the target information is obtained by the processing device processing first preset information provided by at least one first device and/or second preset information provided by at least one second device based on a first preset rule;
F200, detecting whether reference information of the first device and/or the second device meets a second preset rule; and
F300, in response that the reference information of the first device and/or the second device meets the second preset rule, sending the target information, to make at least one of the first device, the second device, and at least one controlled device perform corresponding processing.

32. A processing method applied to a first device directly connected to a processing device, **characterized by** comprising following operations:
F1, providing first preset information in response to a preset information acquisition request of the processing device;
F2, receiving target information corresponding to the first preset information; and
F3, performing corresponding processing according to the target information.

33. A processing method applied to a second device indirectly connected to a processing device, **characterized by** comprising following operations:
F1000, providing second preset information in response to a preset information acquisition request of the processing device;
F2000, receiving target information corresponding to the second preset information; and
F3000, performing corresponding processing according to the target information.

34. A processing method applied to a second device connected to a first device, **characterized by** comprising following operations:
G10, obtaining at least one third device information connected to a second device through the first device;
G20, detecting whether at least one of the first device information, the second device information, and the third device information meets a preset condition; and
G30, in response that at least one of the first device information, the second device information, and the third device information meets the preset condition, perform corresponding processing according to a preset strategy.

35. The method of claim 34, wherein the operation G20 comprises at least one of the following:
a first preset event occurs on the first device;
a second preset event occurs on the second device; and
a third preset event occurs on the third device.

36. The method of claim 35, wherein the first preset event or the second preset event or the third preset event comprises at least one of the following:
user physiological information meets a first preset condition;
system information of a corresponding device meets a second preset condition;
communication information of the corresponding device meets a third preset condition;
application information of the corresponding device meets a fourth preset condition;
reminder information of the corresponding device meets a fifth preset condition;
detection information of the corresponding device meets a sixth preset condition;
state information of the corresponding device meets a seventh preset condition; and
environment information of the corresponding device meets an eighth preset condition.

37. The method of any one of claims 34 to 36, wherein the operation G30 comprises at least one of the following:
the first device performs processing according to a first preset strategy;
the second device performs processing according to a second preset strategy; and
the third device performs processing according to a third preset strategy.

38. The method of claim 37, wherein the first preset strategy or the second preset strategy or the third preset strategy comprises at least one of the following:
transferring or updating a corresponding preset event;
transferring the corresponding preset event after conversion;
at least one of the first device, the second device and the third device being disconnected from a connection network;
at least one of the first device, the second device and the third device being connected to other networks;
at least one of the first device, the second device, and the third device opening a preset application and/or a service;
at least one of the first device, the second device, and the third device closing the preset application and/or the service;
parameters of a current running application and/or service of at least one of the first device, the second device, and the third device being changed;
a current mode of at least one of the first device, the second device, and the third device being switched; and
a strategy for processing current data of at least one of the first device, the second device, and
the third device being changed.

39. The method of any one of claims 34 to 36, wherein the operation G30 comprises at least one of the following:
outputting an operation option and/or prompt information corresponding to the preset event on the first device;
outputting the operation option and/or the prompt information corresponding to the preset event on the second device; and
outputting the operation option and/or the prompt information corresponding to the preset event on the third device.

40. The method of claim 39, further comprising:
receiving operation information for the operation option, and updating and/or transferring the preset event according to the operation information.

41. A processing method applied to a second device connected to a first device, **characterized by** comprising following operations:
G100, obtaining at least one third device information through the first device and/or the server;
G200, detecting whether the first device and/or the third device information meets a preset rule; and
G300, in response that the first device and/or the third device information meets the preset rule, perform corresponding processing according to a preset strategy.

42. The method of claim 41, wherein the operation G200 comprises at least one of the following:
a first preset event occurs on the first device;
a second preset event occurs on the second device; and
a third preset event occurs on the third device.

43. The method of claim 42, wherein the first preset event or the second preset event or the third preset event comprises at least one of the following:
user physiological information meets a first preset condition;
system information of a corresponding device meets a second preset condition;
communication information of the corresponding device meets a third preset condition;
application information of the corresponding device meets a fourth preset condition;
reminder information of the corresponding device meets a fifth preset condition;
detection information of the corresponding device meets a sixth preset condition;
state information of the corresponding device meets a seventh preset condition; and
environment information of the corresponding device meets an eighth preset condition.

44. The method of any one of claims 41 to 43, wherein the operation G300 comprises at least one of the following:
the first device performs processing according to a first preset strategy;
the second device performs processing according to a second preset strategy; and
the third device performs processing according to a third preset strategy.

45. The method of claim 44, wherein the first preset strategy or the second preset strategy or the third preset strategy comprises at least one of the following:
transferring or updating a corresponding preset event;
transferring the corresponding preset event after conversion;
at least one of the first device, the second device and the third device being disconnected from a connection network;
at least one of the first device, the second device and the third device being connected to other networks;
at least one of the first device, the second device, and the third device opening a preset application and/or a service;
at least one of the first device, the second device, and the third device closing the preset application and/or the service;
parameters of a current running application and/or service of at least one of the first device, the second device, and the third device being changed;
a current mode of at least one of the first device, the second device, and the third device being switched; and
a strategy for processing current data of at least one of the first device, the second device, and the third device being changed.

46. The method of any one of claims 41 to 43, wherein the operation G300 comprises at least one of the following:
outputting an operation option and/or prompt information corresponding to the preset event on the first device;
outputting the operation option and/or the prompt information corresponding to the preset event on the second device; and
outputting the operation option and/or the prompt information corresponding to the preset event on the third device.

47. The method of claim 46, further comprising:
receiving operation information for the operation option, and updating and/or transferring the preset event according to the operation information.

48. A processing method applied to a processing device, **characterized by** comprising following operations:
H10, detecting whether a preset event occurs;
H20, in response that the preset event occurs, detecting whether the device corresponding to the preset event meets a preset condition; and
H30, in response that the device corresponding to the preset event meets the preset condition, outputting prompt information corresponding to the preset event according to a prompt strategy.

49. The method of claim 48, wherein the processing device is in a connection network, the connection network comprises the processing device, a first device and a second device, and the occurrence of the preset event comprises at least one of the following:
a first preset event occurs on the processing device;
a second preset event occurs on the first device; and
a third preset event occurs on the second device.

50. The method of claim 49, wherein the first preset event or the second preset event or the third preset event comprises at least one of the following:
at least one of the processing device, the first device and the second device is in or switched to a preset mode;
at least one of the processing device, the first device and the second device is in or switched to a preset environment;
at least one of the processing device, the first device, and the second device detects that the user physiological information meets a first preset condition;
at least one of the processing device, the first device, and the second device detects that the user state meets a second preset condition;
at least one preset parameter detected by at least one of the processing device, the first device, and the second device meets a parameter condition;
at least one new device is newly added in the connection network or the maximum number of connection devices has been reached;
at least one device in the connection network is disconnected or the minimum number of connection devices has been reached;
at least one of the processing device, the first device and the second device receives at least one message;
a power value of at least one of the processing device, the first device and the second device is lower than or equal to a preset power threshold;
a connection signal value of at least one of the processing device, the first device and the second device is less than or equal to a preset signal threshold;
a resource occupancy value of at least one of the processing device, the first device, and the second device is greater than or equal to a preset resource threshold;
an running state of at least one of the processing device, the first device and the second device is stuck or not smooth;
a preset application and/or a preset function of at least one of the processing device, the first device, and the second device is turned on;
a security level of at least one of the processing device, the first device, and the second device is less than or equal to a preset security level threshold;
a working duration of at least one of the processing device, the first device and the second device is greater than or equal to a preset working duration threshold; and
at least one of the processing device, the first device and the second device is at a preset position.

51. The method of any one of claims 48 to 50, wherein there is only one preset event, and meeting the preset condition comprises at least one of the following:
the preset event is triggered by at least one of the processing device, the first device, and the second device;
a time and/or a place triggered by the preset event meets a first preset condition; and
content information of the preset event meets a second preset condition.

52. The method of any one of claims 48 to 50, wherein the preset events comprise at least two, and meeting the preset condition comprises at least one of the following:
the preset event is triggered by the processing device, the first device and/or the second device;
the time and/or the place triggered by the preset event meets a third preset condition;
a trigger sequence of the preset events meets a fourth preset condition;
a priority of the preset event meets a fifth preset condition; and
the content information of the preset event meets a sixth preset condition.

53. The method of any one of claims 48 to 50, wherein the outputting prompt information corresponding to the preset event according to a prompt strategy comprises at least one of the following:
outputting an operation option and/or prompt information corresponding to the preset event on the processing device;
outputting the operation option and/or the prompt information corresponding to the preset event on the first device; and
outputting the operation option and/or the prompt information corresponding to the preset event on the second device.

54. The method of claim 53, further comprising:
receiving operation information for the operation option, and updating and/or transferring and/or outputting the preset event according to the operation information.

55. A processing method applied to a processing device, **characterized by** comprising following operations:
H100, detecting whether a preset event occurs;
H200, in response that the preset event occurs, obtaining a prompt strategy; and
H300, outputting prompt information corresponding to the preset event according to the prompt strategy.

56. The method of claim 55, wherein the processing device is in a connection network, the connection network comprises the processing device, a first device and a second device, and the occurrence of the preset event comprises at least one of the following:
a first preset event occurs on the processing device;
a second preset event occurs on the first device; and
a third preset event occurs on the second device.

57. The method of claim 56, wherein the first preset event or the second preset event or the third preset event comprises at least one of the following:
at least one of the processing device, the first device and the second device is in or switched to a preset mode;
at least one of the processing device, the first device and the second device is in or switched to a preset environment;
at least one of the processing device, the first device, and the second device detects that the user physiological information meets a first preset condition;
at least one of the processing device, the first device, and the second device detects that the user state meets a second preset condition;
at least one preset parameter detected by at least one of the processing device, the first device, and the second device meets a parameter condition;
at least one new device is newly added in the connection network or the maximum number of connection devices has been reached;
at least one device in the connection network is disconnected or the minimum number of connection devices has been reached;
at least one of the processing device, the first device and the second device receives at least one message;
a power value of at least one of the processing device, the first device and the second device is lower than or equal to a preset power threshold;
a connection signal value of at least one of the processing device, the first device and the second device is less than or equal to a preset signal threshold;
a resource occupancy value of at least one of the processing device, the first device, and the second device is greater than or equal to a preset resource threshold;
an running state of at least one of the processing device, the first device and the second device is stuck or not smooth;
a preset application and/or a preset function of at least one of the processing device, the first device, and the second device is turned on;
a security level of at least one of the processing device, the first device, and the second device is less than or equal to a preset security level threshold;
a working duration of at least one of the processing device, the first device and the second device is greater than or equal to a preset working duration threshold; and
at least one of the processing device, the first device and the second device is at a preset position.

58. The method of any one of claims 55 to 57, wherein the outputting prompt information corresponding to the preset event according to a prompt strategy comprises at least one of the following:
outputting an operation option and/or prompt information corresponding to the preset event on the processing device;
outputting the operation option and/or the prompt information corresponding to the preset event on the first device; and
outputting the operation option and/or the prompt information corresponding to the preset event on the second device.

59. The method of claim 58, further comprising:
receiving operation information for the operation option, and updating and/or transferring and/or outputting the preset event according to the operation information.

60. A processing method, **characterized by** comprising following operations:
in response that first preset connection information of a connection network meets a preset connection rule and/or second preset connection information of a connection network meets a preset connection condition, obtaining preset prompt information; and
outputting the preset prompt information according to a preset prompt strategy.

61. The method of claim 60, wherein the first preset connection information comprises at least one of the following:
power information, timing shutdown information, location information, time information, user identity information, use habit information, device type information, connection state information, use state information, and environment information.

62. The method of claim 61, wherein:
in response that the first preset connection information comprises the power information and the power information meets a first preset connection rule, obtaining first preset prompt information;
in response that the first preset connection information comprises the timing shutdown information and the timing shutdown information meets a second preset connection rule, obtaining second preset prompt information;
in response that the first preset connection information comprises the location information and the location information meets a third preset connection rule, obtaining third preset prompt information;
in response that the first preset connection information comprises the time information and the time information meets a fourth preset connection rule, obtaining fourth preset prompt information;
in response that the first preset connection information comprises the user identity information and the user identity information meets a fifth preset connection rule, obtaining fifth preset prompt information;
in response that the first preset connection information comprises the use habit information and the use habit information meets a sixth preset connection rule, obtaining sixth preset prompt information;
in response that the second preset connection information comprises the device type information and the device type information meets a seventh preset connection rule, obtaining seventh preset prompt information;
in response that the second preset connection information comprises the connection state information and the connection state information meets an eighth preset connection rule, obtaining eighth preset prompt information;
in response that the second preset connection information comprises the use state information and the use state information meets a ninth preset connection rule, obtaining ninth preset prompt information; and
in response that the second preset connection information comprises the environment information and the environment information meets a tenth preset connection rule, obtaining tenth preset prompt information.

63. The method of claim 62, comprising:
outputting first preset prompt information according to a first preset prompt strategy;
outputting second preset prompt information according to a second preset prompt strategy;
outputting third preset prompt information according to a third preset prompt strategy;
outputting fourth preset prompt information according to a fourth preset prompt strategy;
outputting fifth preset prompt information according to a fifth preset prompt strategy;
outputting sixth preset prompt information according to a sixth preset prompt strategy;
outputting seventh preset prompt information according to a seventh preset prompt strategy;
outputting eighth preset prompt information according to an eighth preset prompt strategy;
outputting ninth preset prompt information according to a ninth preset prompt strategy;
outputting tenth preset prompt information according to a tenth preset prompt strategy.

64. The method of any one of claims 60 to 63, comprising:
in response that the device in the connection network is not used, obtaining third preset connection information and determining the preset prompt strategy according to the third preset connection information.

65. The method of claim 64, wherein the third preset connection information comprises at least one of the following:
use frequency information, use habit information, and use information.

66. The method of claim 65, wherein the preset prompt strategy comprises one of the following:
outputting the preset prompt information on the device whose use frequency information meets a preset use frequency requirement;
outputting the preset prompt information on the device whose use habit information meets a preset use habit requirement; and
outputting the preset prompt information on the device whose use information meets a preset use requirement.

67. The method of claim 64, wherein the preset prompt strategy further comprises one of the following:
in response to detecting the use of a device in the connection network, outputting the preset prompt information on the device, and notifying other devices in the connection network except the device to cancel the output of the preset prompt information;
broadcasting the preset prompt information to devices in the connection network; and
outputting the preset prompt information to the device currently in use.

68. The method of claim 67, wherein ways to determine which device is currently in use comprise at least one of the following:
the device is on or awake, has apps and services running on the device, and is not powered off or asleep.

69. A processing method, **characterized by** comprising following operations:
Z10, obtaining first preset information and/or second preset information;
Z11, detecting whether the first preset information and/or the second preset information meets a preset rule; and
Z12, in response that the first preset information and/or the second preset information meets the preset rule, performing a corresponding device control operation according to a preset strategy.

70. The method of claim 69, comprising at least one of the following:
the first preset information is provided by a first control center and/or other devices controlled by the first control center;
the second preset information is provided by a second control center and/or other devices controlled by the second control center;
both the first control center and the second control center are directly or indirectly connected to at least one third device;
both the first control center and the second control center are bound to at least one fourth device;
the first control center and the second control center are the same device or different devices;
in response that the first control center detects that once the connection between the second control center and the fourth device is established, transferring or duplicating a control function and/or relevant data on the first control center to the second control center according to a binding switching strategy; and
after the first control center transfers or replicates the control function and/or the relevant data to the second control center, disconnecting the first control center from the fourth device or maintaining a normal connection state in a non-control mode.

71. The method of claim 70, wherein the binding switching strategy comprises at least one of the following:
only transferring or duplicating the control function on the first control center to the second control center immediately or with a delay or timing;
only transferring or duplicating the relevant data on the first control center to the second control center immediately or with a delay or timing;
transferring or duplicating the control function and/or the relevant data on the first control center to the second control center immediately or with a delay or timing; and
outputting prompt information at the first control center and/or the second control center, determining whether to transfer or duplicate the control function and/or the relevant data on the first control center to the second control center immediately or with a delay or timing according to the user operation.

72. The method of claim 70, wherein in response that the first control center and the second control center are different devices, and only one effective control center is allowed in the connection network at the same time, the currently effective control center is determined according to a strategy determined by the control center.

73. The method of claim 72, wherein the strategy determined by the control center comprises at least one of the following:
same as user's last selection;
selecting the first control center or the second control center by default;
setting the target control center with the most successful times or the least failed times in a certain period of time;
selecting one at random;
selecting most convenient one according to the user's use habits or operation;
selecting one of the requirements where at least one of network rate information, state information, environment information, use information, distance information, and user physiological information meets the requirements.

74. A processing method, **characterized by** comprising following operations:
Z20, obtaining first information and/or second information and/or third information, wherein the first information is provided by at least one first device directly connected to a first control center, the second information is provided by at least one second device indirectly connected to the first control center, and the third information is provided by a web server connected to at least one of the first control center, the first device, and the second device;
Z21, processing the first information and/or the second information and/or the third information according to a processing rule to obtain at least one recommendation information;
Z22, detecting whether the first control center, and/or the first device, and/or the second device meet recommendation requirements; and
Z23, in response that the first control center, and/or the first device, and/or the second device meet the recommendation requirements, performing a corresponding device control operation according to a preset recommendation strategy, and/or in response that the first control center, and/or the first device, and/or the second device do not meet the recommendation requirements, outputting prompt information.

75. The method of claim 74, wherein the operation Z21 comprises at least one of the following:
processing the first information according to a first processing rule to obtain at least one first recommendation information;
processing the second information according to a second processing rule to obtain at least one second recommendation information;
processing the third information according to a third processing rule to obtain at least one third recommendation information; and
processing at least two of the first information, the second information and the third information according to a fourth processing rule to obtain at least one third recommendation information.

76. The method of claim 75, wherein the first processing rule and/or the second processing rule and/or the third processing rule and/or the fourth processing rule comprise at least one of the following:
obtaining corresponding recommendation information according to local and/or network data analysis or artificial intelligence algorithms;
extracting an information keyword and/or a corresponding parameter value, and obtaining corresponding recommendation information according to a preset keyword and/or a parameter value recommendation strategy; and
determining corresponding recommendation information according to user habit or setting or selection.

77. The method of any one of claims 74 to 76, wherein the first information and/or second information comprises at least one of the following:
connection information comprising at least one of the following: connection state information, and network rate information;
state information comprising at least one of the following: device state information, power information, and storage space information;
environment information comprising at least one of the following: external environment information, and use environment information;
use information comprising at least one of the following: traffic information, use habit information, and currently used application information;
distance information;
user physiological information; and
device identification information.

78. The method of claim 77, wherein the operation Z22 comprises:
detecting whether the first control center, and/or the first device, and/or the second device meet a first preset rule, a second preset rule, a third preset rule, a fourth preset rule, a fifth preset rule, a sixth preset rule, a seventh preset rule, an eighth preset rule, a ninth preset rule, a tenth preset rule, an eleventh preset rule or a twelfth preset rule.

79. The method of claim 78, wherein the operation Z23 comprises:
in response that the connection state information meets the first preset rule, performing the corresponding device control operation according to a first preset strategy;
in response that the network rate information meets the second preset rule, performing the corresponding device control operation according to a second preset strategy;
in response that the device state information meets the third preset rule, performing the corresponding device control operation according to a third preset strategy;
in response that the power information meets the fourth preset rule, performing the corresponding device control operation according to a fourth preset strategy;
in response that the storage space information meets the fifth preset rule, performing the corresponding device control operation according to a fifth preset strategy;
in response that the external environment information meets the sixth preset rule, performing the corresponding device control operation according to a sixth preset strategy;
in response that the use environment information meets the seventh preset rule, performing the corresponding device control operation according to a seventh preset strategy;
in response that the traffic information meets the eighth preset rule, performing the corresponding device control operation according to an eighth preset strategy;
in response that the use habit information meets the ninth preset rule, performing the corresponding device control operation according to a ninth preset strategy;
in response that the currently used application information meets the tenth preset rule, performing the corresponding device control operation according to a tenth preset strategy;
in response that the distance information meets the eleventh preset rule, performing the corresponding device control operation according to an eleventh preset strategy; and
in response that the user physiological information meets the twelfth preset rule, performing the corresponding device control operation according to a twelfth preset strategy.

80. The method of claim 79, wherein the performing the corresponding device control operation comprises:
setting at least one of the first control center, the first device, and/or the second device in compliance with the first preset rule, the second preset rule, the third preset rule, the fourth preset rule, the fifth preset rule, the sixth preset rule, the seventh preset rule, the eighth preset rule, the ninth preset rule, the tenth preset rule, the eleventh preset rule or the twelfth preset rule as a recommendation information output device, or outputting corresponding recommendation information to at least one of the first control center, the first device and/or the second device.

81. The method of claim 80, wherein the outputting the corresponding recommendation information to at least one of the first control center, the first device and/or the second device comprises at least one of the following:
outputting first recommendation information to the first device;
outputting second recommendation information to the second device; and
outputting at least one of the first recommendation information, the second recommendation information and third recommendation information to the first control center.

82. The method of claim 81, comprising at least one of the following:
outputting corresponding recommendation information to at least one of the first control center, the first device and/or the second device simultaneously, at regular intervals or with a delay;
ways in which the first control center and/or the first device and/or the second device output corresponding recommendation information are the same or different; and
outputting the recommendation information through at least one of interface output, voice broadcast and/or light prompt.

83. A processing method, **characterized by** comprising following operations:
Z30, obtaining preset information;
Z31, detecting whether the preset information meets a preset rule; and
Z32, in response that the preset information meets the preset rule, performing a corresponding device control operation according to a preset strategy, and/or in response that the preset information does not meet the preset rule, outputting prompt information.

84. The method of claim 83, wherein the preset information comprises at least one of the following:
connection information comprising at least one of the following: connection state information, network rate information;
state information comprising at least one of the following: device state information, power information, storage space information;
environment information comprising at least one of the following: external environment information, use environment information;
use information comprising at least one of the following: traffic information, use habit information, and currently used application information;
distance information; and
user physiological information.

85. The method of claim 84, wherein the operation Z31 comprises at least one of the following:
detecting whether the connection state information meets a first preset rule;
detecting whether the network rate information meets a second preset rule;
detecting whether the device state information meets a third preset rule;
detecting whether the power information meets a fourth preset rule;
detecting whether the storage space information meets a fifth preset rule;
detecting whether the external environment information meets a sixth preset rule;
detecting whether the use environment information meets a seventh preset rule;
detecting whether the traffic information meets an eighth preset rule;
detecting whether the use habit information meets a ninth preset rule;
detecting whether the currently used application information meets a tenth preset rule;
detecting whether the distance information meets an eleventh preset rule; and
detecting whether the user physiological information meets a twelfth preset rule.

86. The method of claim 85, wherein the operation Z32 comprises at least one of the following:
in response that the connection state information meets the first preset rule, performing the corresponding device control operation according to a first preset strategy;
in response that the network rate information meets the second preset rule, performing the corresponding device control operation according to a second preset strategy;
in response that the device state information meets the third preset rule, performing the corresponding device control operation according to a third preset strategy;
in response that the power information meets the fourth preset rule, performing the corresponding device control operation according to a fourth preset strategy;
in response that the storage space information meets the fifth preset rule, performing the corresponding device control operation according to a fifth preset strategy;
in response that the external environment information meets the sixth preset rule, performing the corresponding device control operation according to a sixth preset strategy;
in response that the use environment information meets the seventh preset rule, performing the corresponding device control operation according to a seventh preset strategy;
in response that the traffic information meets the eighth preset rule, performing the corresponding device control operation according to an eighth preset strategy;
in response that the use habit information meets the ninth preset rule, performing the corresponding device control operation according to a ninth preset strategy;
in response that the currently used application information meets the tenth preset rule, performing the corresponding device control operation according to a tenth preset strategy;
in response that the distance information meets the eleventh preset rule, performing the corresponding device control operation according to an eleventh preset strategy; and
in response that the user physiological information meets the twelfth preset rule, performing the corresponding device control operation according to a twelfth preset strategy.

87. The method of claim 86, wherein the performing the corresponding device control operation comprises:
setting the corresponding device whose preset information does not meet the first preset rule, the second preset rule, the third preset rule, the fourth preset rule, the fifth preset rule, the sixth preset rule, the seventh preset rule, the eighth preset rule, the ninth preset rule, the tenth preset rule, the eleventh preset rule or the twelfth preset rule as a third control center, and/or the corresponding device being one of the devices controlled by the first control center.

88. The method of claim 87, wherein the performing the corresponding device control operation further comprises:
in response that the third control center belongs to a group where the first control center belongs, only migrating or transferring a control function of the first control center to the third control center;
in response that the third control center belongs to a group where the first control center belongs, only migrating or transferring relevant data of the first control center to the third control center;
in response that the third control center belongs to a group where the second control center belongs, migrating or transferring the control function and/or the relevant data of the first control center to the third control center, and/or migrating or transferring a relevant function and/or relevant data of at least one first device in a group where the first control center is located to at least one second device in a group where the second control center is located; and
in response that the third control center does not belong to the group where the first control center is located, nor does it belong to the group where the second control center is located, migrating or transferring the control function and/or the relevant data of the first control center to the third control center, and/or migrating or transferring the relevant function and/or the relevant data of at least one first device in the group where the first control center is located to at least one third device in the group where the third control center is located.

89. The method of claim 88, further comprising at least one of the following:
the first device is not the same device as the first control center, and is directly or indirectly connected to the first control center;
the second device is any device in the group where the second control center is located; and
the third device is any device in the group where the third control center is located.

90. The method of claim 88 or 89, wherein the relevant data further comprises at least one first relevant data and/or at least one second relevant data, and the operation of migrating or transferring the relevant data in the first device to the second device comprises at least one of the following:
only backing up or transferring the first relevant data in the first device to the second device;
only backing up or transferring second relevant data corresponding to the first relevant data in the first device to the second device;
in addition to backing up or transferring the first relevant data in the first device to the second device, backing up or transferring the second relevant data corresponding to the first relevant data to the second device;
backing up or transferring the first relevant data and corresponding update data in the first device to the second device;
backing up or transferring the second relevant data corresponding to the first relevant data and the corresponding update data in the first device to the second device; and
backing up or transferring the first relevant data and the corresponding update data in the first device, and the update data of the second relevant data corresponding to the first relevant data to the second device.

91. The method of claim 90, comprising at least one of the following:
the method for migrating the relevant data comprises at least one of the following: synchronous, asynchronous, real-time, appointment time, according to user settings, according to user habits, same as last selection or setting;
before migrating or transferring or duplicating or backing up the control function of the first device to the second device, obtaining first corresponding information related to the second device, and processing the first corresponding information.

92. The method of claim 91, comprising at least one of the following:
the first corresponding information comprises first instruction information input on the second device and/or at least one of the connection state information, network rate information, device state information, power information, storage space information, external environment information, use environment information, traffic information, use habit information, currently used application information, distance information, and user physiological information of the second device;
the processing the first corresponding information comprises at least one of the following: in response that the first corresponding information meets a first preset condition, performing the operation of transferring the control function of the first device to the second device, and/or in response that the first corresponding information does not meet the first preset condition, not performing the operation of transferring the control function of the first device to the second device, and/or outputting prompt information on the first device and/or the second device.

93. The method of claim 92, wherein the meeting the first preset condition comprises at least one of the following:
in response that the first instruction information is biometric information, and the biometric information meets preset biometric information, meeting the first preset condition;
in response that the first instruction information is password information, and the password information meets preset password information, meeting the first preset condition; and
in response that at least one of the connection state information, the network rate information, the device state information, the power information, the storage space information, the external environment information, the use environment information, the traffic information, the use habit information, the currently used application information, the distance information, and the user physiological information of the second device meet the first preset condition, meeting the first preset condition.

94. A device, **characterized by** comprising a memory, a processor and a device processing program stored on the memory and operable on the processor, when the device processing program is executed by the processor, the operations of the processing method according to any one of claims 1 to 93 are realized.

95. A computer-readable storage medium, **characterized in that**, a device processing program is stored on the computer-readable storage medium, and when the device processing program is executed by a processor, the operations of the processing method according to any one of claims 1 to 93 are implemented.
